# EUROPEAN PATENT SPECIFICATION

(11) **EP 0 864 631 B1**
(45) Date of publication and mention of the grant of the patent: **04.06.2003**
(21) Application number: 98104252.6
(22) Date of filing: 10.03.1998
(51) Int. Cl.: C09K 19/02, G02F 1/13, C09K 19/16, C09K 19/18, C09K 19/32, C09K 19/34, C09K 19/06

(54) **Liquid crystalline charge transport material**
Flüssigkristall Ladungstransportmaterial
Matériau cristal liquide de transport de charge

(30) Priority: 10.03.1997 JP 7087097
(43) Date of publication of application: 16.09.1998
(73) Proprietor: DAI NIPPON PRINTING CO., LTD., Tokyo 162-01 (JP)
(72) Inventor: Junichi, Hanna, Dai Nippon Printing Co., Ltd., Shinjuku-ku, Tokyo-to (JP); Kyoko, Kogo, Dai Nippon Printing Co., Ltd., Shinjuku-ku, Tokyo-to (JP); Komei, Kafuku, Las Vegas, Nevada 89113 (US)
(74) Representative: Müller-Boré & Partner Patentanwälte

(56) References cited:
- EP-A- 0 364 185
- EP-A- 0 763 532
- EP-A- 0 860 417
- DE-A- 4 422 332
- DE-A- 4 429 597

## Description

The present invention relates to a liquid crystalline charge (carrier) transport material, and more particularly to an organic material having liquid crystallinity and hole and/or electron charge transport capability and various elements and devices using the organic material.

Materials, wherein a charge transport molecule which serves as a charge transport site are dissolved or dispersed in a matrix material, such as a polycarbonate resin, or materials, wherein a charge transport molecule structure pendent as a pendant from a polymer backbone, such as polyvinyl carbazole, are known in the art. These materials have been extensively used as materials for photoconductors in copying machines, printers and the like.

For the above conventional charge transport materials, in the case of dispersive charge transport materials, that the charge transport molecule has high solubility in the polymer as a matrix is preferred from the viewpoint of improving the charge transport capability. In fact, however, bringing the charge transport molecule to a high concentration in the matrix leads to crystallization of the charge transport molecule in the matrix, and, for this reason, the upper limit of the concentration of the charge transport molecule is generally 20 to 50% by weight although it varies depending upon the kind of the charge transport molecule. This means that the matrix not having charge transport capability occupies not less than 50% by weight of the whole material. This in turn raises a new problem that the charge transport capability and response speed of a film formed from the material are limited by the excess matrix present in the material.

On the other hand, in the case of the pendant type charge transport polymer, the proportion of the pendant having charge transport capability can be increased. This polymer, however, involves many practical problems associated with mechanical strength, environmental stability and durability of the formed film, film-forming properties and the like. In this type of charge transport material, the charge transport pendants are locally located in close proximity, and the local proximity portion serves as a stable site in hopping of charges and functions as a kind of trap, unfavorably resulting in lowered charge mobility.

For all the above charge transport materials, electrical properties of such amorphous materials raise a problem that, unlike crystalline materials, the hopping site fluctuates in terms of space, as well as in terms of energy. For this reason, the charge transport depends greatly upon the concentration of the charge transport site, and the mobility is generally about 1 x 10⁻⁶ to 1 x 10⁻⁵ cm²/v.s which is much smaller than that of the molecular crystal, 0.1 to 1 cm²/v.s. Further, the amorphous materials have an additional problem that the charge transport properties depend greatly upon temperature and field strength. This is greatly different from the crystalline charge transport materials.

A polycrystalline charge transport material is a promising material in applications where a charge transport layer having a large area is necessary, because it can form an even charge transport film having a large area. The polycrystalline material, however, is inherently uneven from the microscopic viewpoint and involves a problem that a defect formed in the interface of particles should be inhibited.

Accordingly, the present invention aims to solve the above problems of the prior art and to provide a novel charge transport material which simultaneously realizes advantages of the amorphous materials, that is, structural flexibility and evenness in a large area, and advantages of the crystalline materials having molecular alignment and is excellent in high-quality charge transport capability, thin film-forming properties, various types of durability and the like.

According to the material of the present invention, the anisotropy of the charge mobility derived from the molecular alignment can be expected and is structurally flexible, permitting the alignment to be regulated by external stimulation. Materials useful as the charge transport material are not less than 1 x 10⁻⁵ cm²/v.s in terms of the carrier mobility. When the carrier mobility is less than 1 x 10⁻⁵ cm²/v.s, no high-speed response can be expected.

The above object of the present invention can be attained by the following present invention. Specifically, according to the present invention, there is provided a liquid crystalline charge transport material which exhibits smectic liquid crystallinity and has an electron mobility of not less than 1 x 10⁻⁵ cm²/v.s.

Liquid crystalline molecules, by virtue of the molecular structure, have a self-aligning property, and use thereof as a hopping site, unlike the above molecule dispersed material, inhibits spatial and energetic dispersion and can realize a band-like transport property such as found in molecular crystals. This results in the development of a feature that larger mobility than that in the conventional molecule dispersed materials can be realized and the mobility does not depend upon an electric field.
Fig. 1 is a typical diagram showing an image display device;
Fig. 2 is a typical diagram showing an image recording device;
Fig. 3 is a typical diagram showing an image recording device;
Fig. 4 is a typical diagram showing an image recording device;
Fig. 5 is a typical diagram showing a space light modulating device;
Fig. 6 is a typical diagram showing a thin film transistor;
Fig. 7 is a typical diagram showing an electroluminescence device;
Fig. 8 is a typical diagram showing an electroluminescence device (an embodiment of an electrode pattern);
Fig. 9 is a typical diagram showing an electroluminescence device;
Fig. 10 is a typical diagram showing an electroluminescence device;
Fig. 11 is a typical diagram showing a temperature sensor;
Fig. 12 is a typical diagram showing an electroluminescence device (an embodiment of an electrode pattern); and
Fig. 13 is a typical diagram showing a photosensor.

The present invention will be described in more detail with reference to the following preferred embodiments.

The liquid crystalline charge transport materials of the present invention will be described. Preferred charge transport materials include those which satisfy the above requirements and have a core of (aromatic ring of 6π electron system) l, (aromatic ring of 10π electron system) m, and (aromatic ring of 14π electron system) n (wherein l + m + n = 1 to 4 and l, m, and n are an integer of 0 to 4) and, at the same time, liquid crystallinity and those which satisfy the above requirements and wherein the aromatic ring of 6π electron system, 10π electron system or 14π electron system is linked through a group having a carbon-carbon double bond or a carbon-carbon triple bond. The number of links of the aromatic rings is limited from the viewpoint of the mobility. Aromatic rings of 6π electron system include, for example, a benzene ring, a pyridine ring, a pyrimidine ring, a pyridazine ring, a pyrazine ring, and a tropolone ring. Aromatic rings of 10π electron system include, for example, a naphthalene ring, an azulene ring, a benzofuran ring, an indole ring, an indazole ring, a benzothiazole ring, a benzoxazole ring, a benzoimidazole ring, a quinoline ring, an isoquinoline ring, a quinazoline ring, and a quinoxaline ring. Aromatic rings of 14π electron system include, for example, a phenanthrene ring and an anthracene ring.

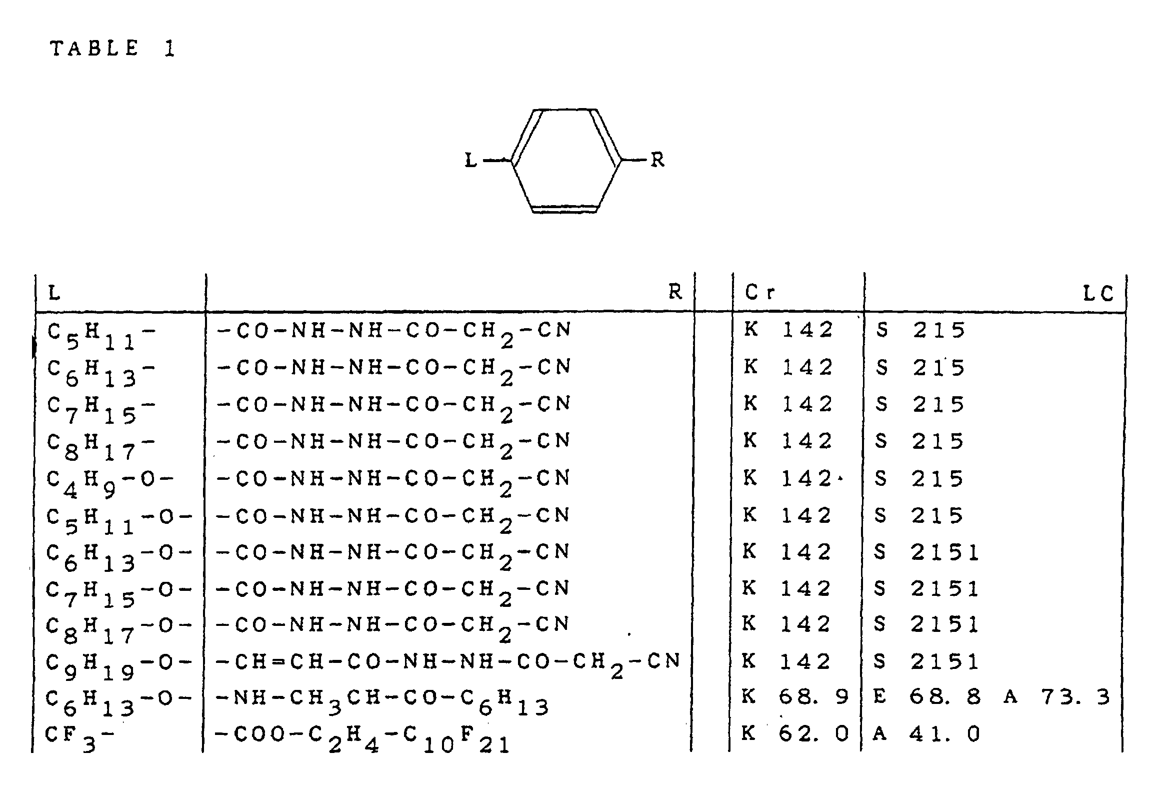

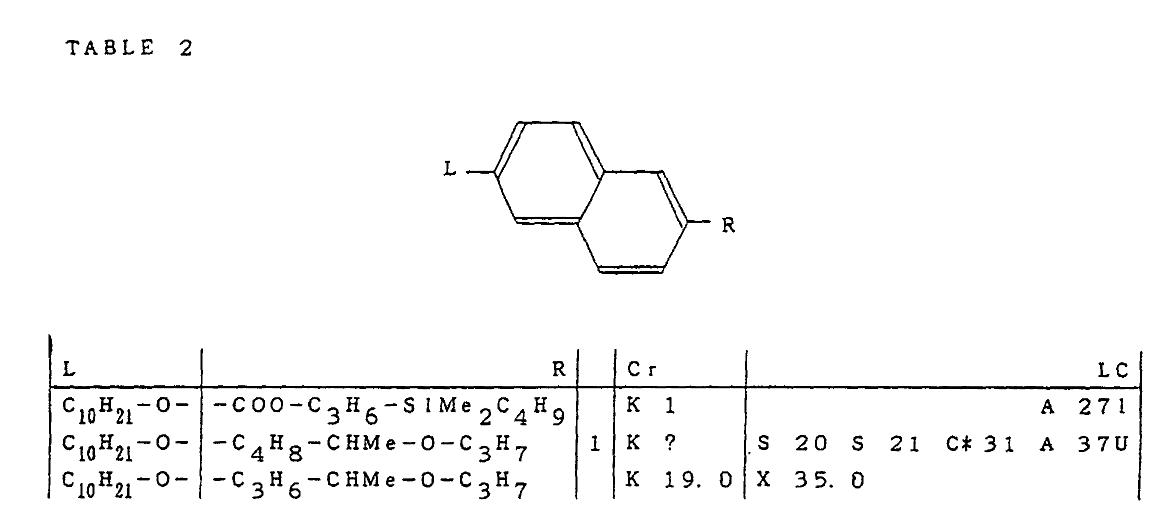

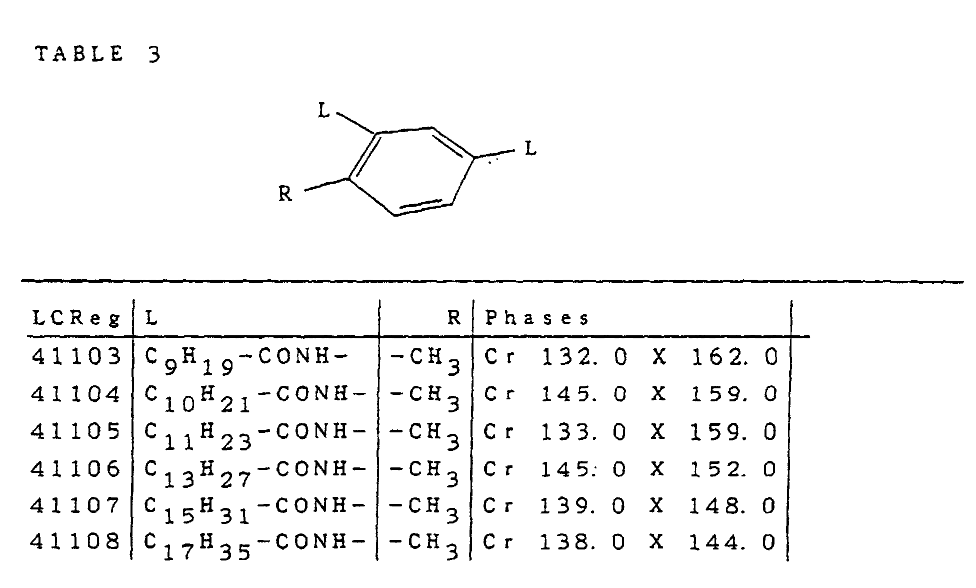

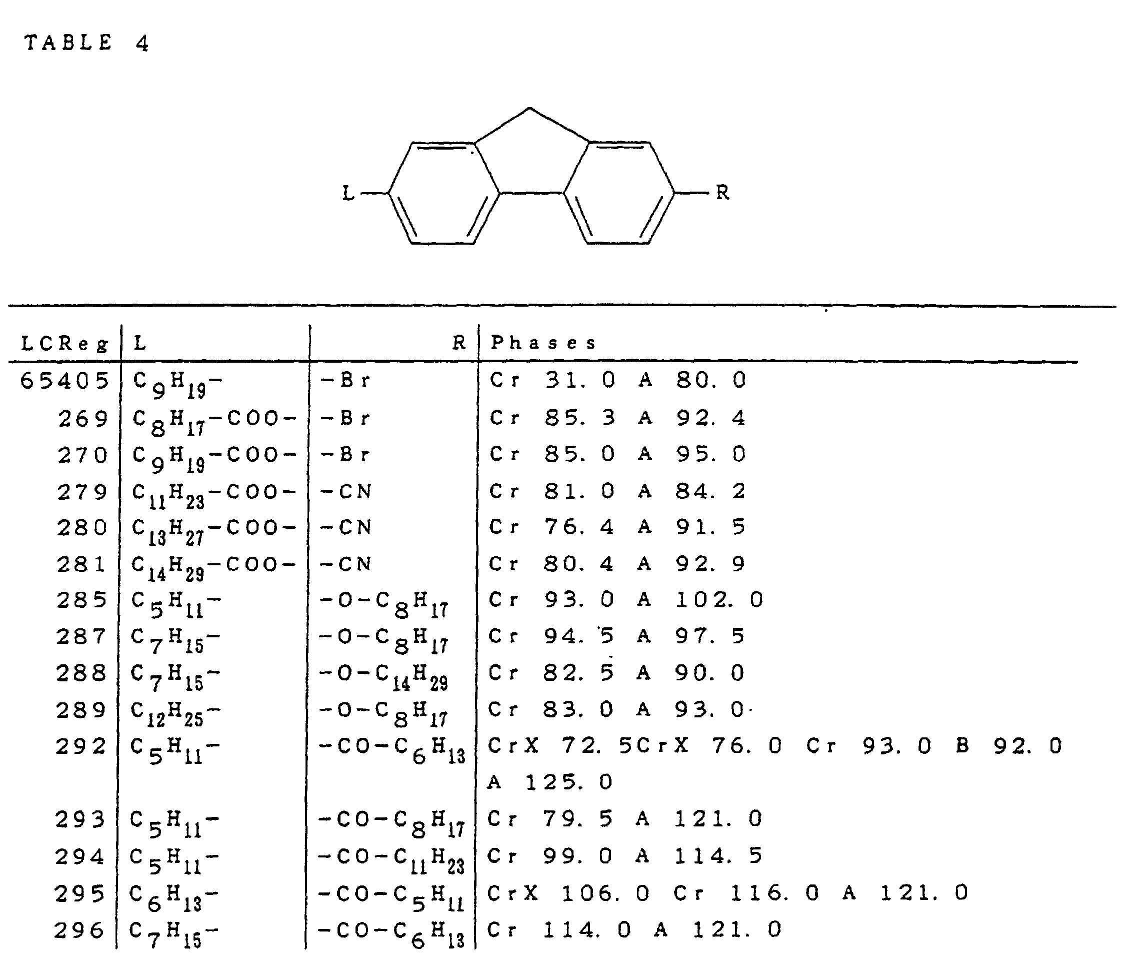

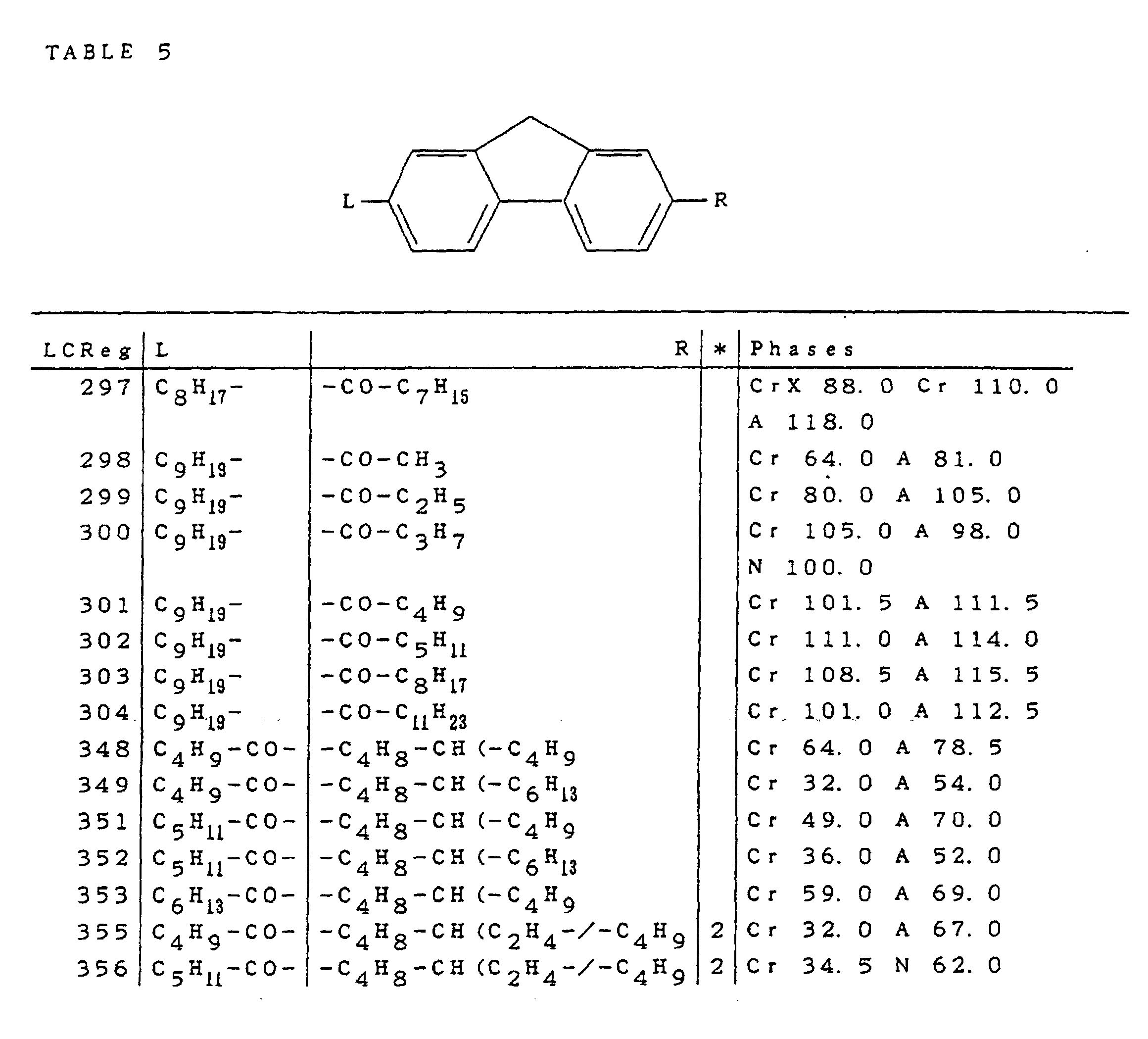

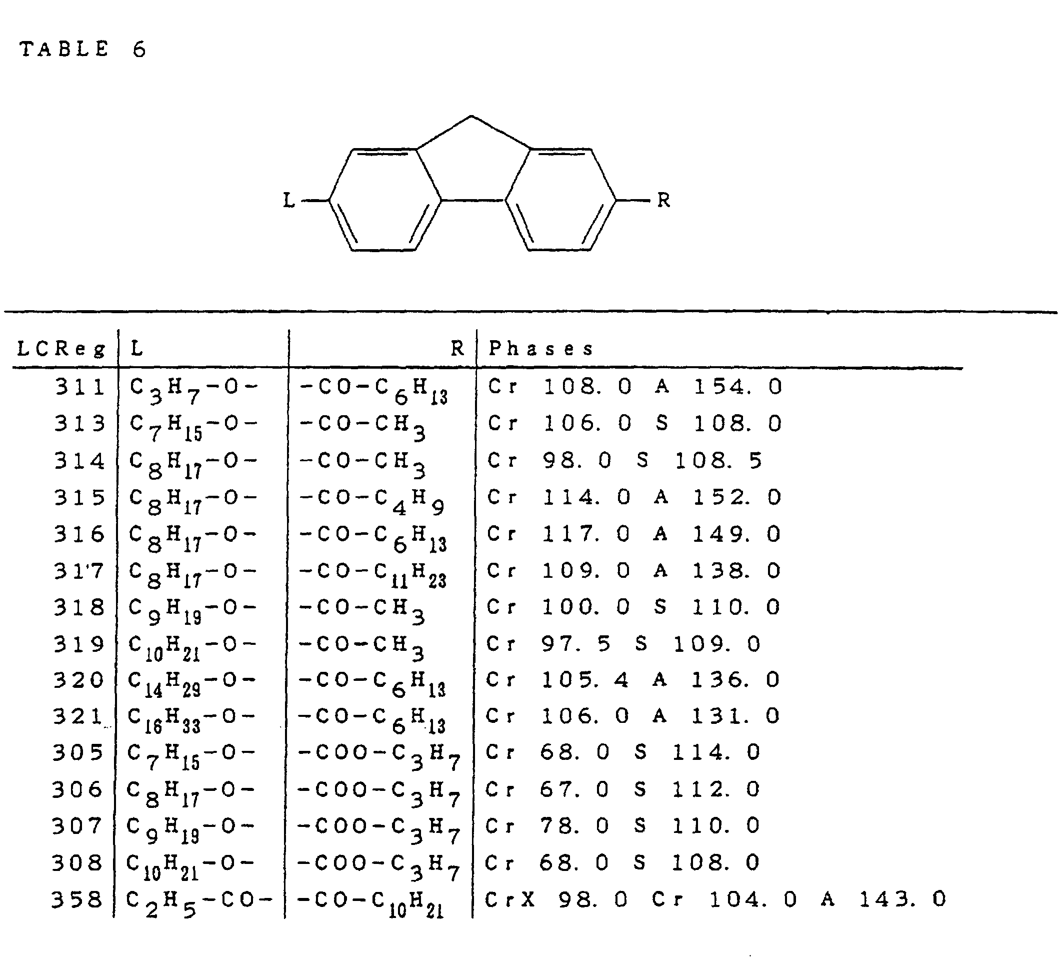

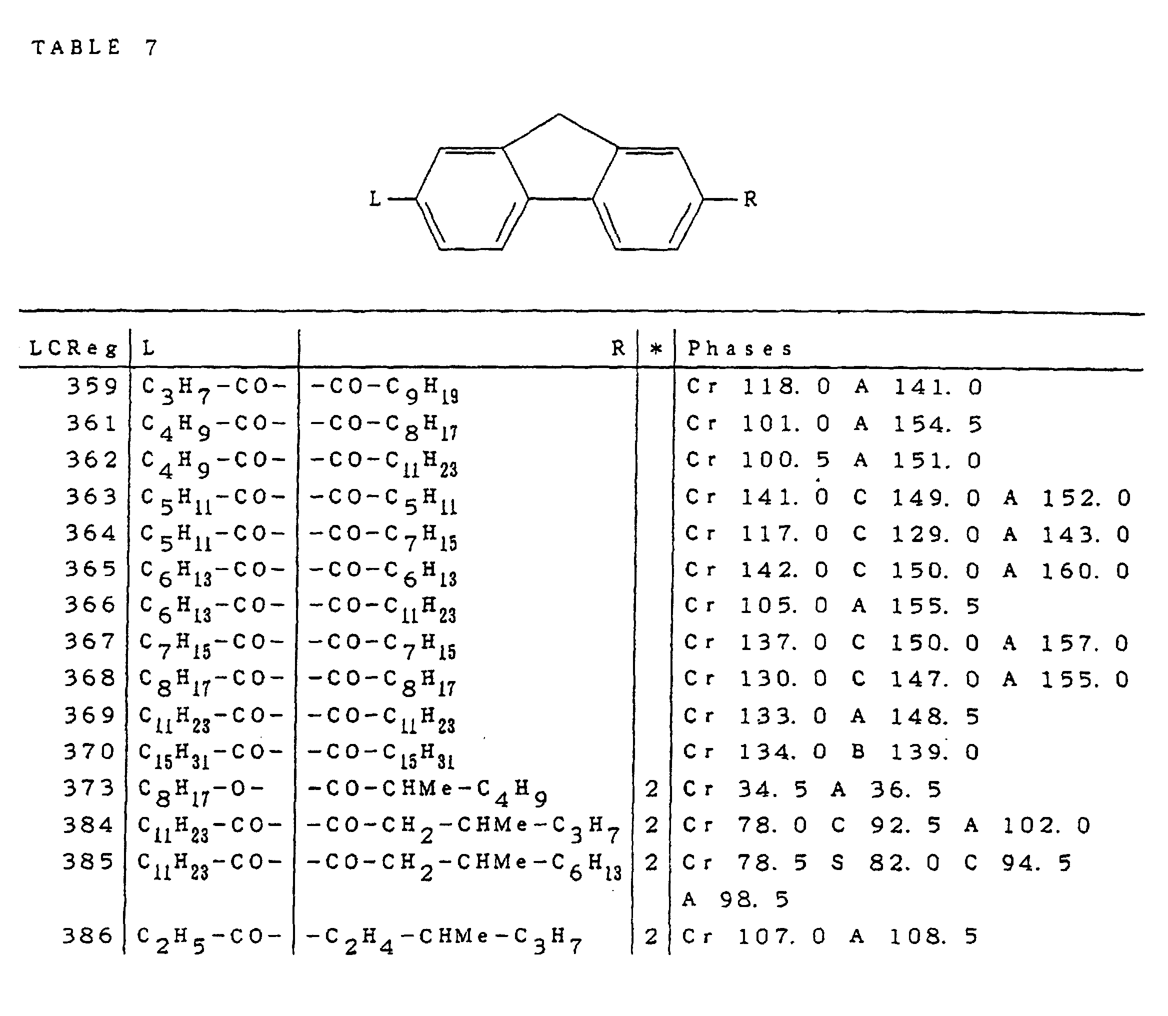

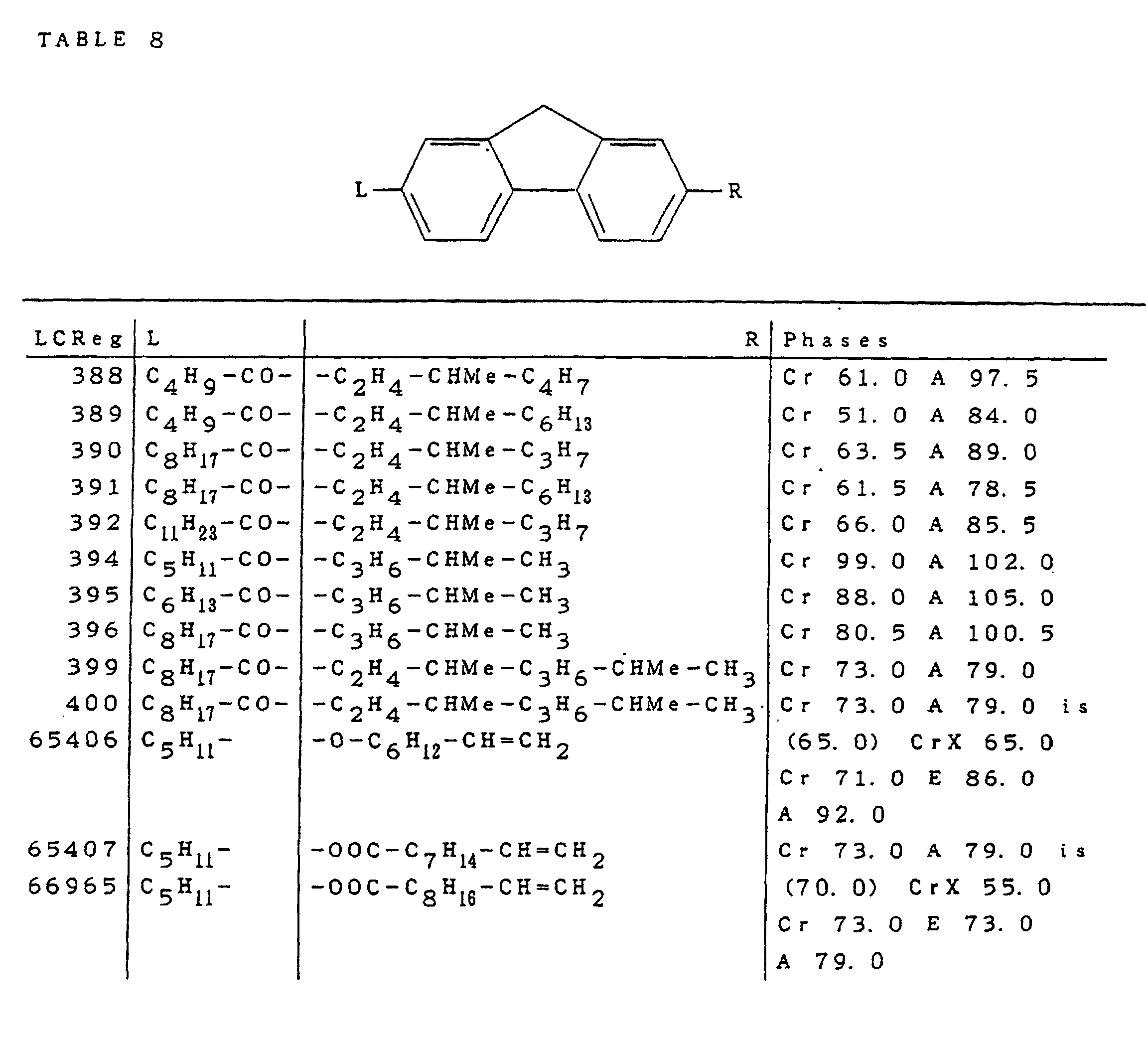

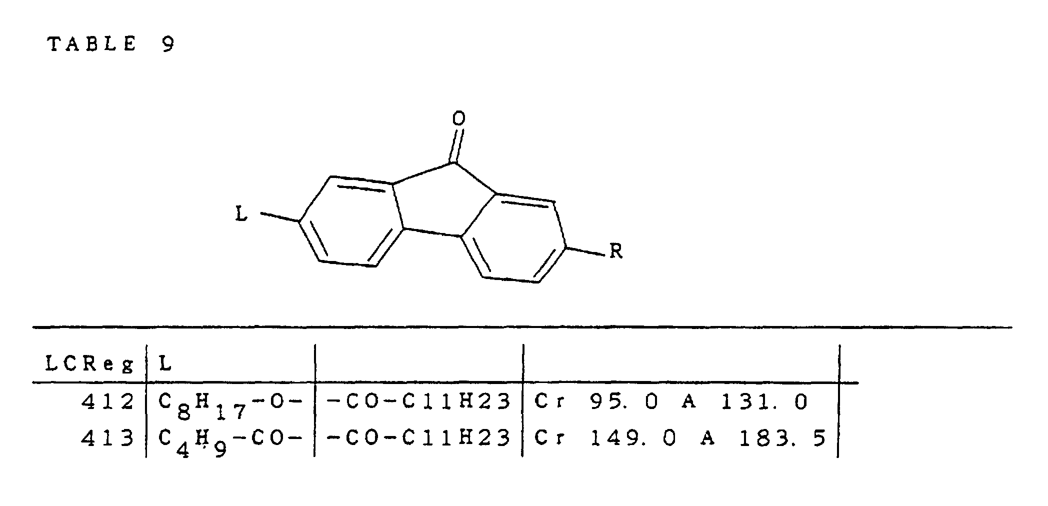

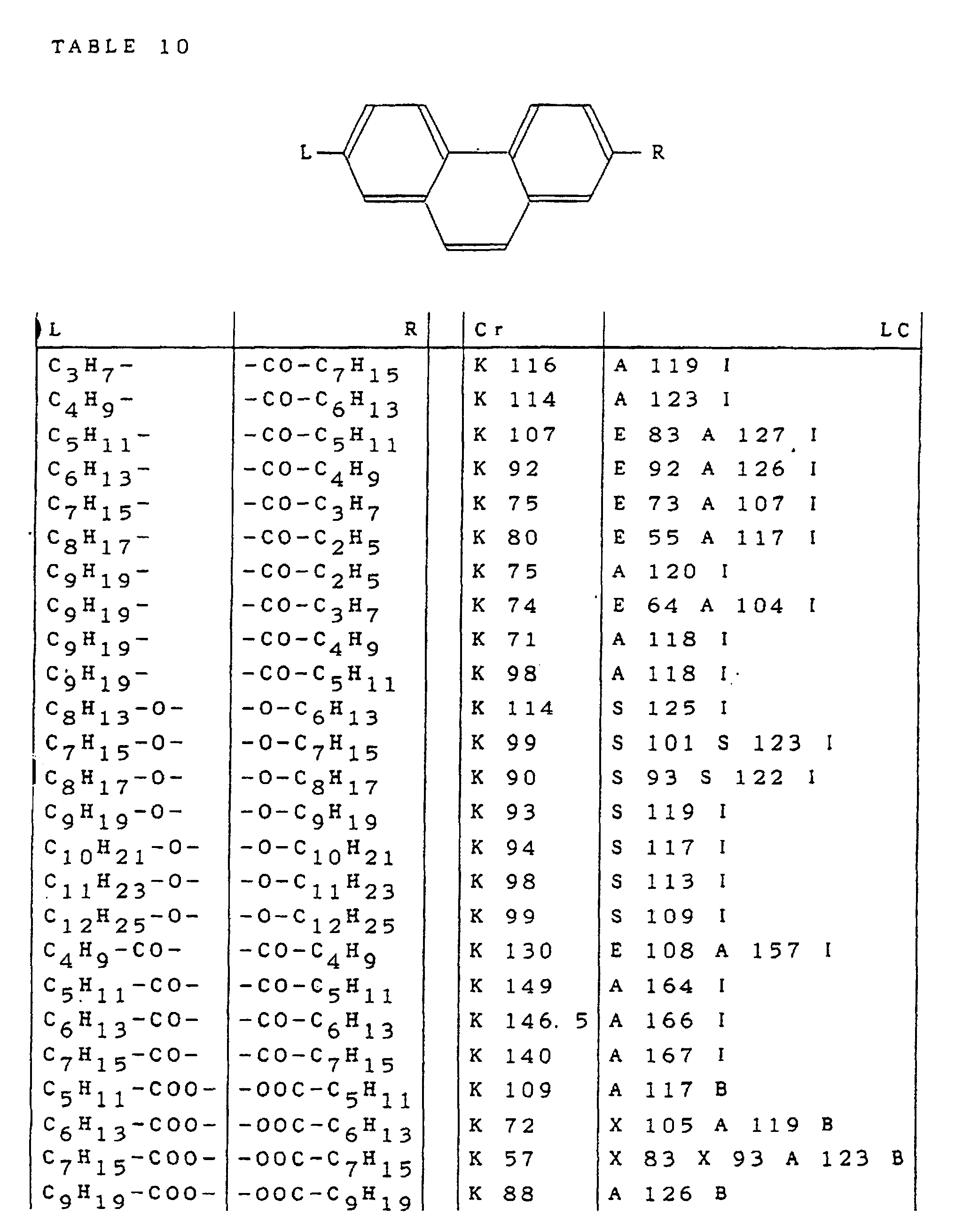

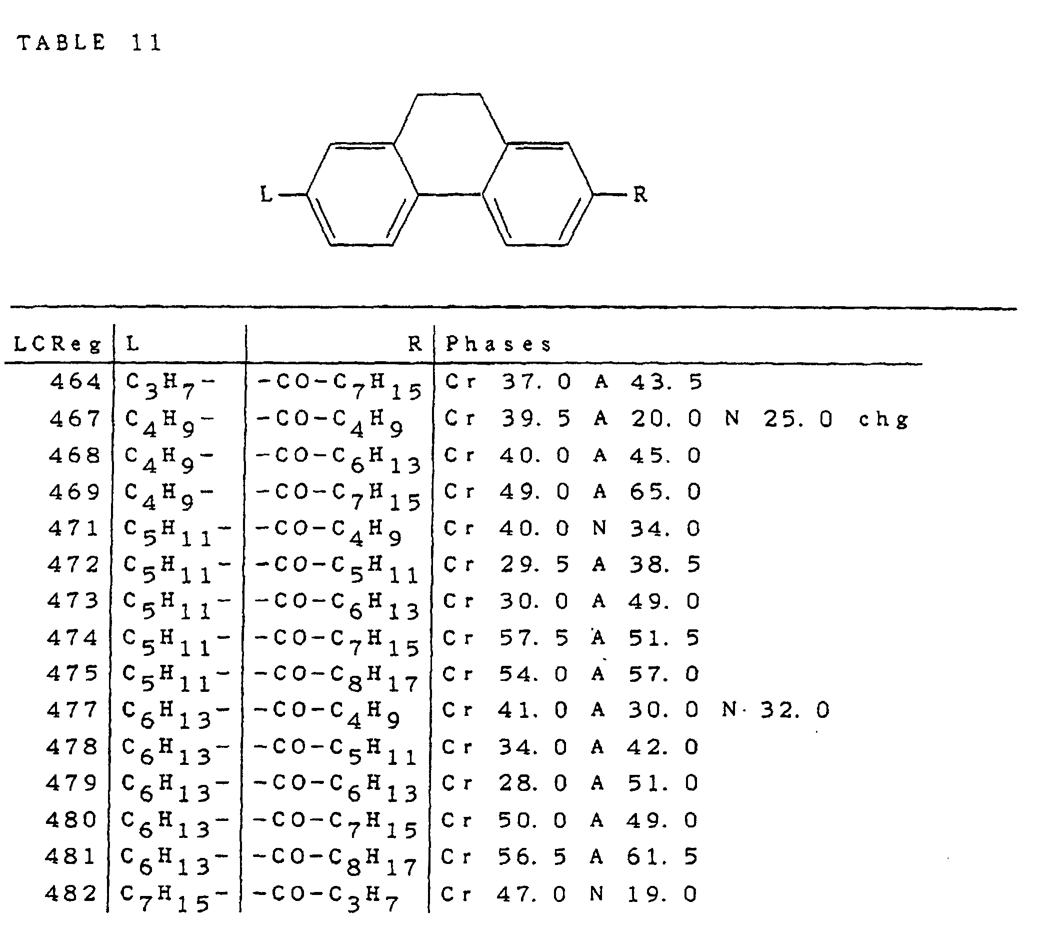

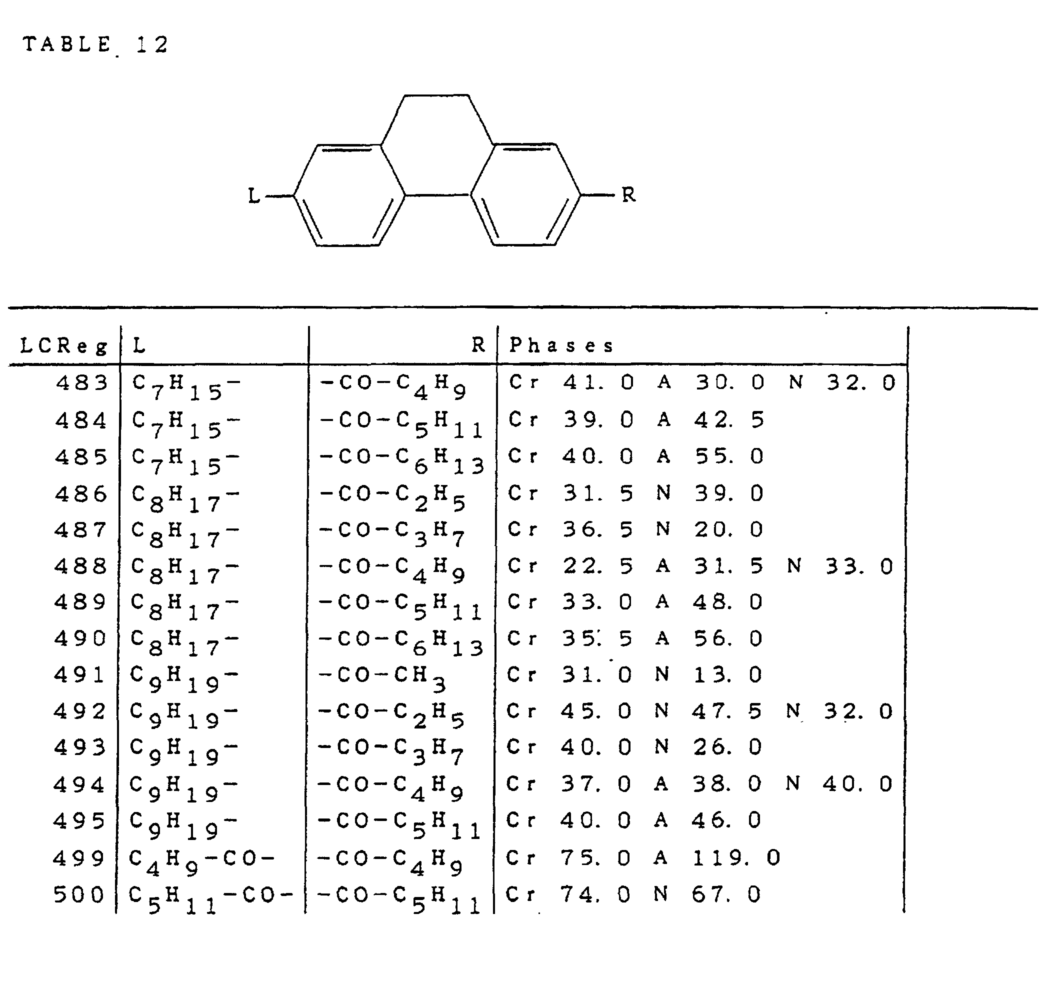

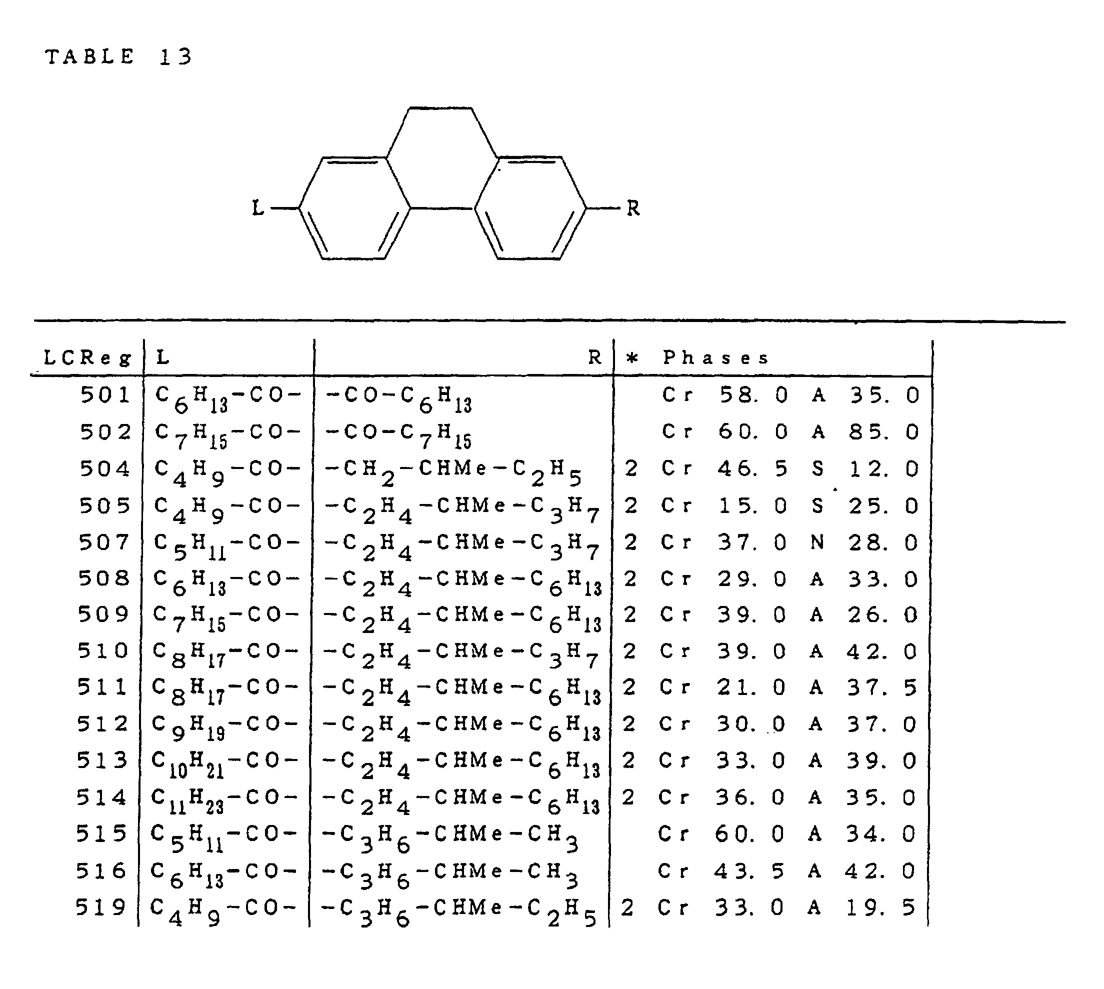

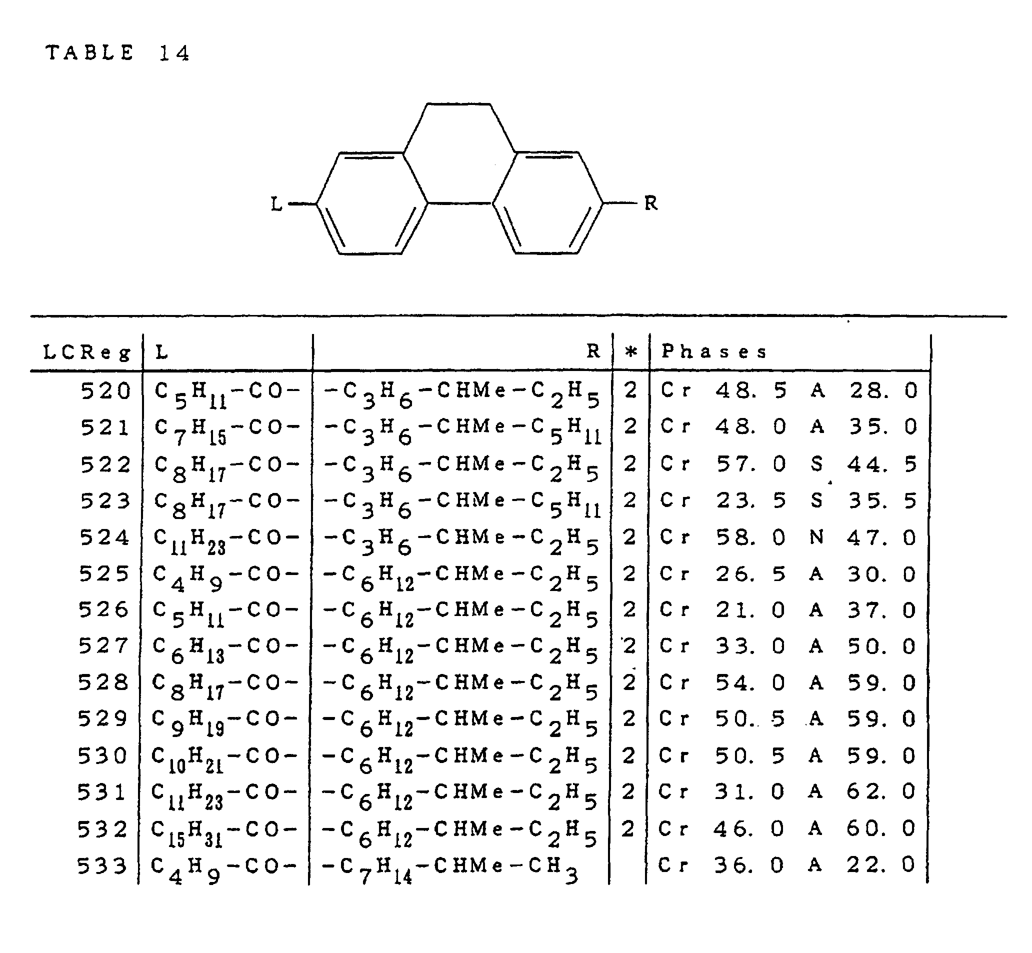

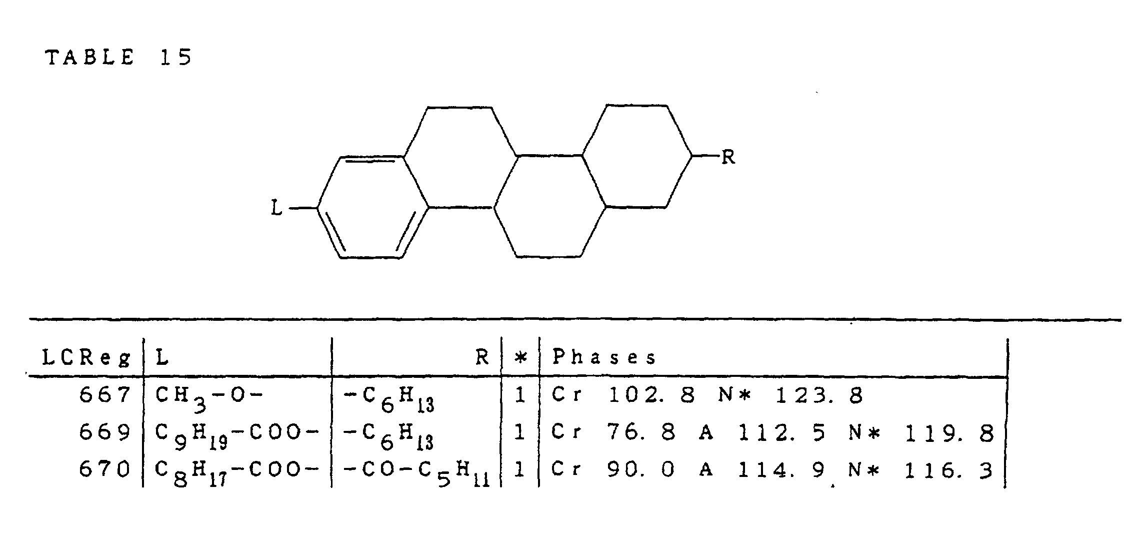

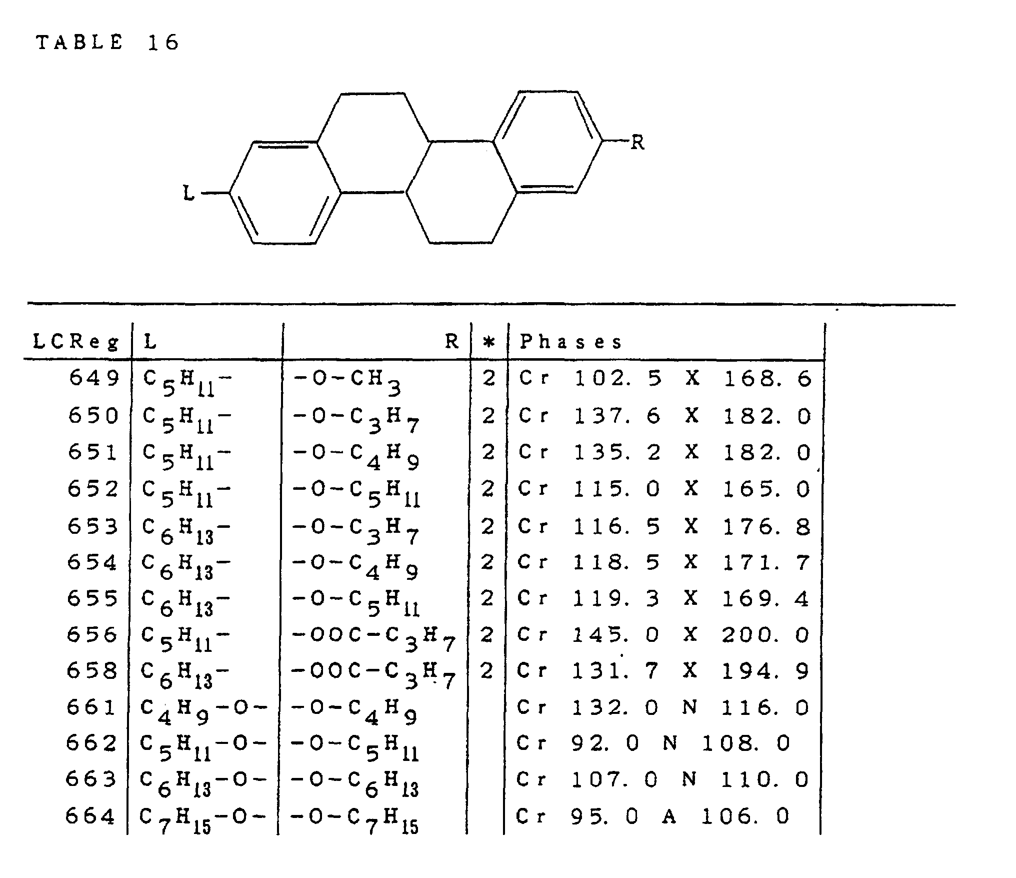

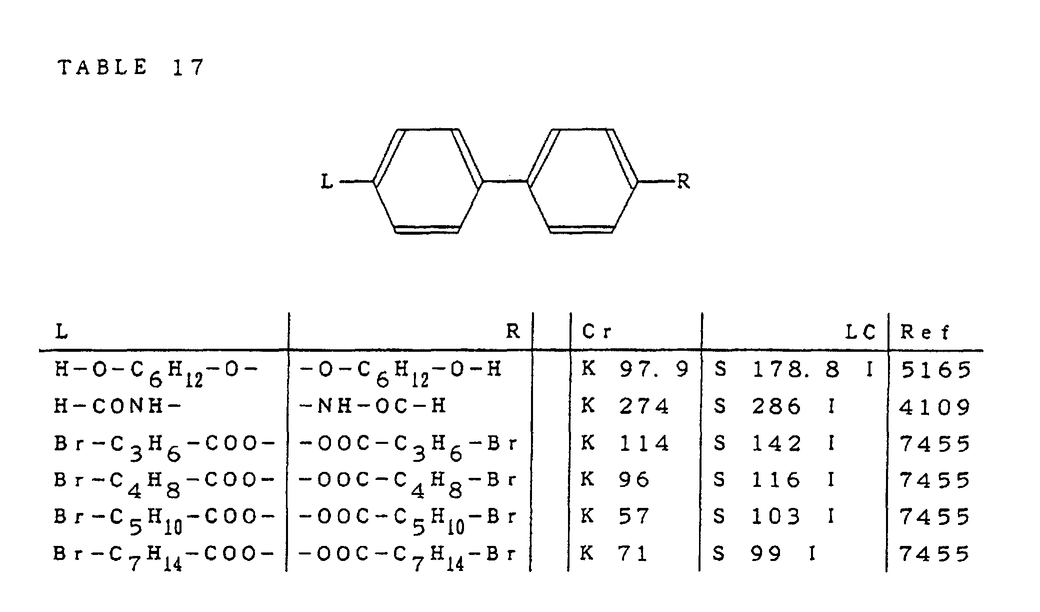

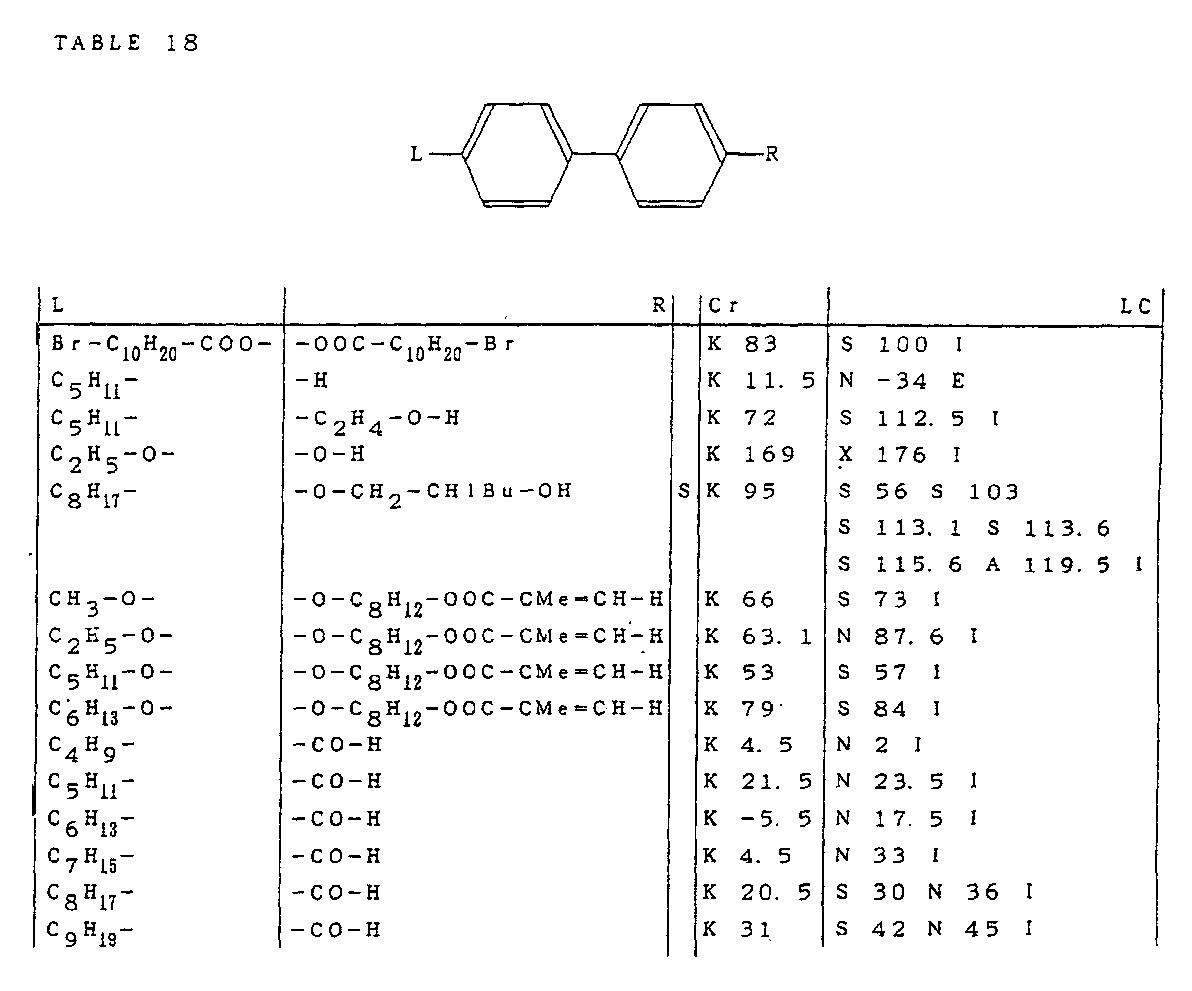

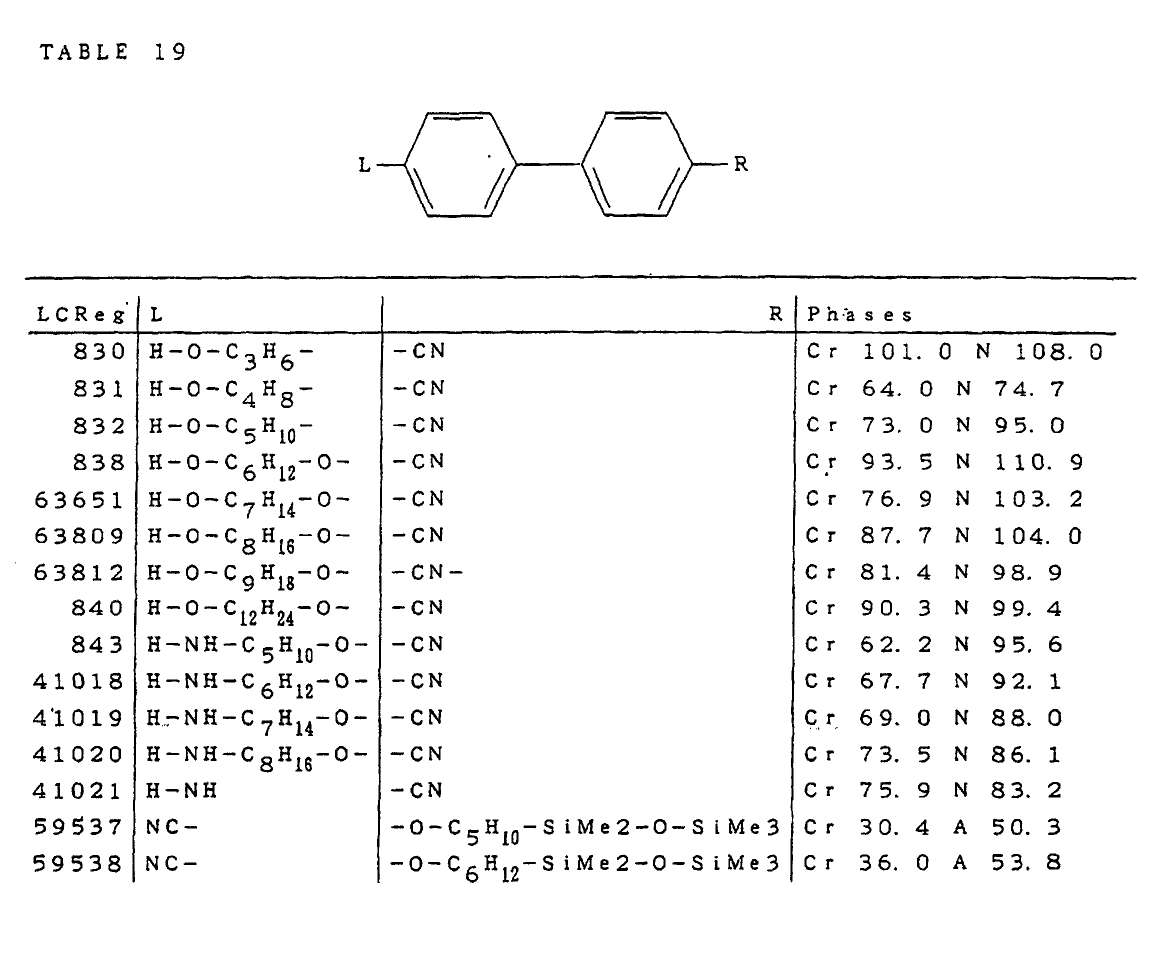

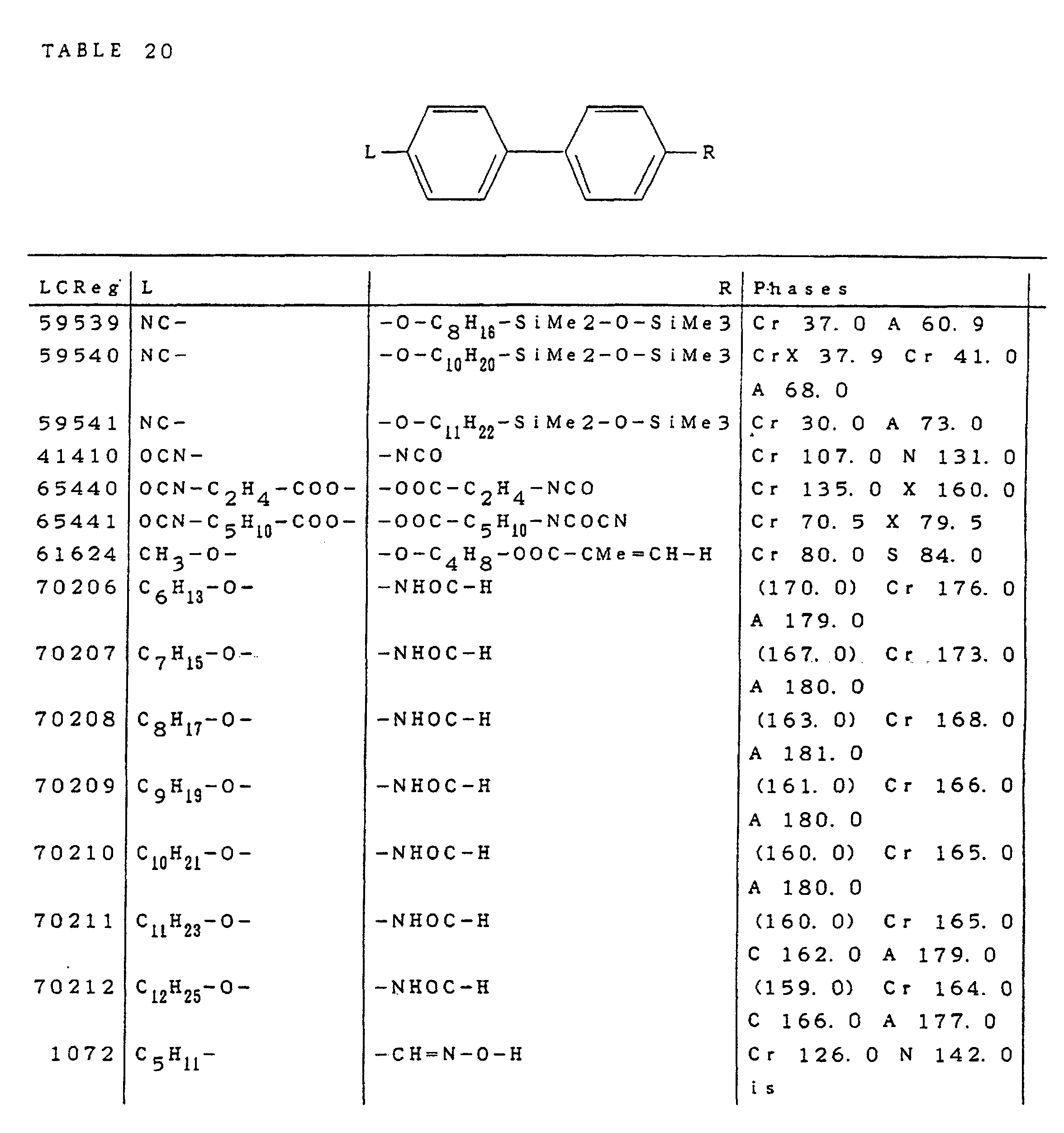

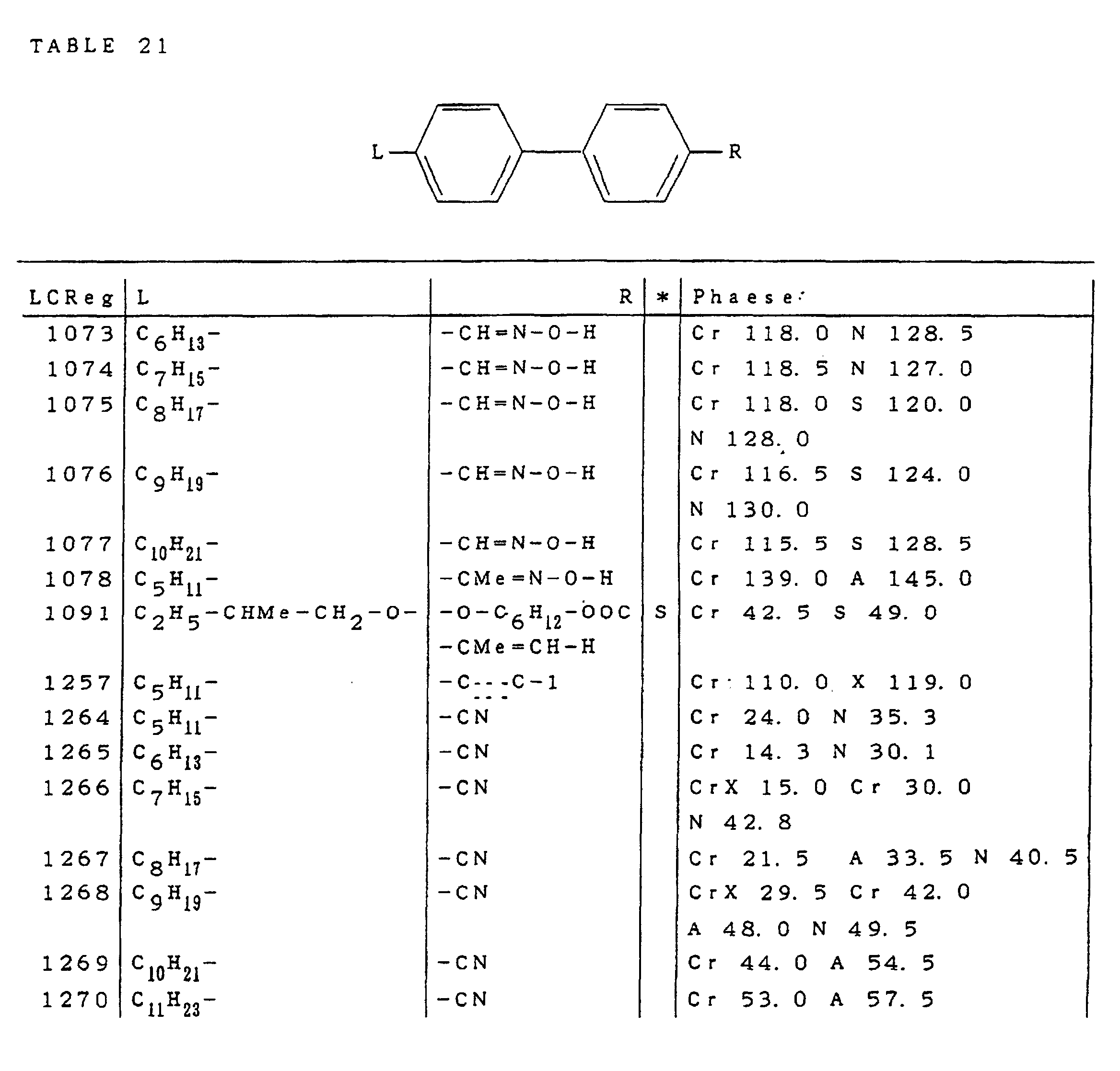

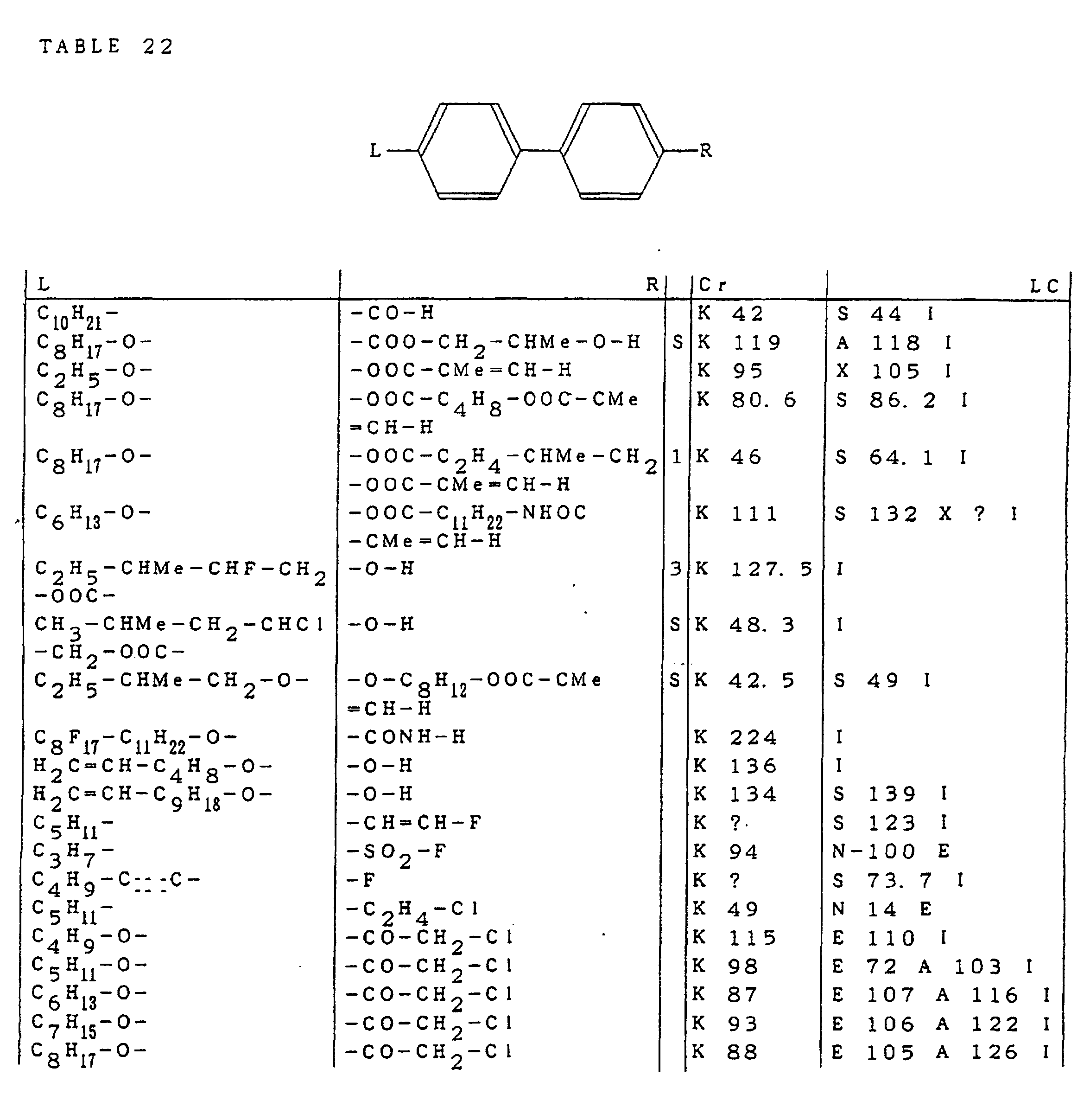

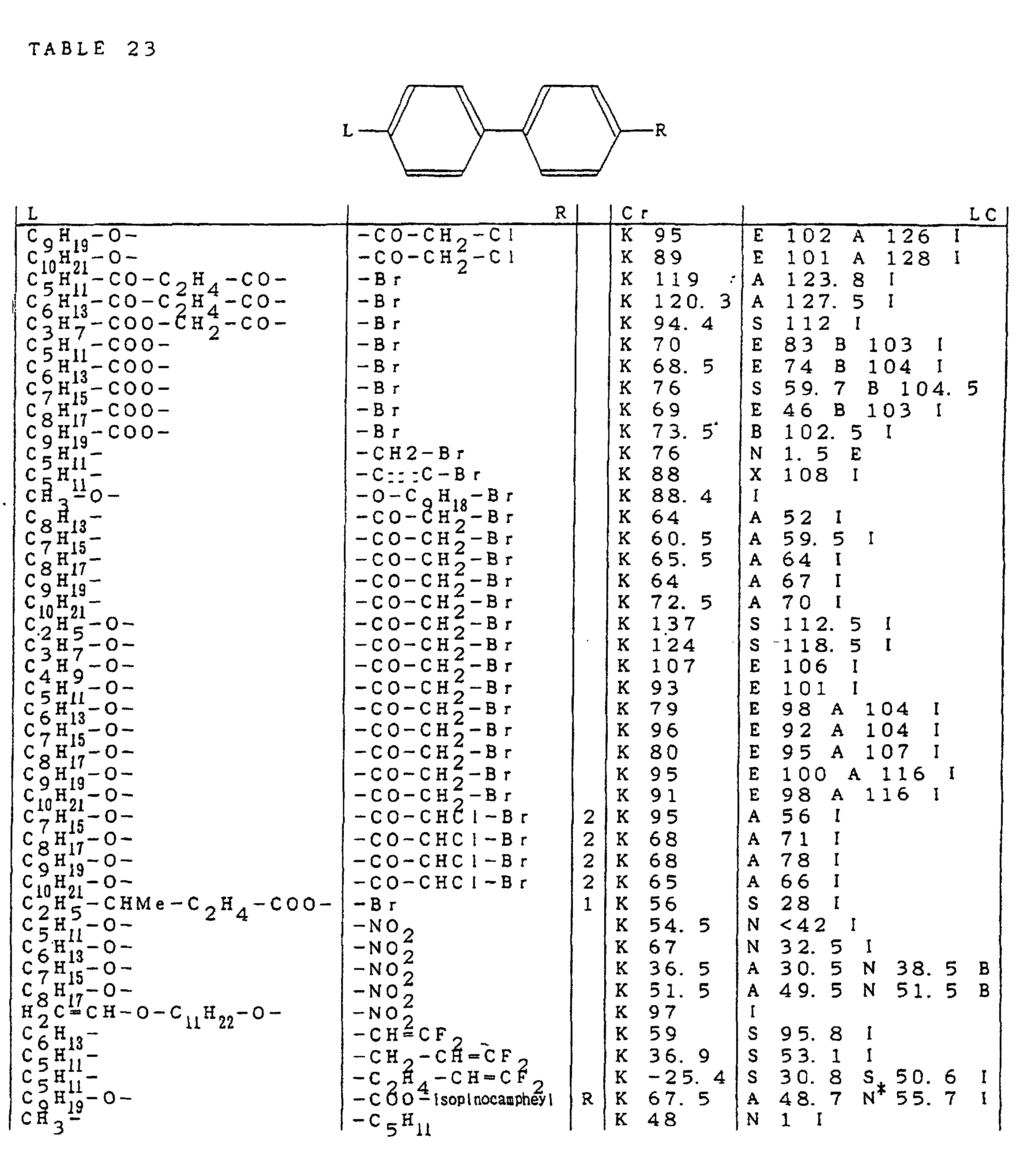

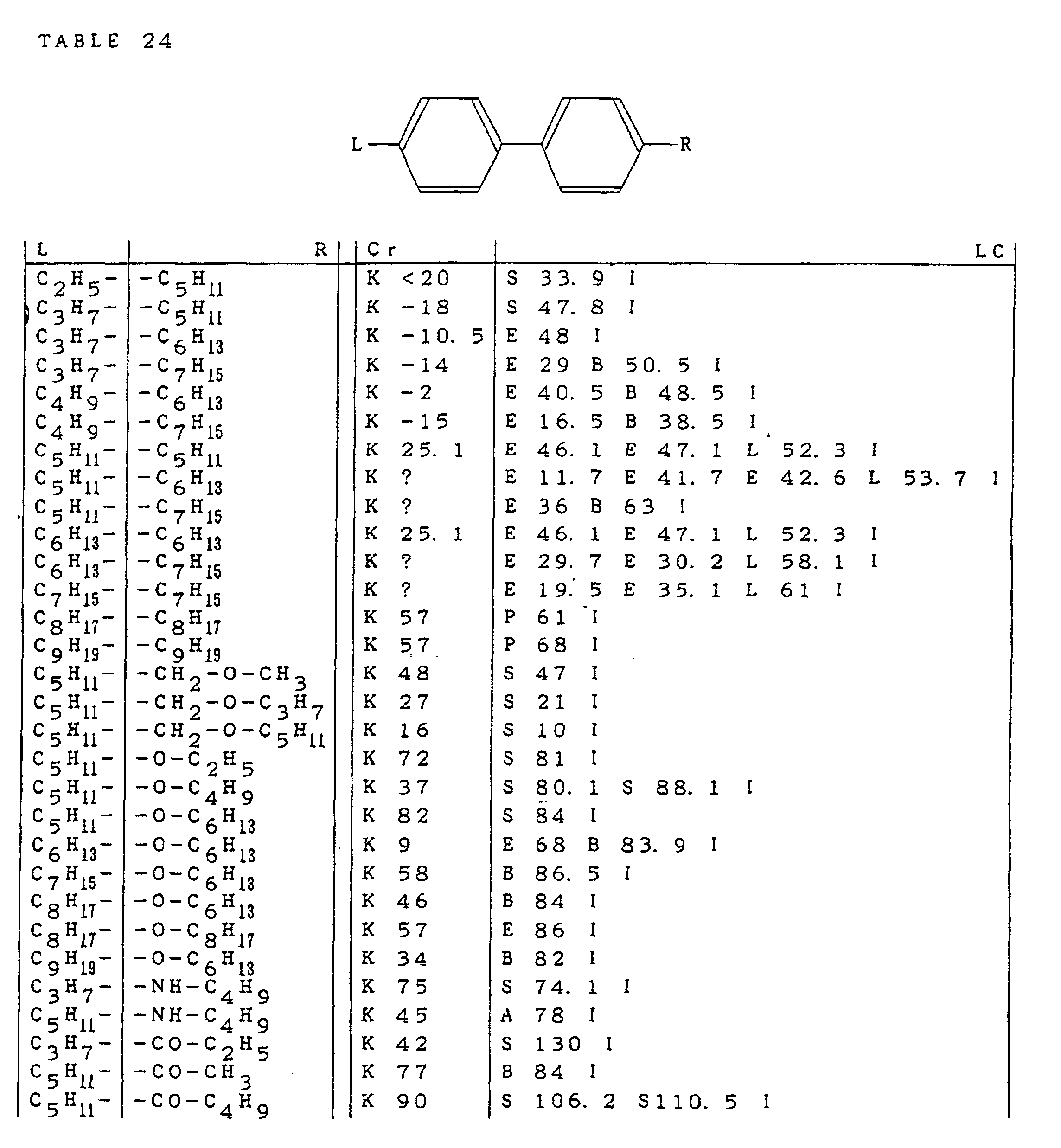

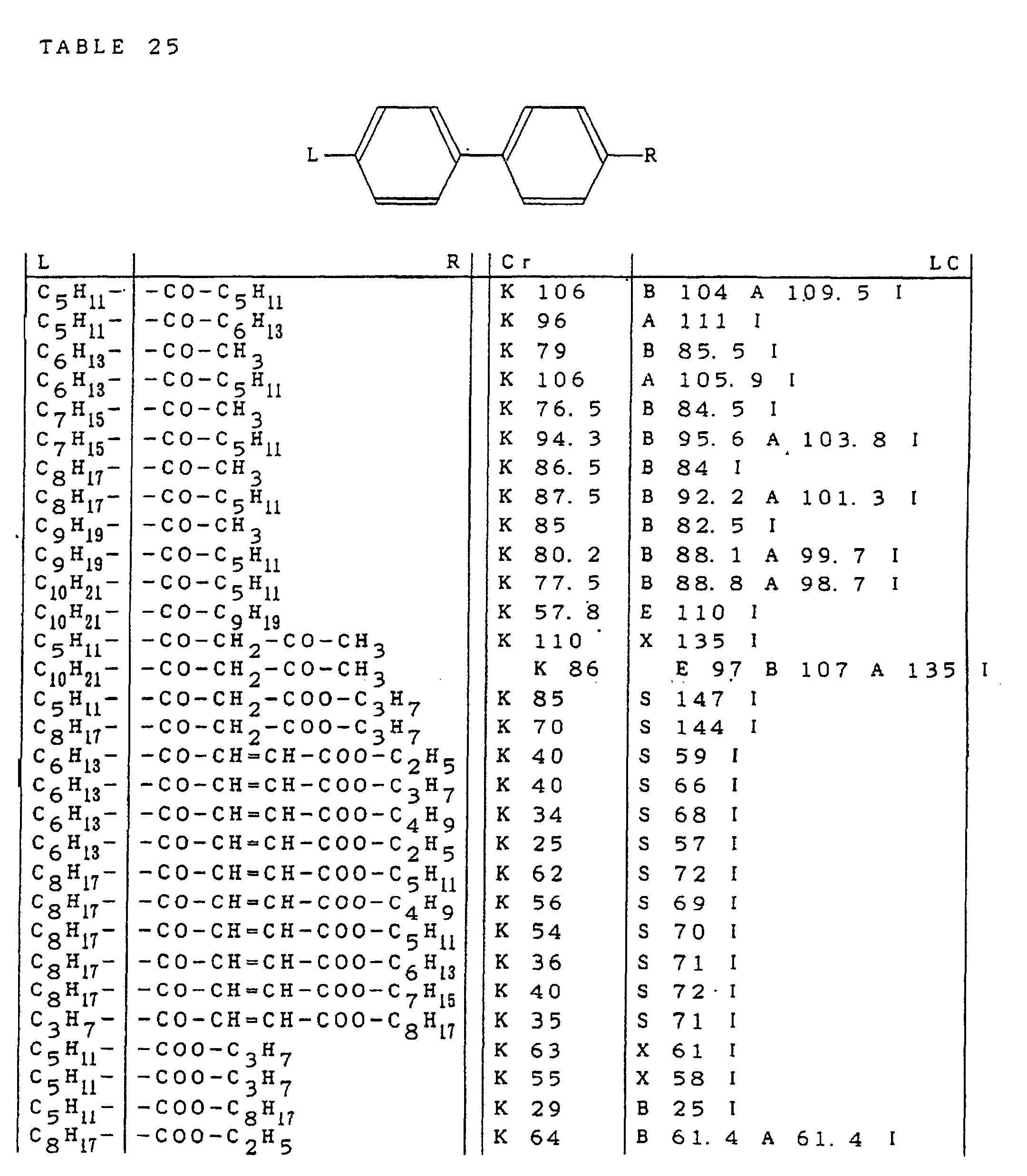

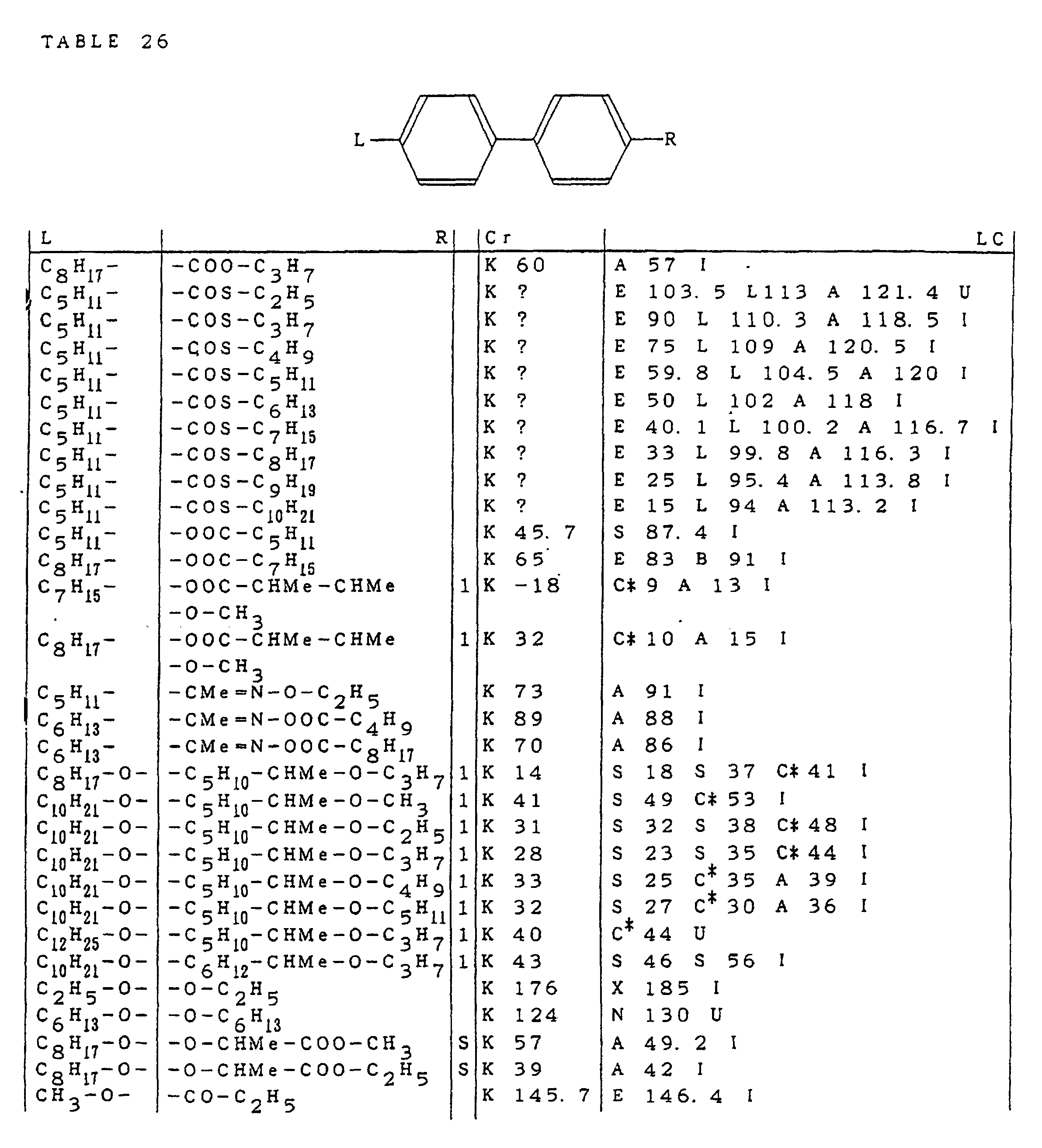

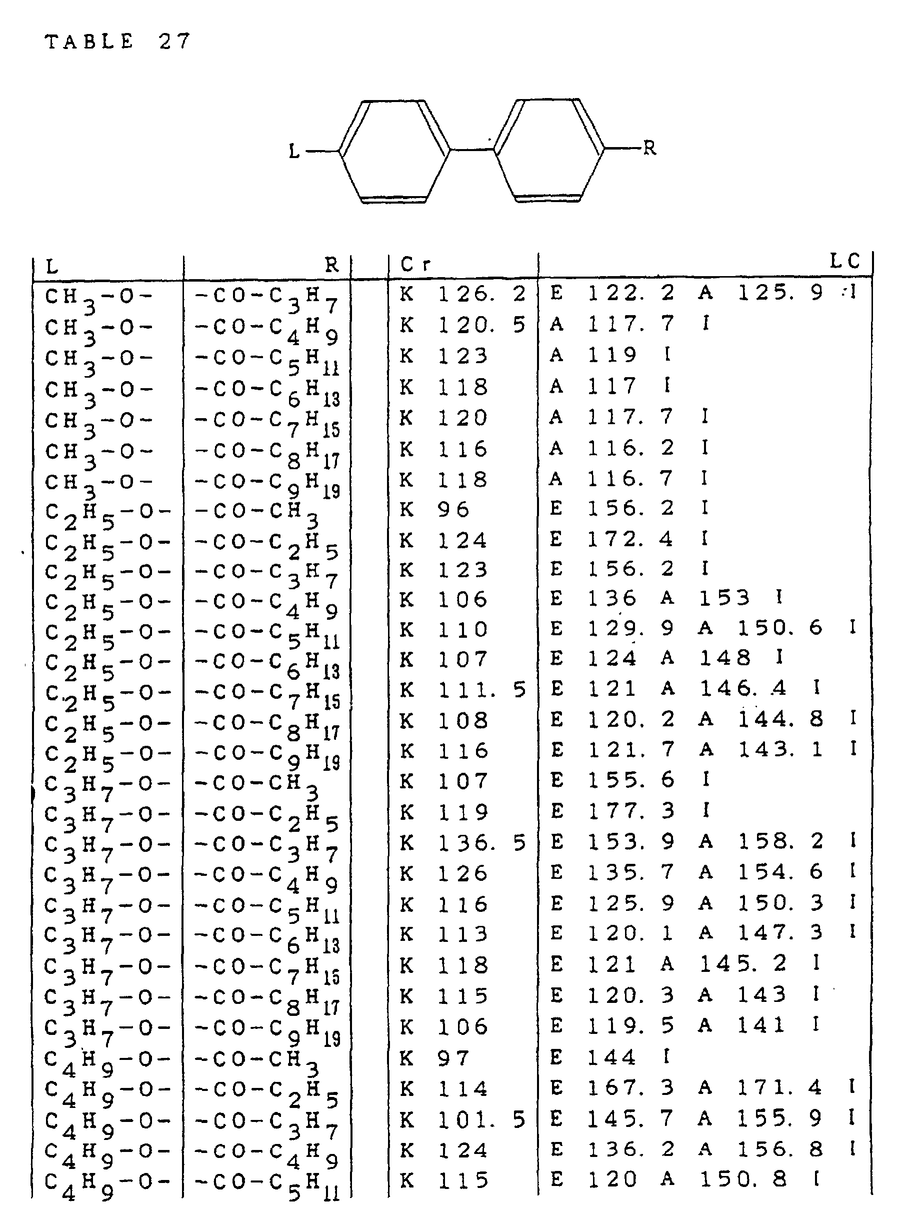

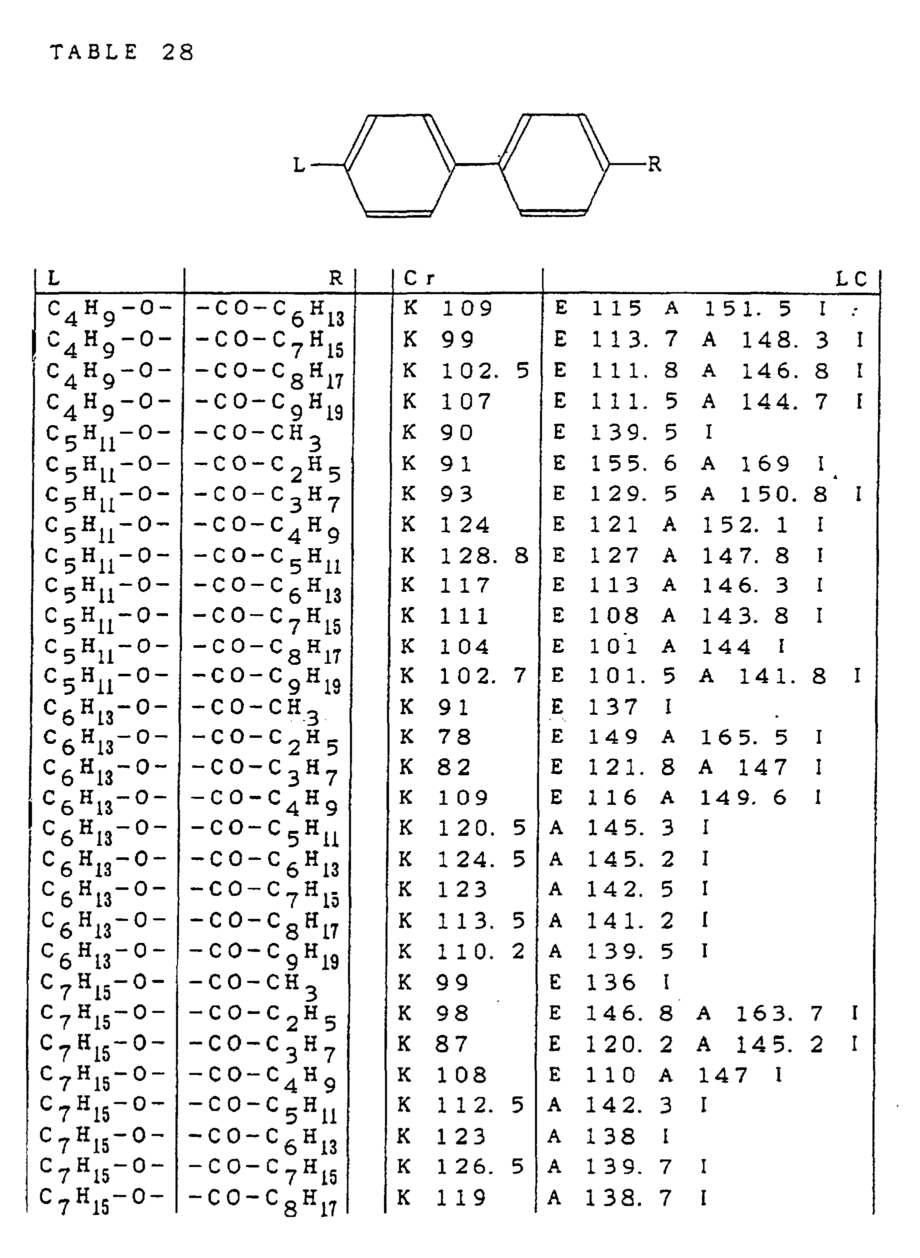

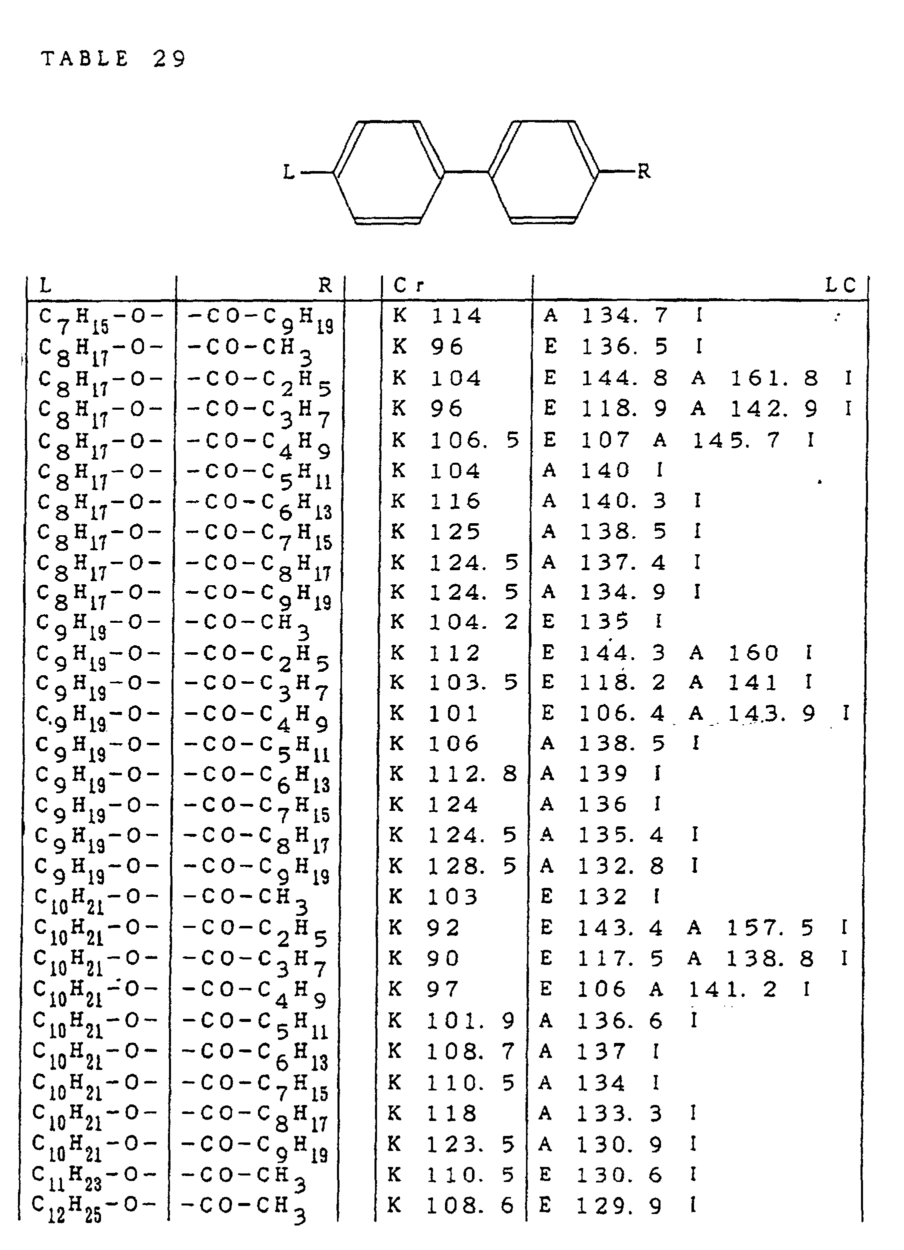

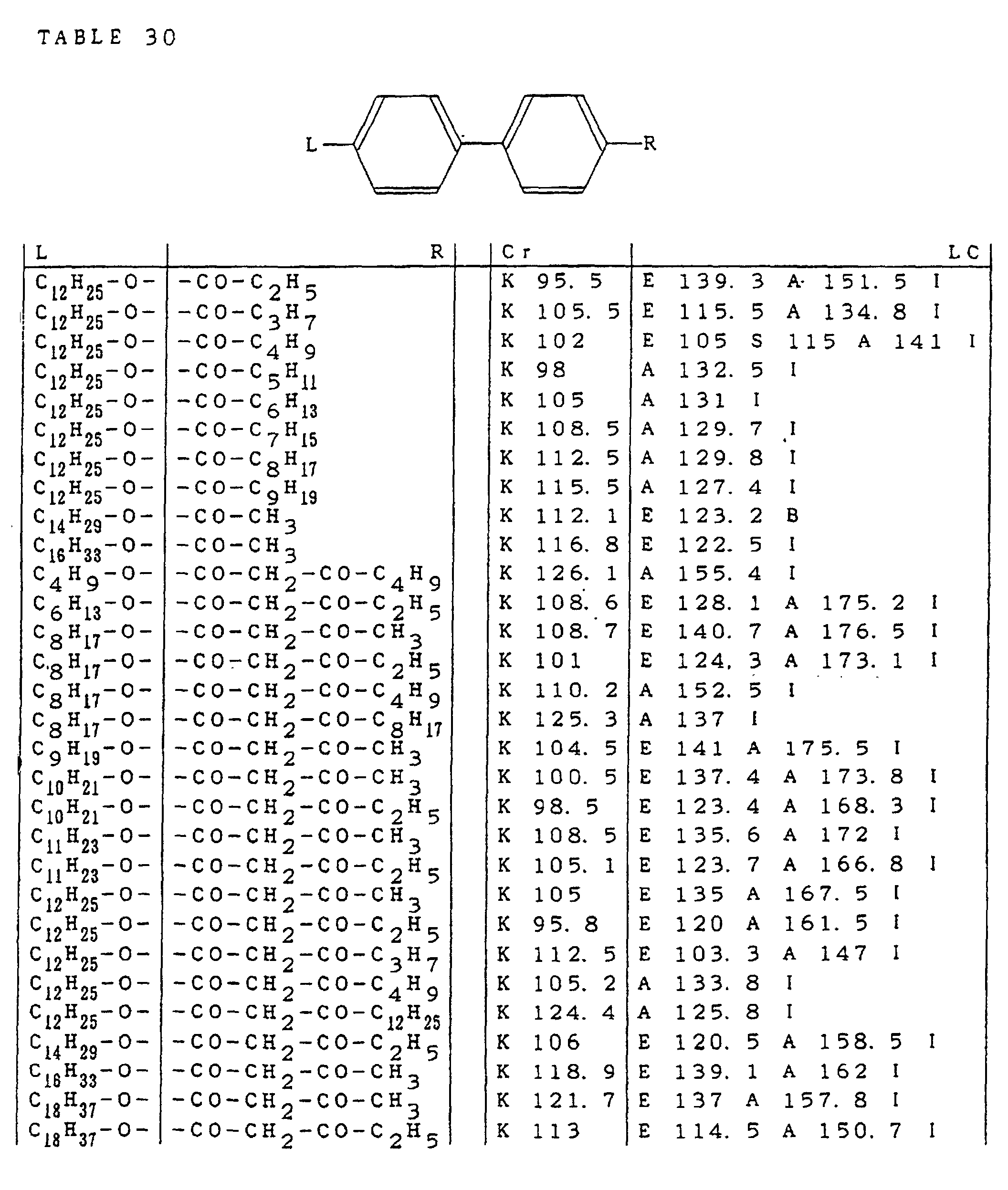

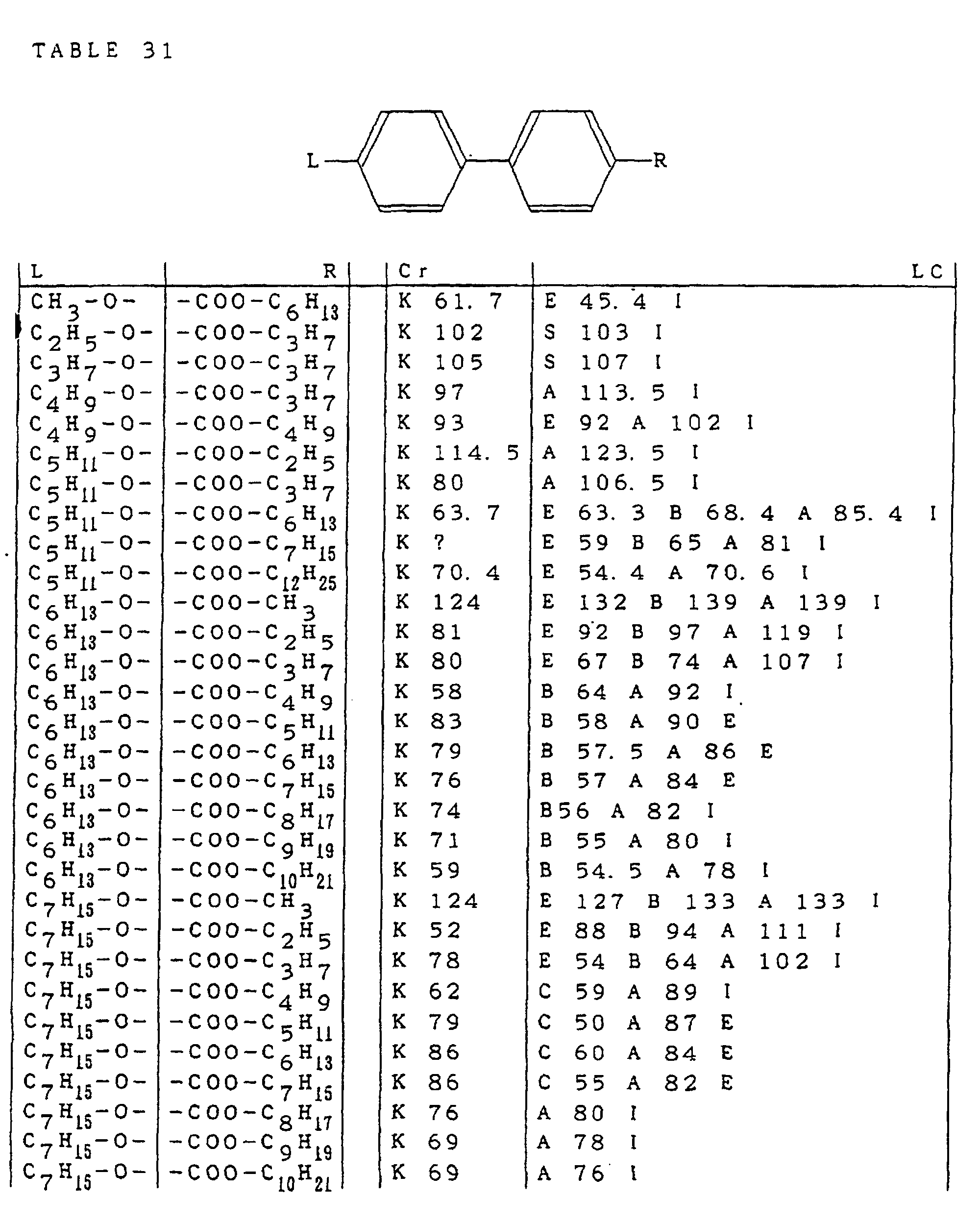

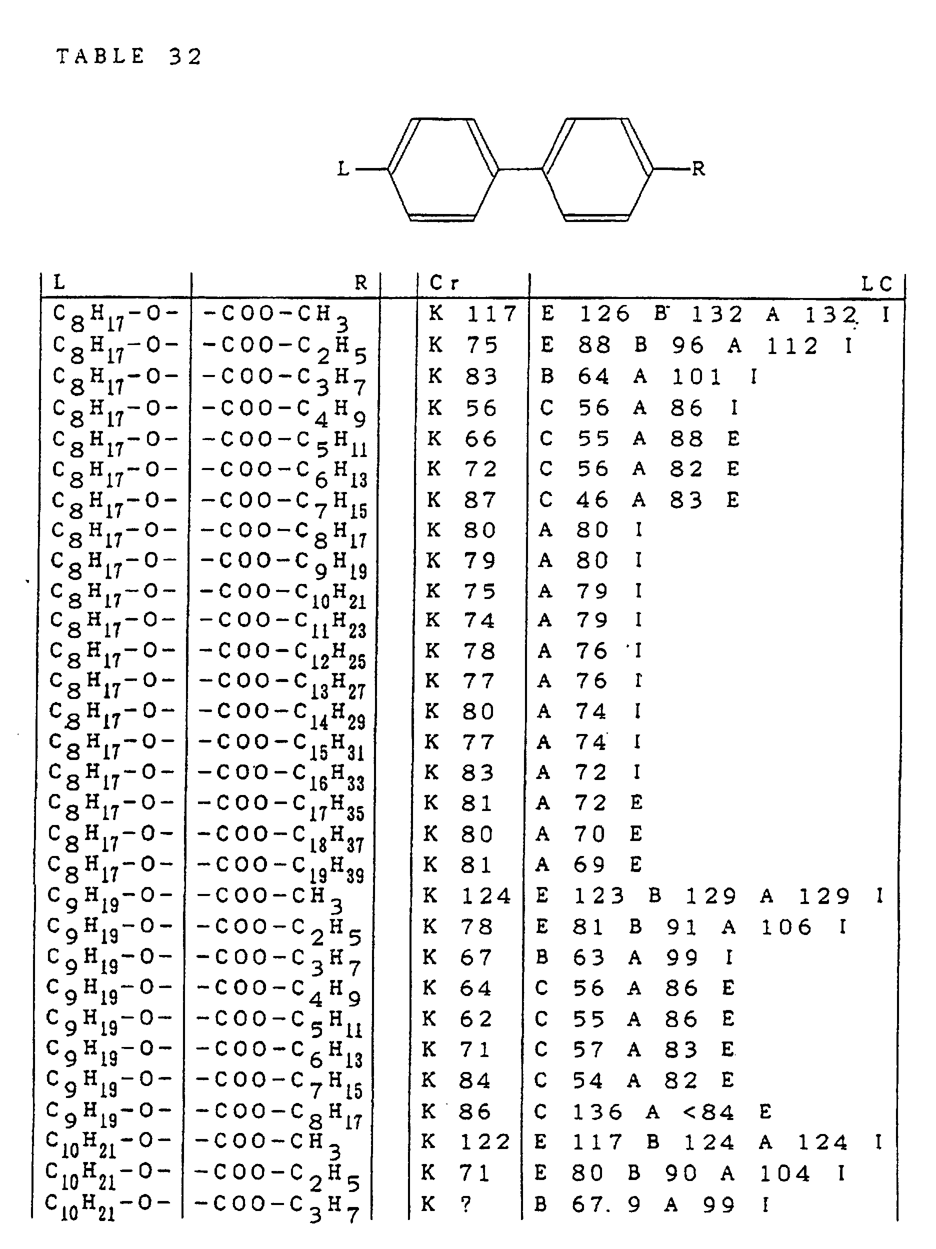

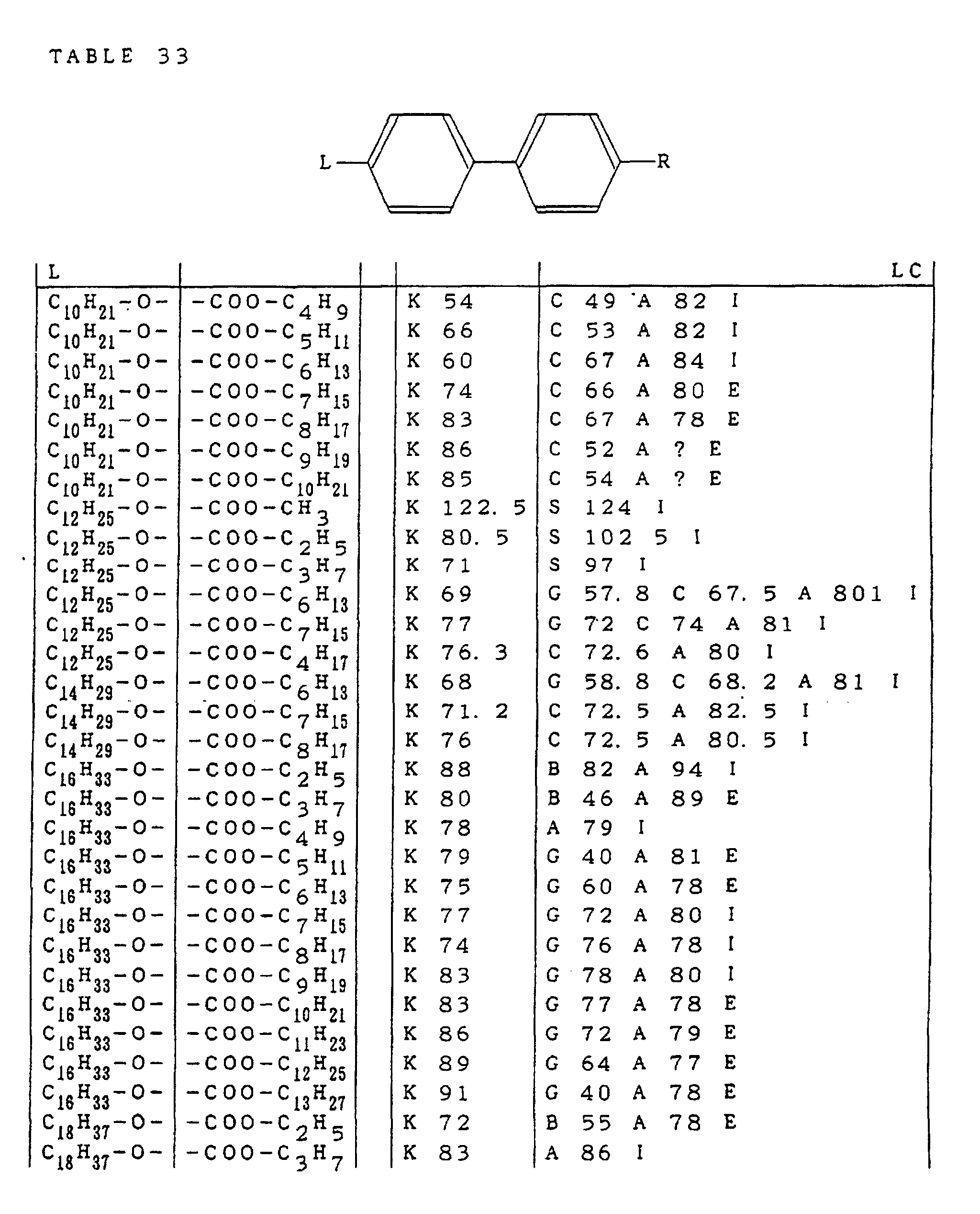

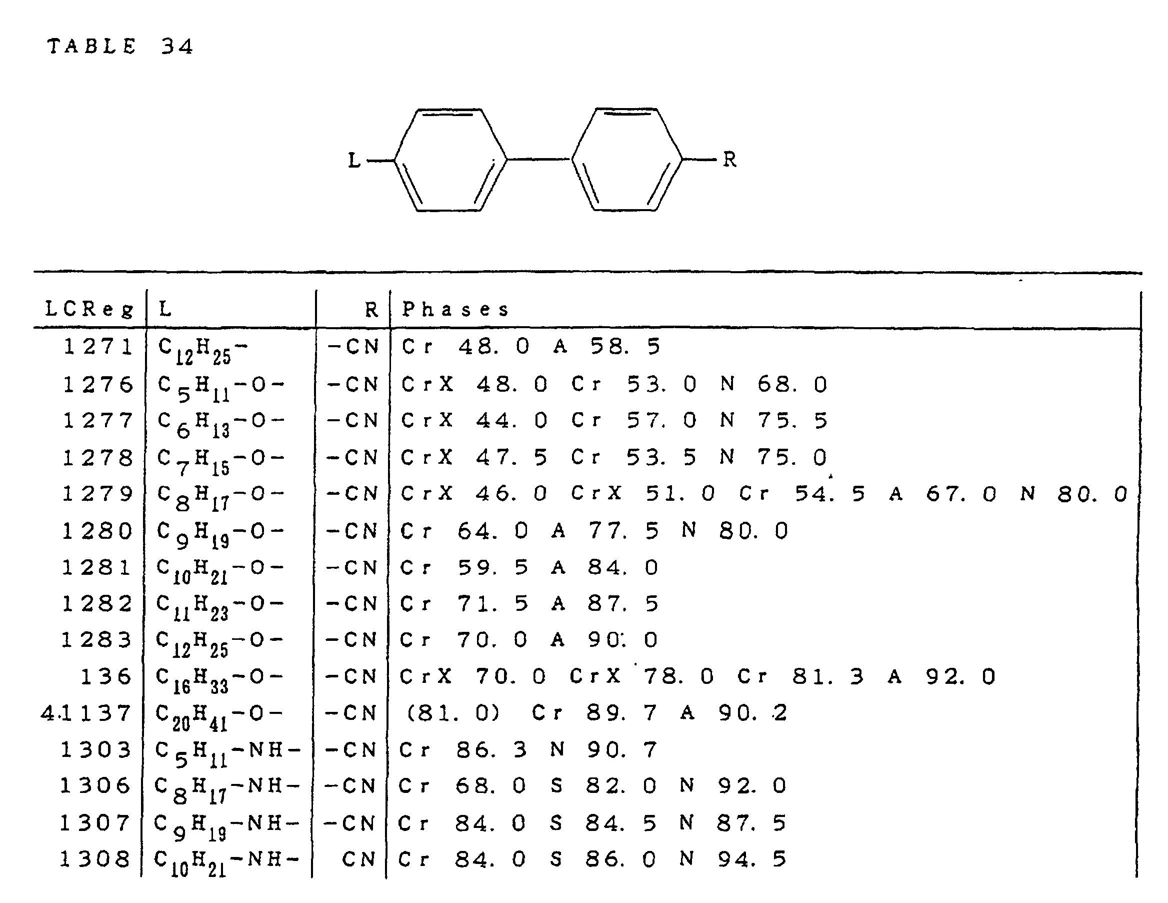

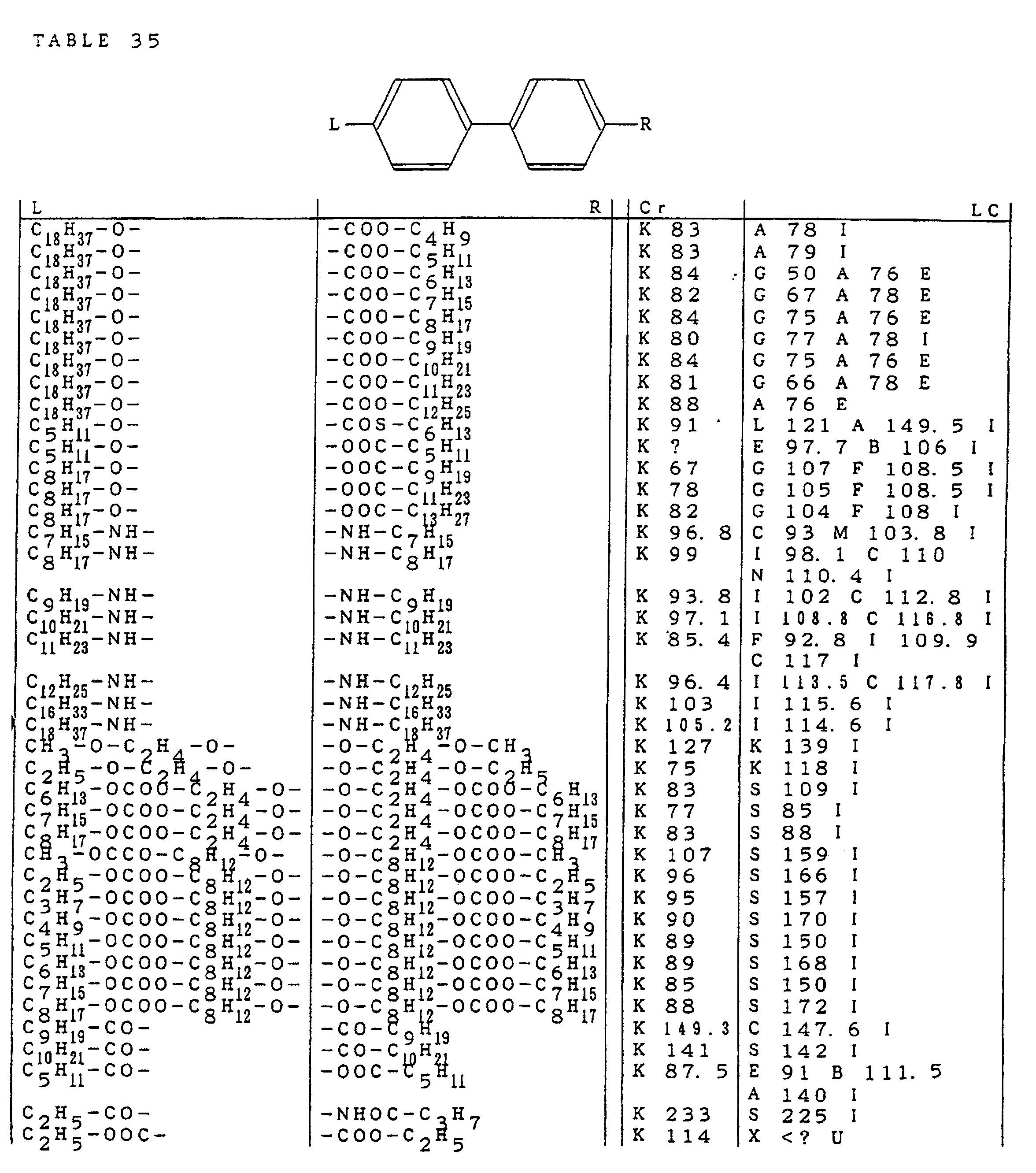

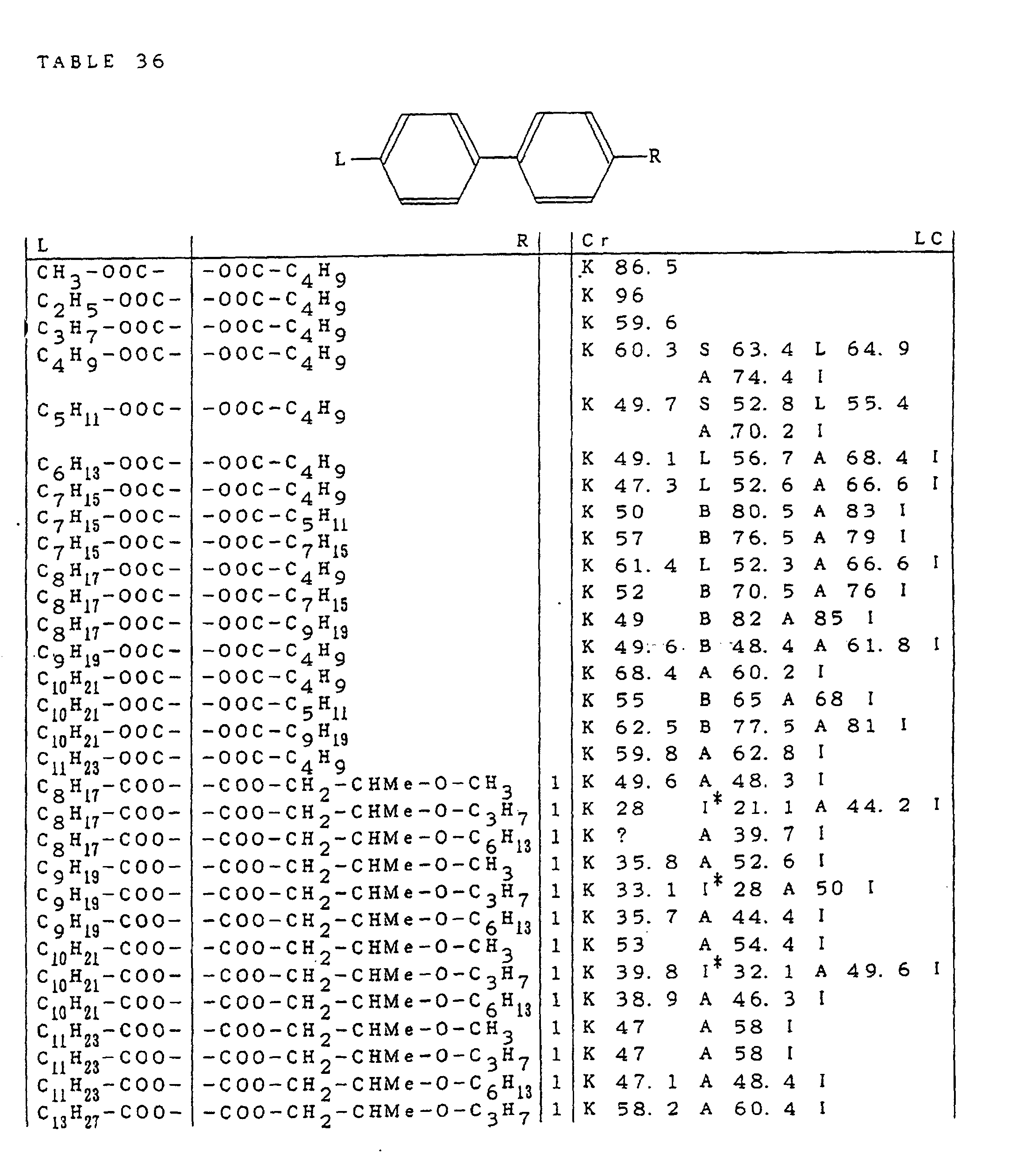

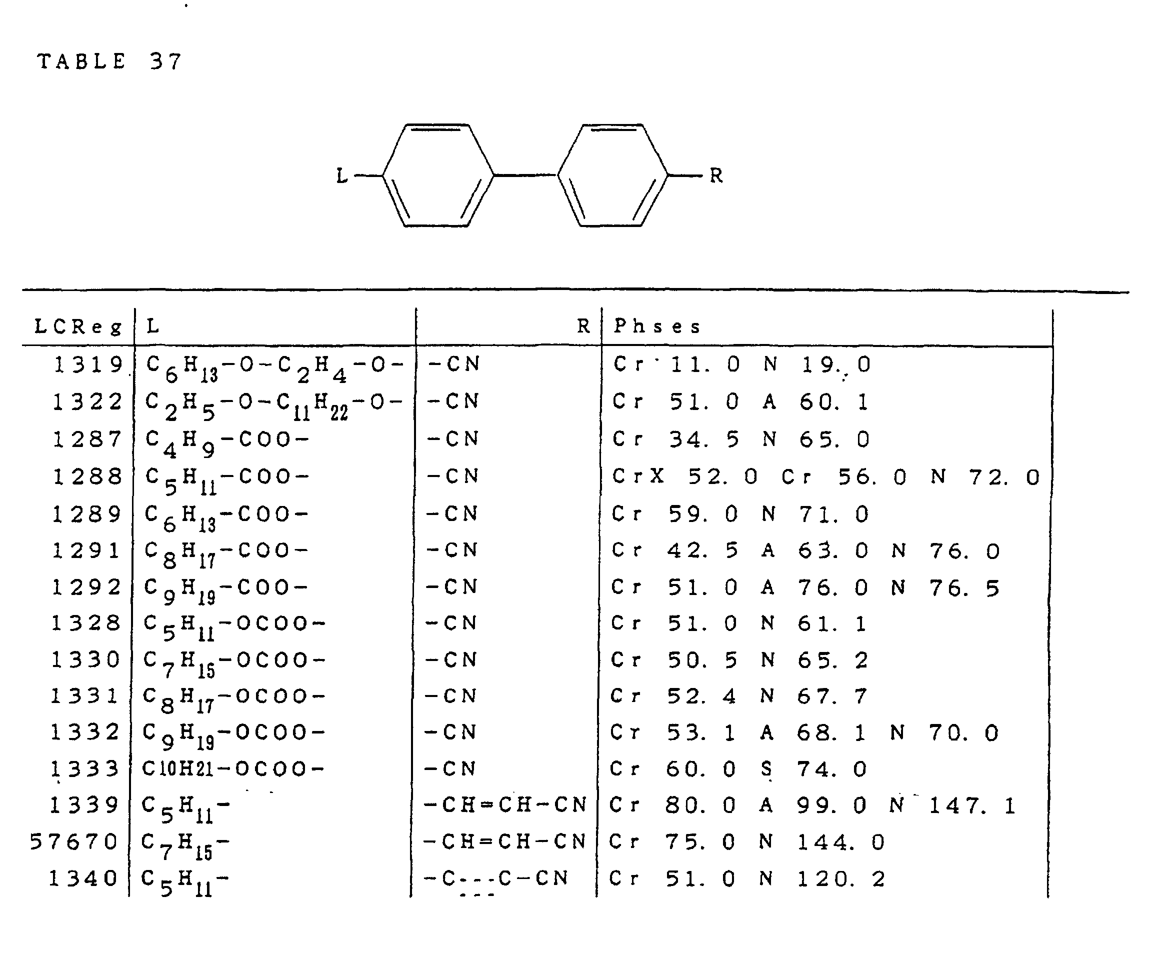

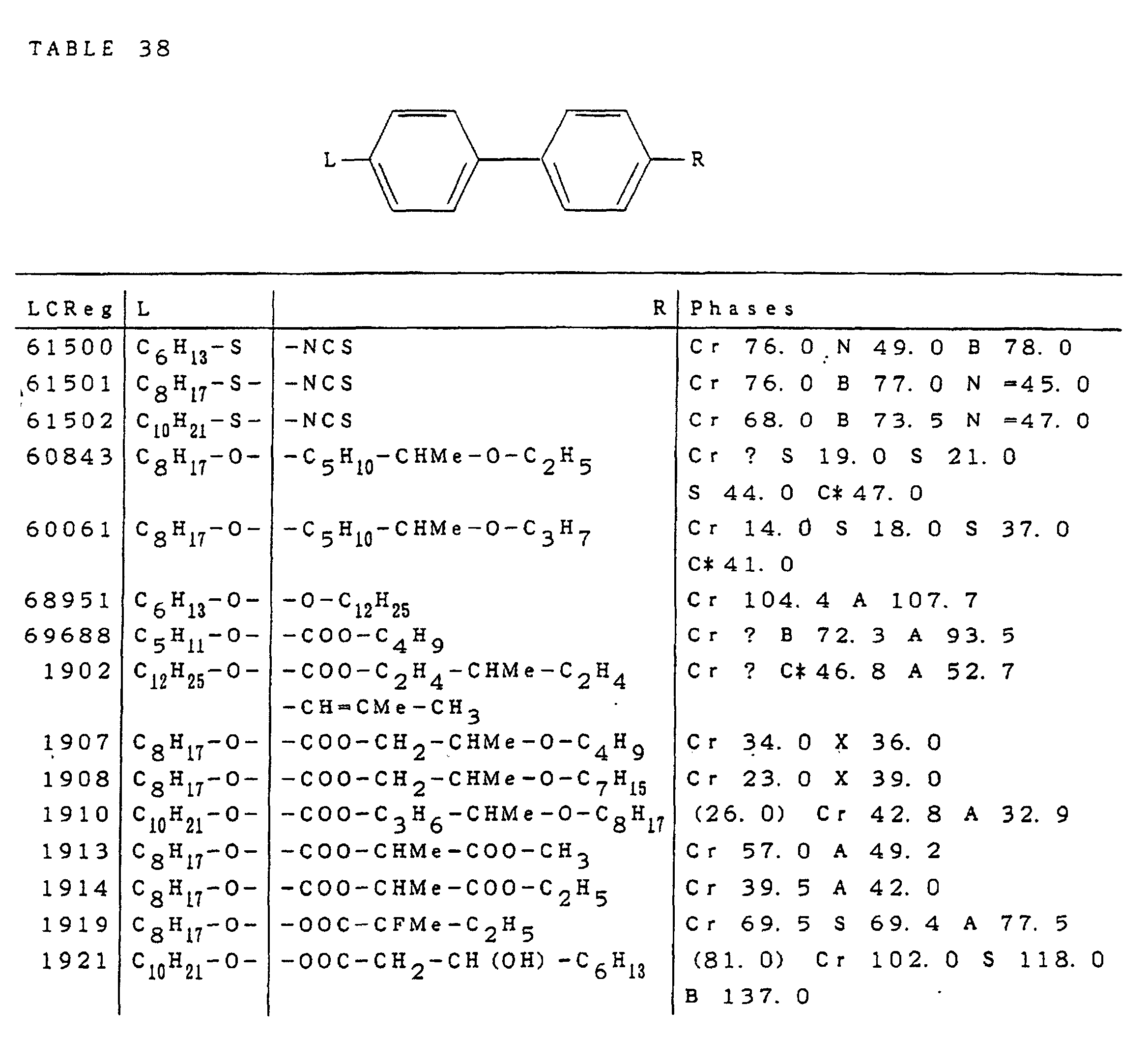

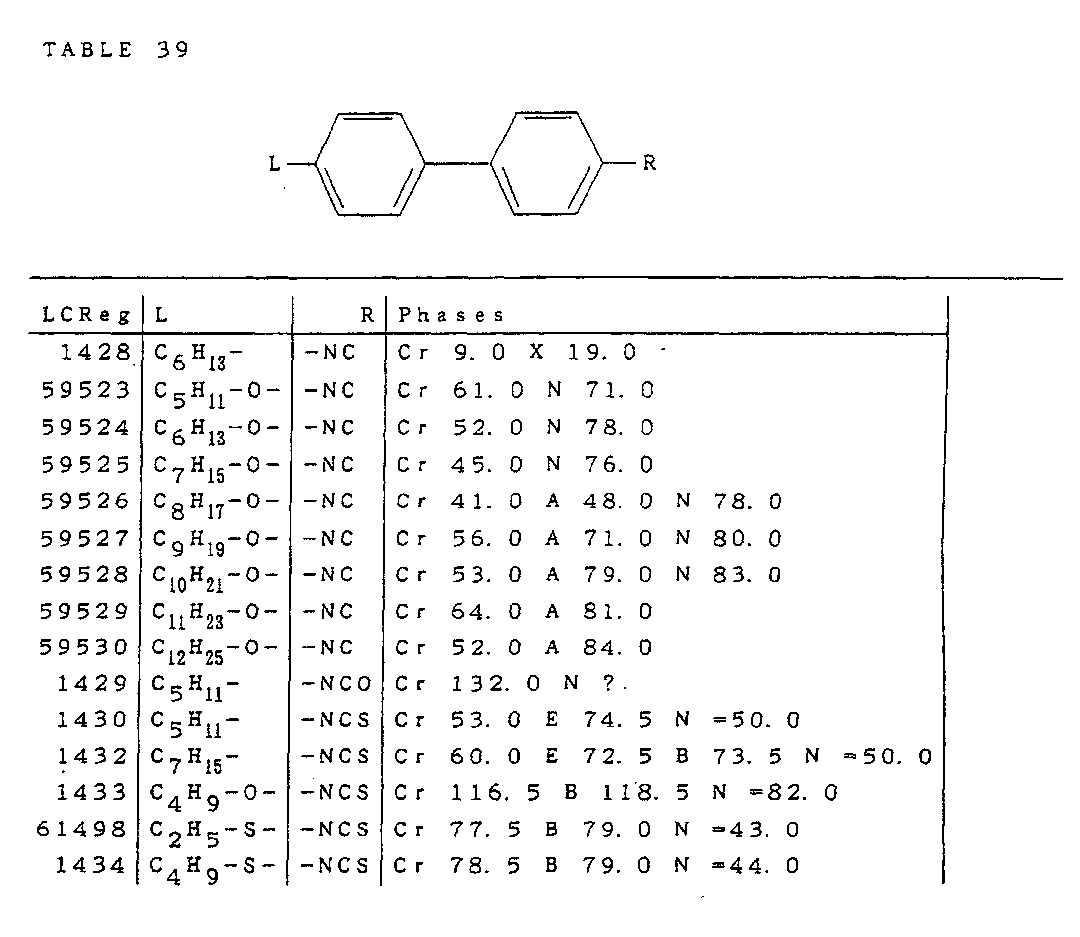

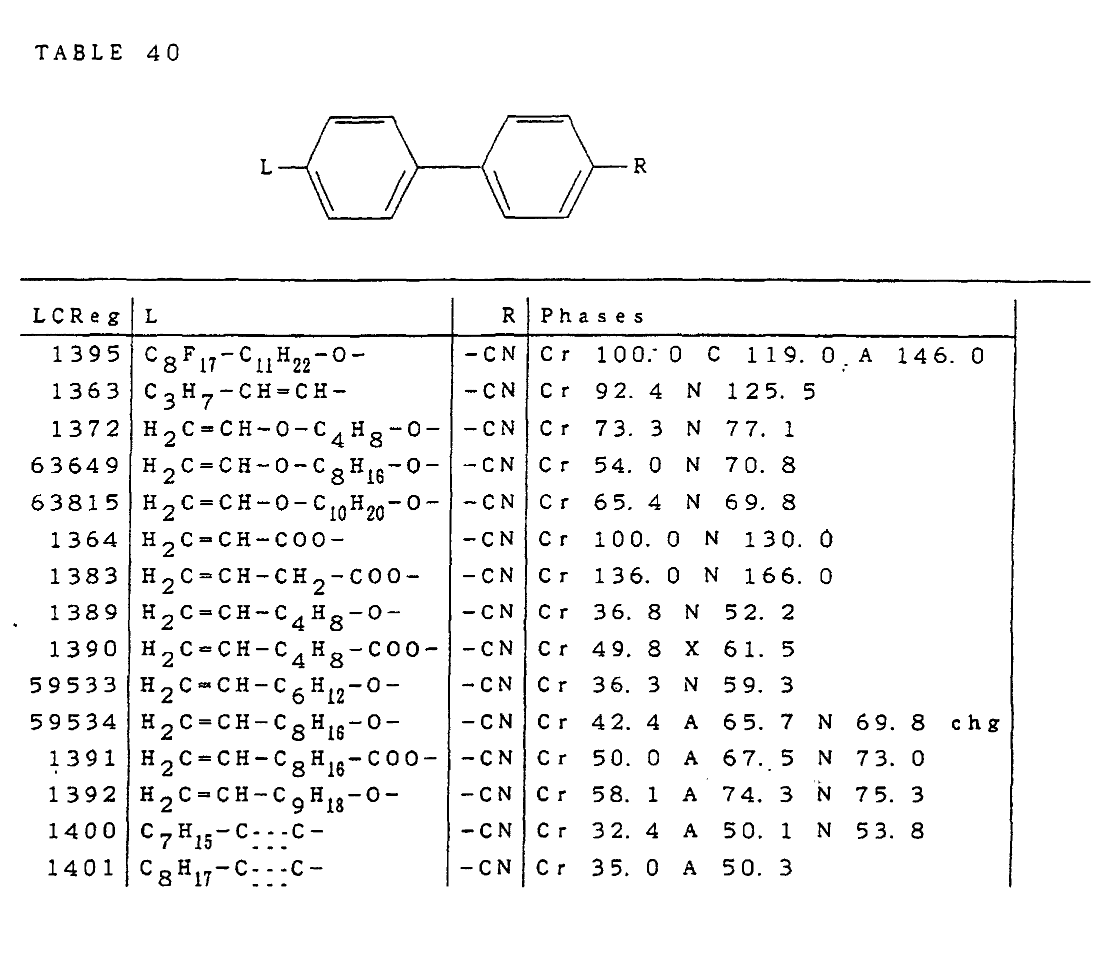

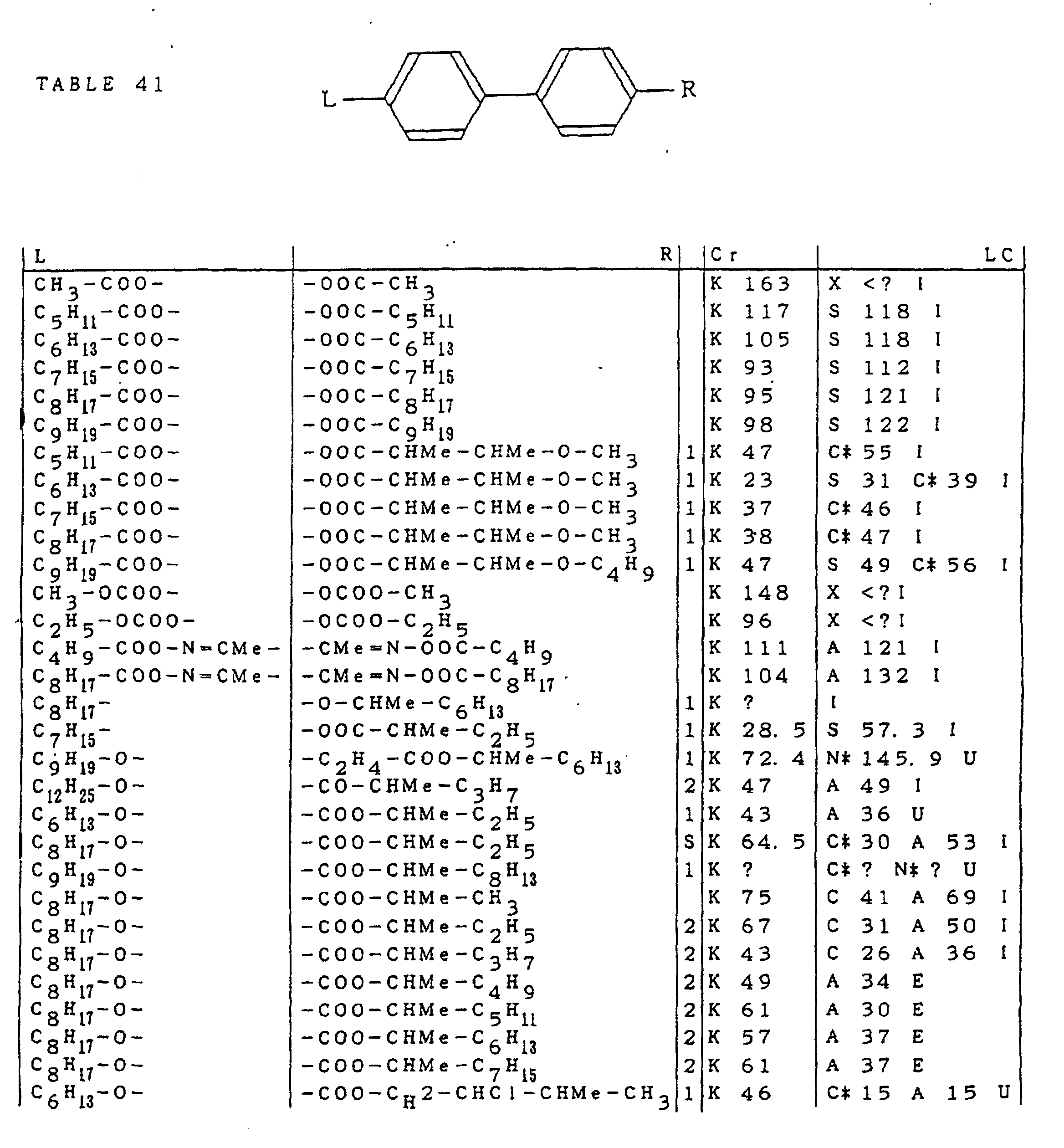

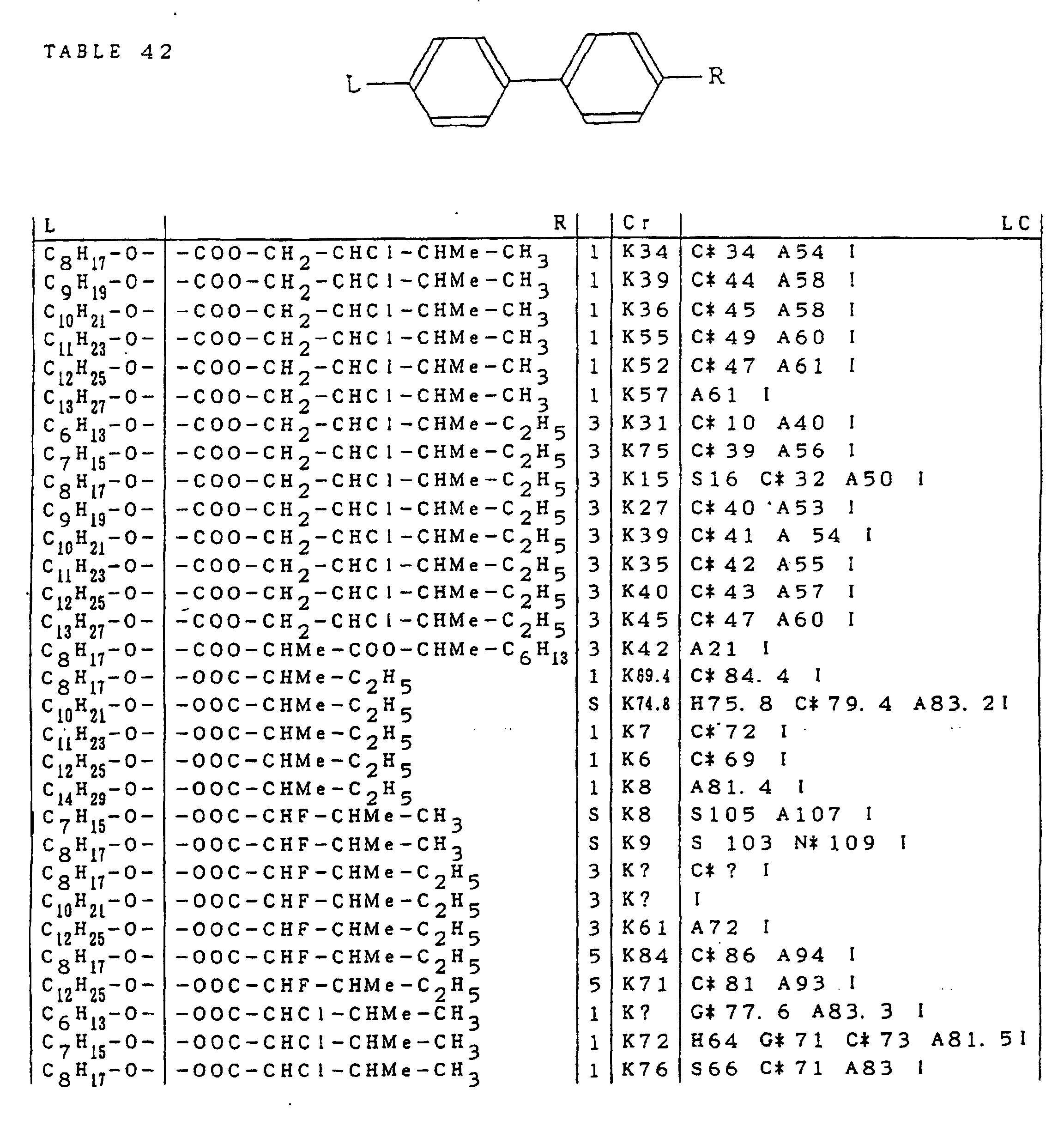

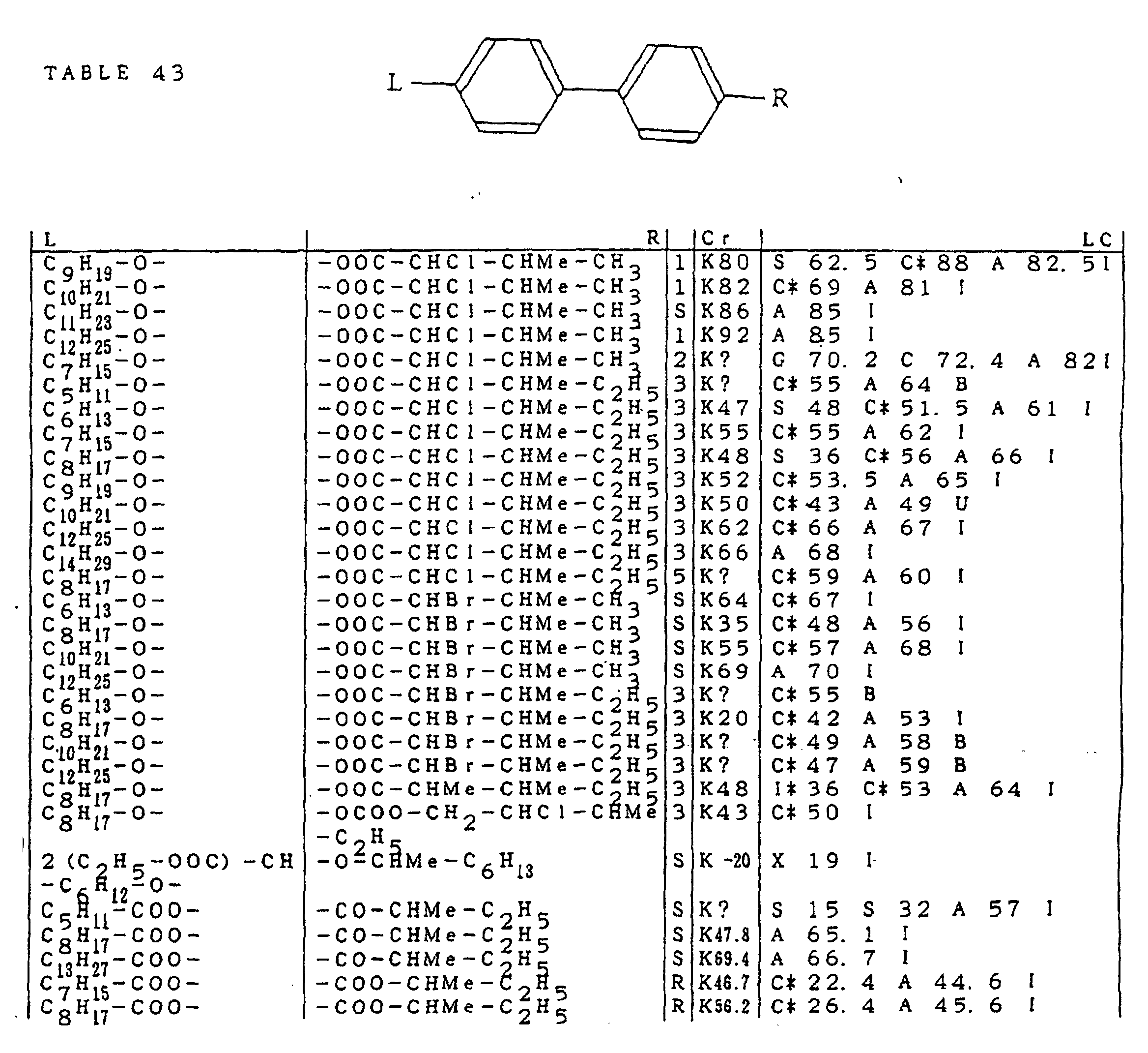

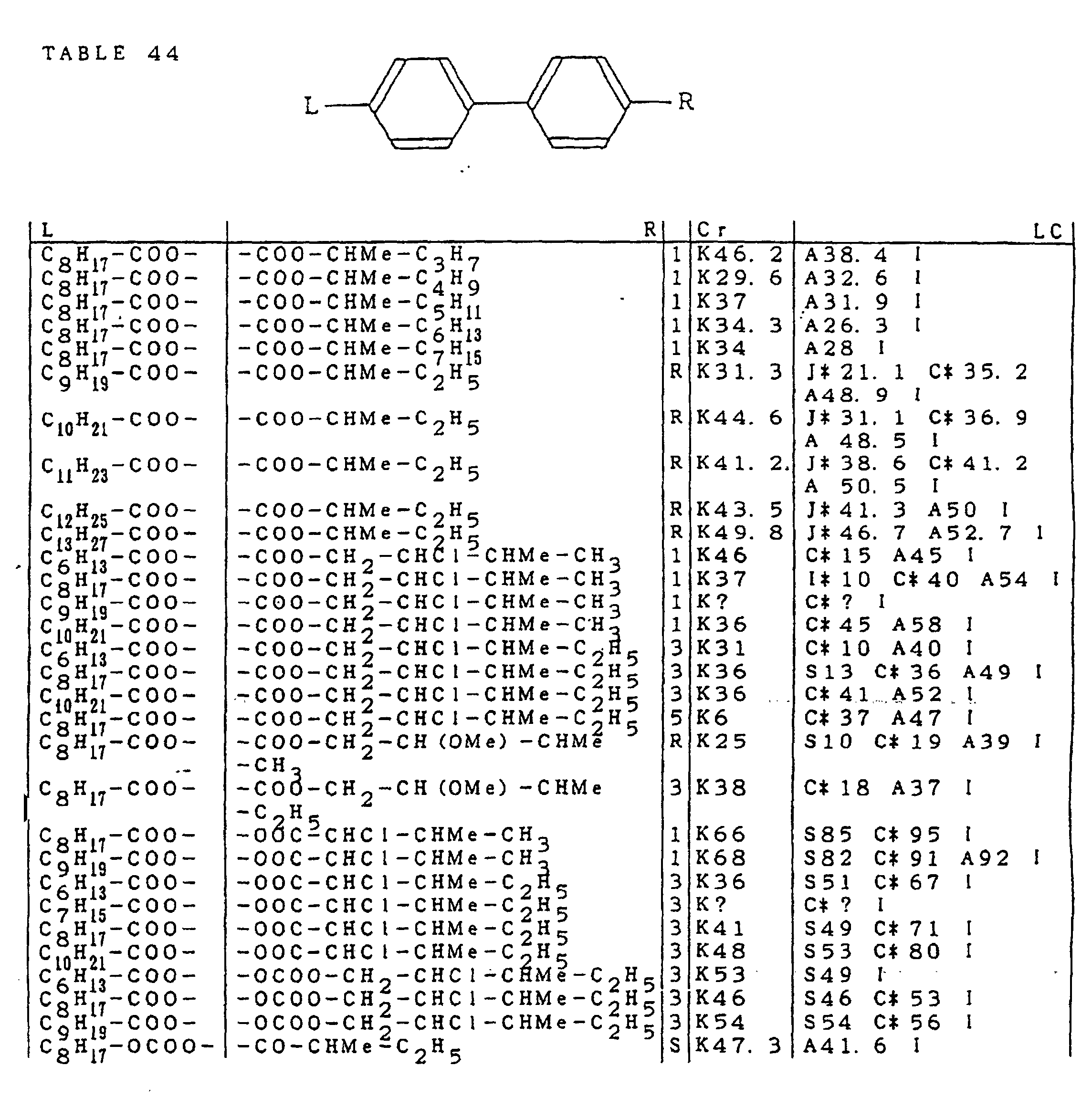

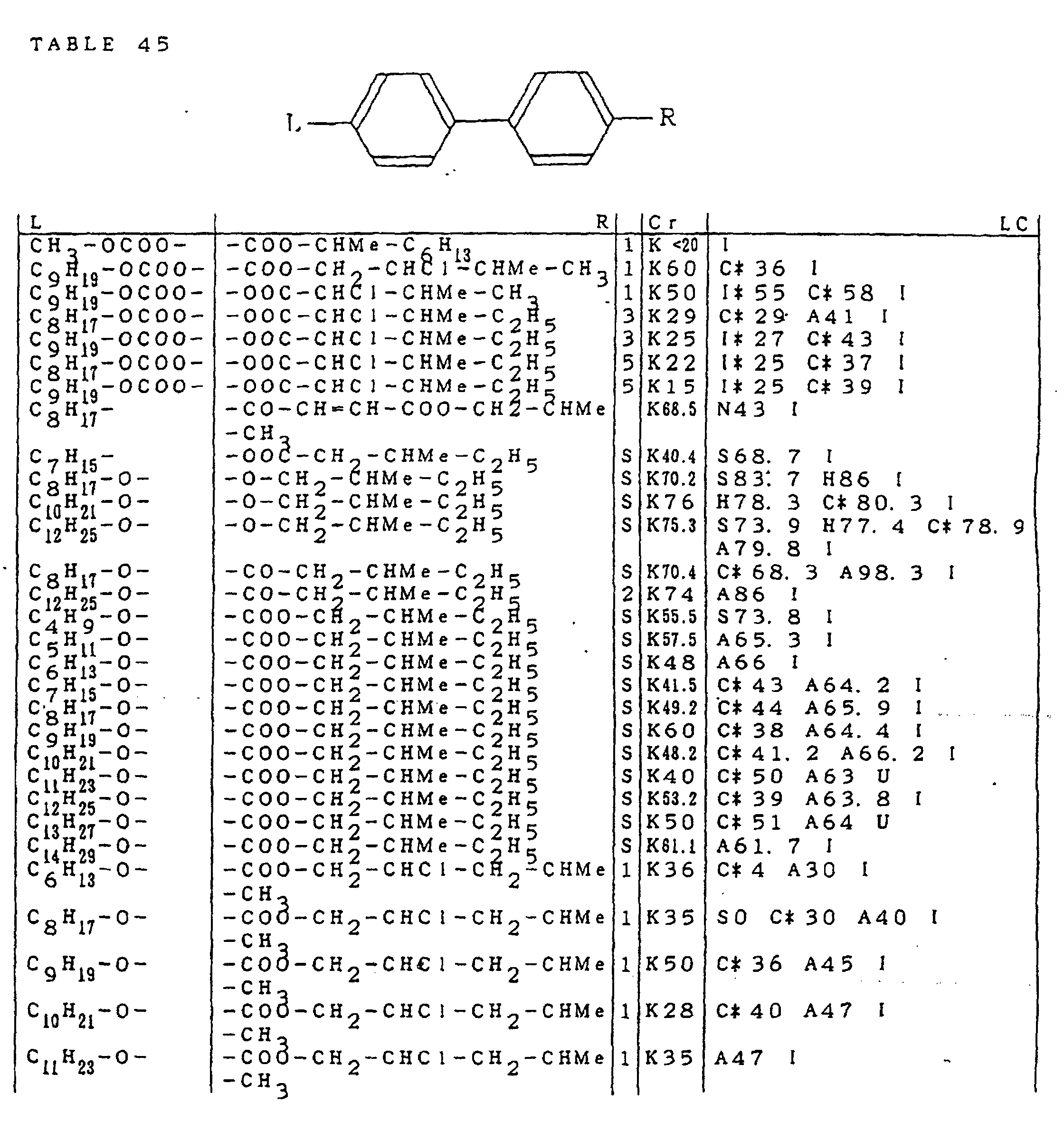

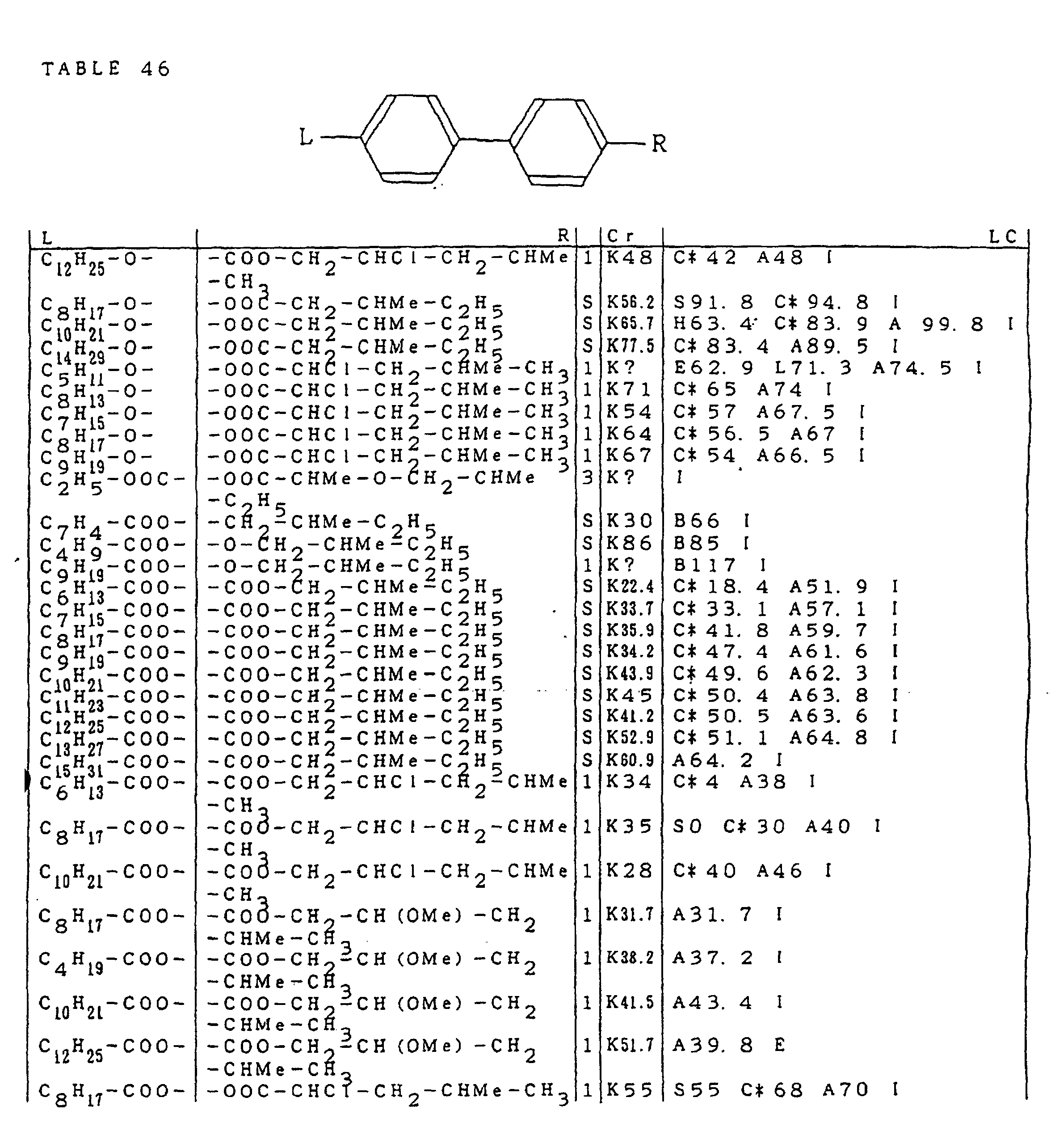

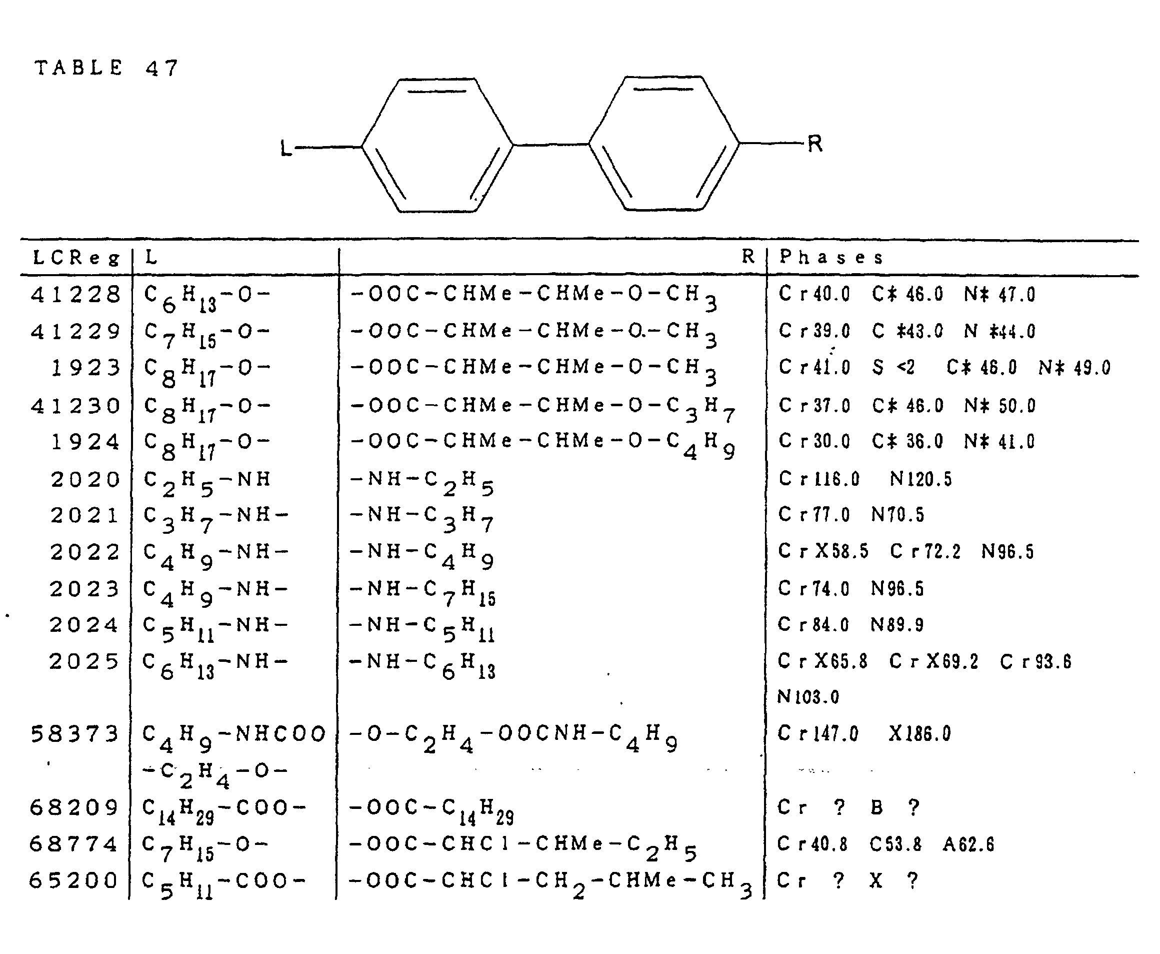

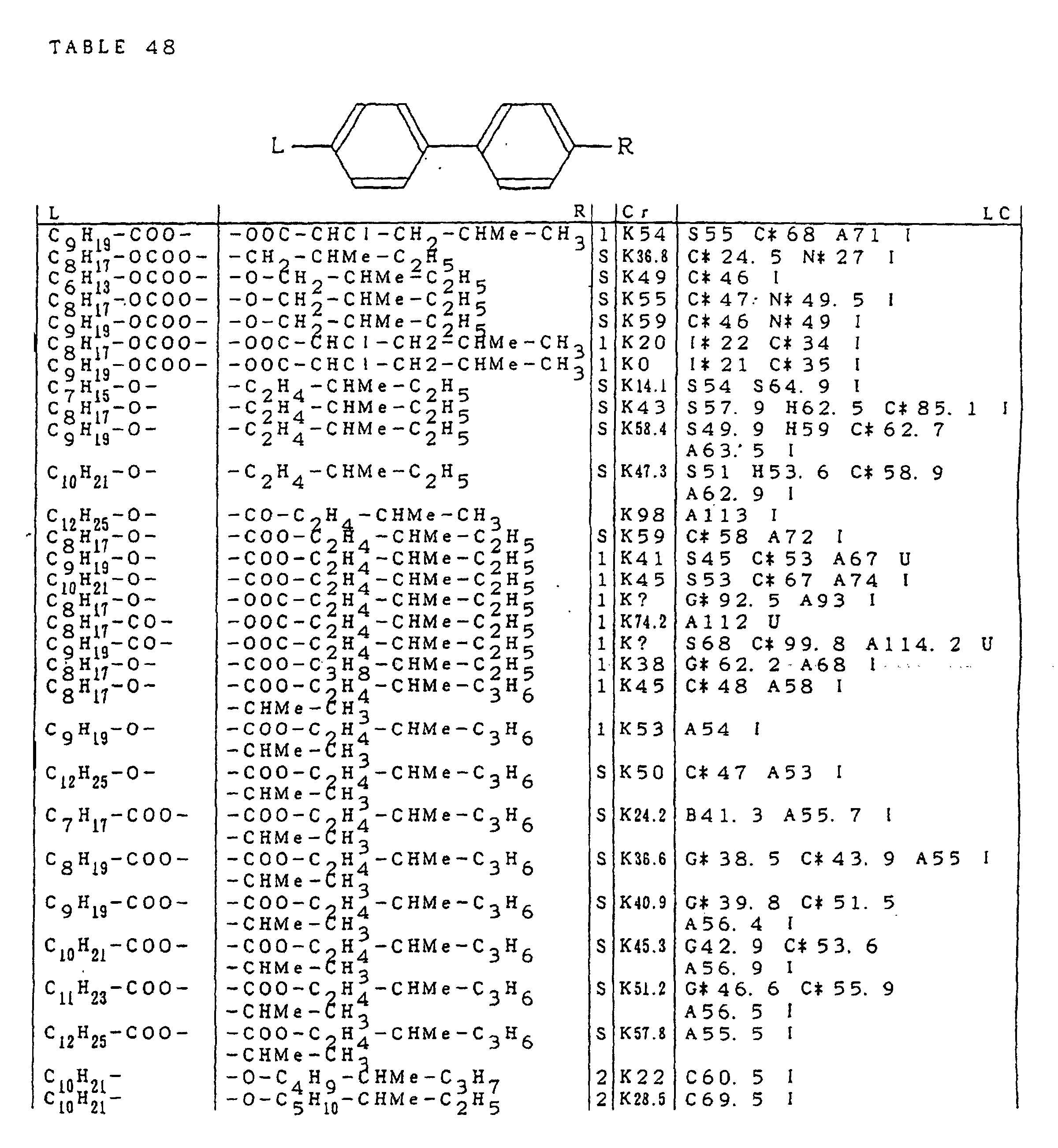

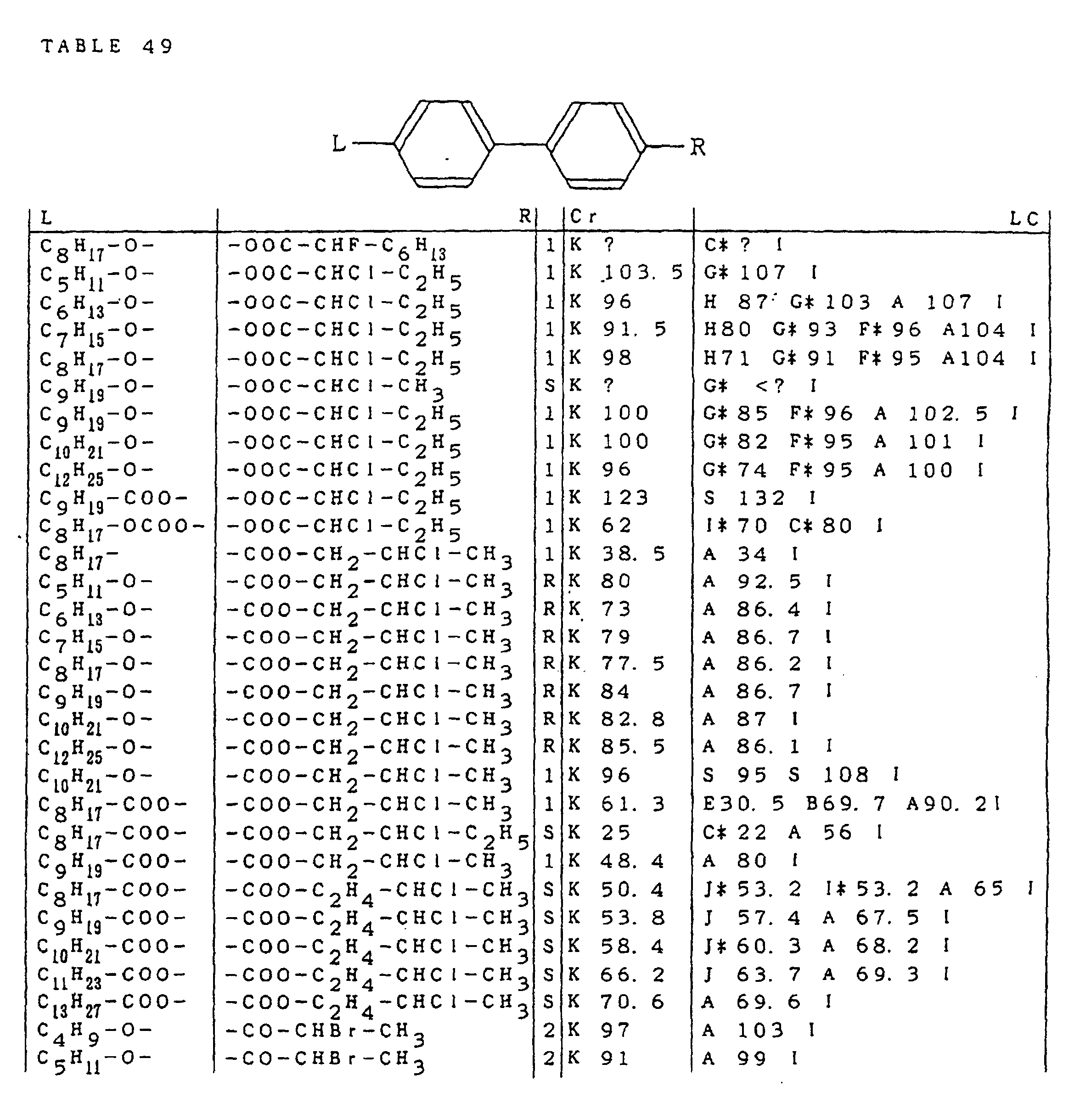

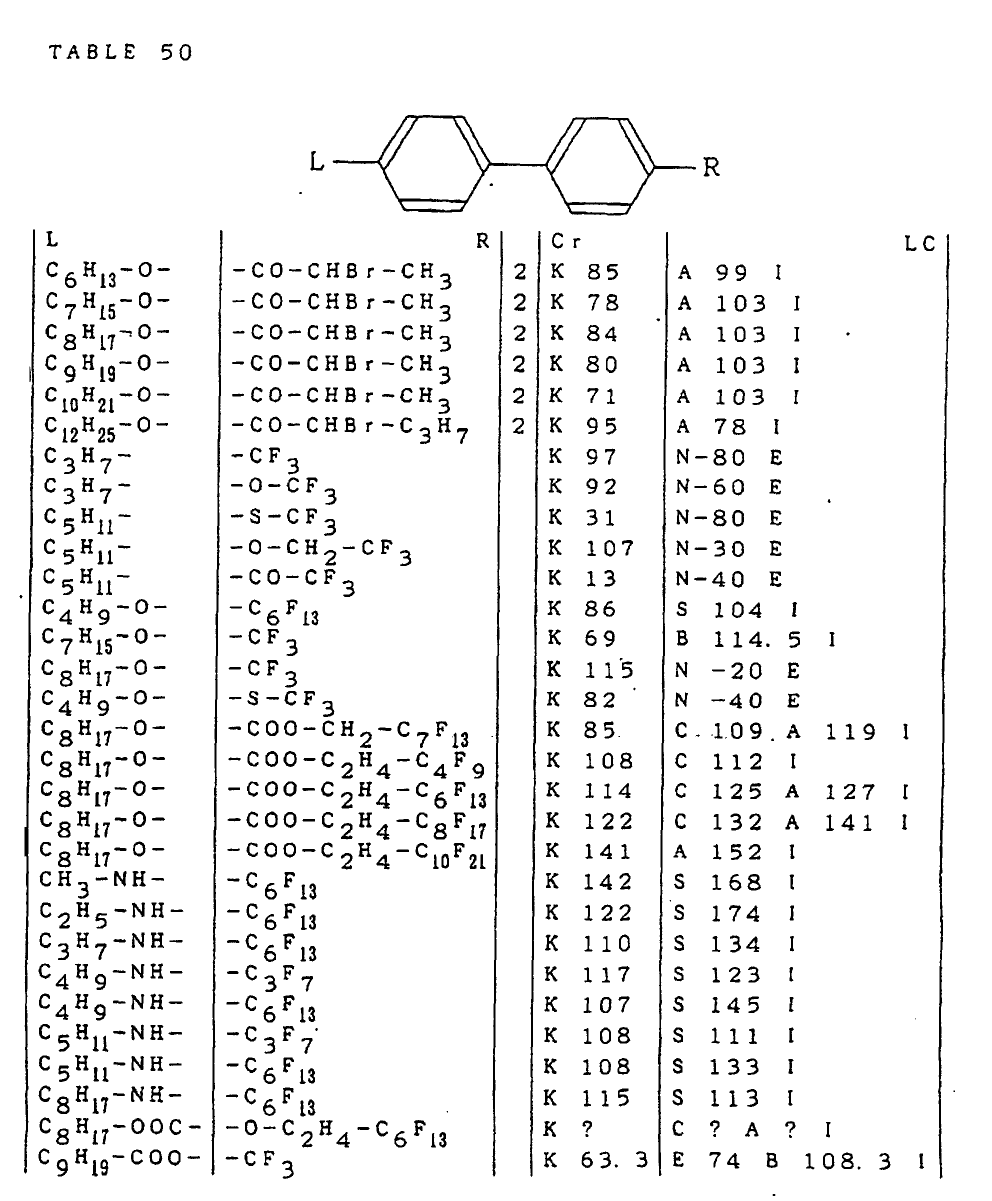

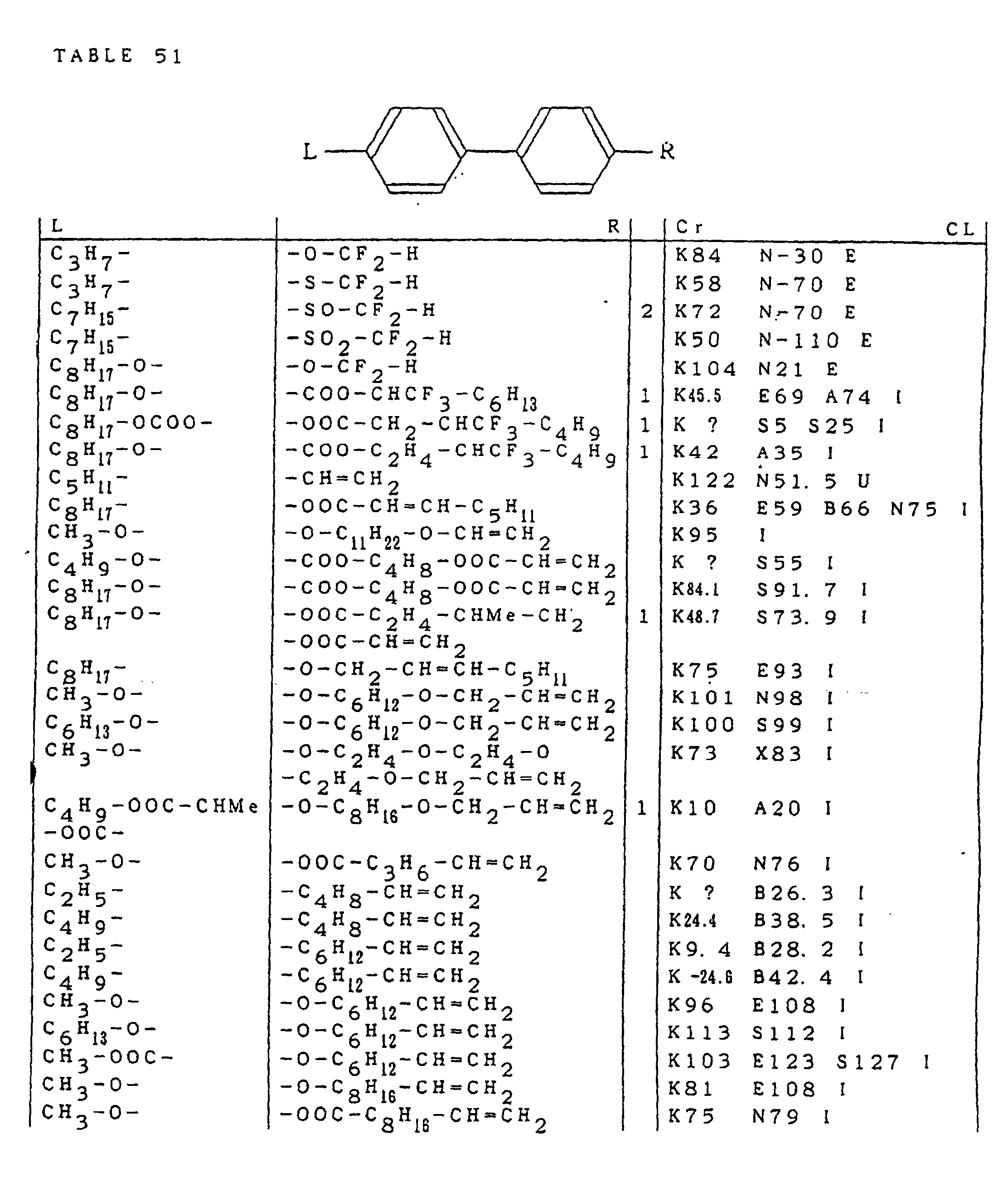

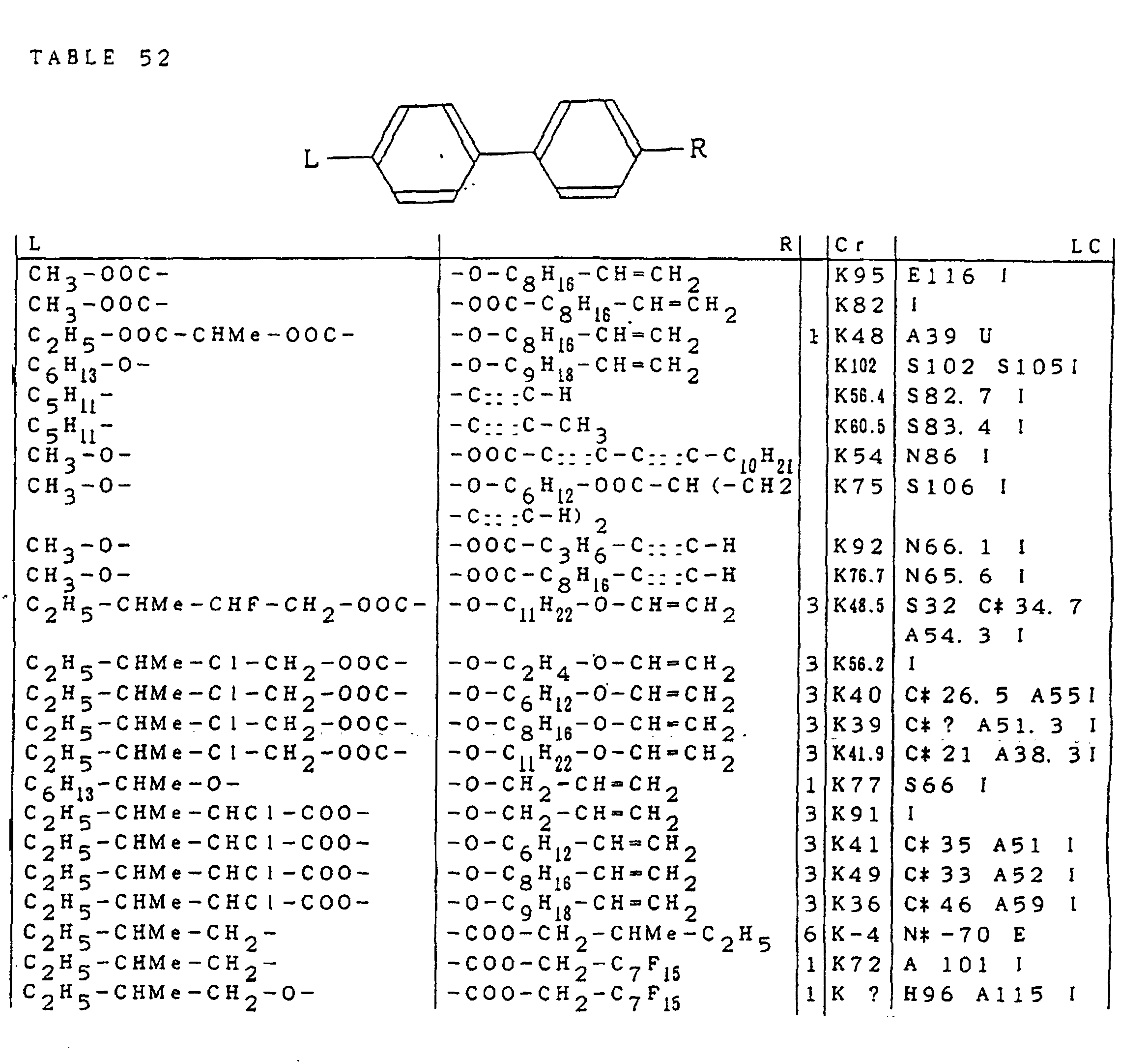

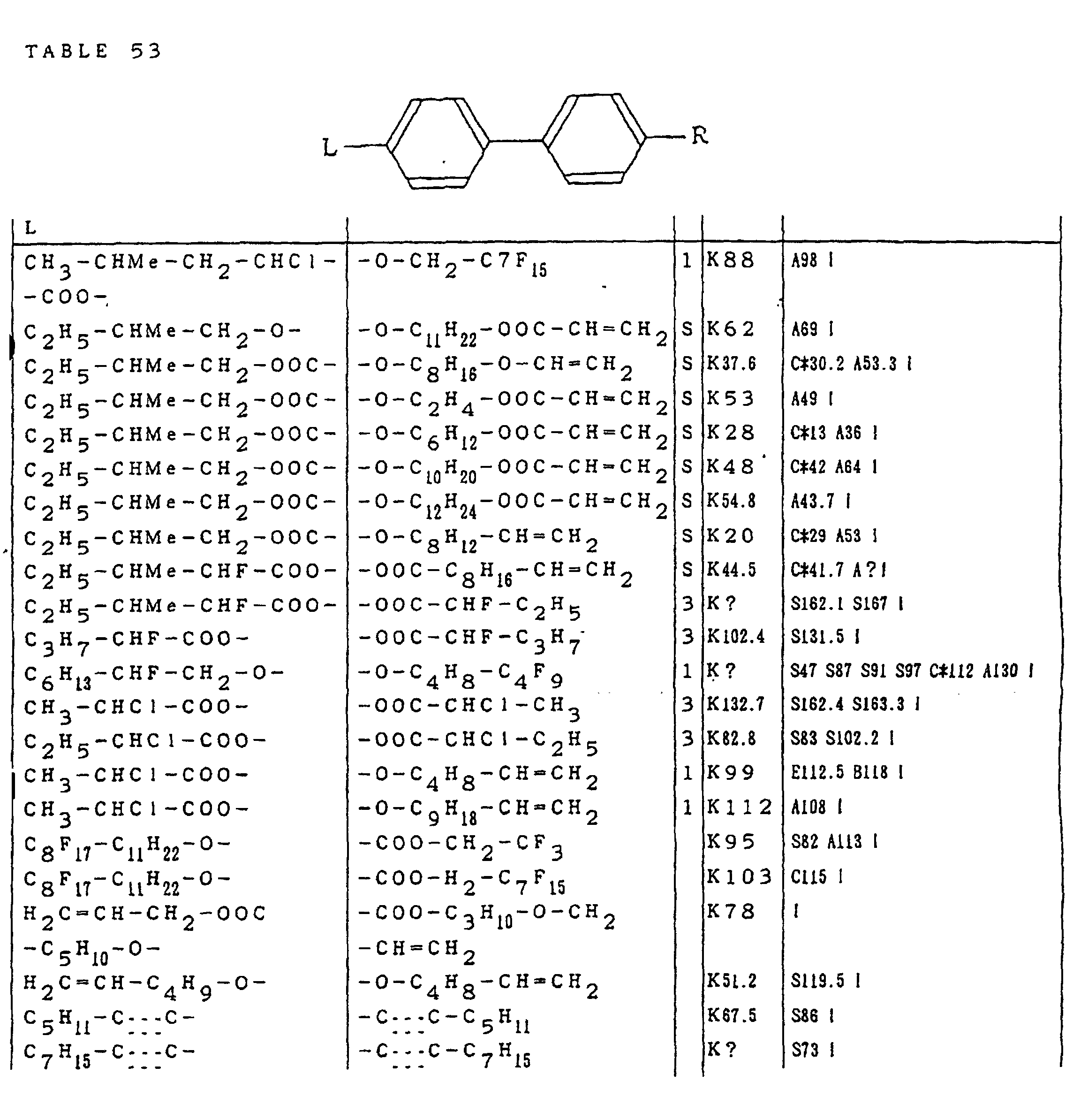

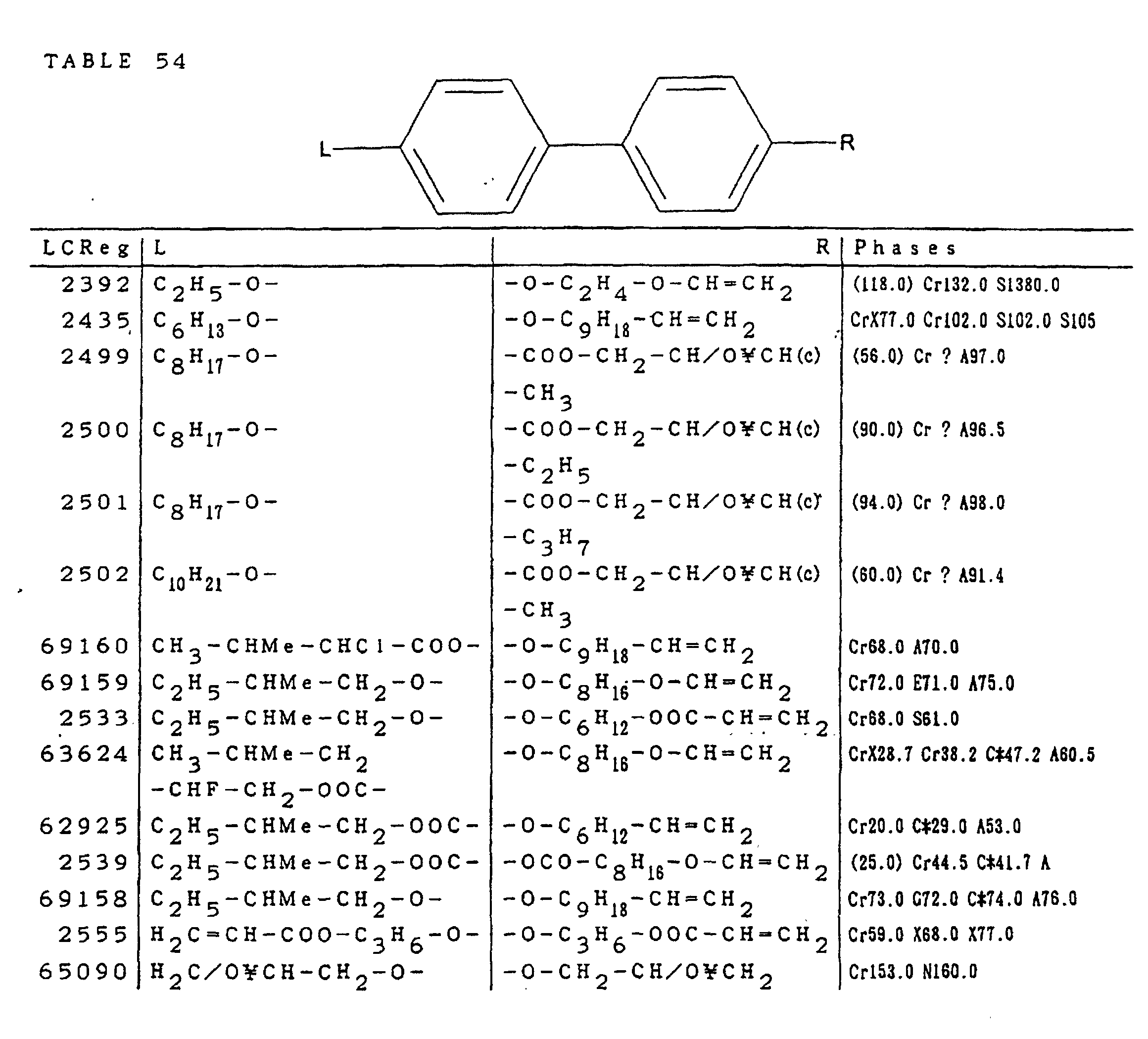

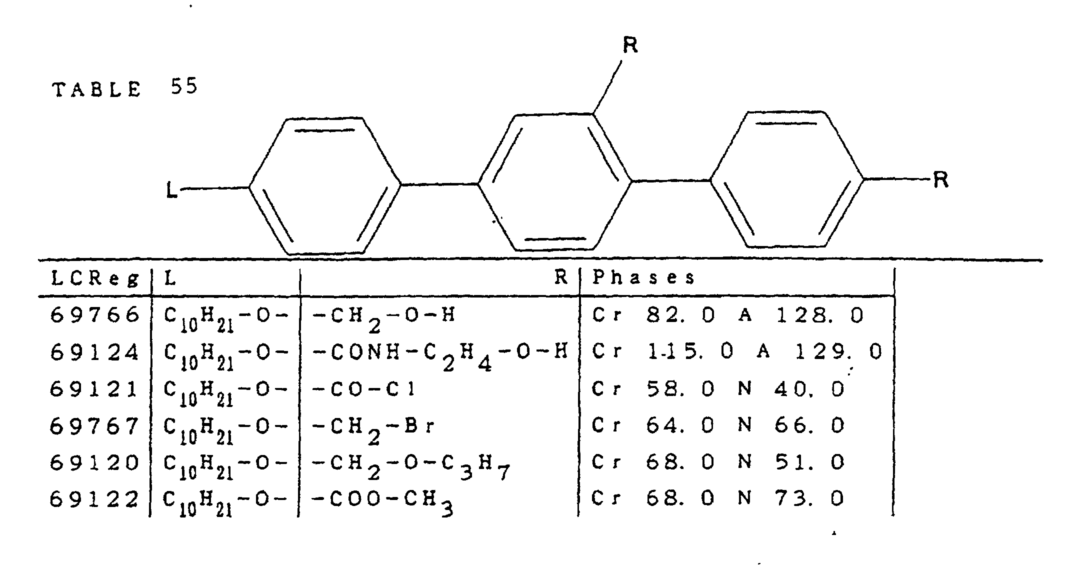

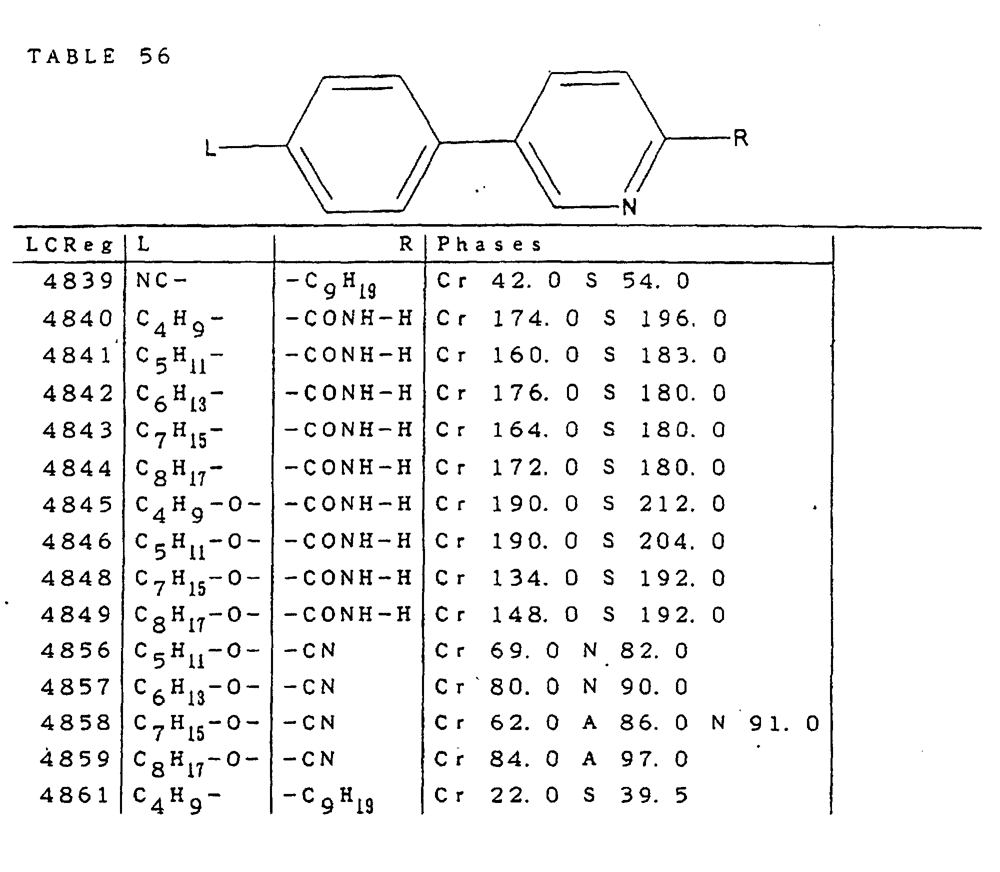

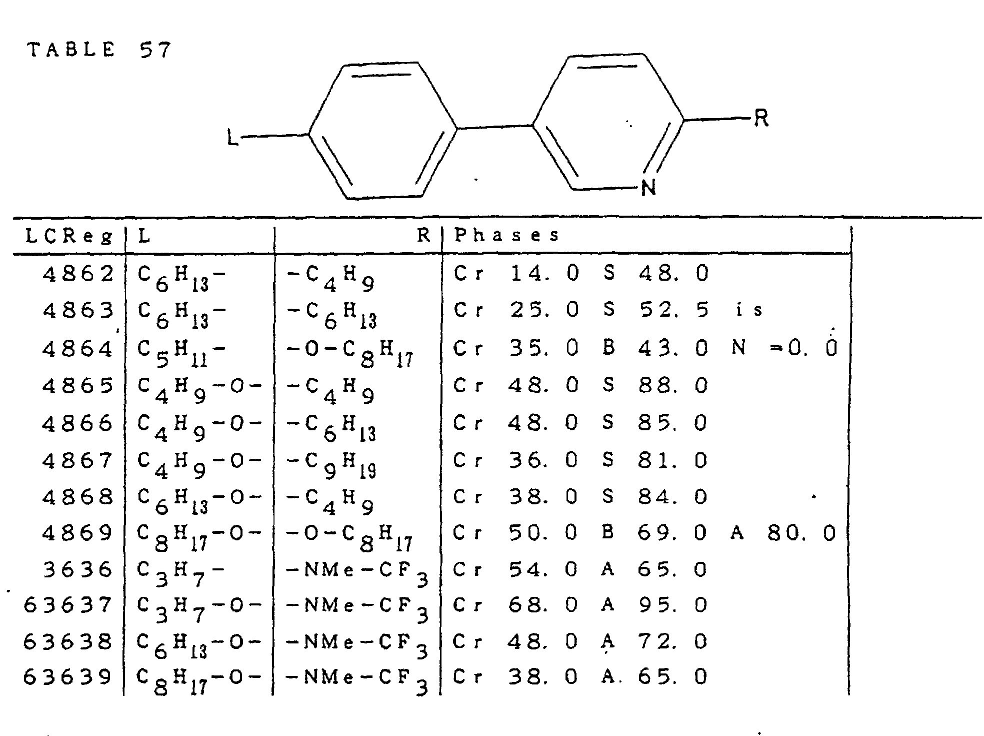

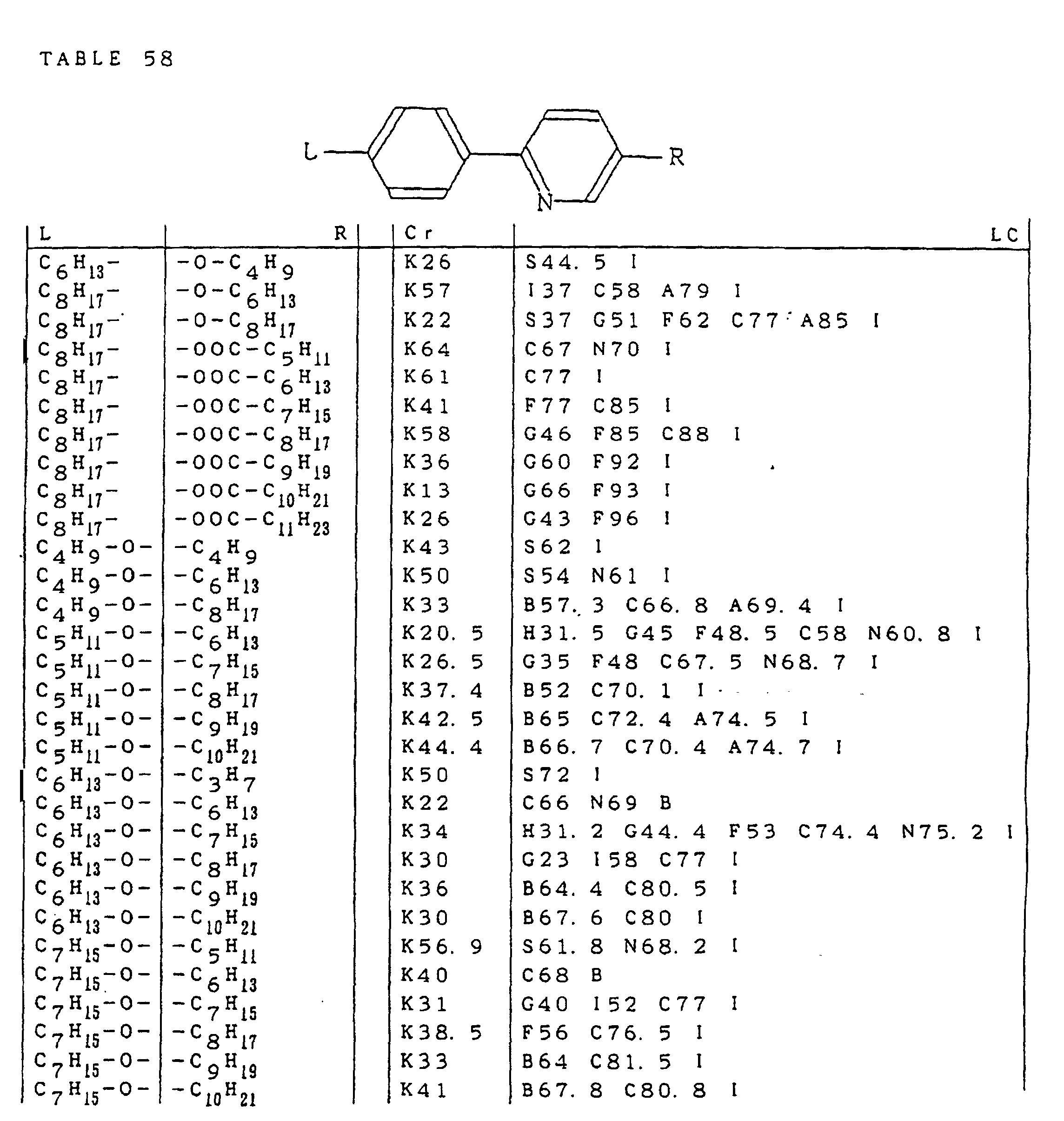

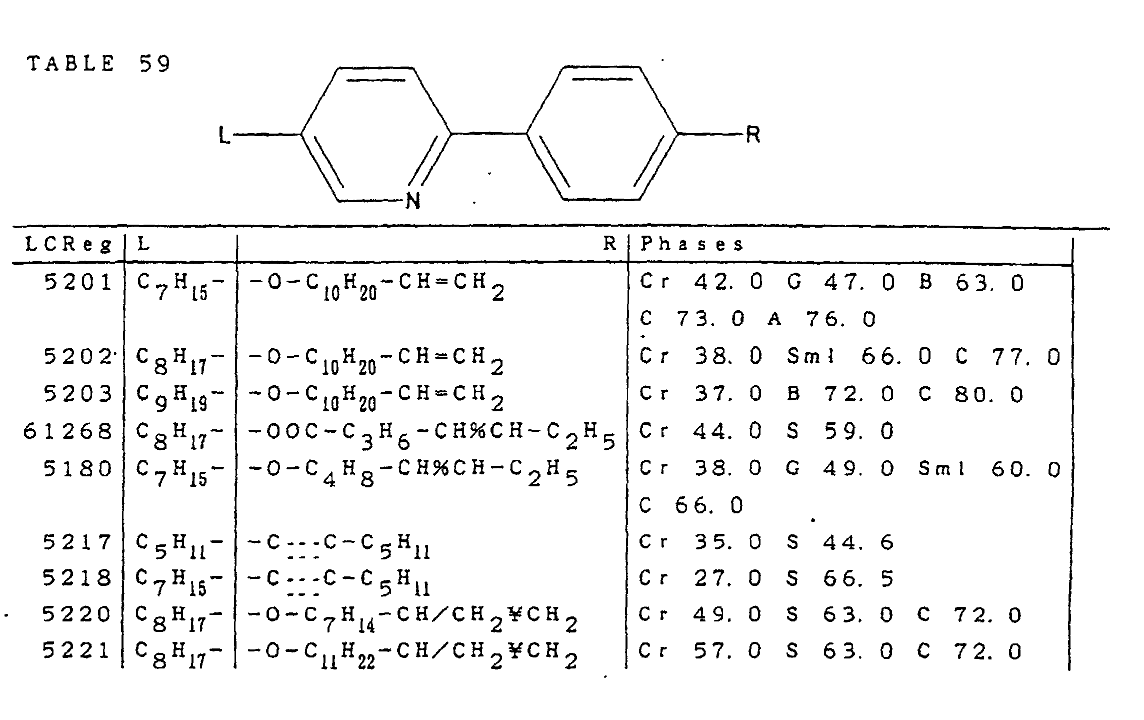

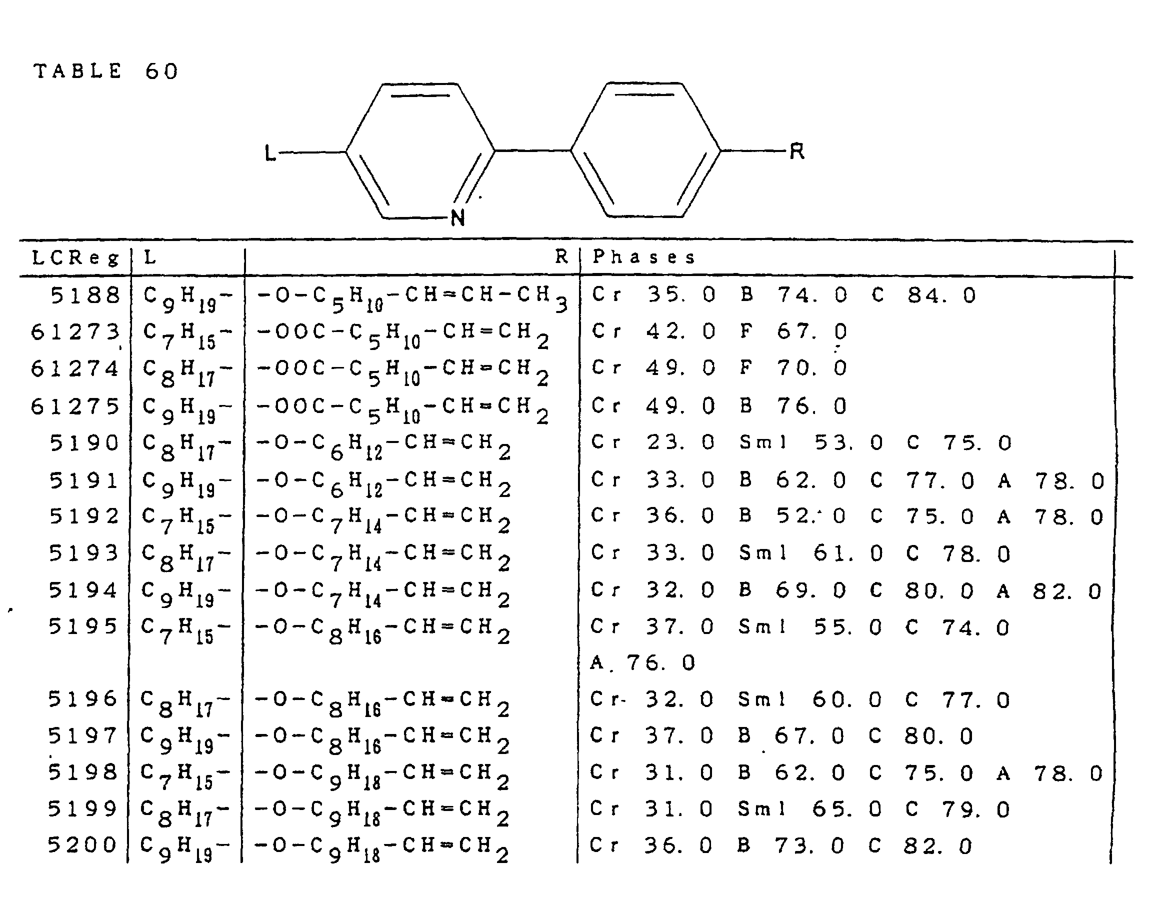

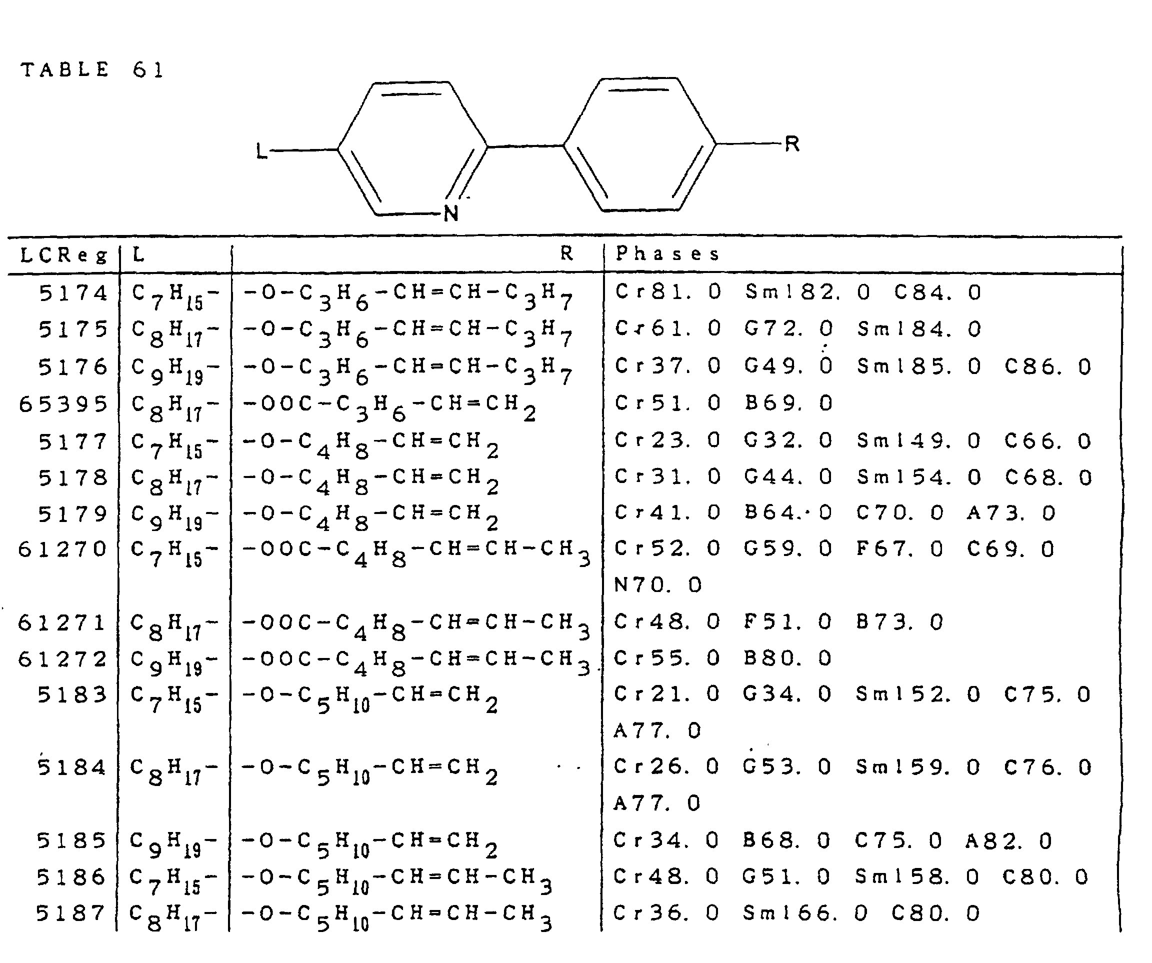

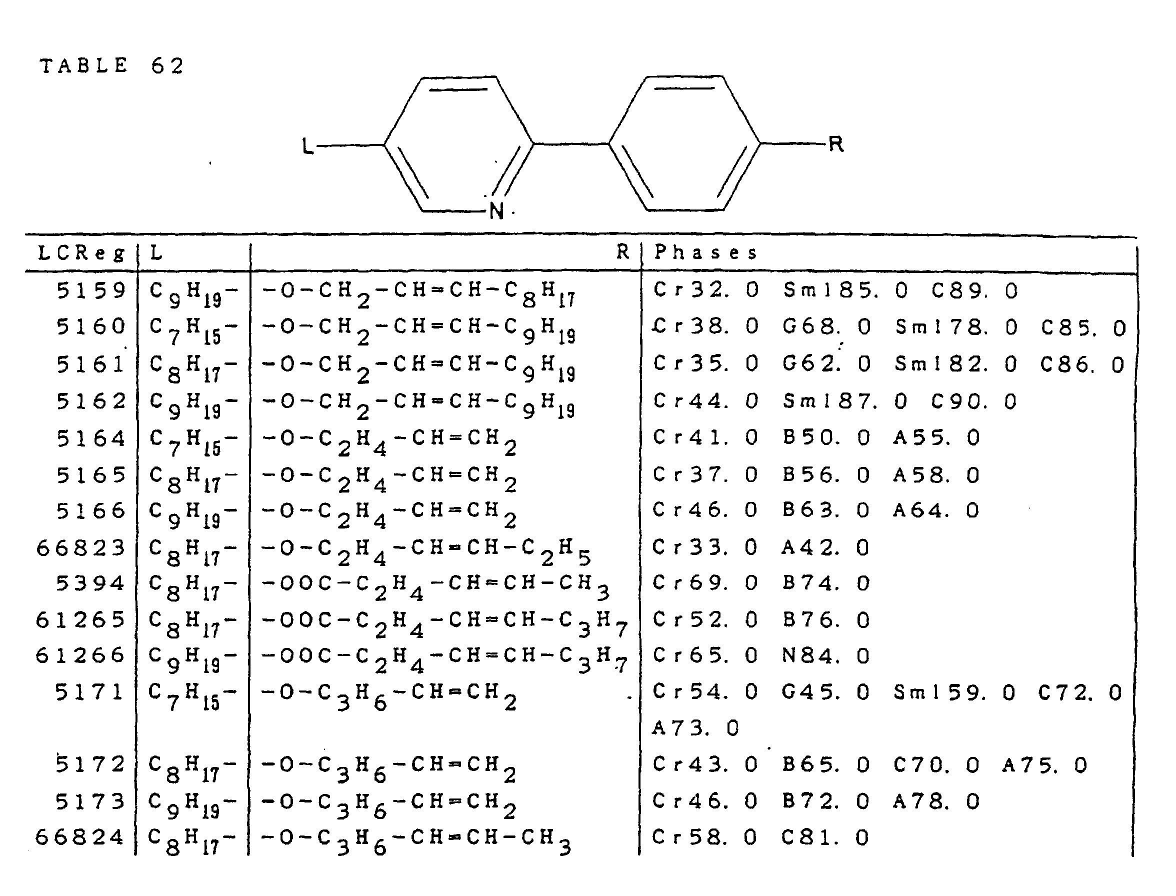

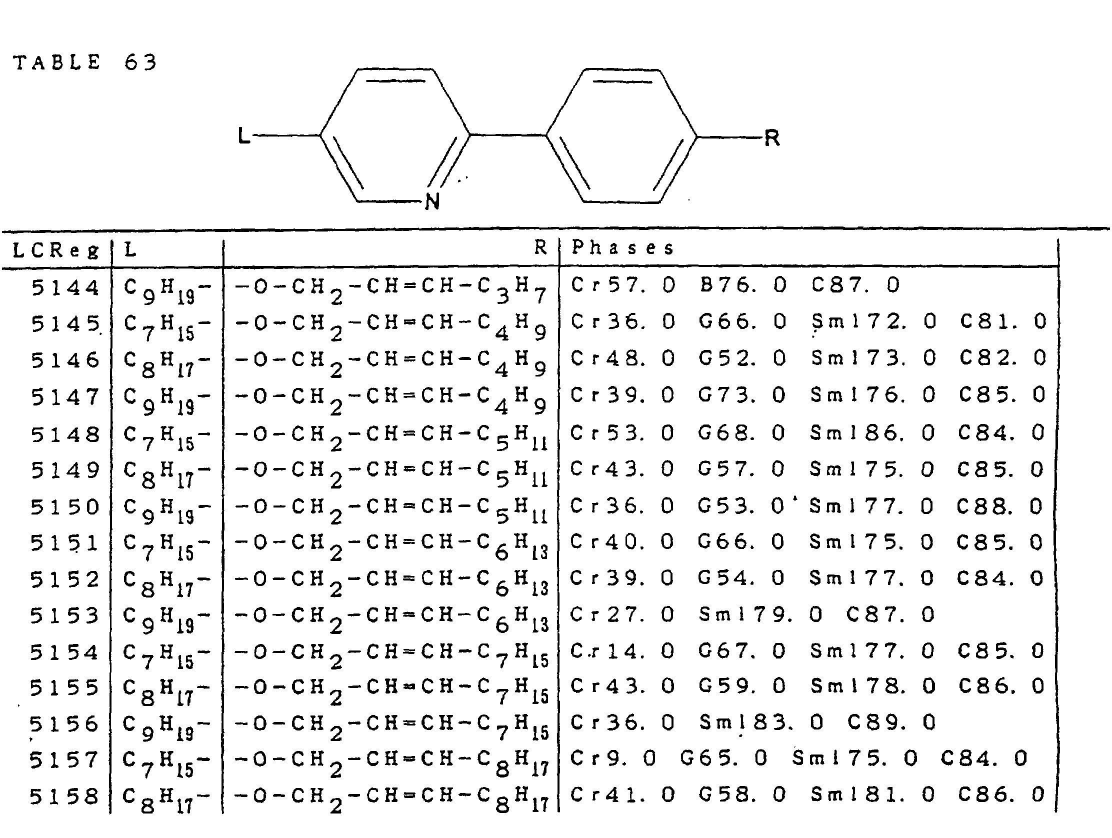

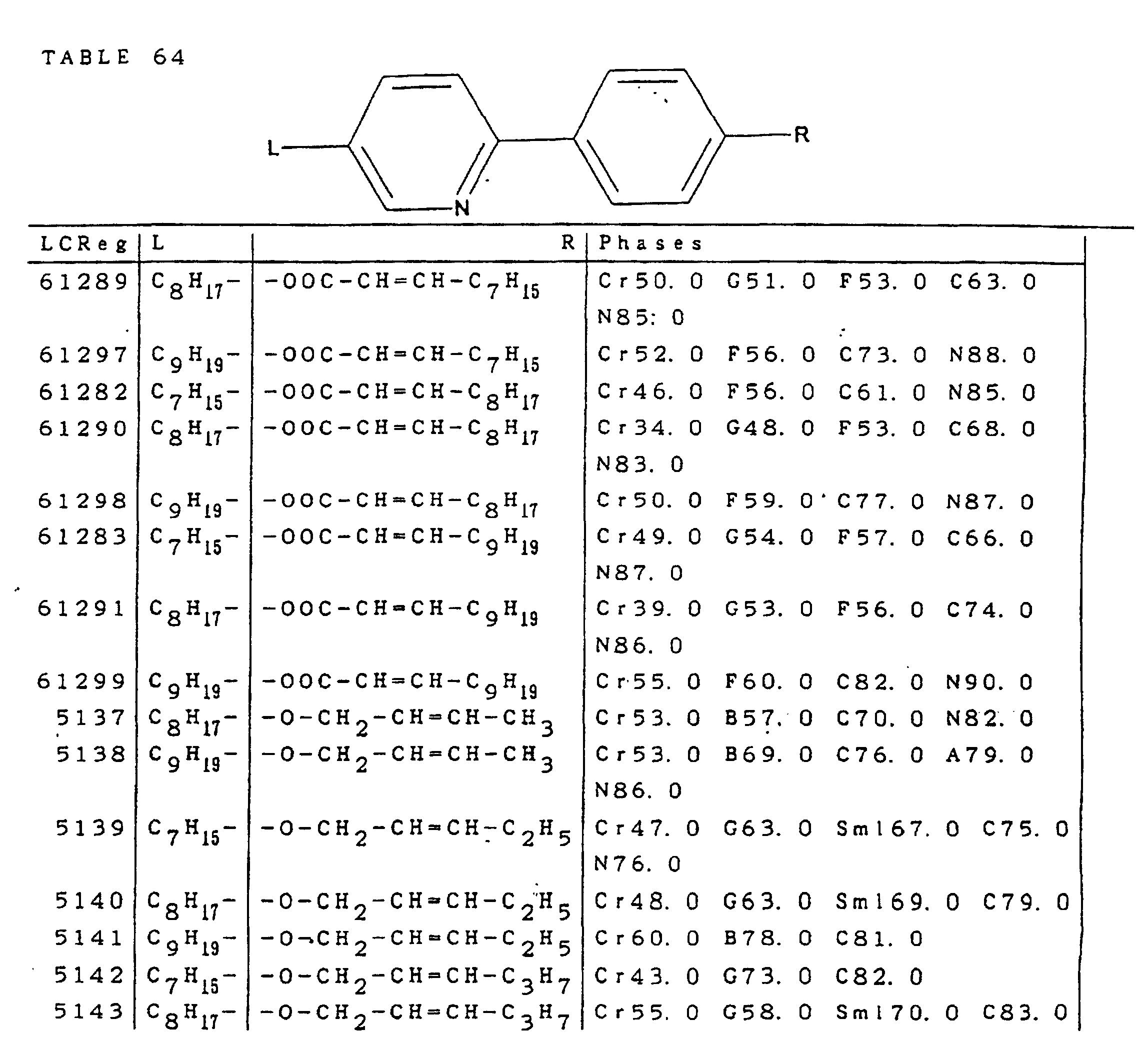

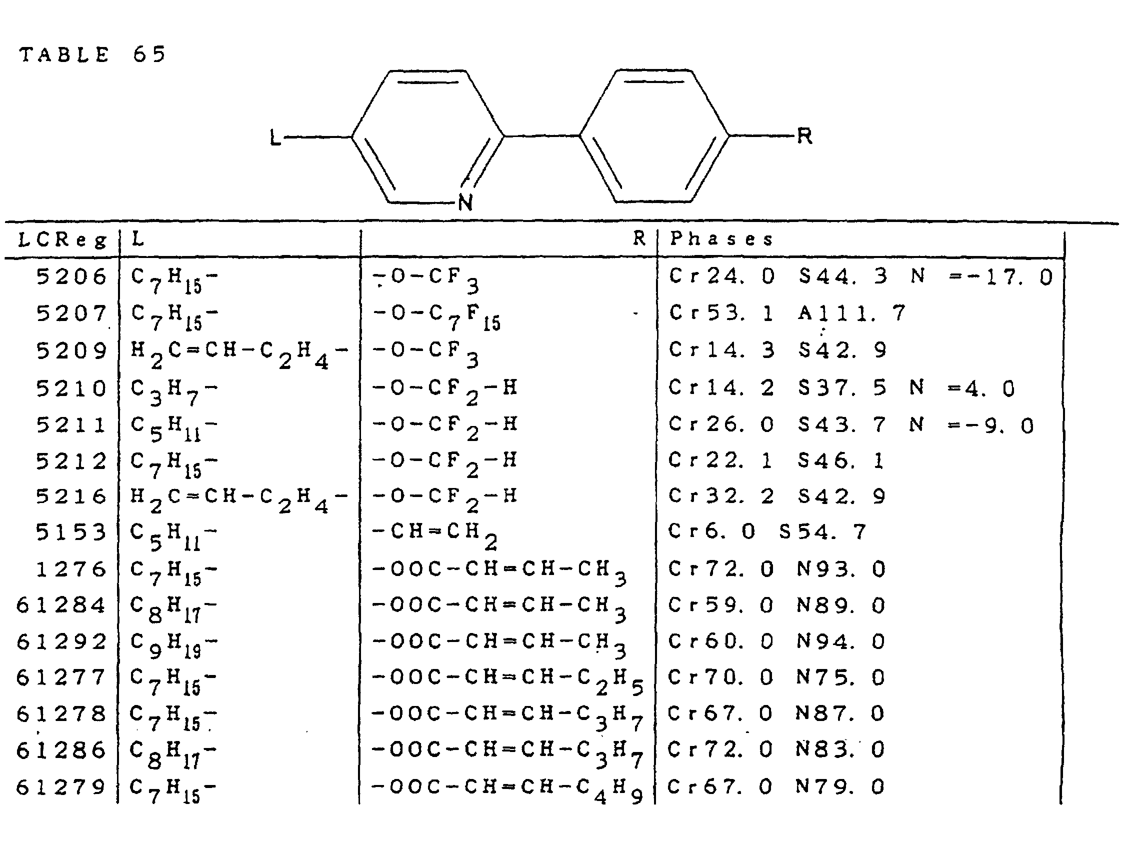

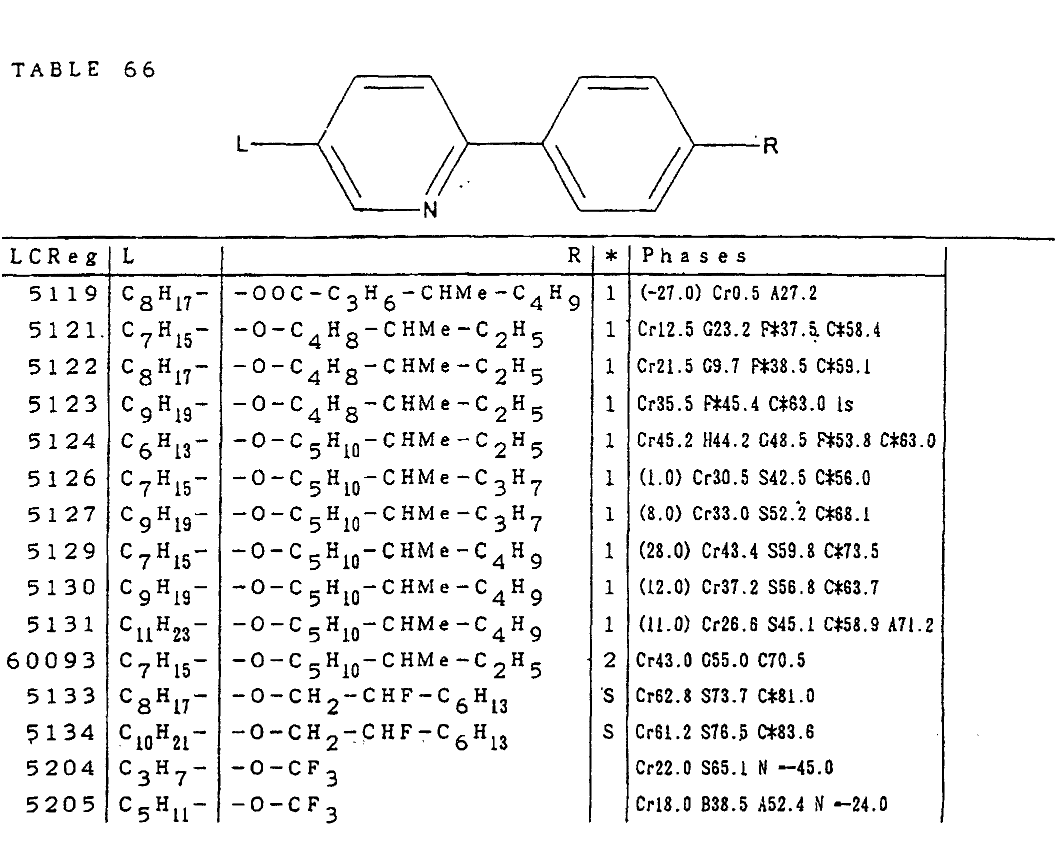

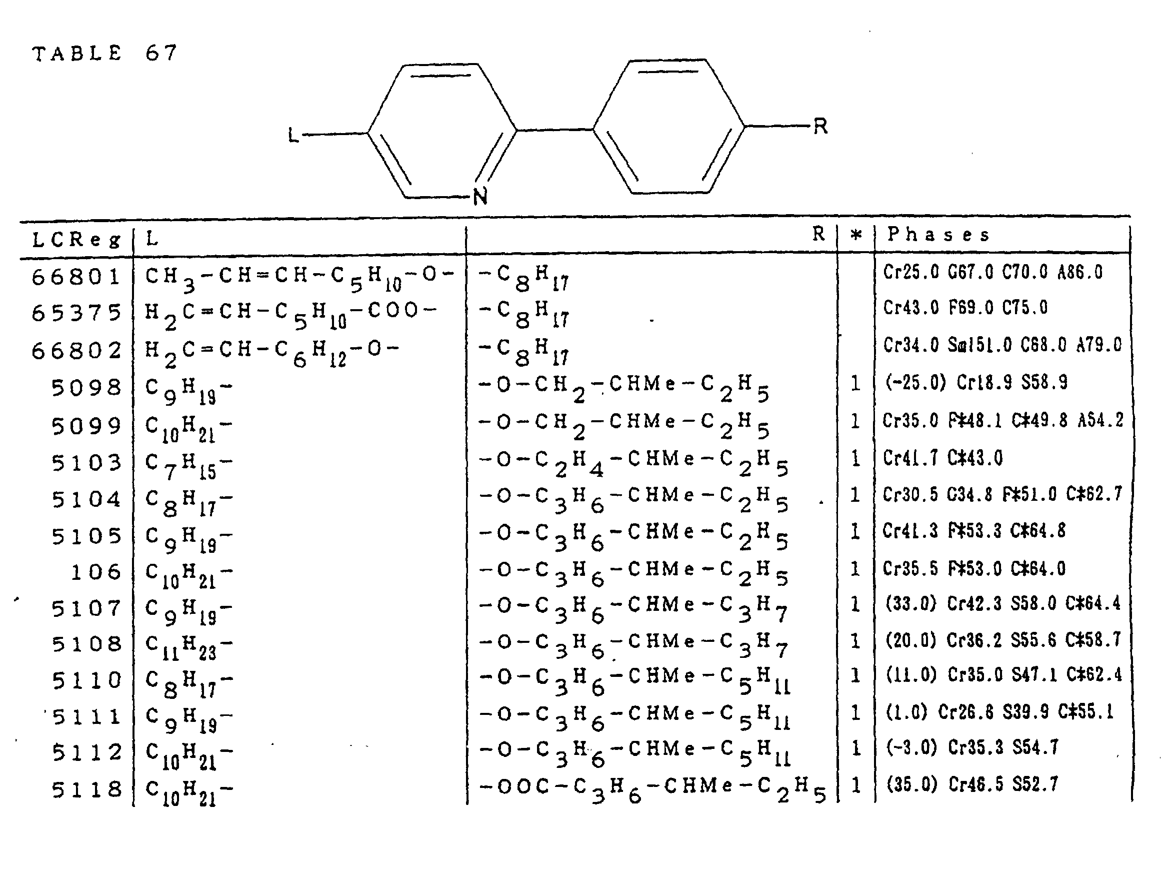

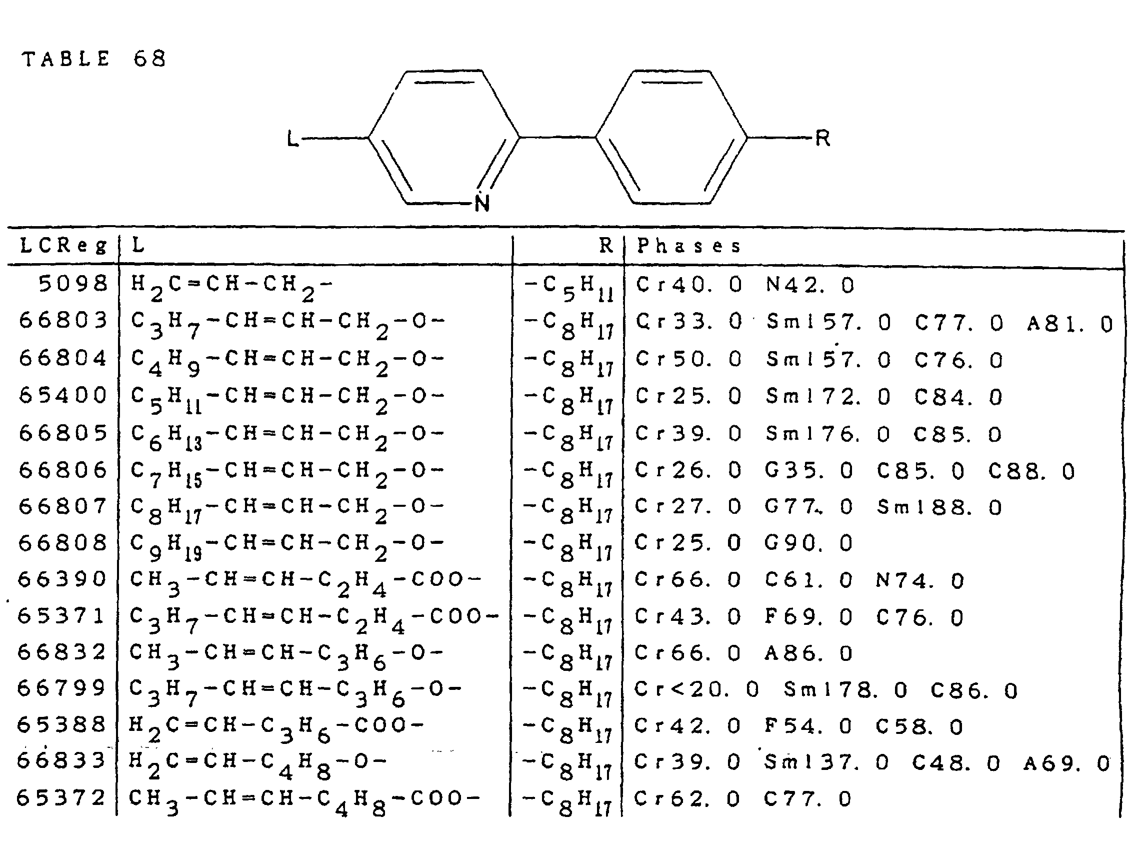

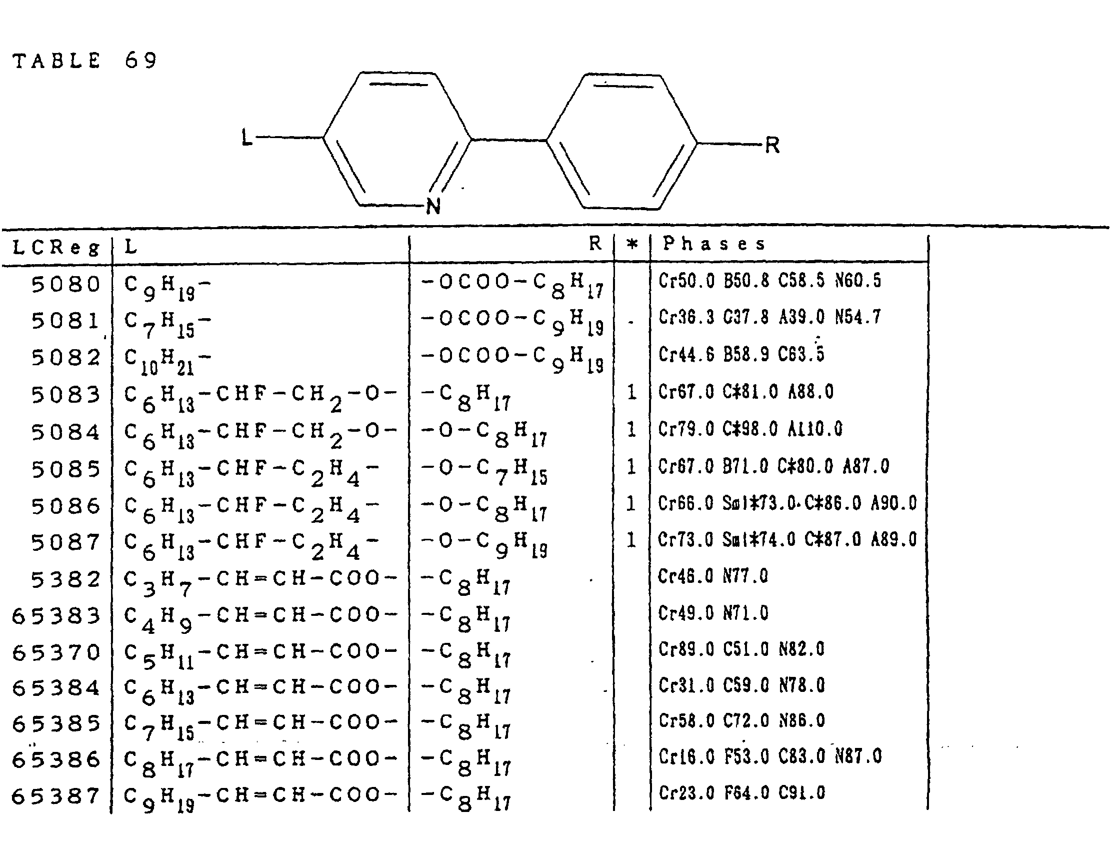

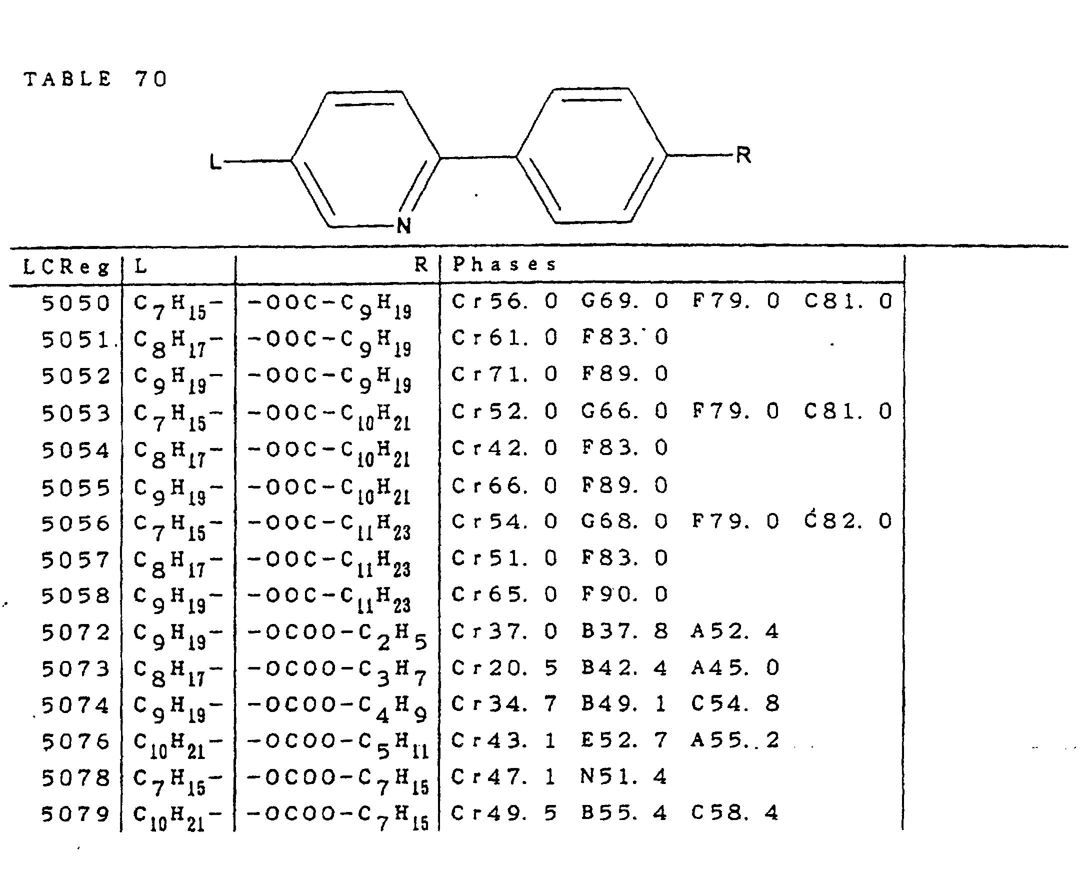

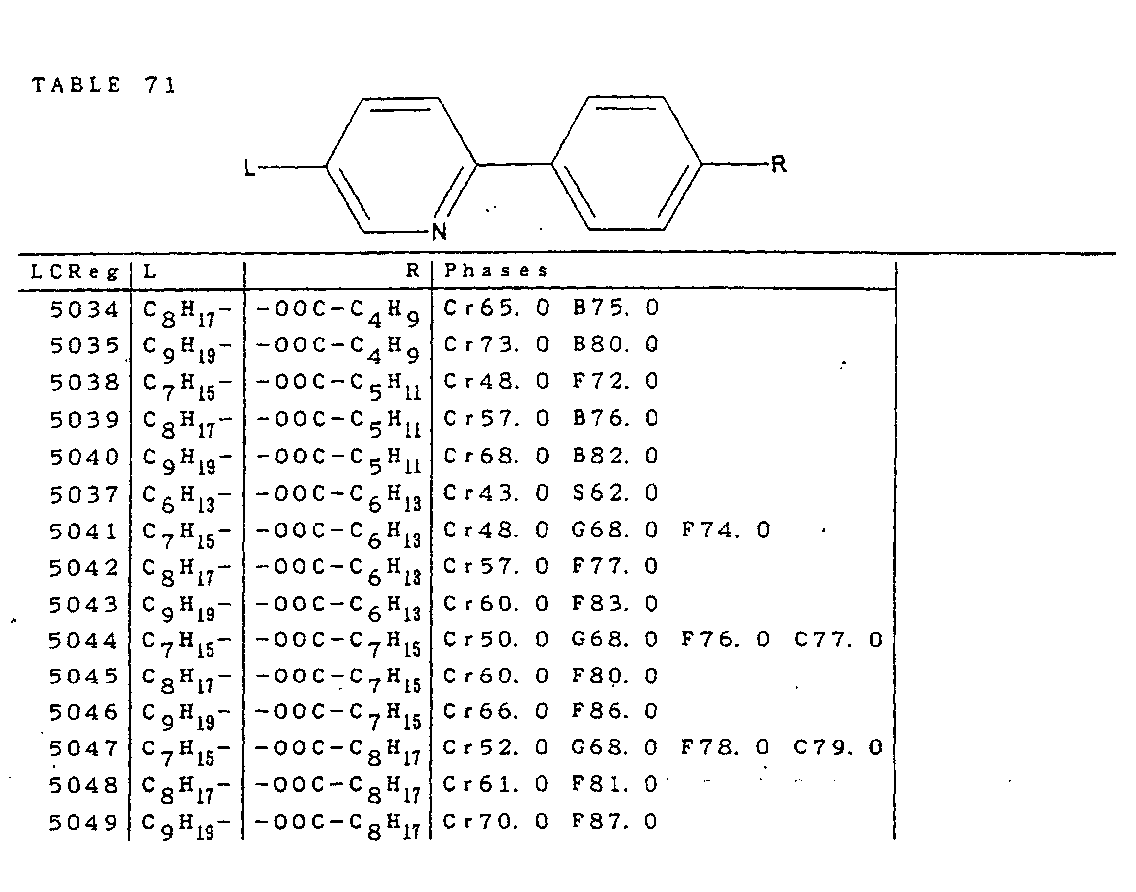

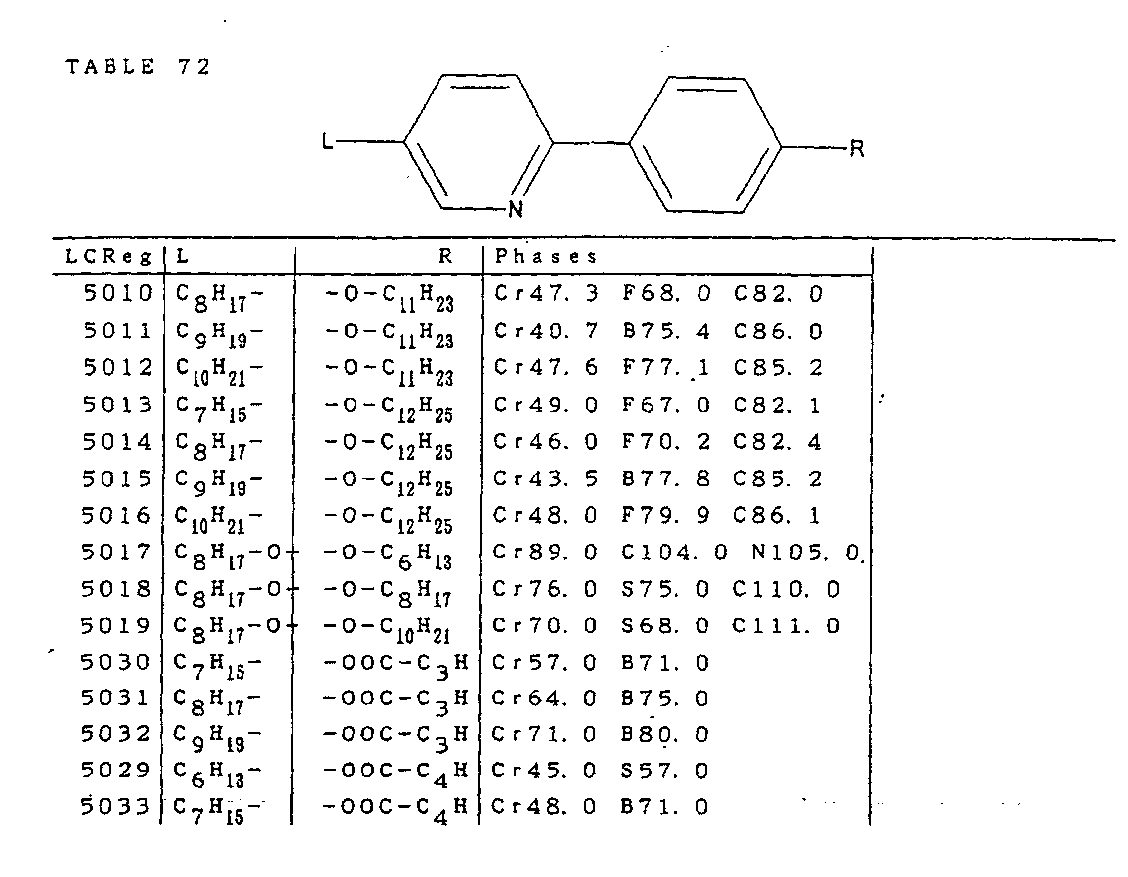

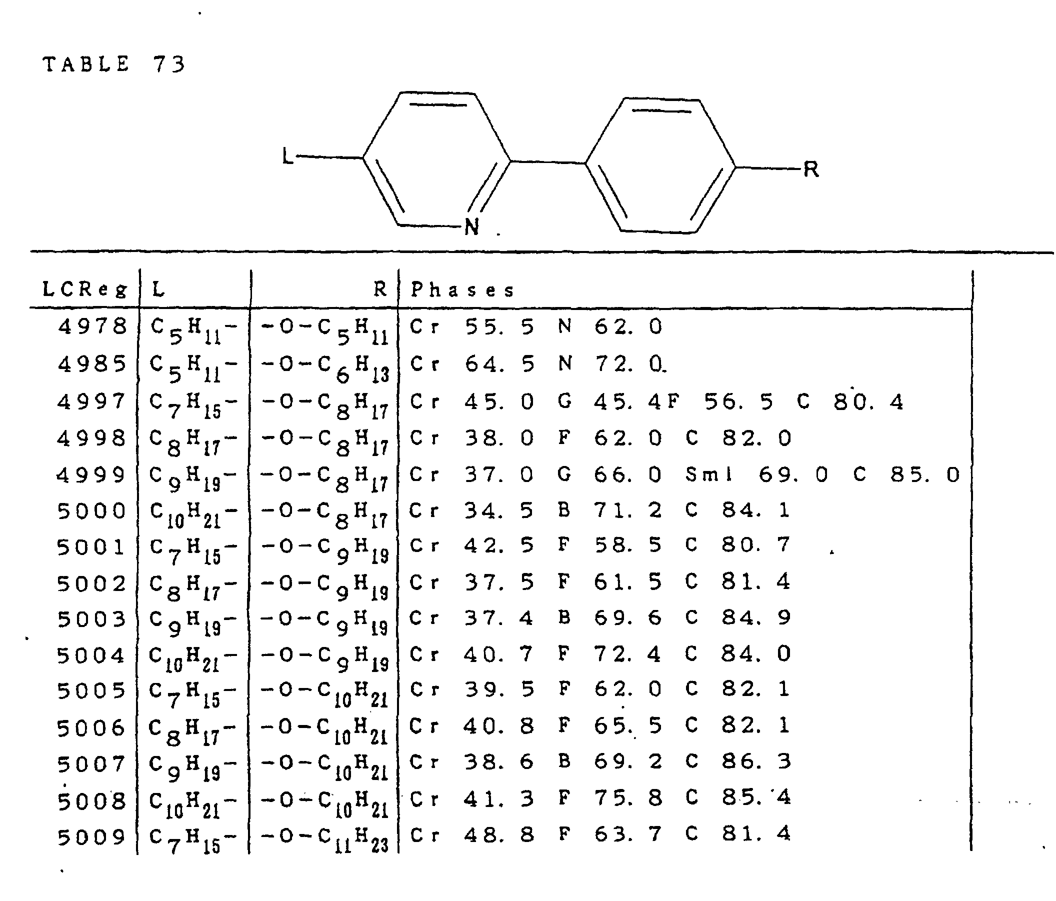

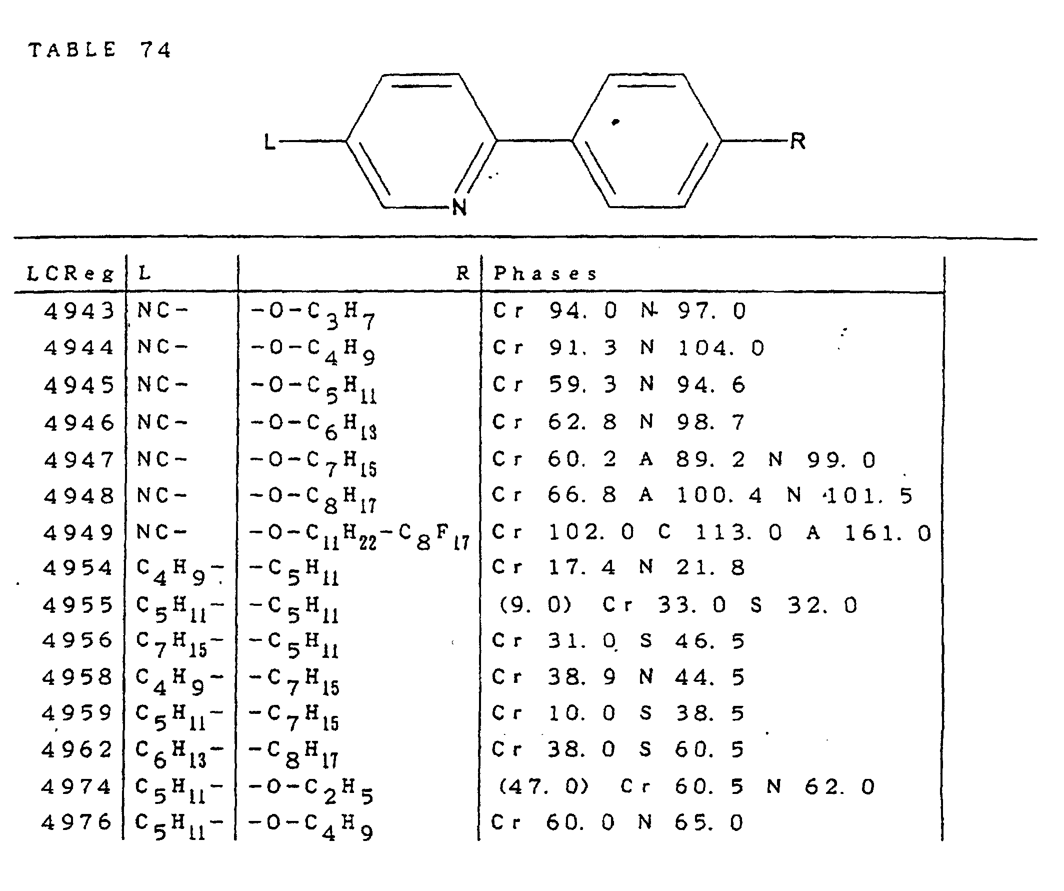

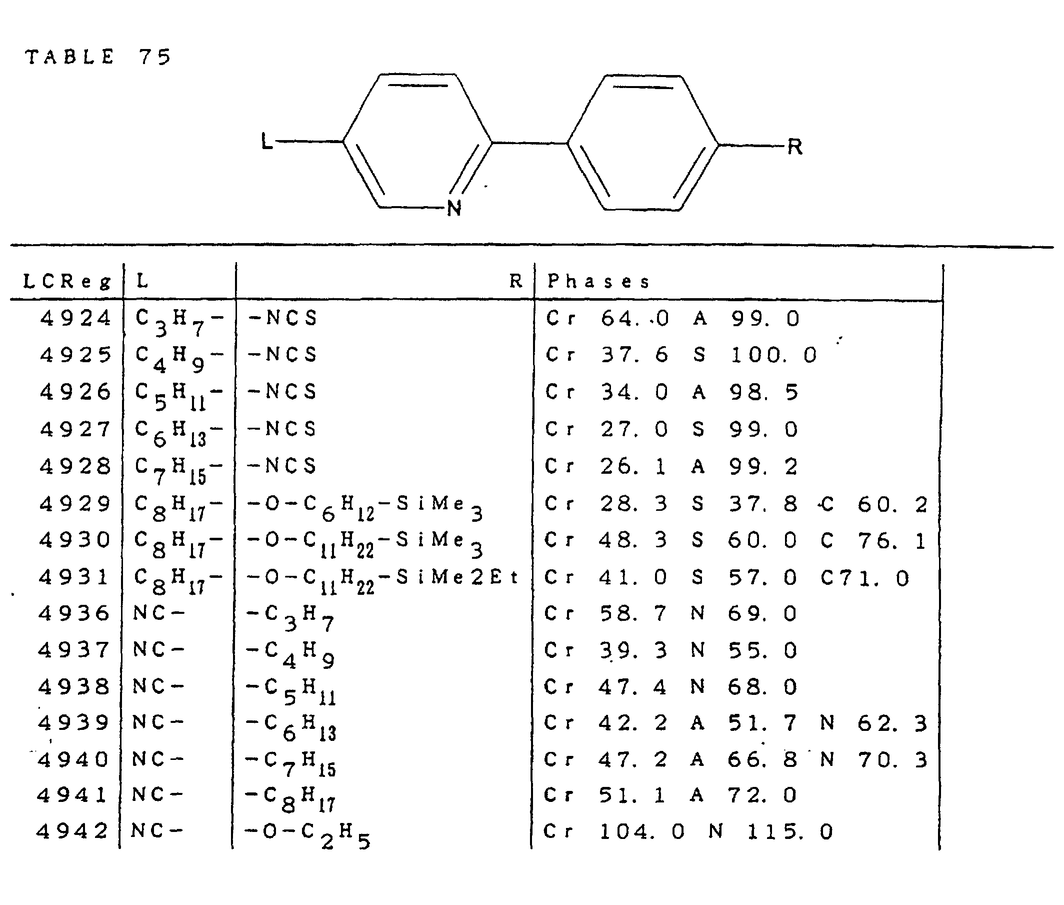

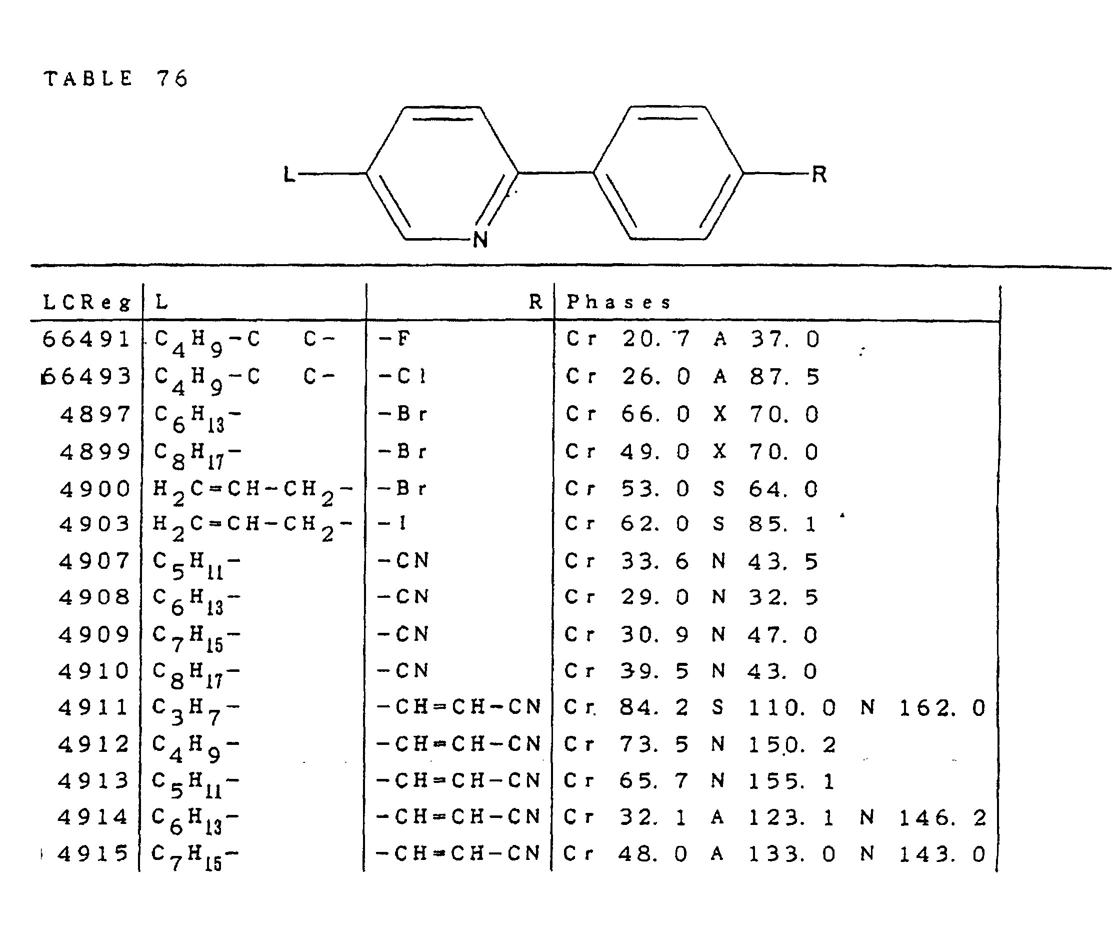

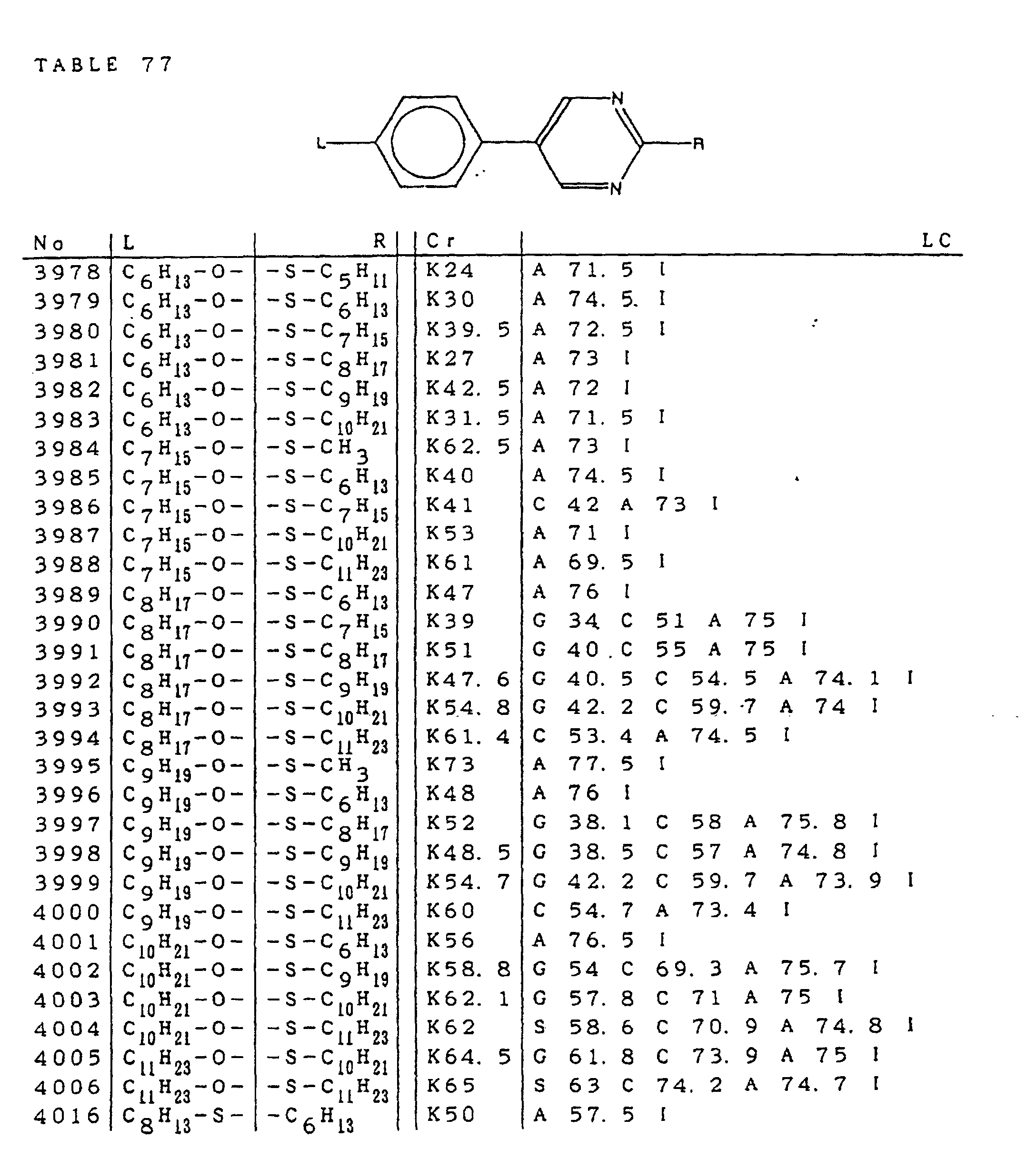

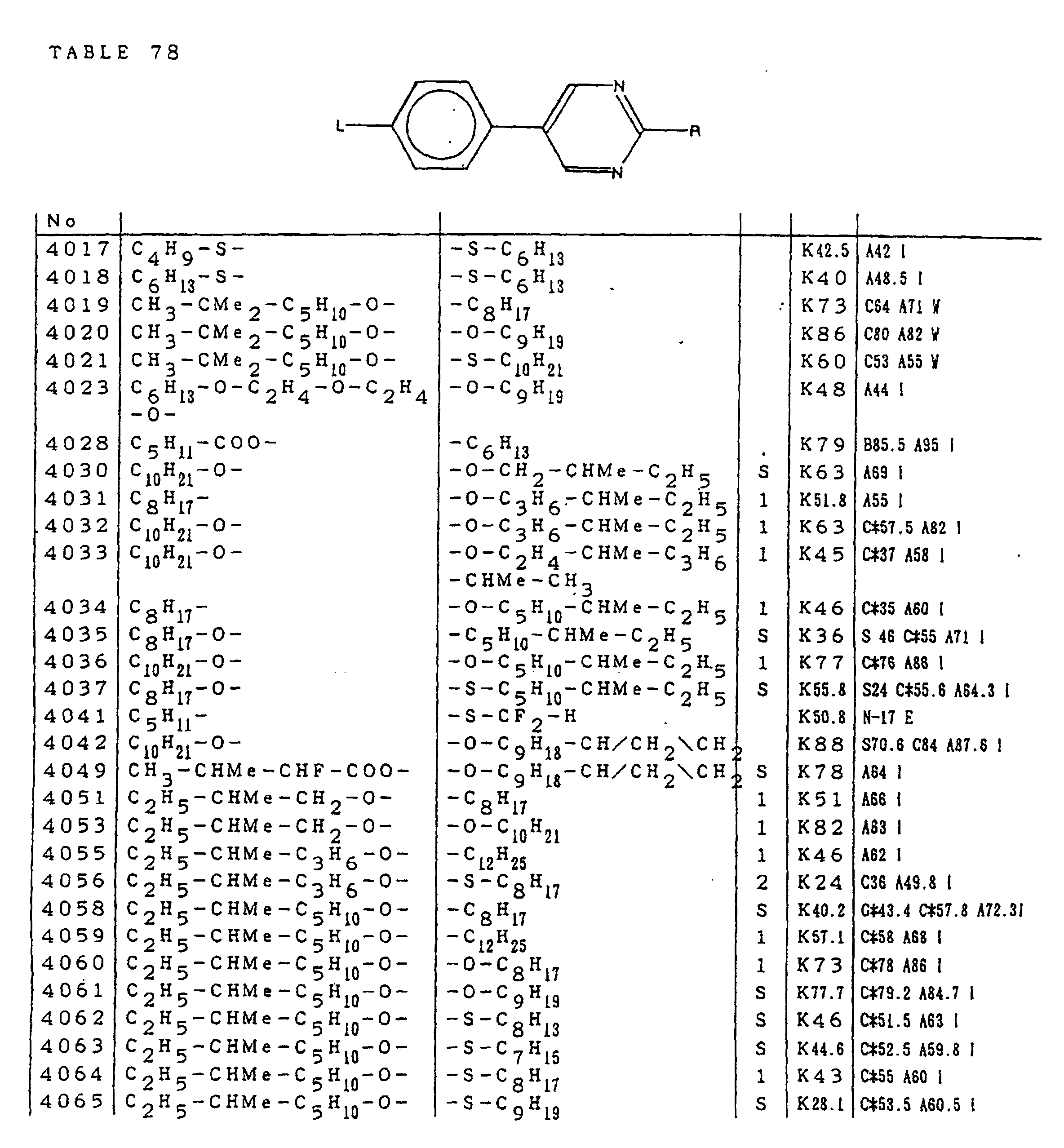

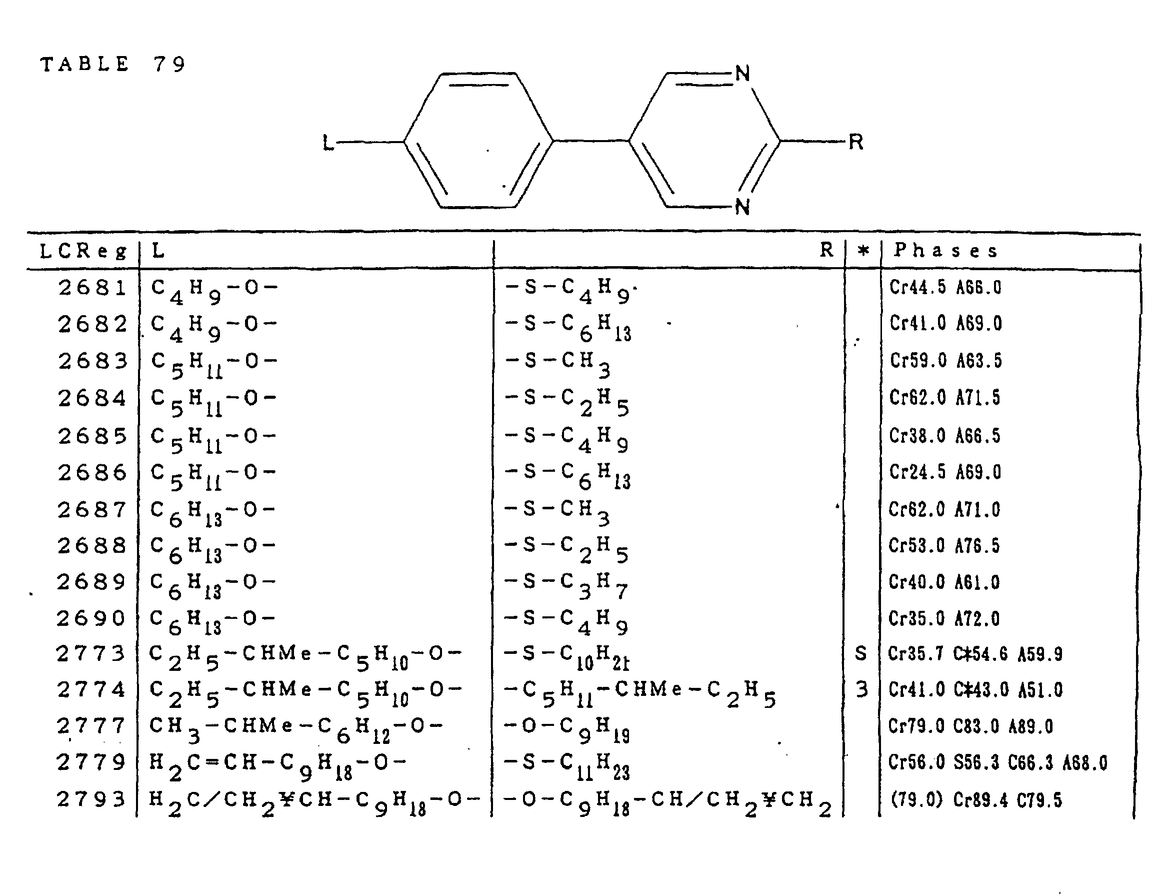

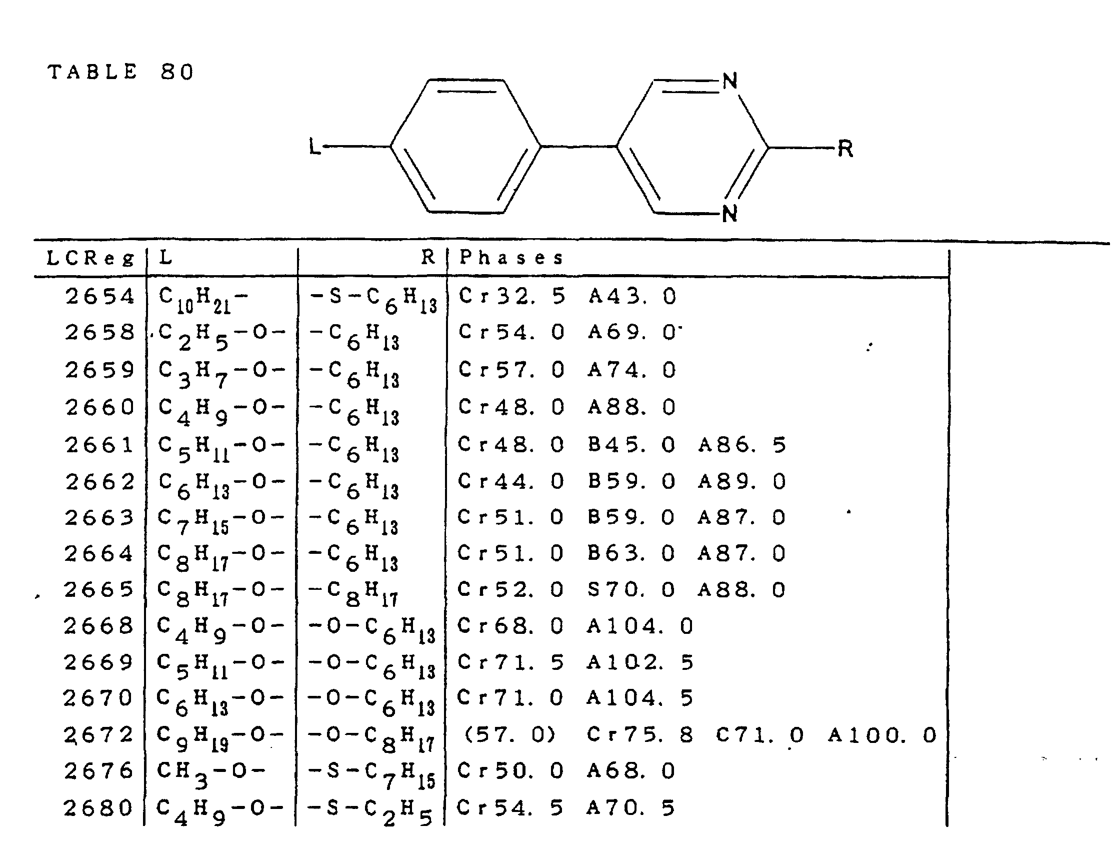

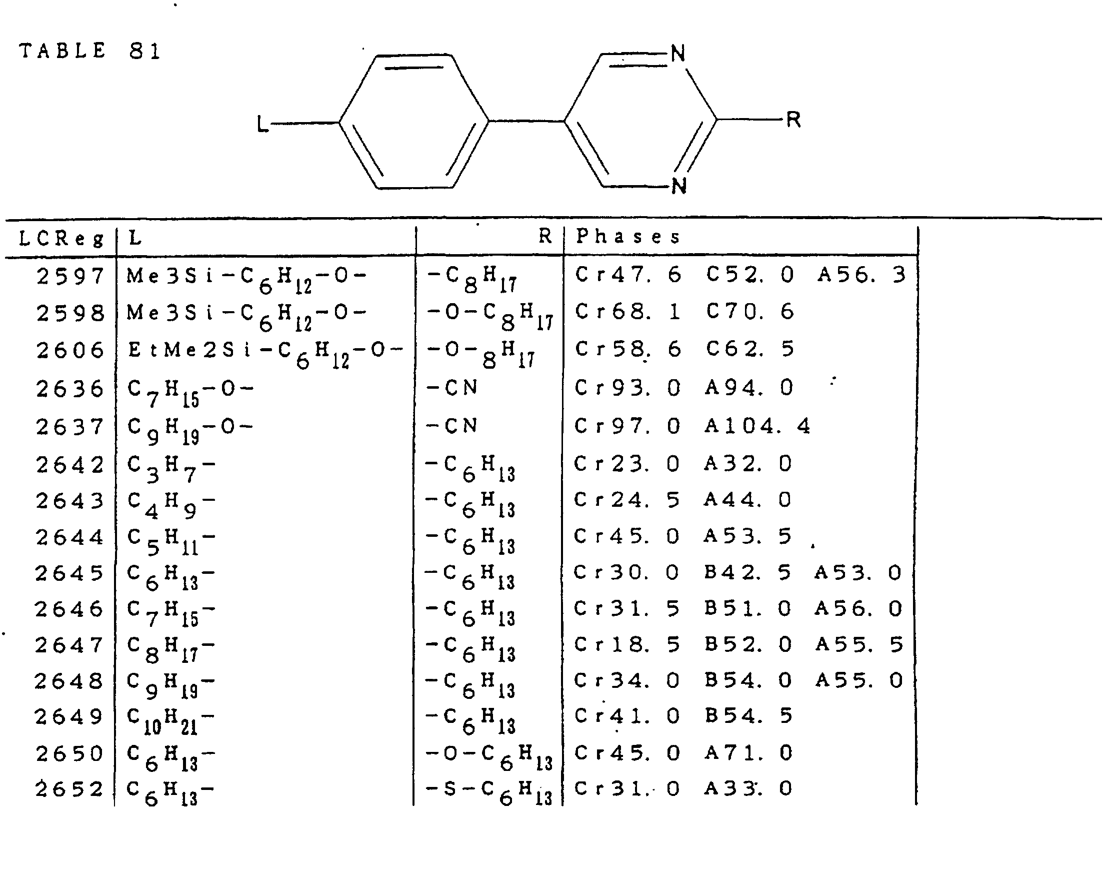

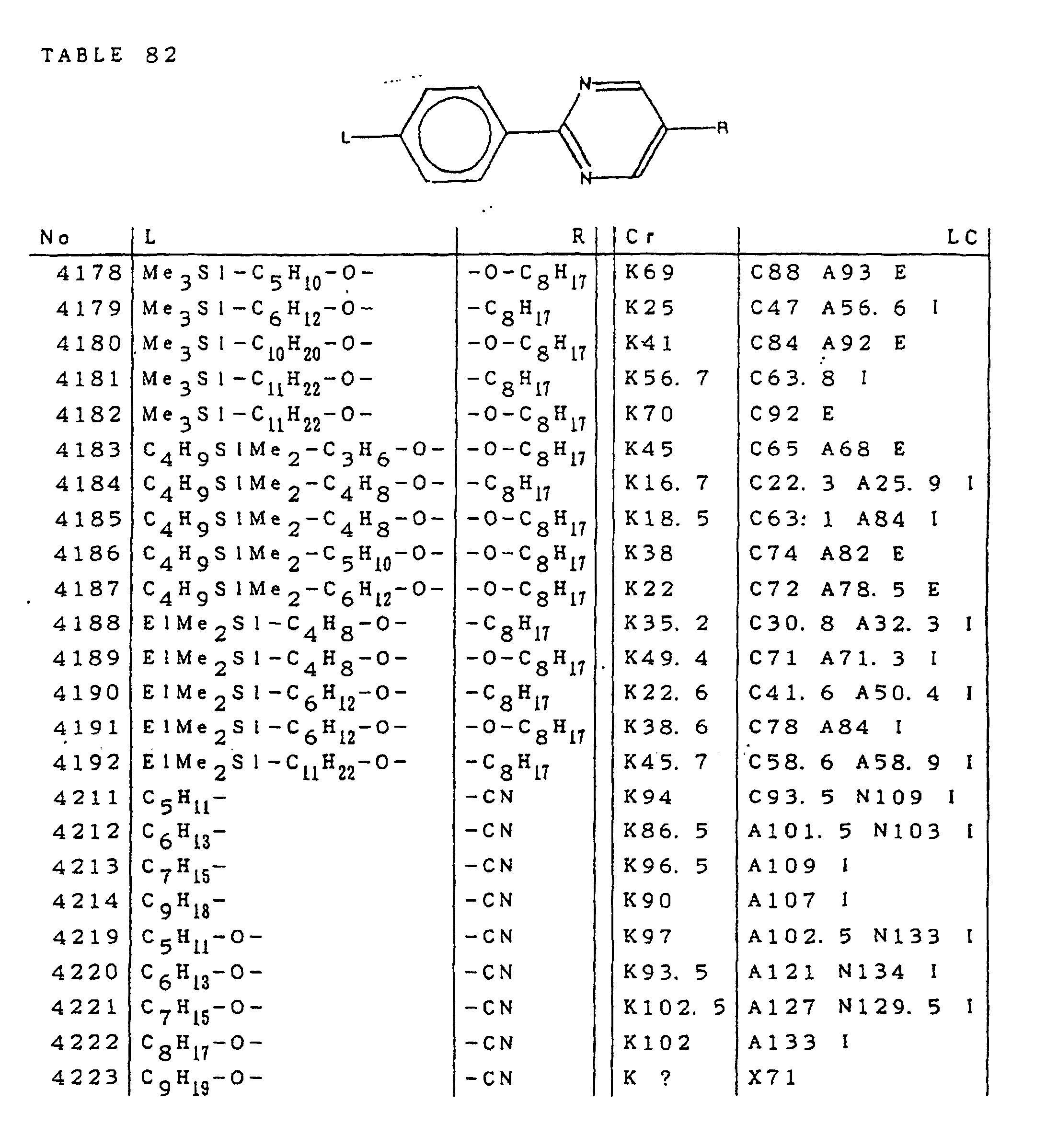

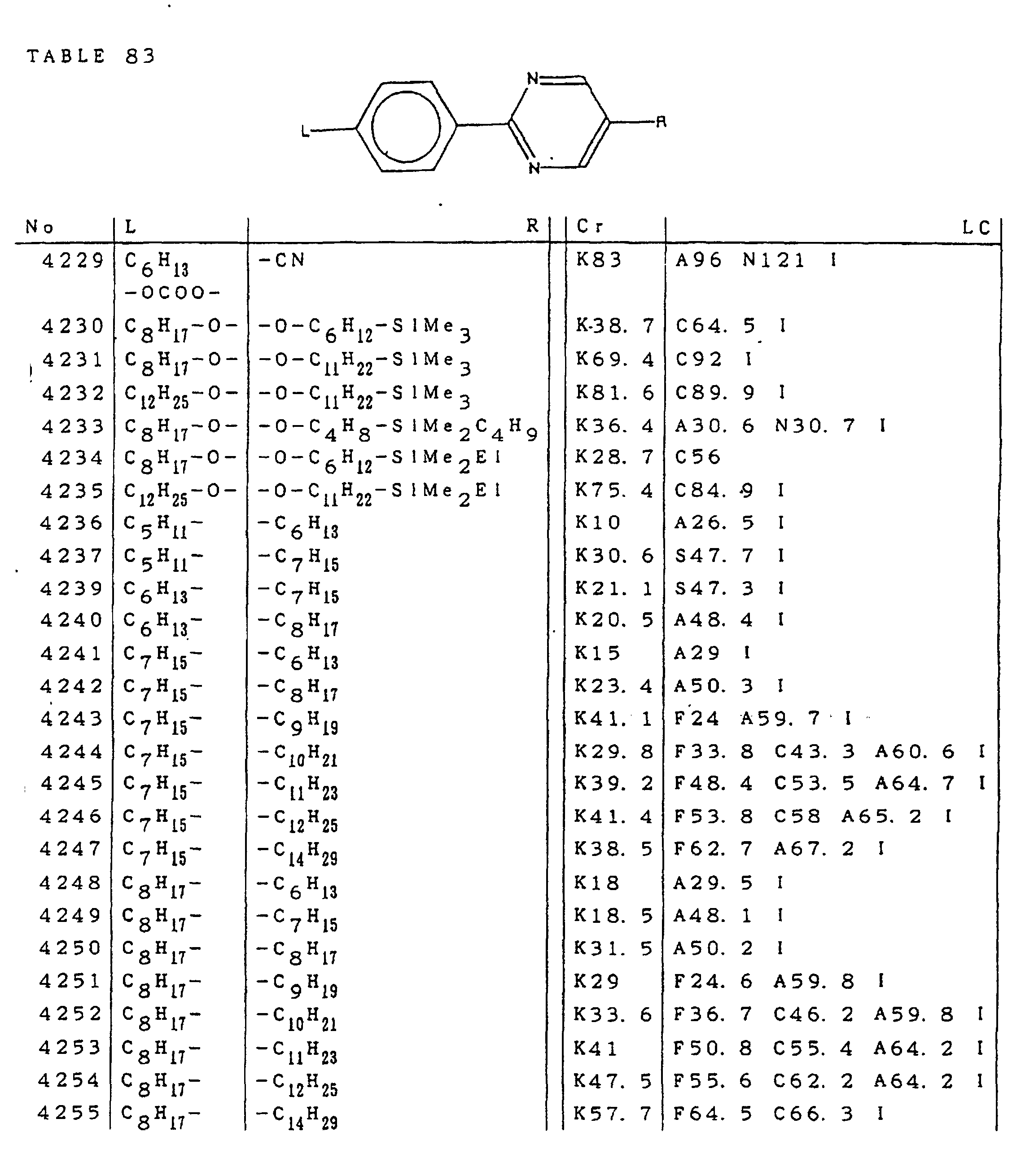

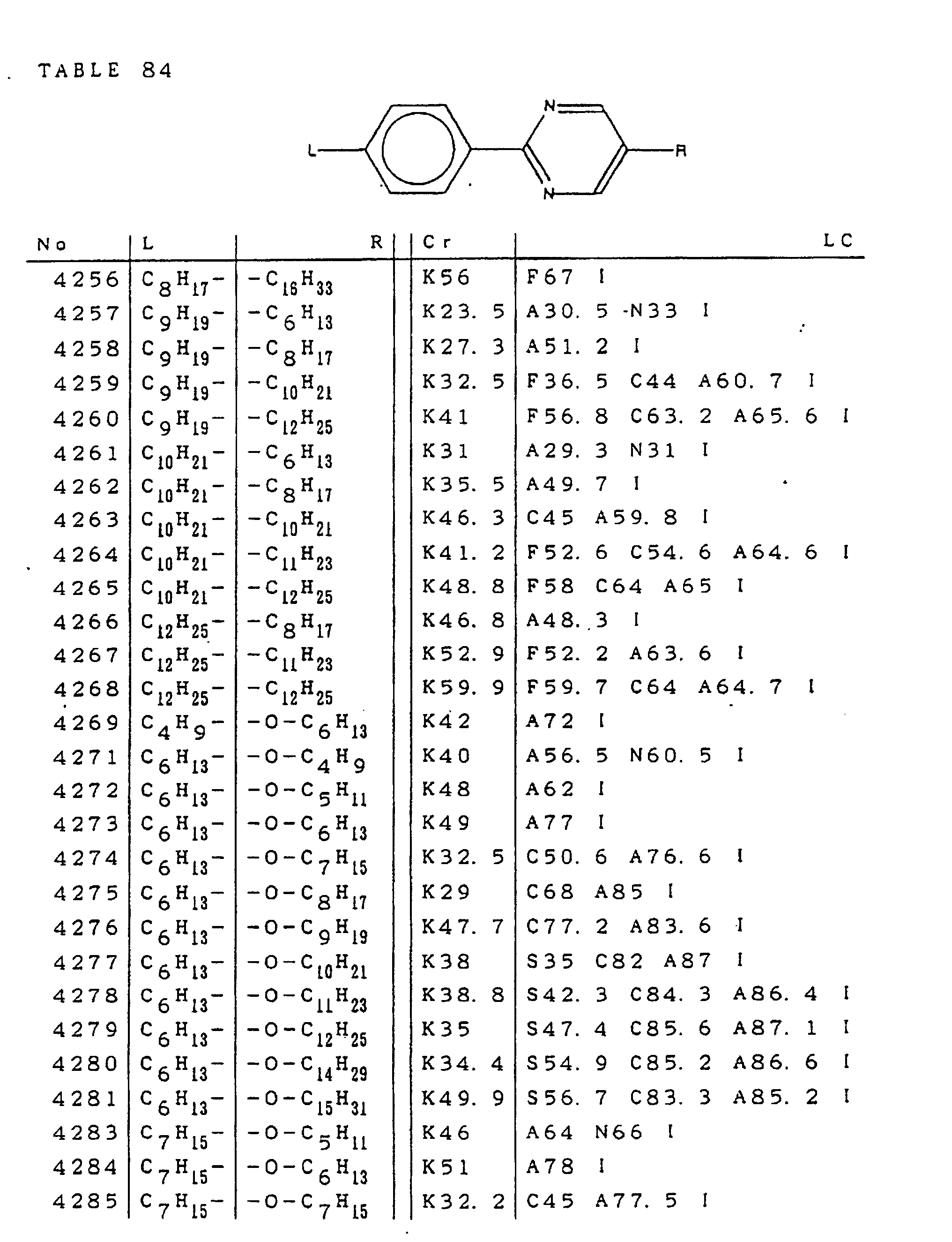

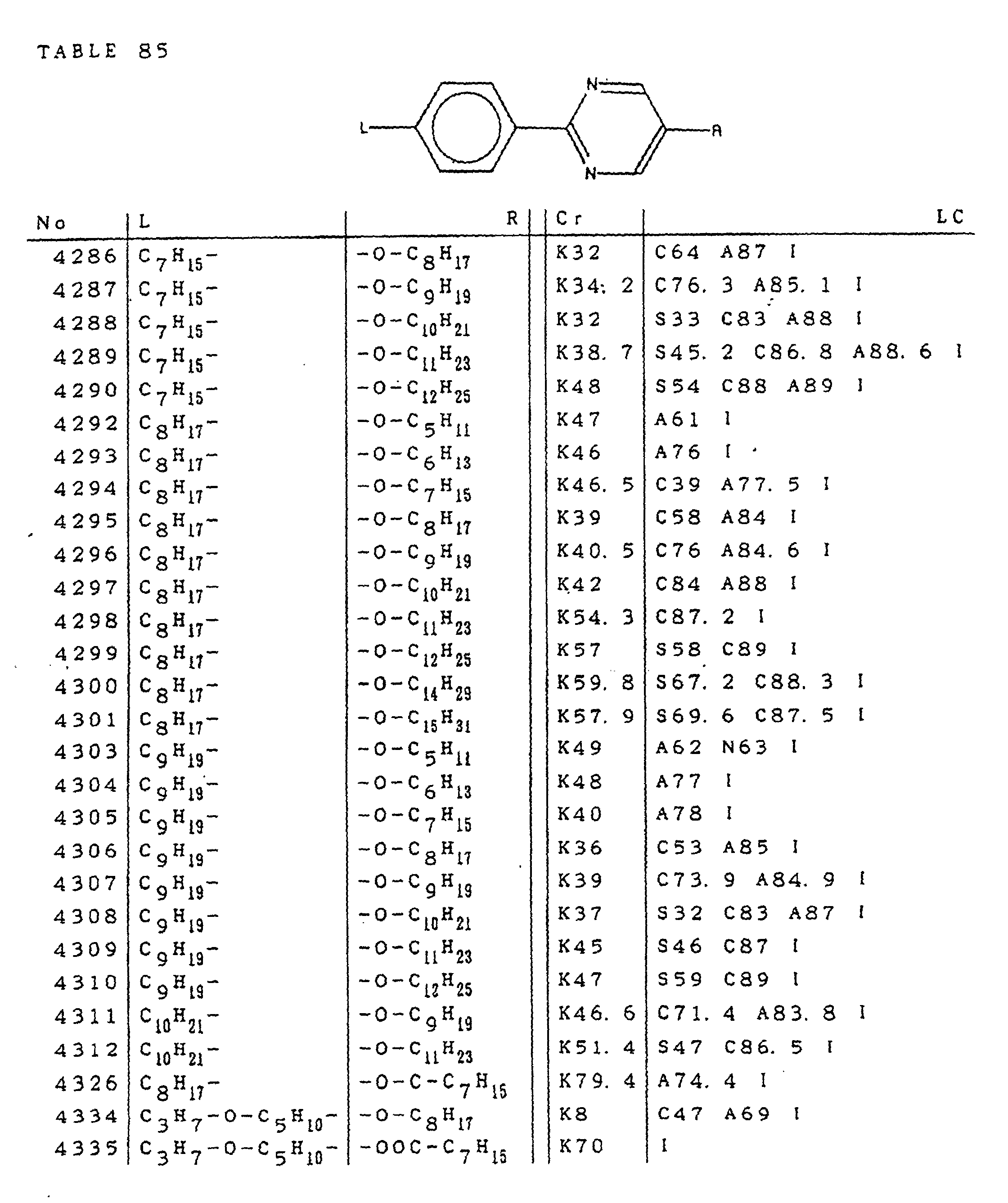

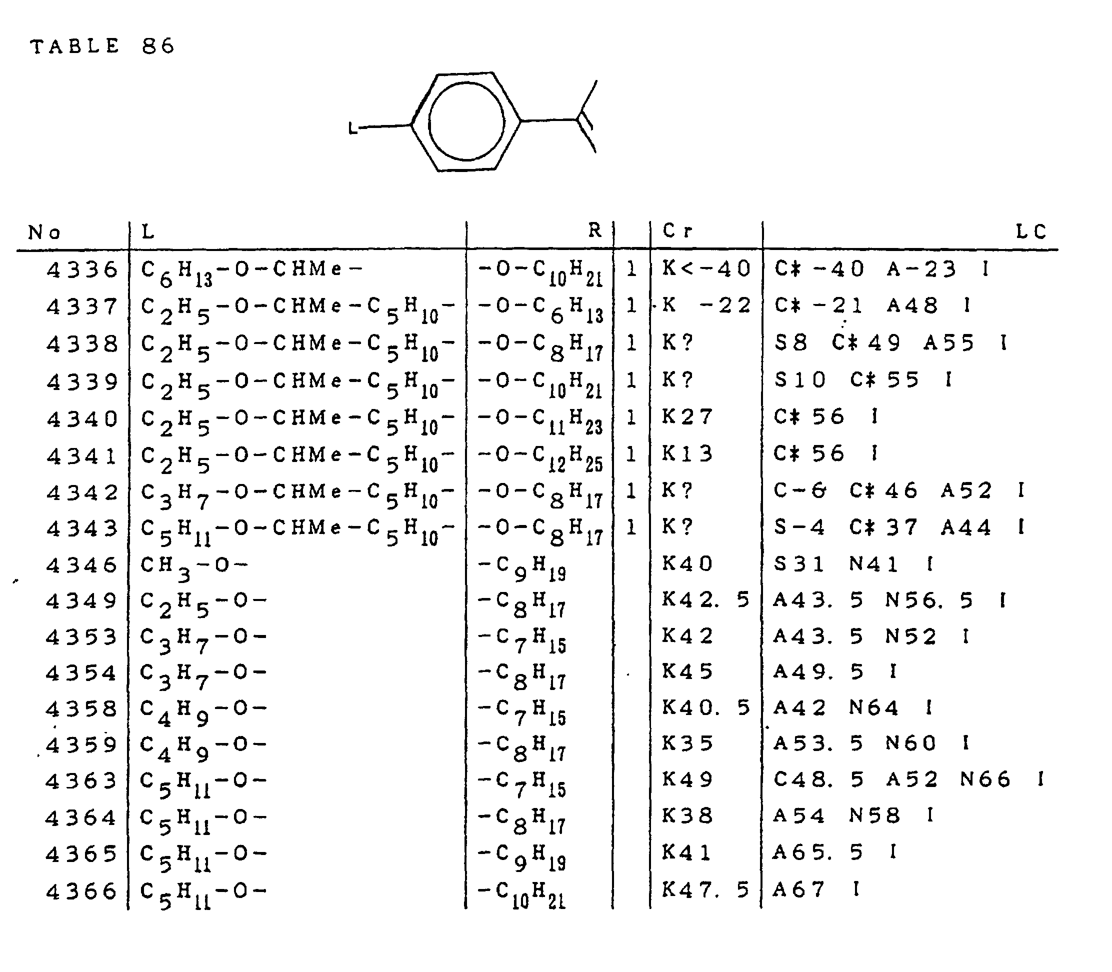

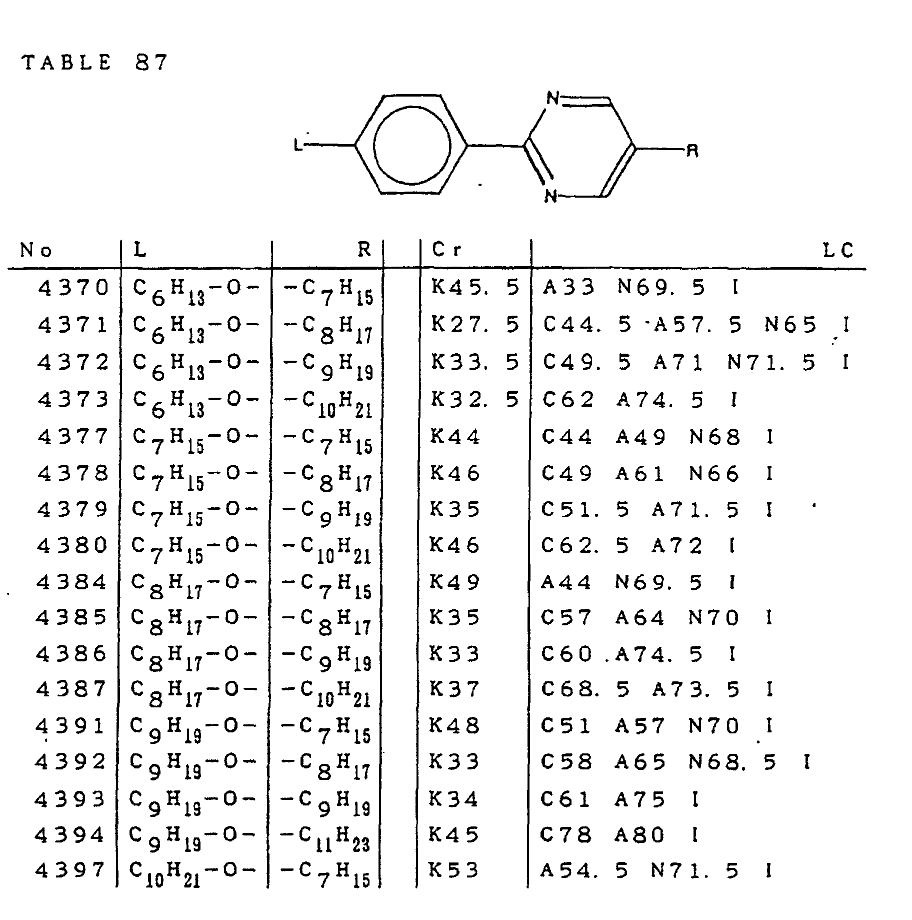

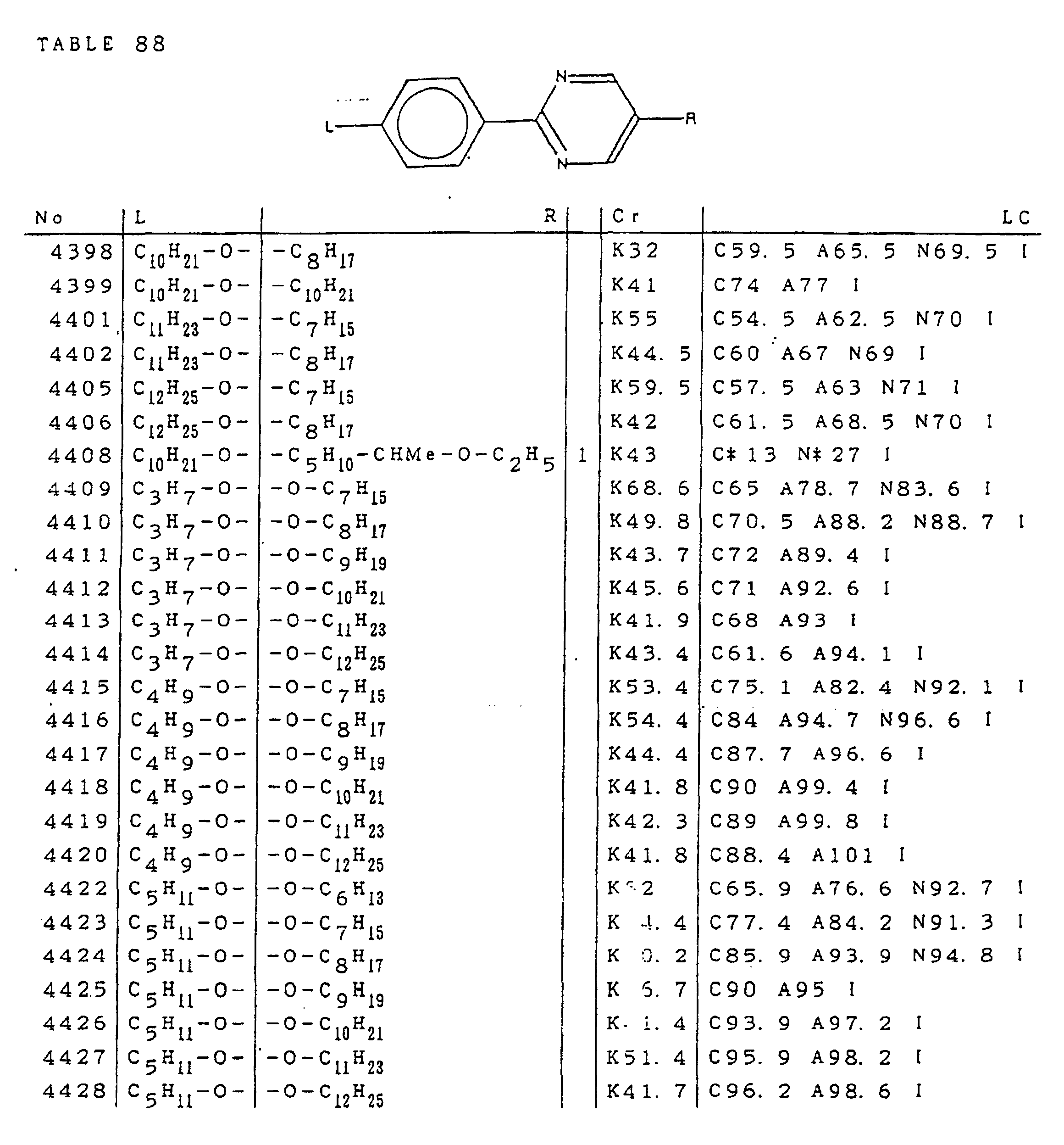

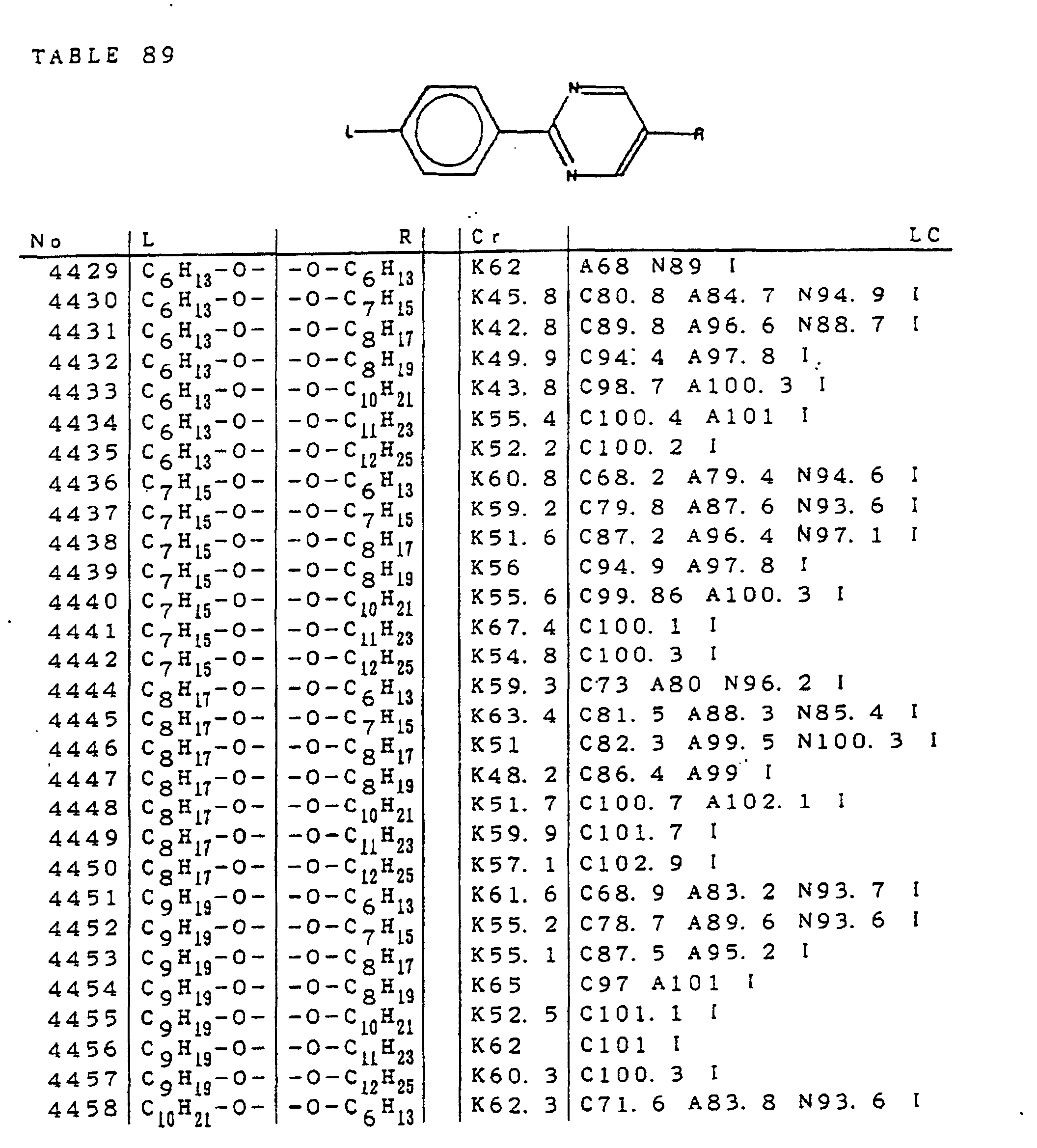

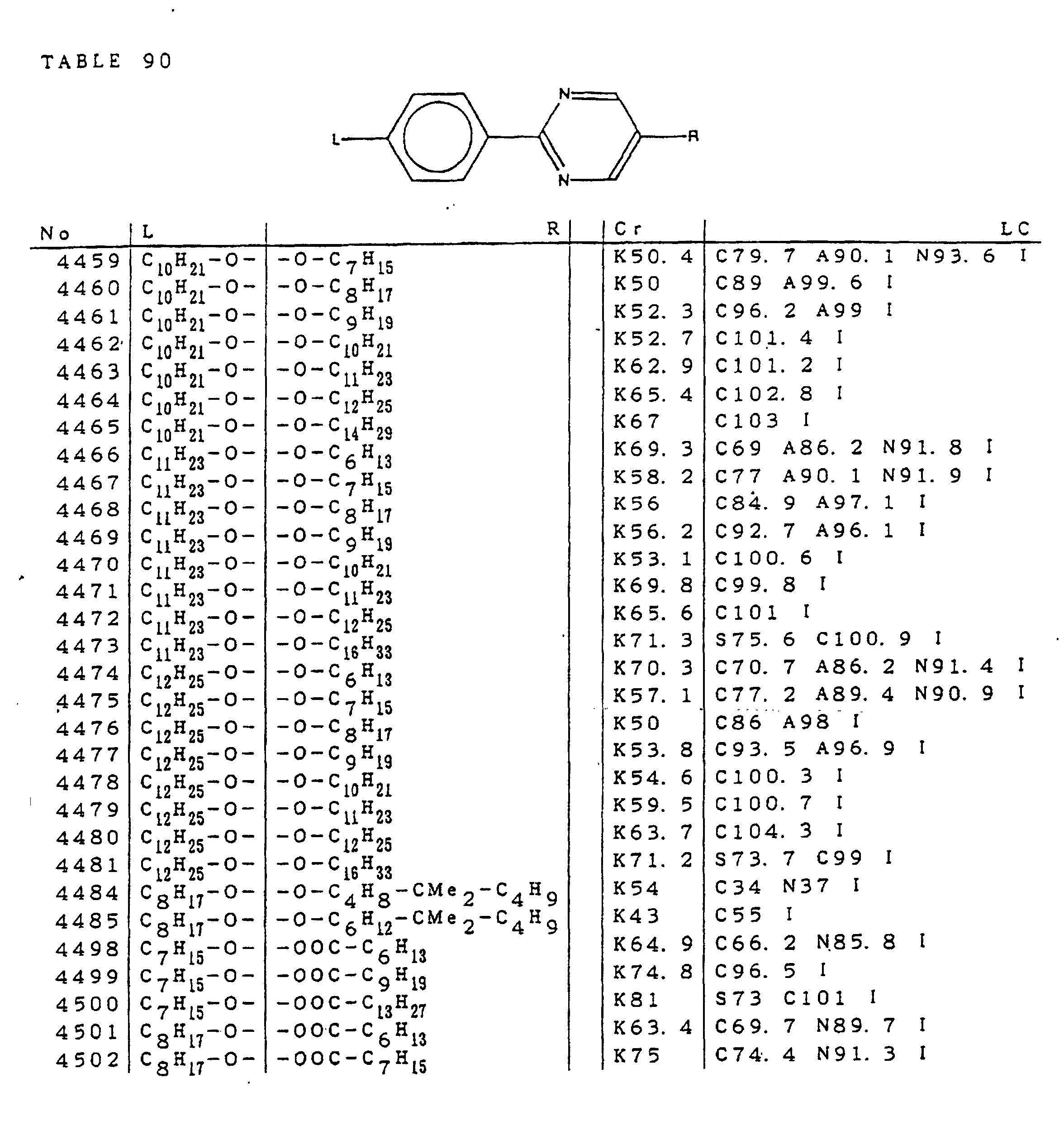

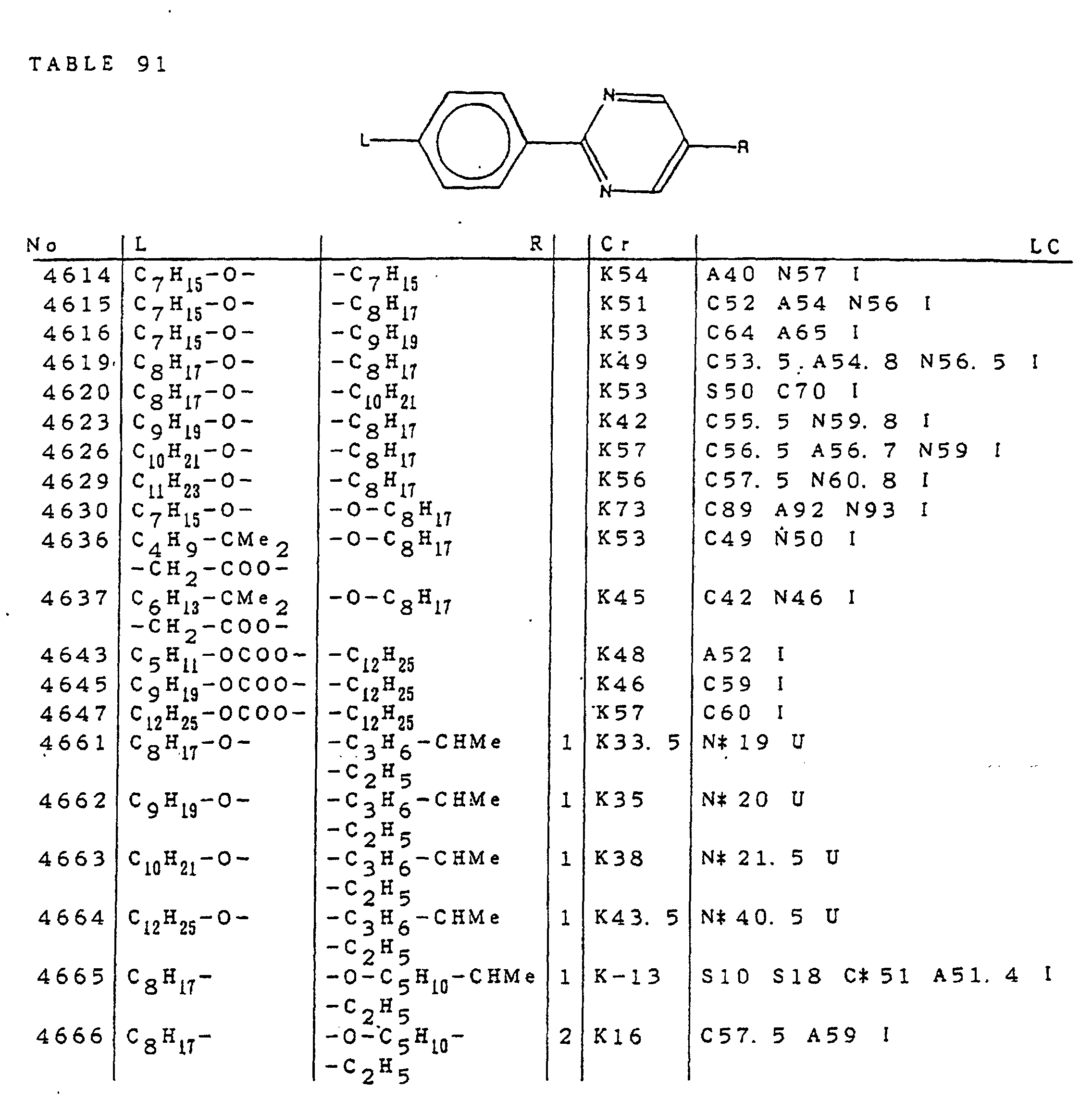

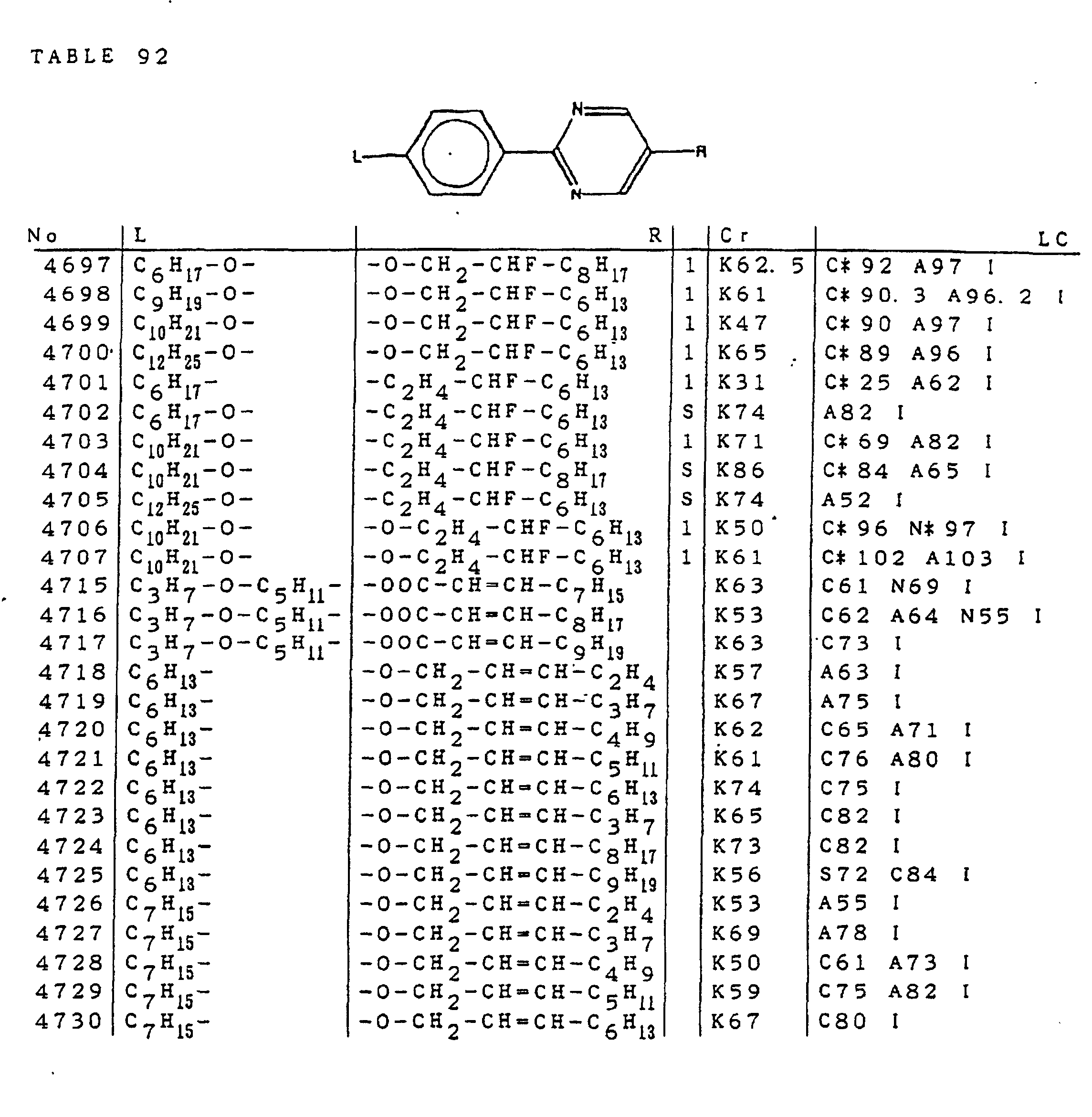

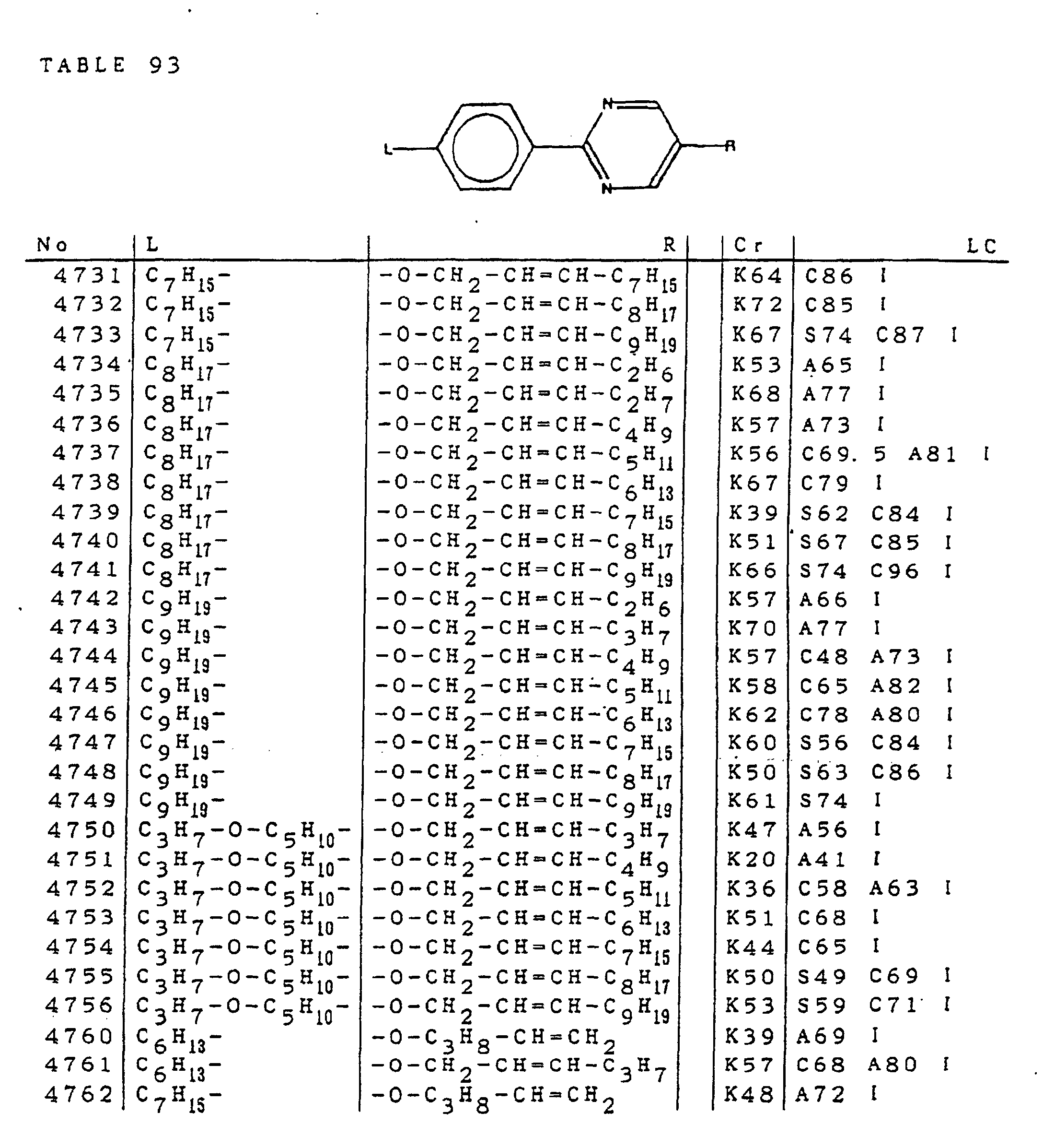

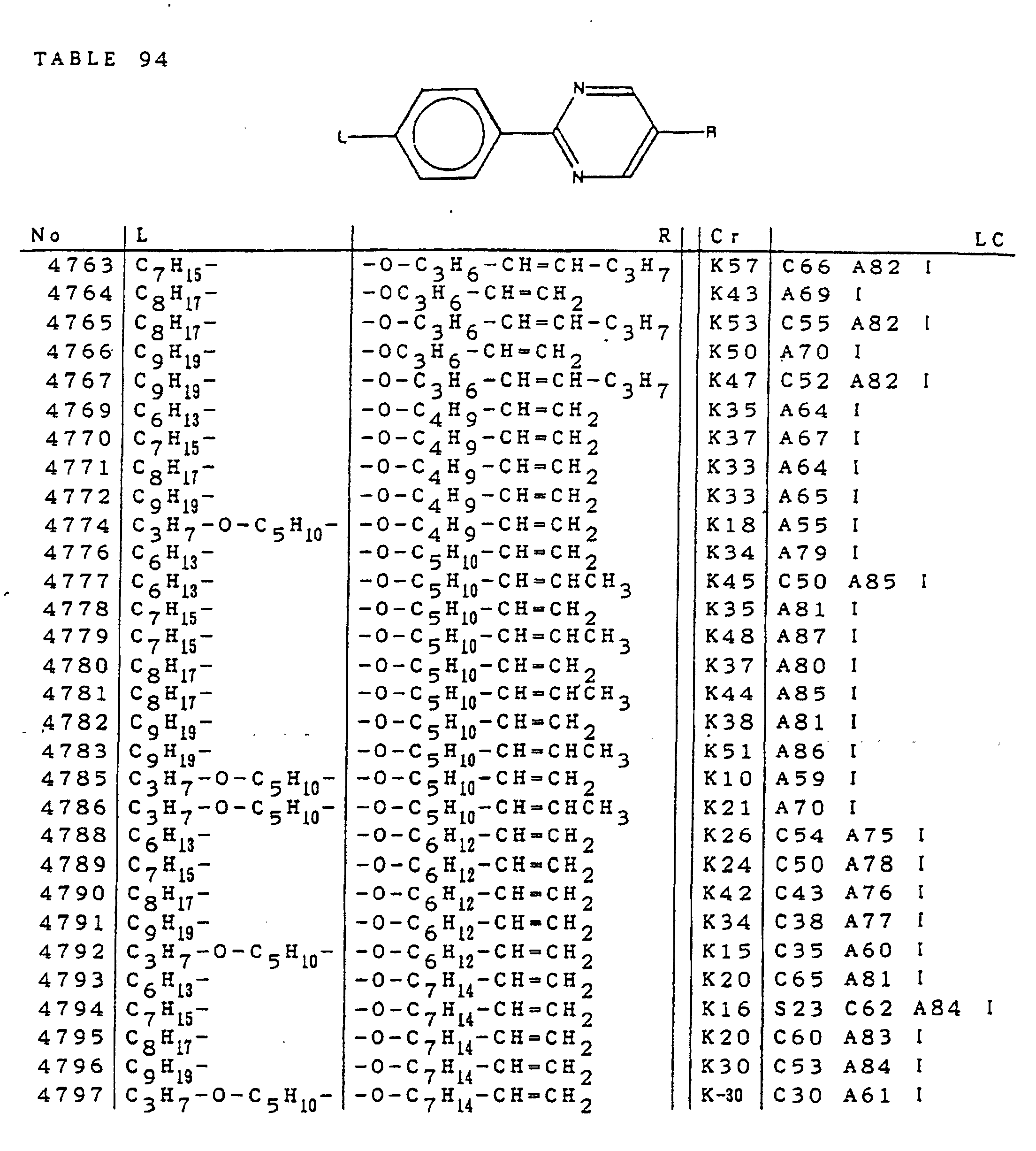

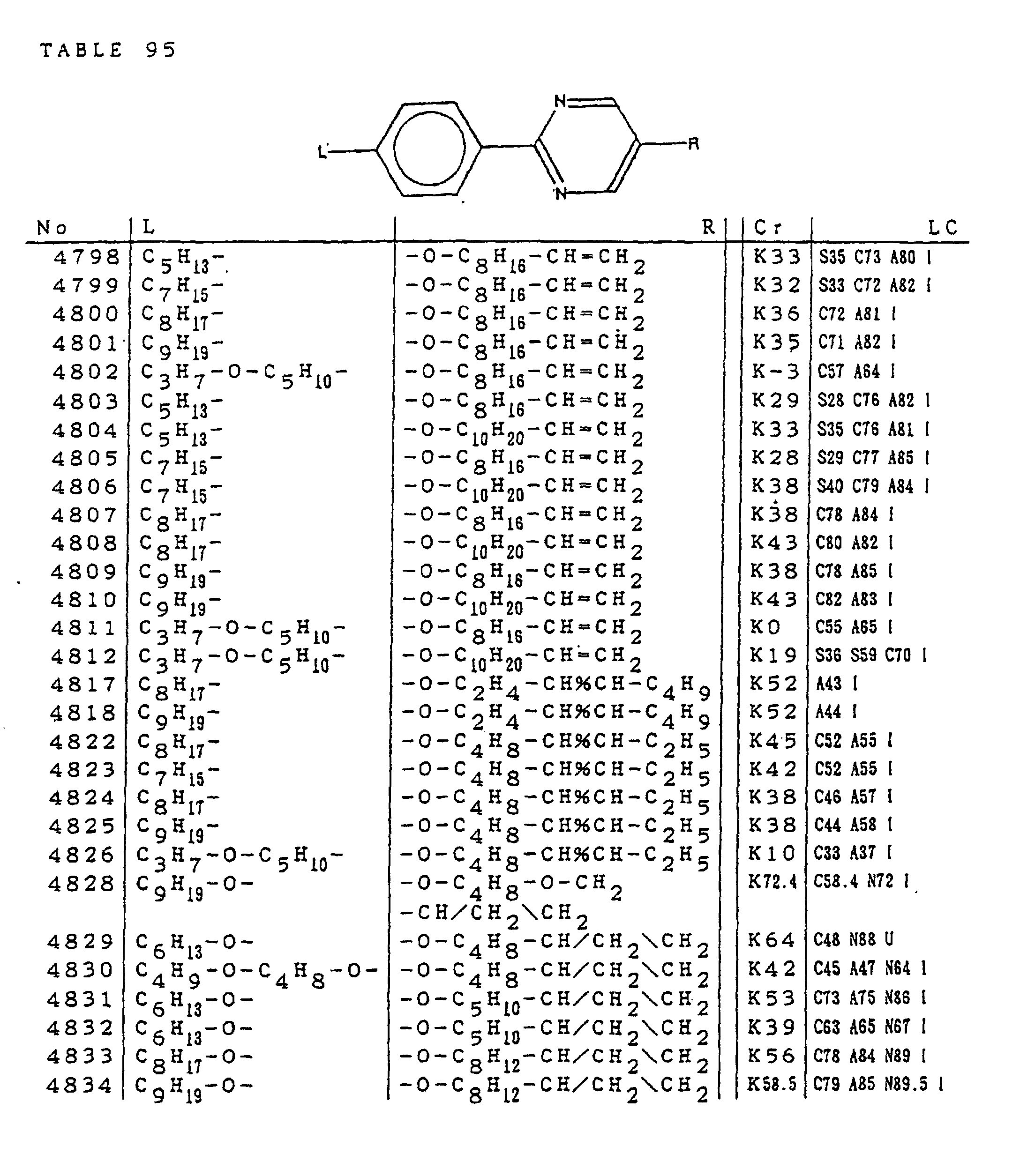

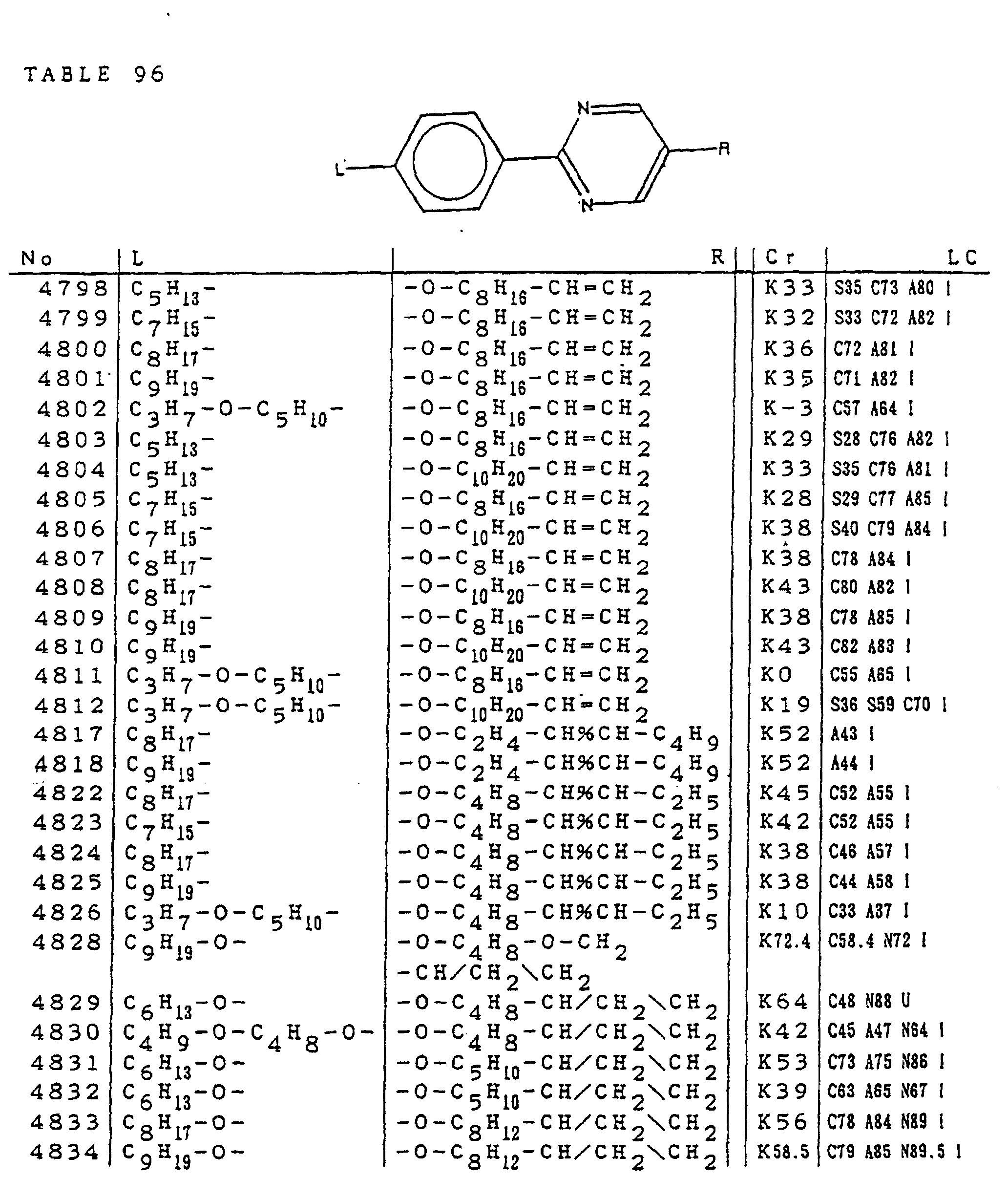

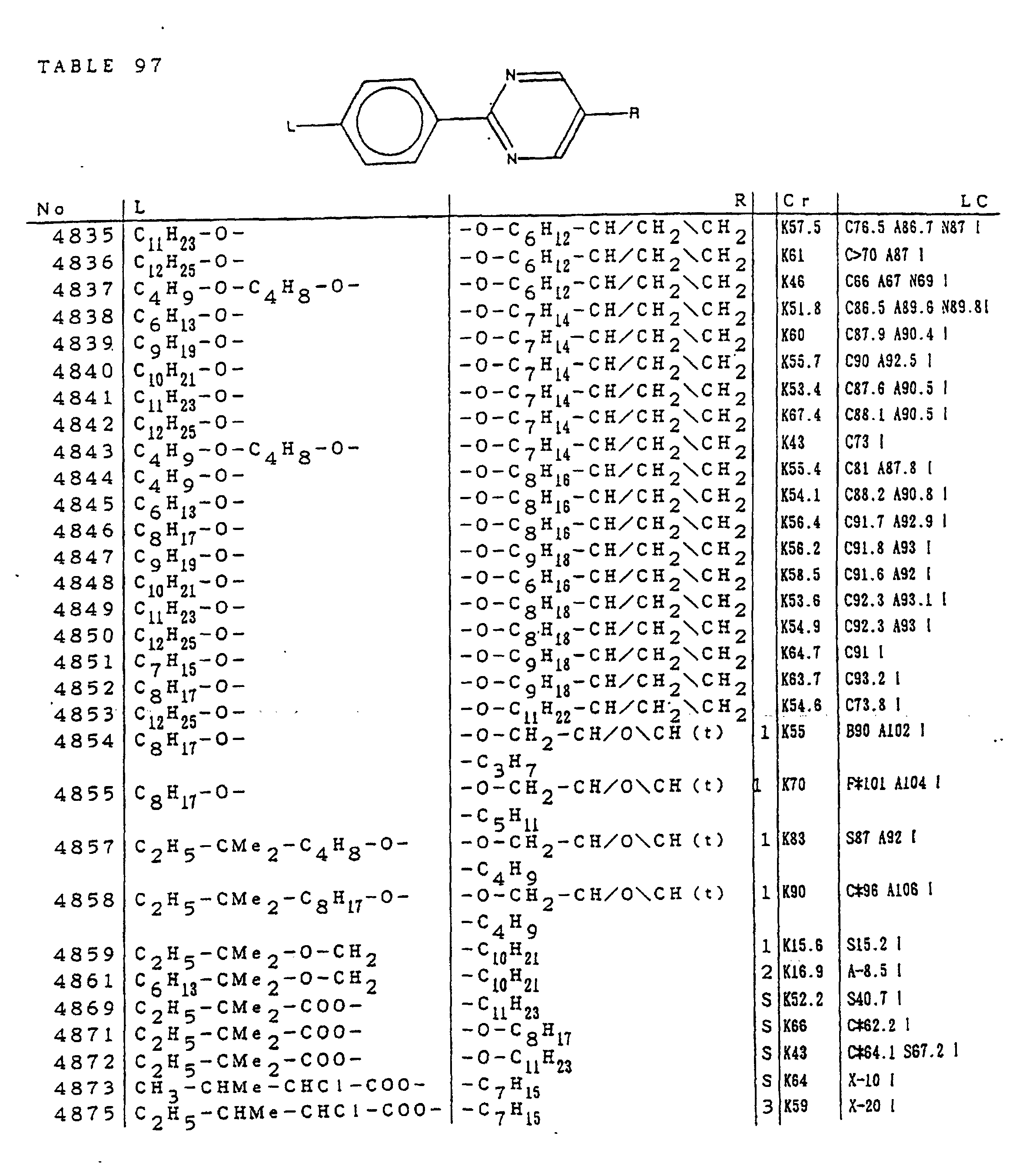

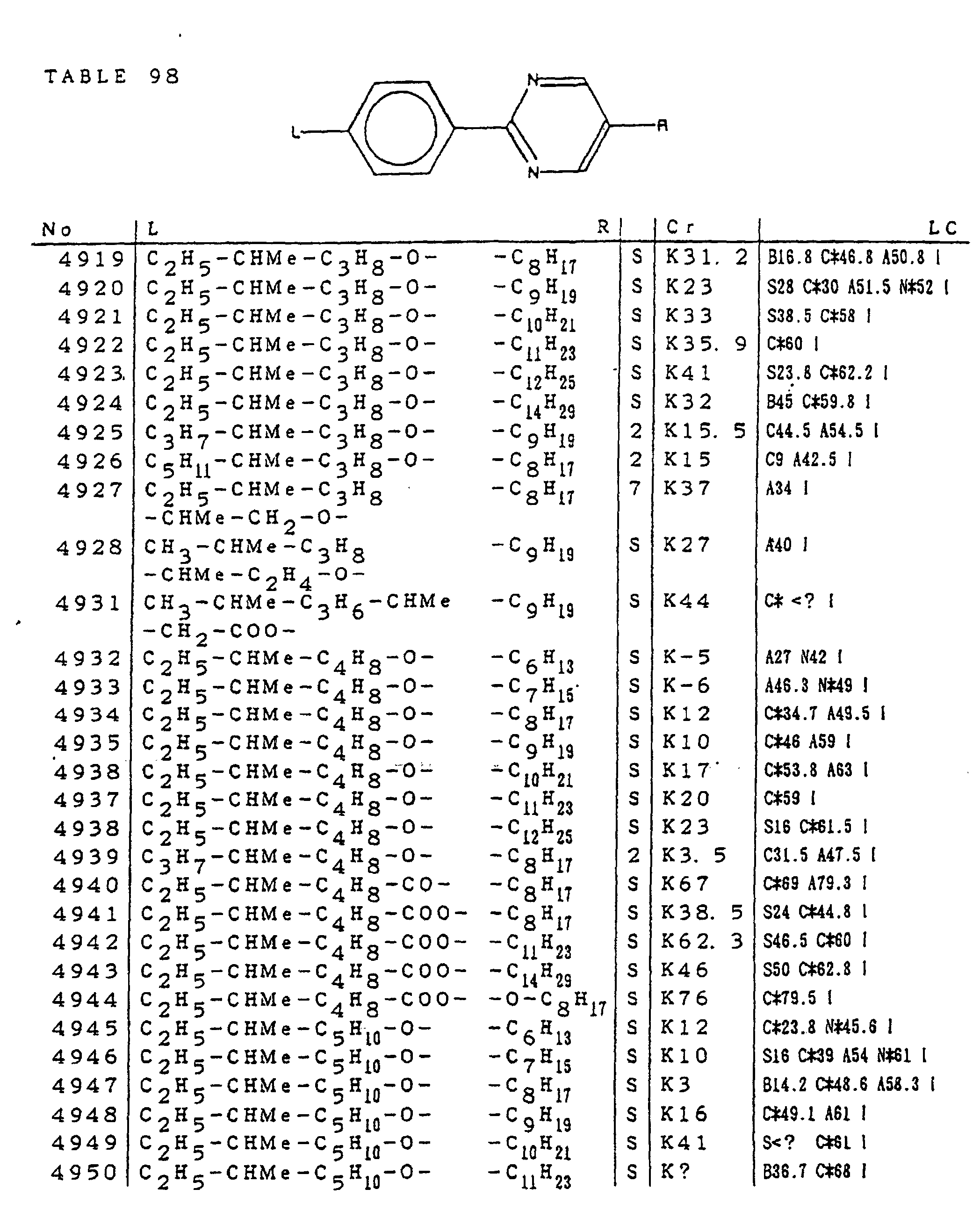

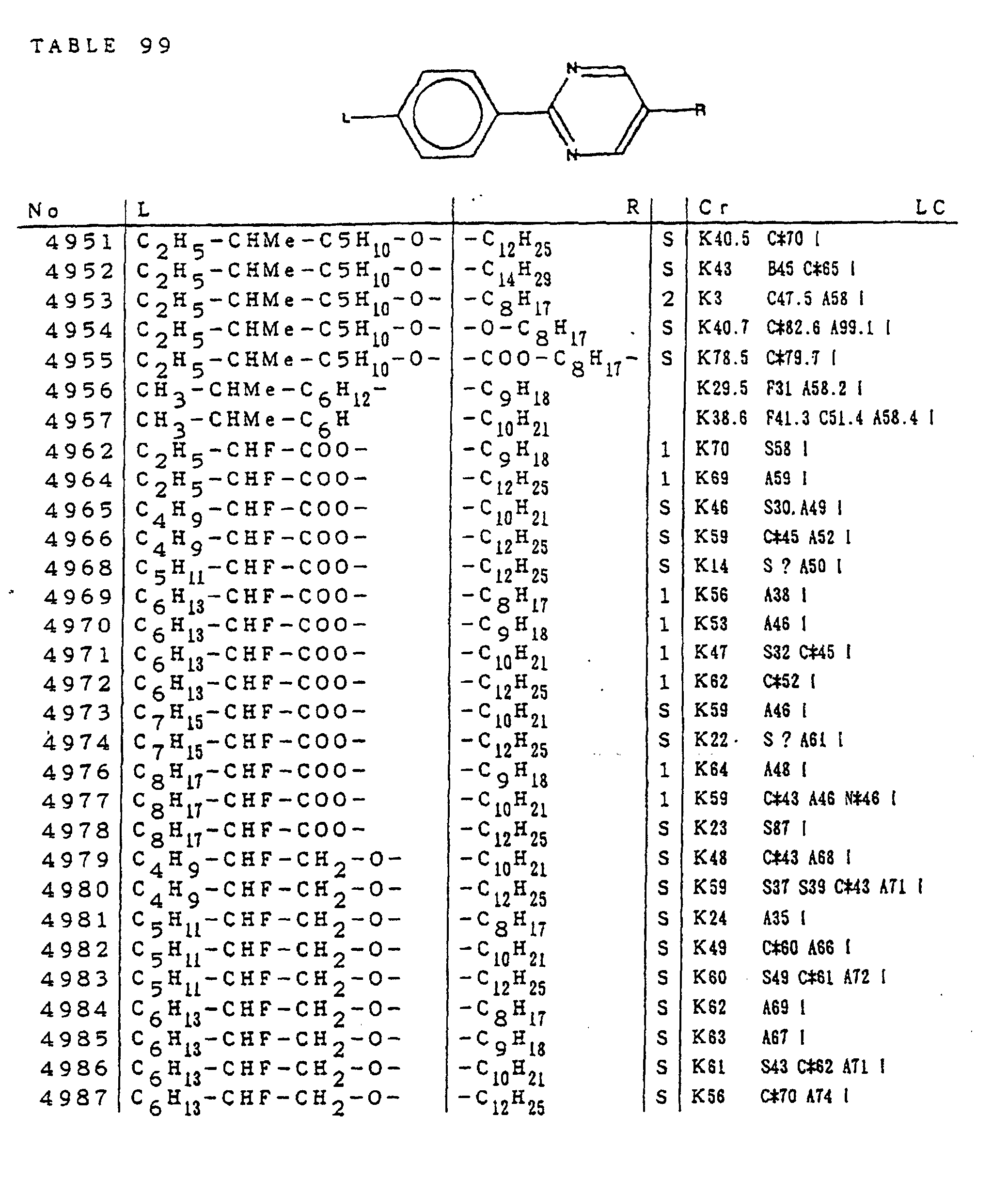

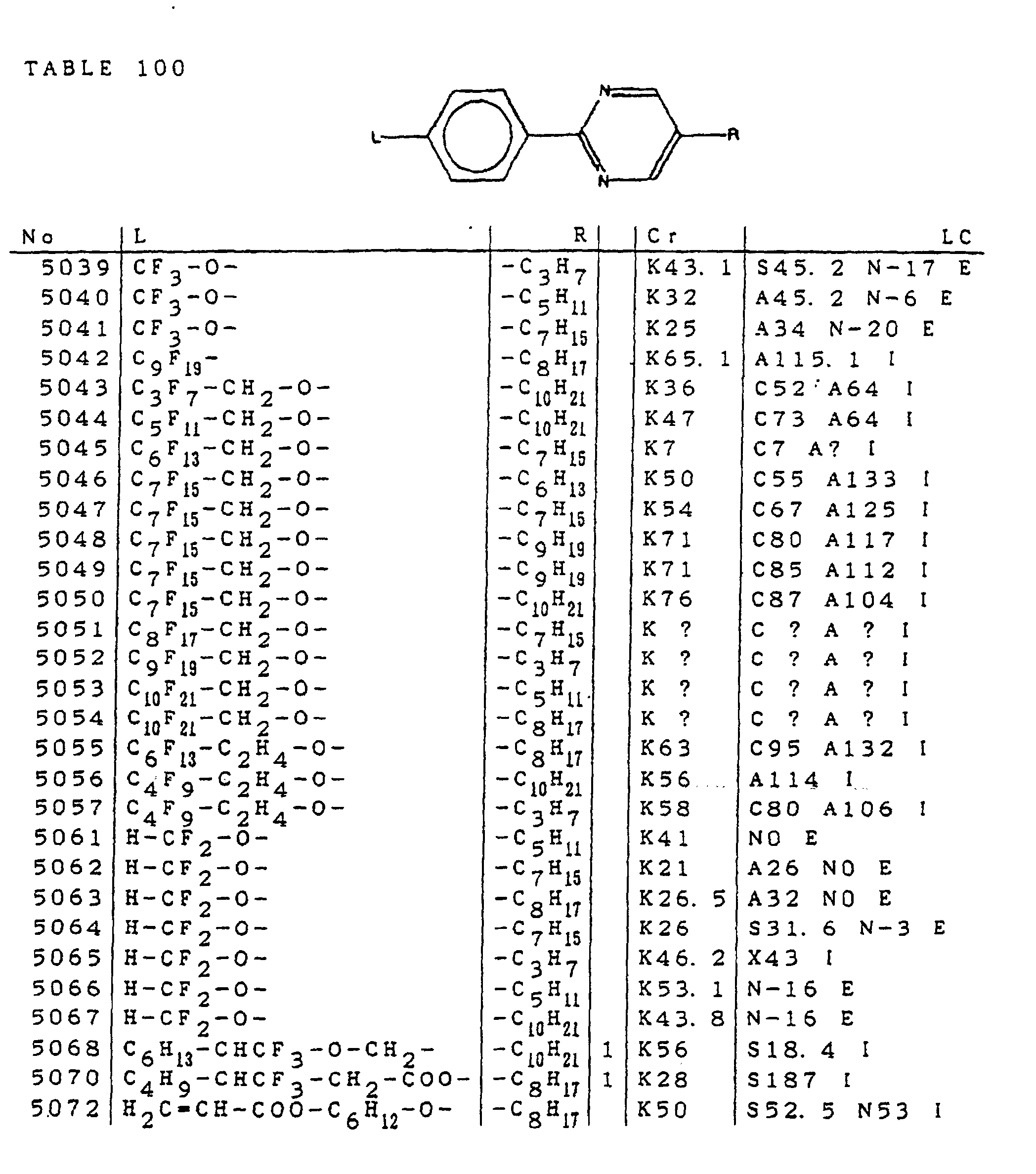

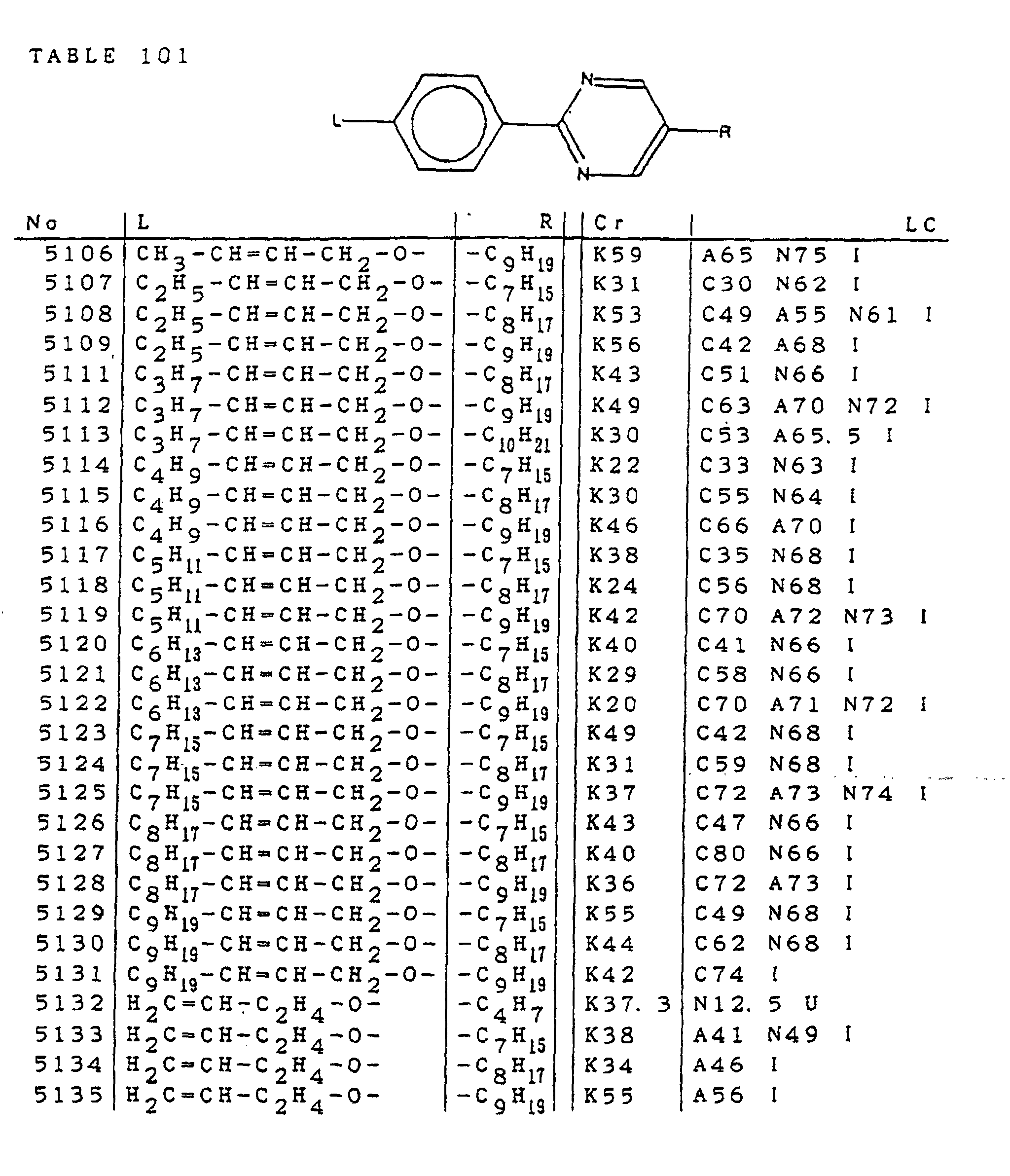

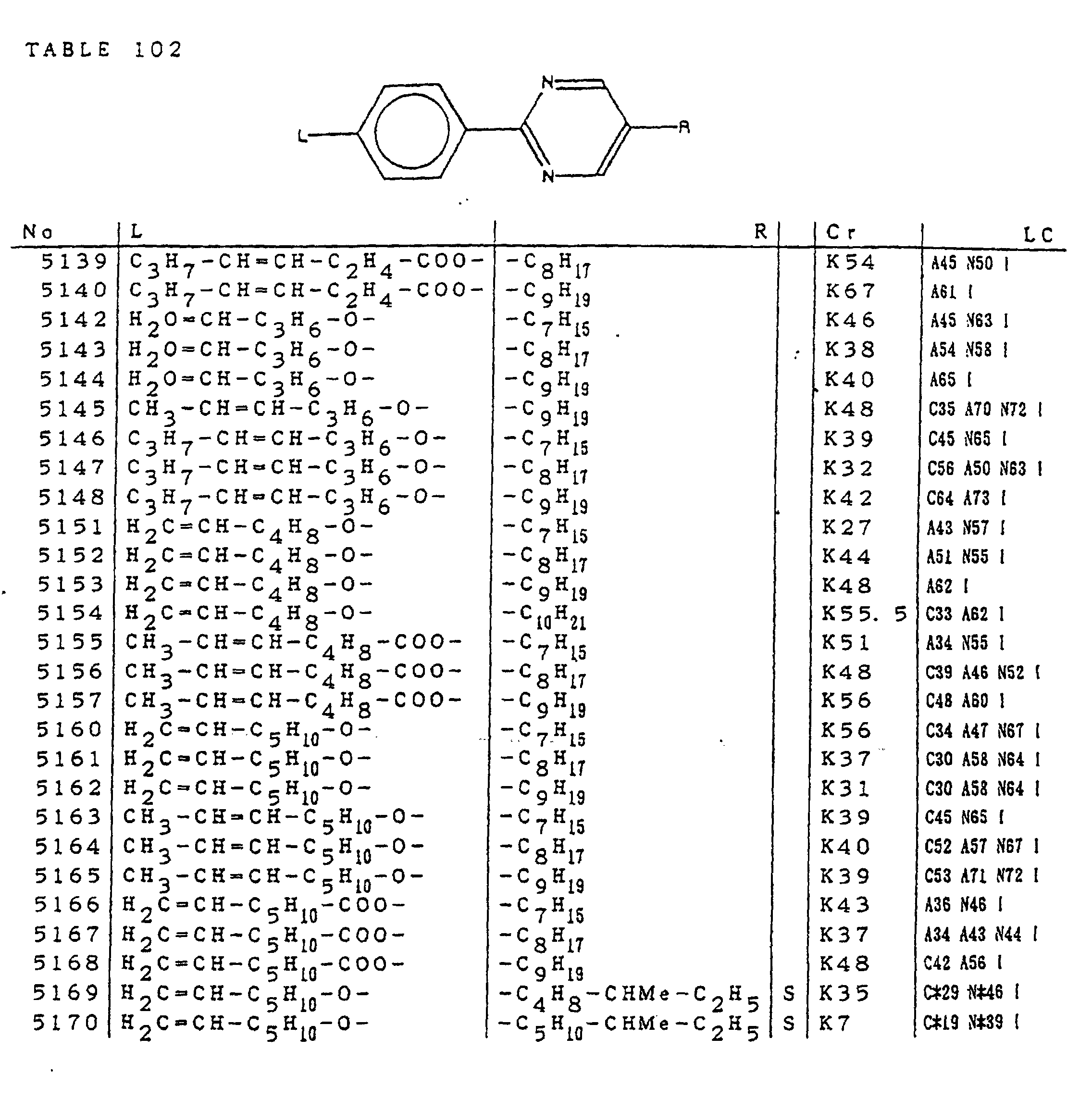

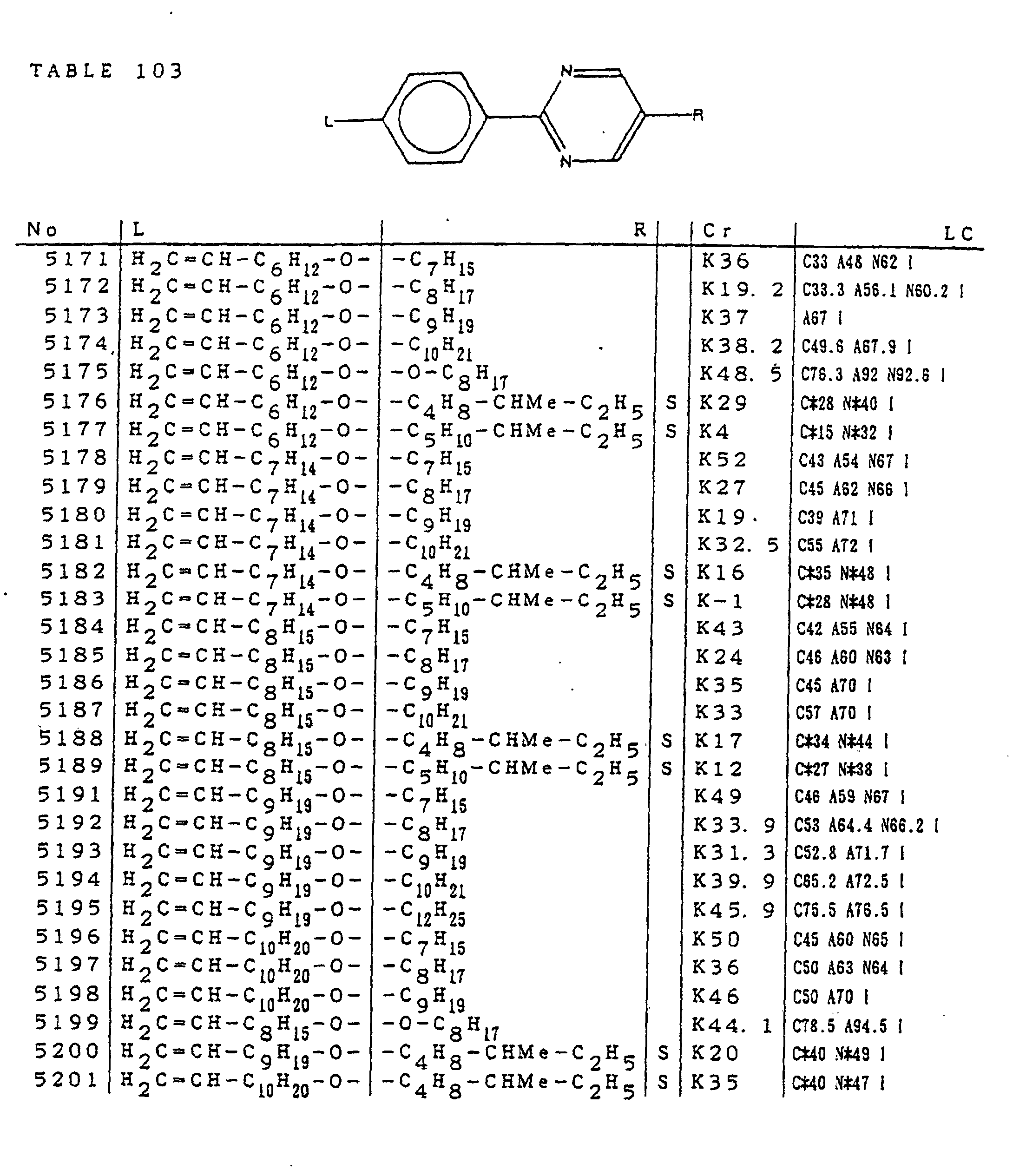

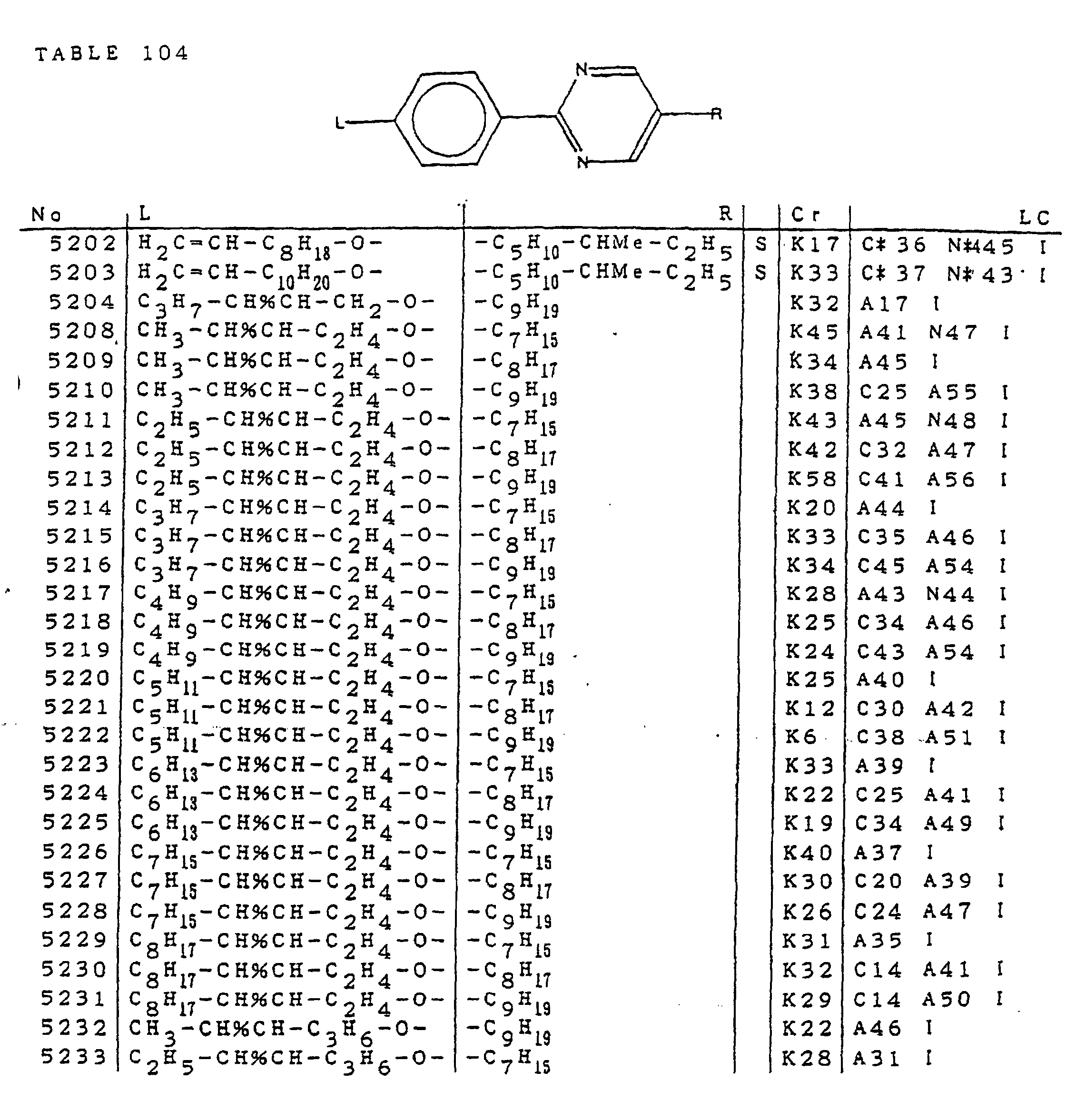

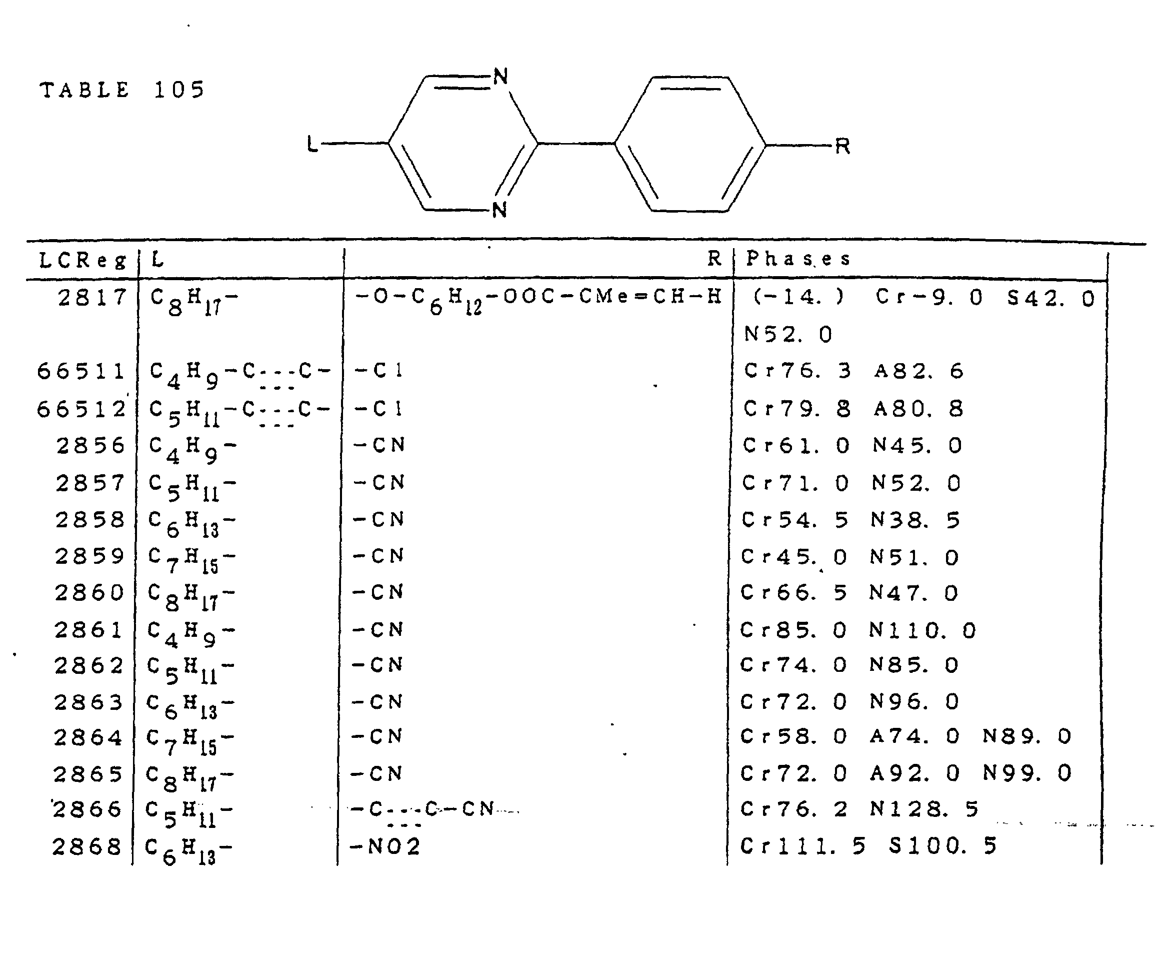

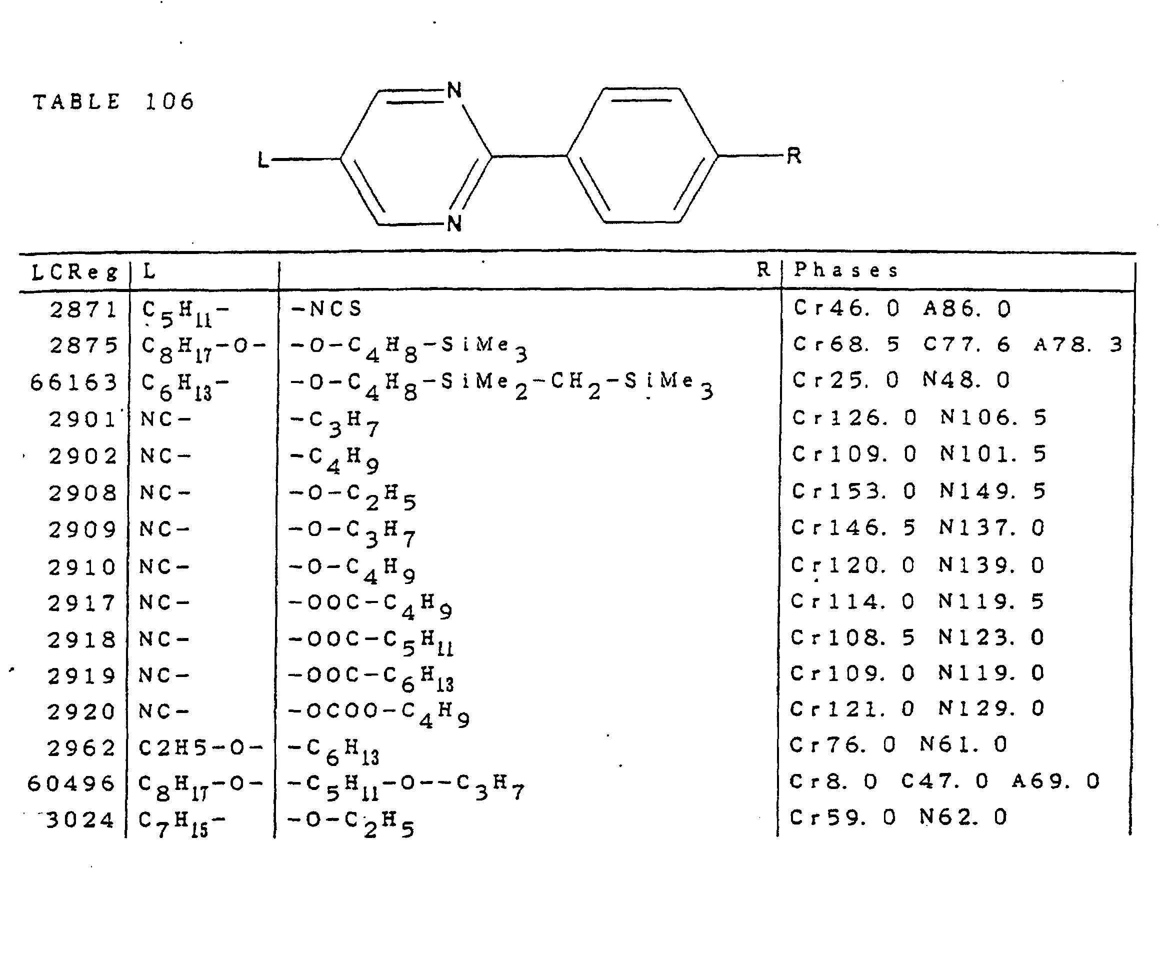

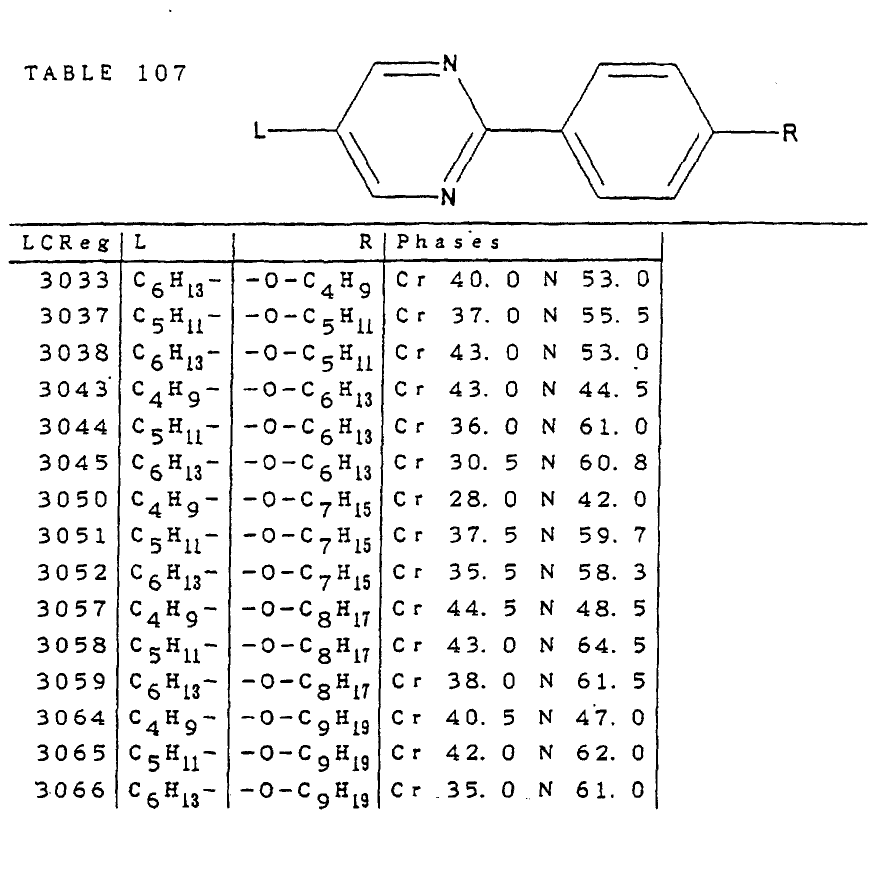

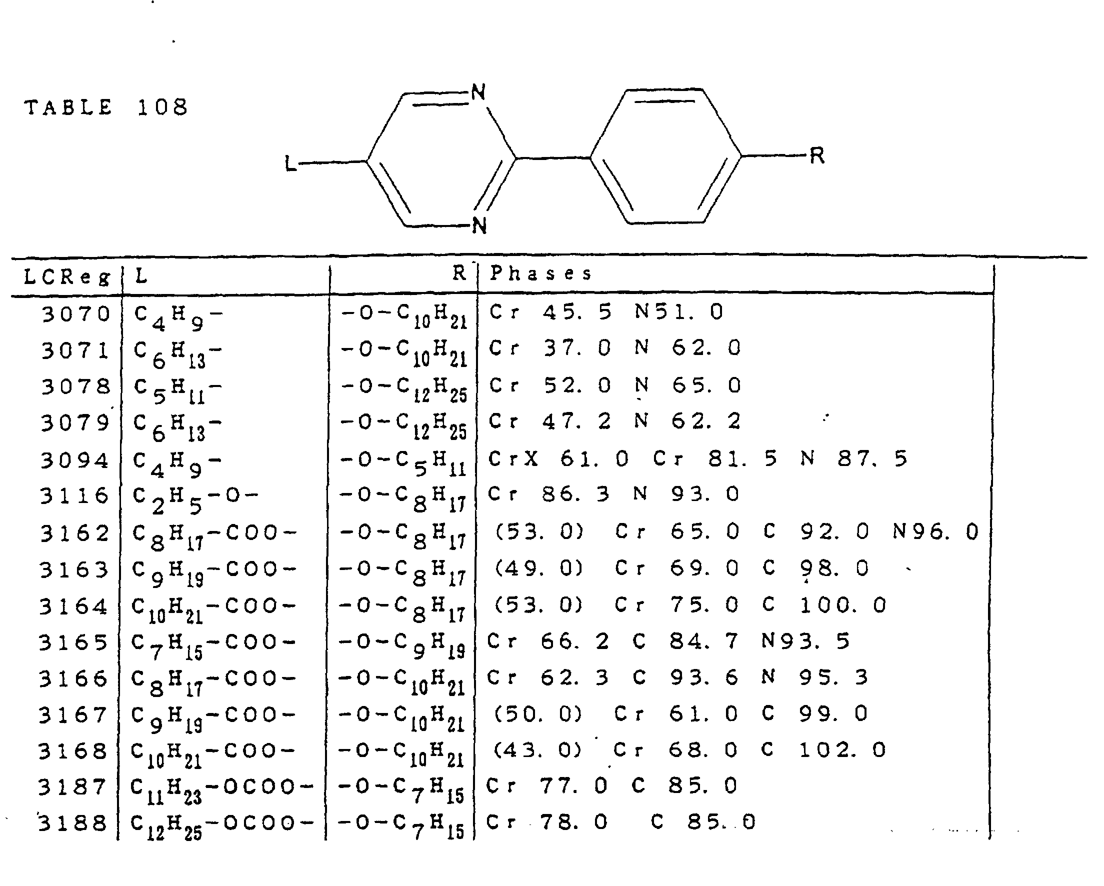

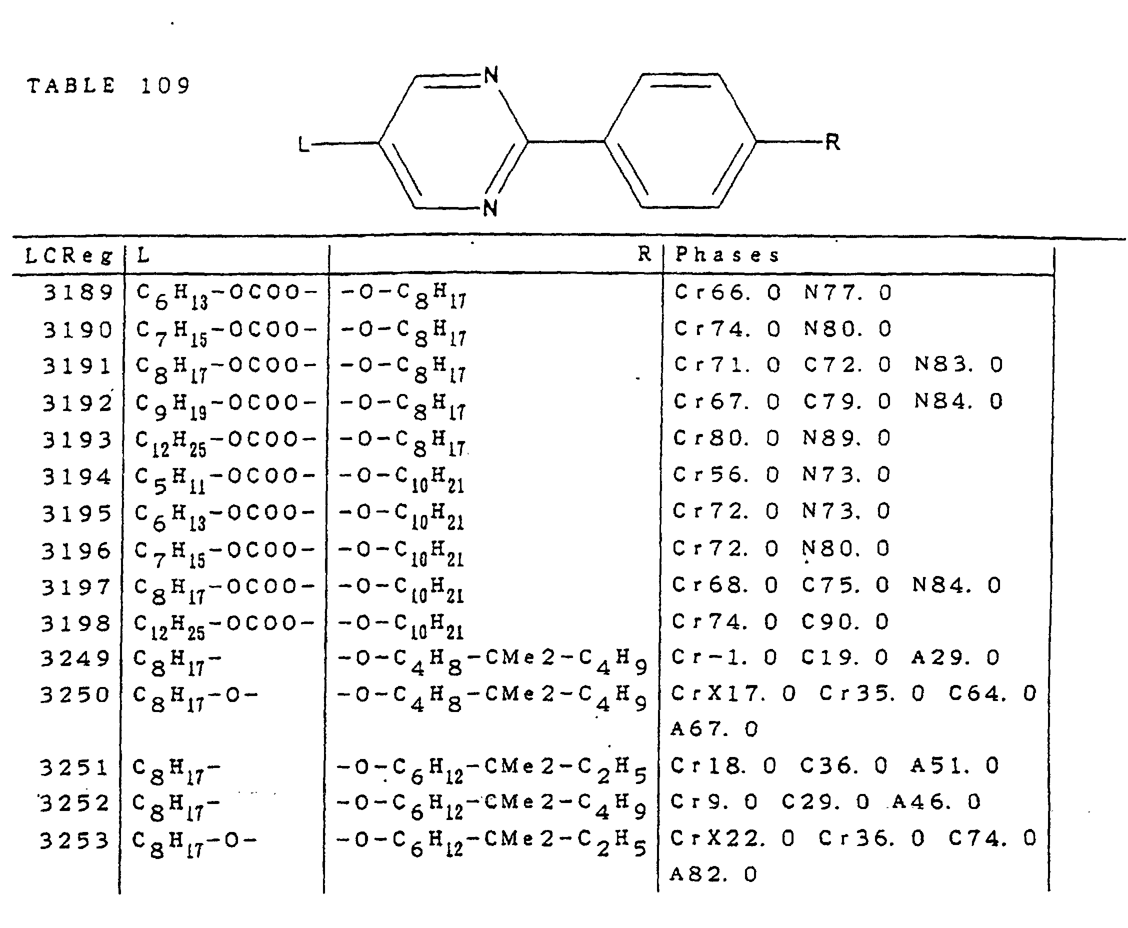

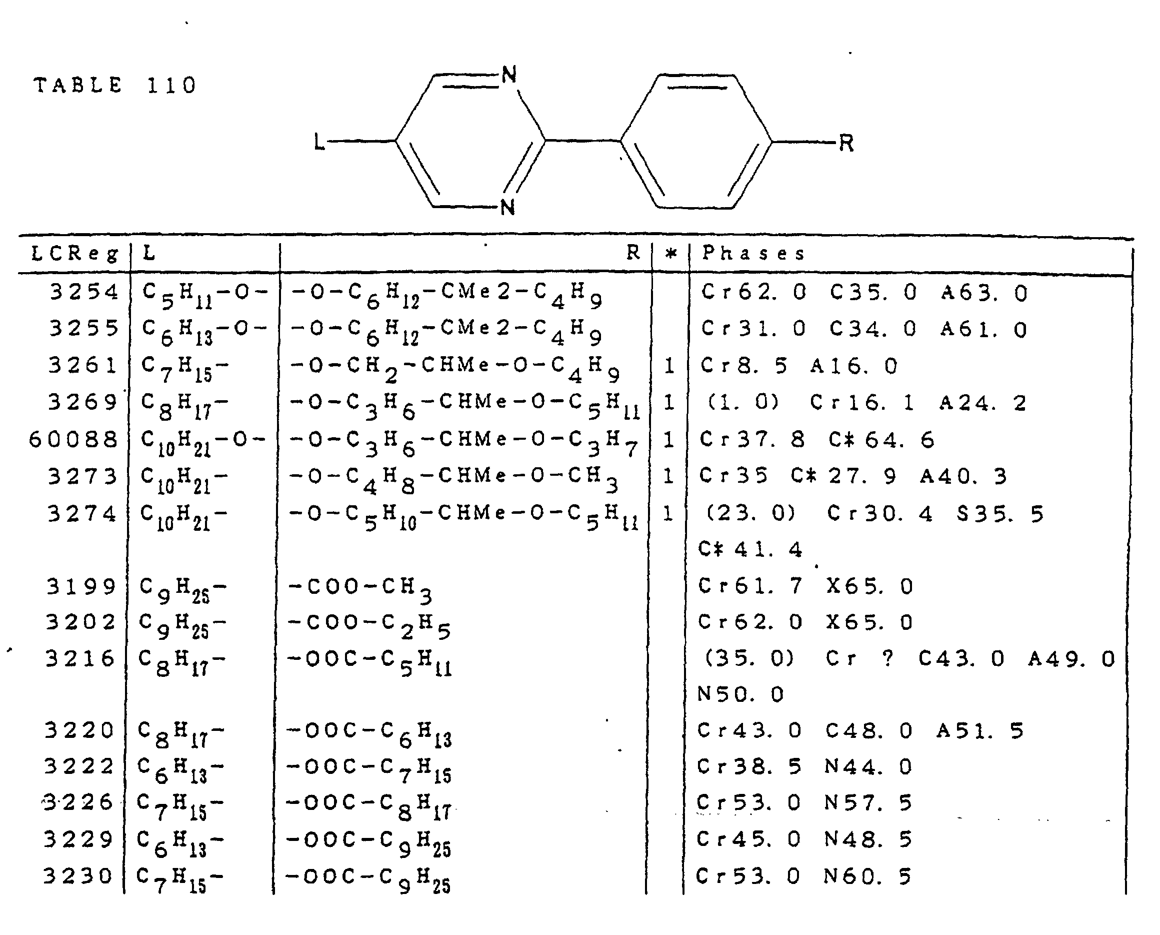

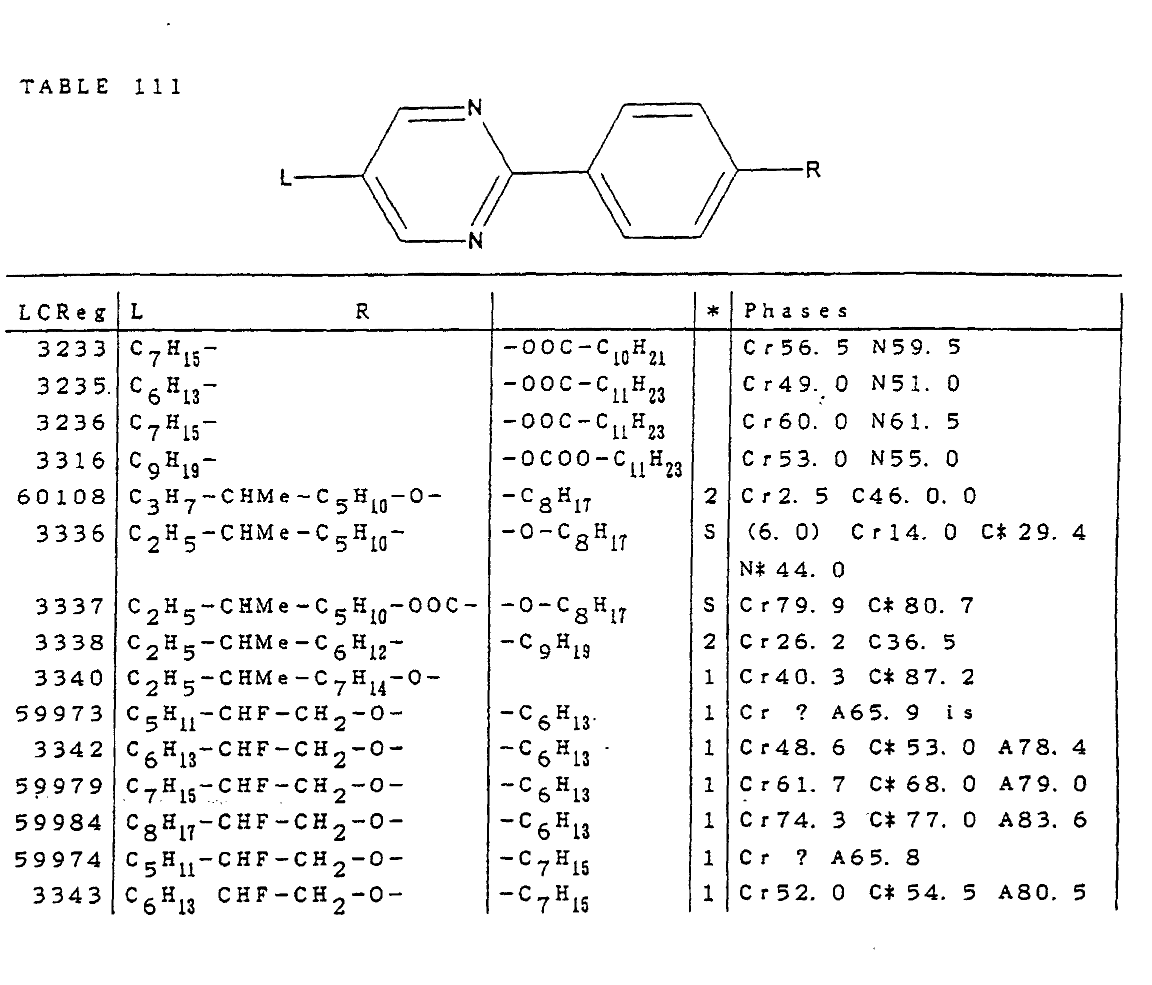

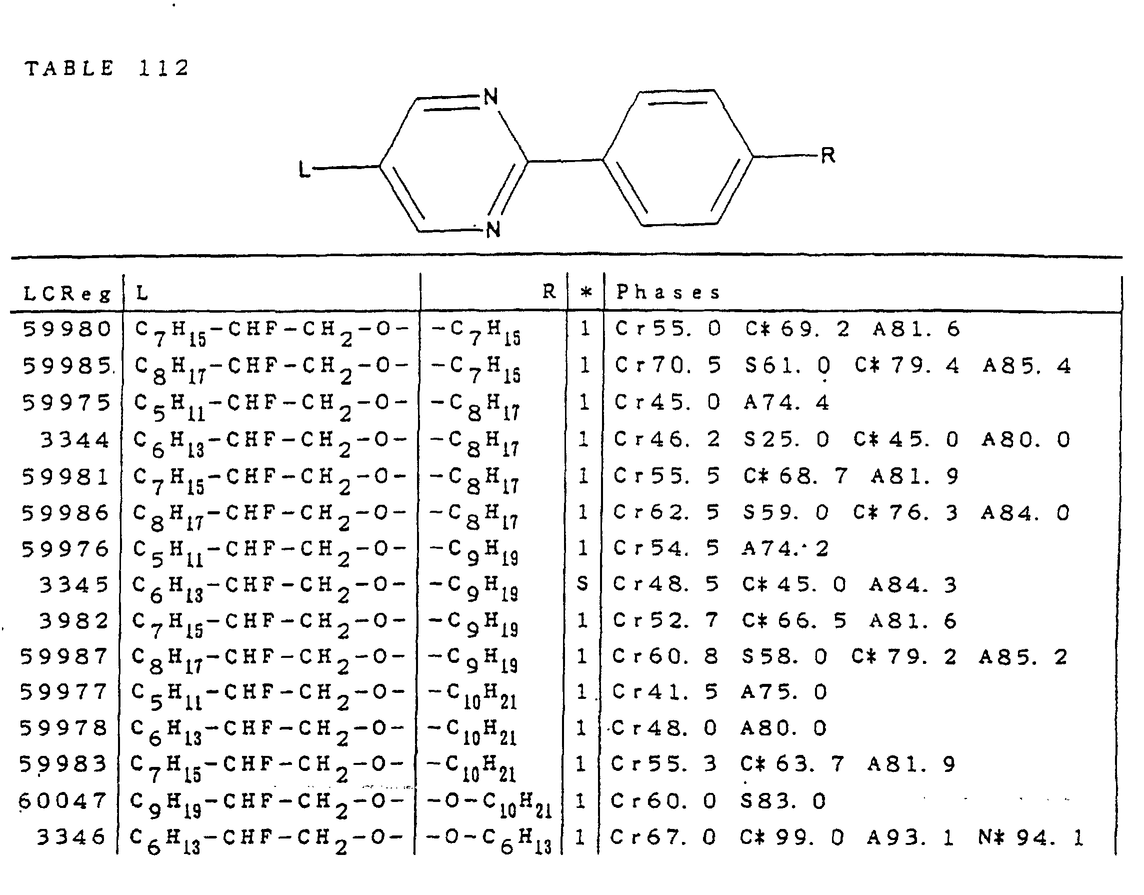

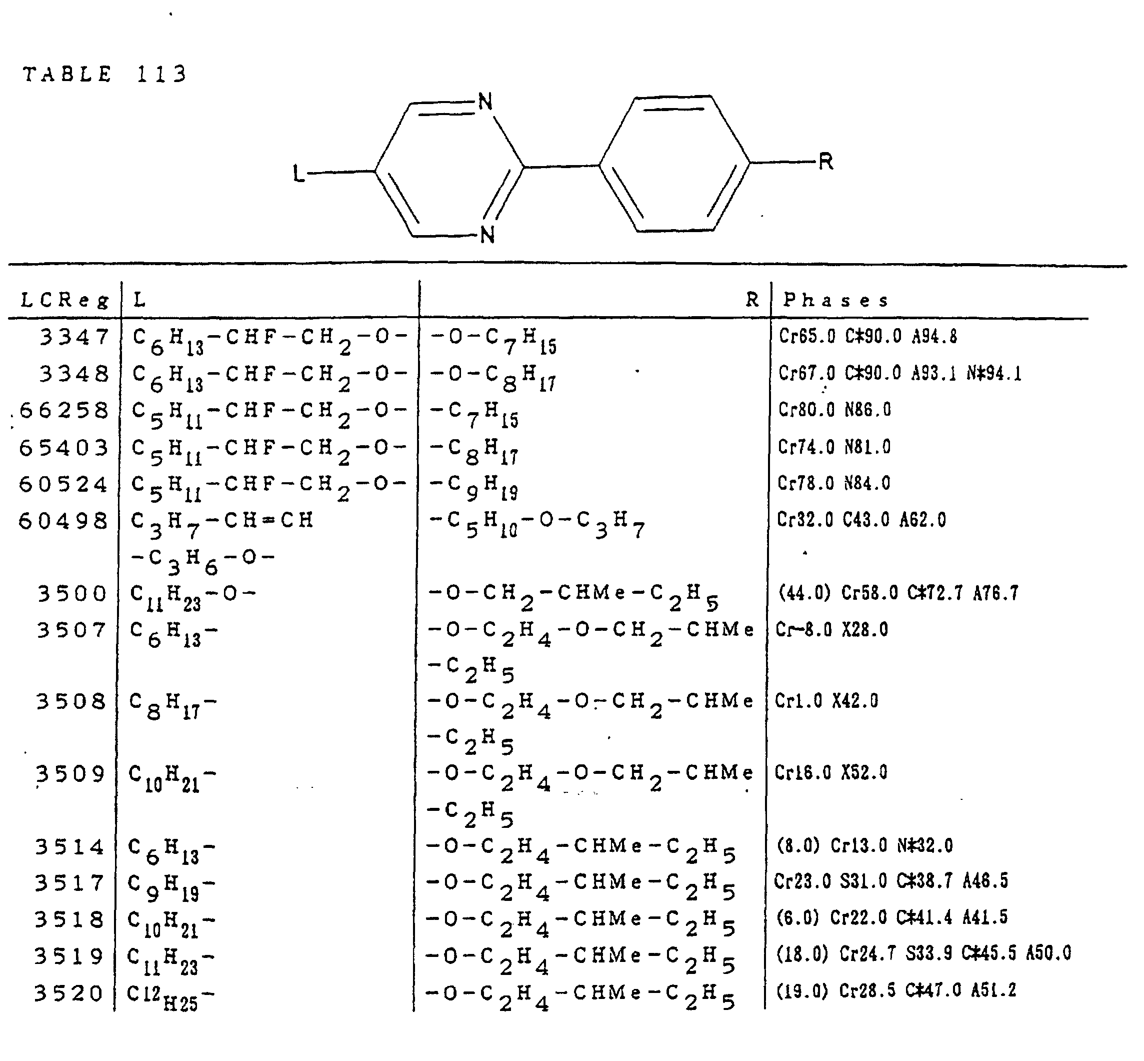

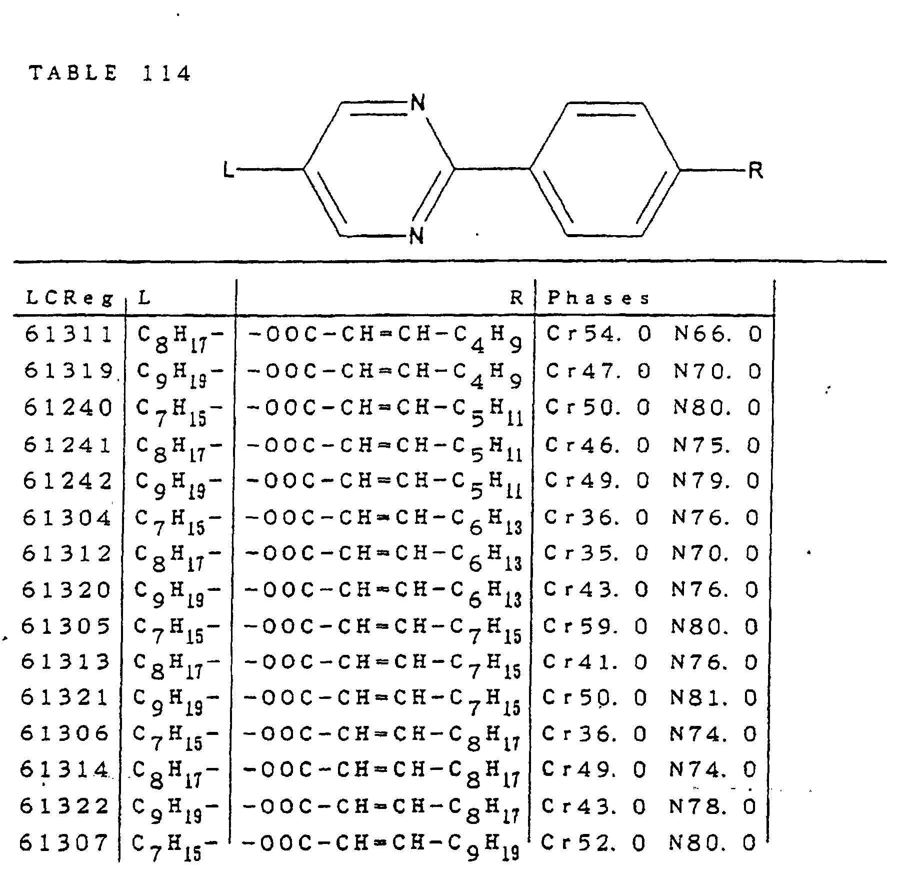

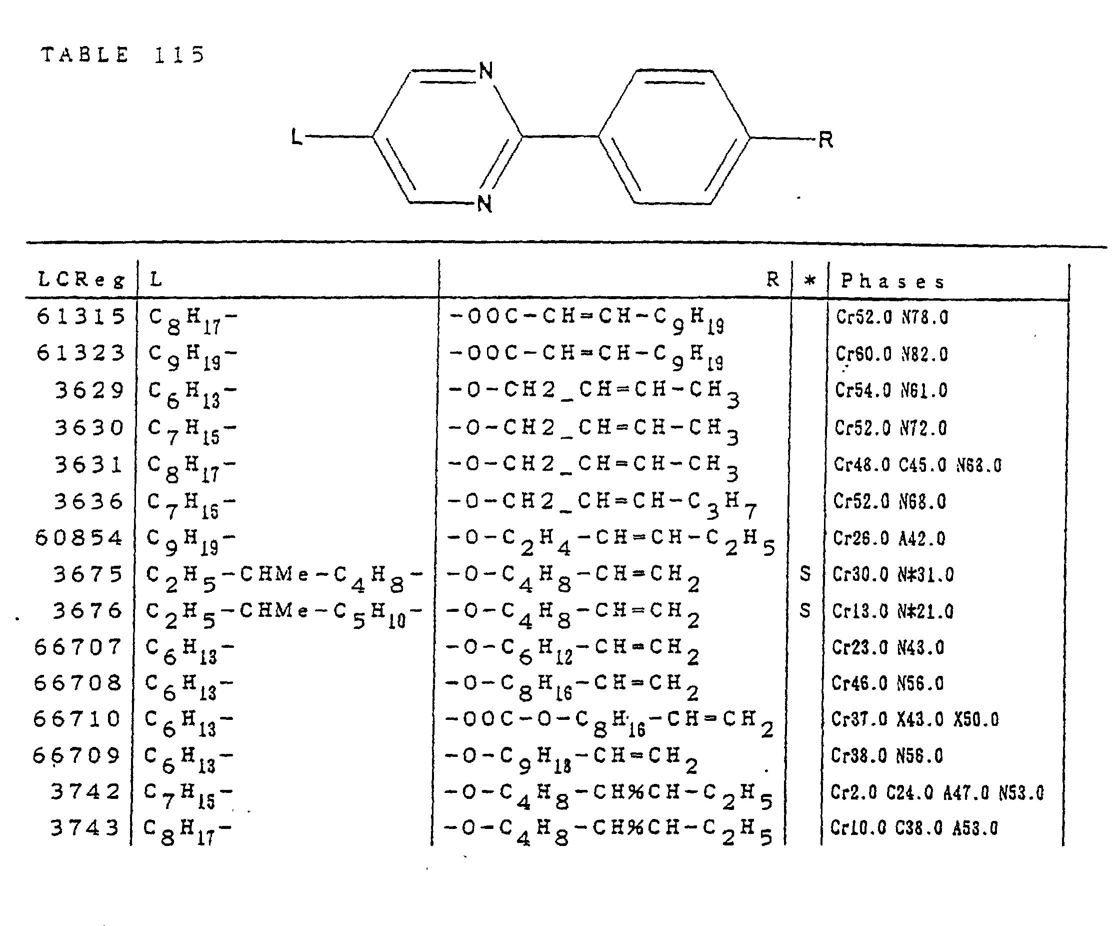

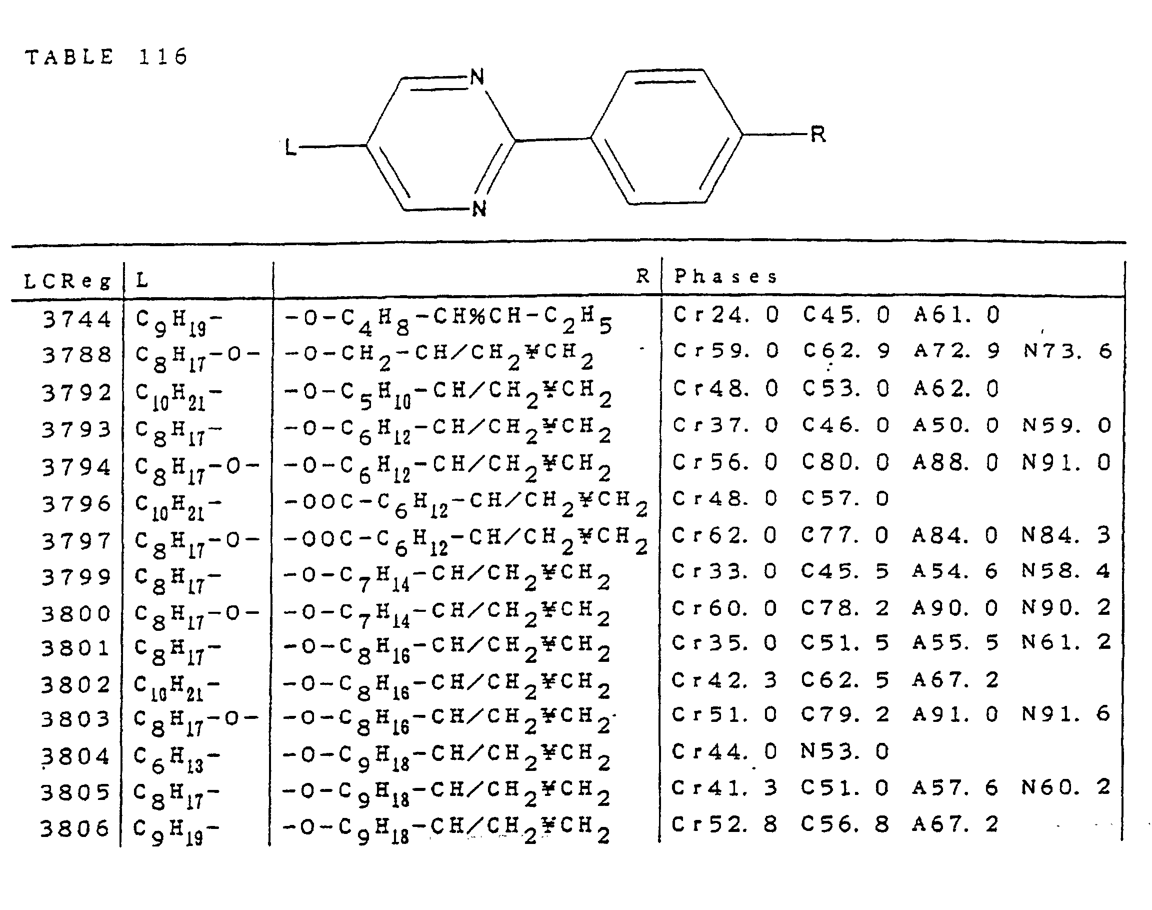

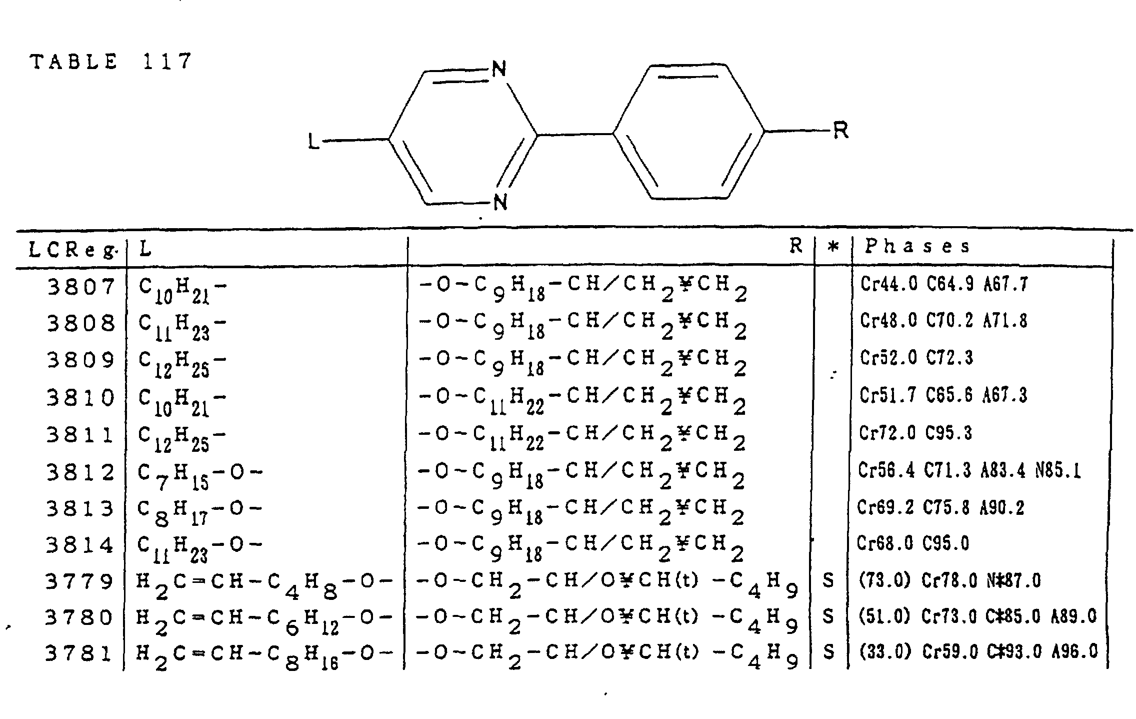

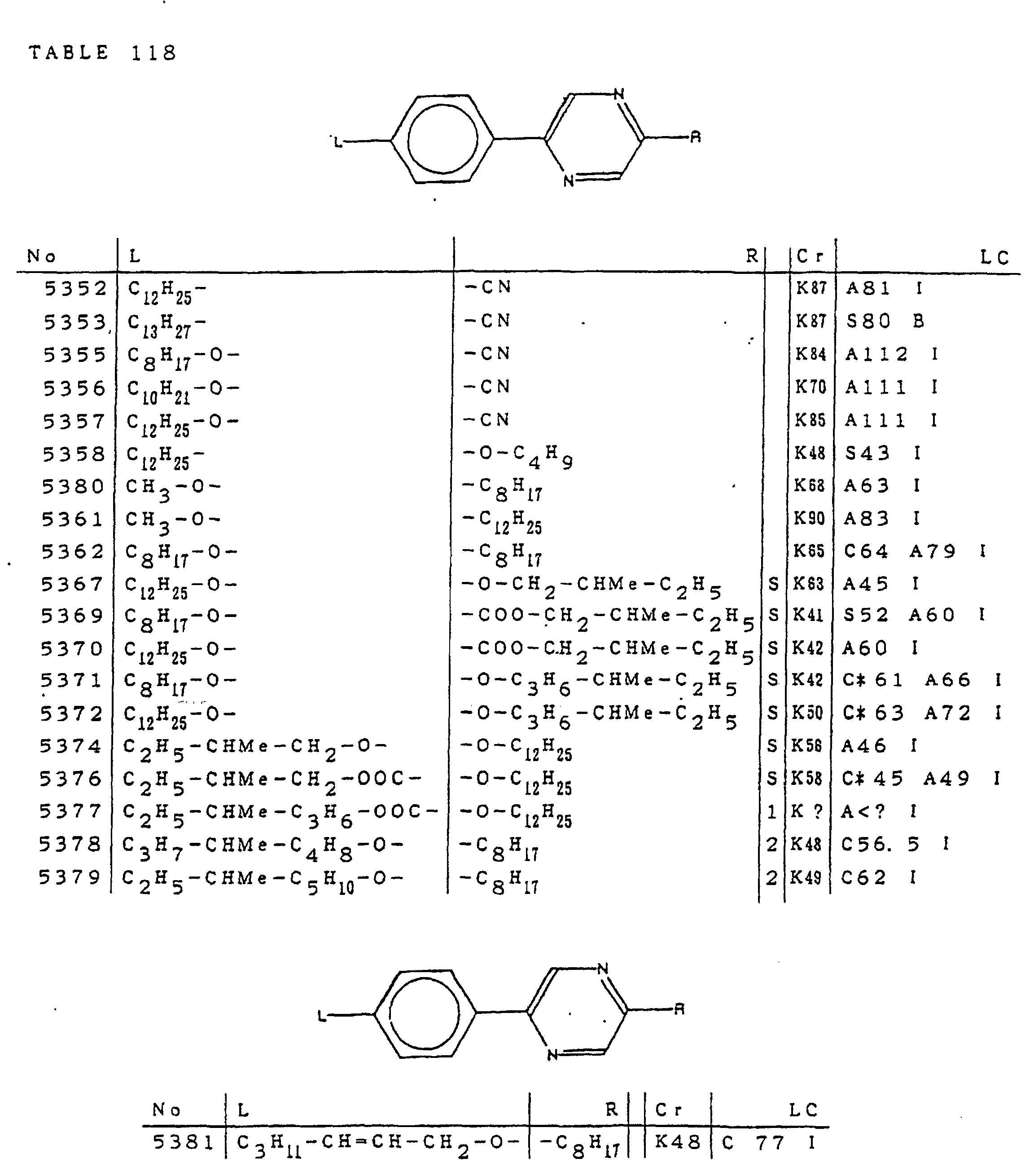

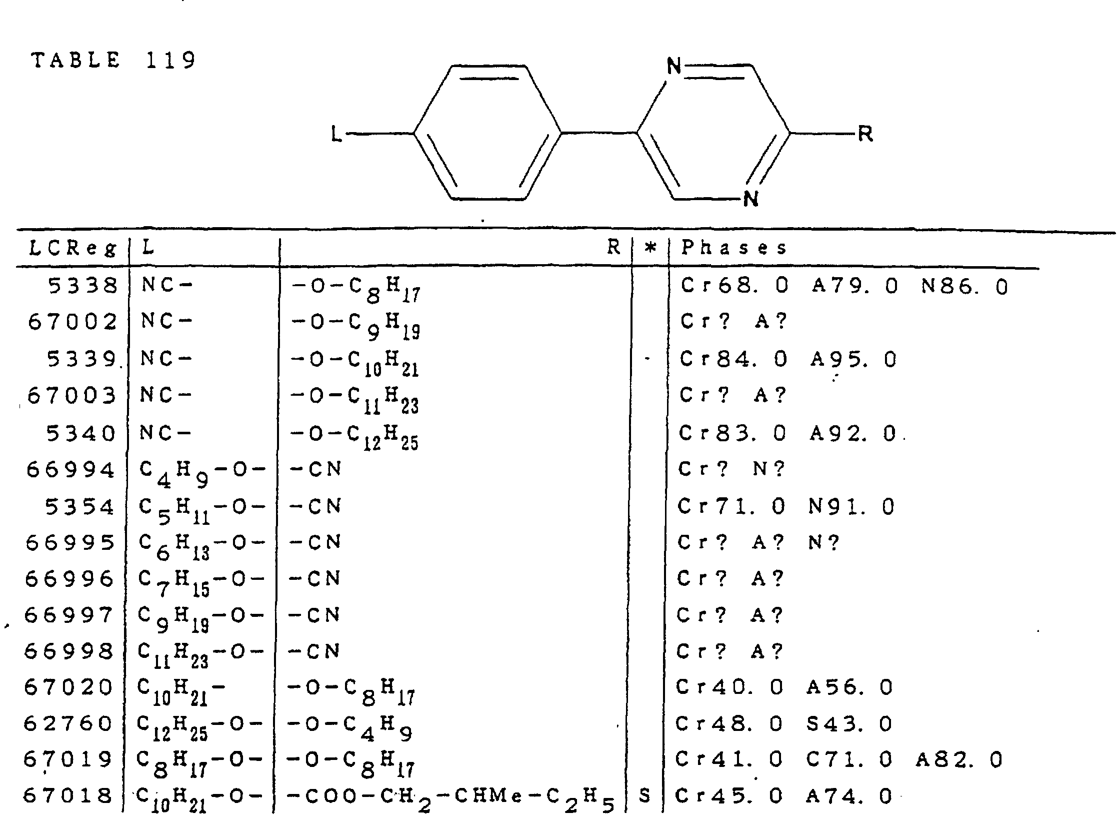

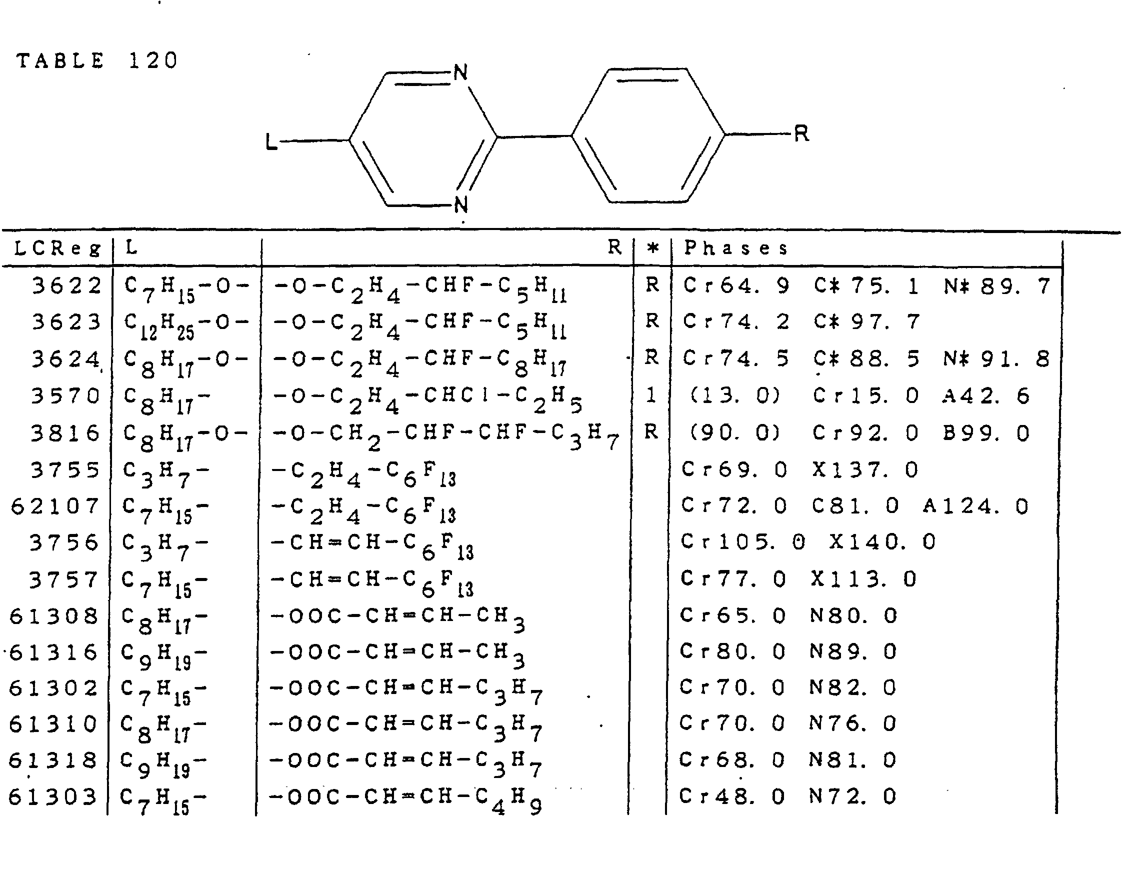

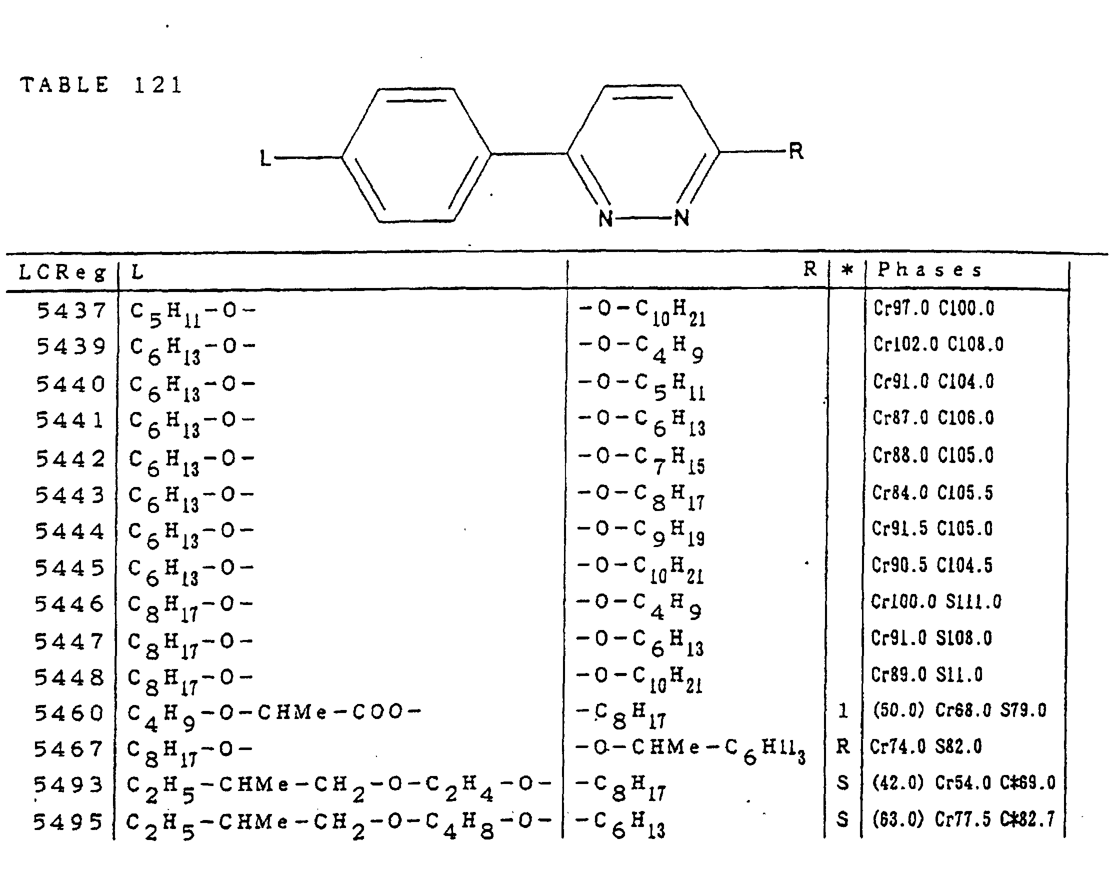

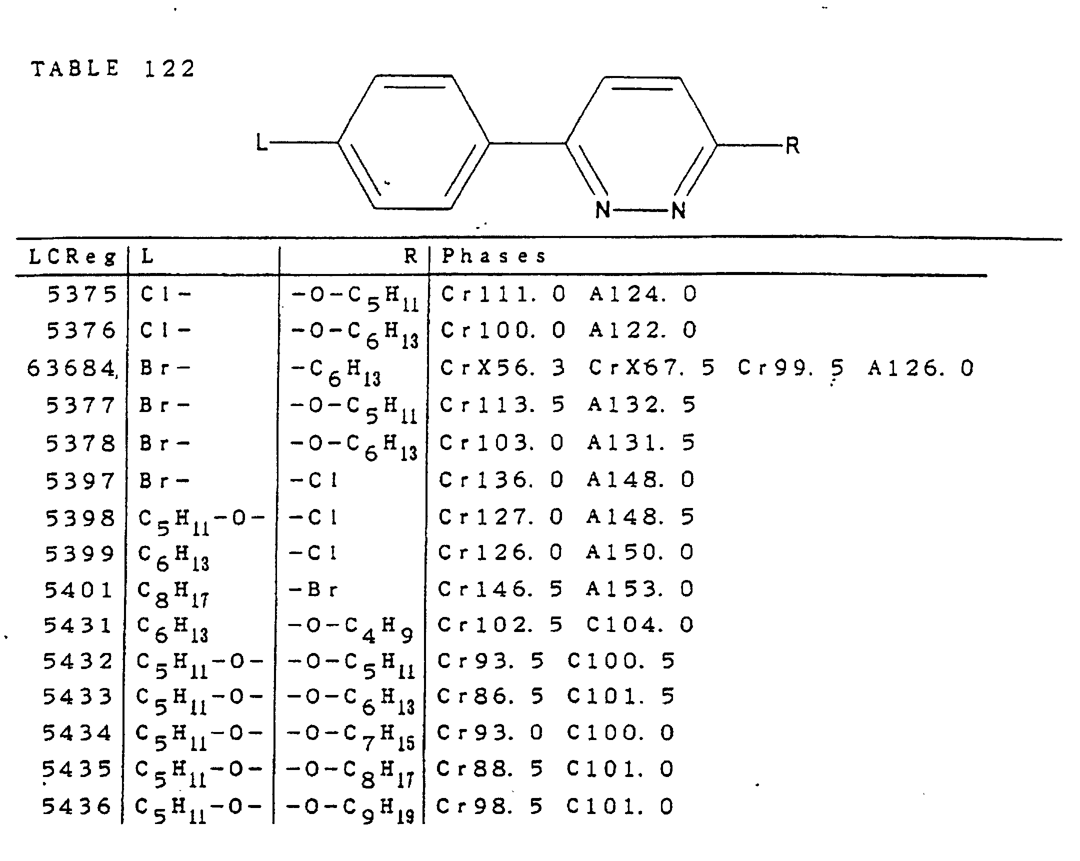

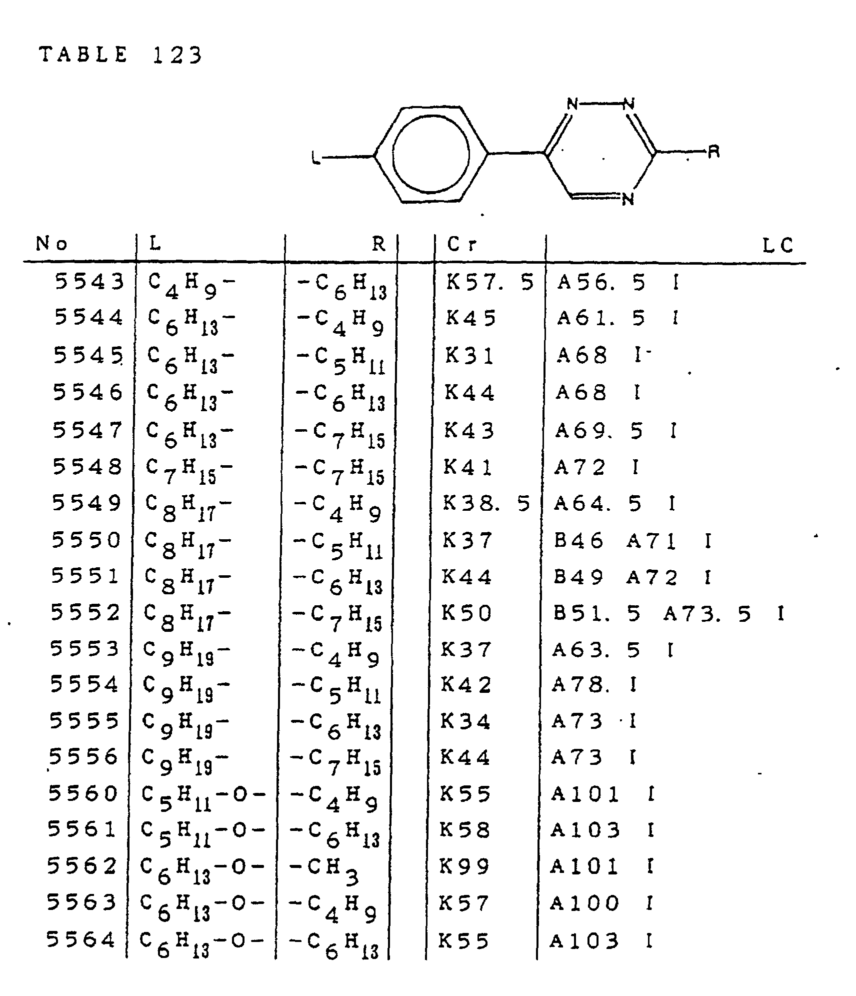

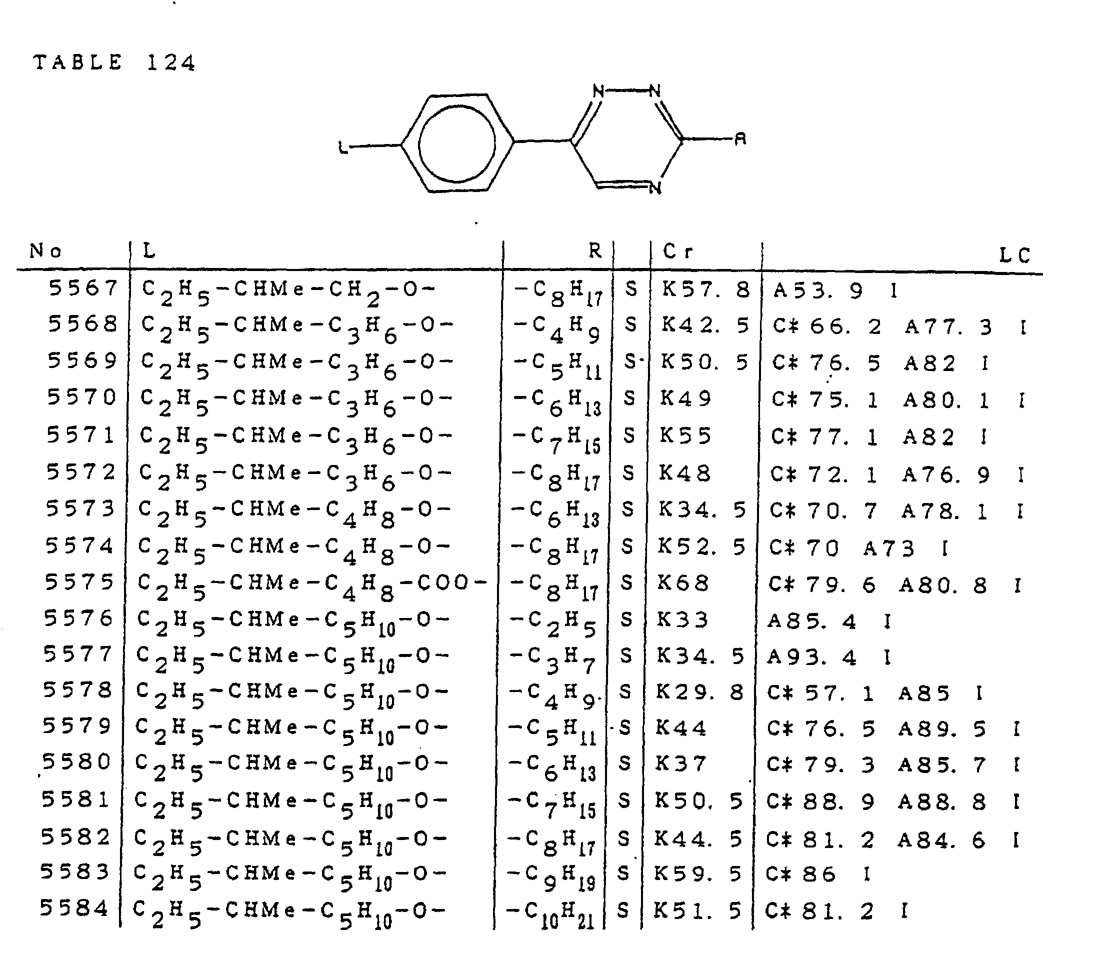

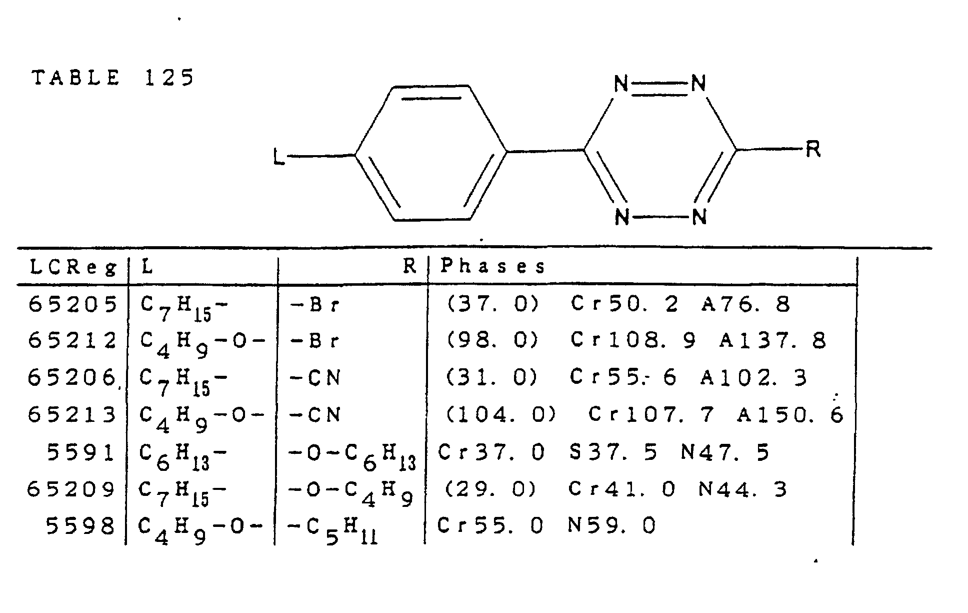

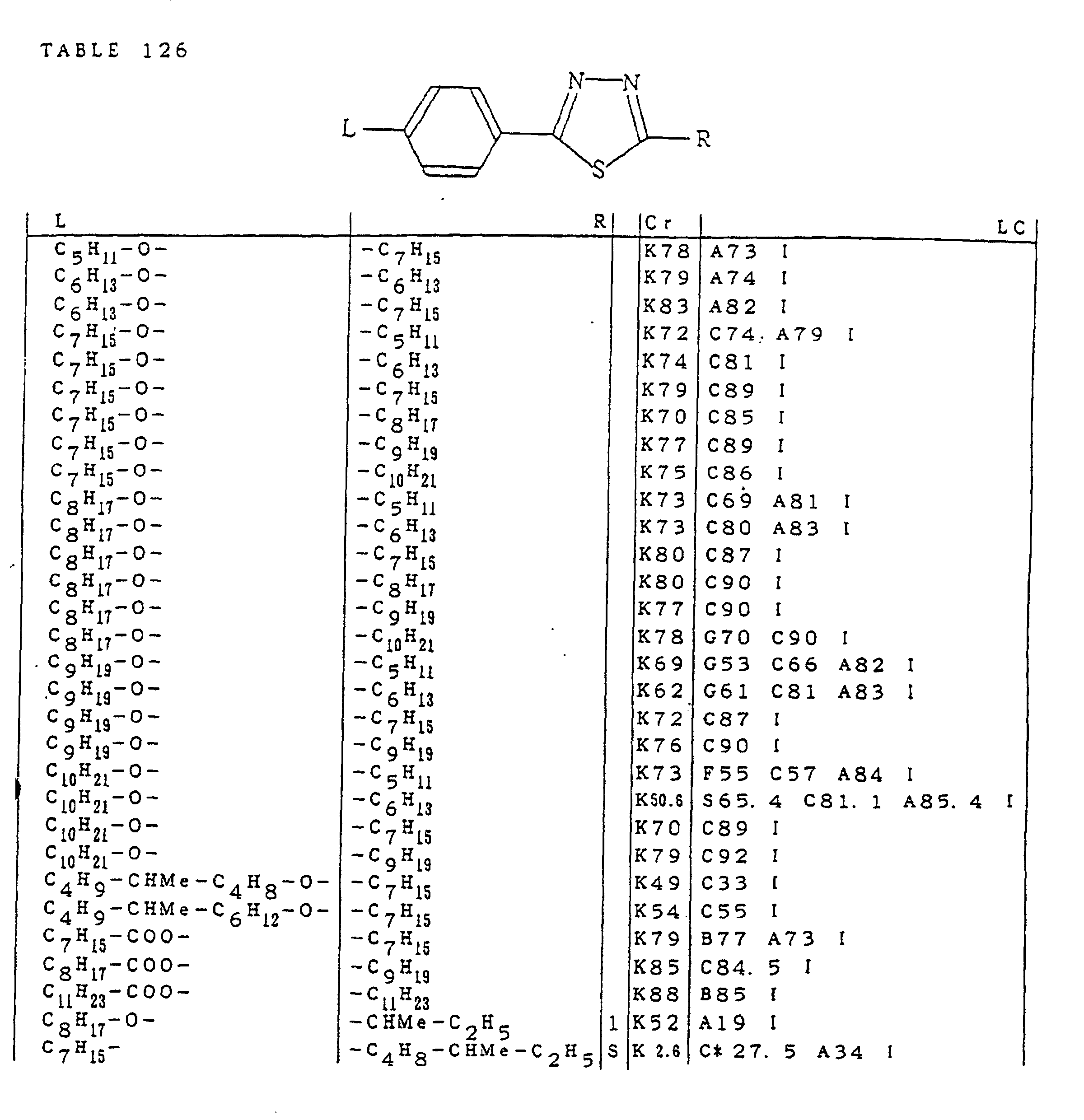

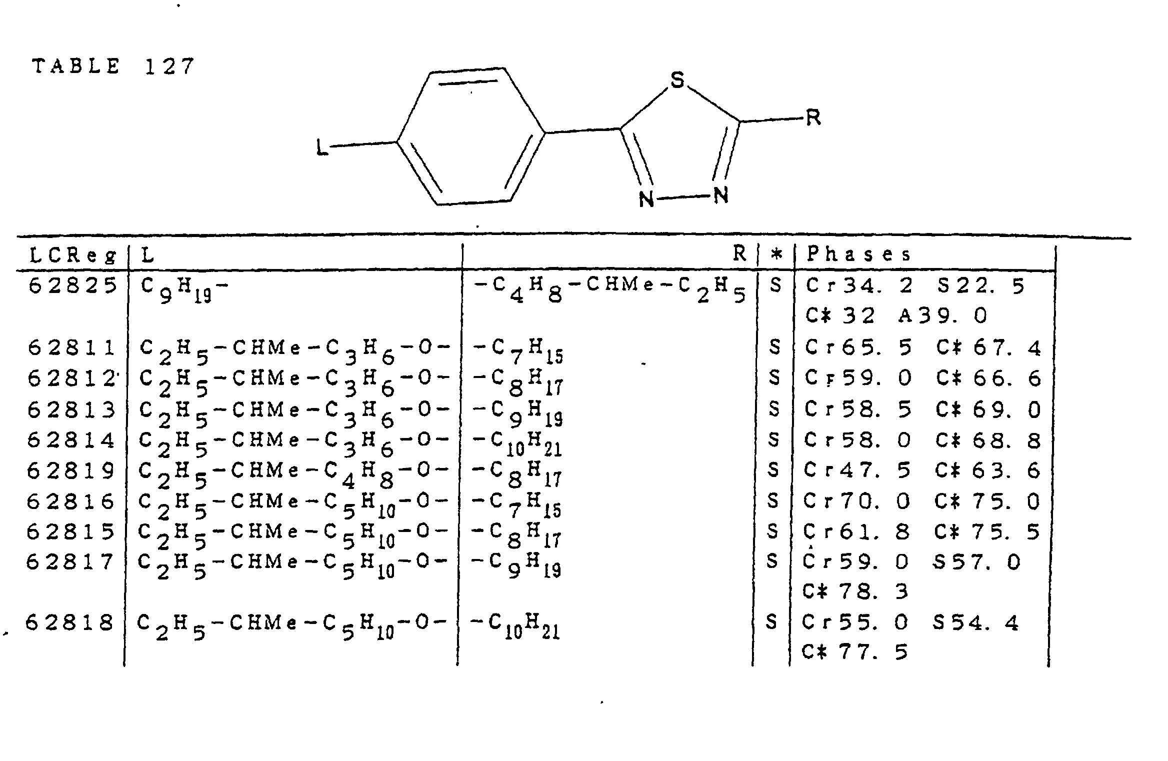

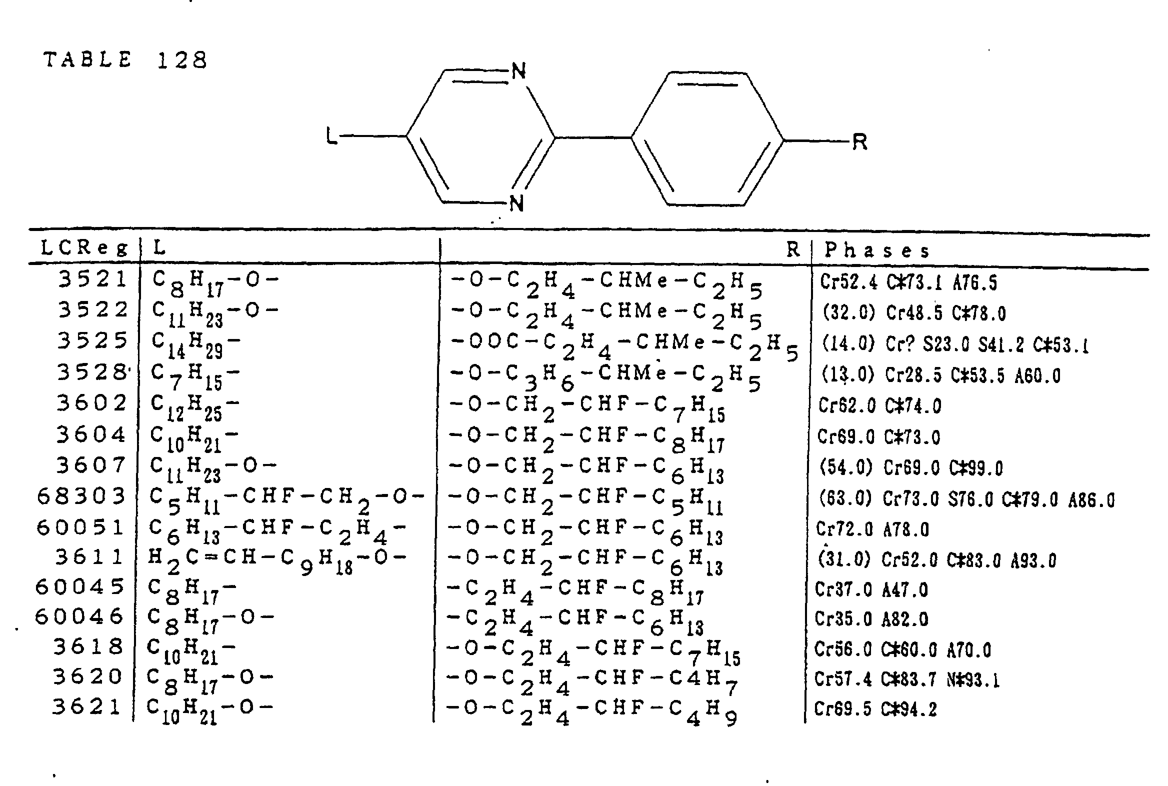

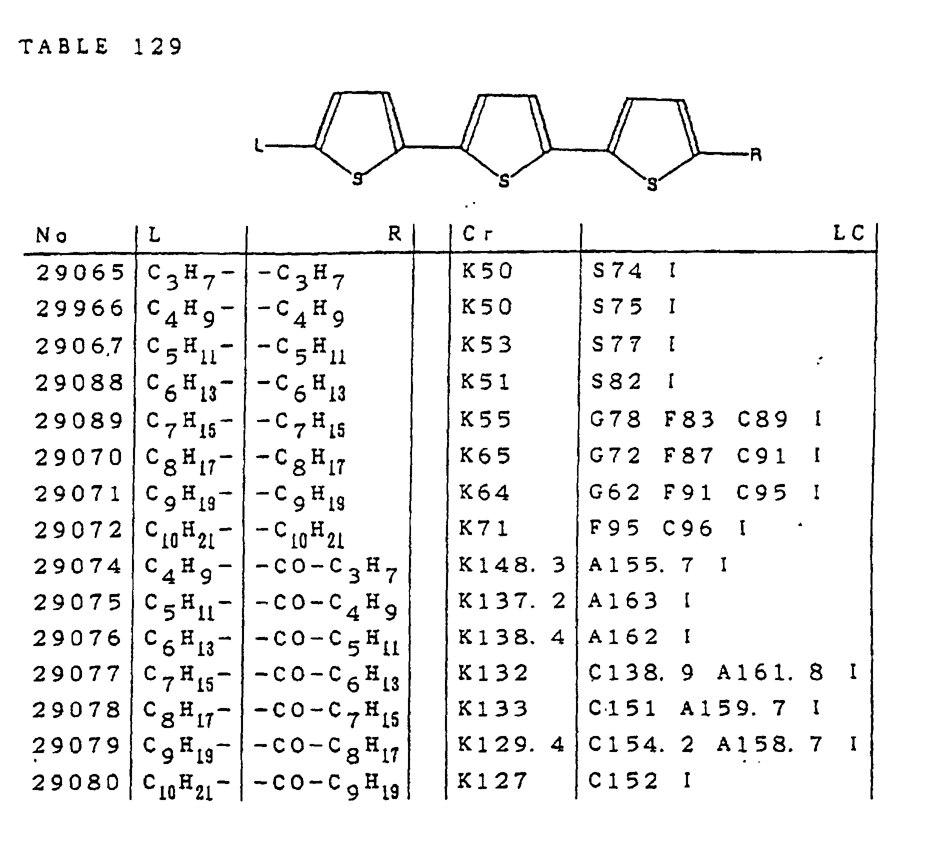

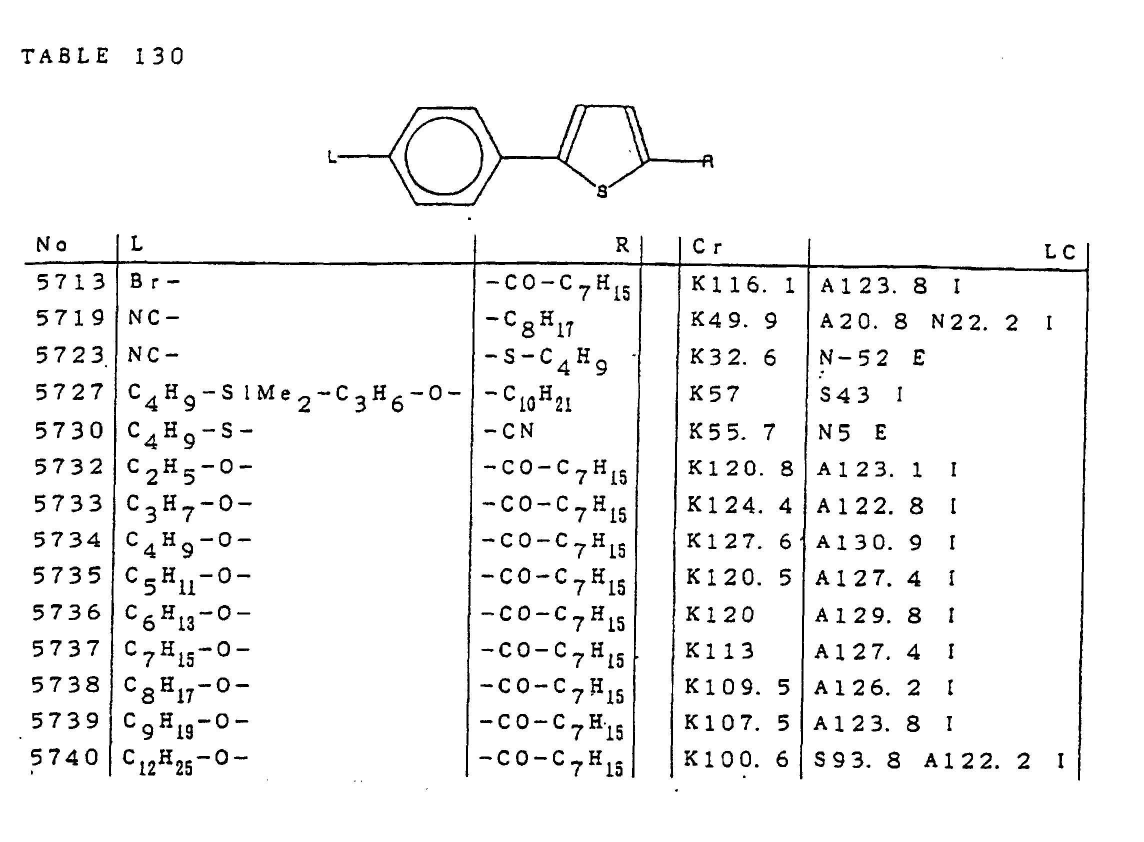

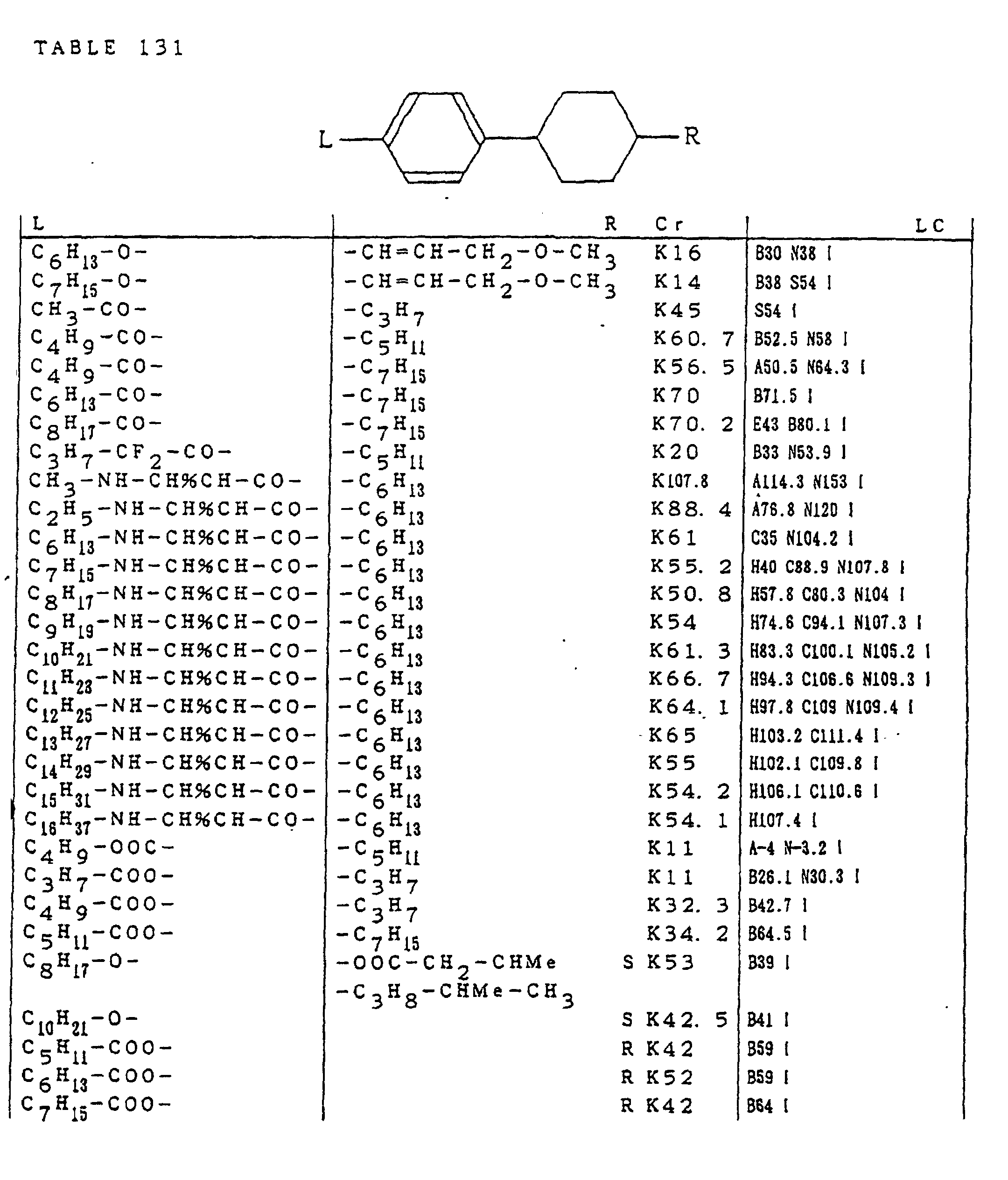

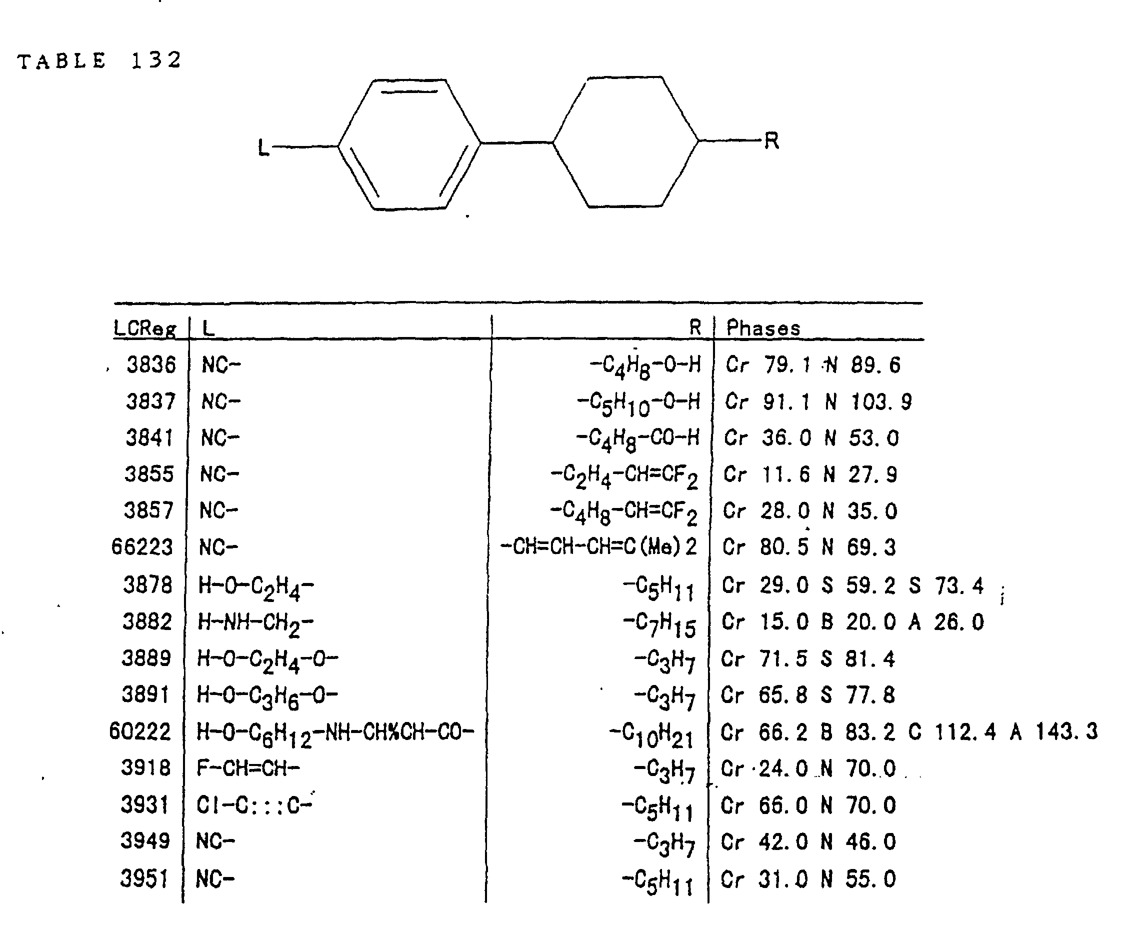

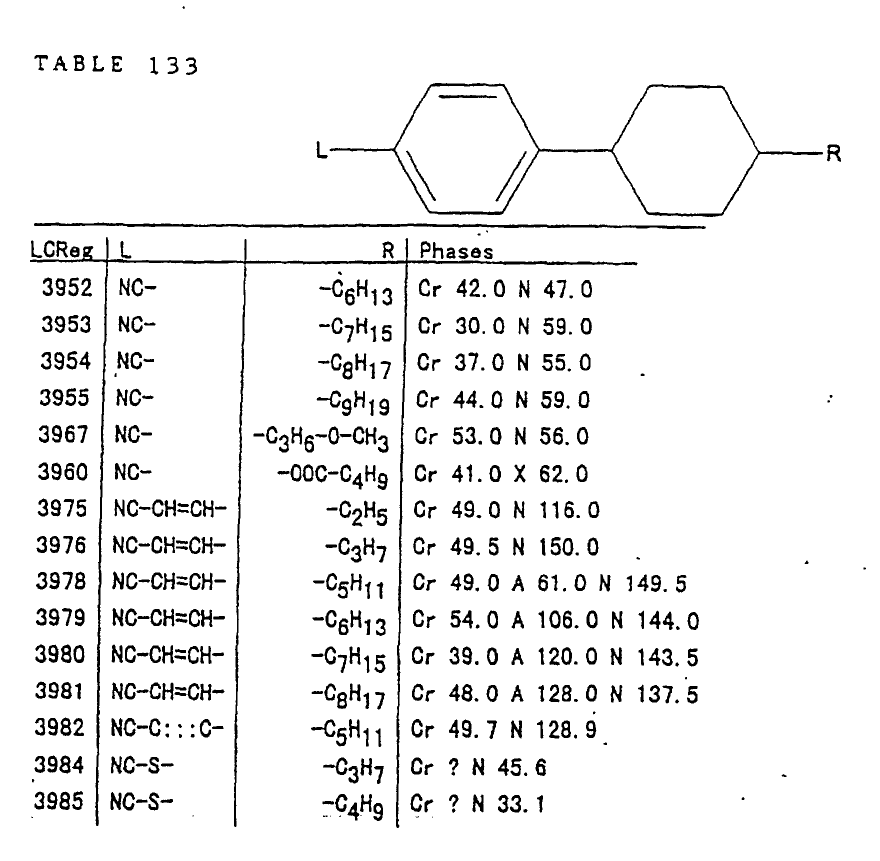

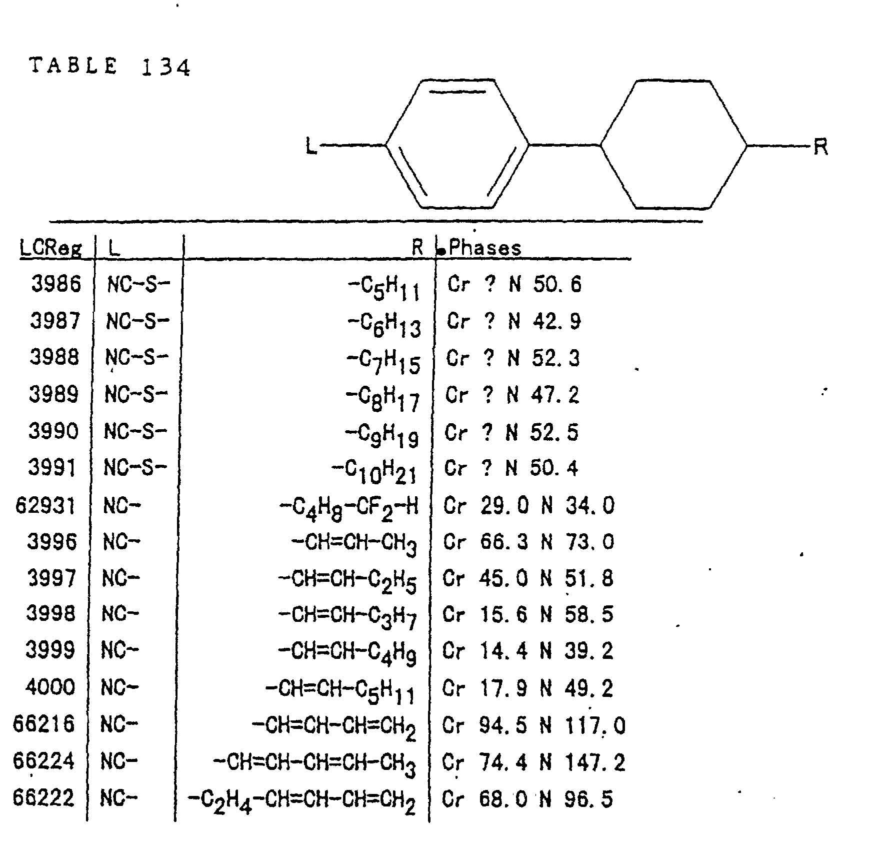

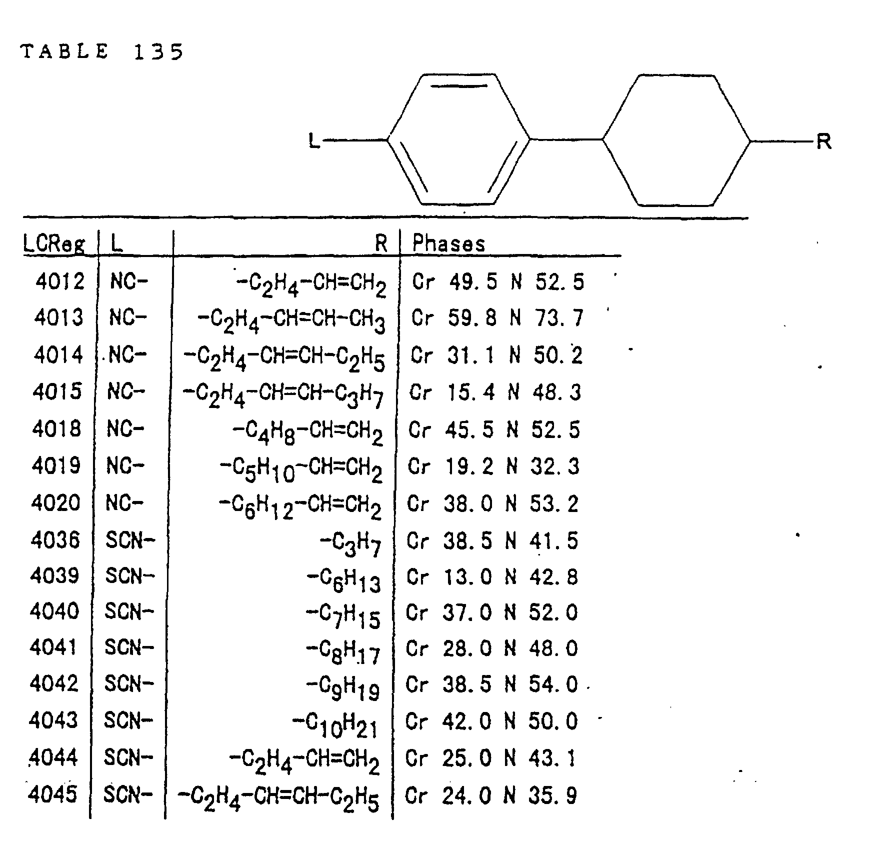

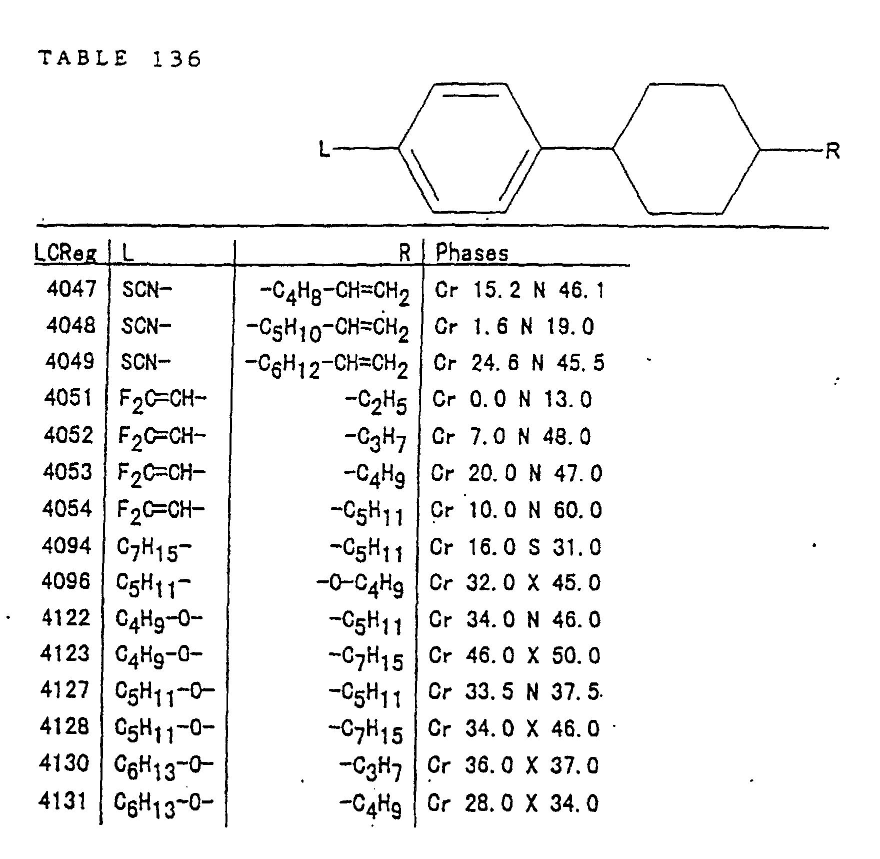

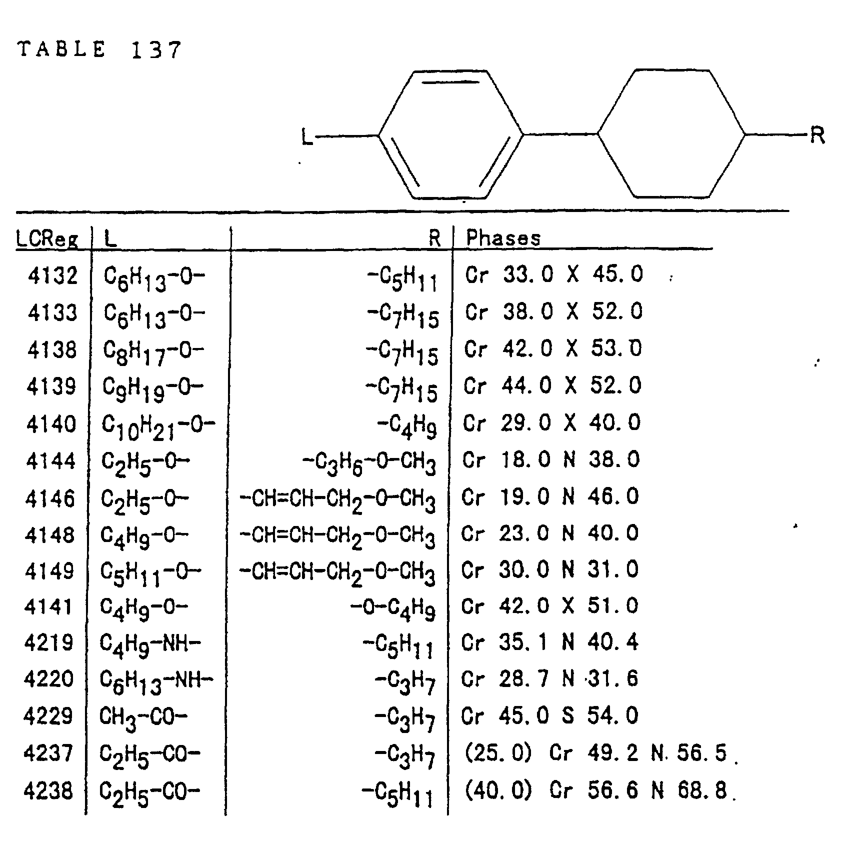

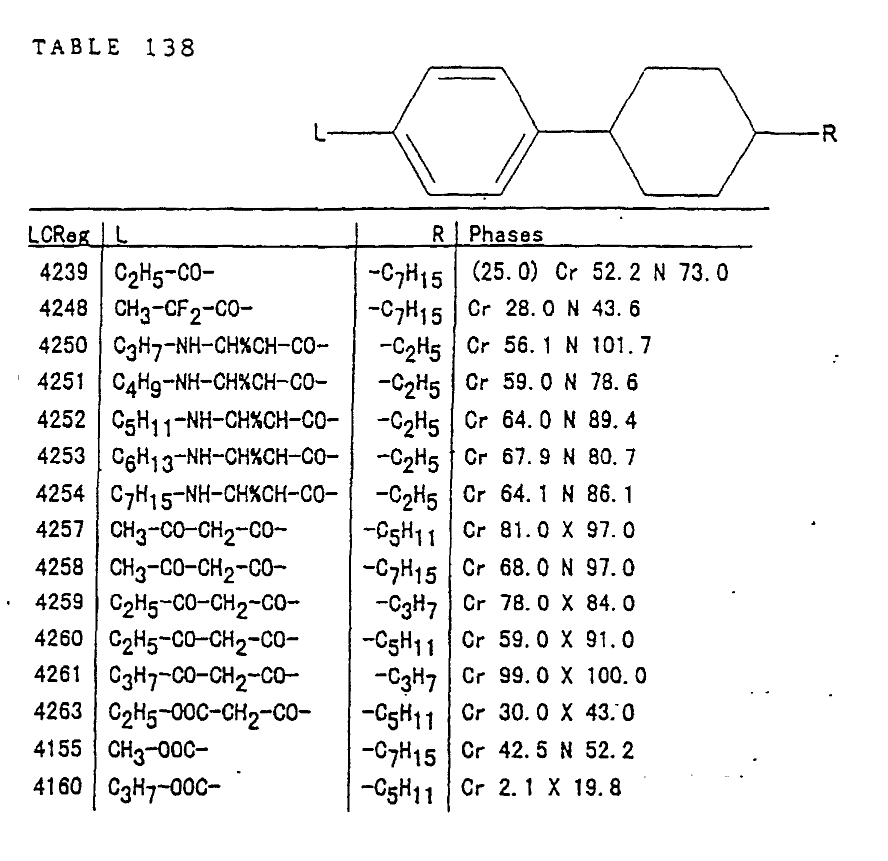

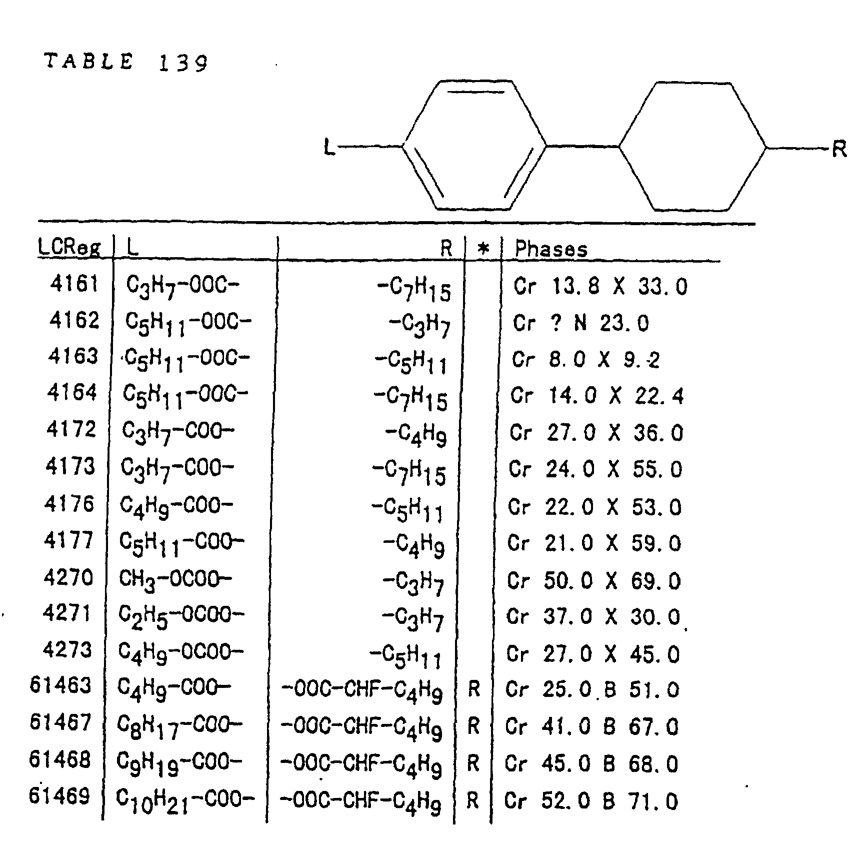

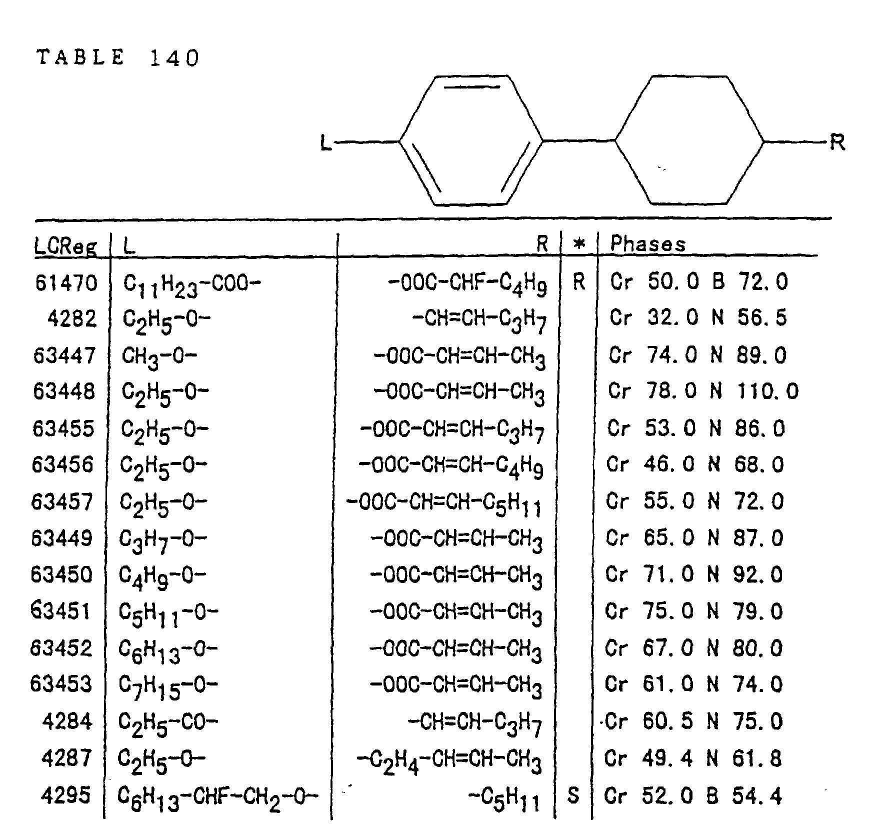

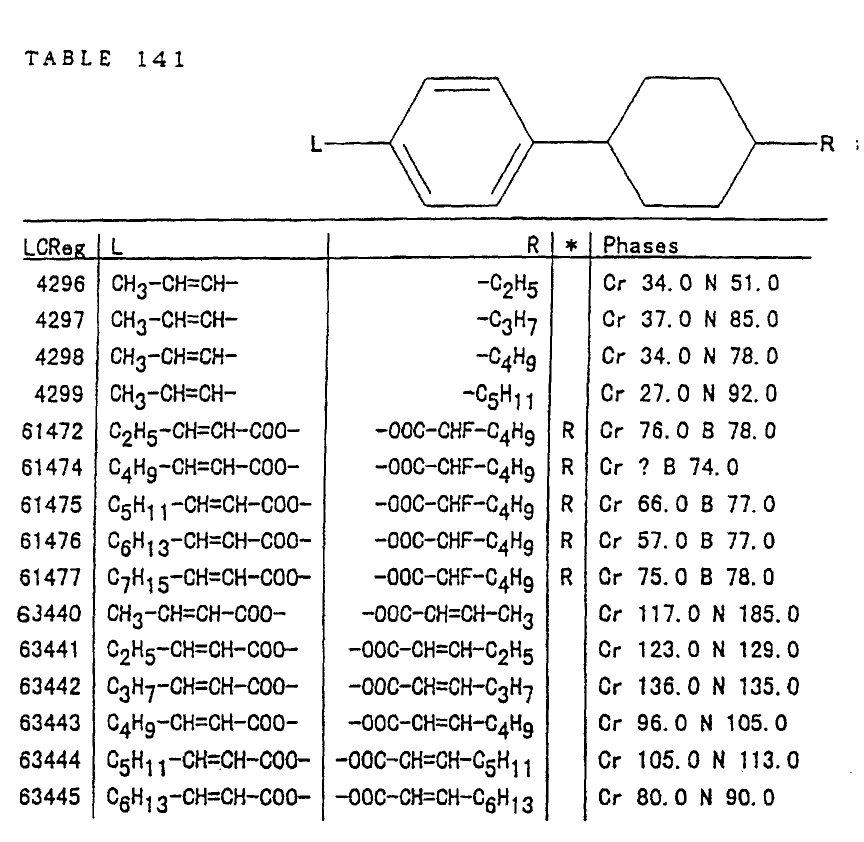

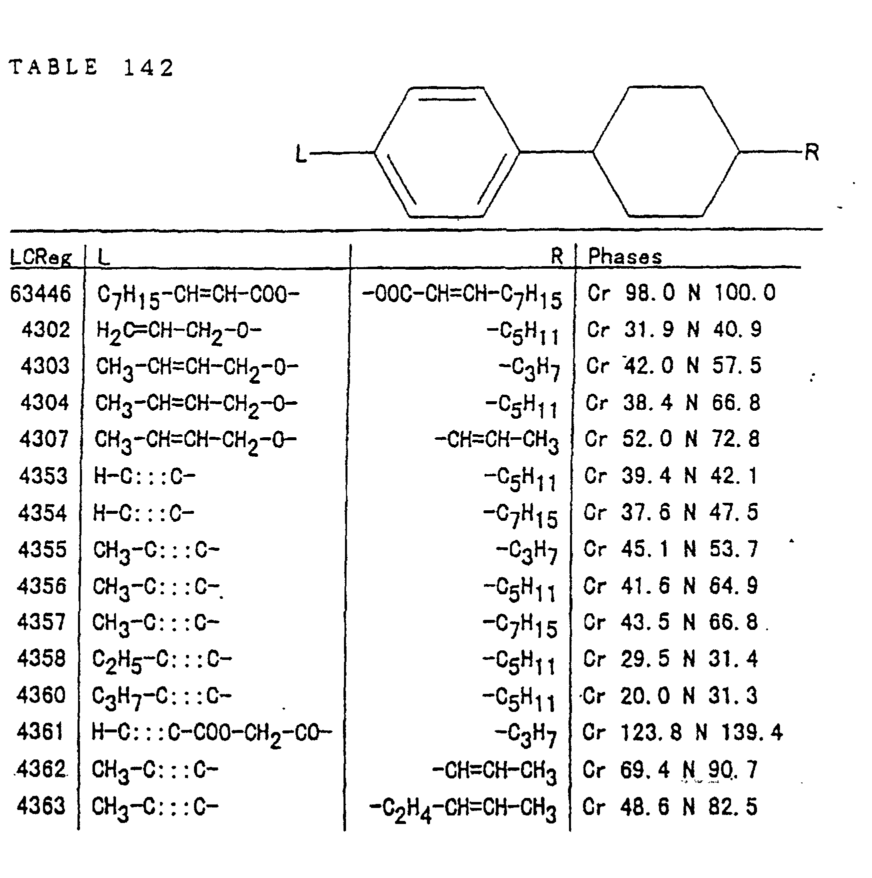

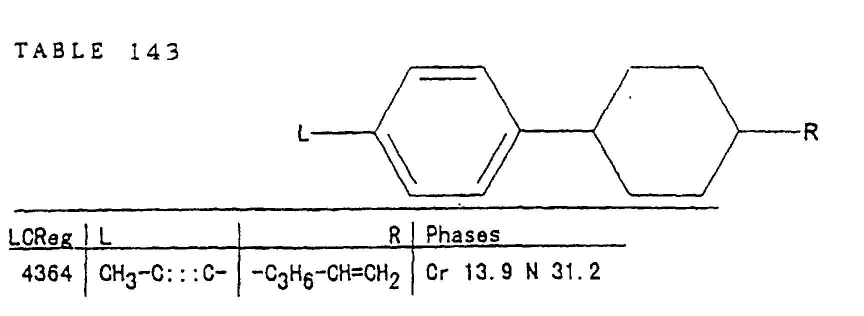

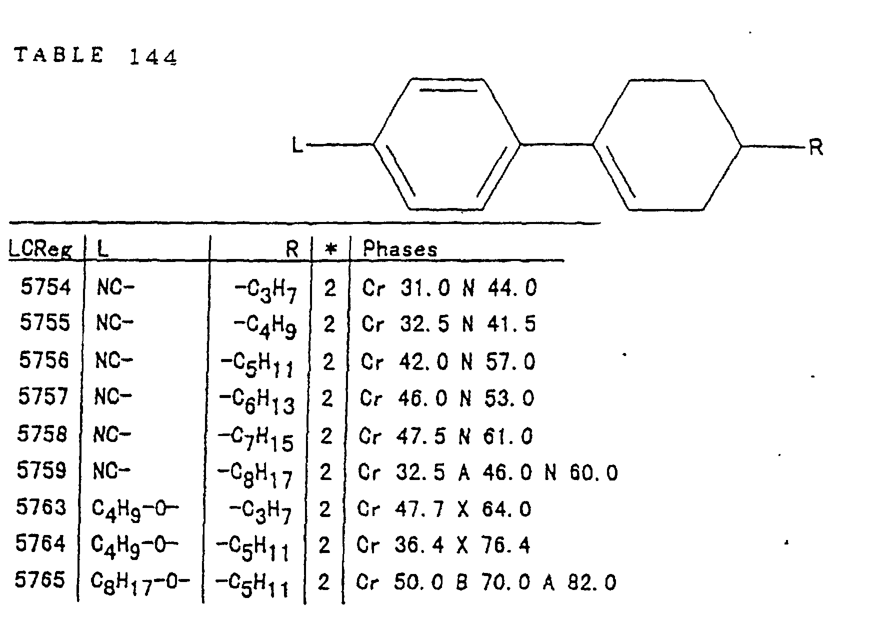

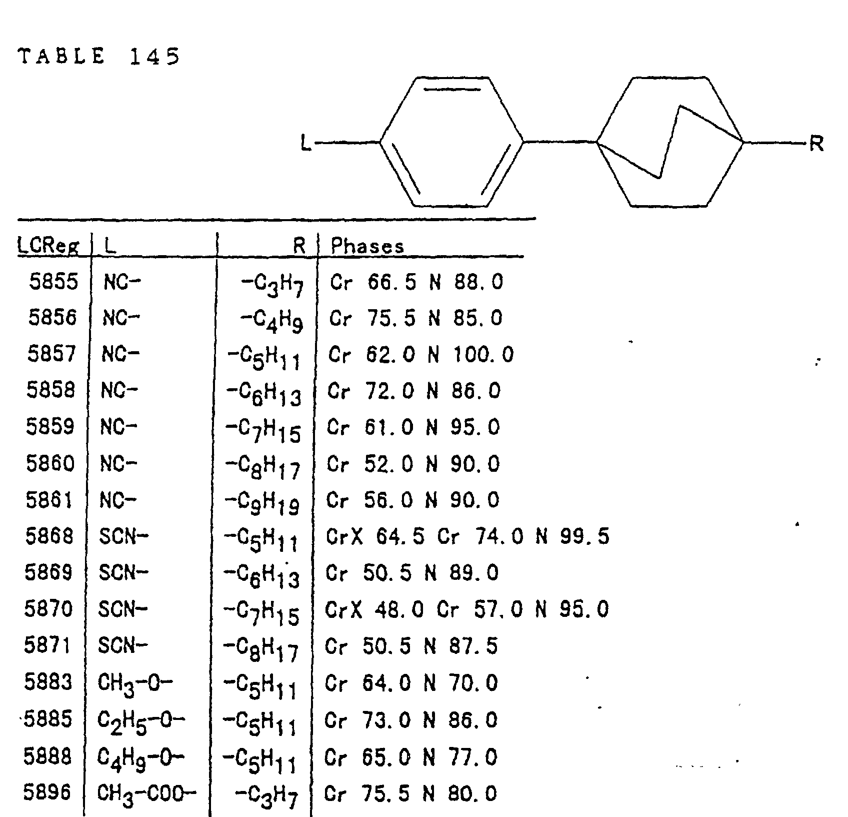

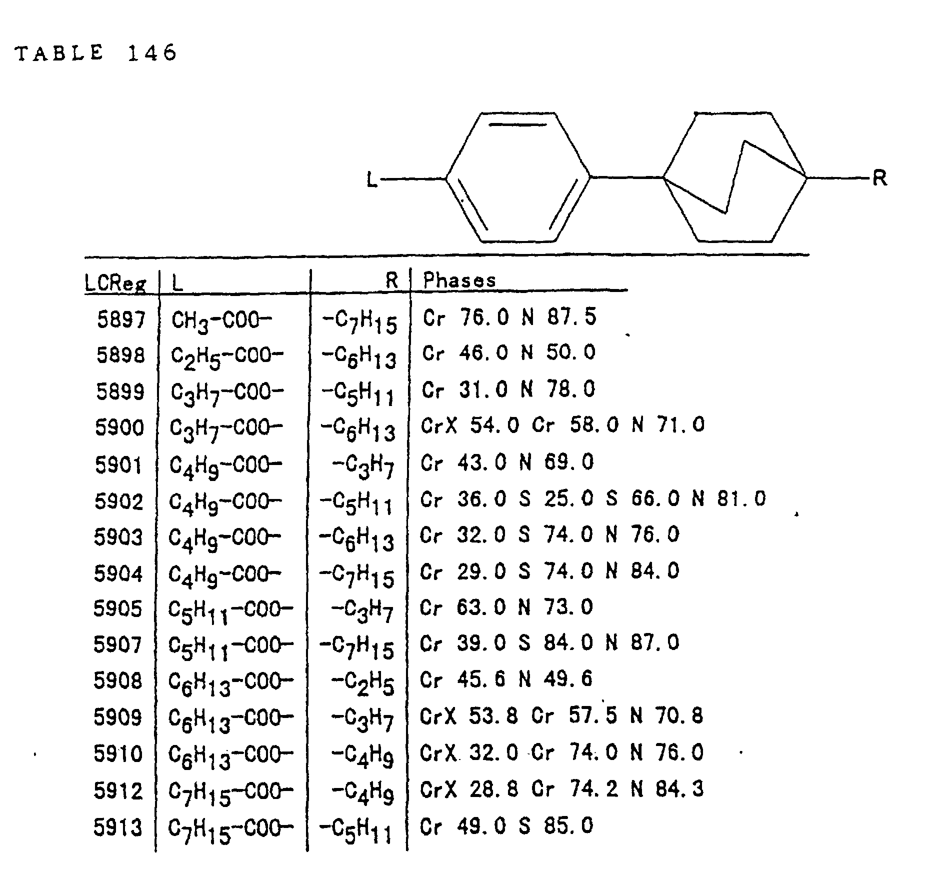

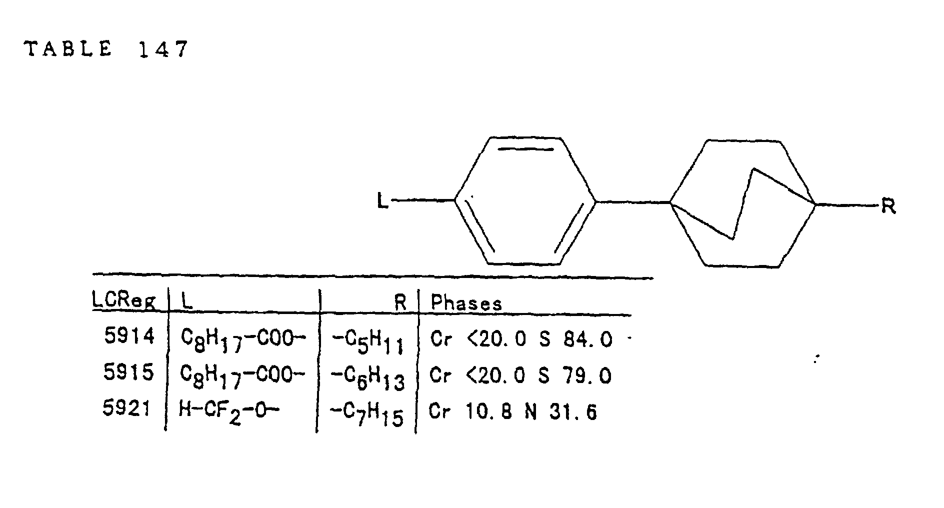

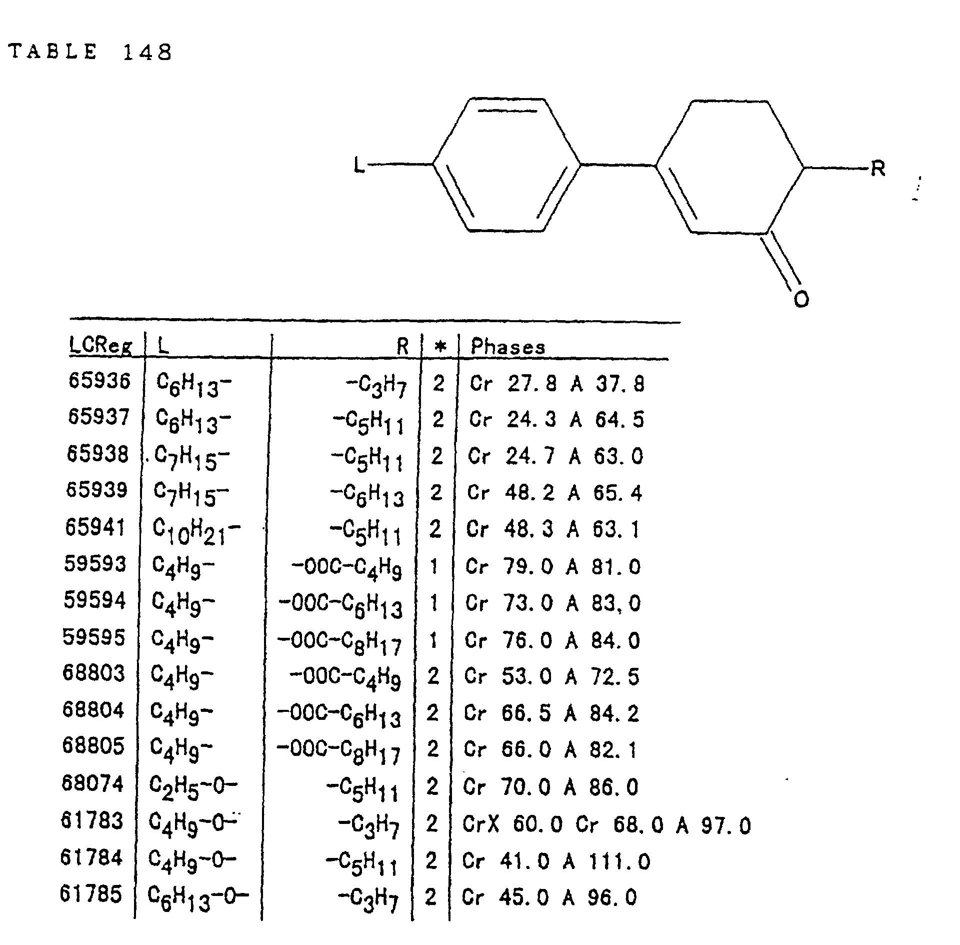

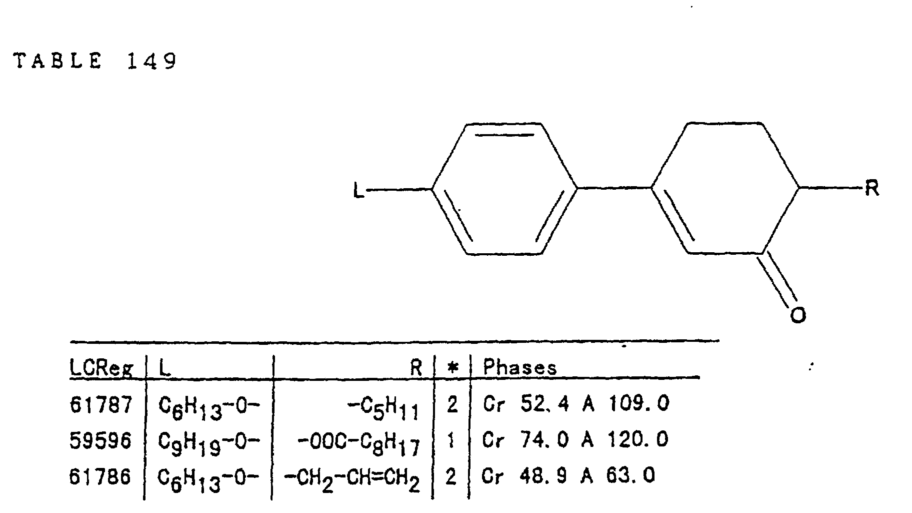

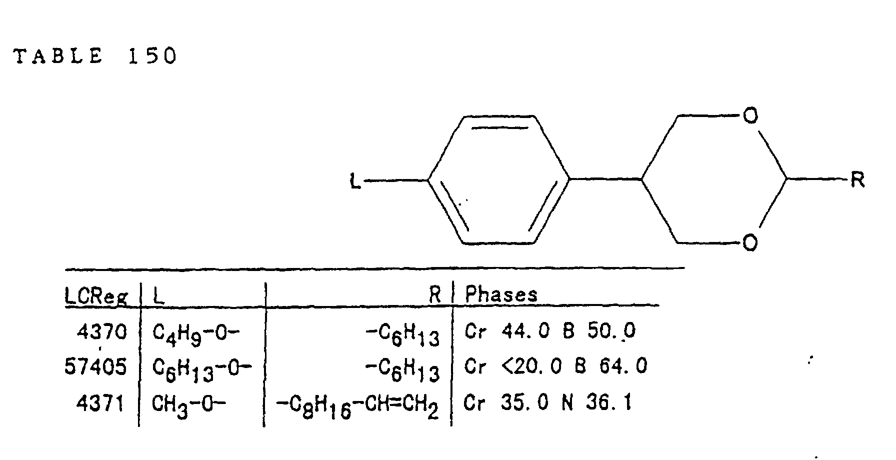

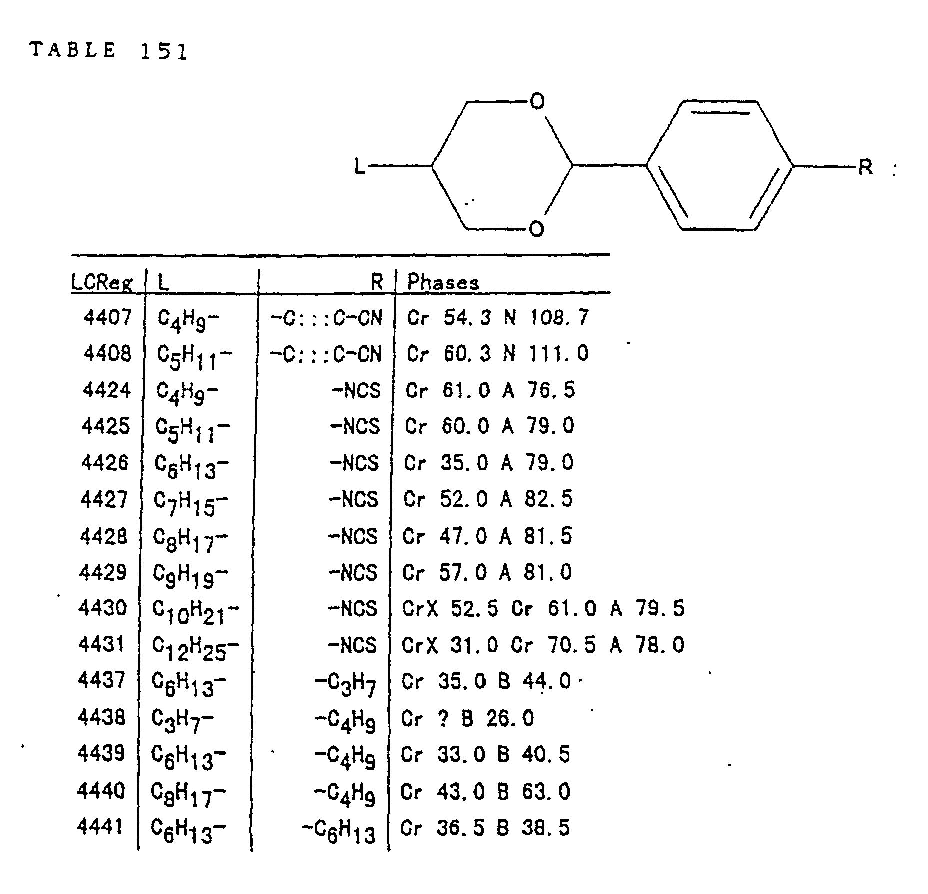

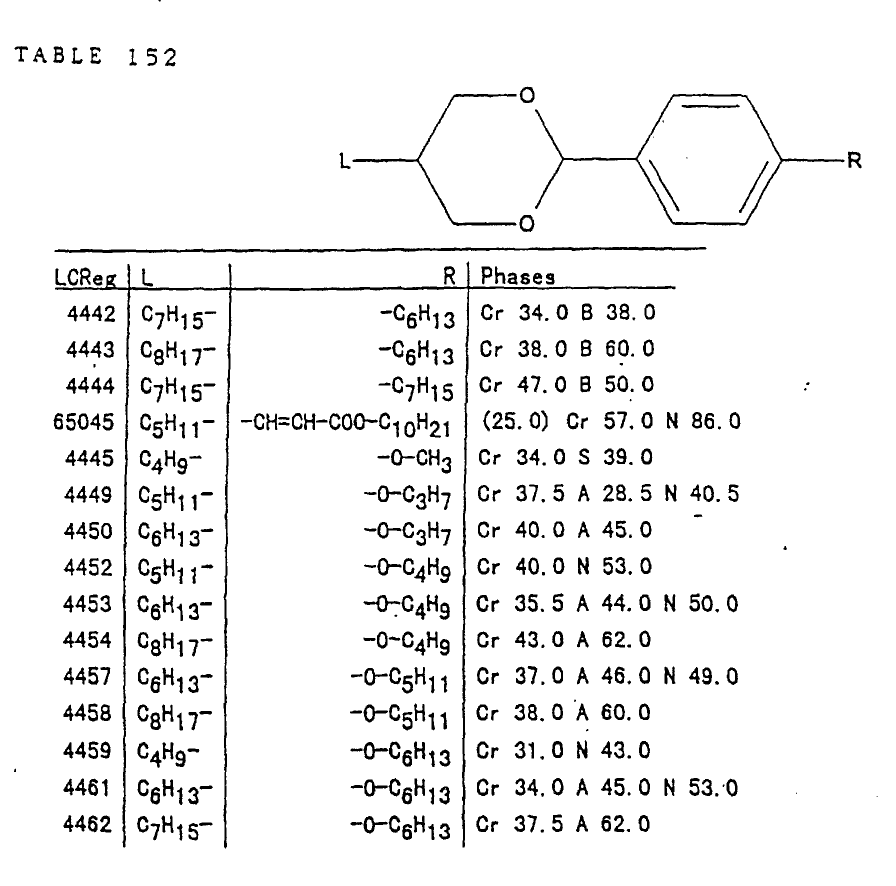

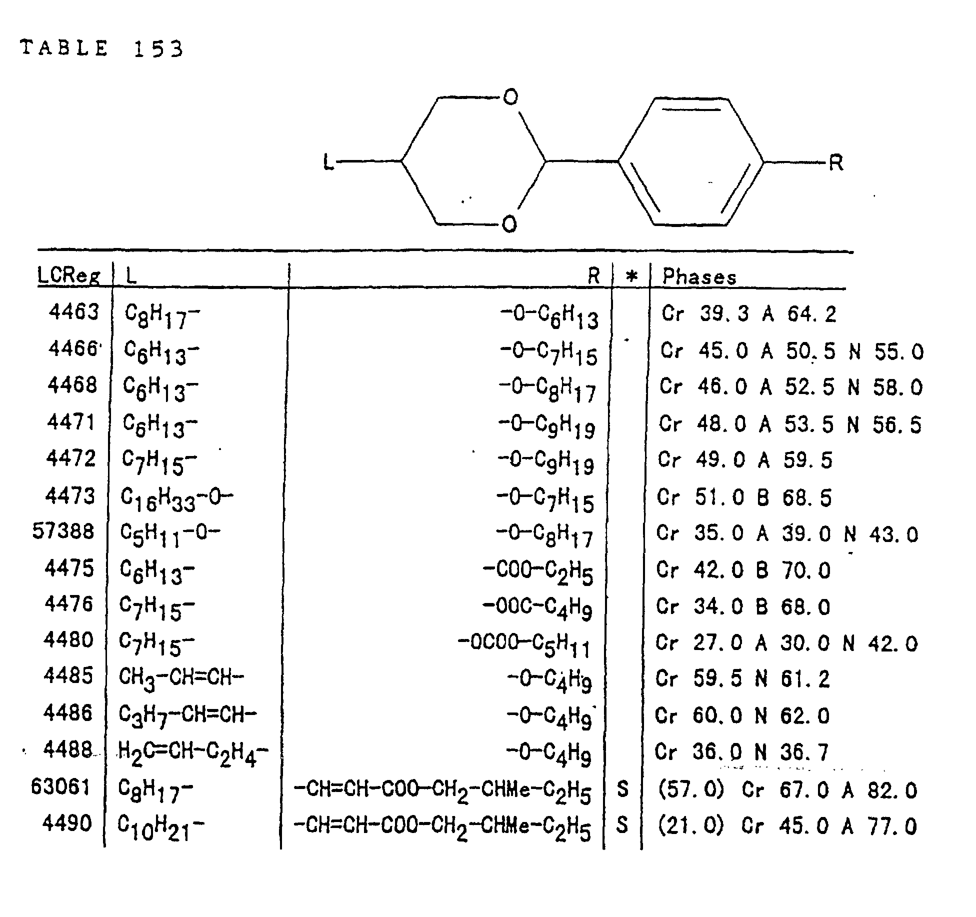

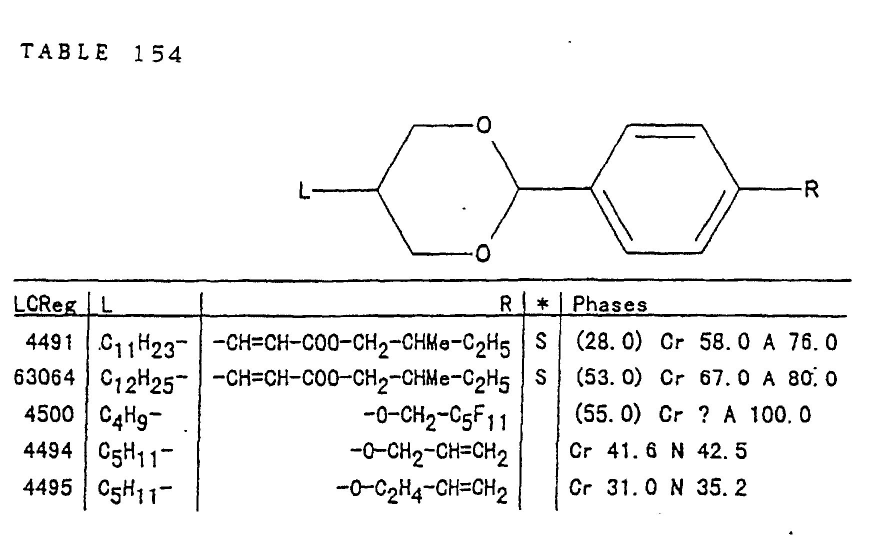

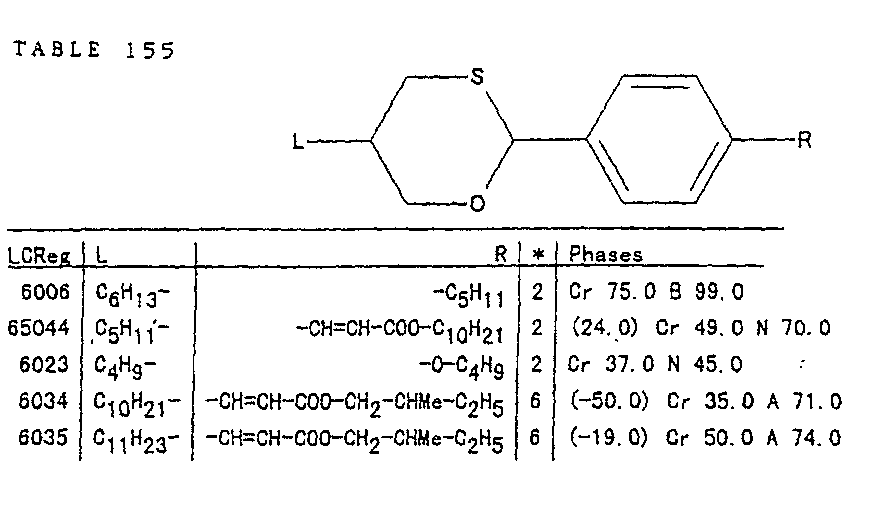

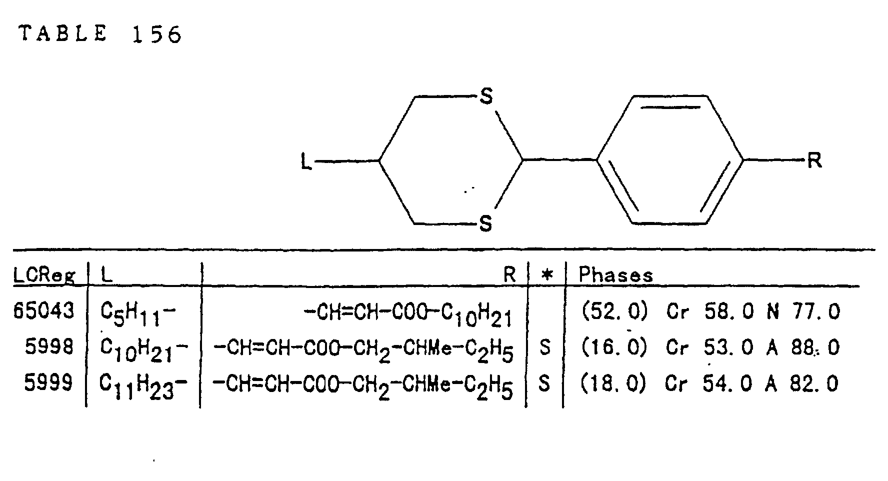

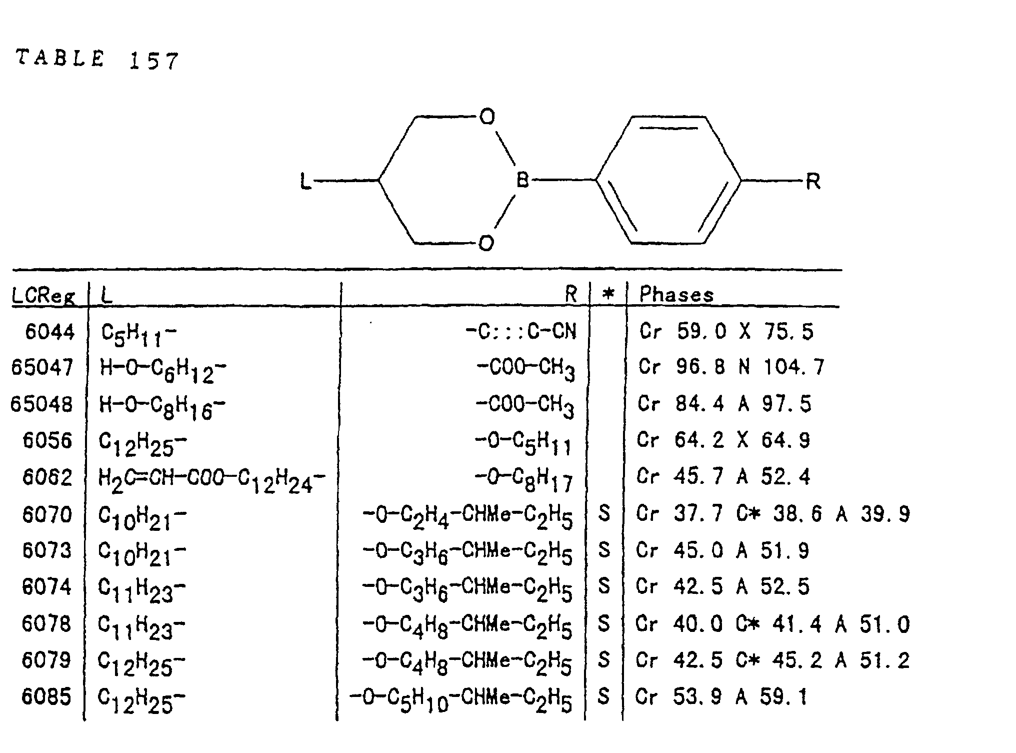

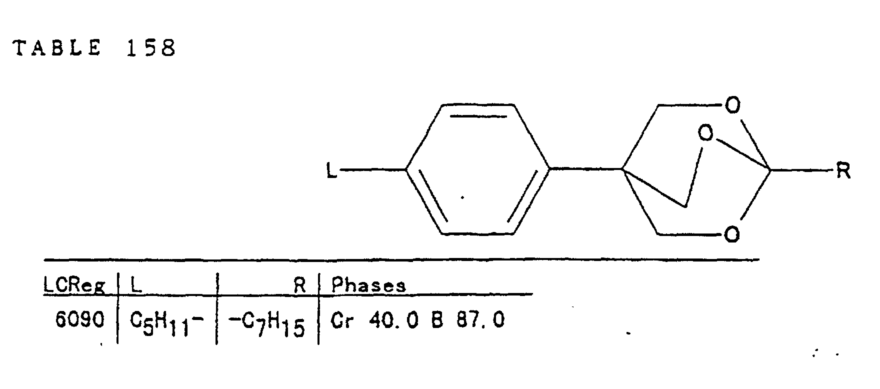

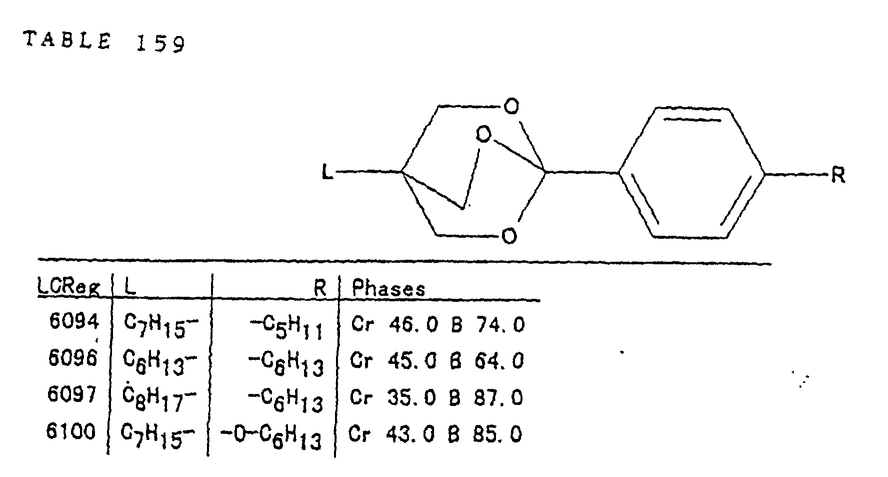

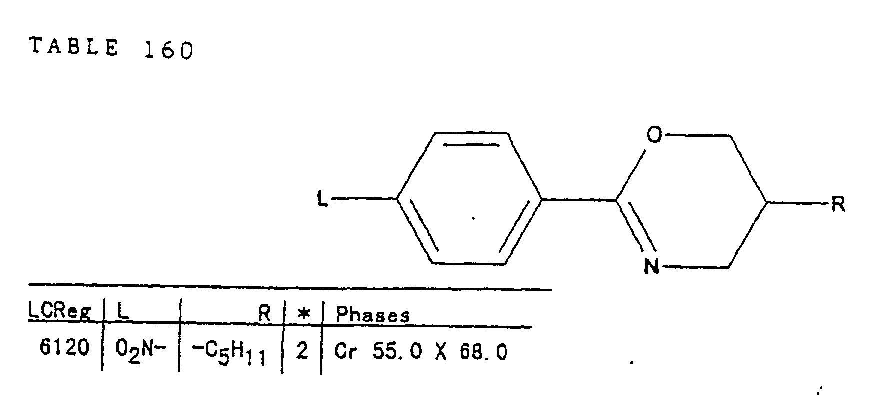

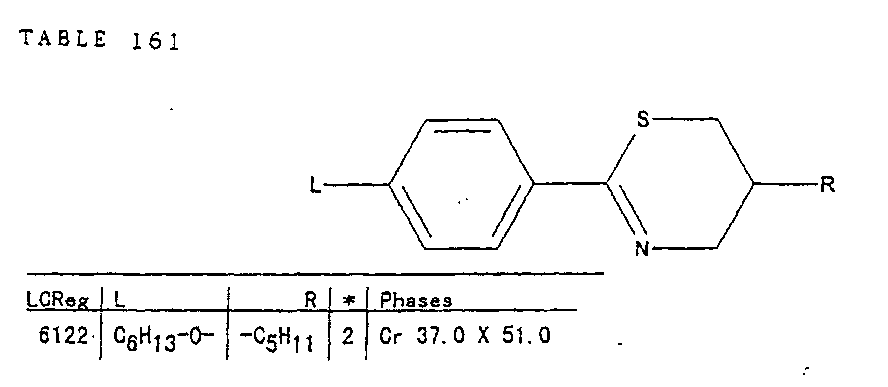

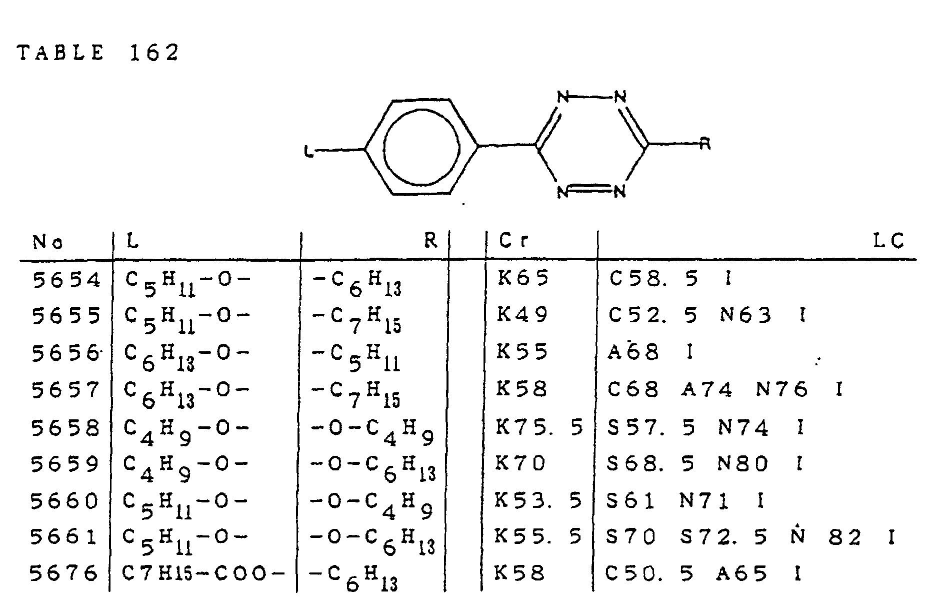

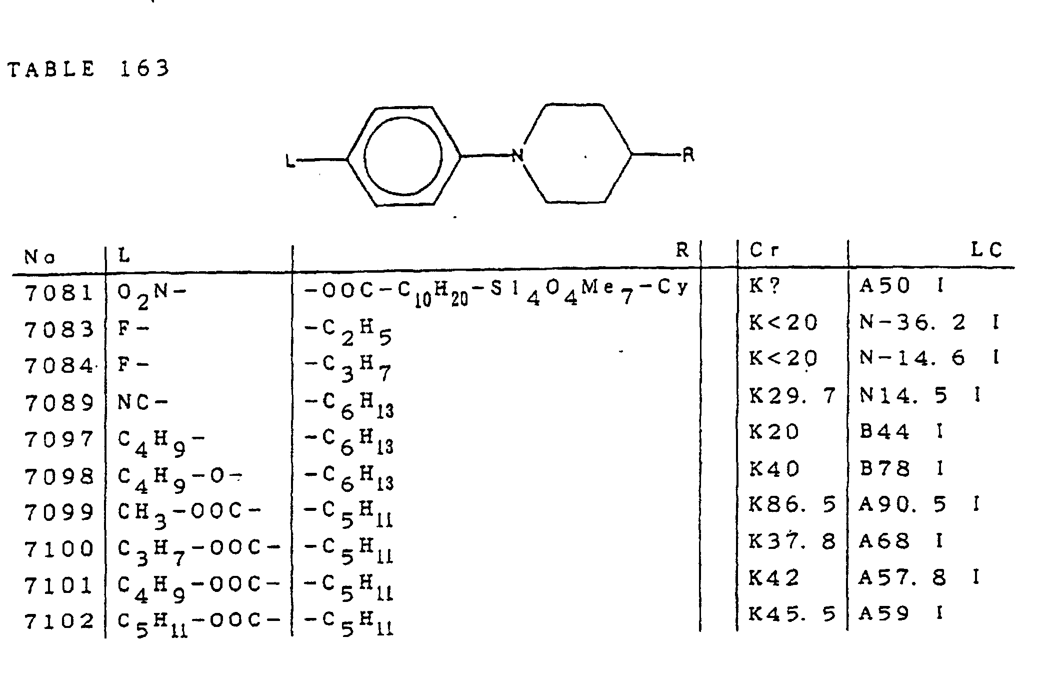

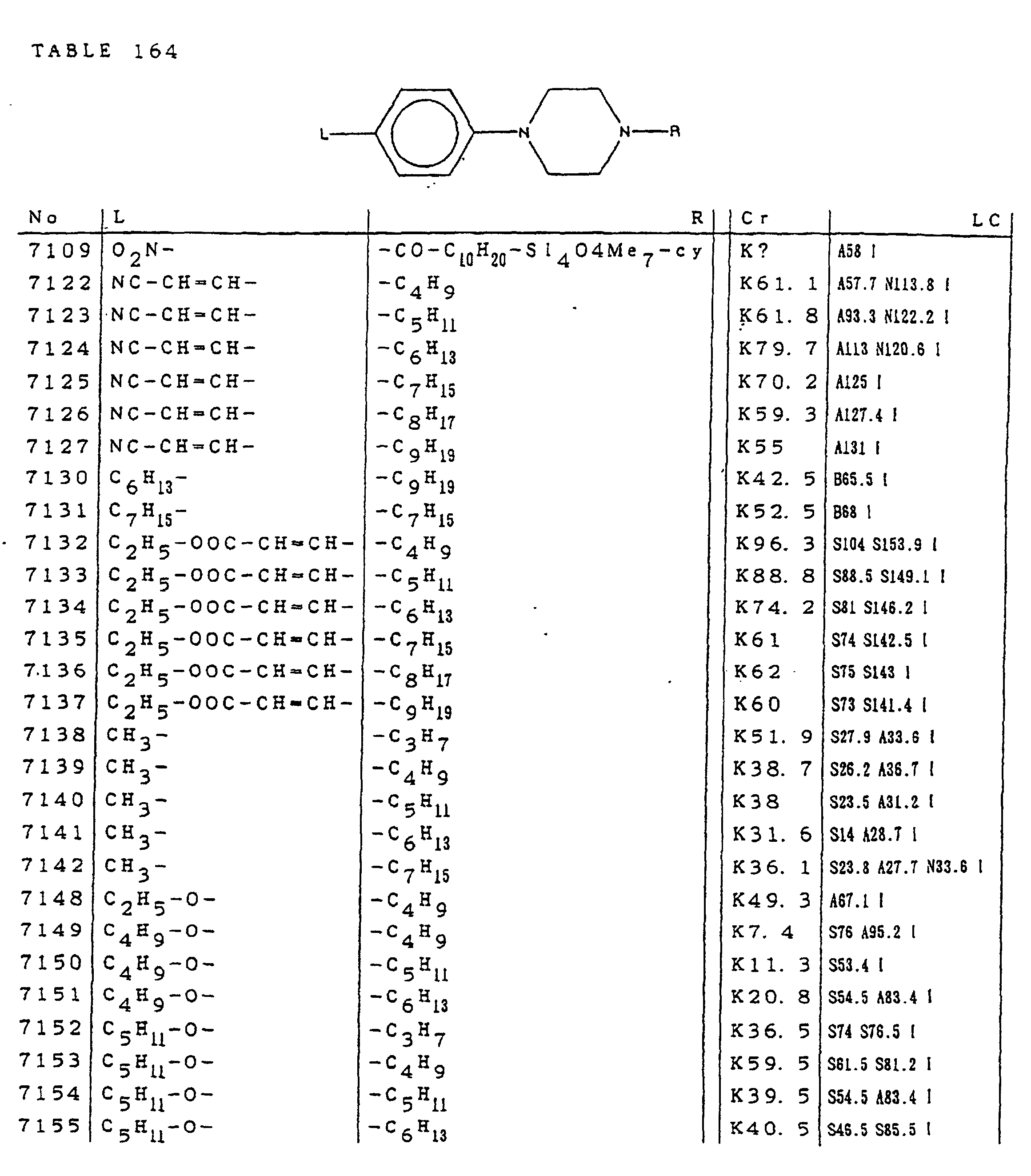

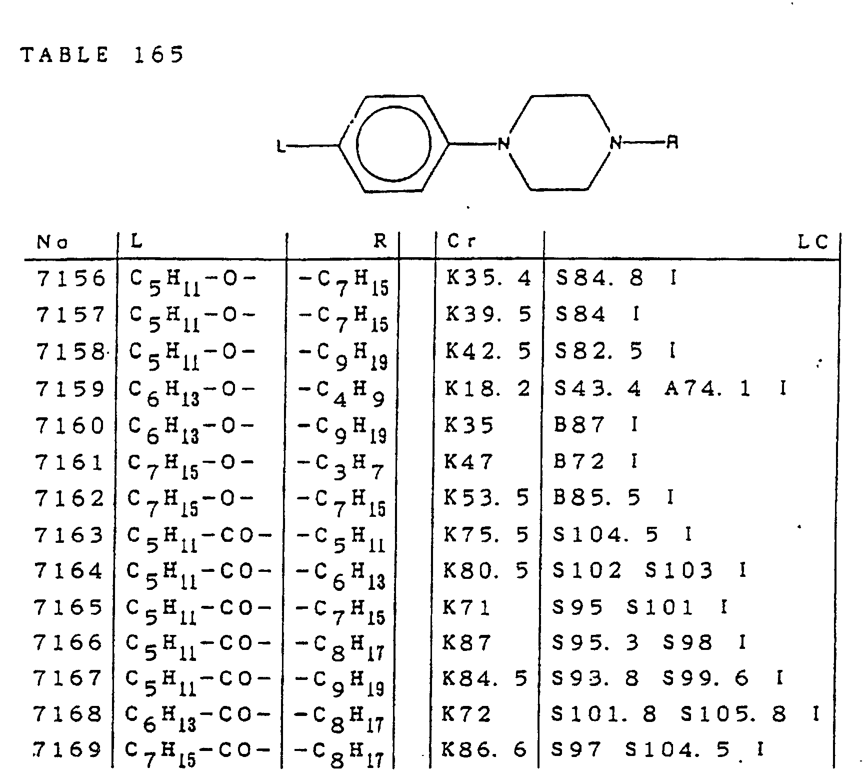

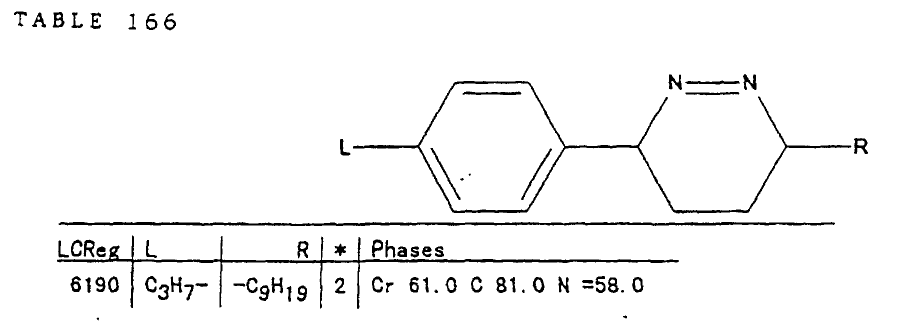

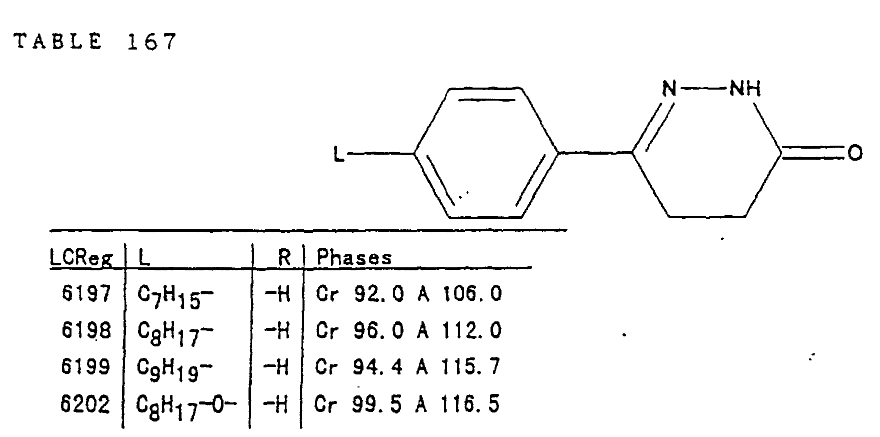

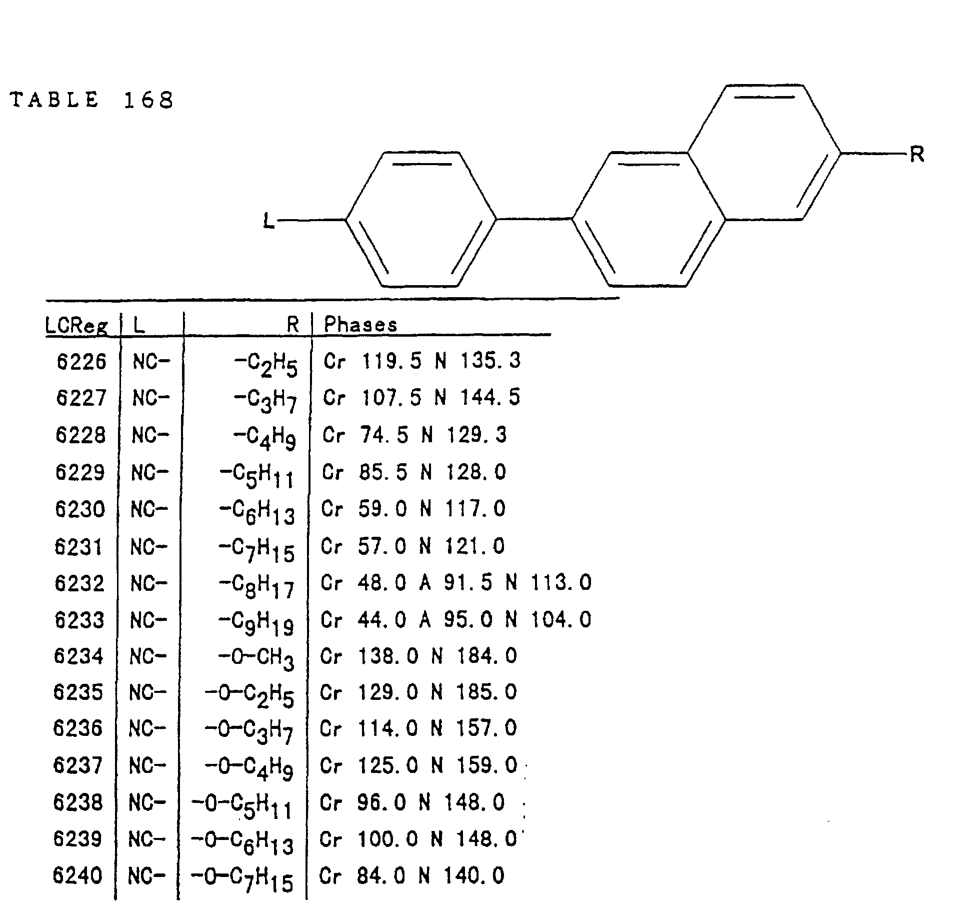

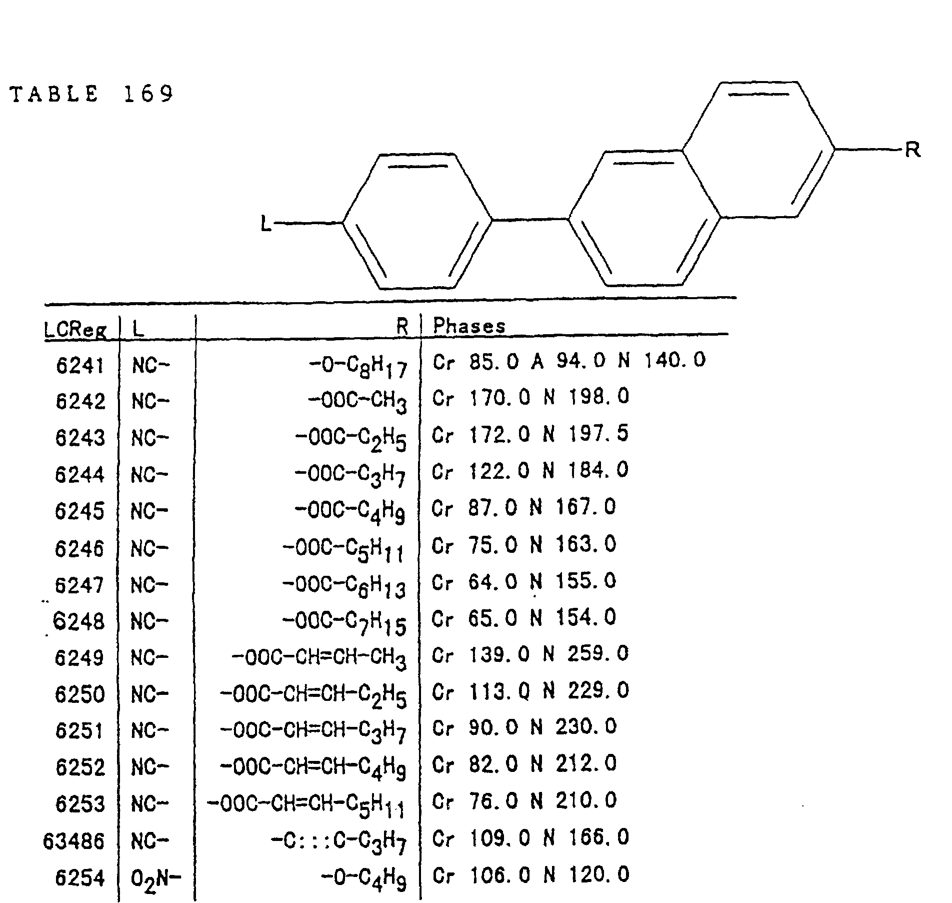

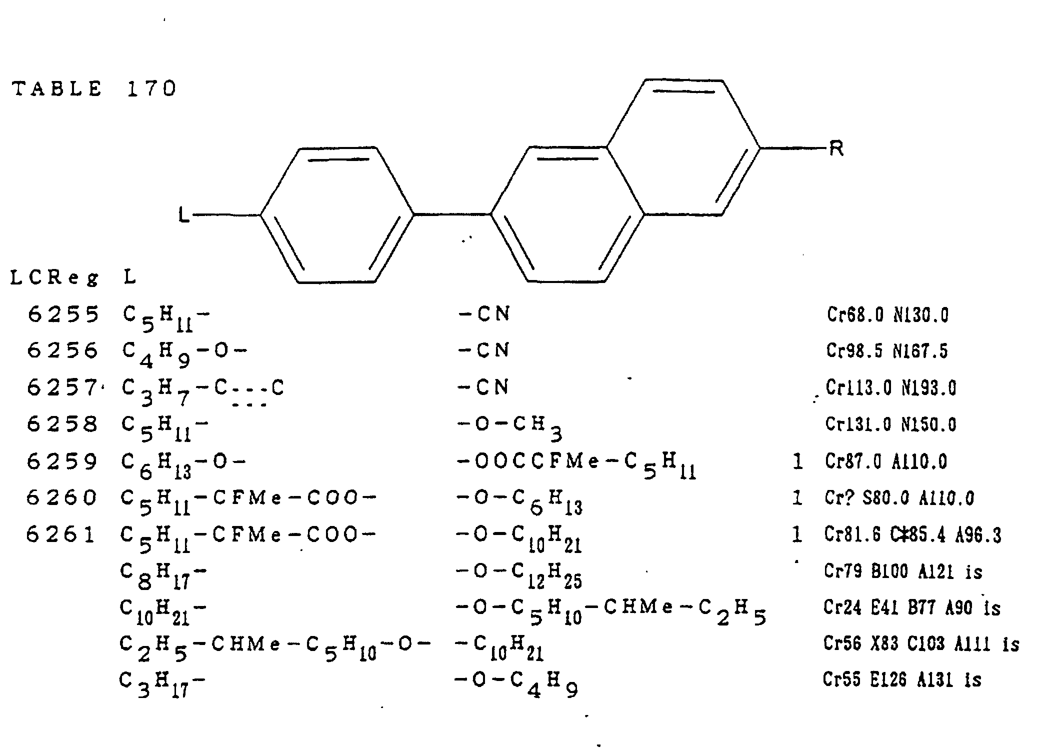

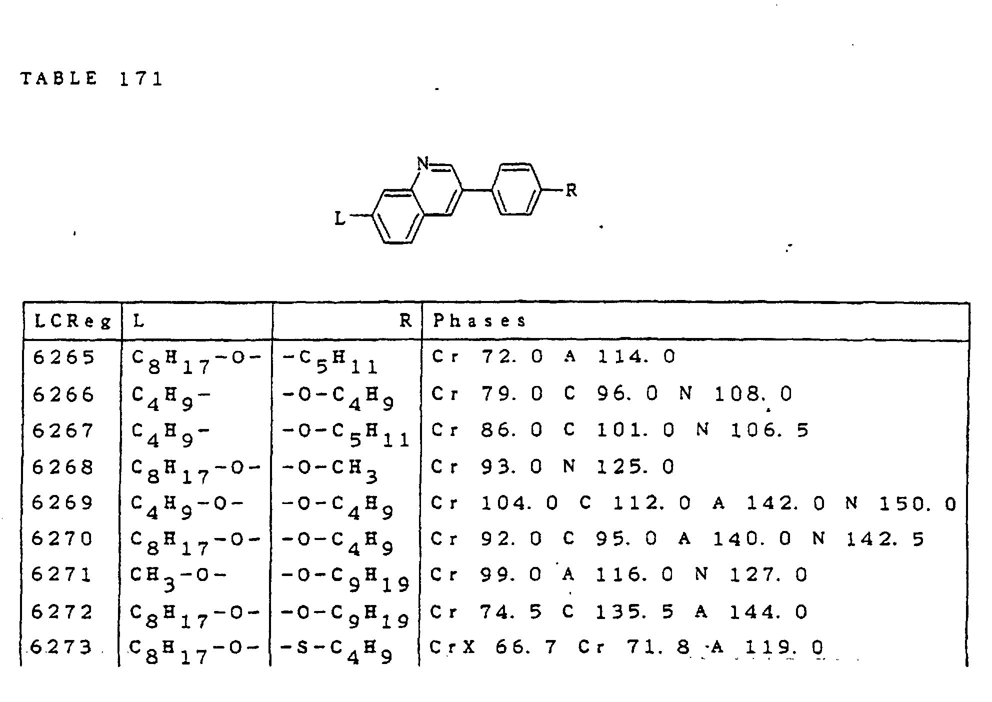

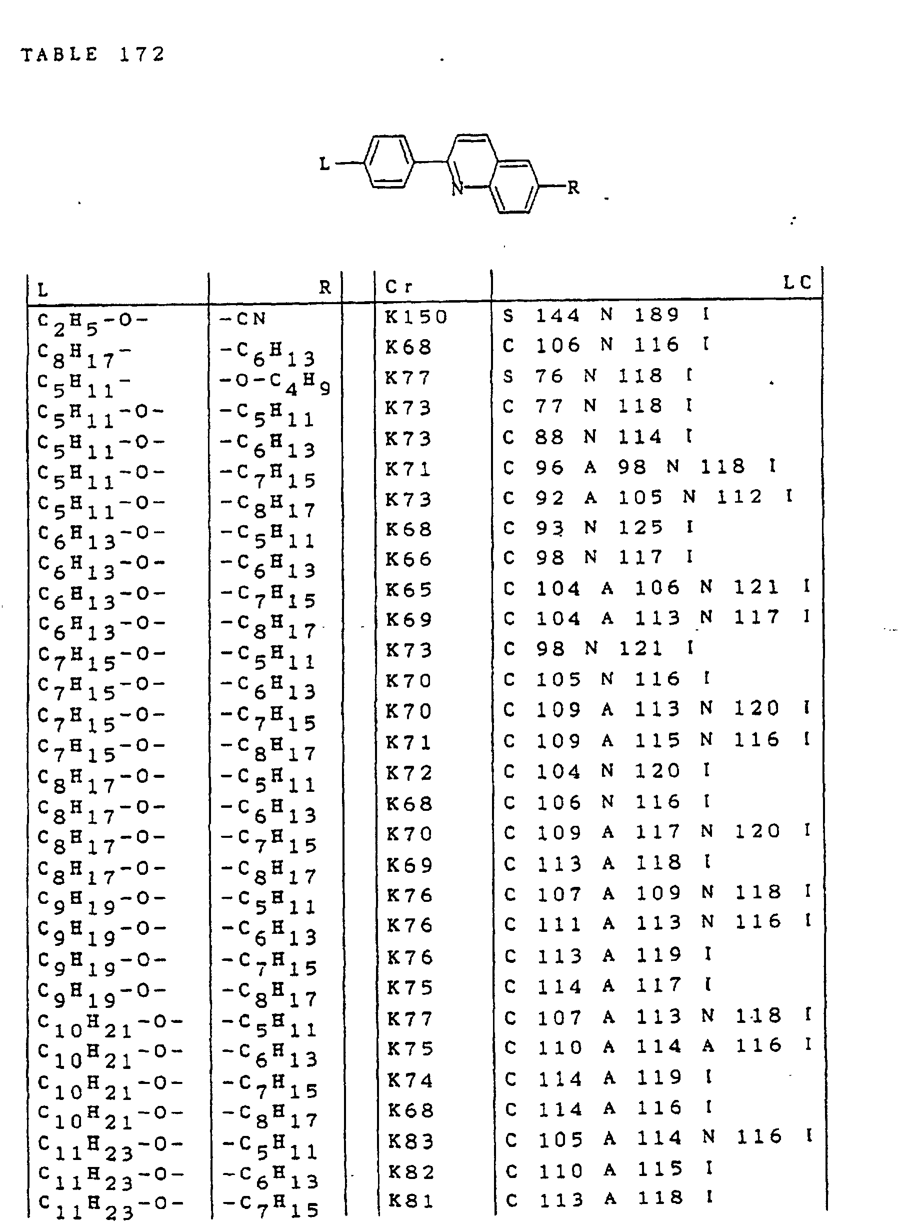

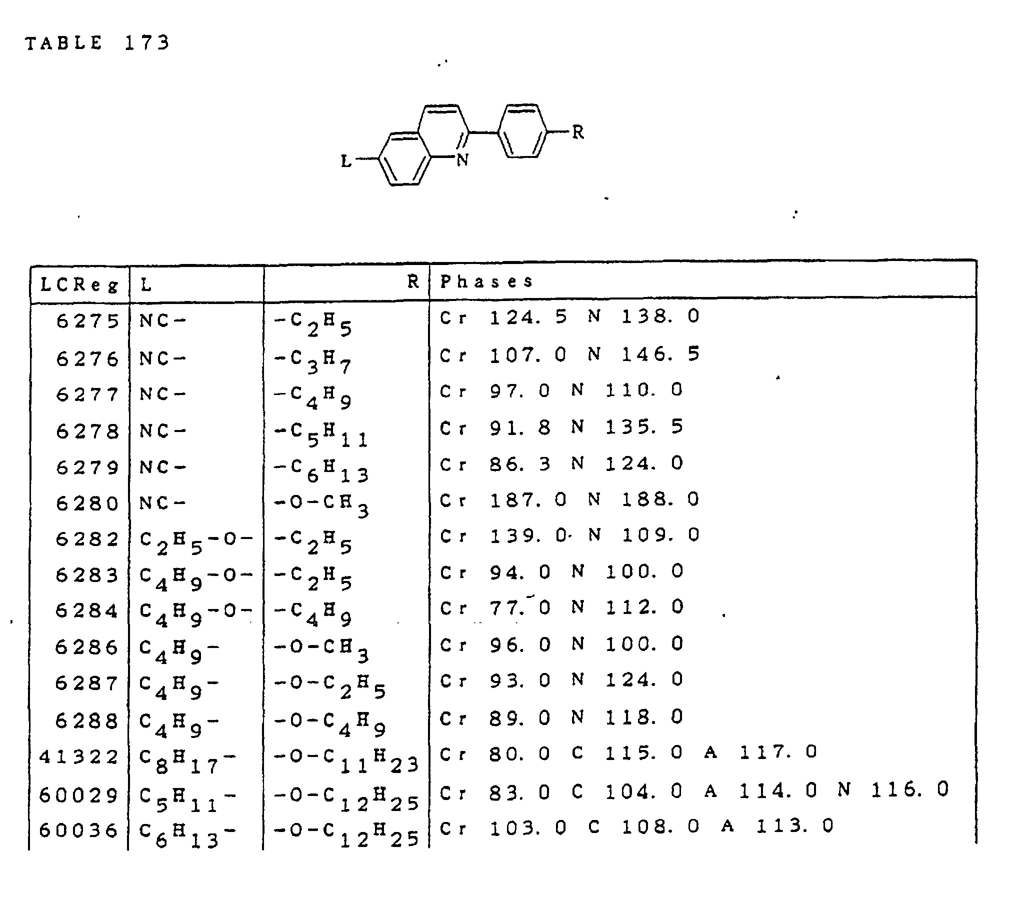

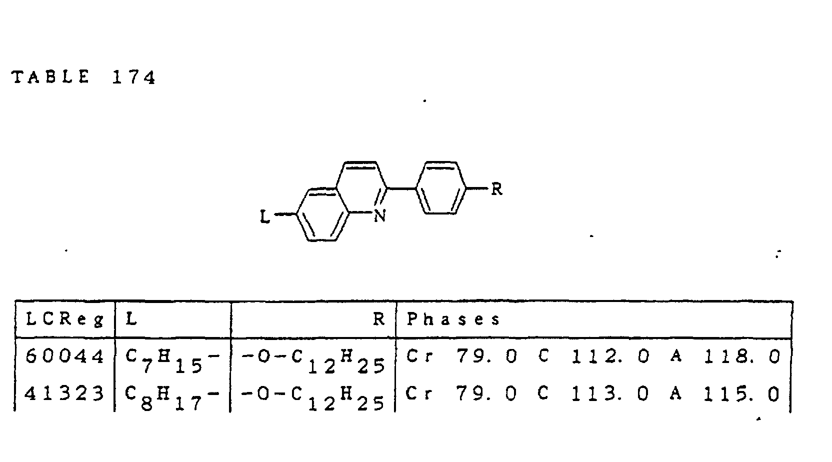

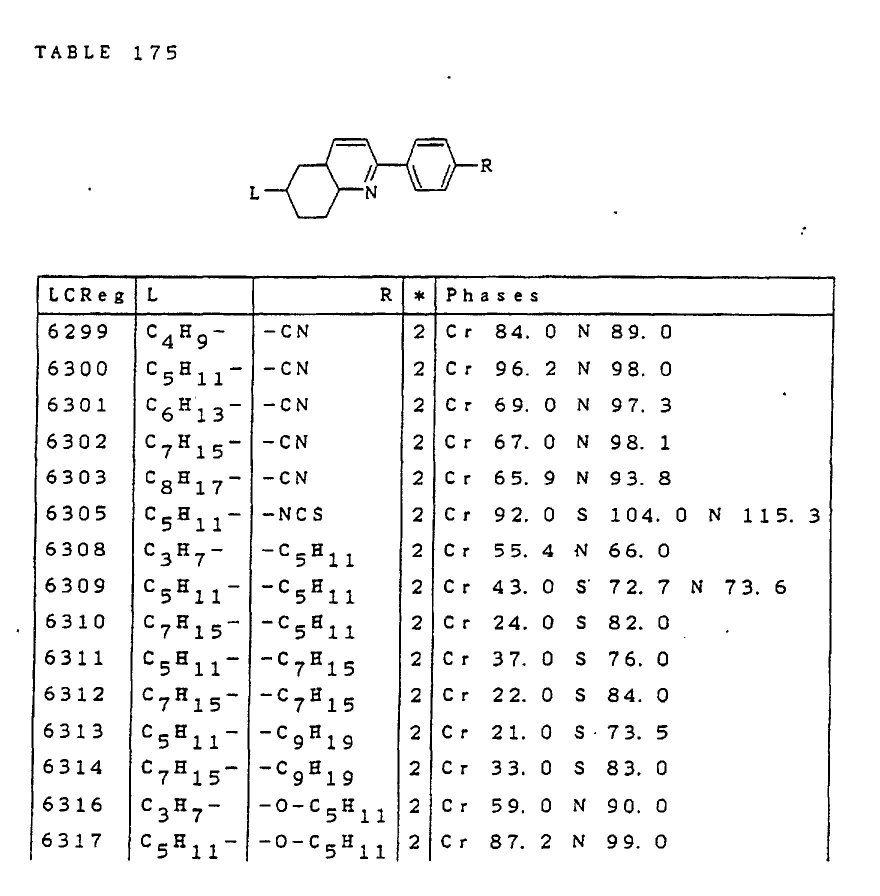

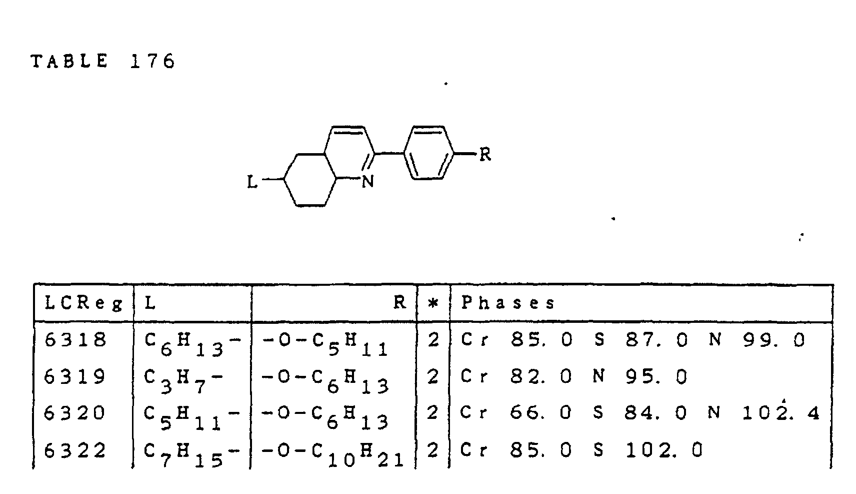

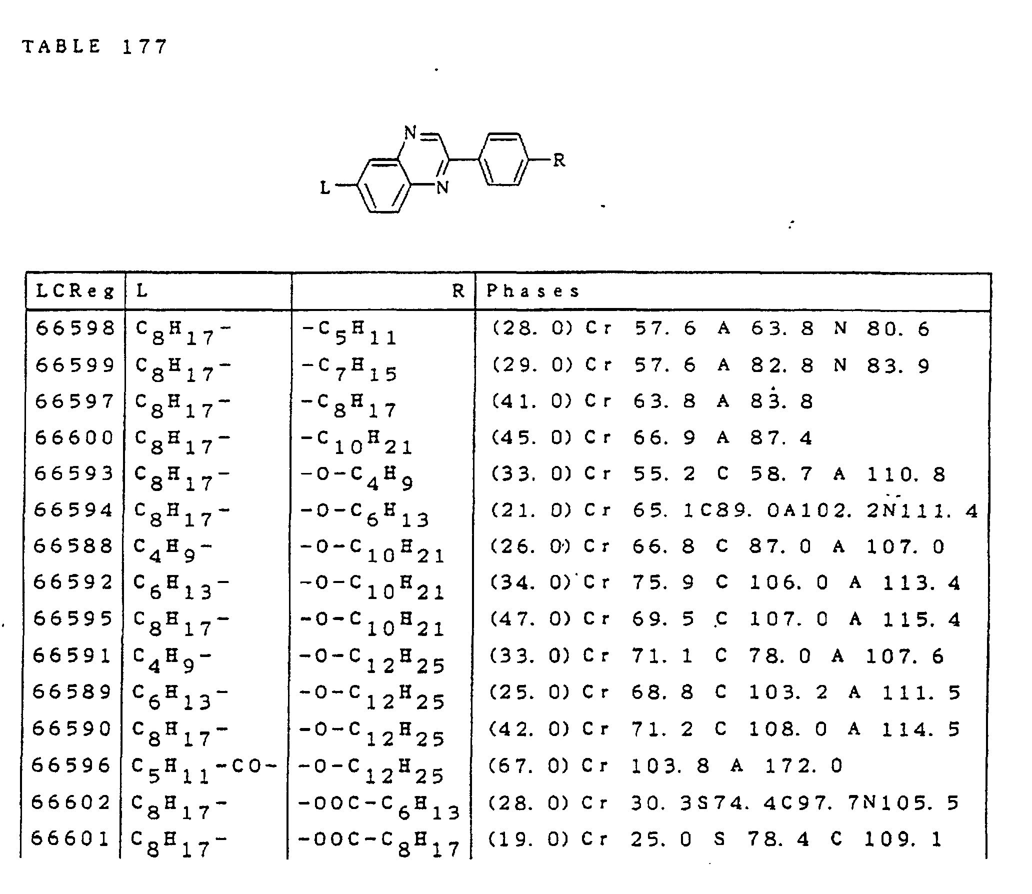

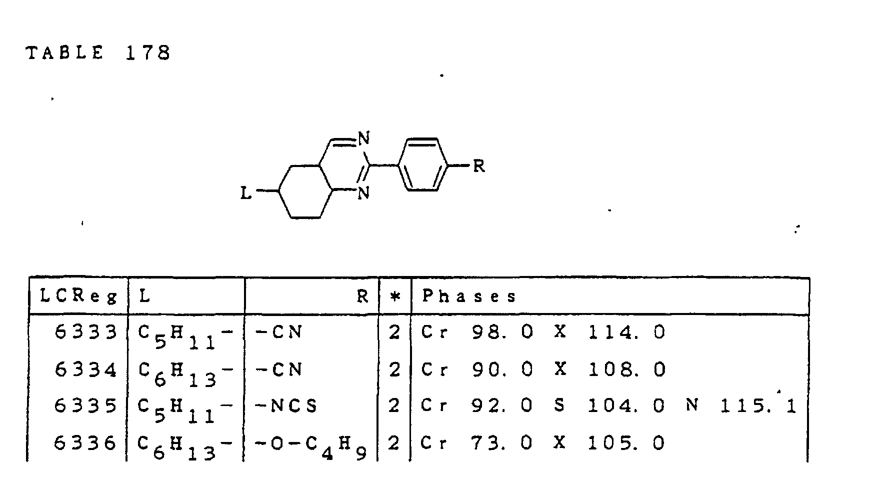

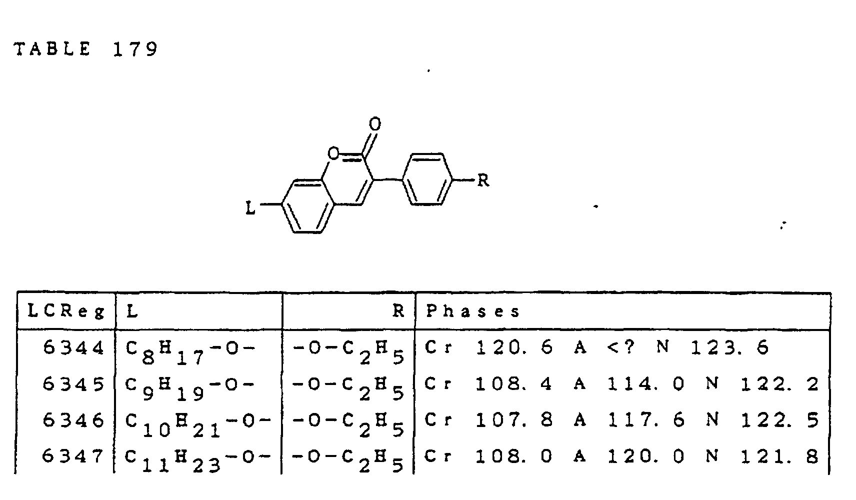

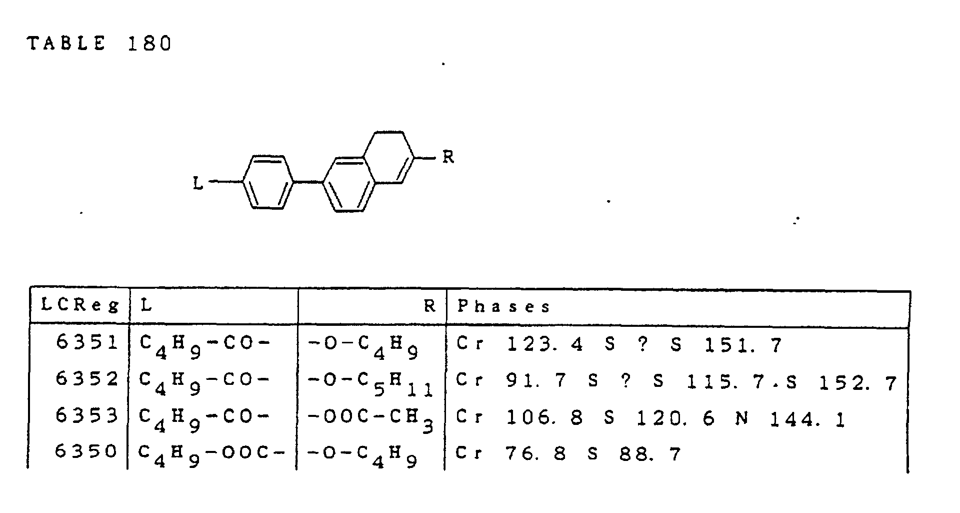

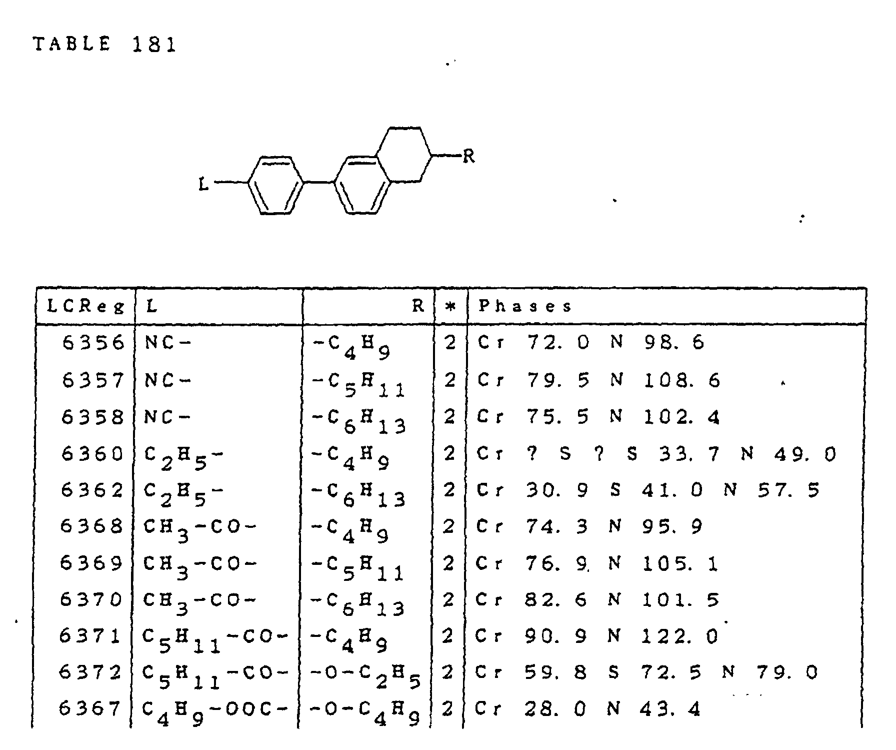

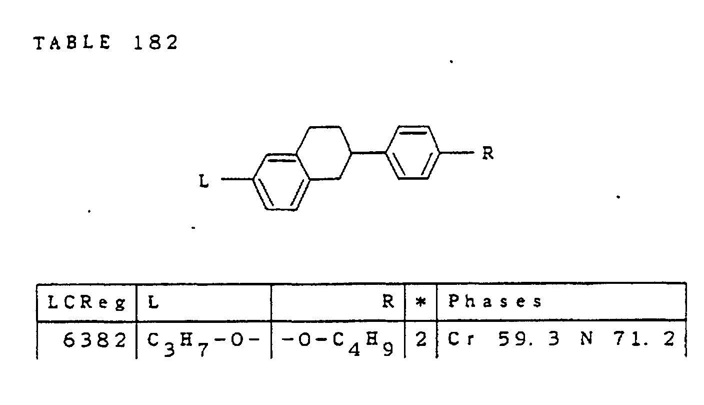

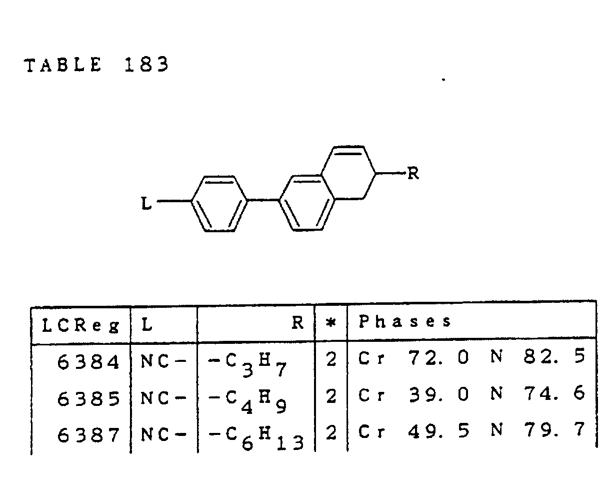

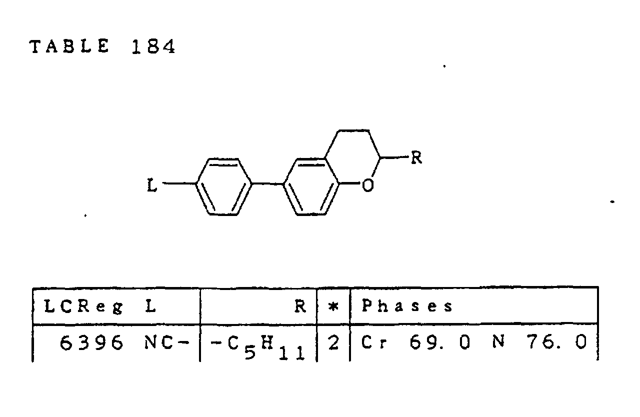

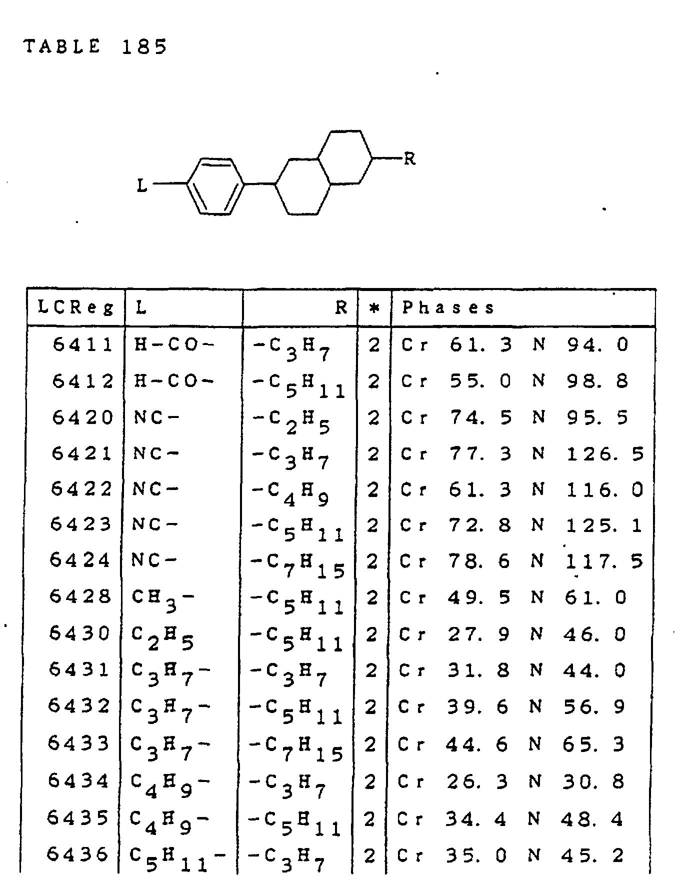

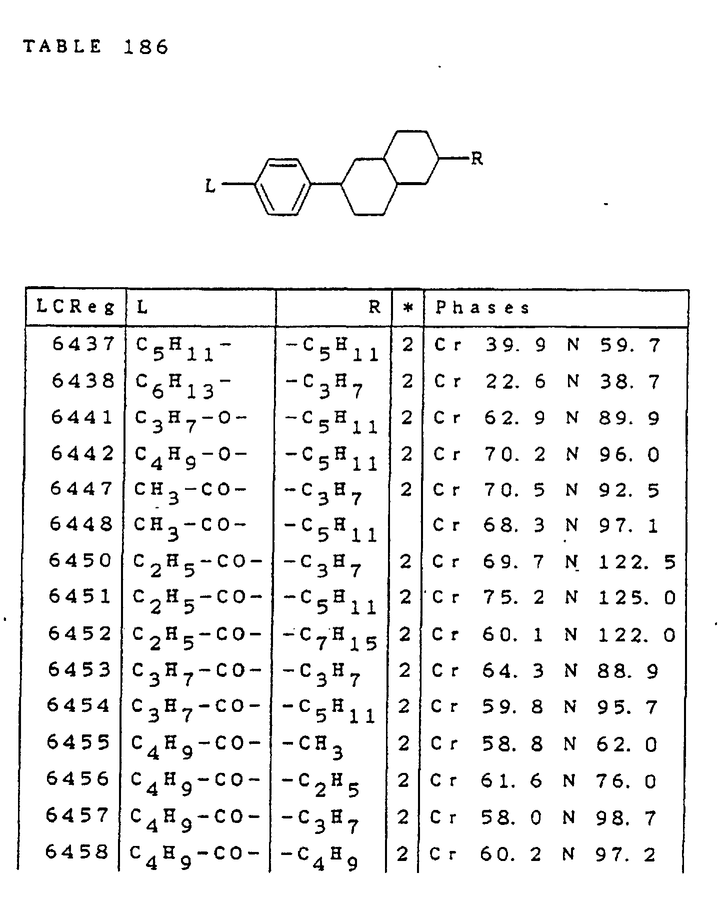

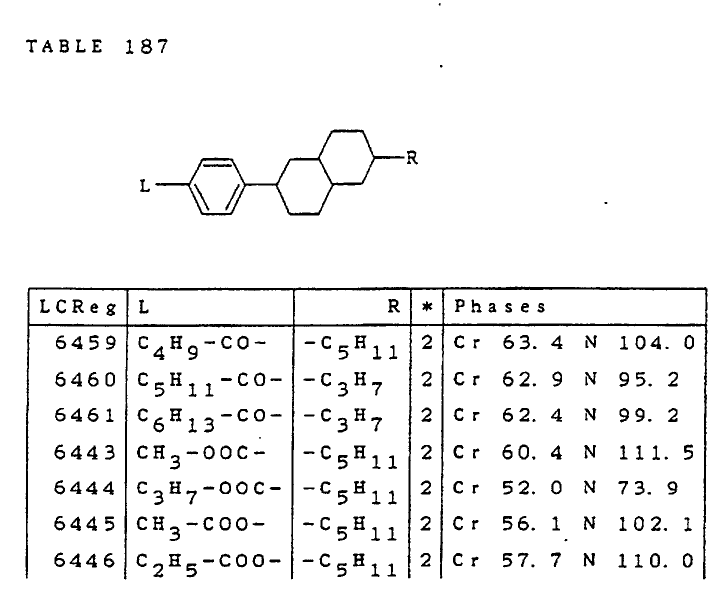

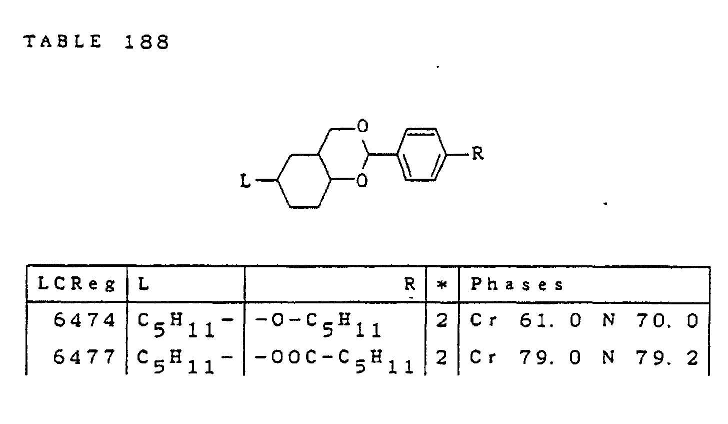

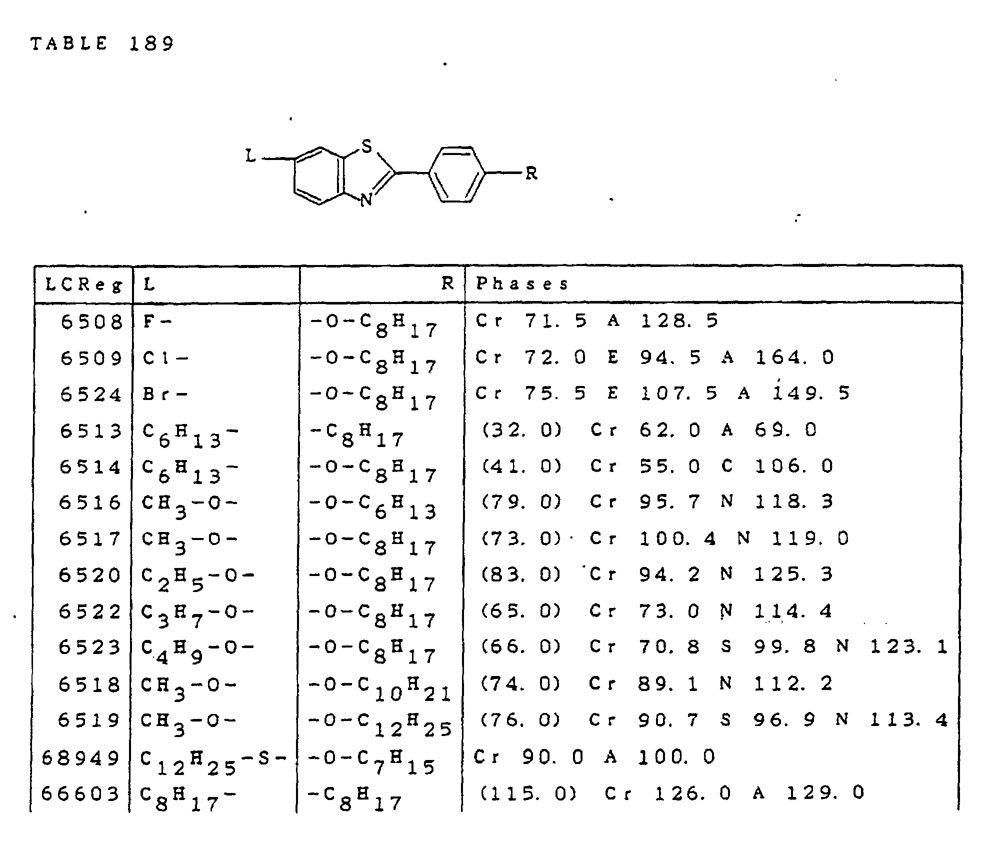

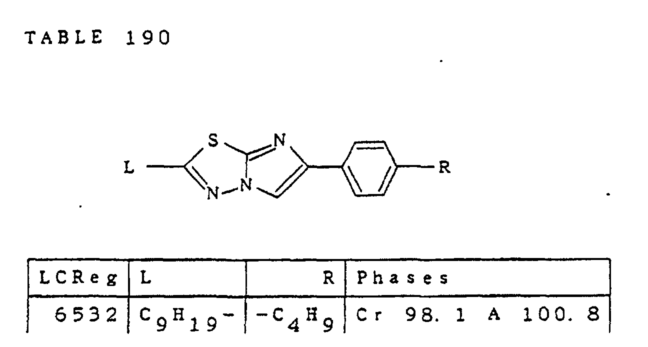

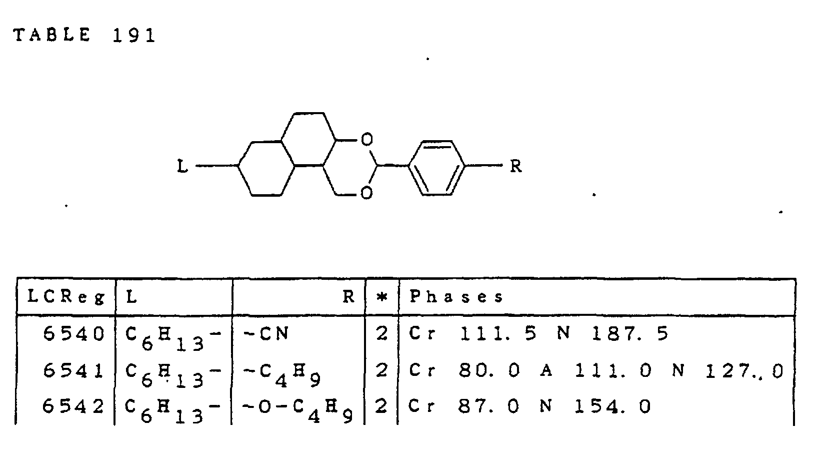

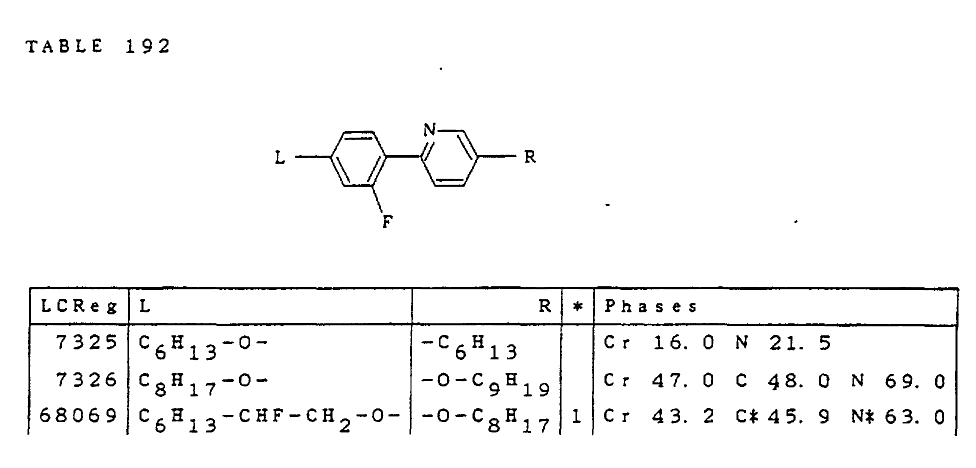

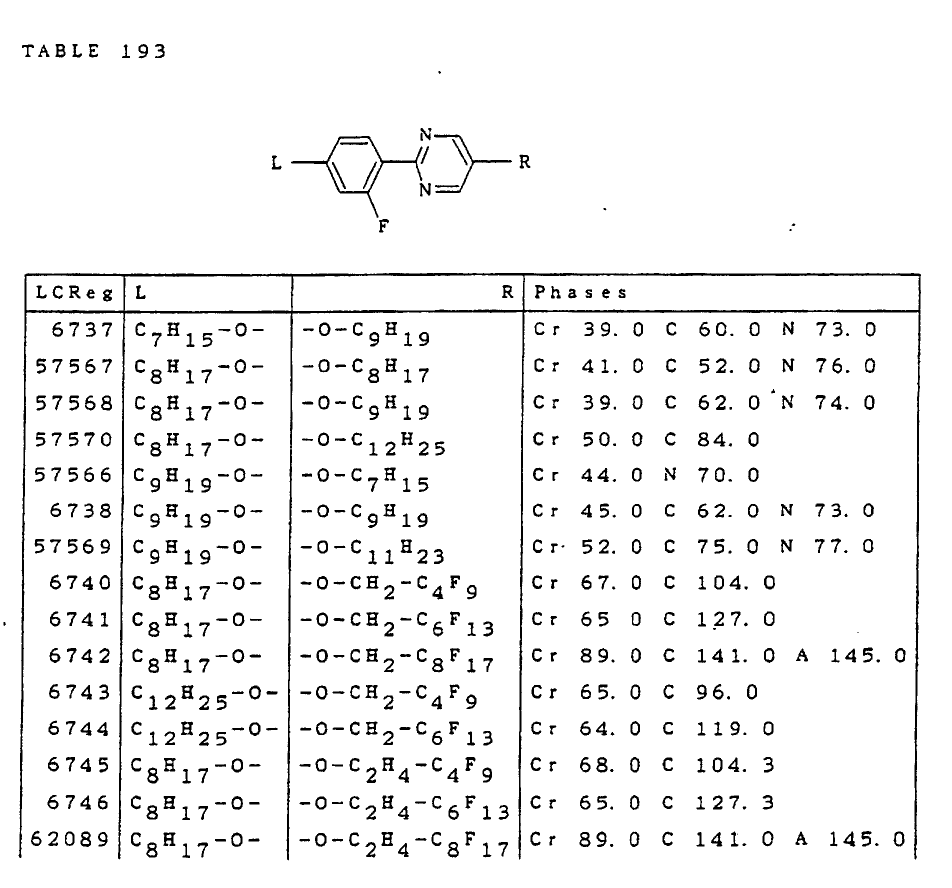

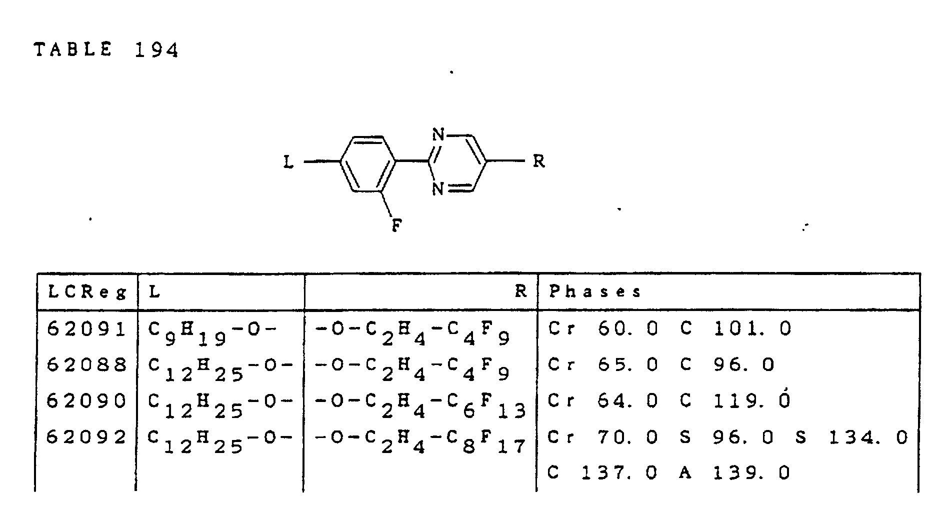

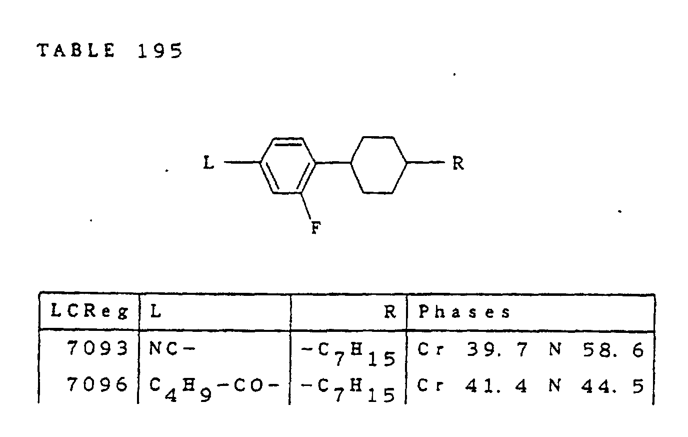

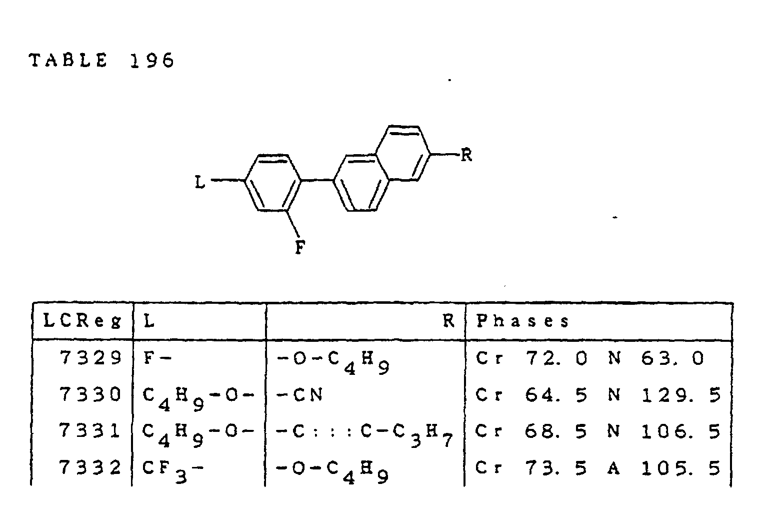

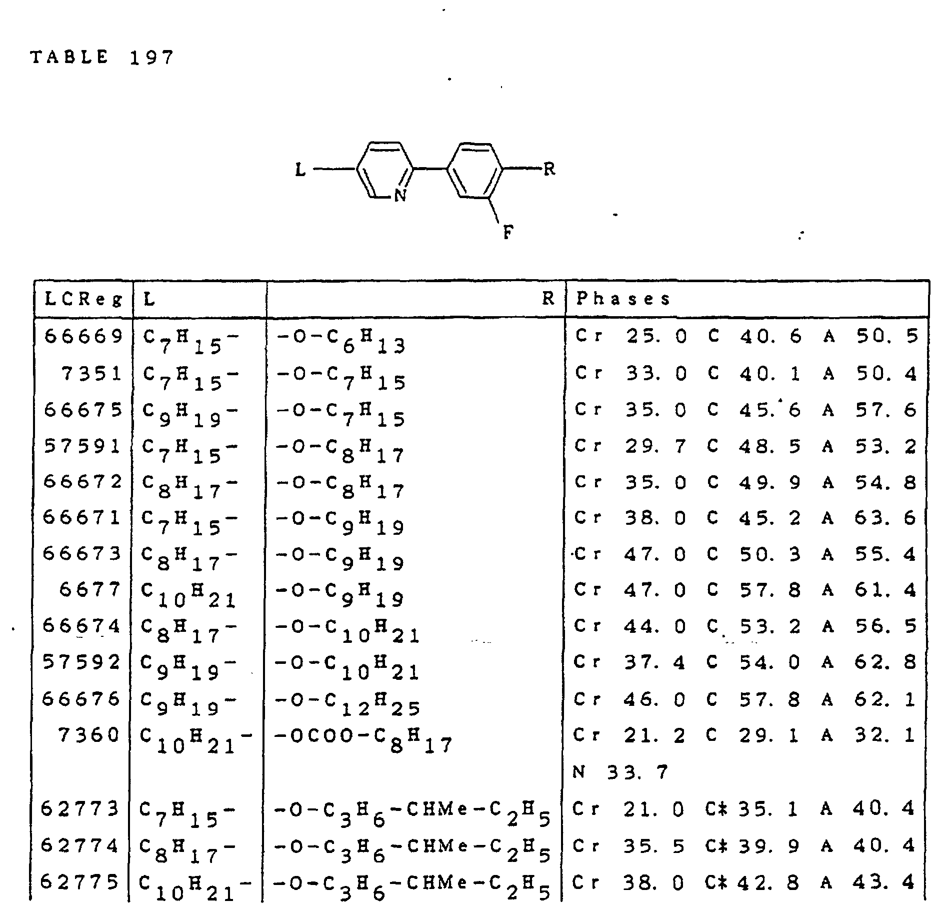

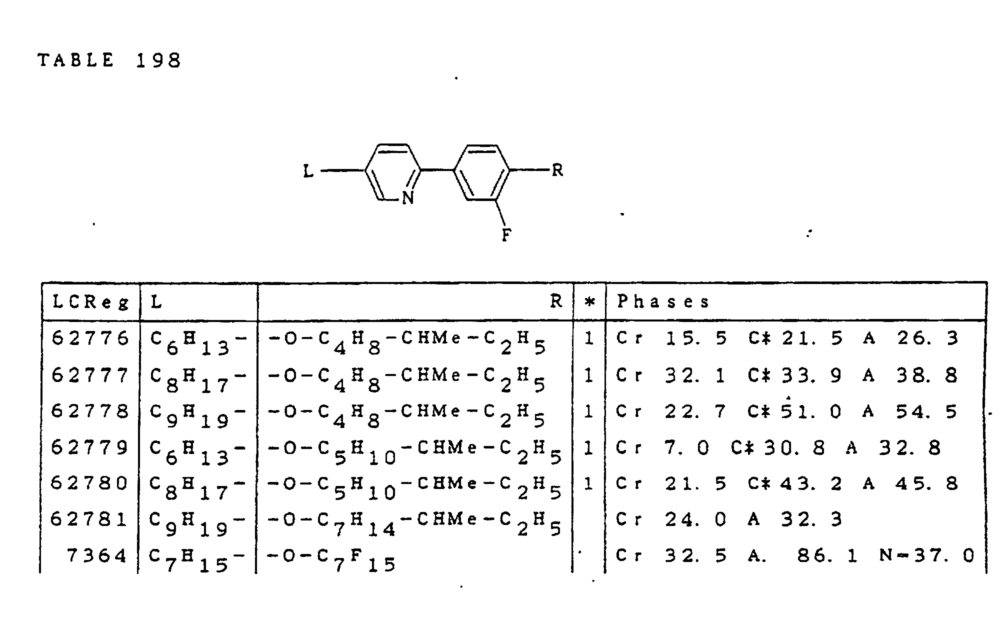

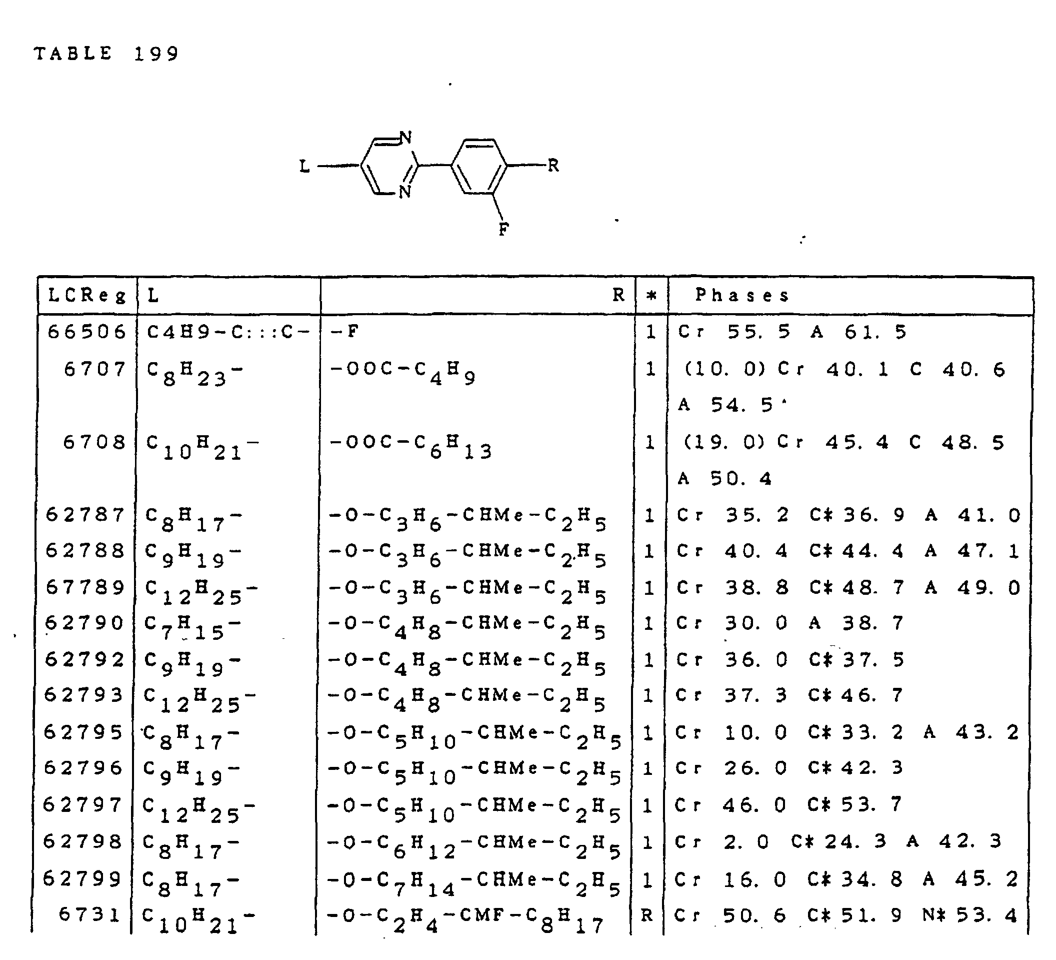

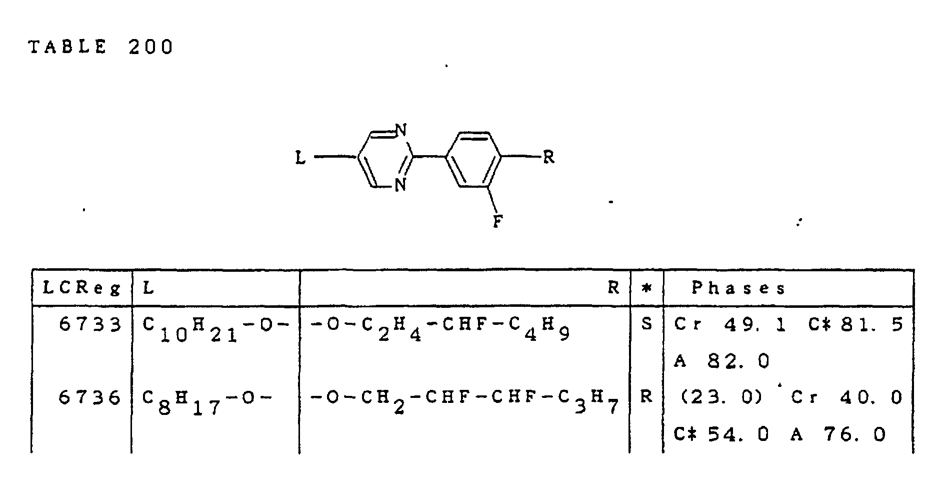

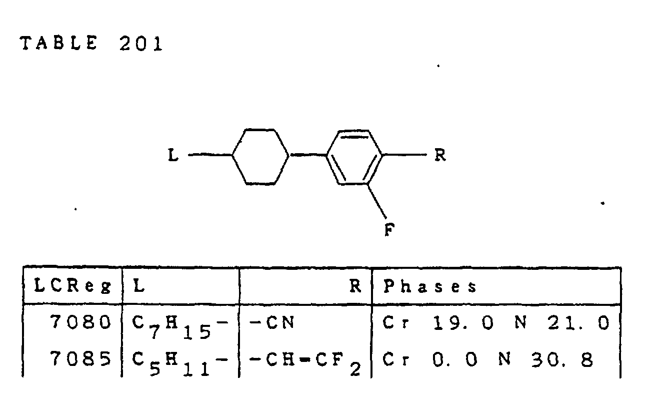

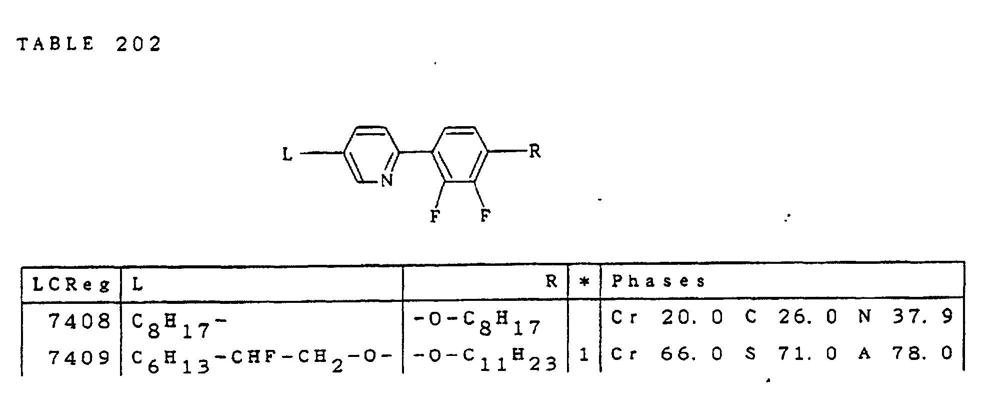

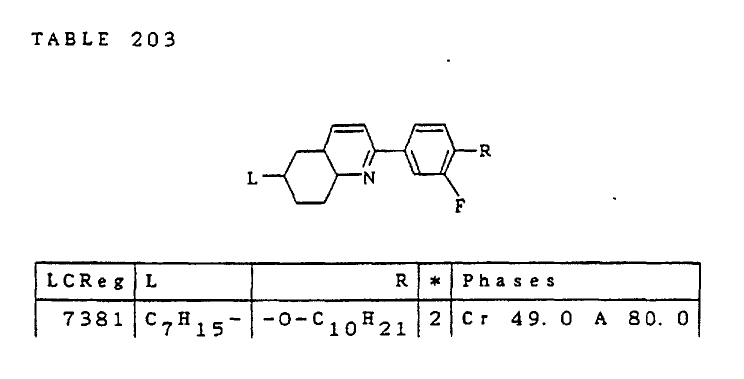

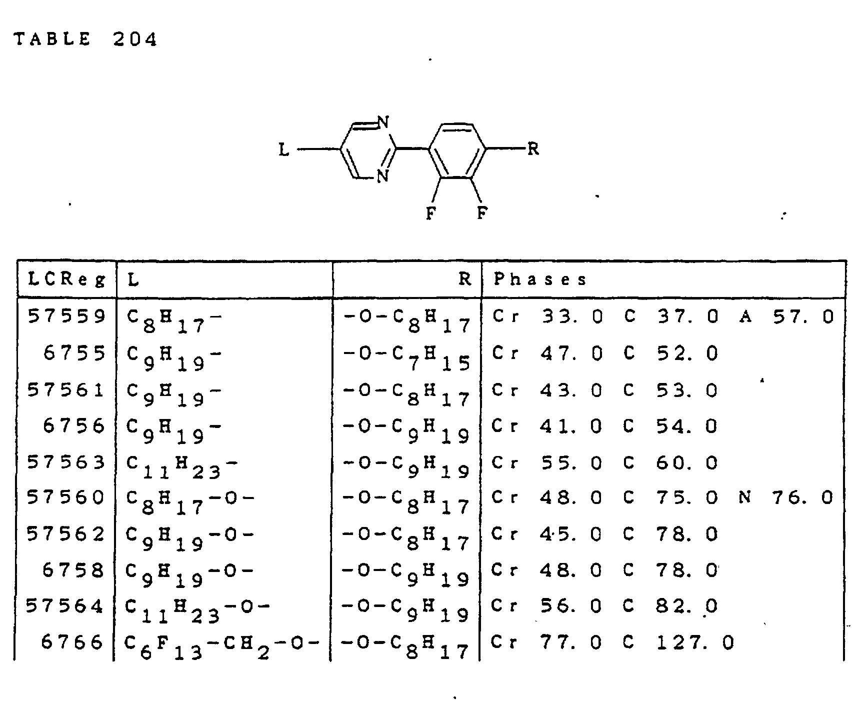

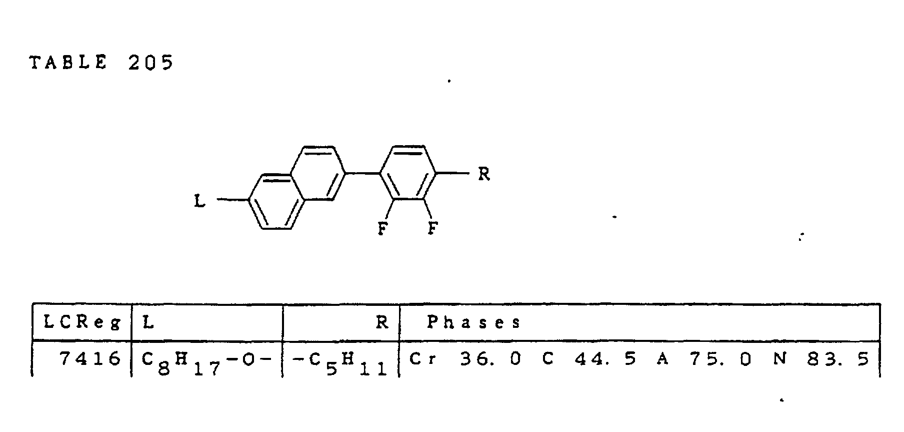

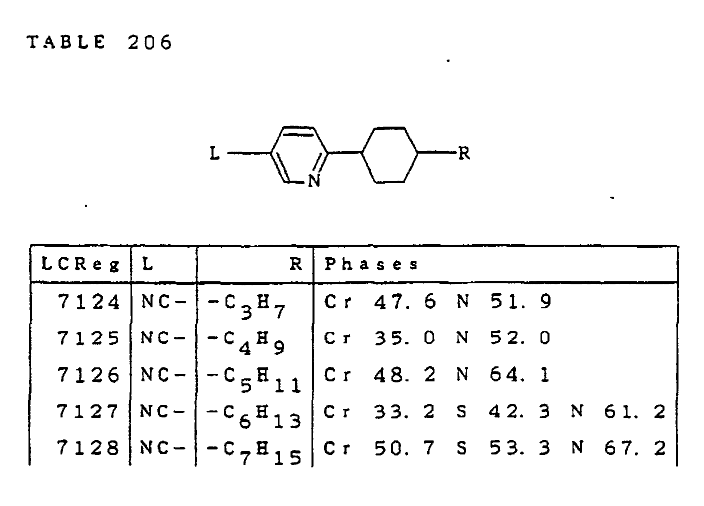

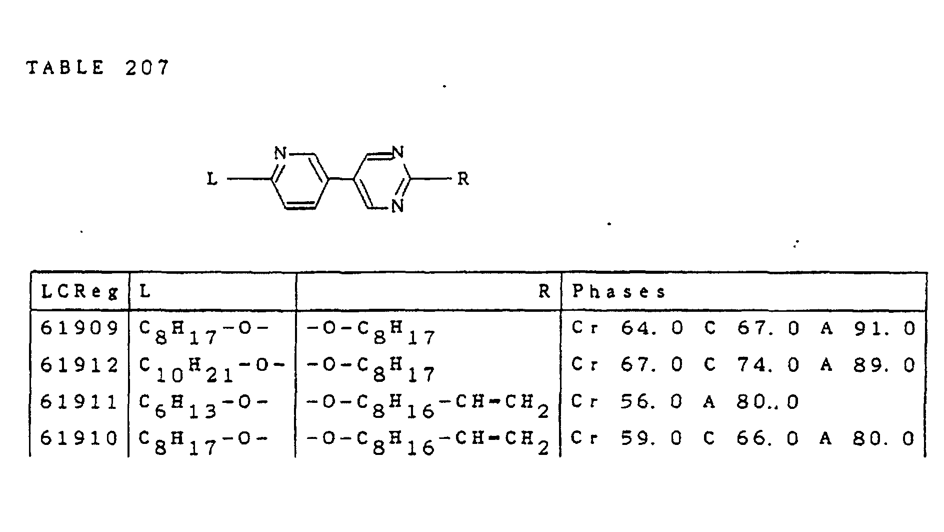

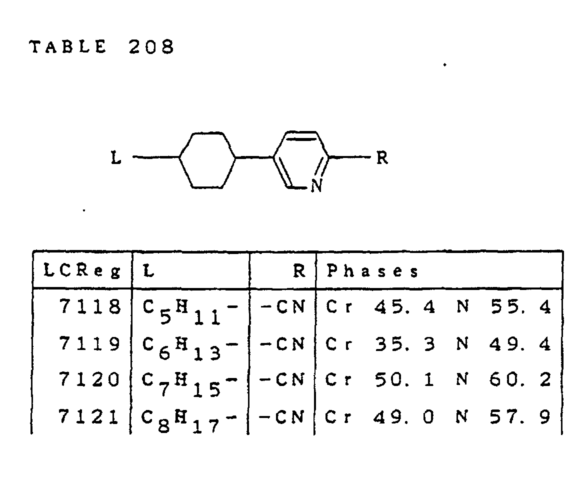

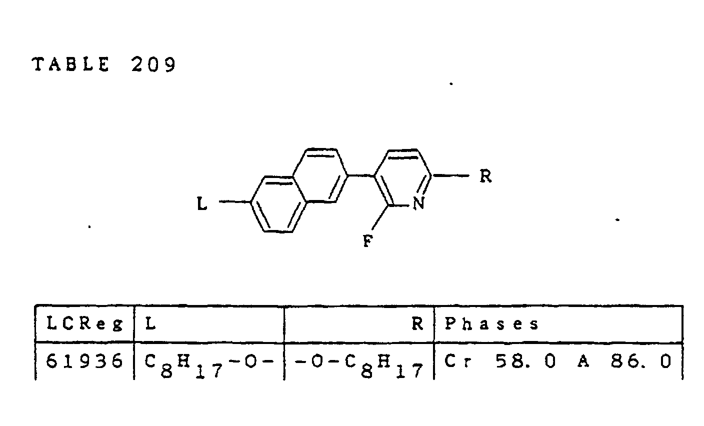

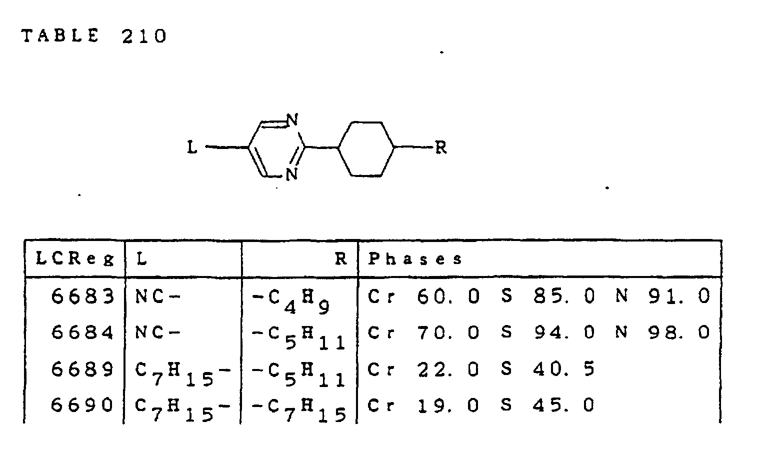

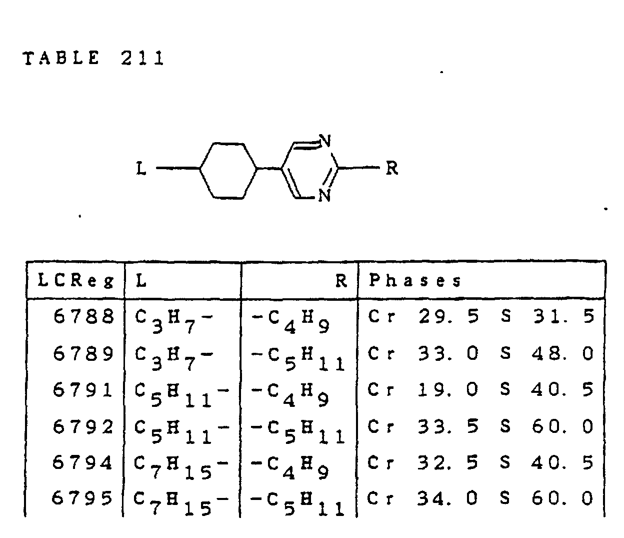

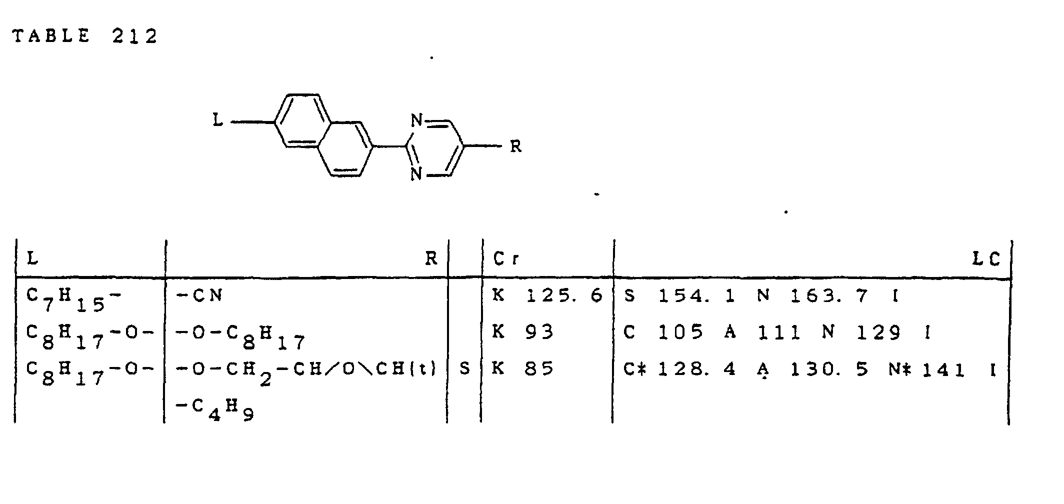

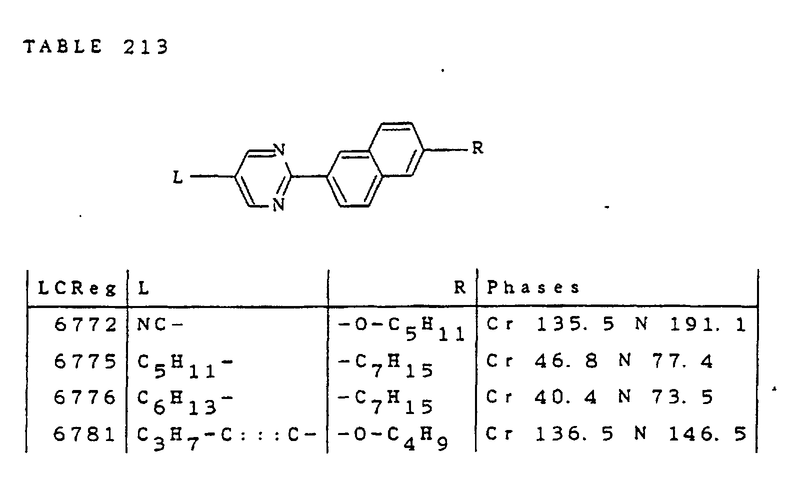

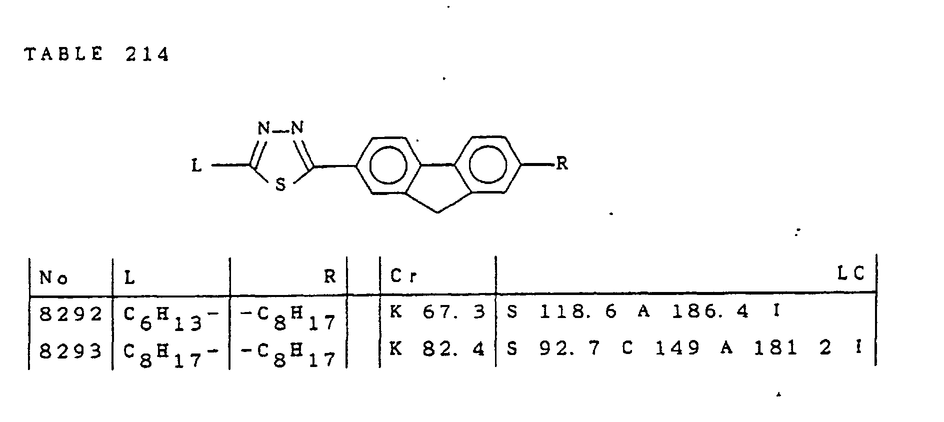

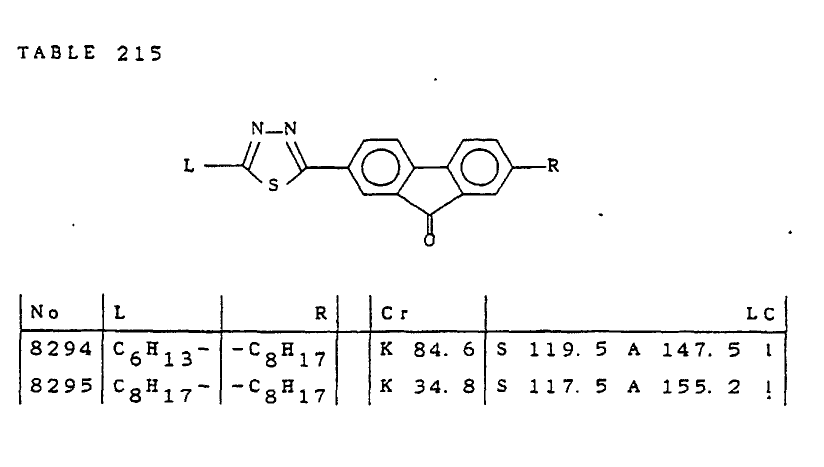

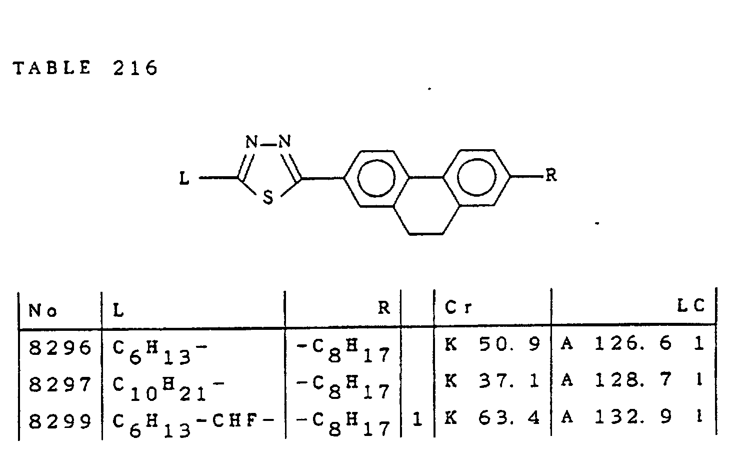

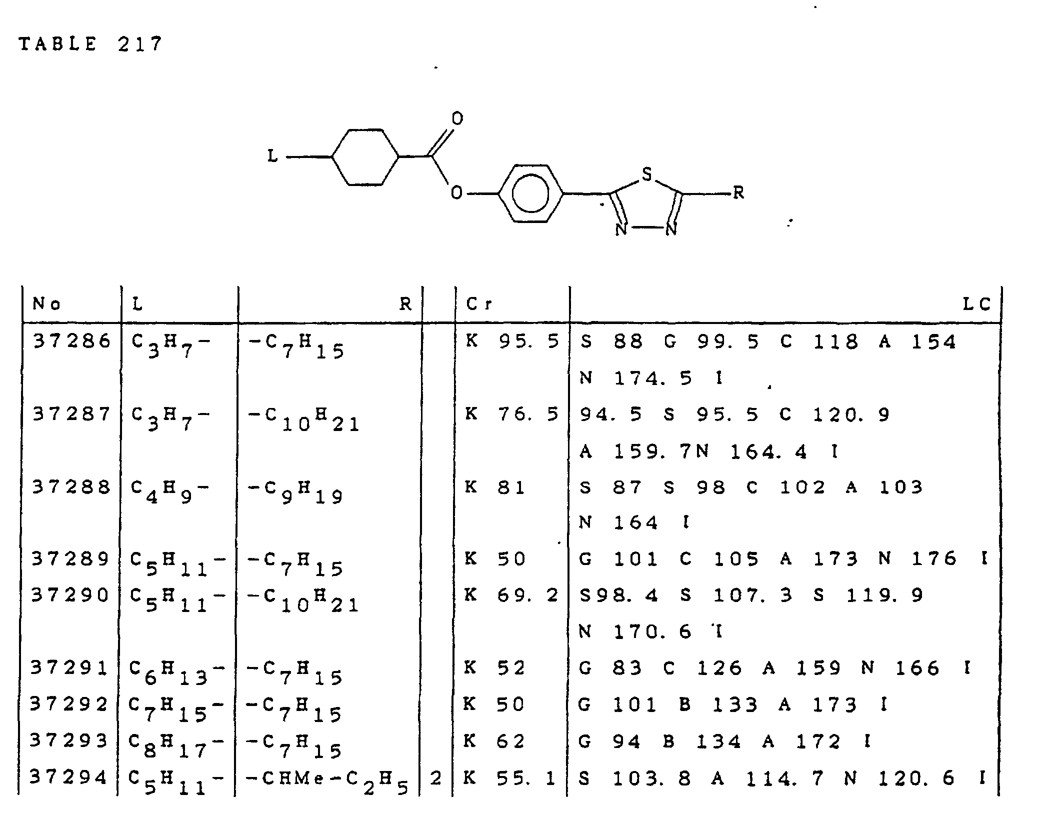

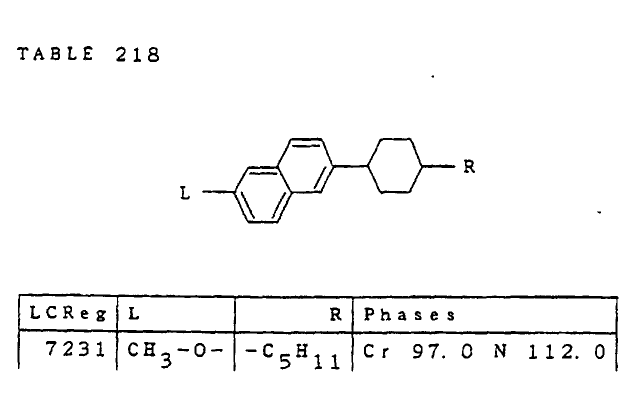

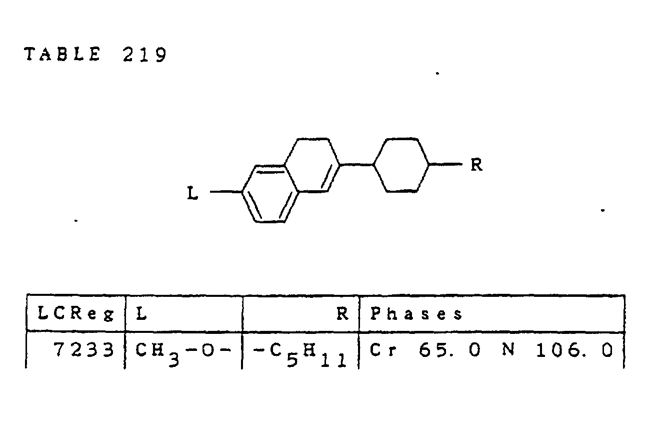

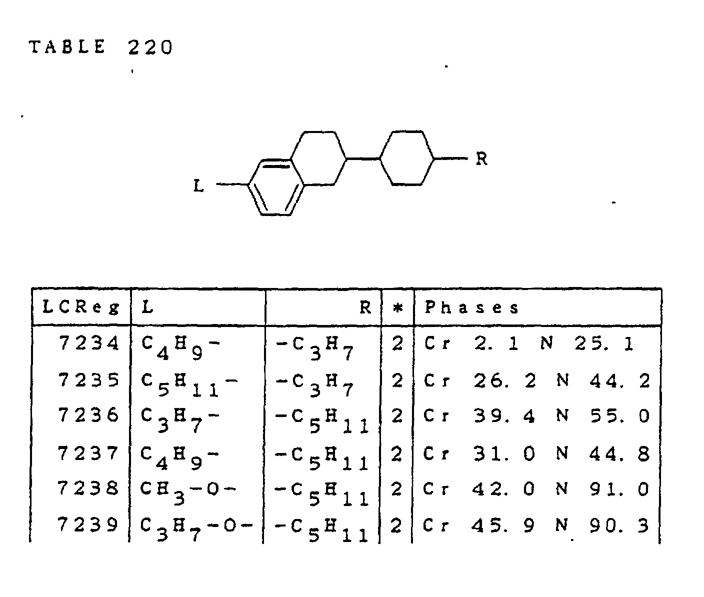

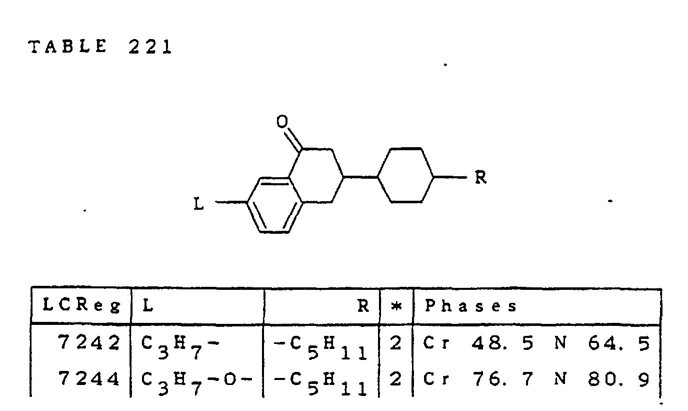

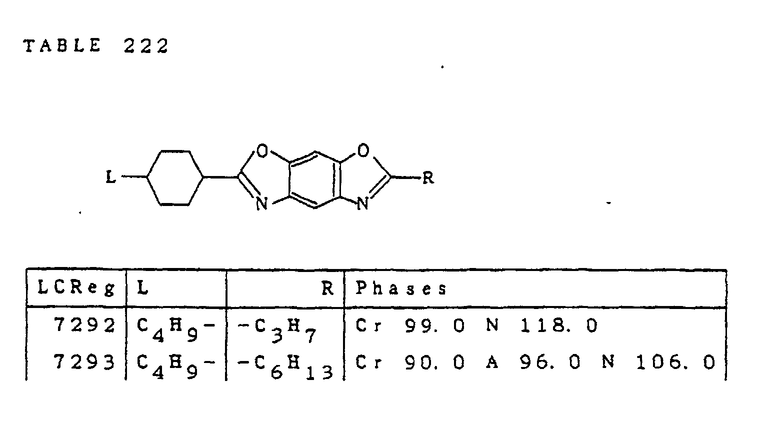

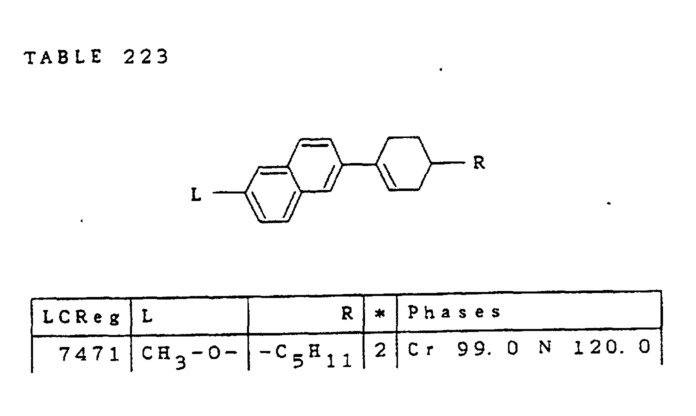

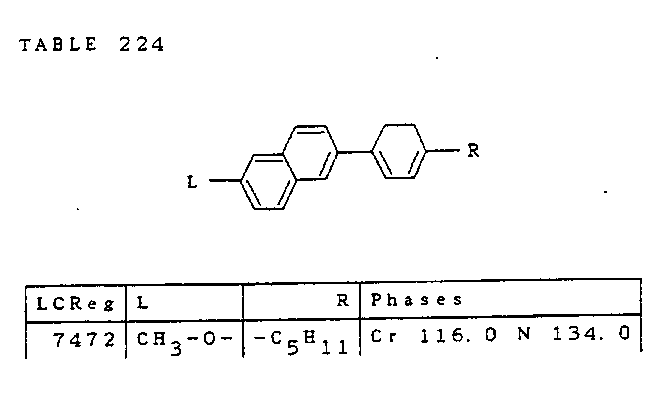

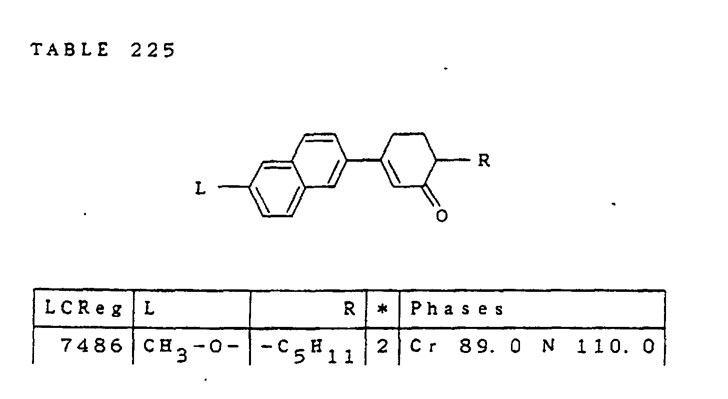

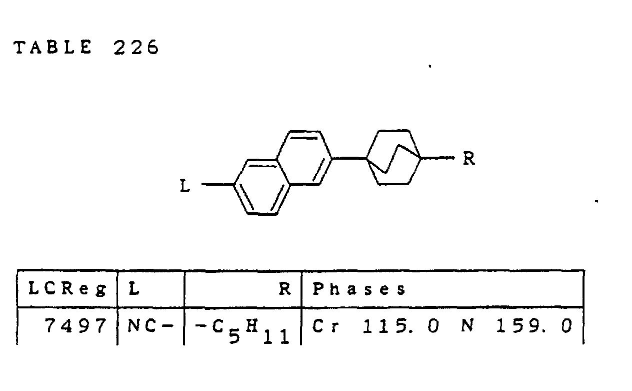

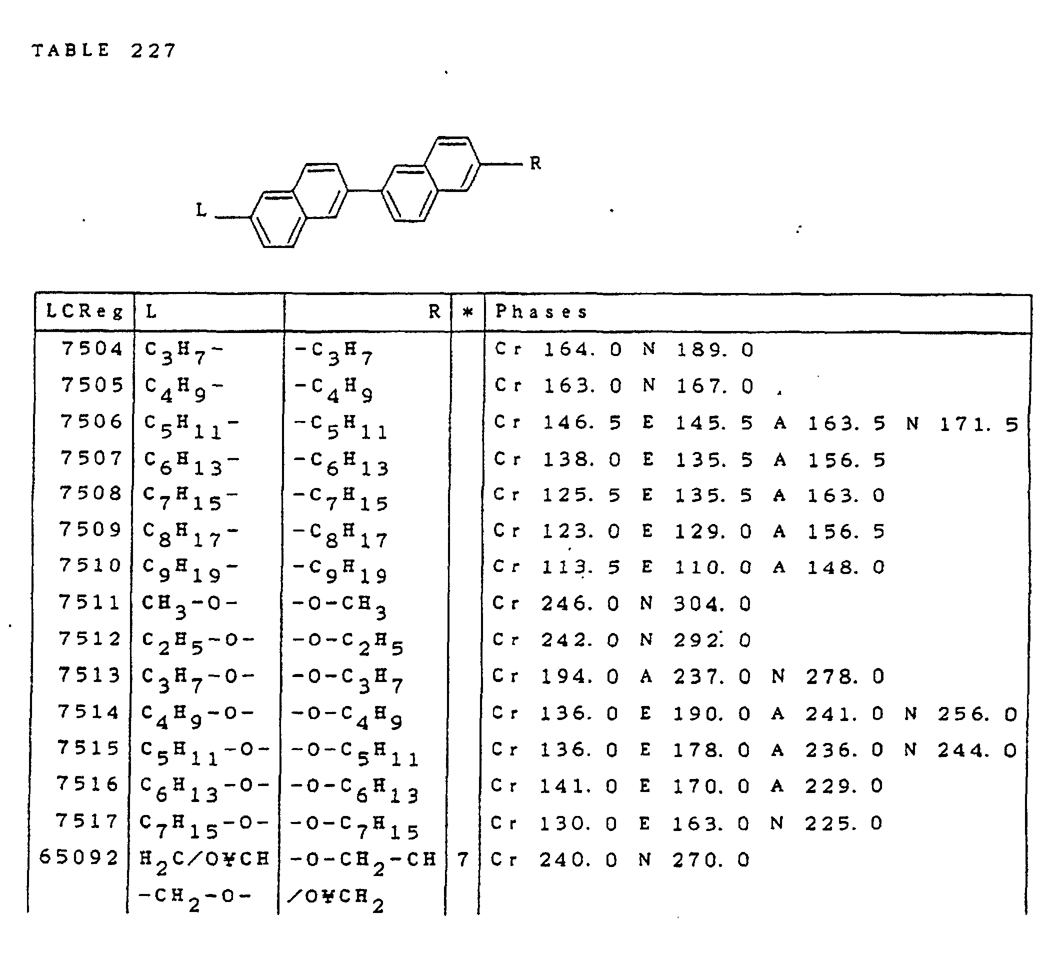

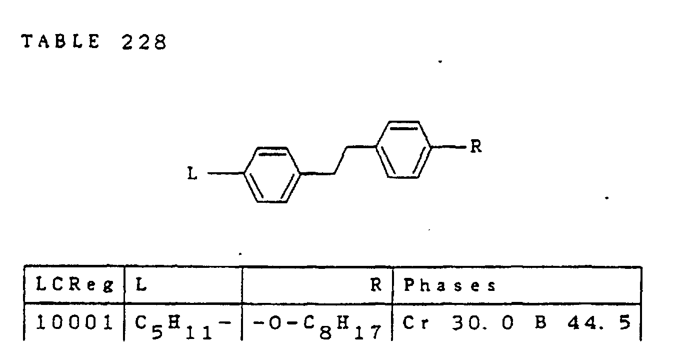

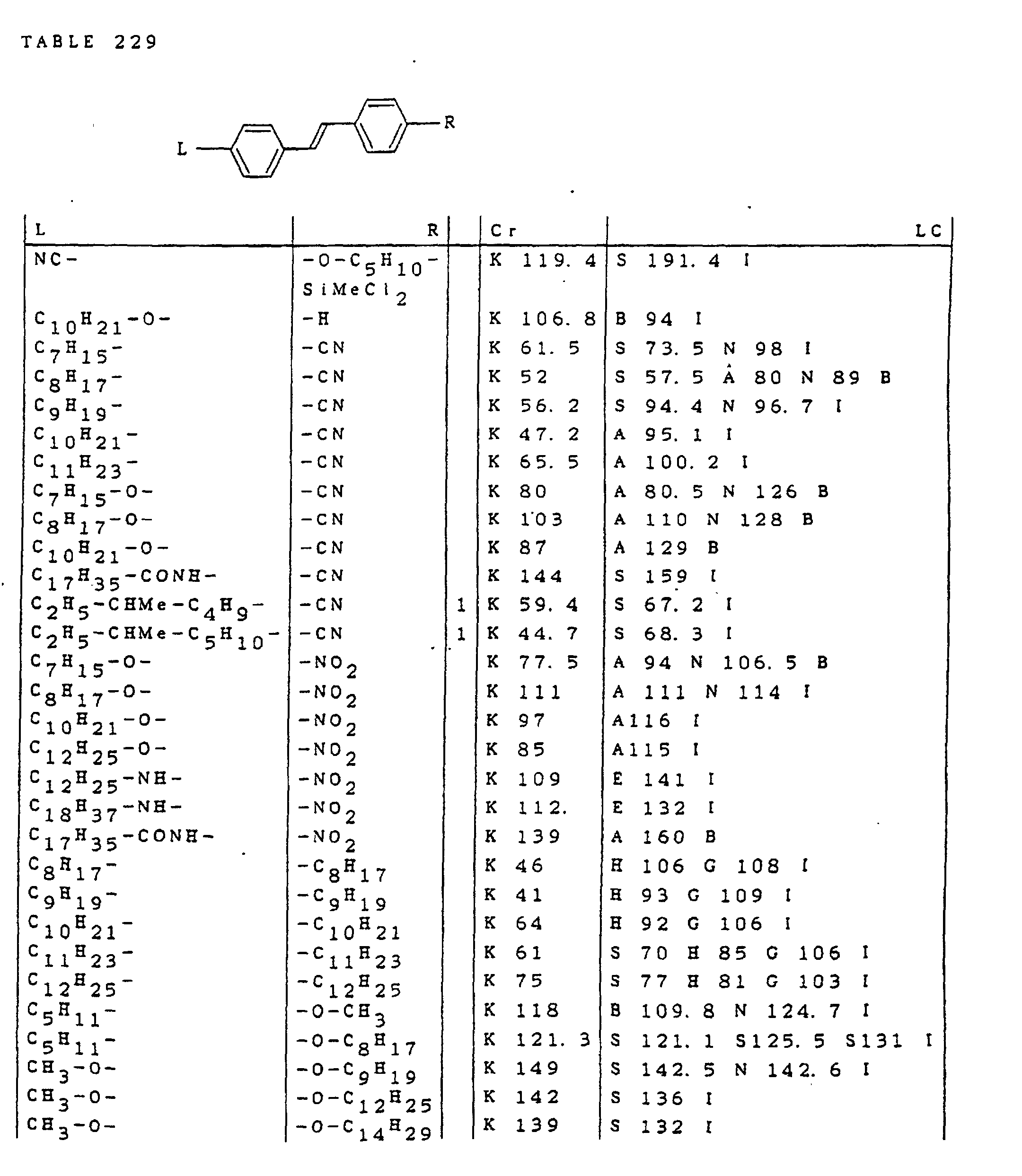

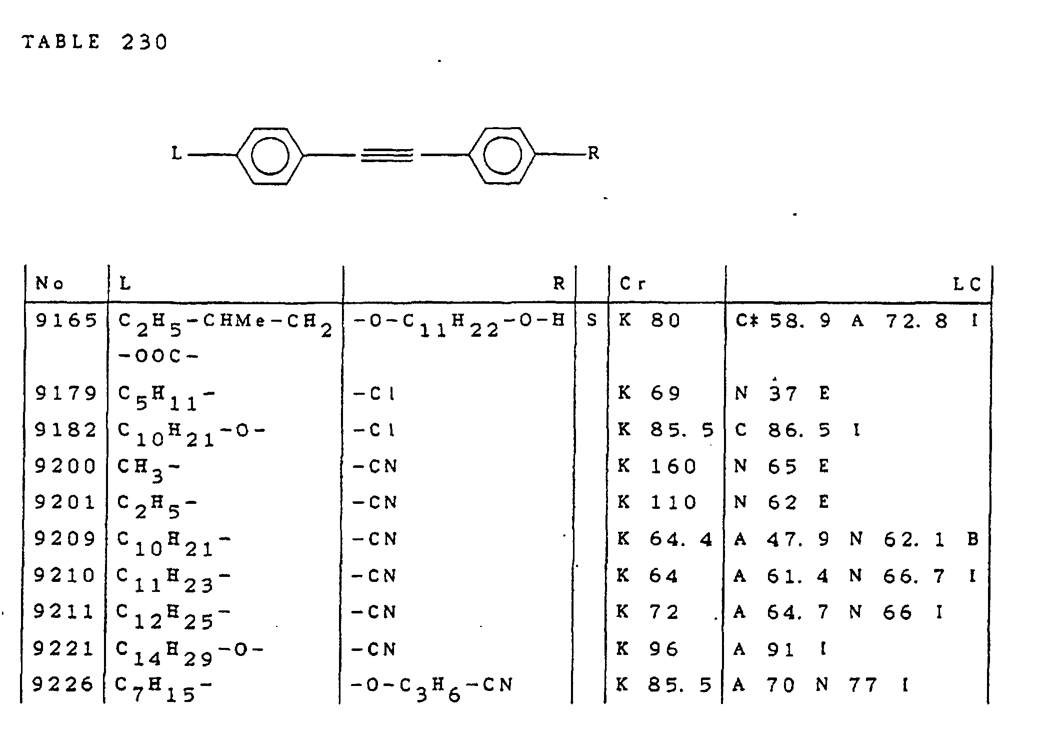

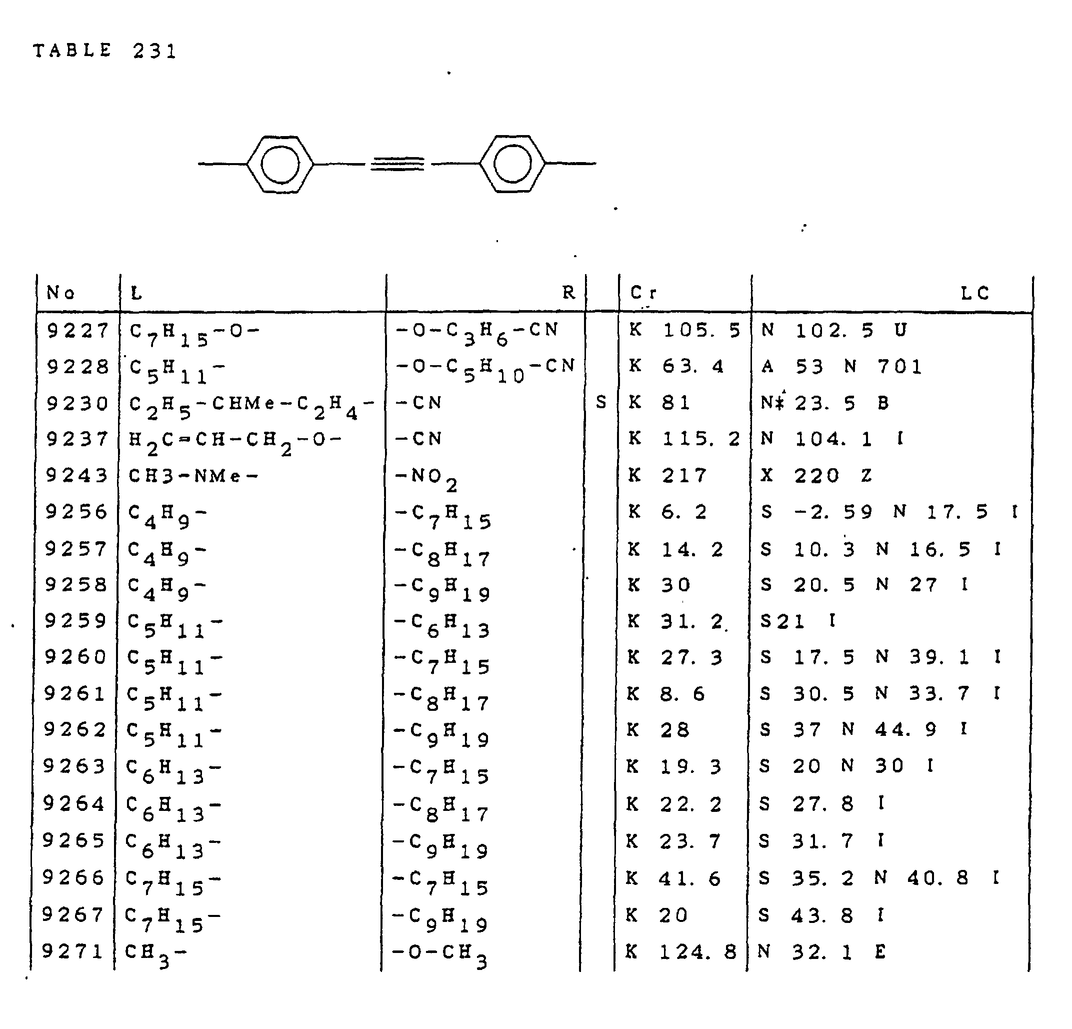

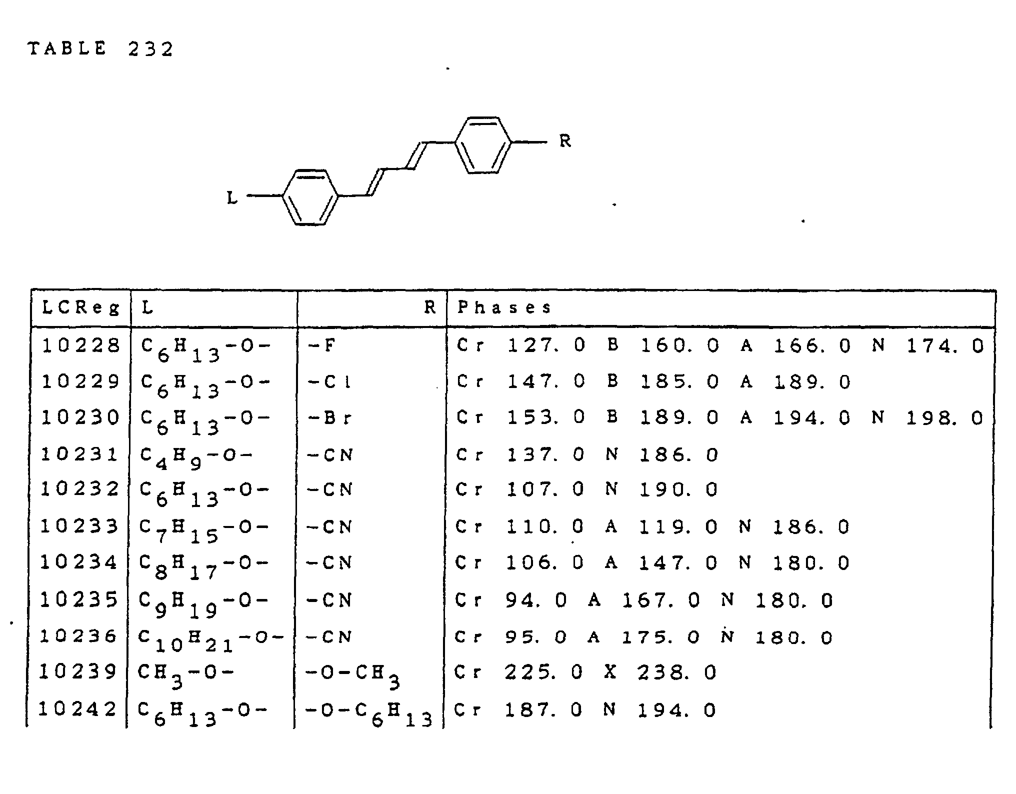

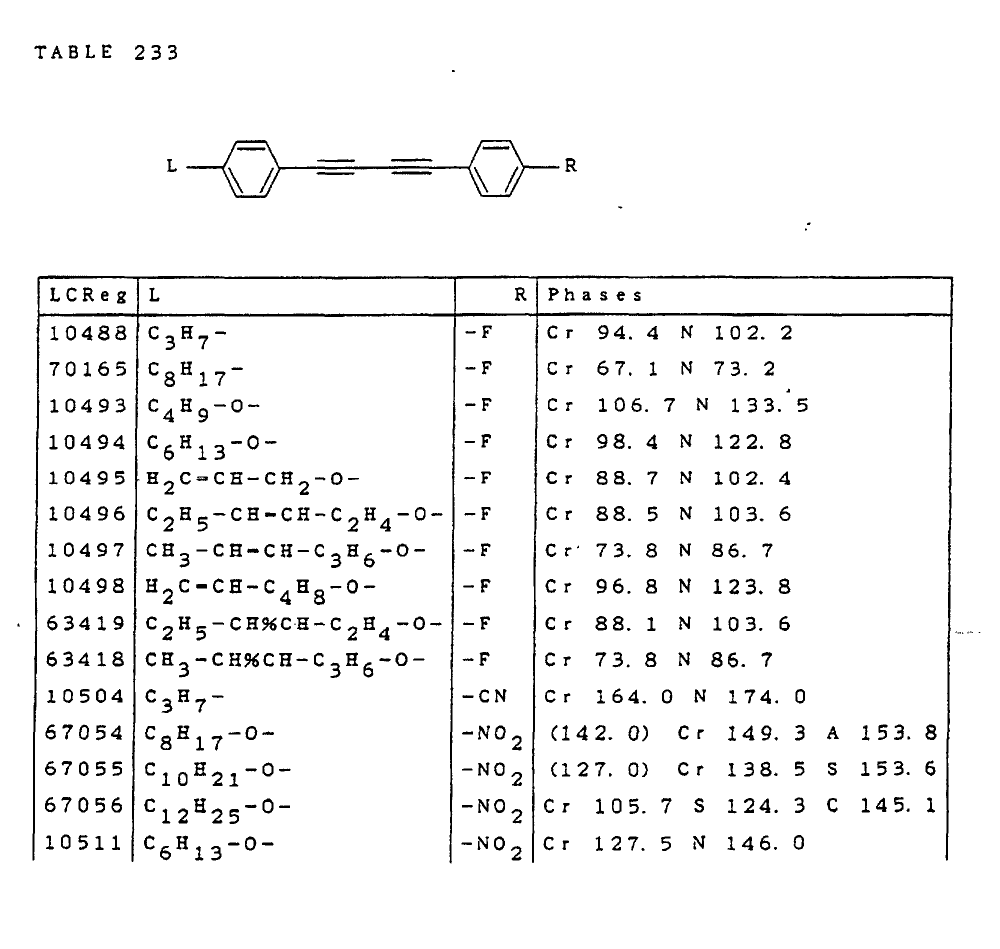

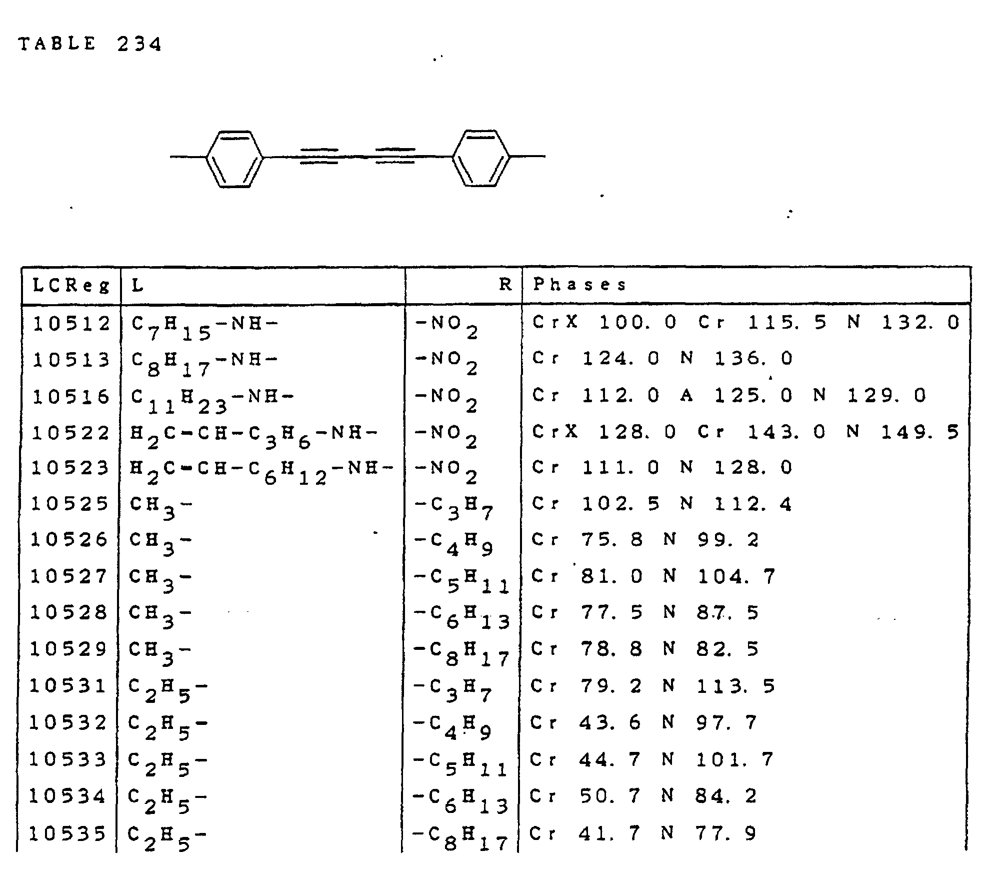

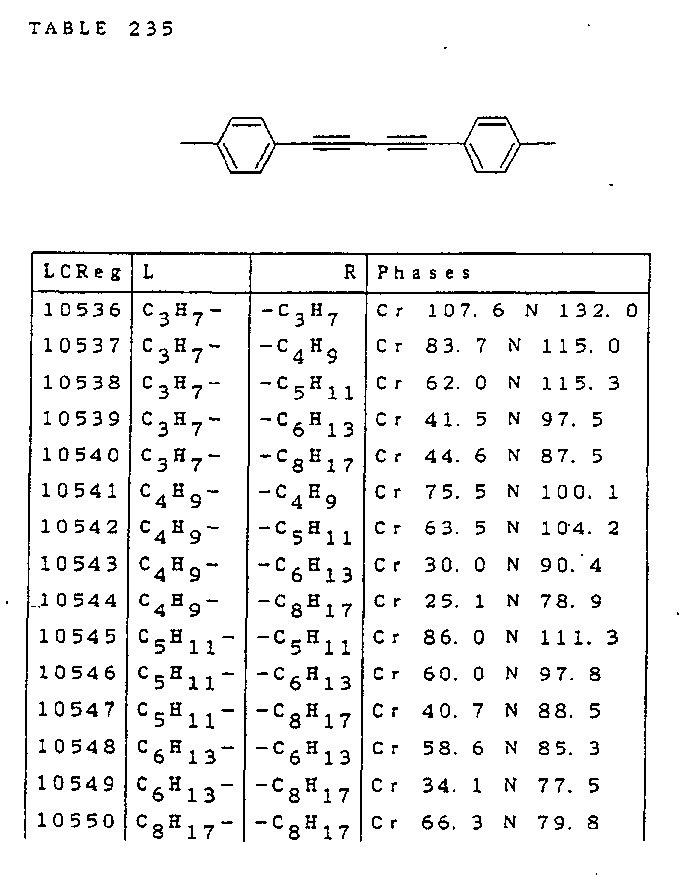

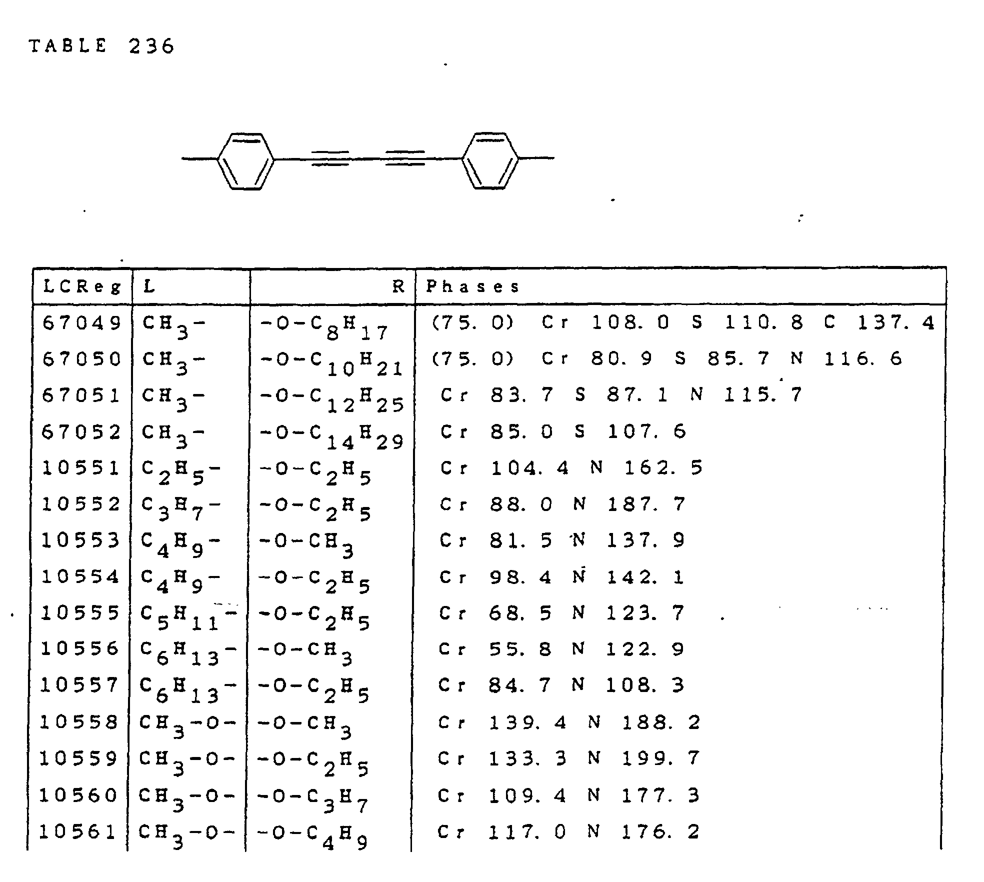

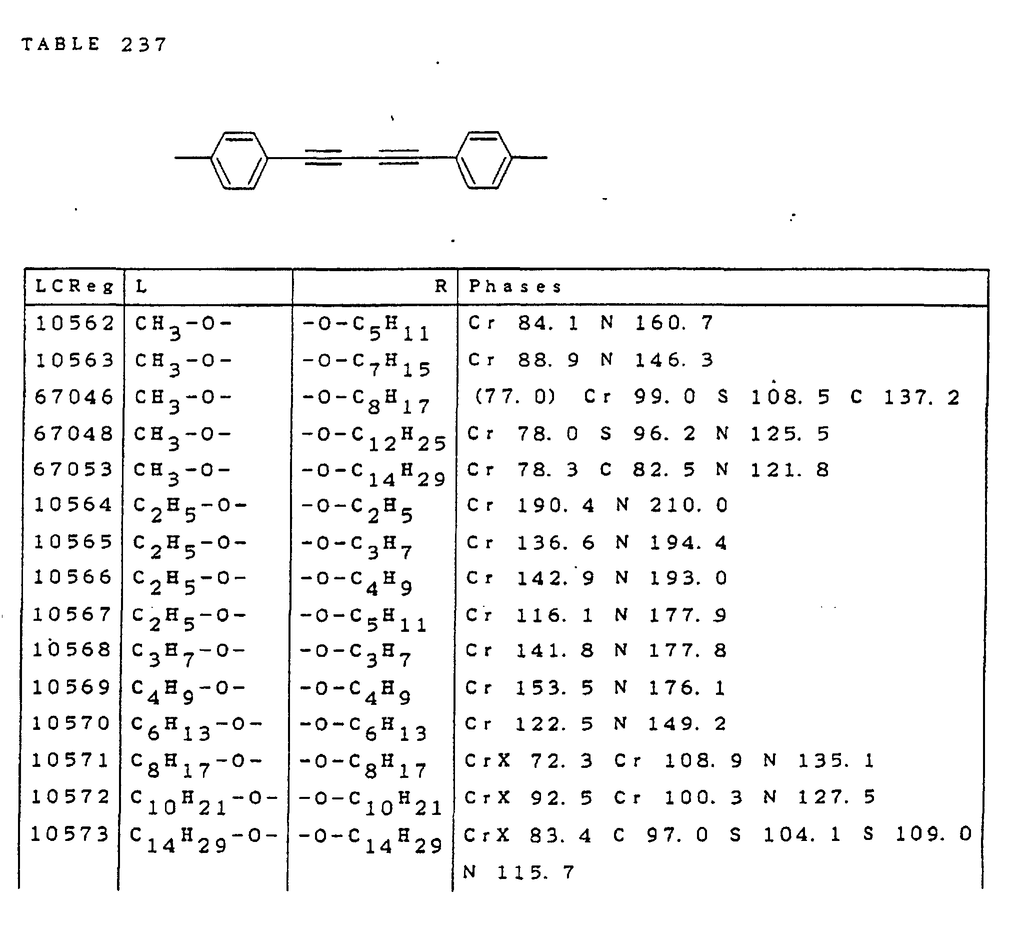

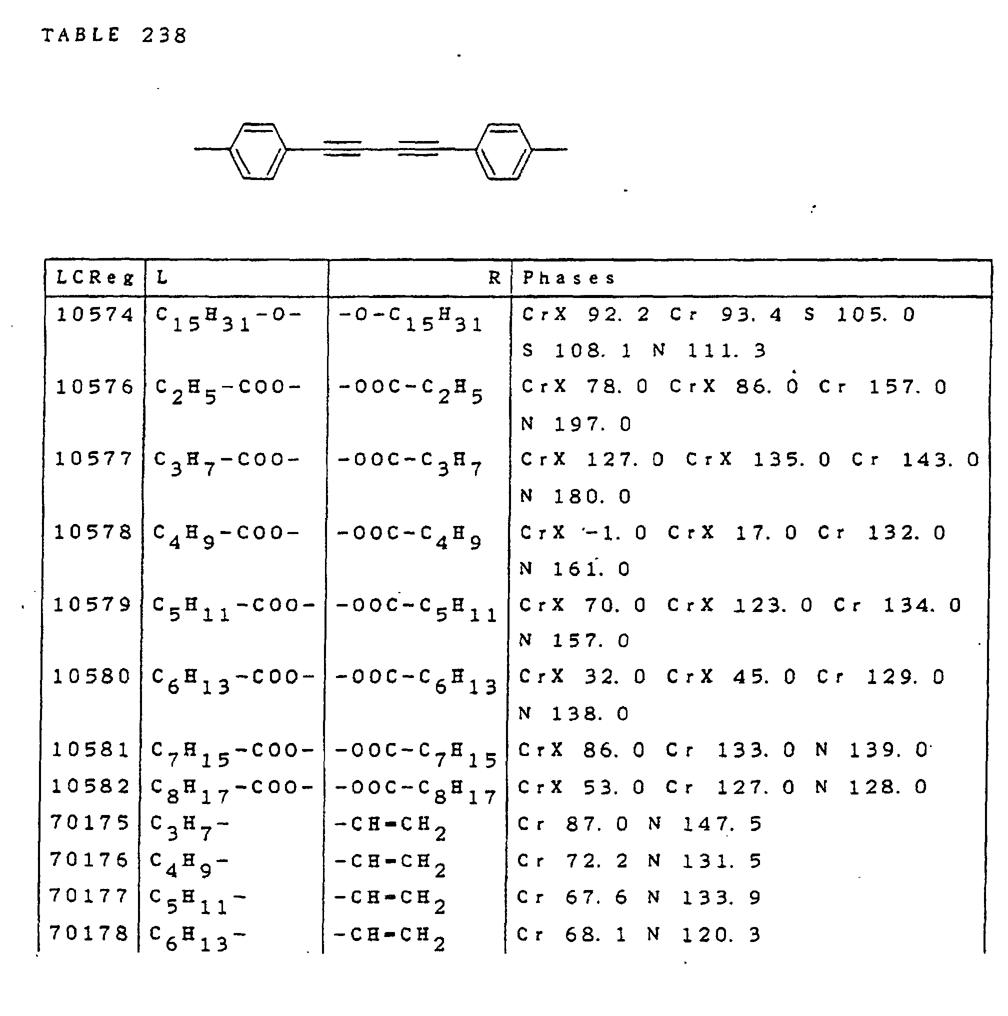

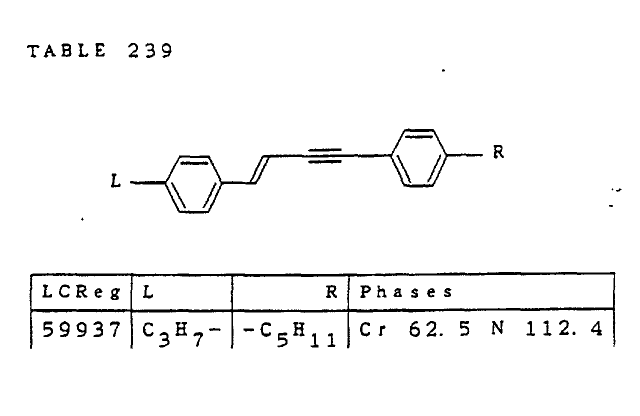

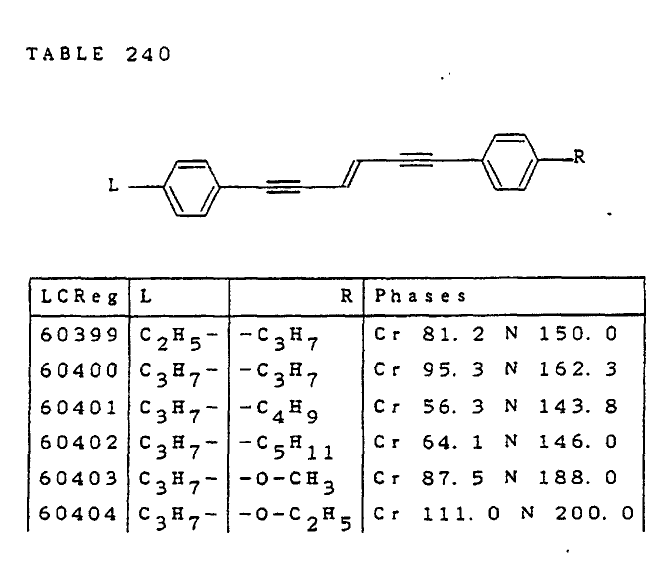

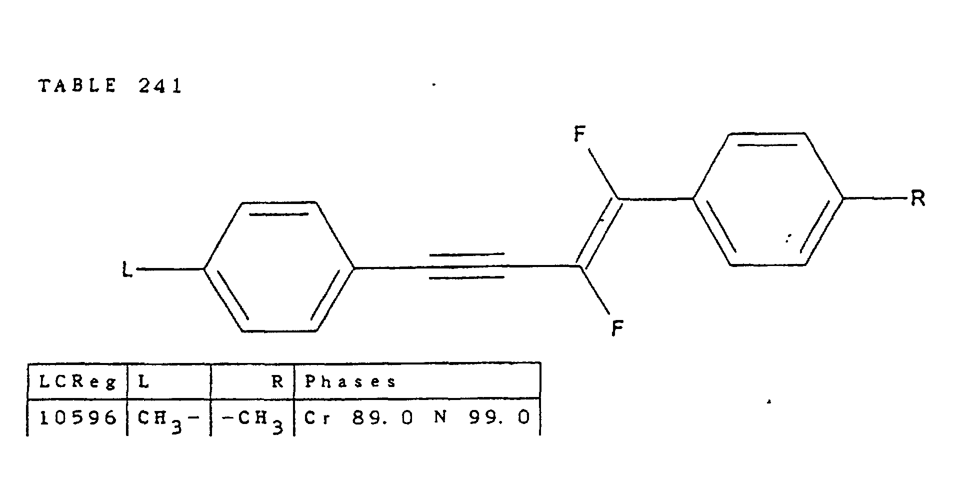

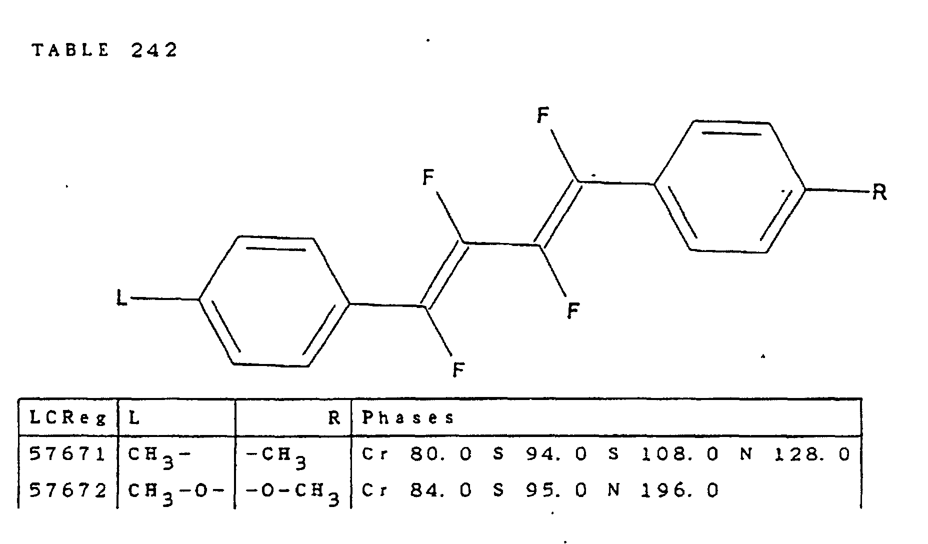

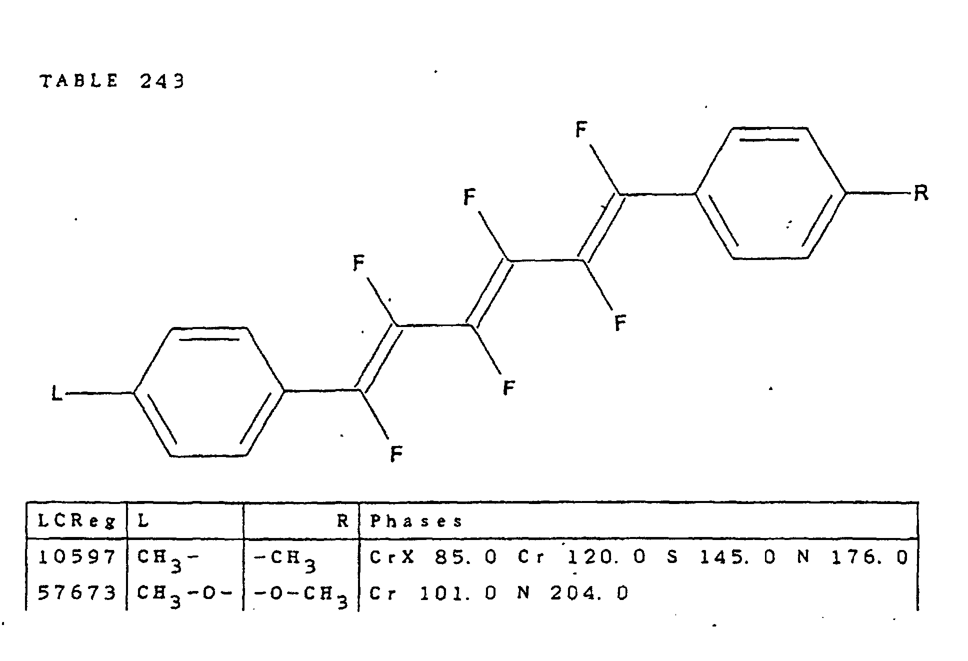

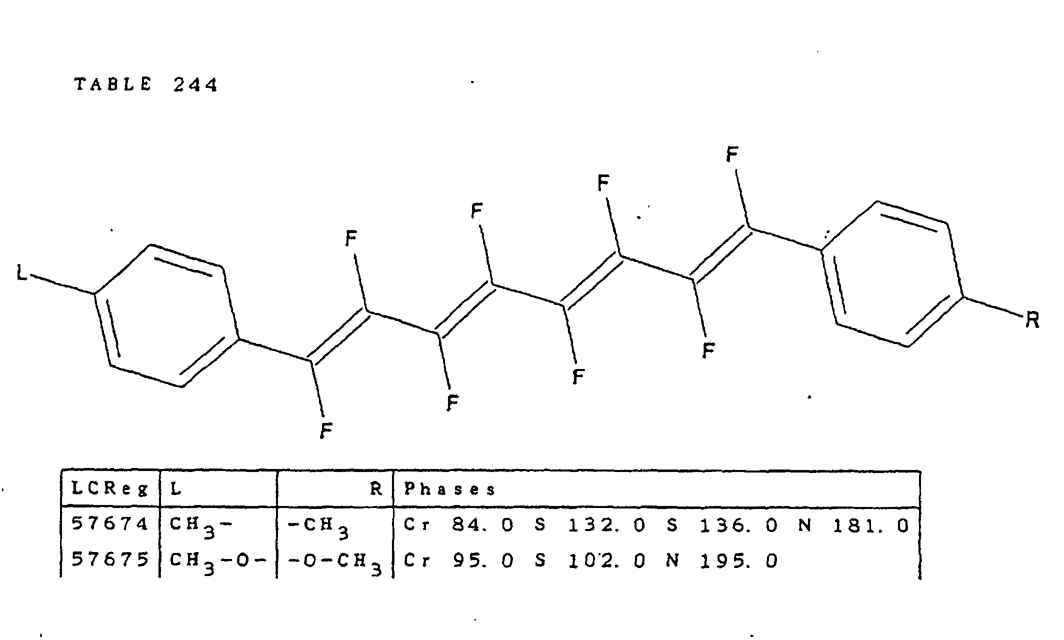

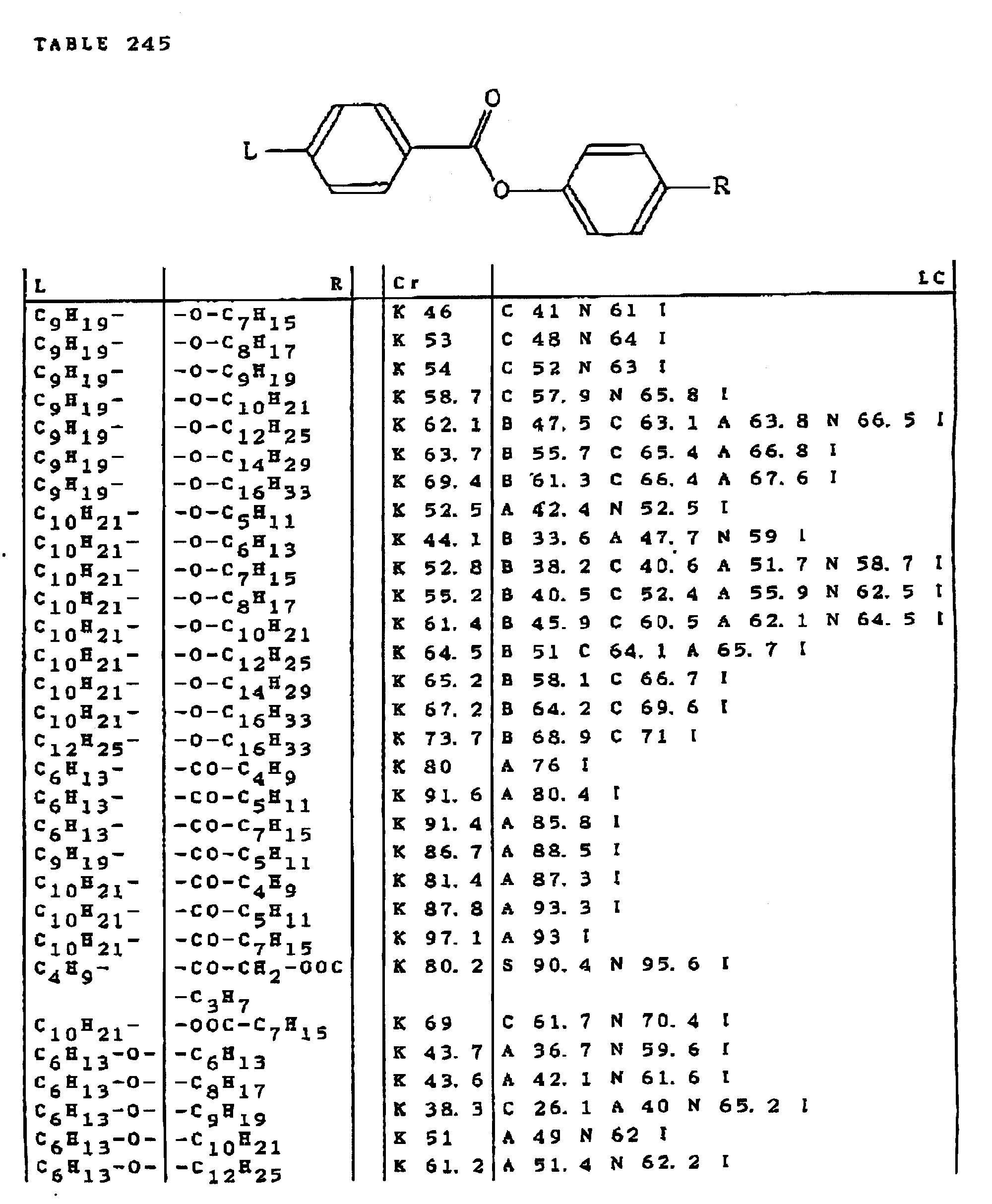

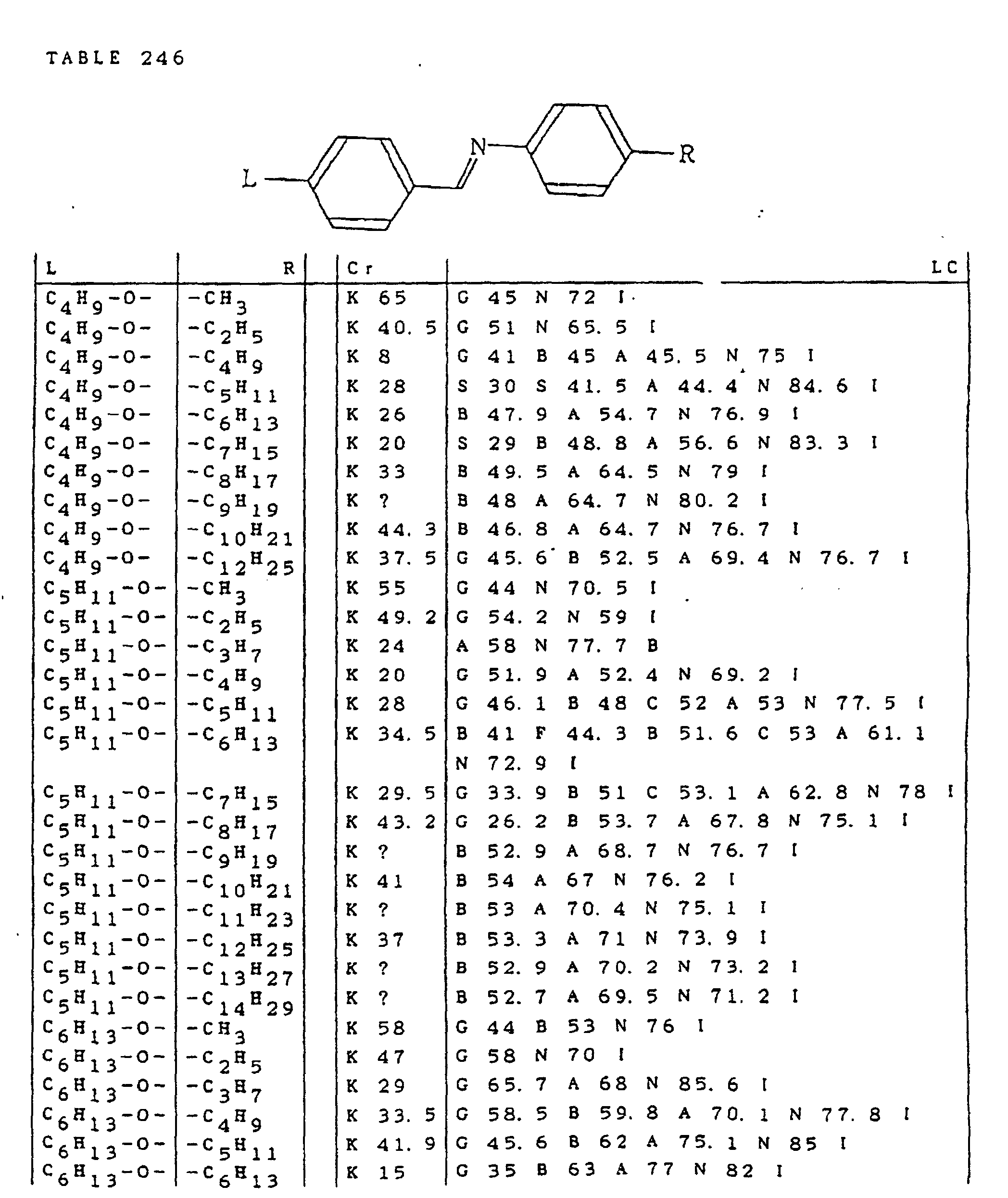

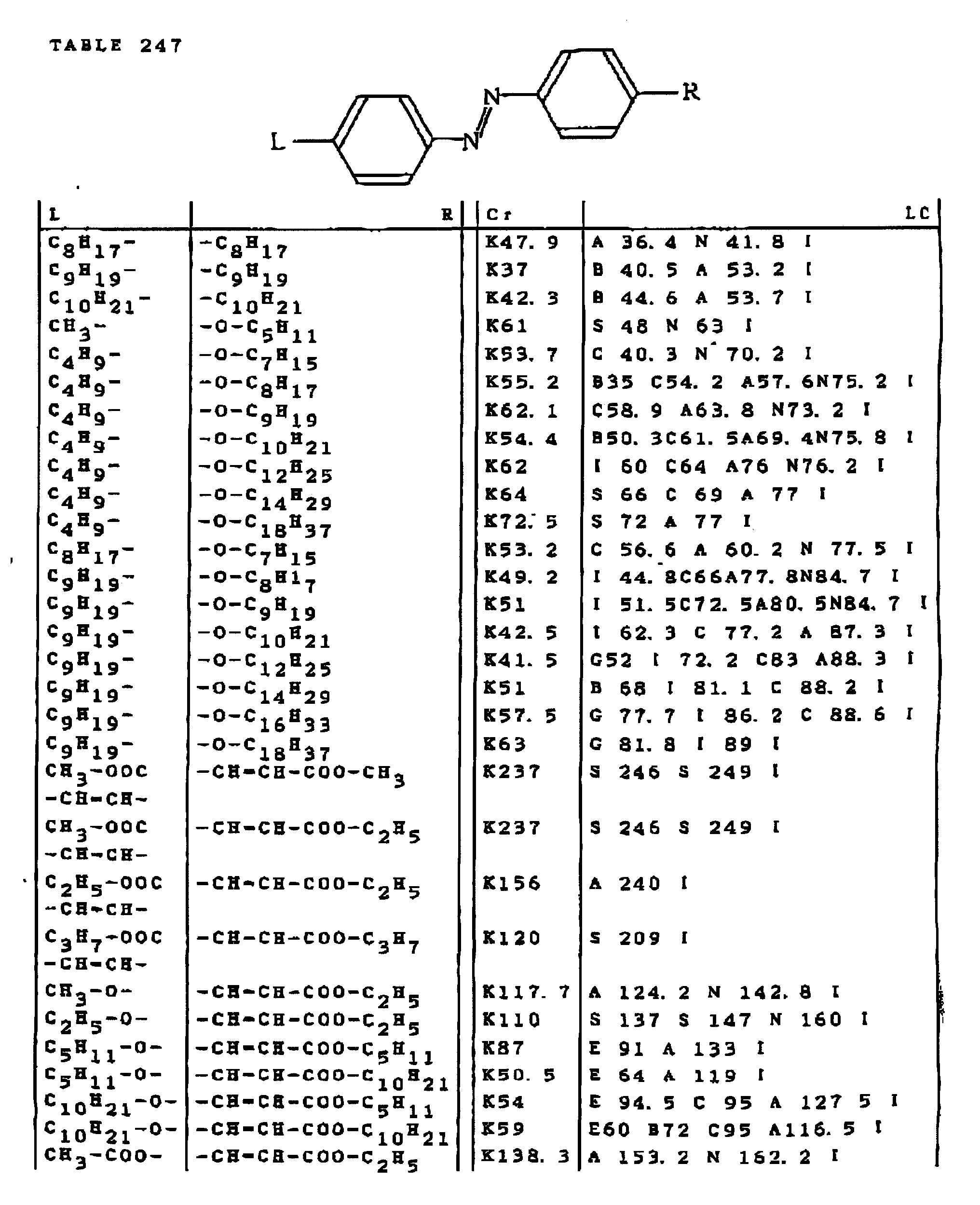

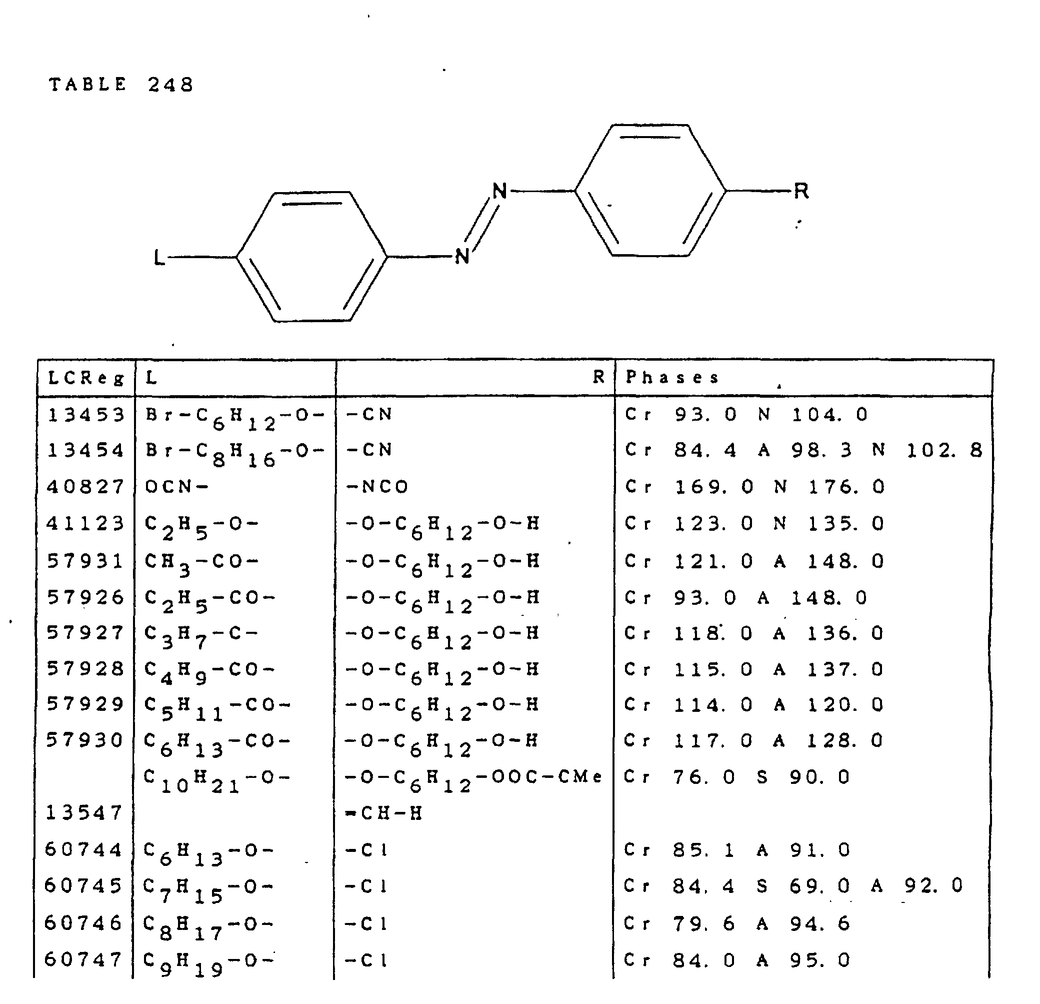

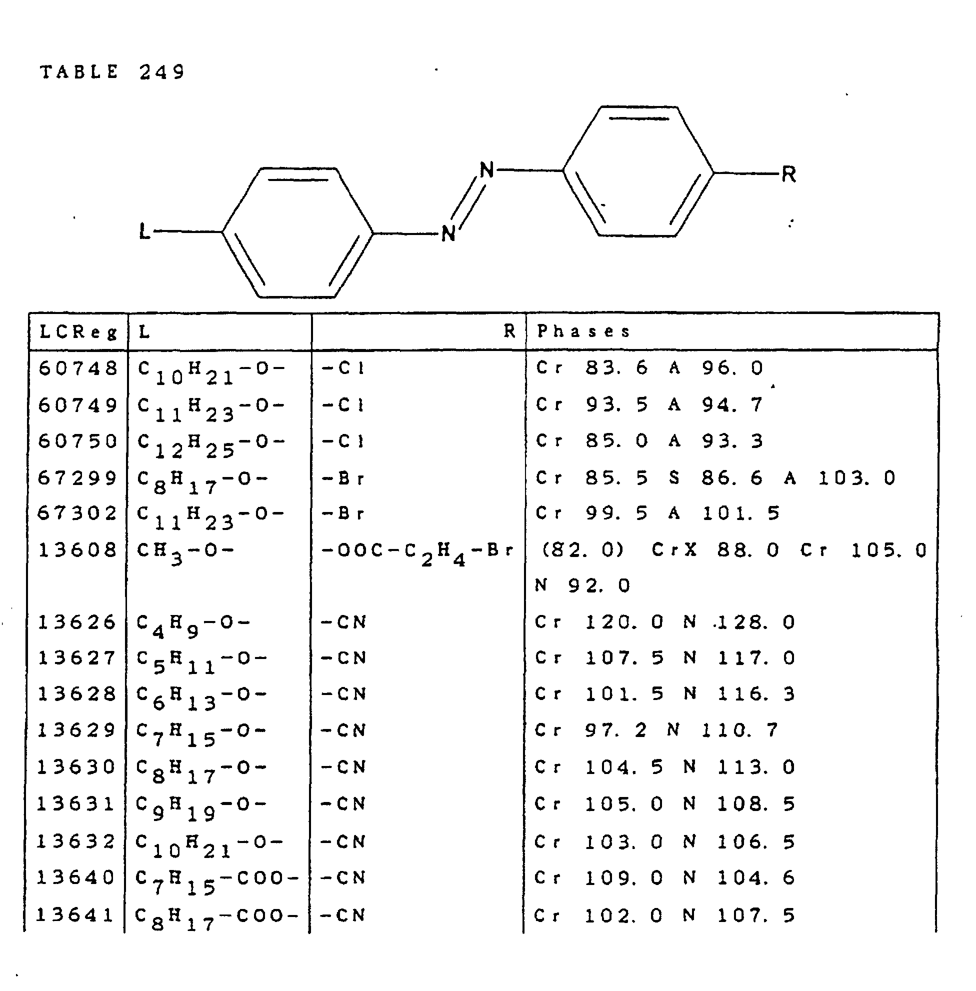

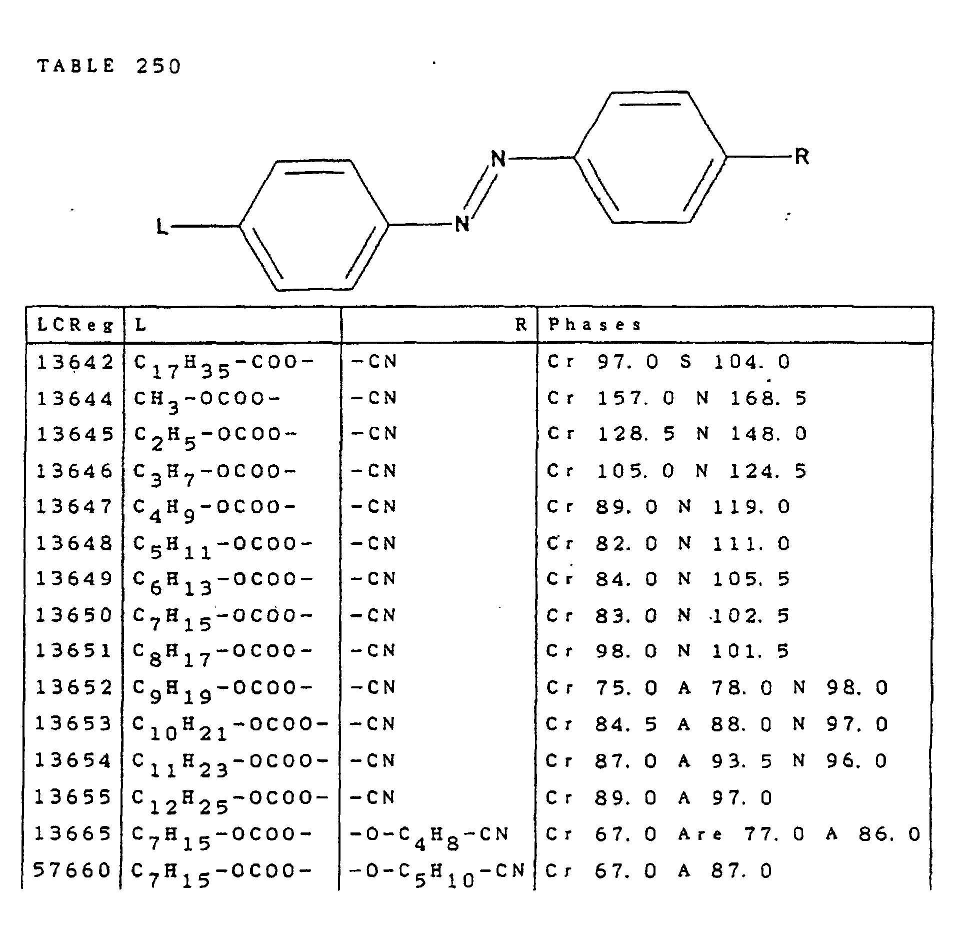

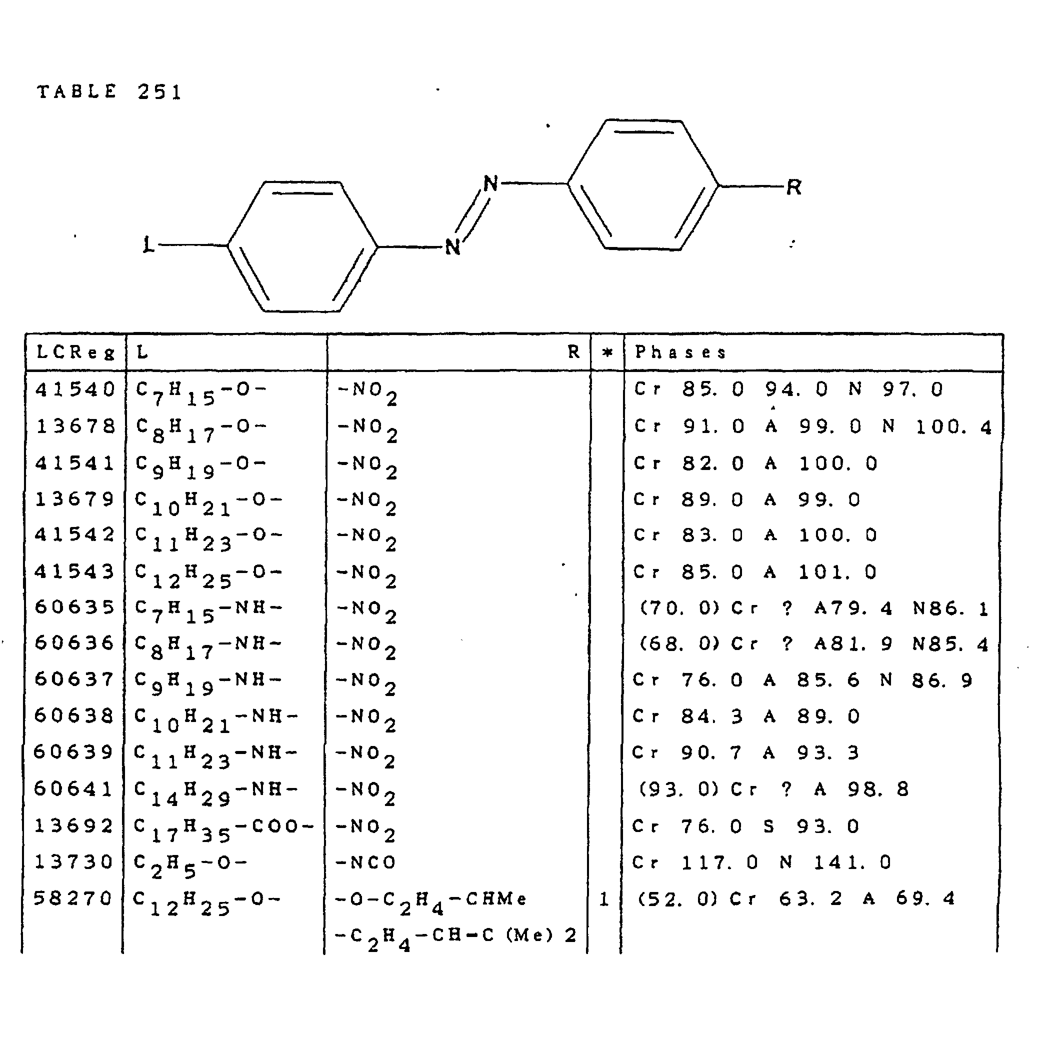

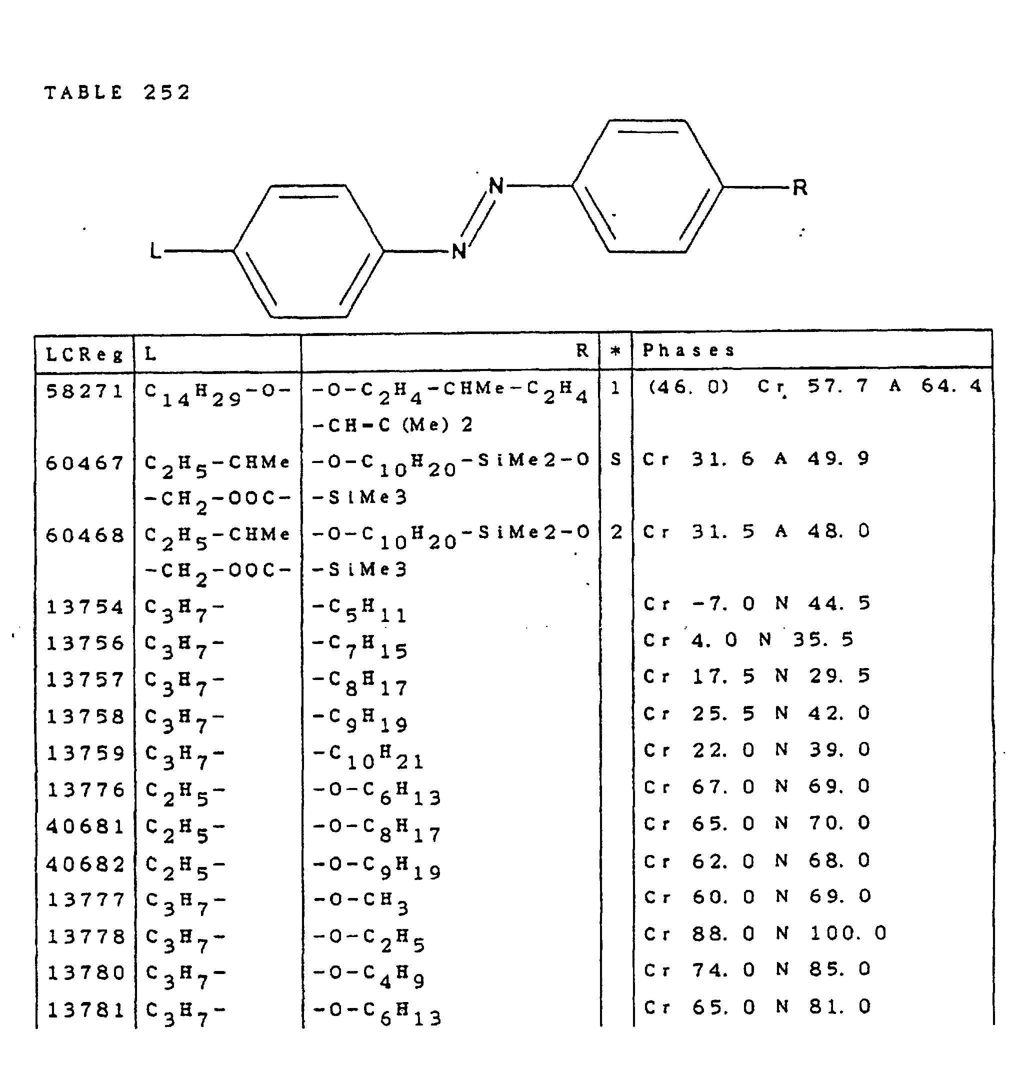

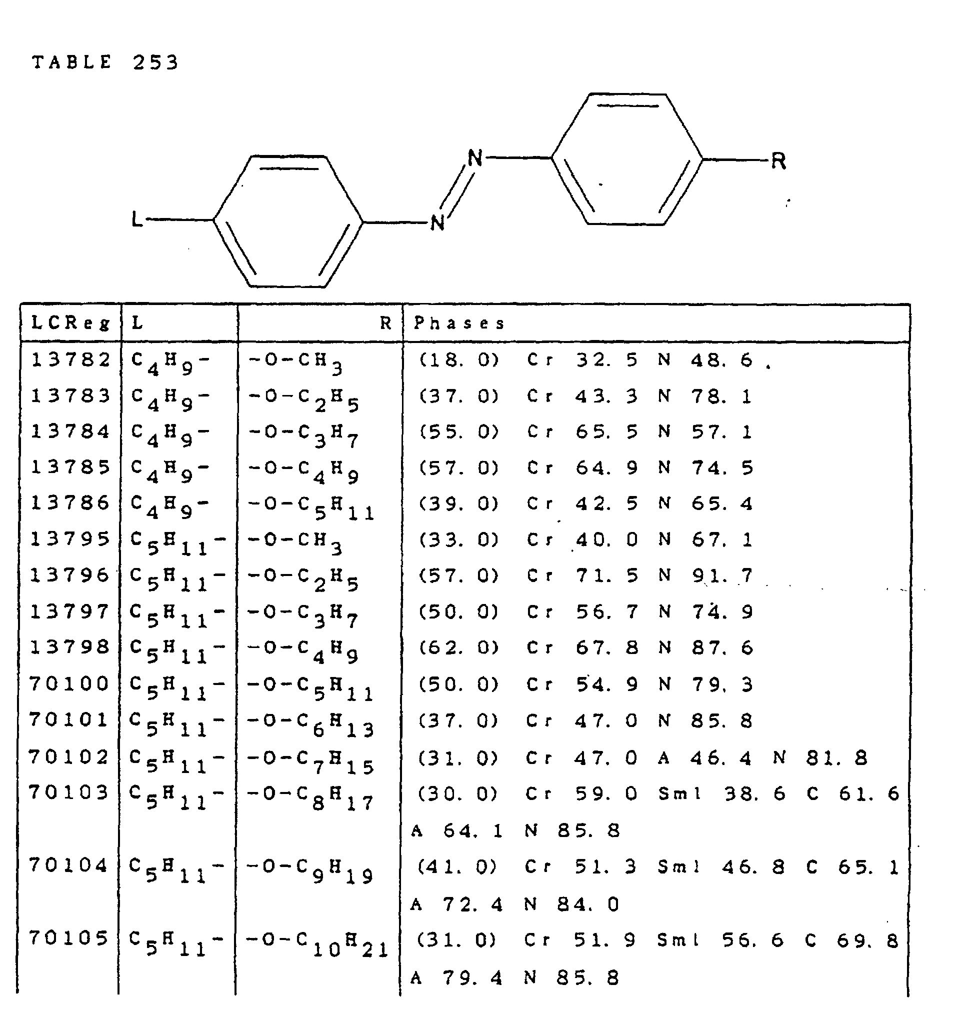

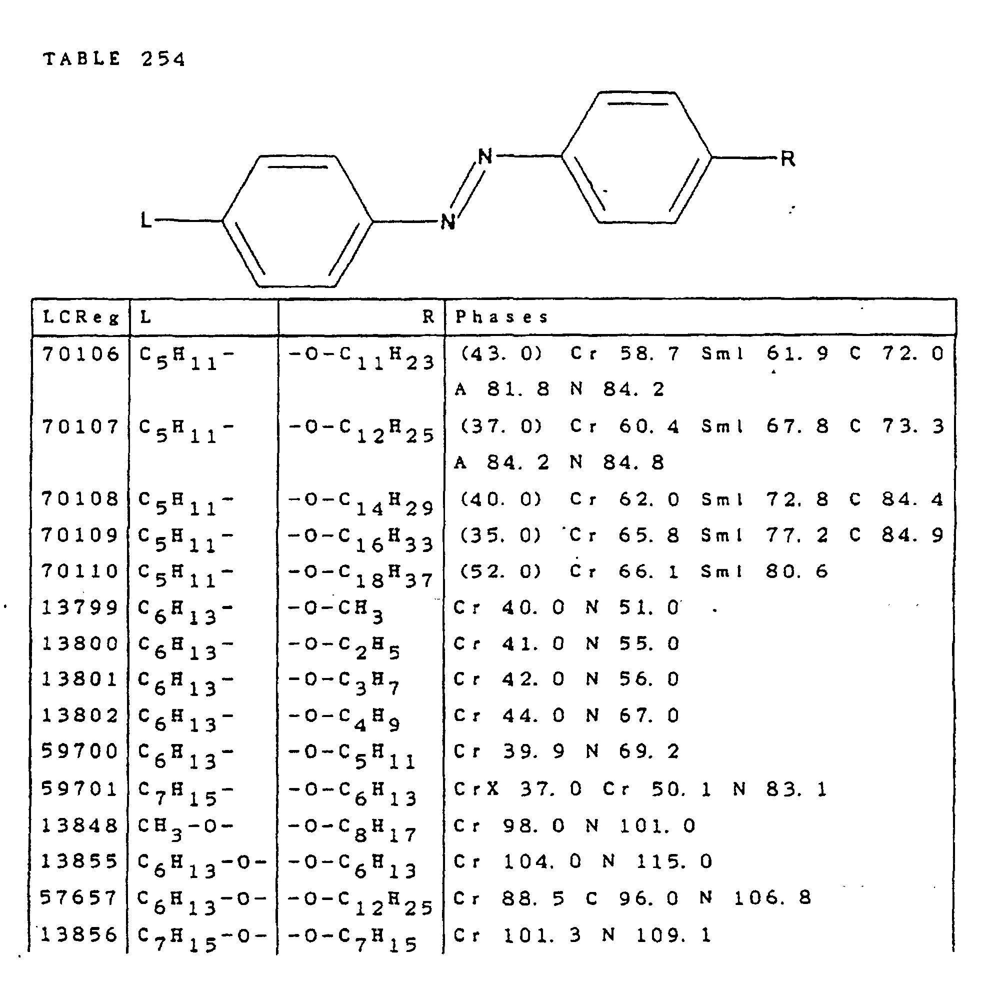

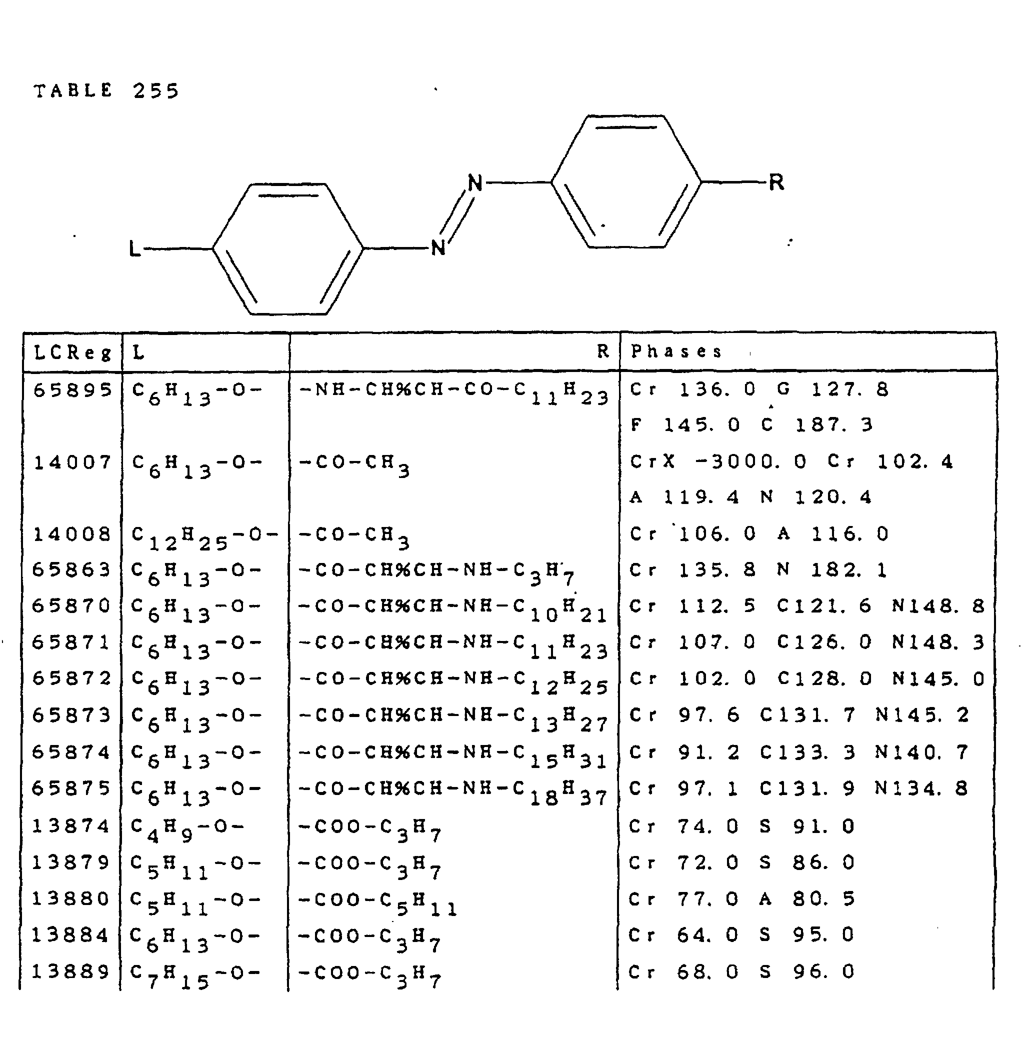

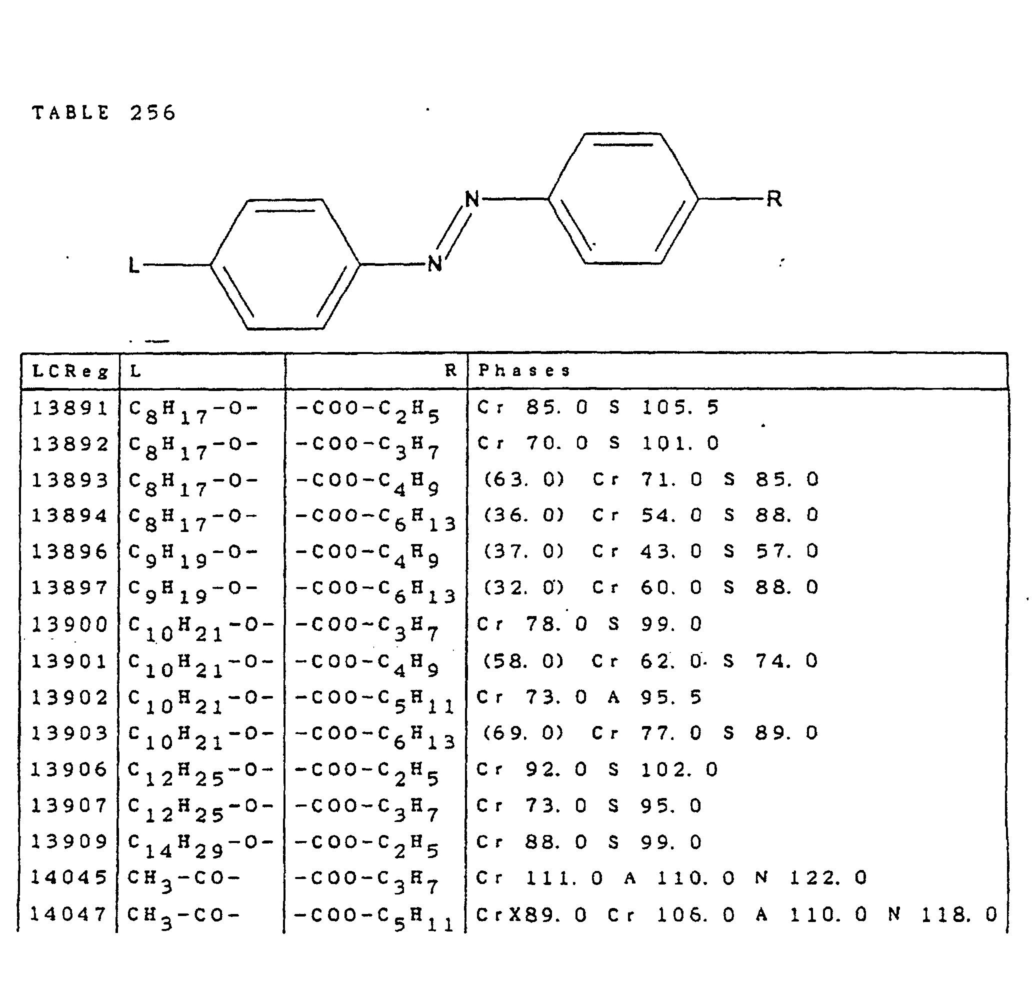

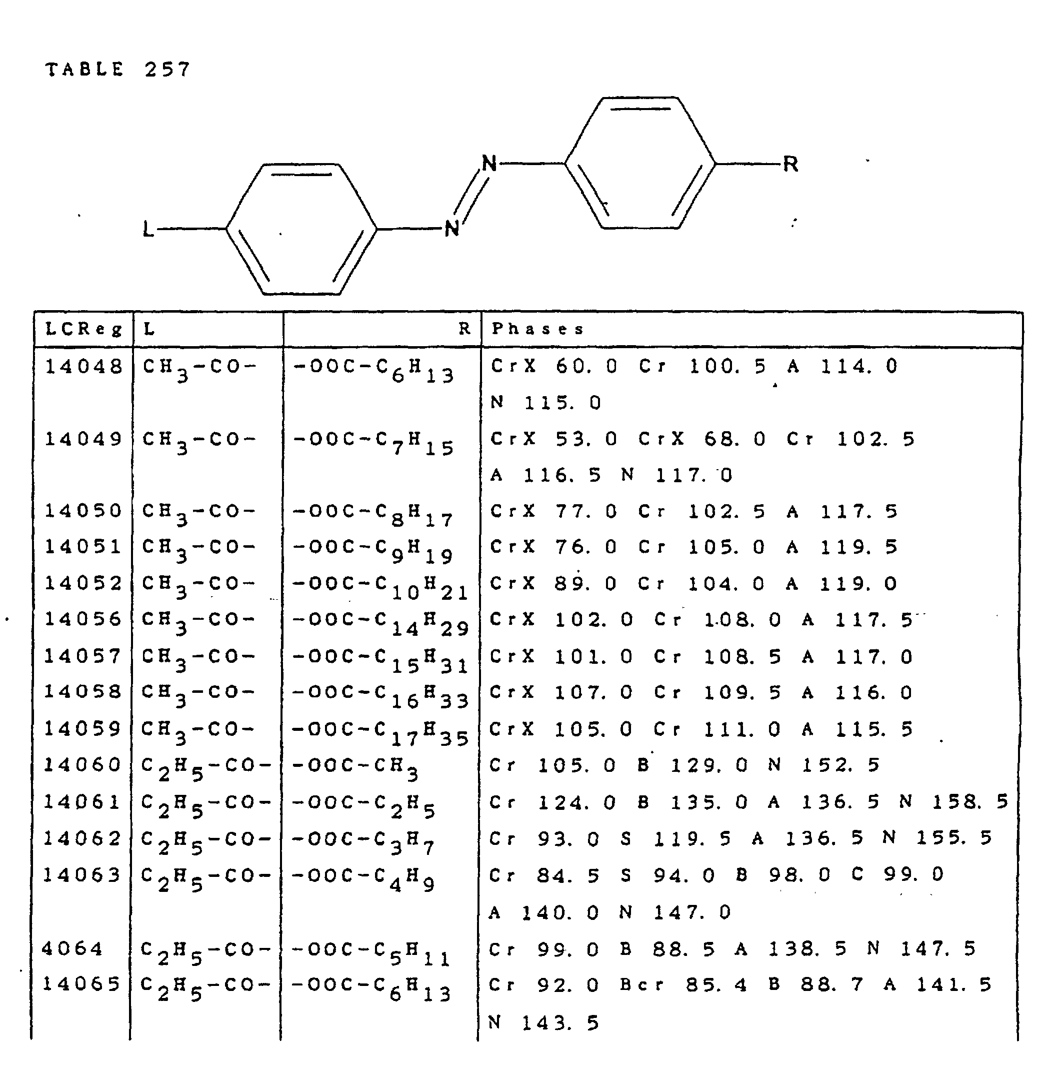

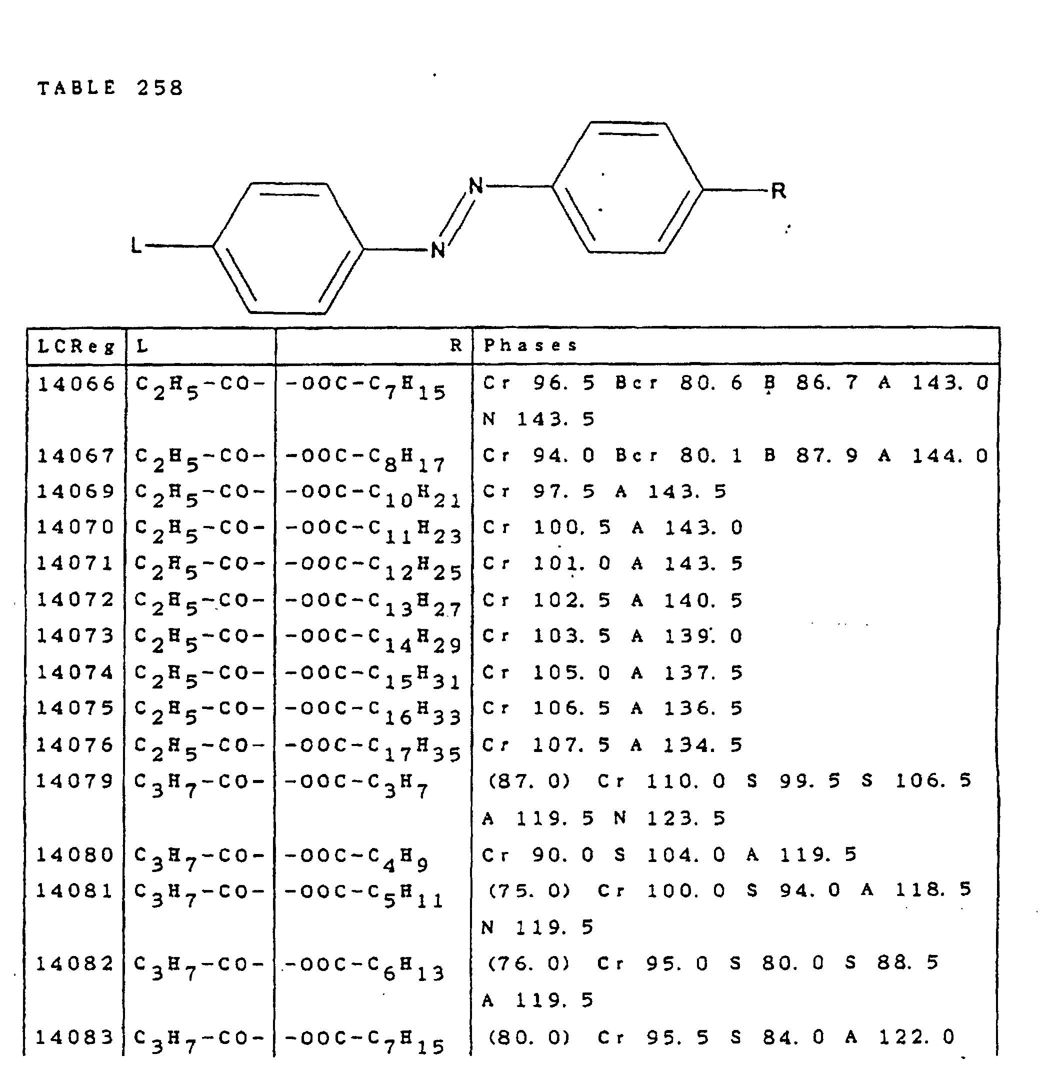

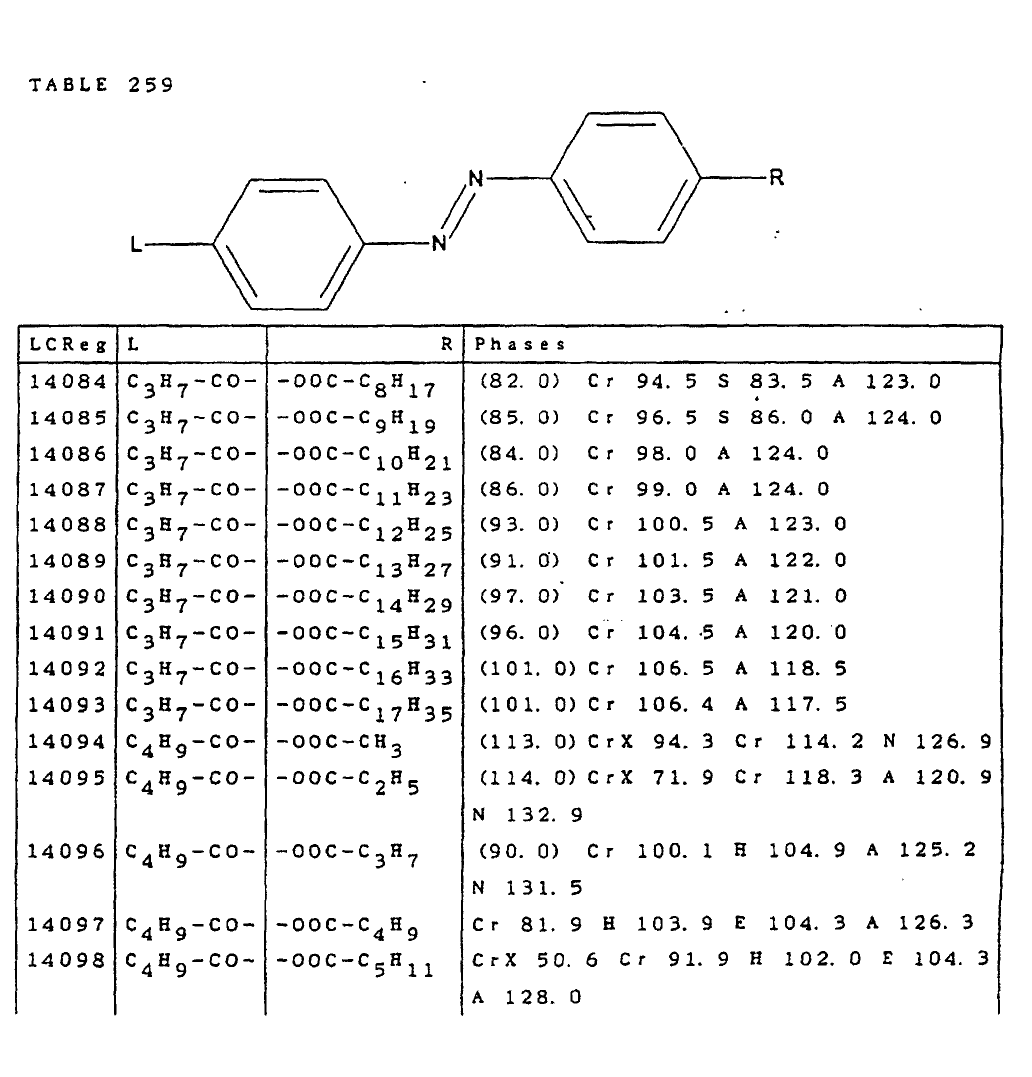

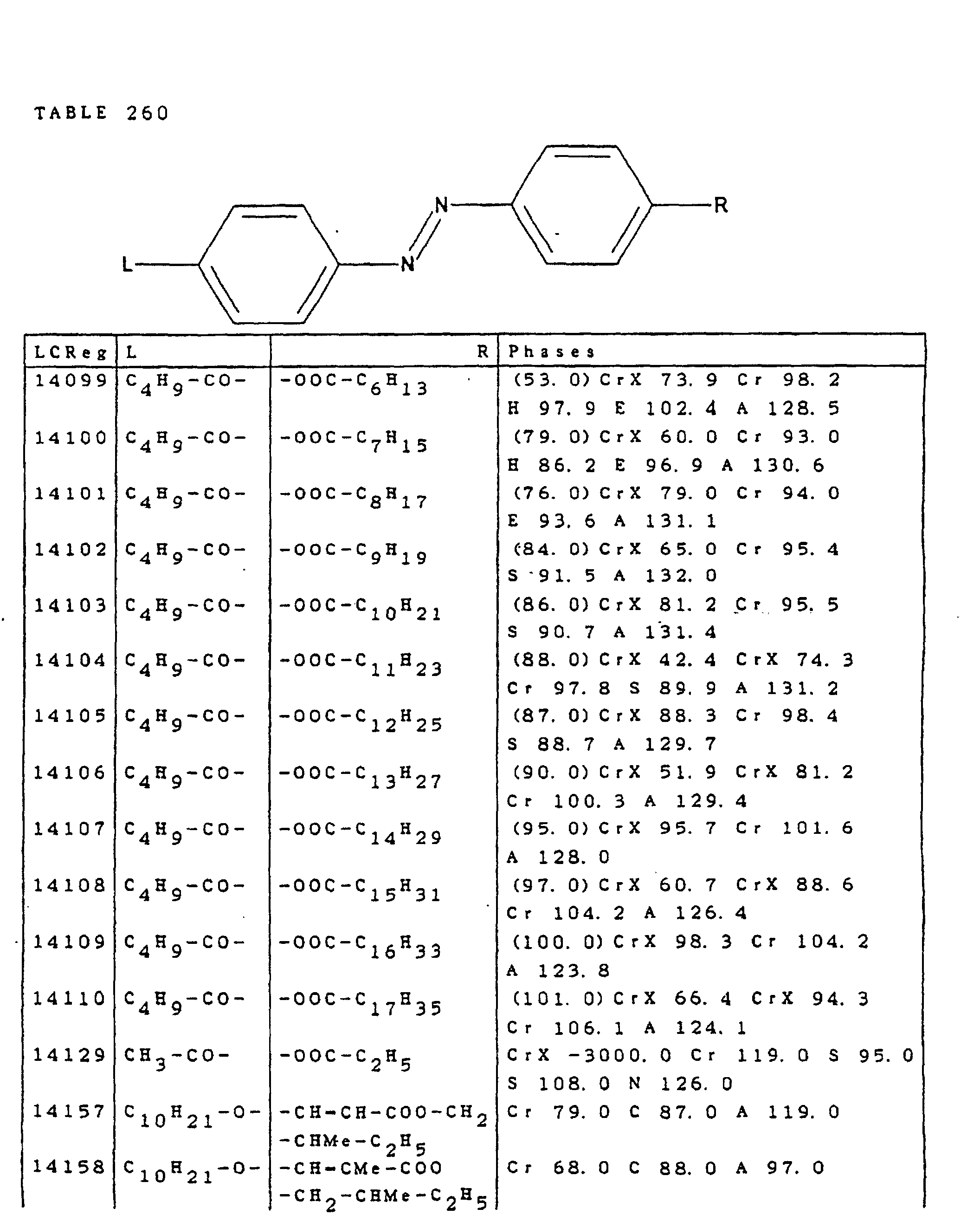

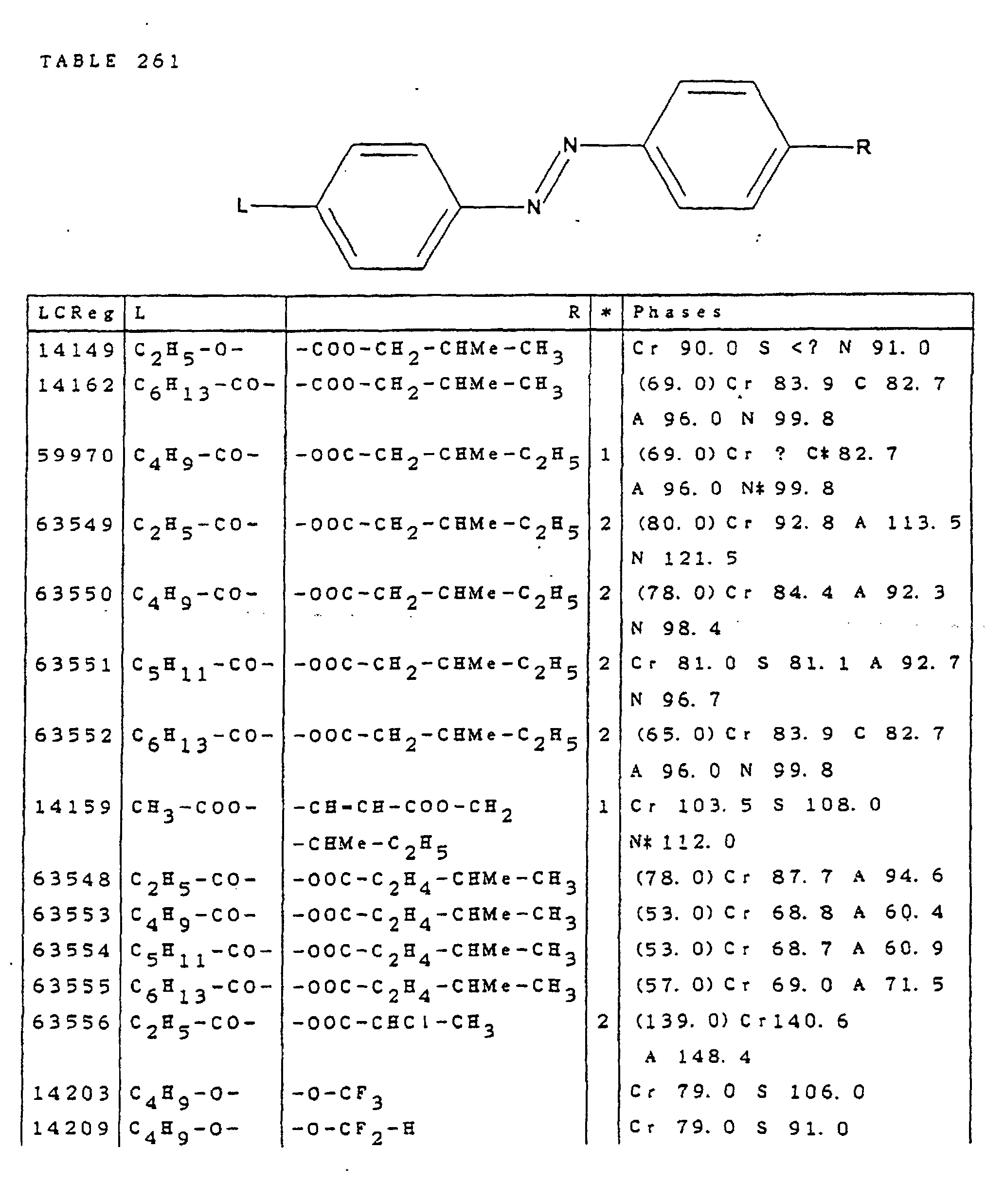

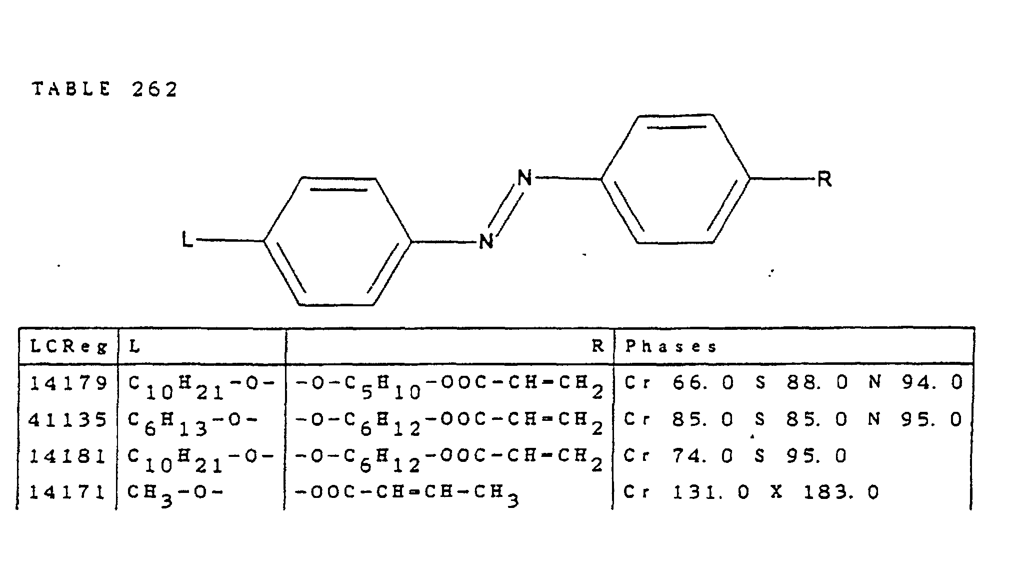

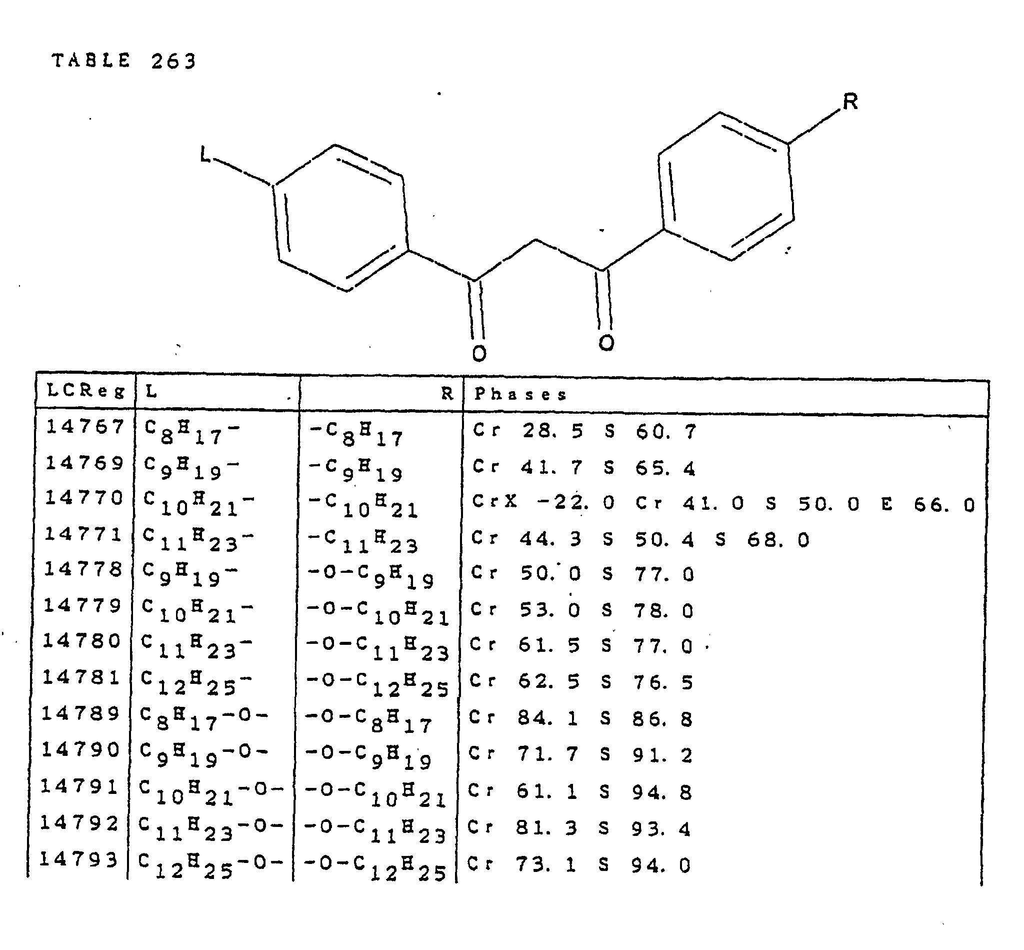

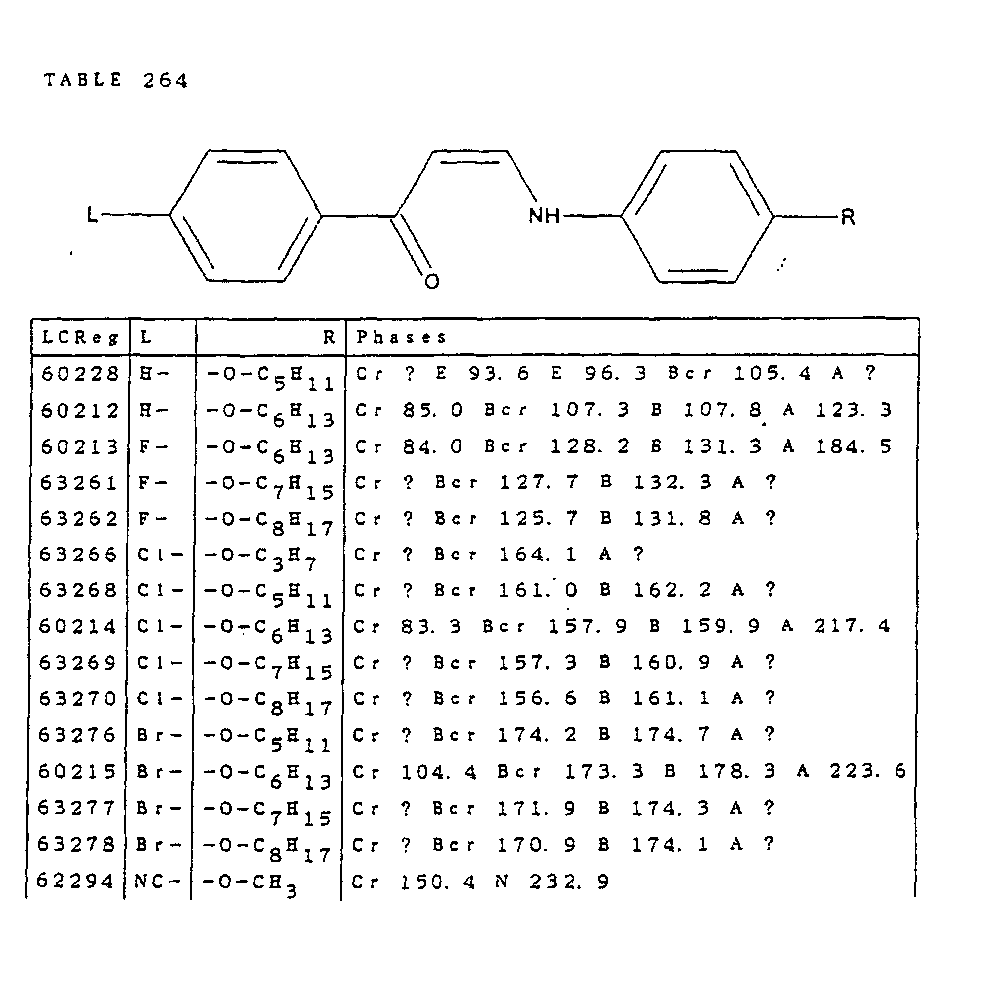

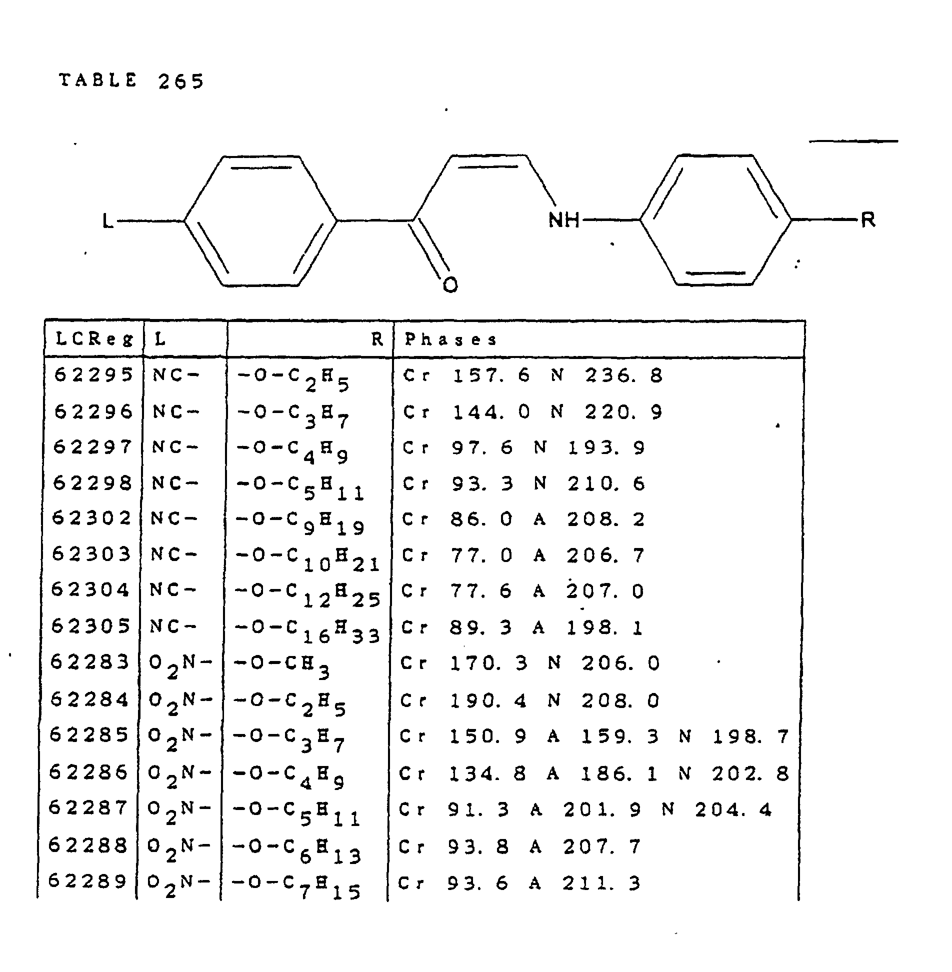

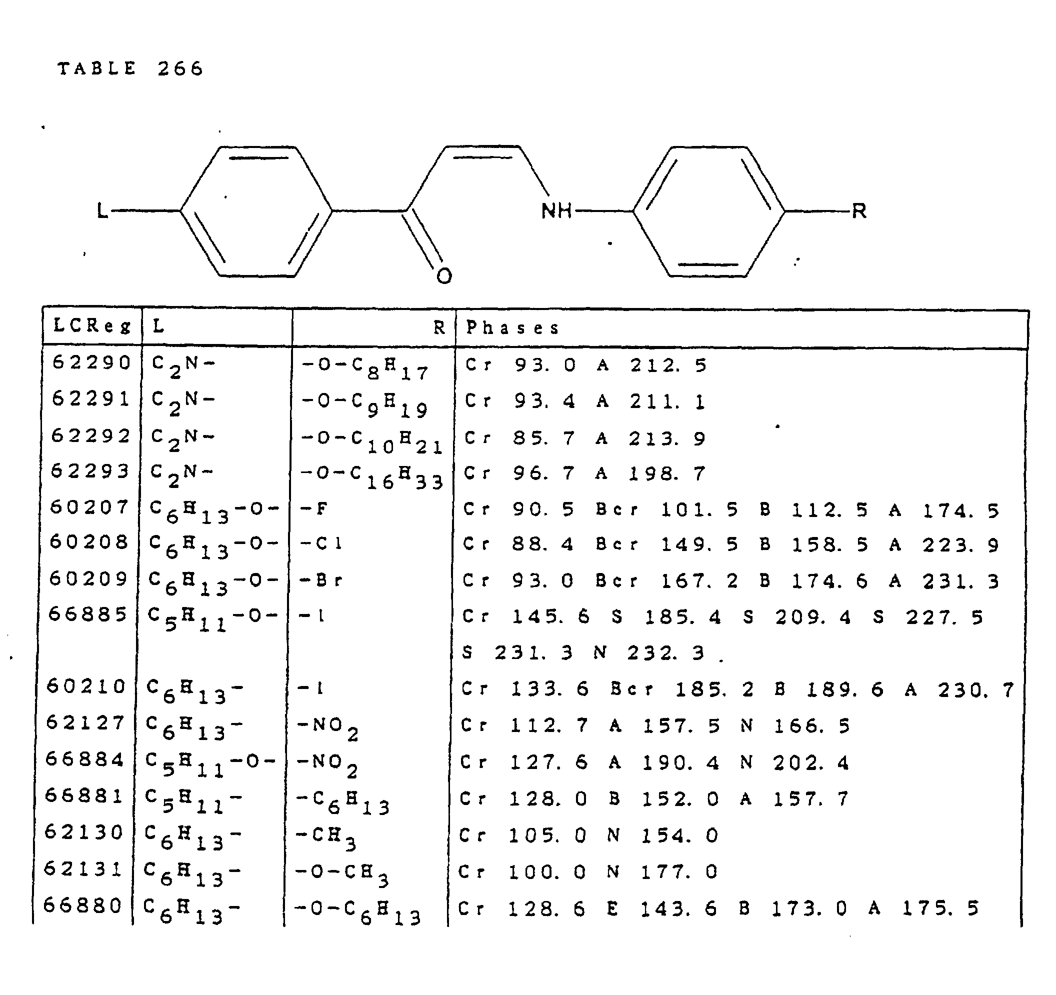

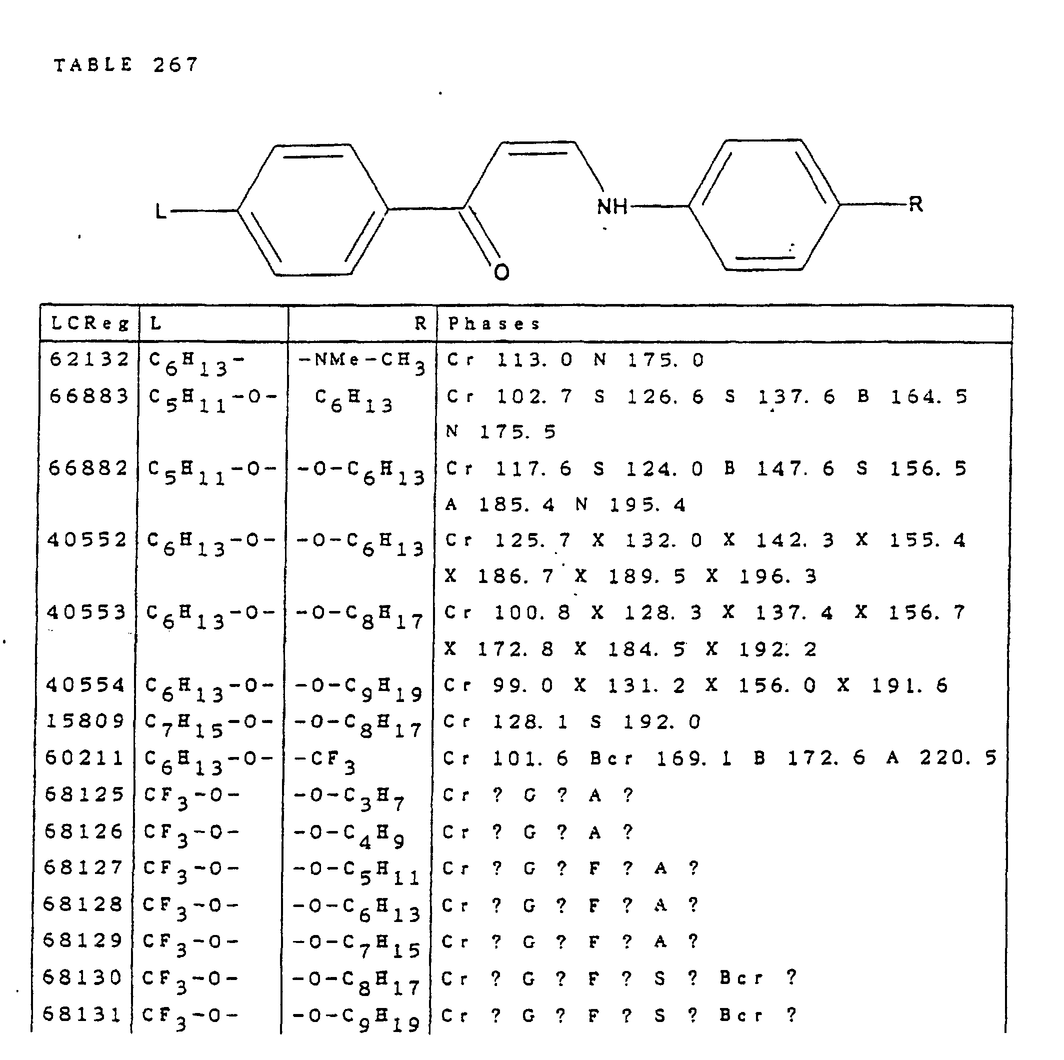

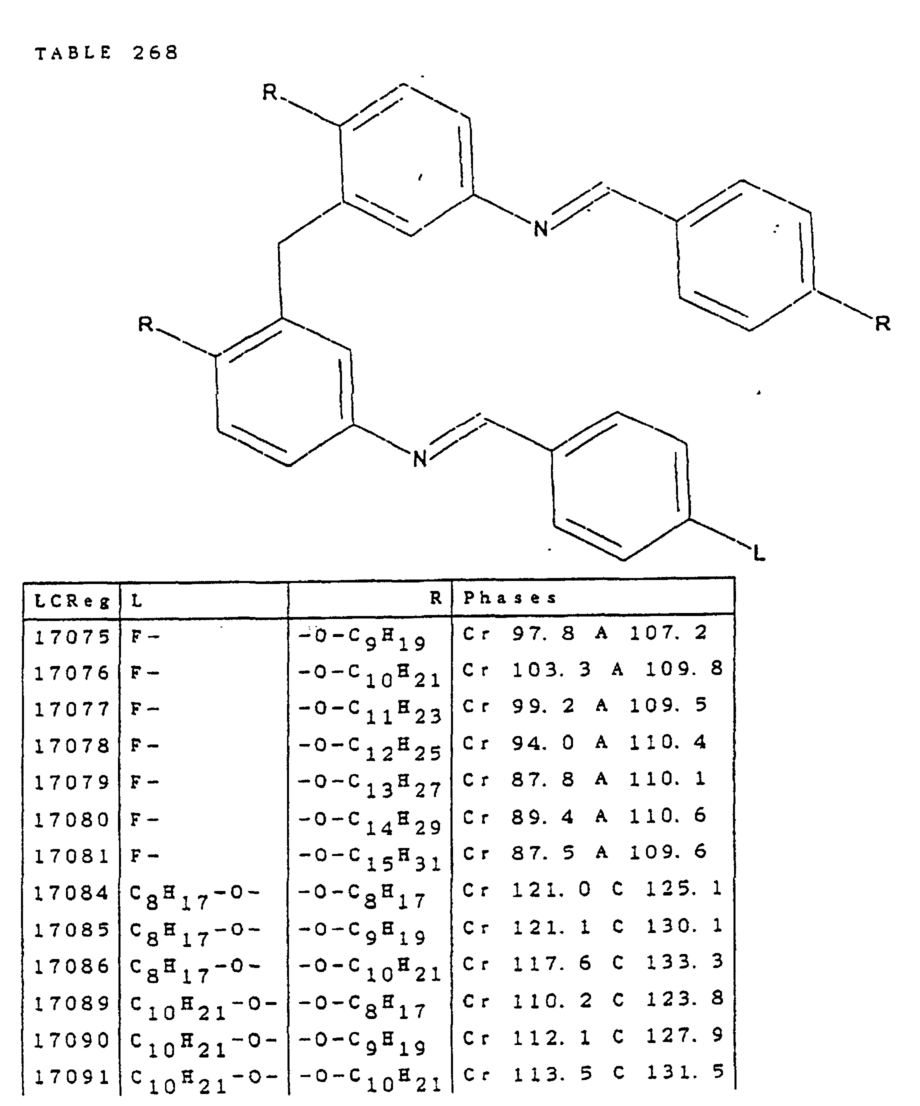

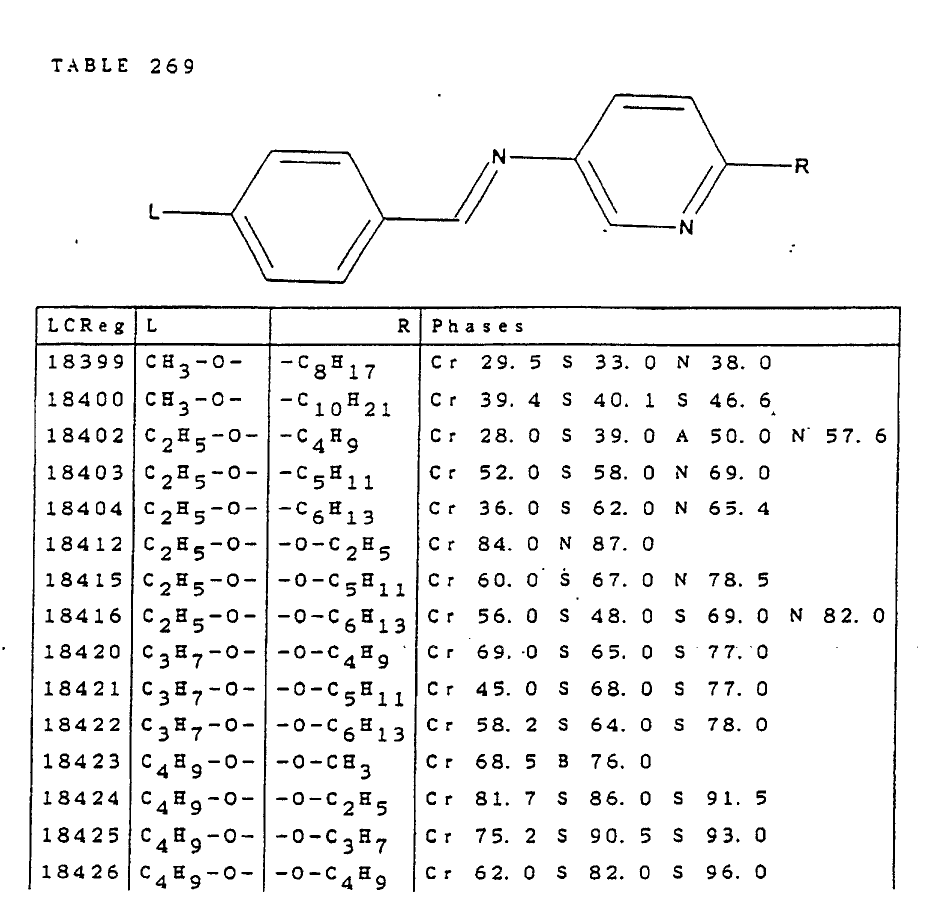

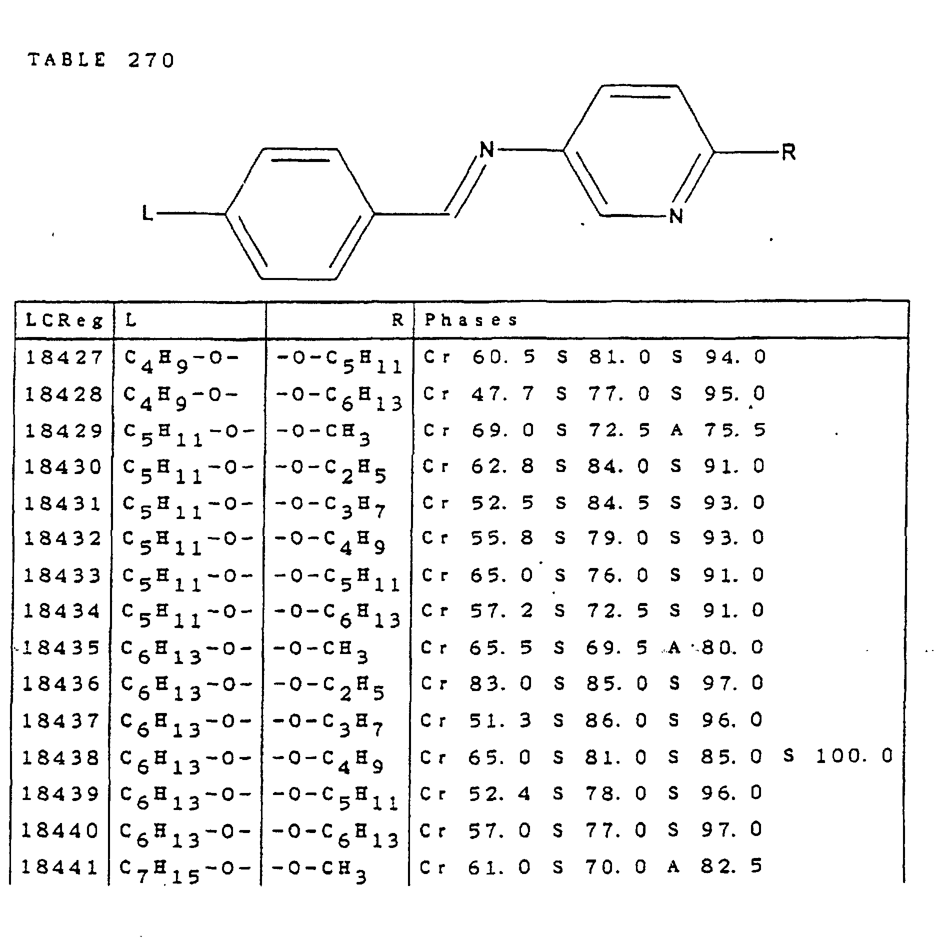

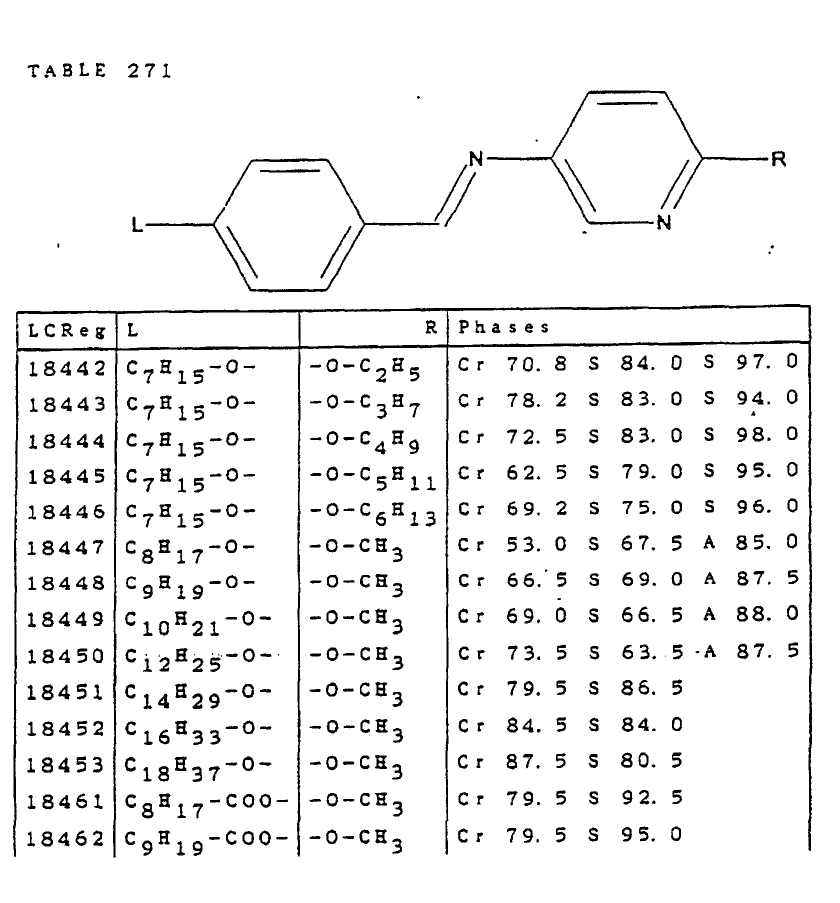

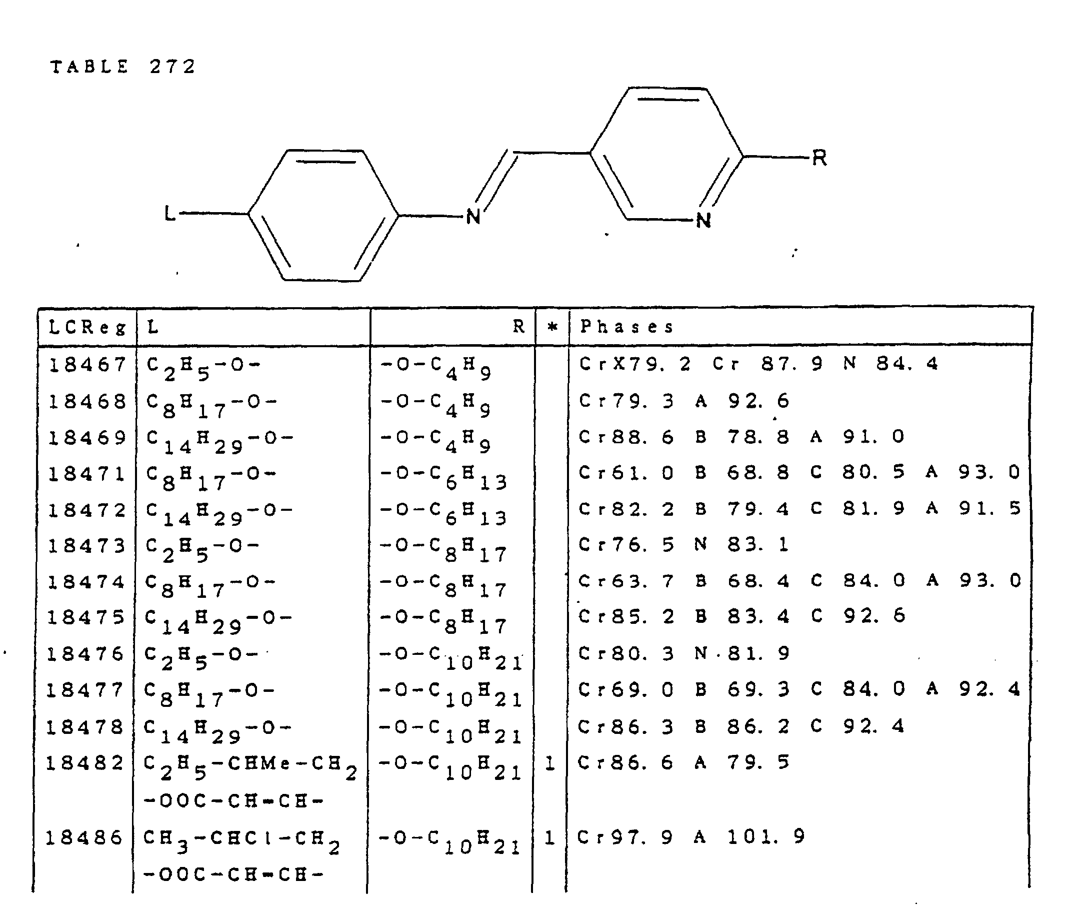

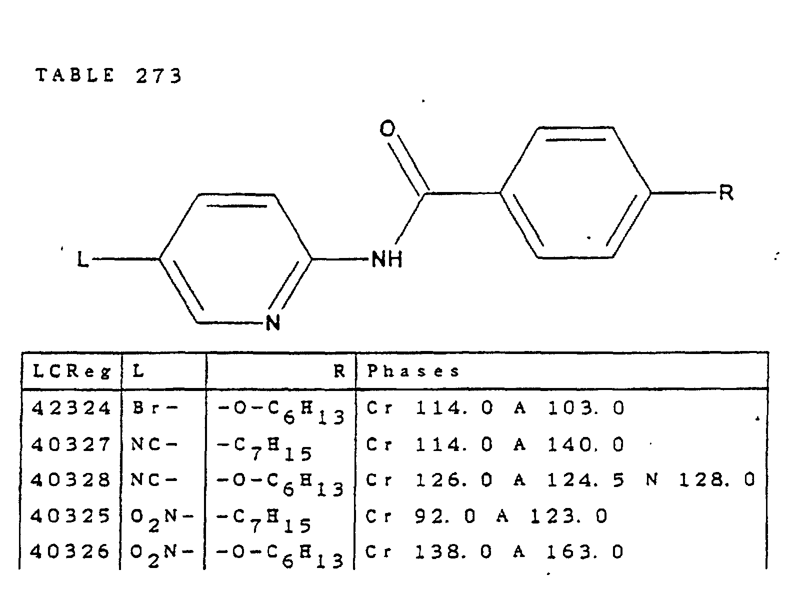

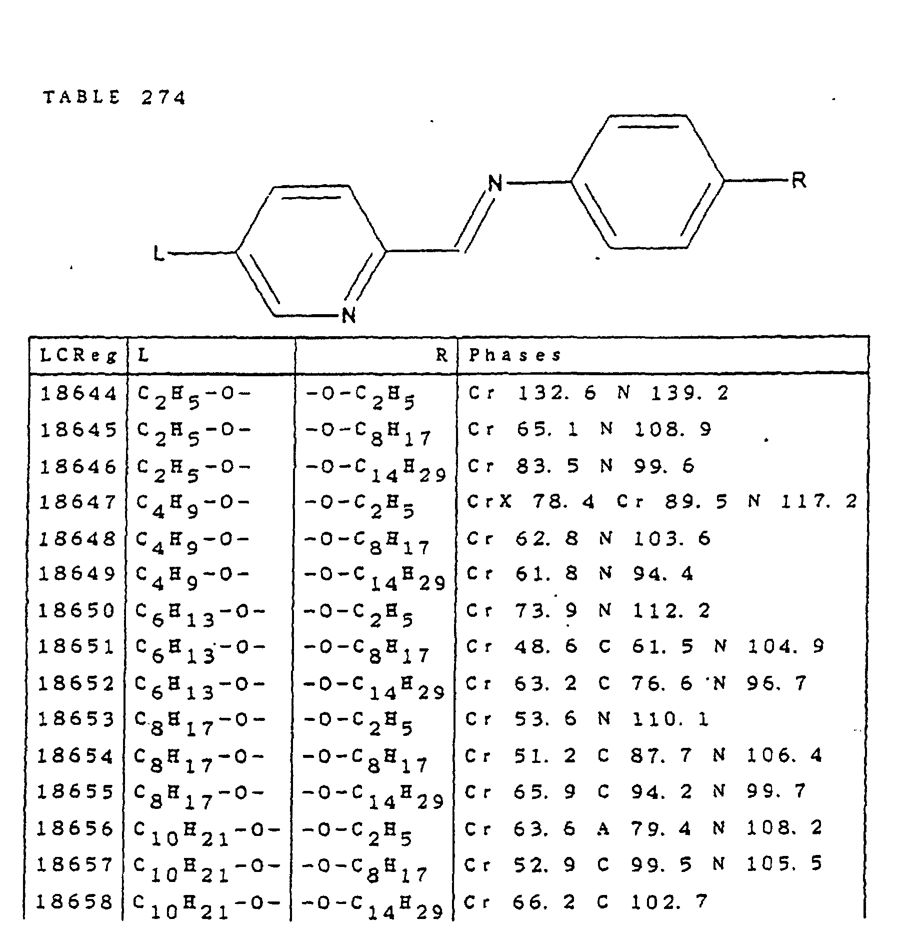

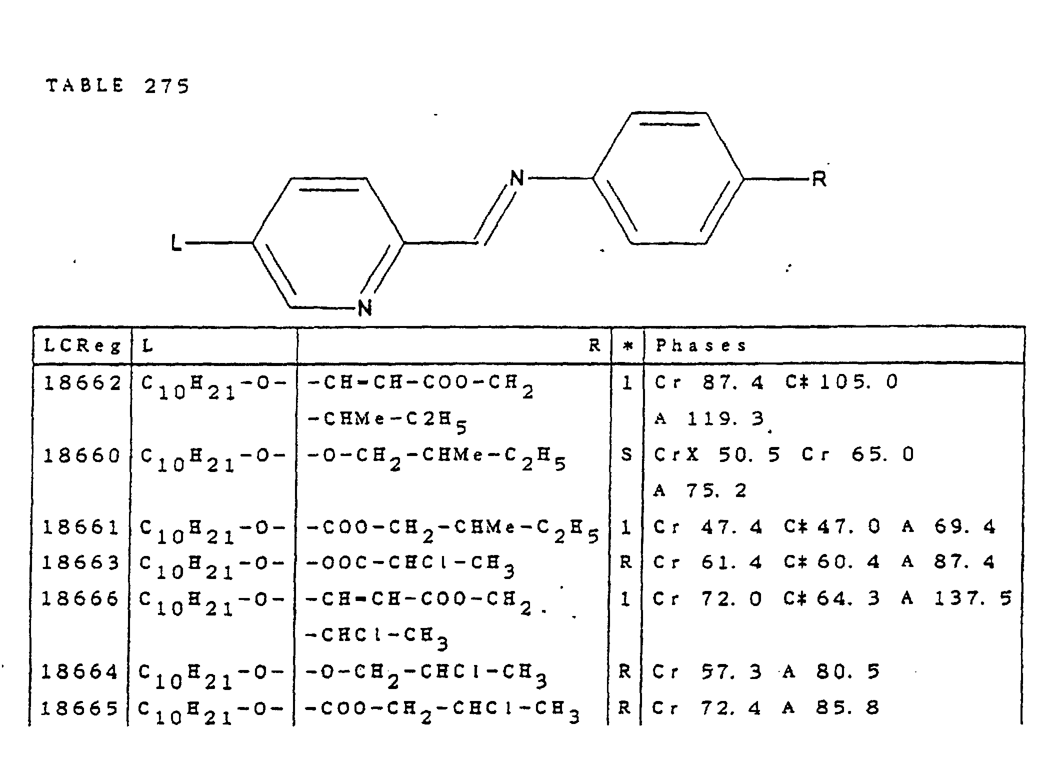

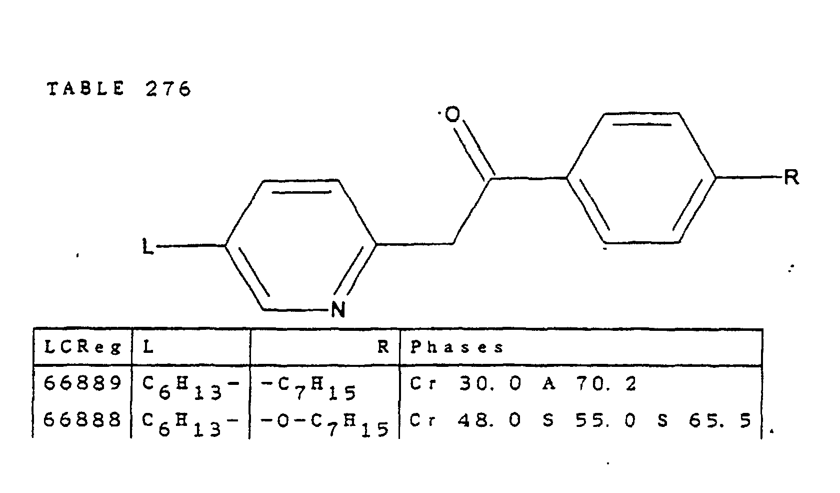

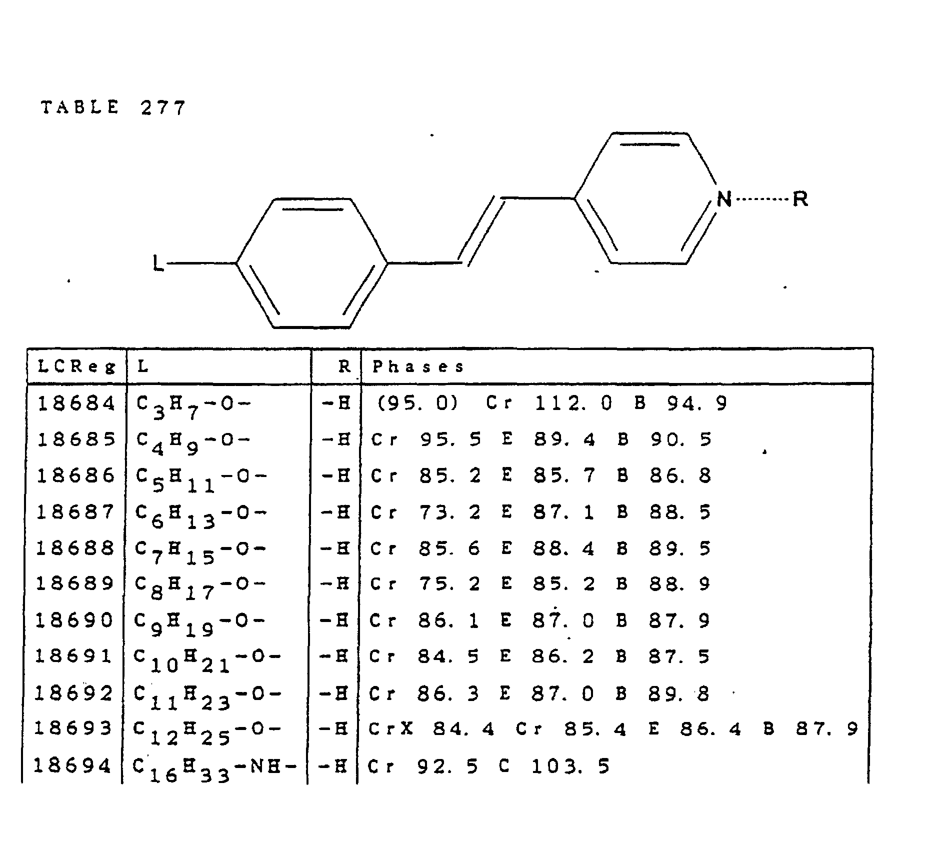

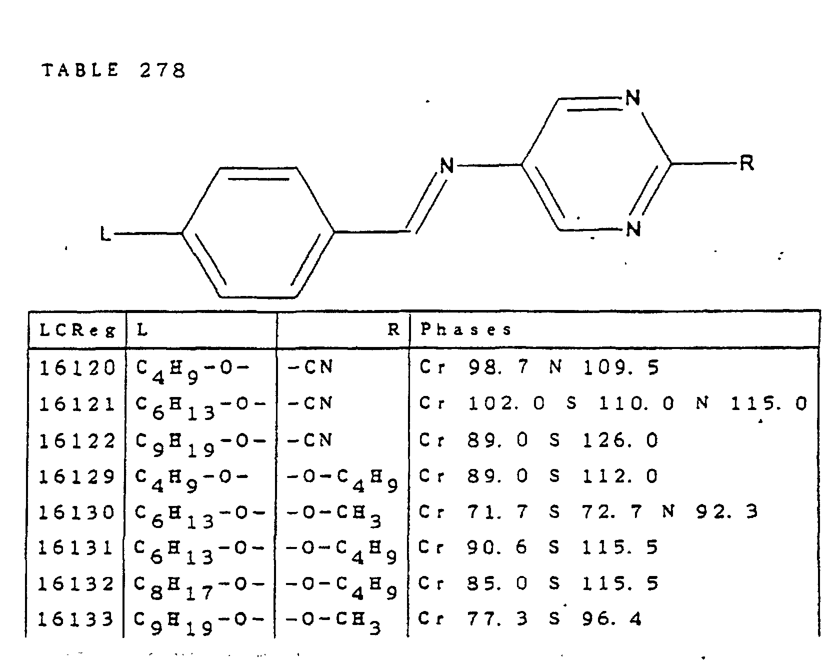

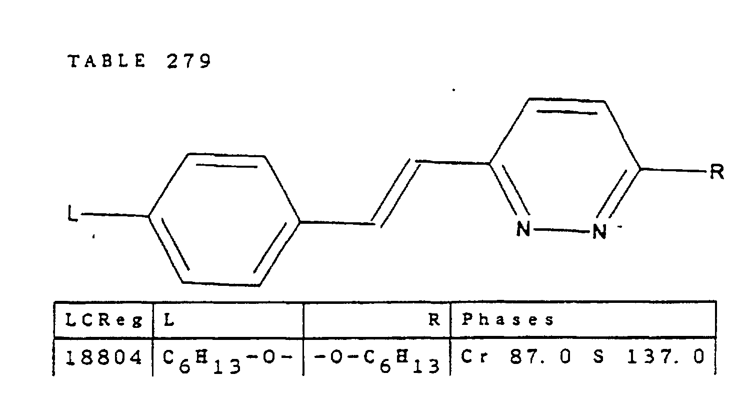

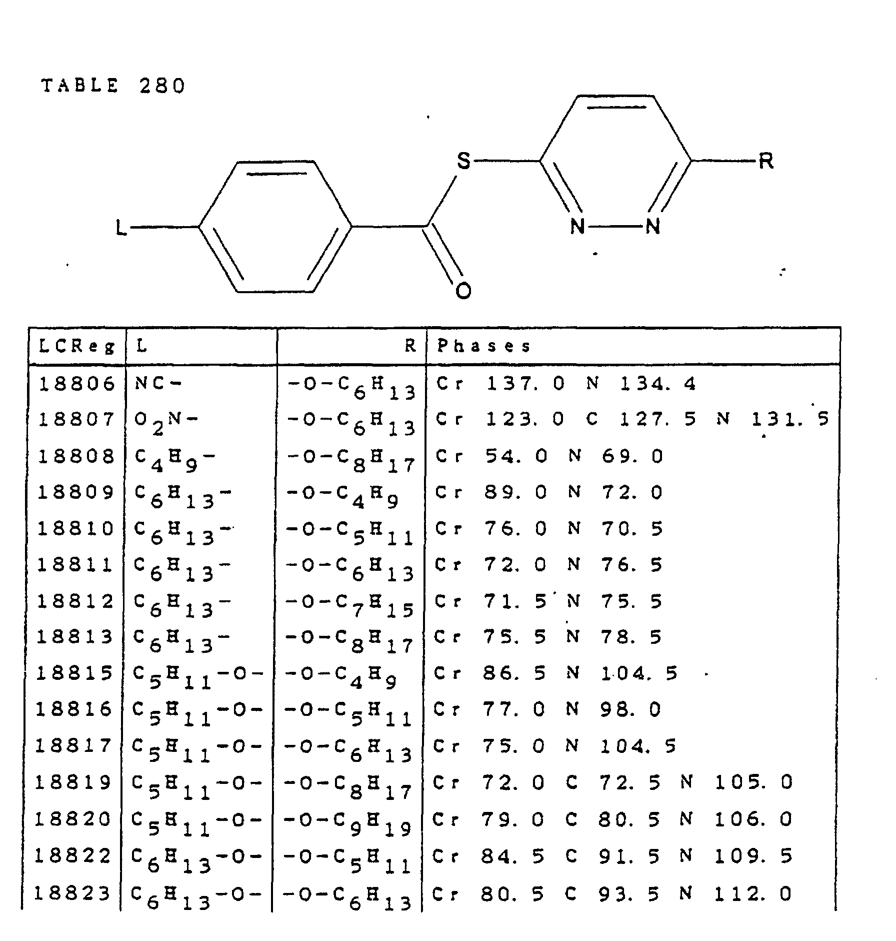

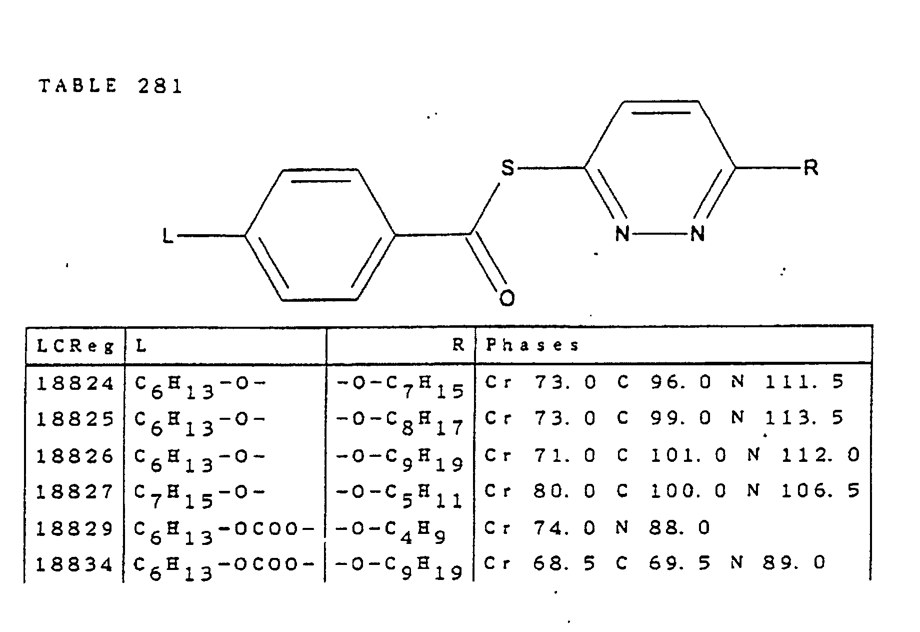

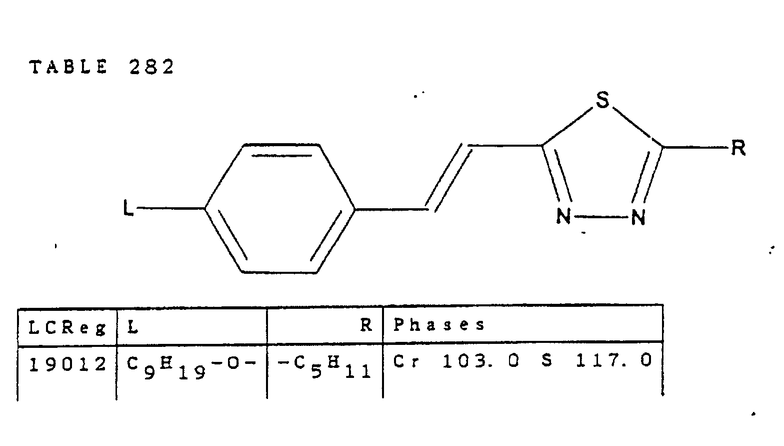

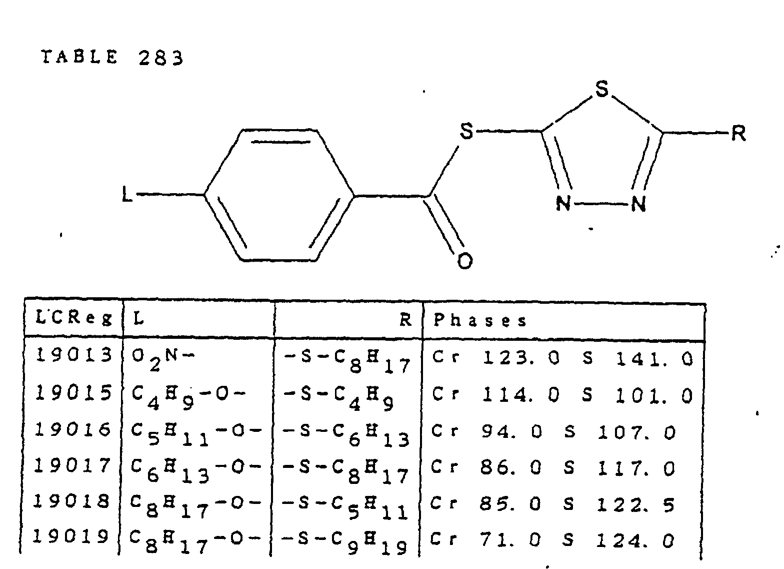

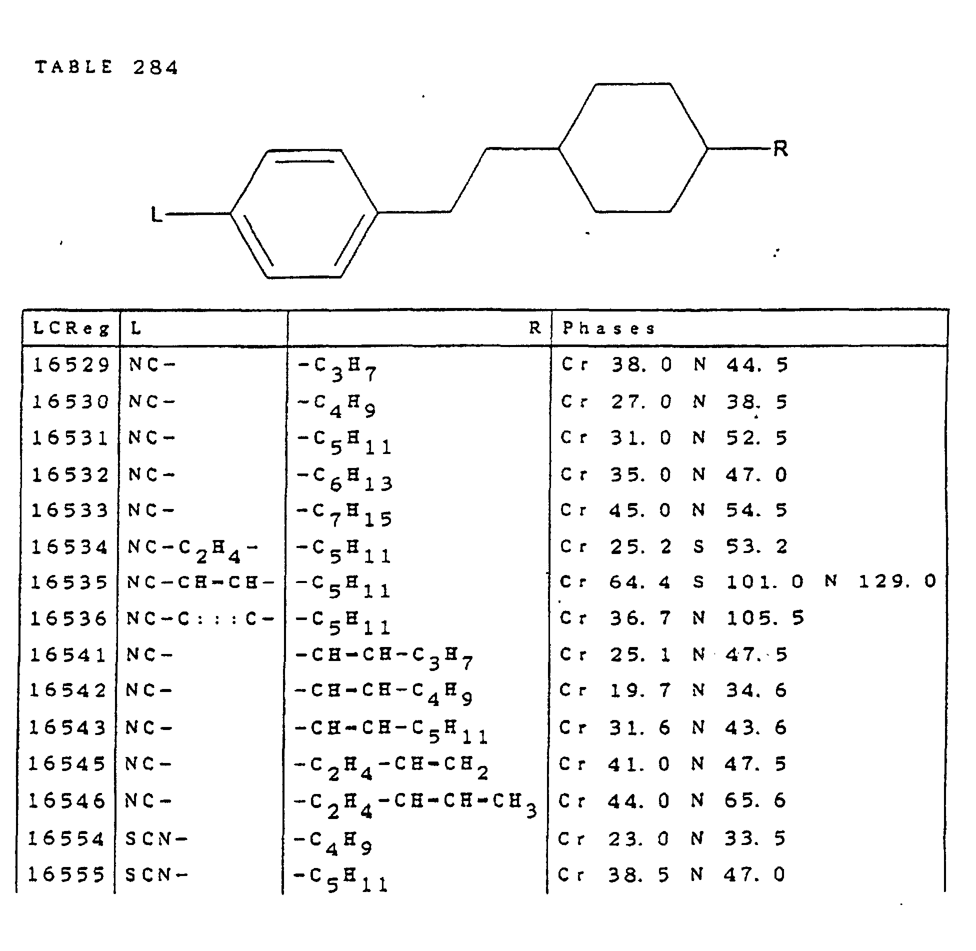

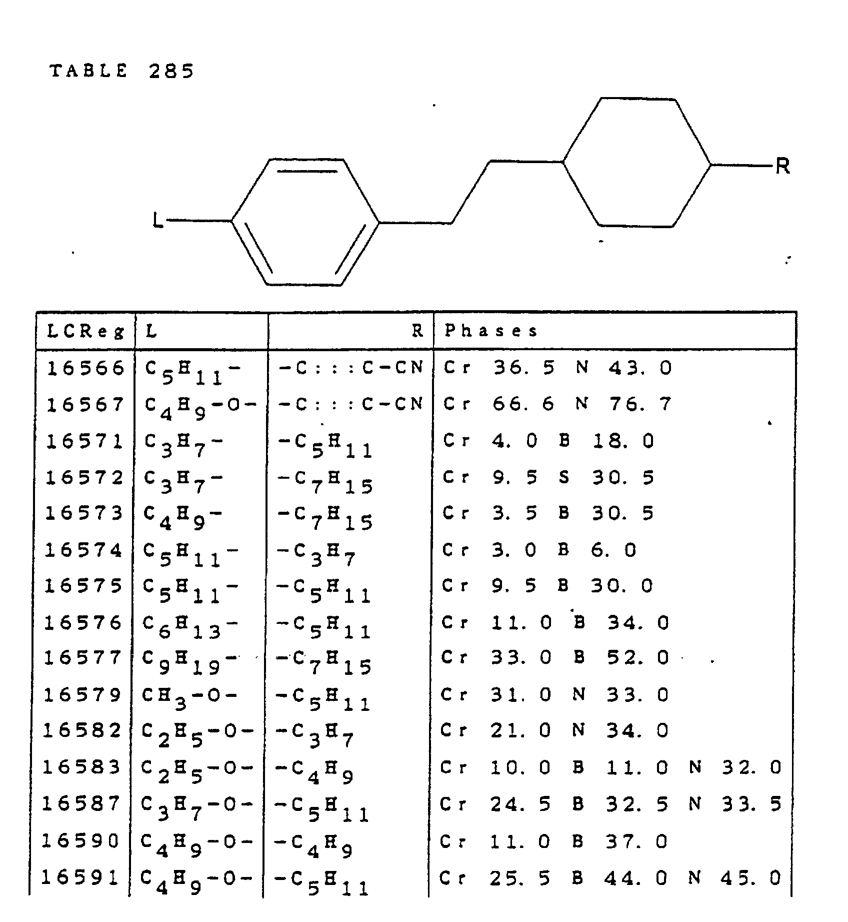

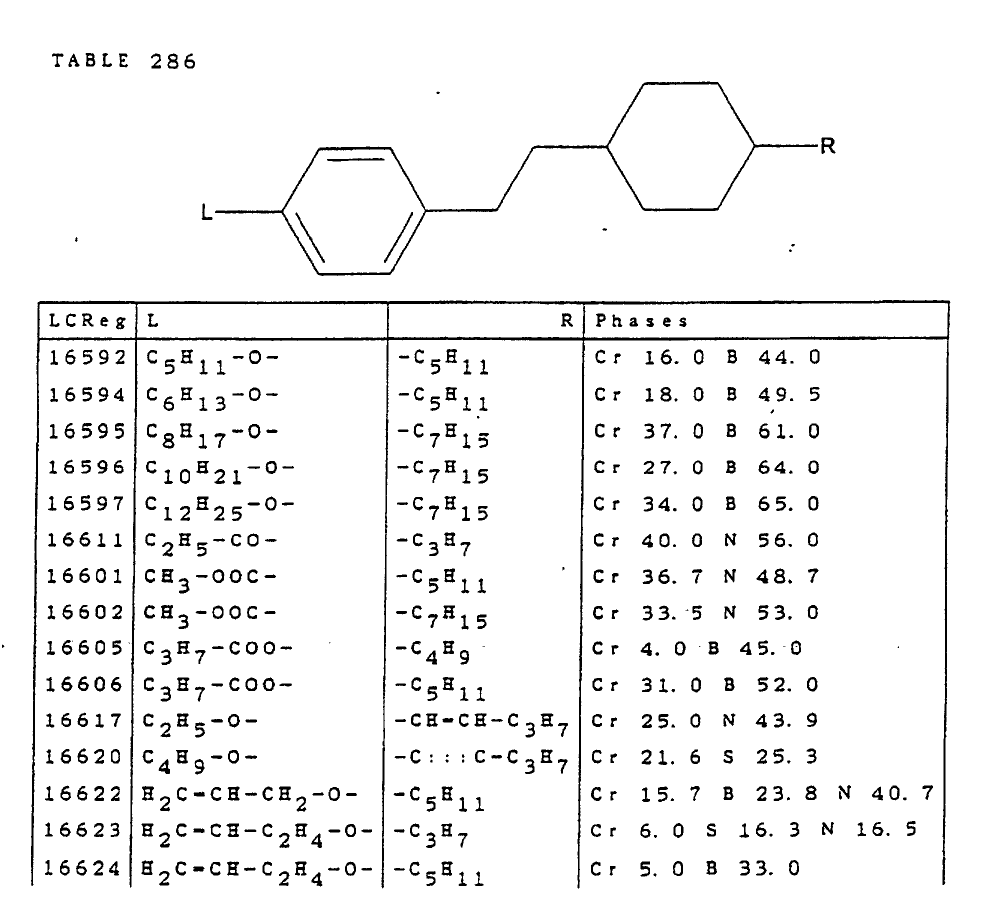

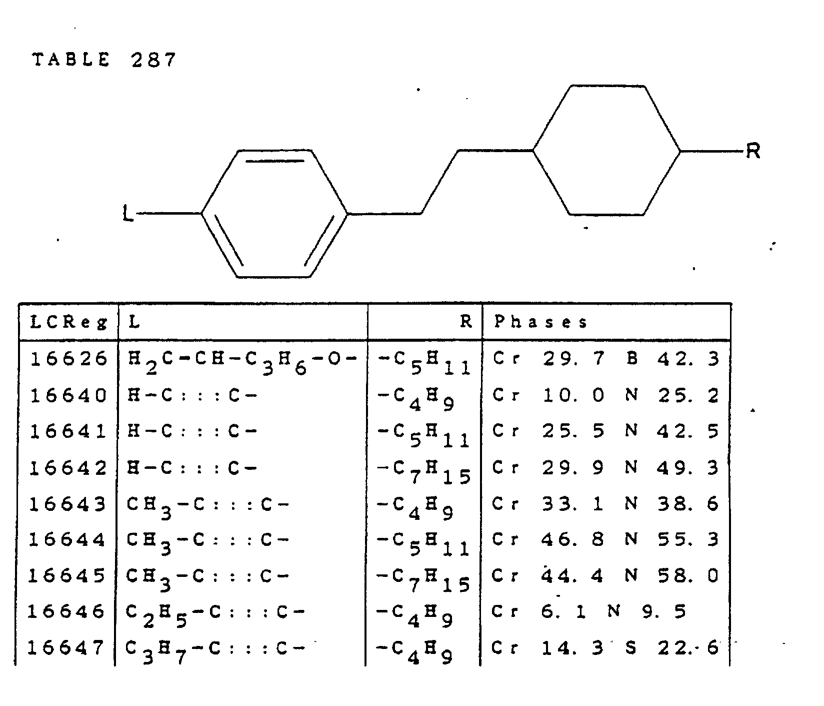

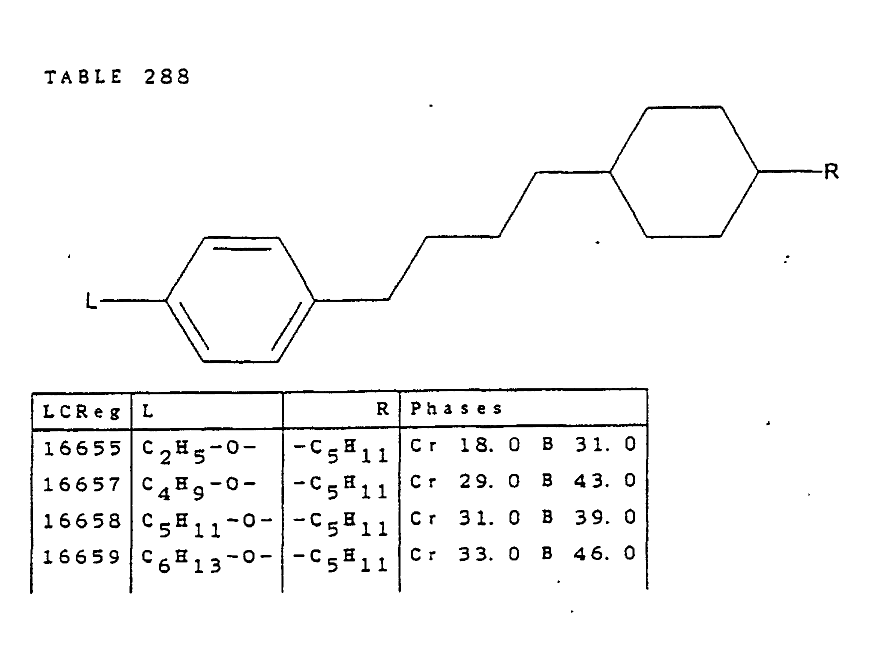

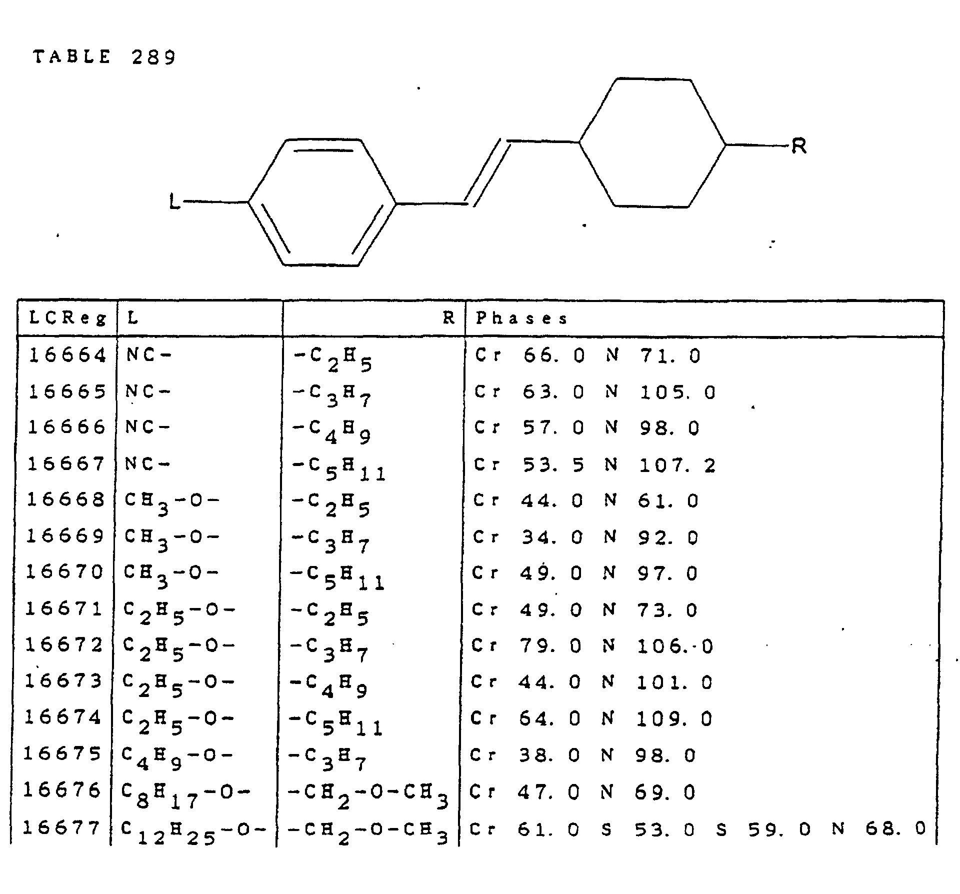

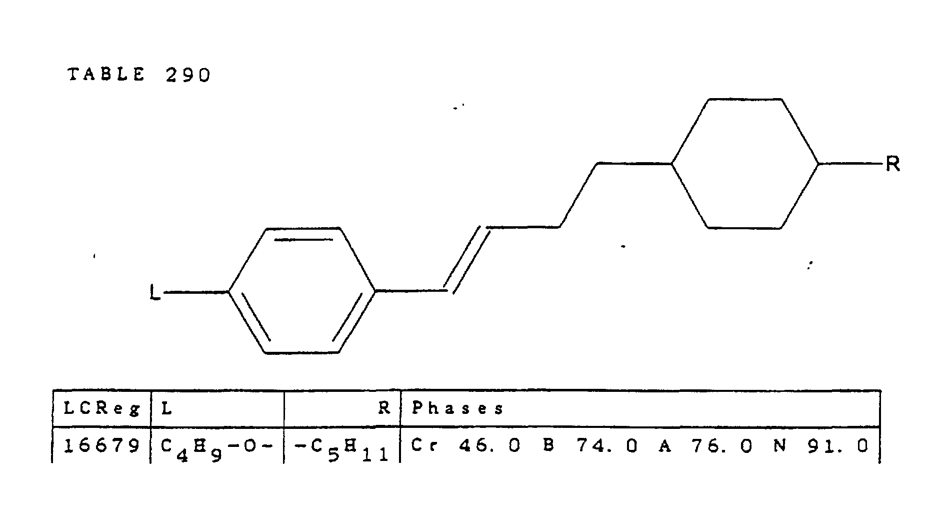

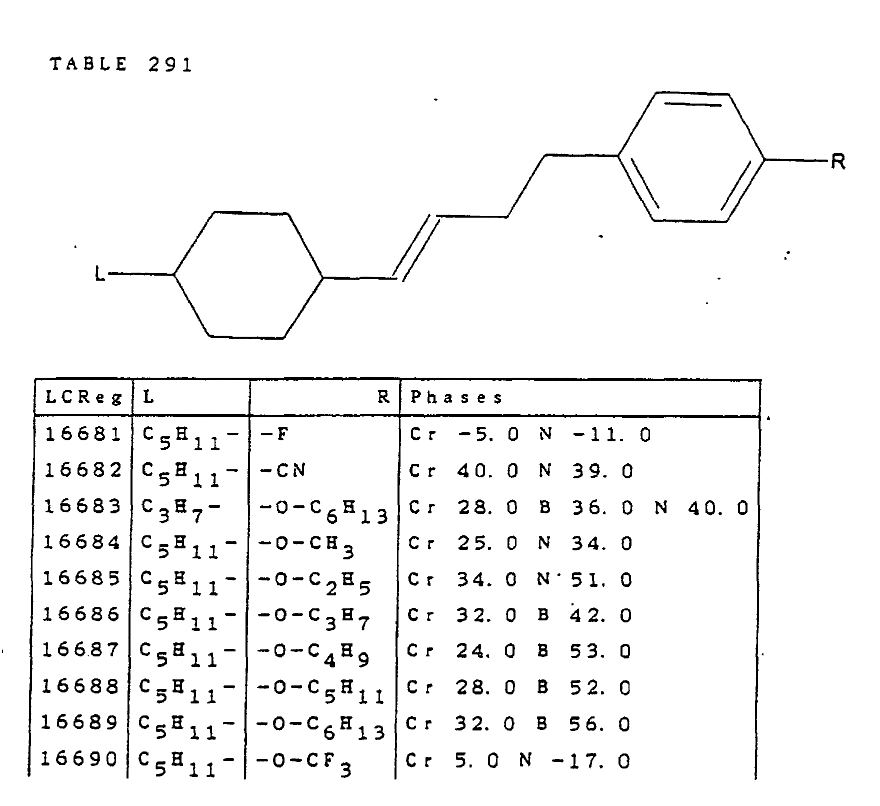

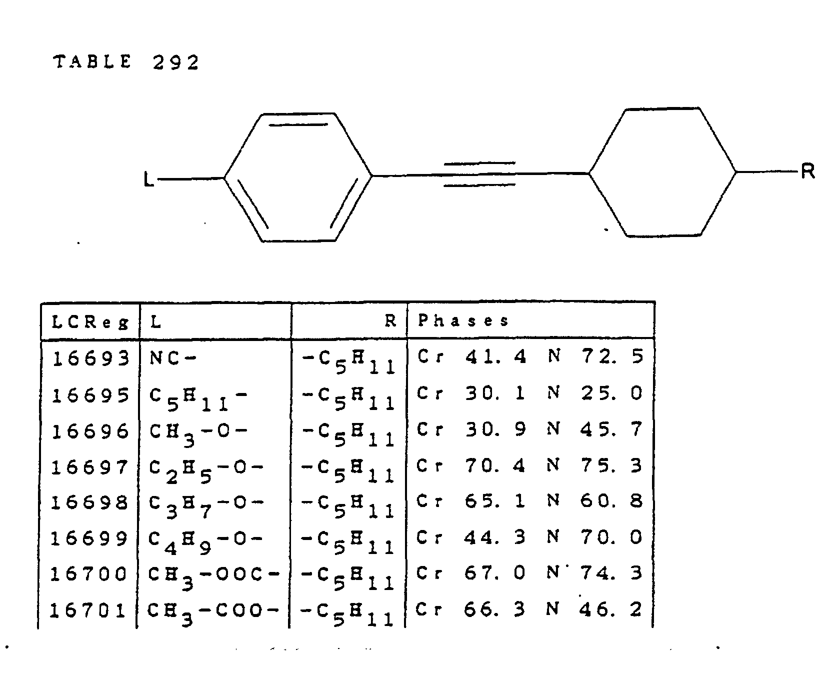

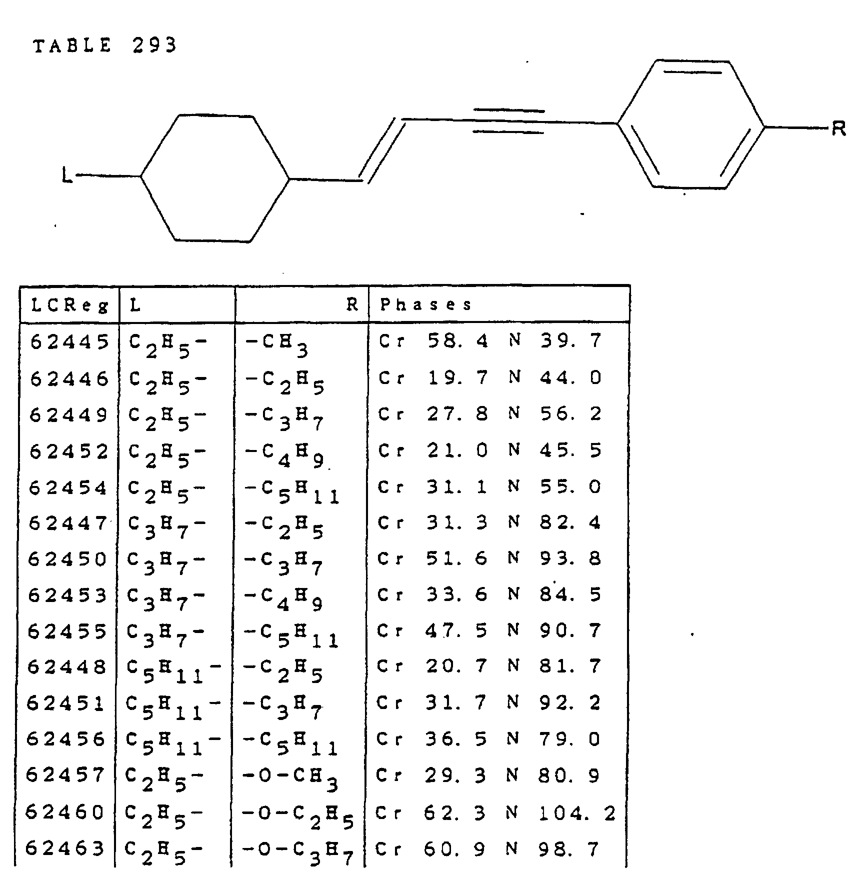

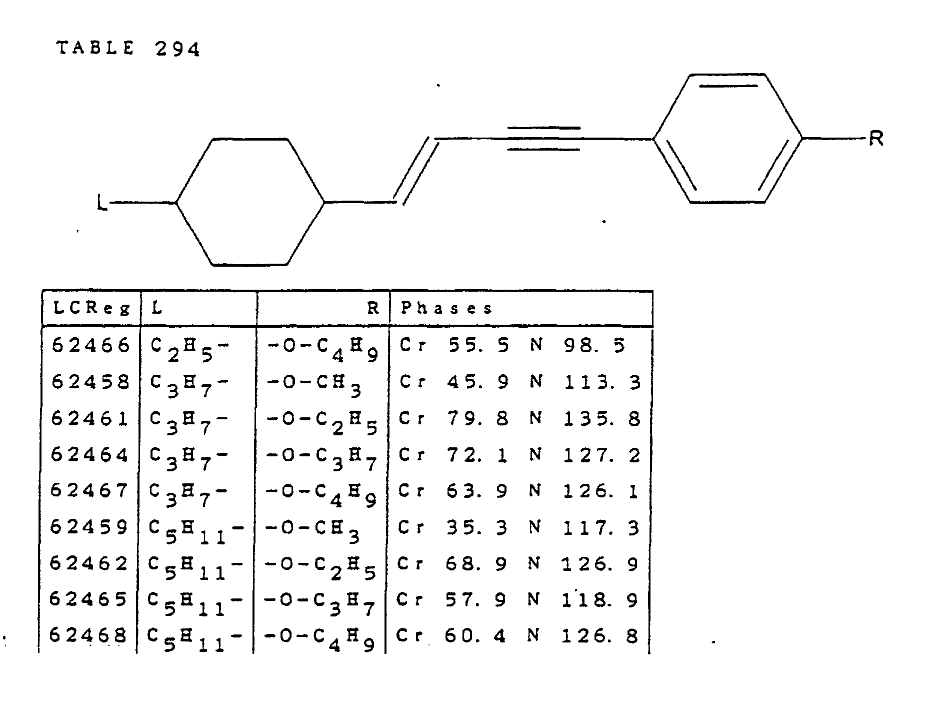

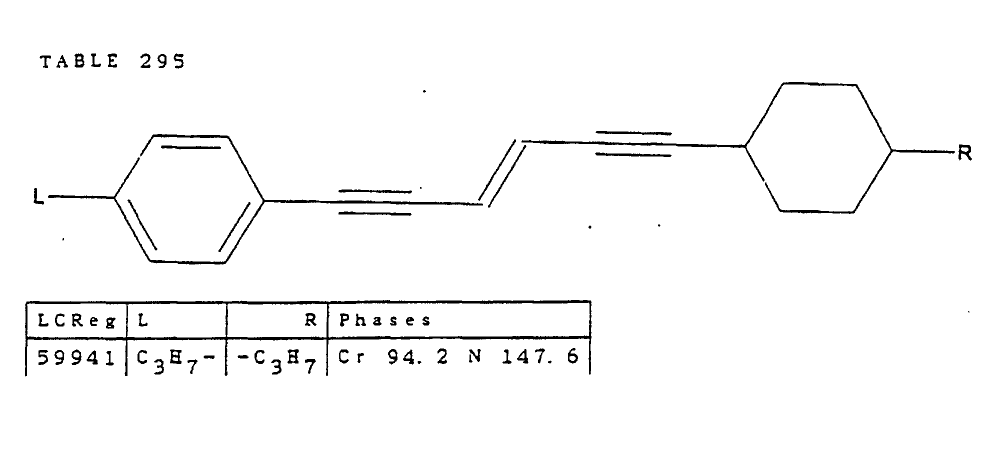

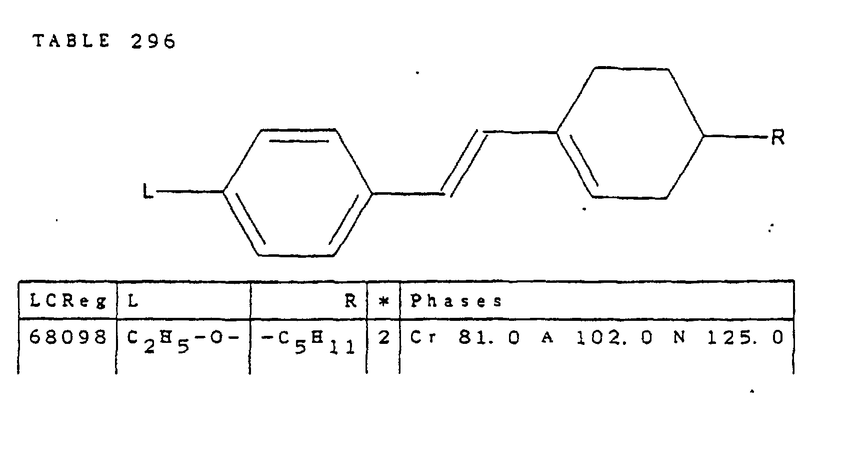

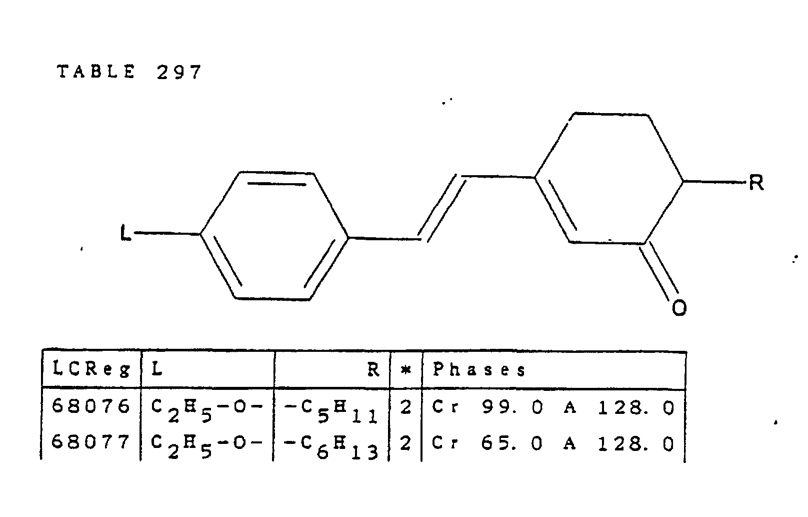

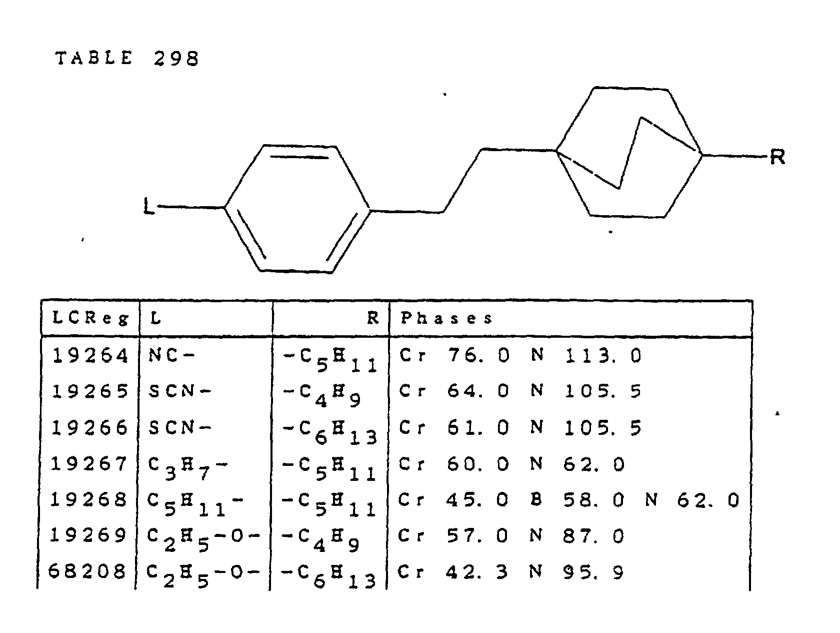

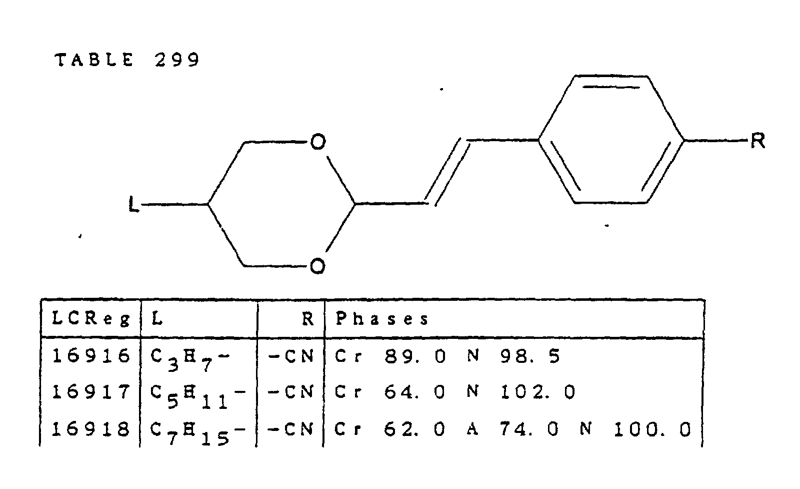

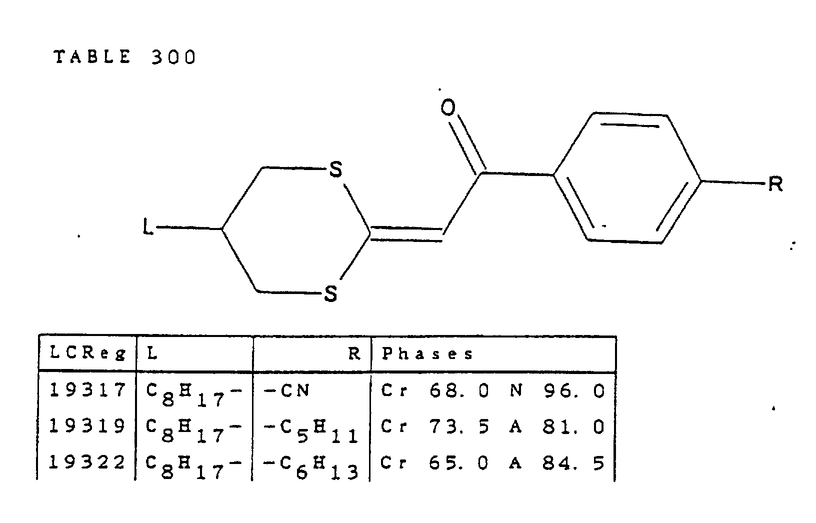

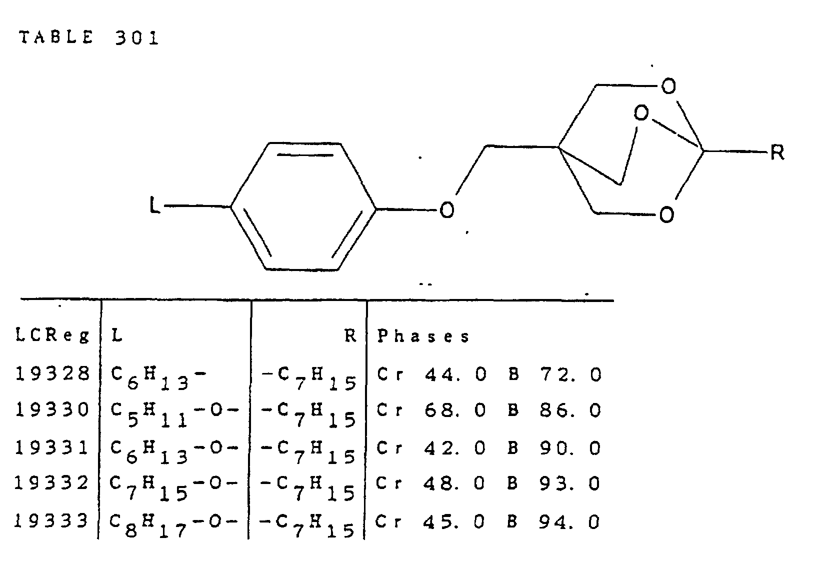

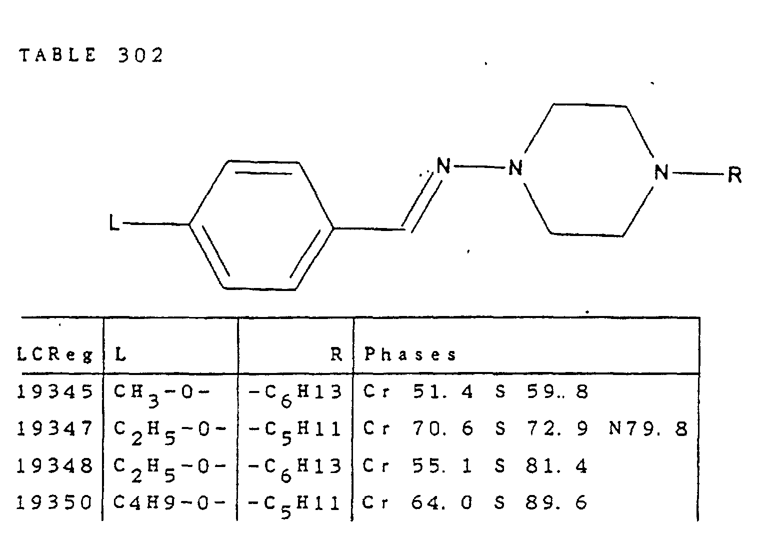

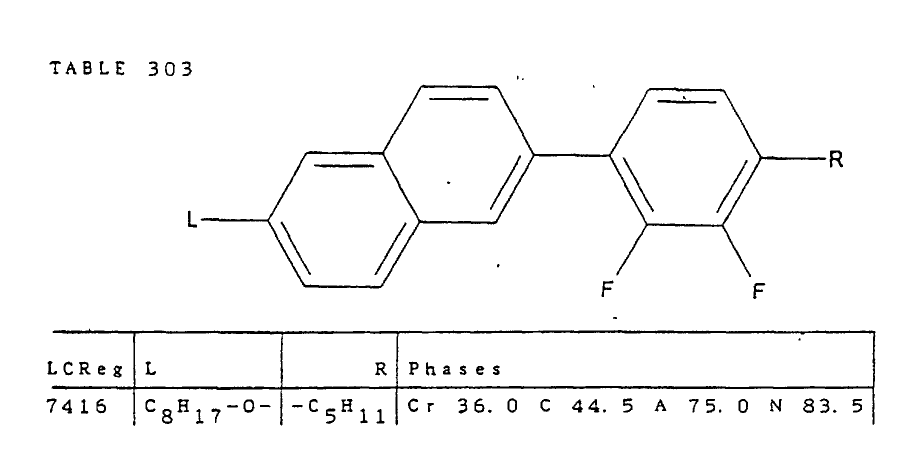

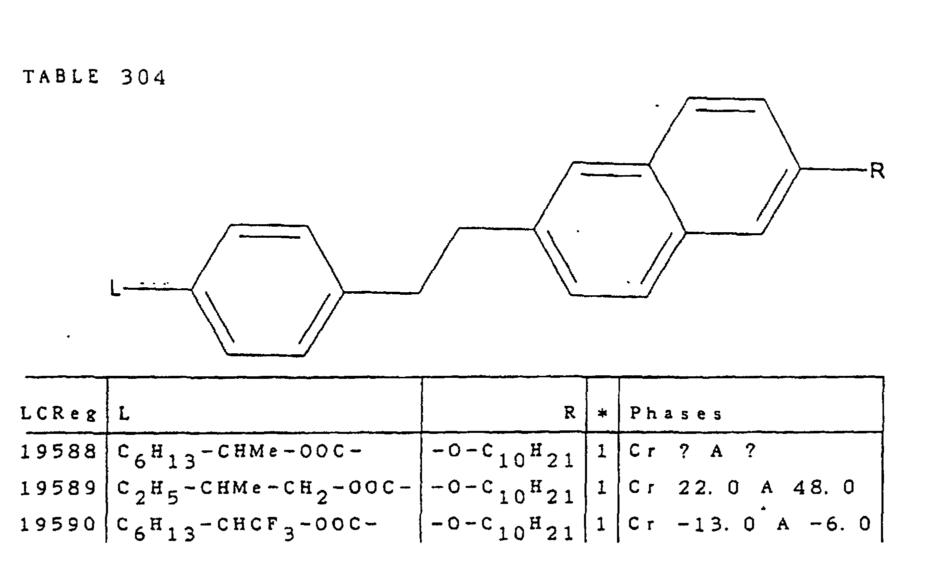

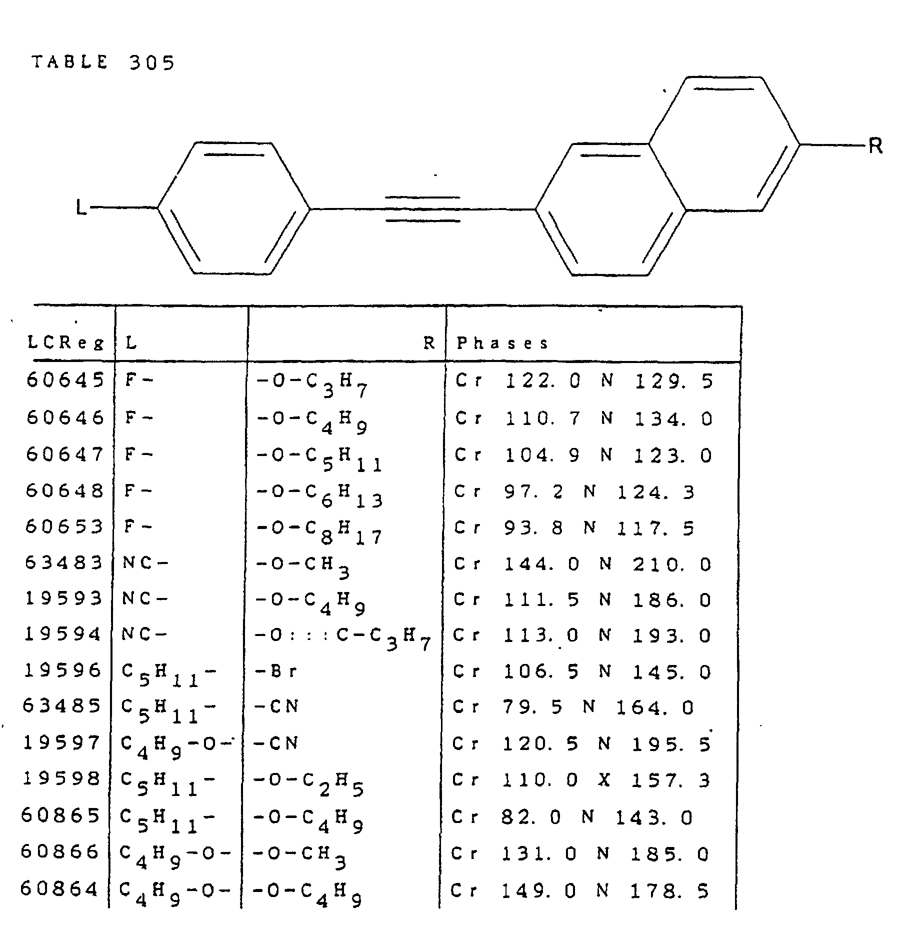

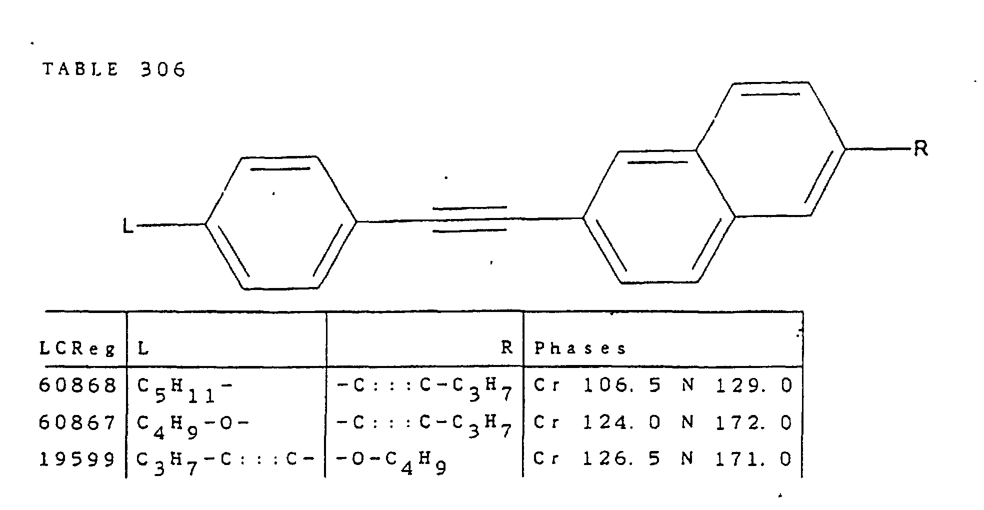

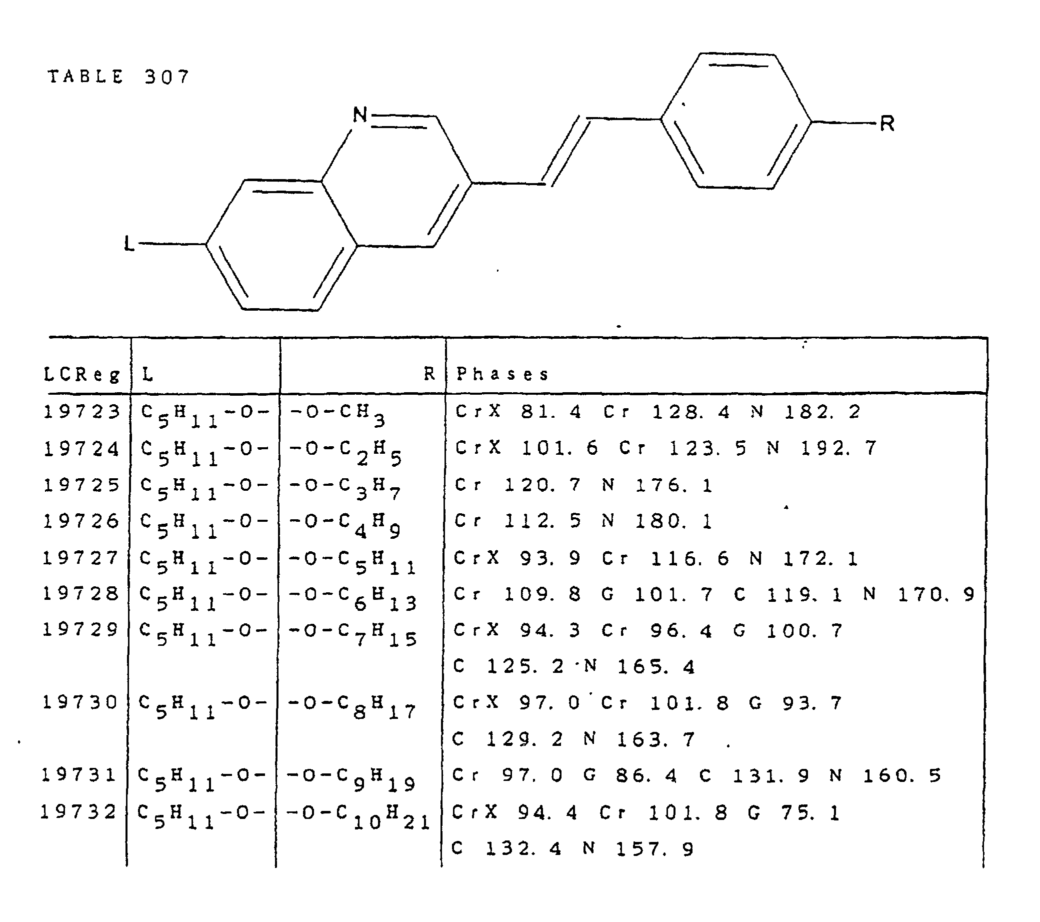

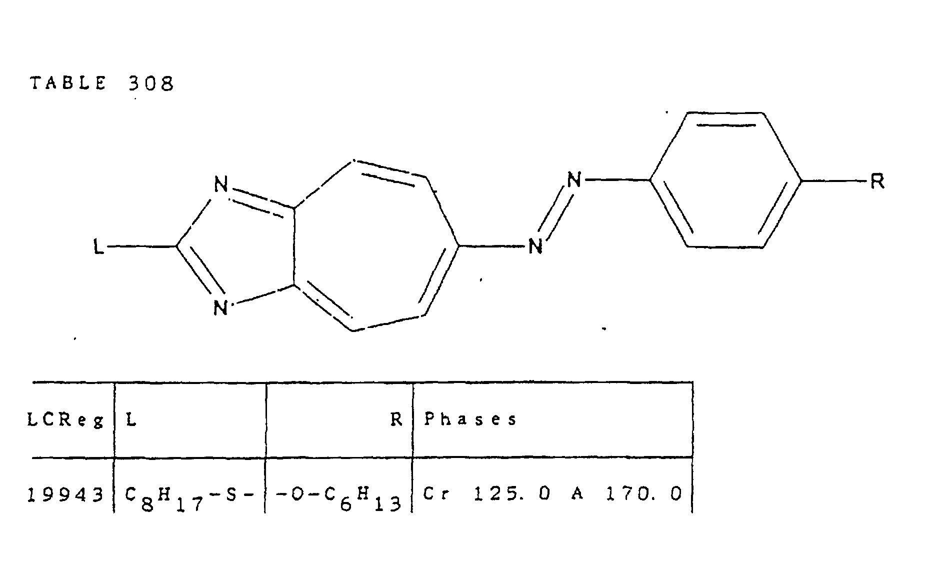

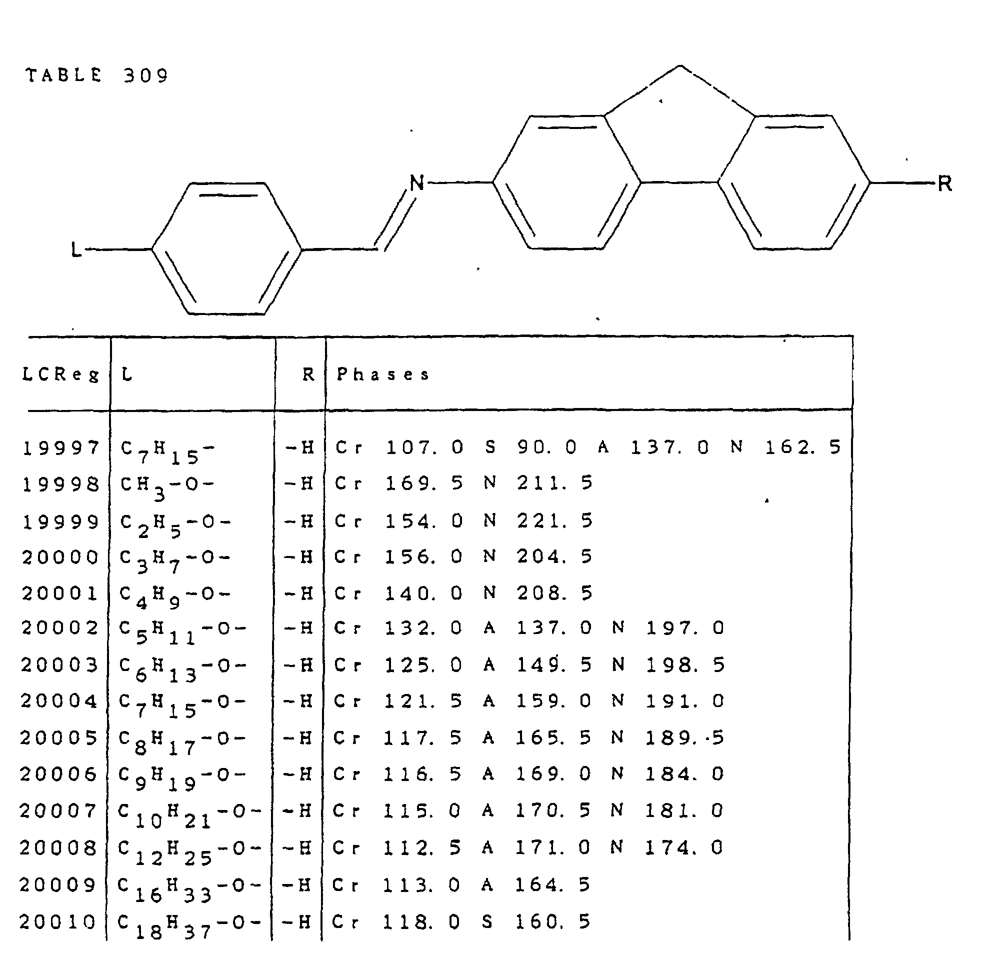

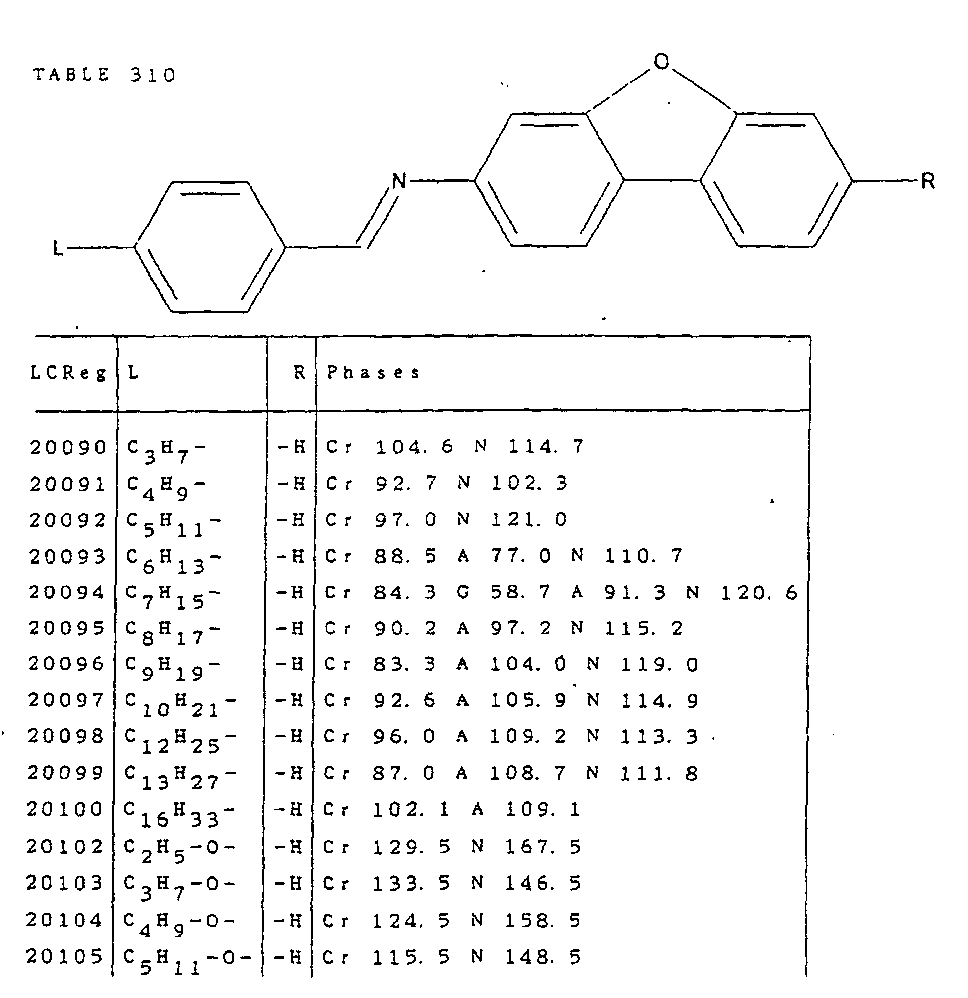

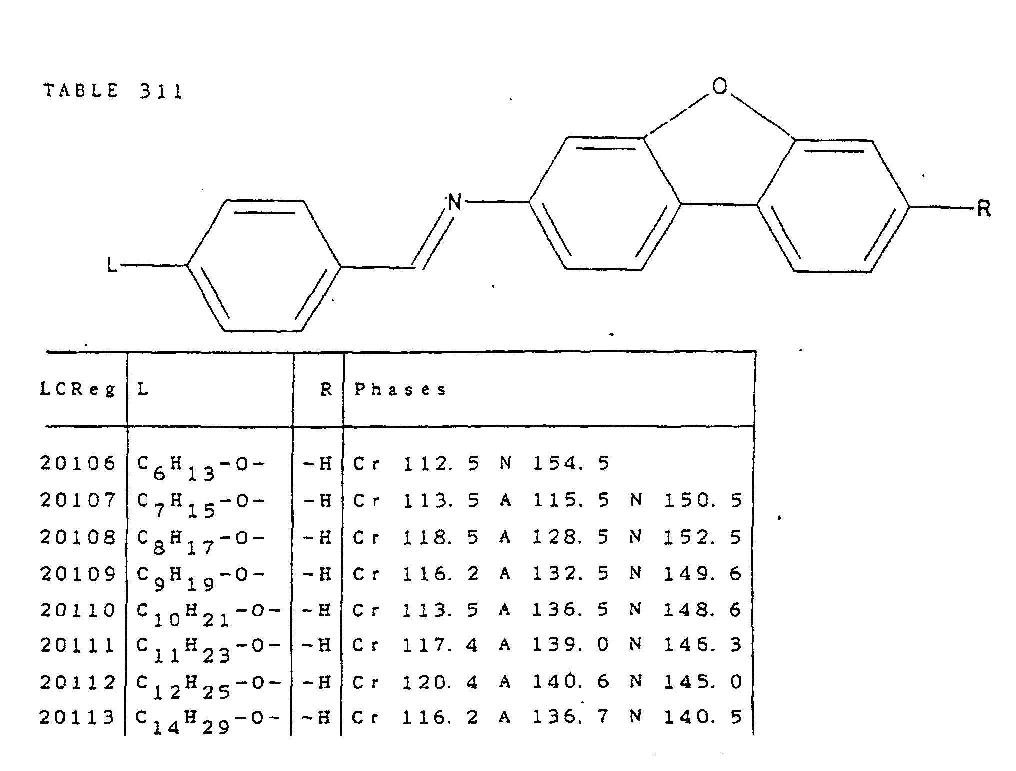

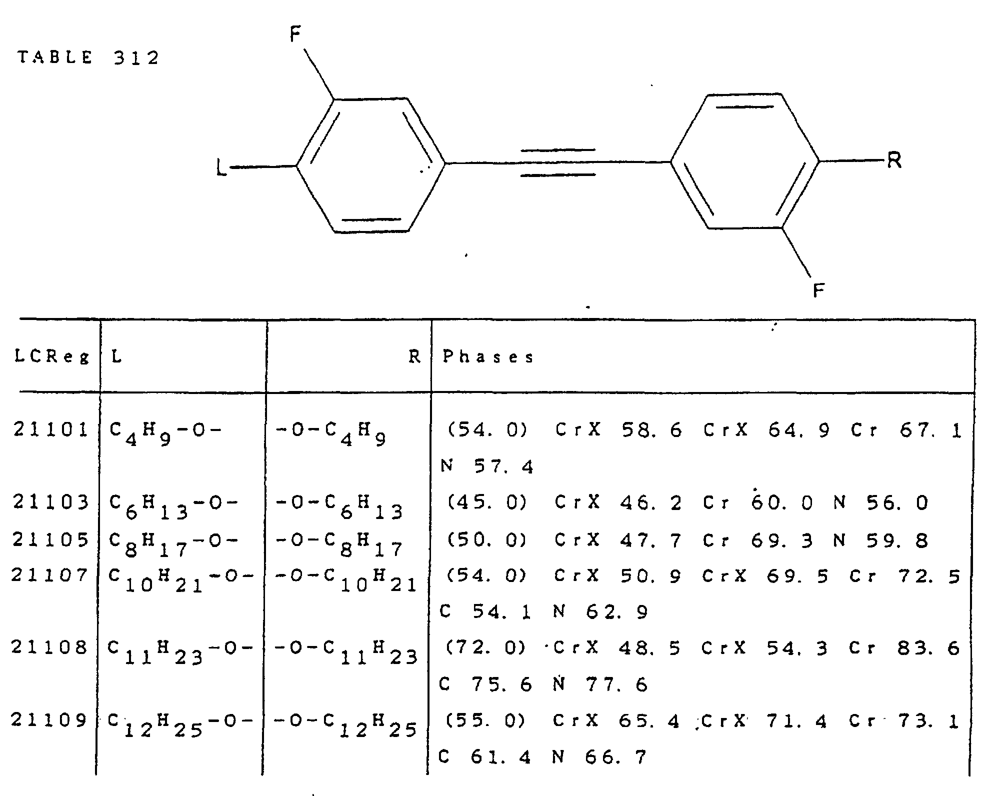

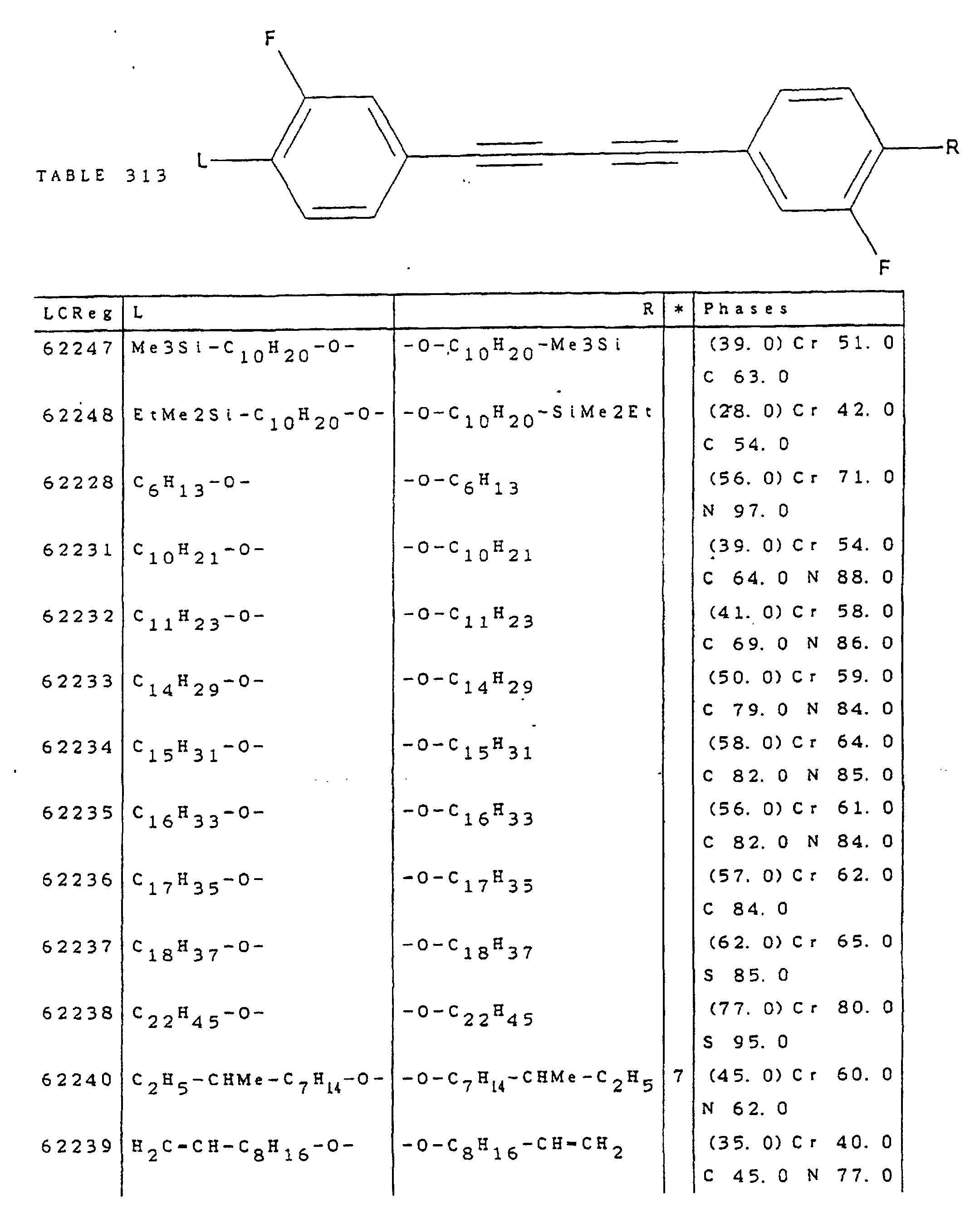

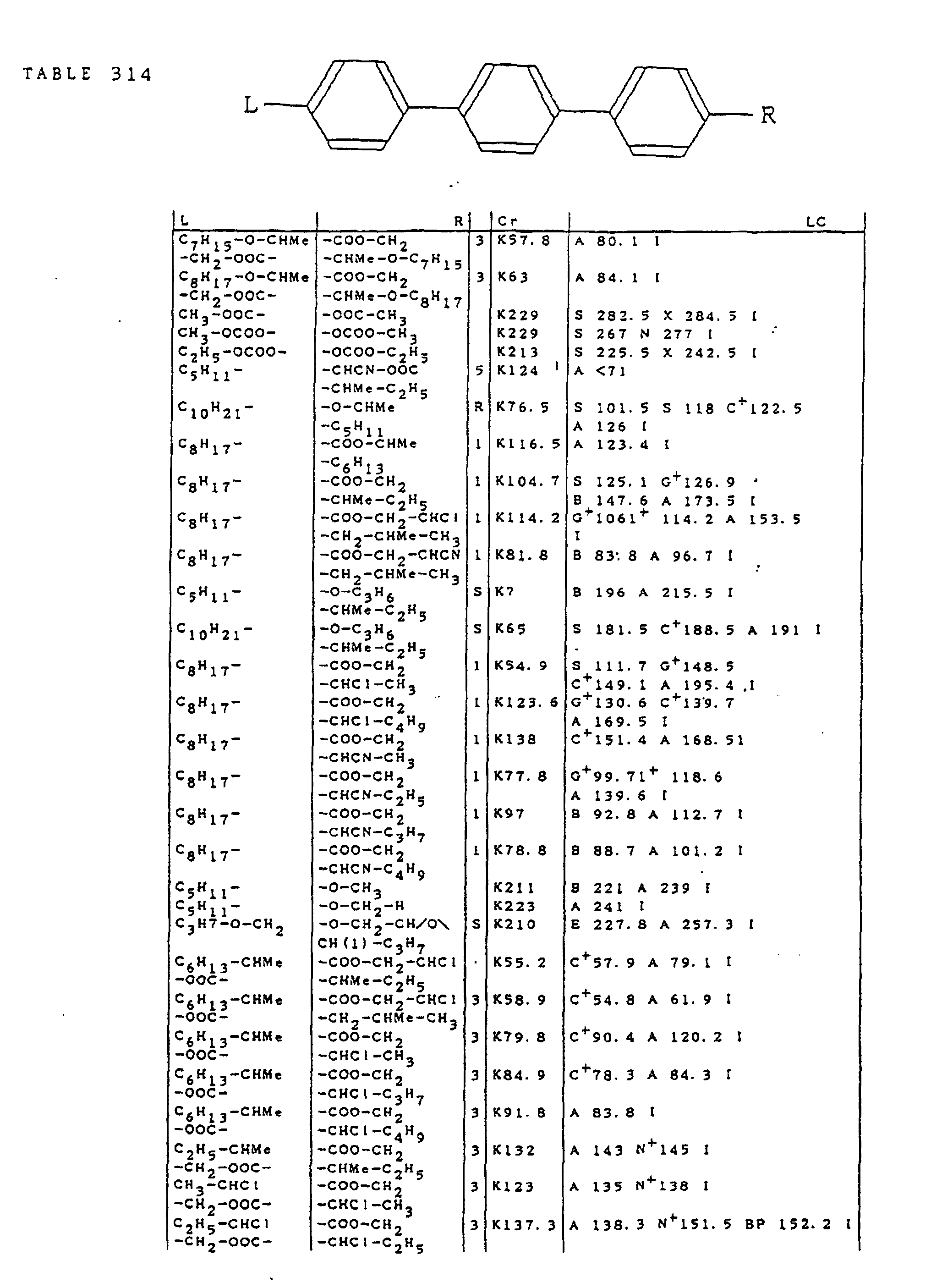

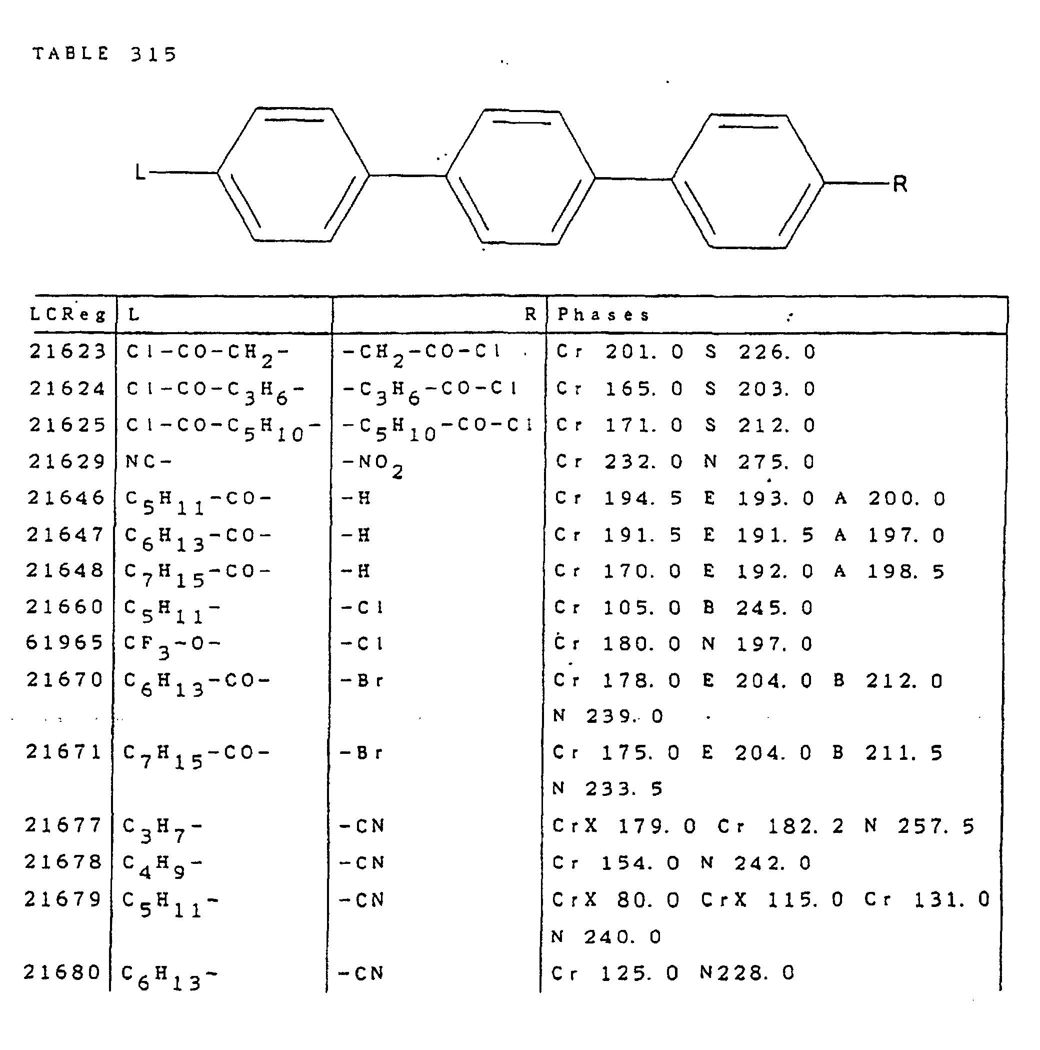

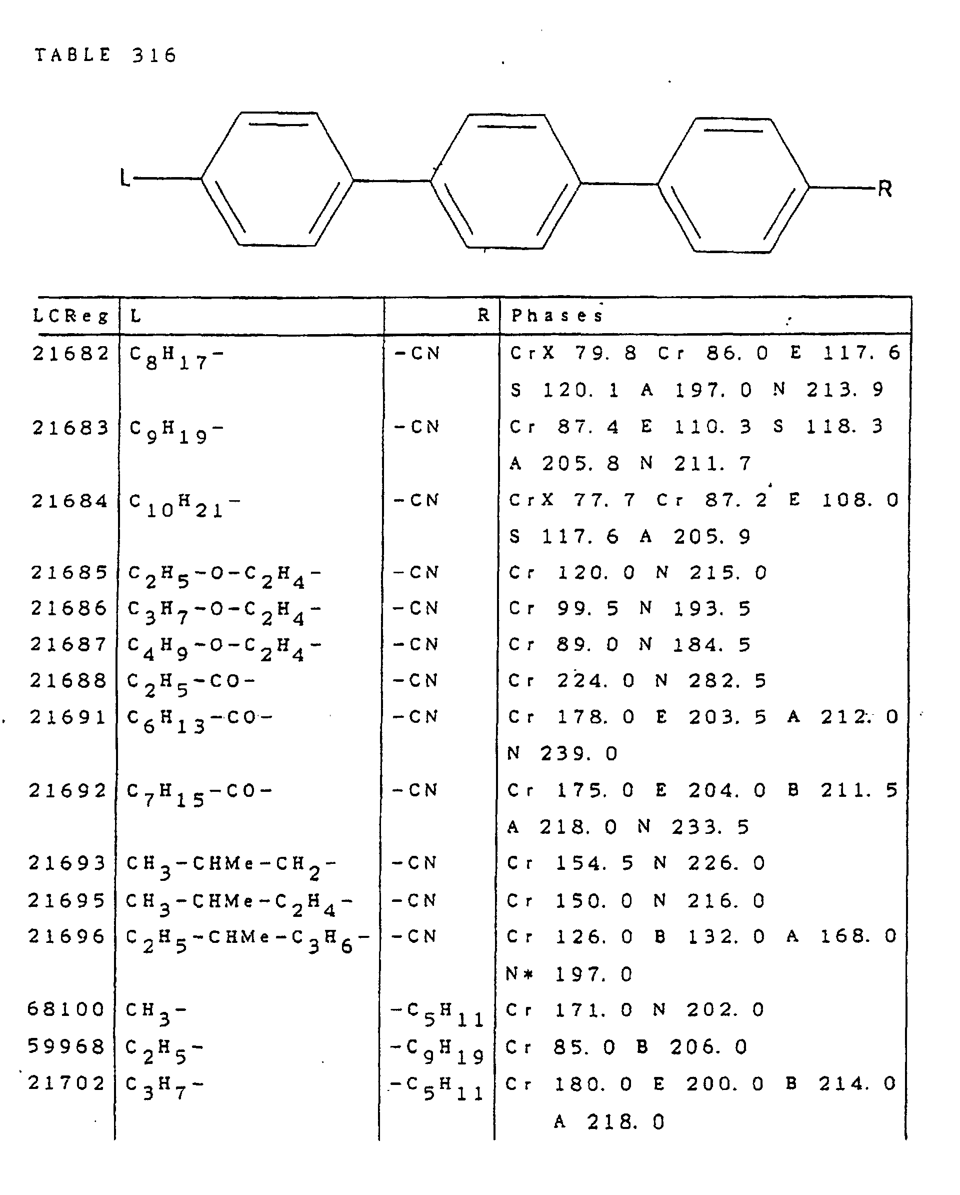

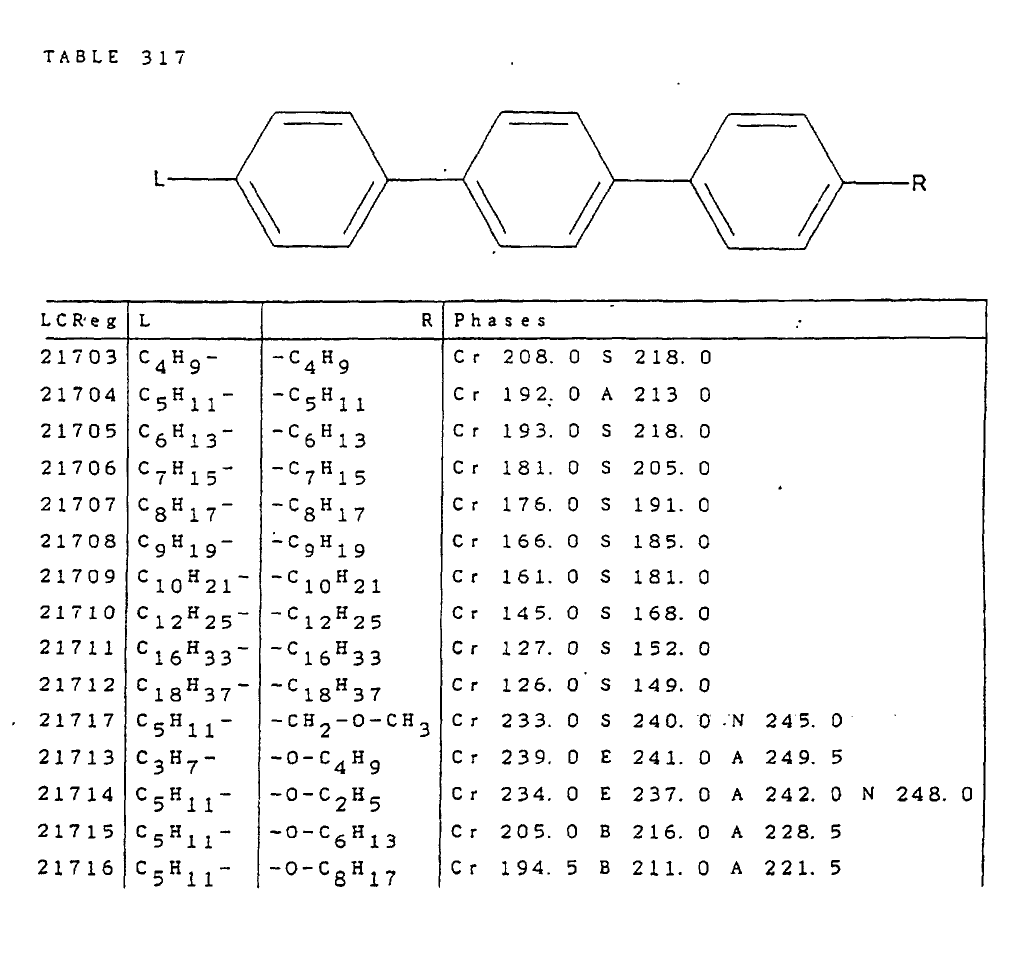

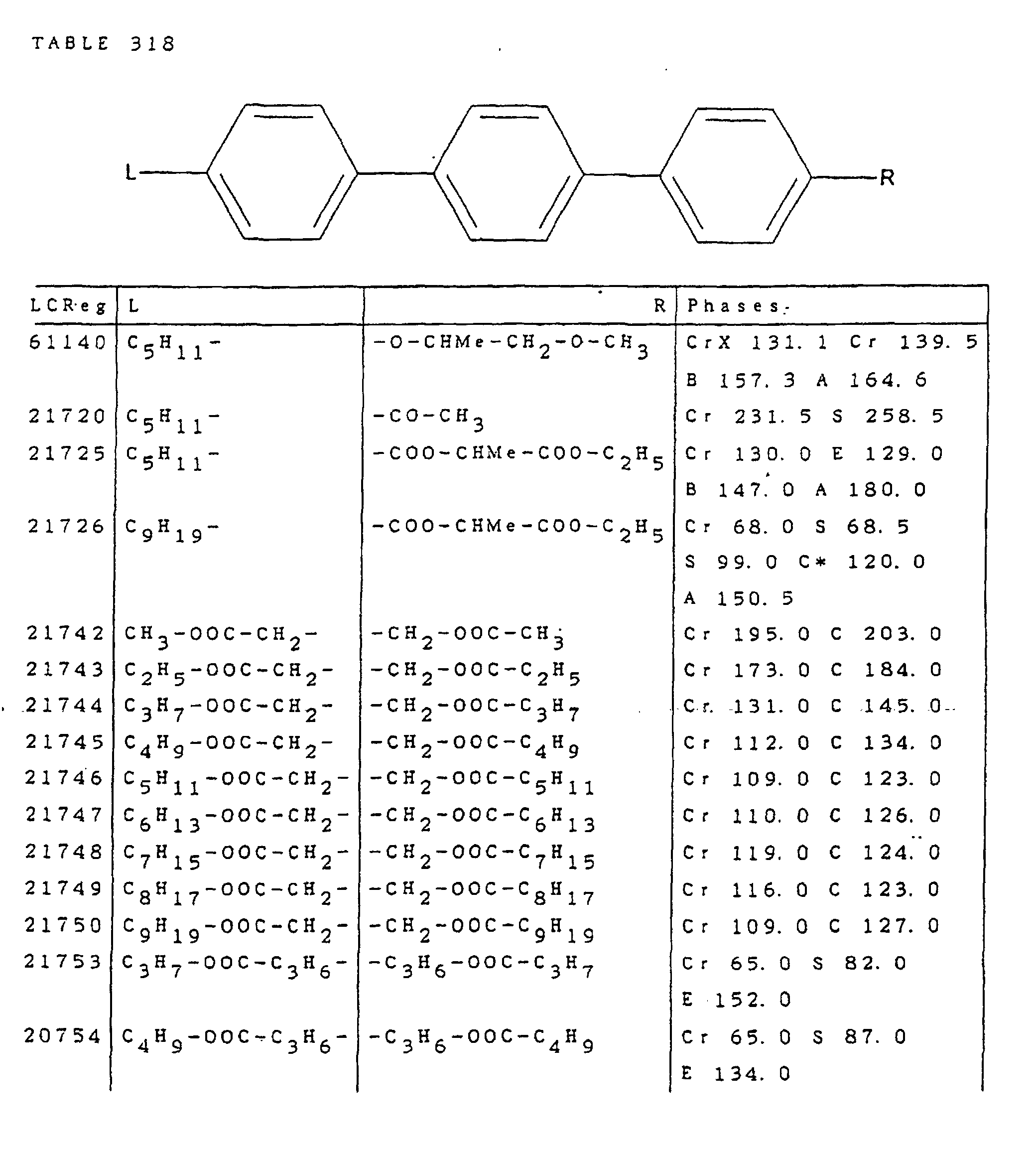

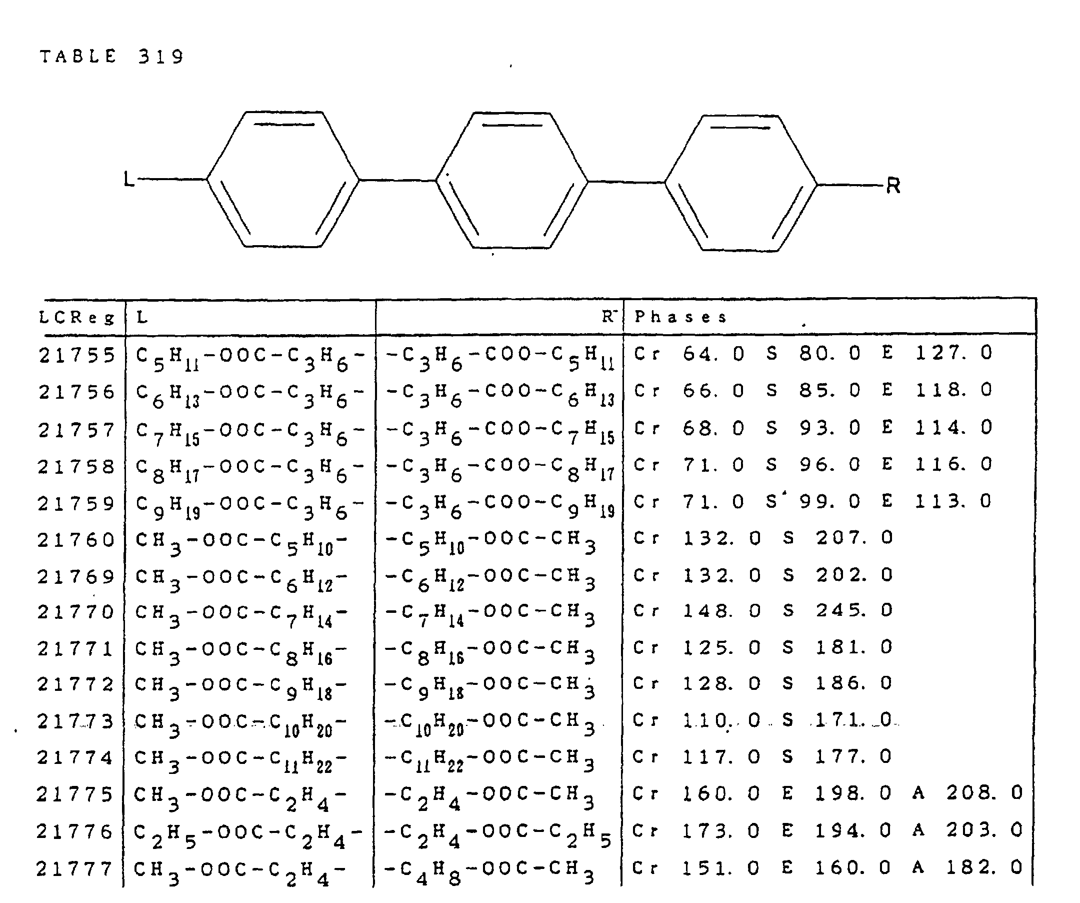

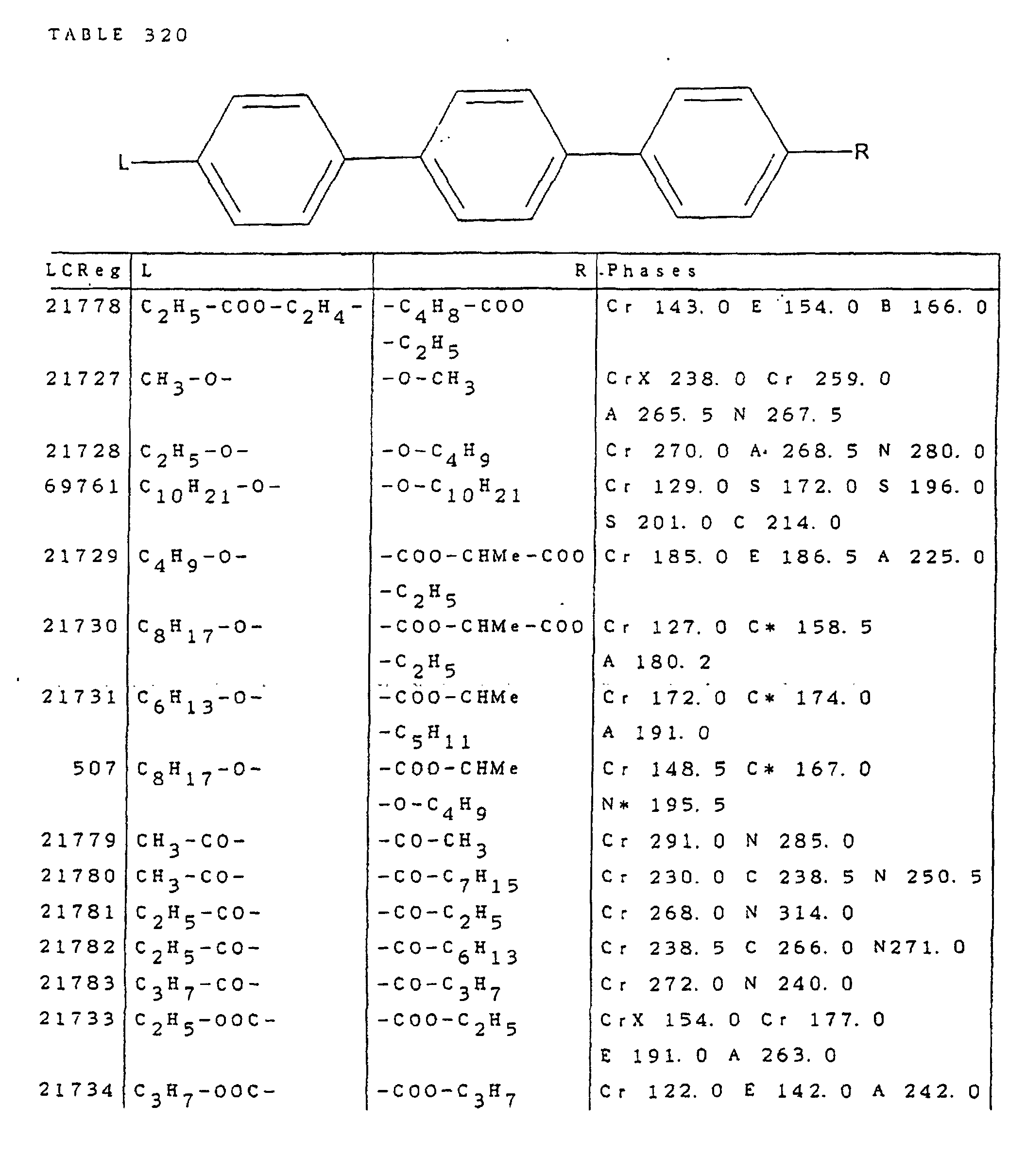

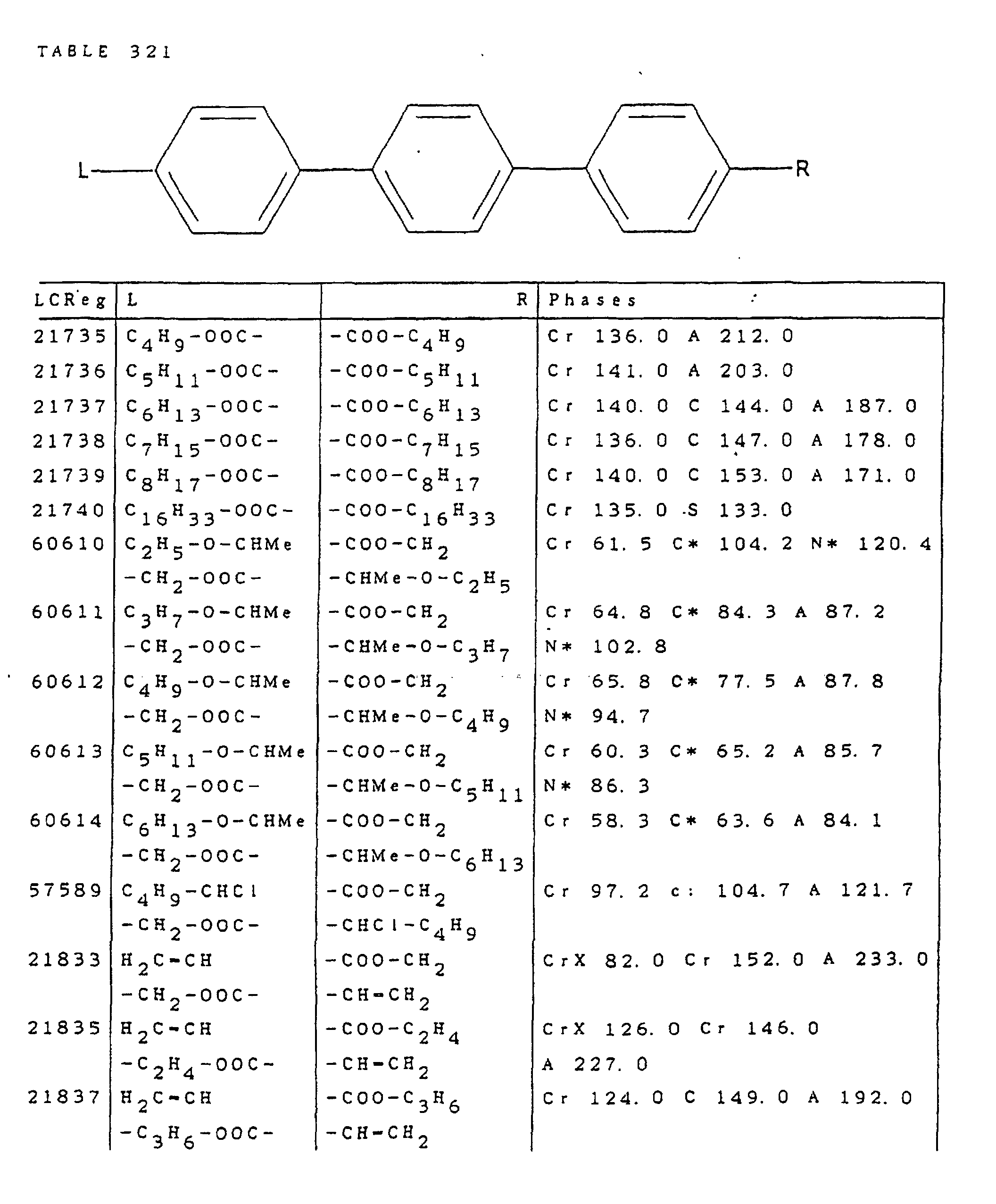

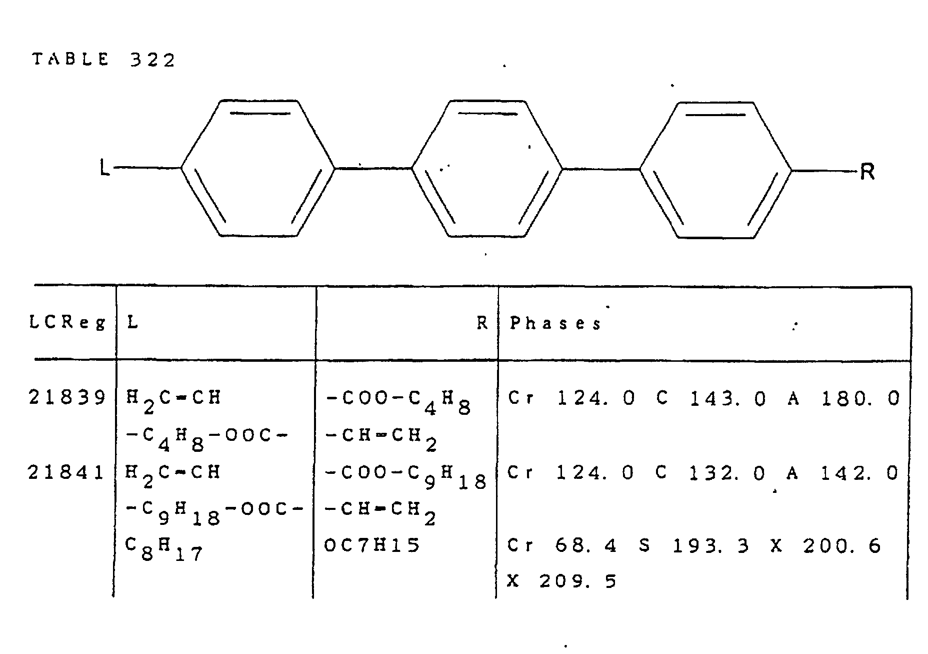

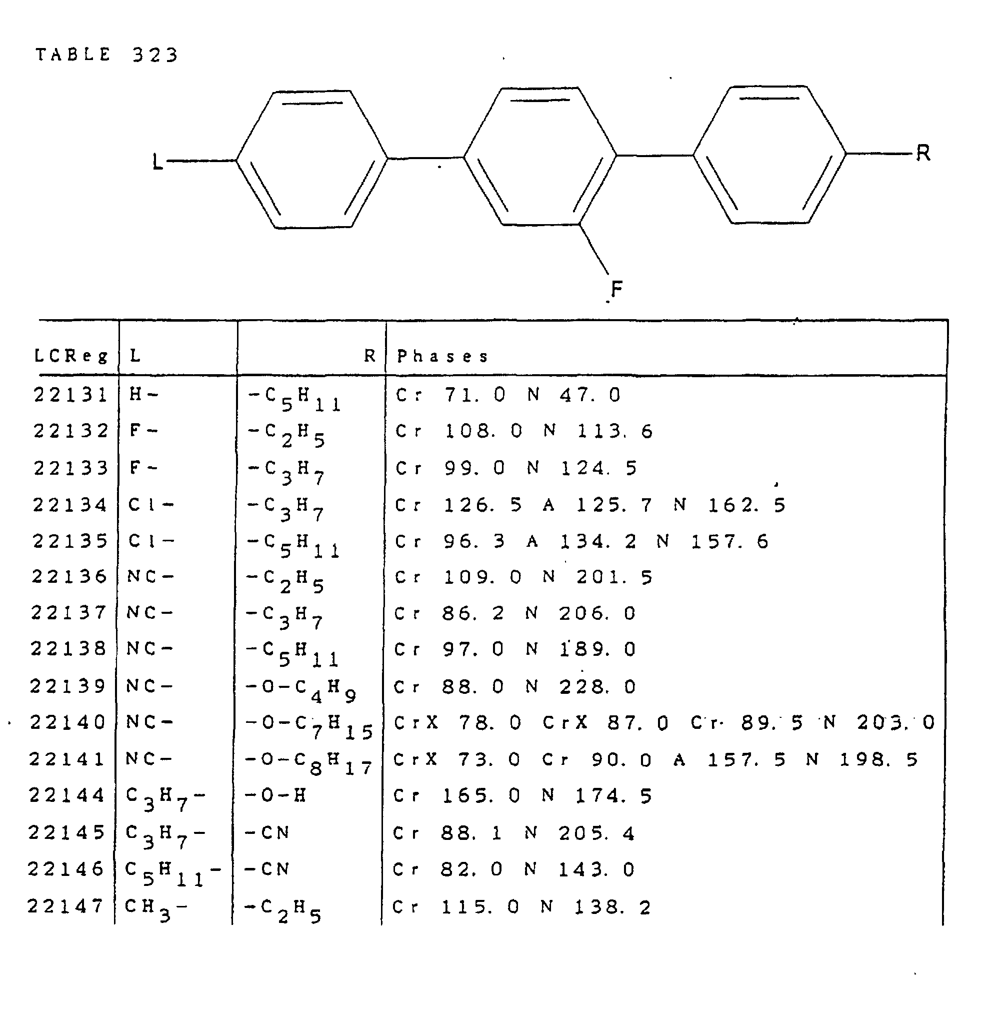

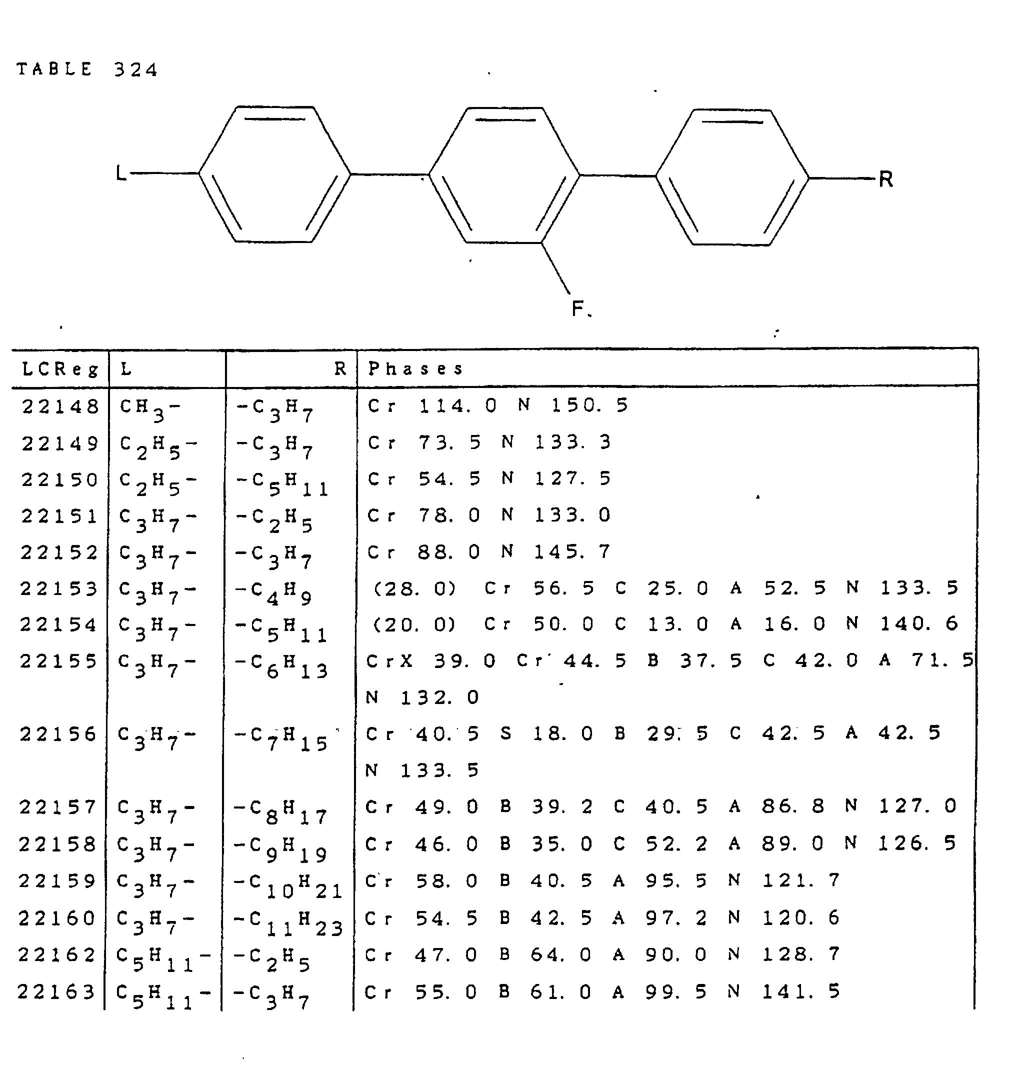

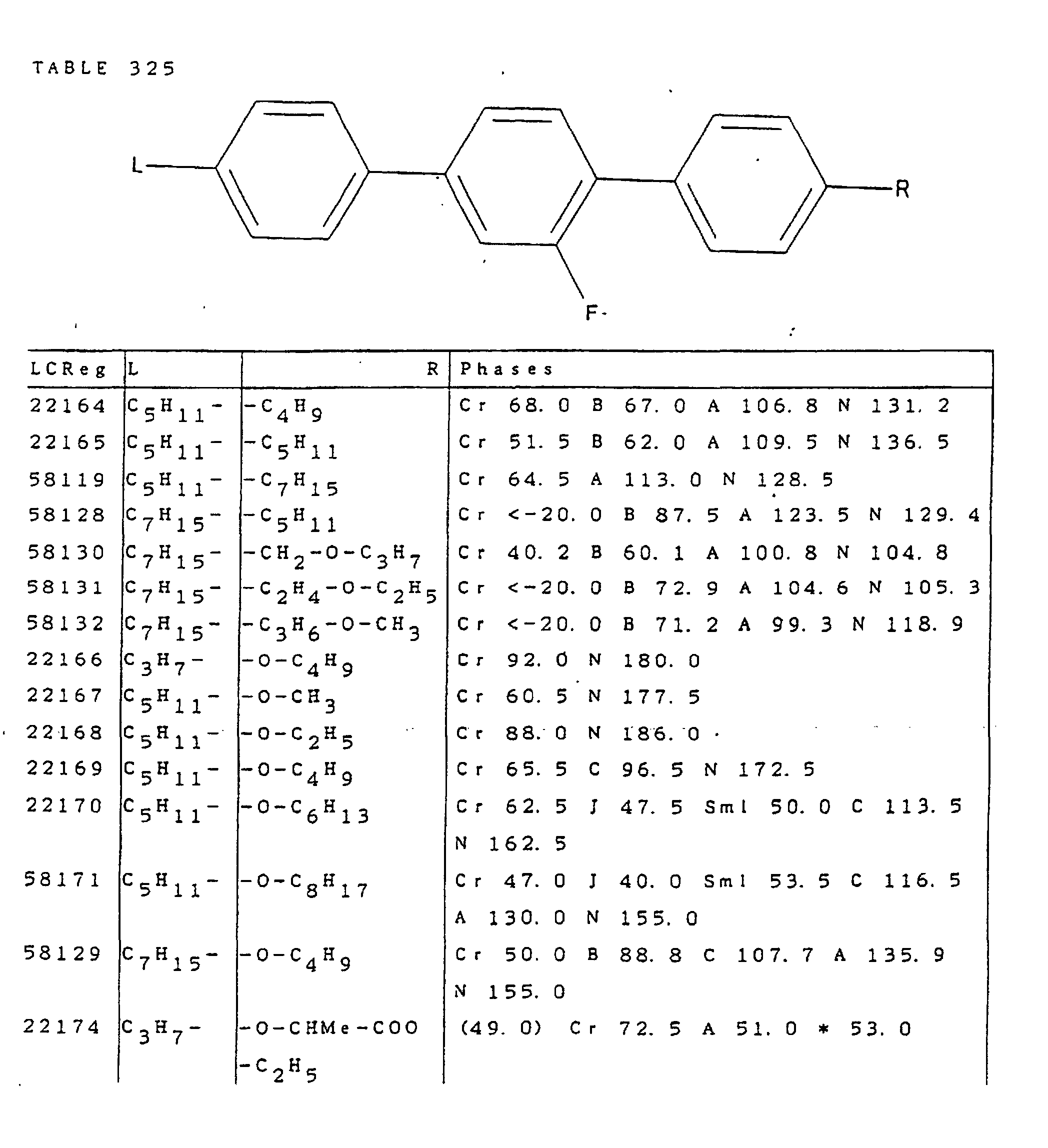

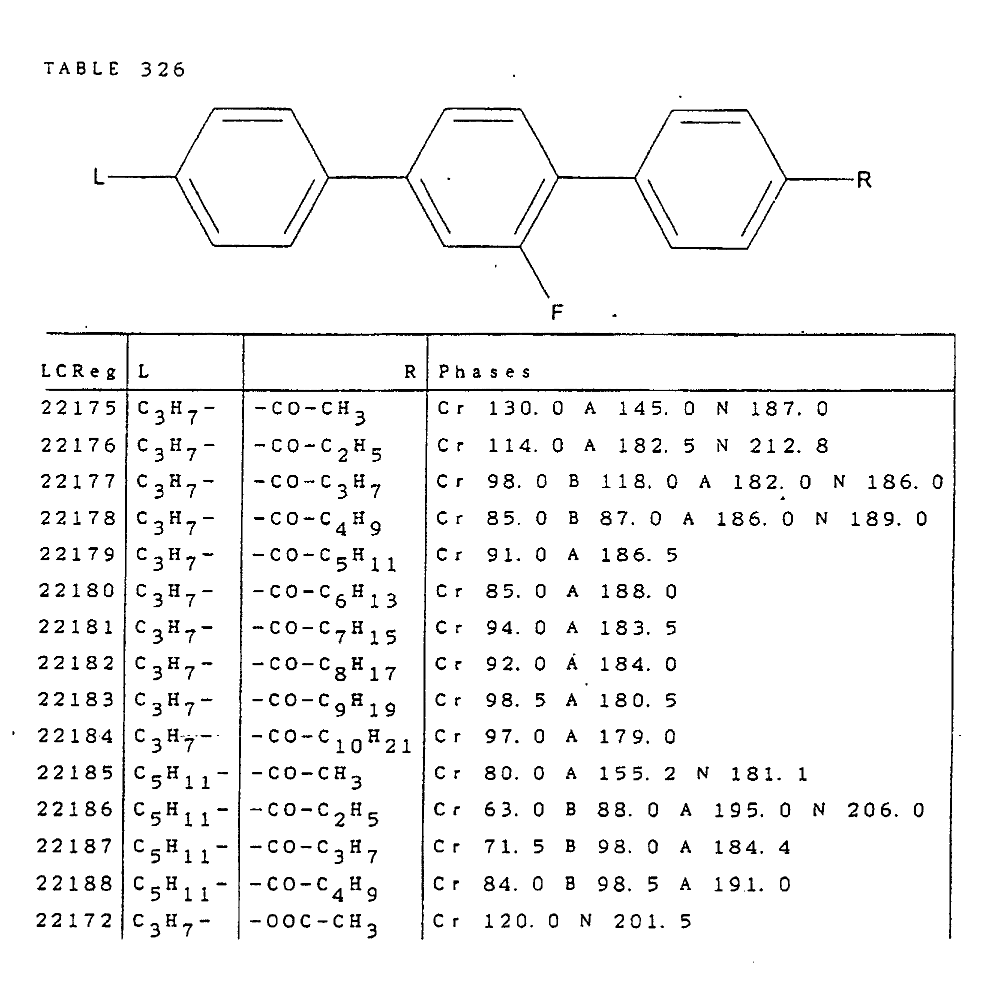

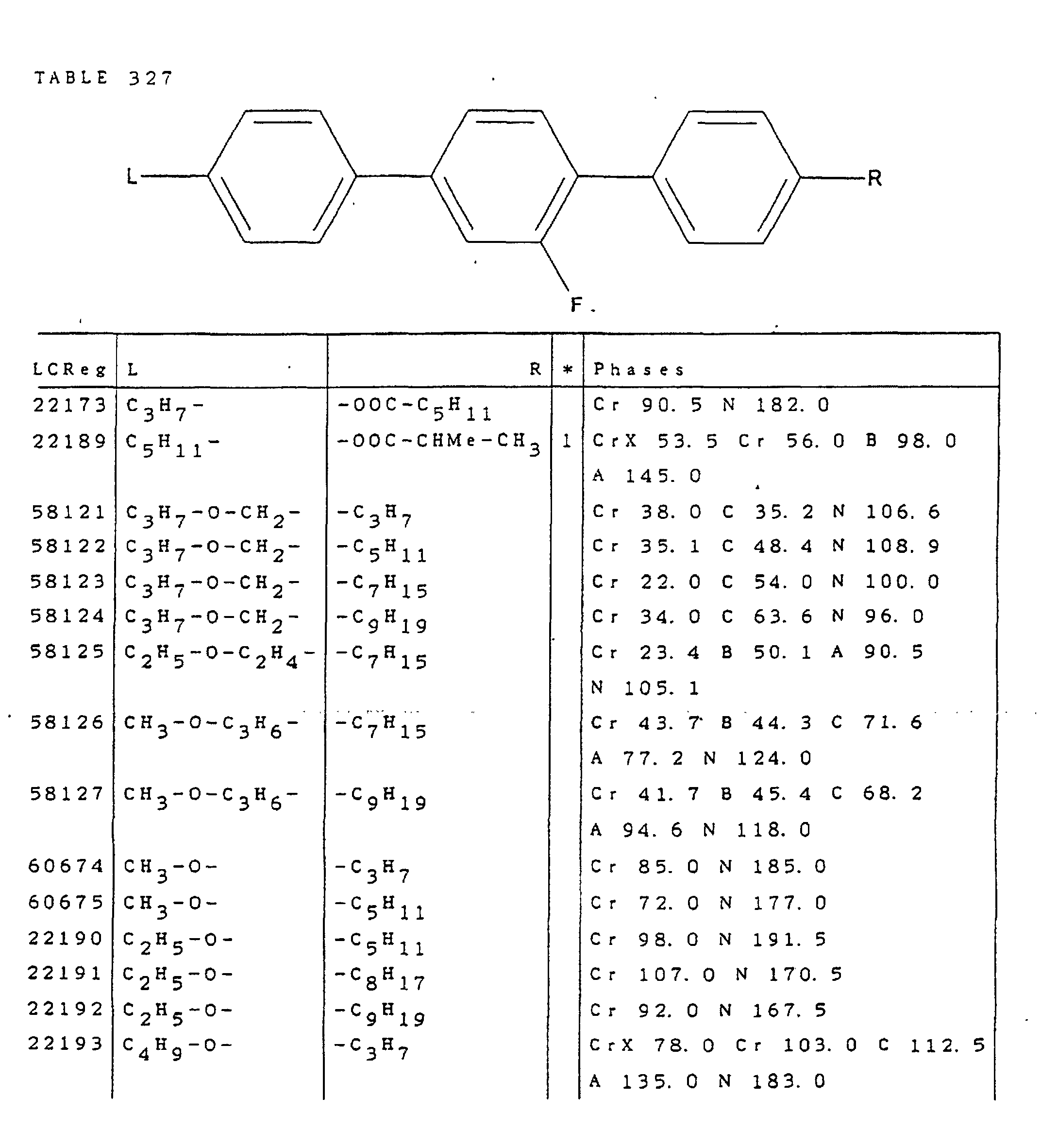

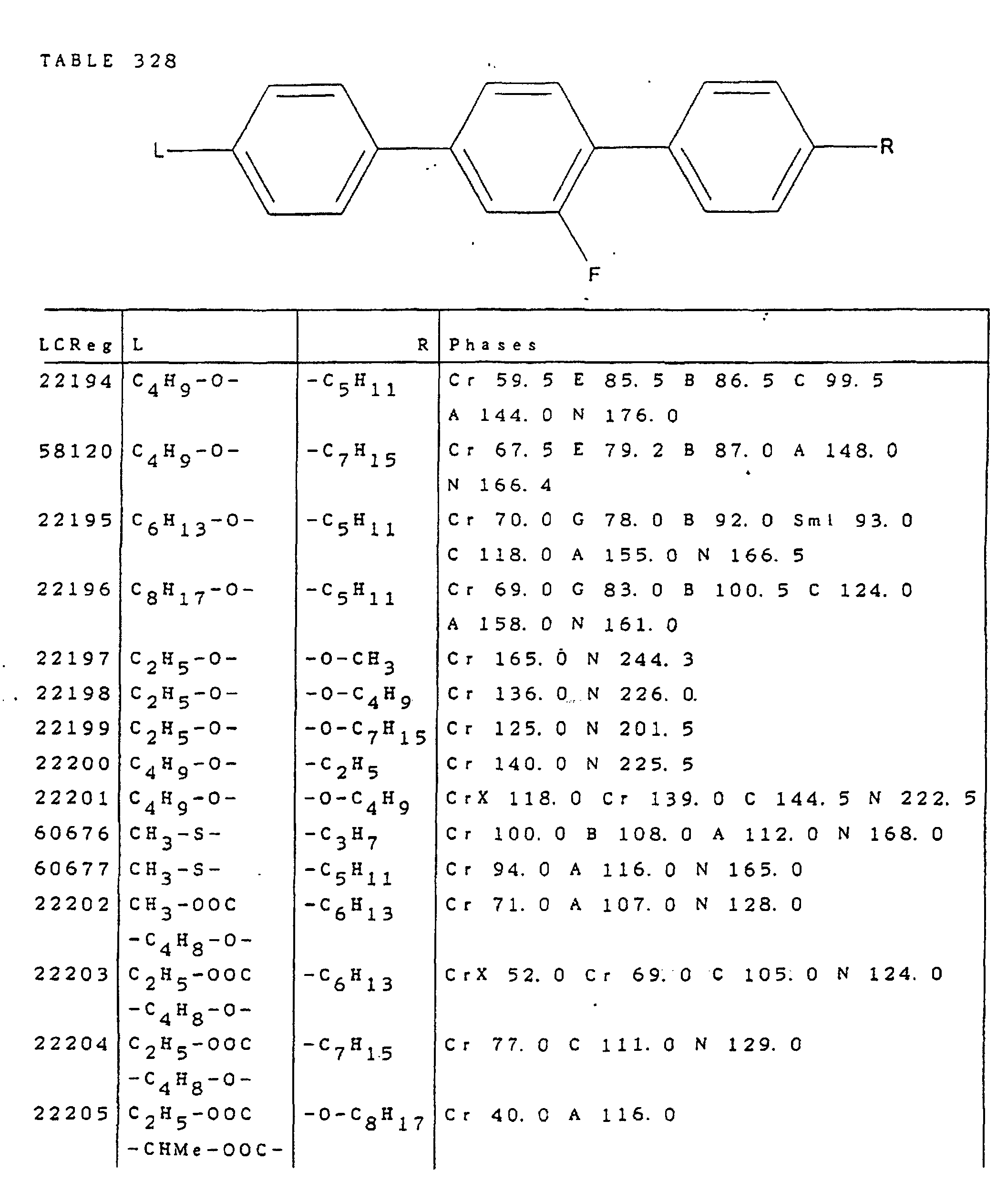

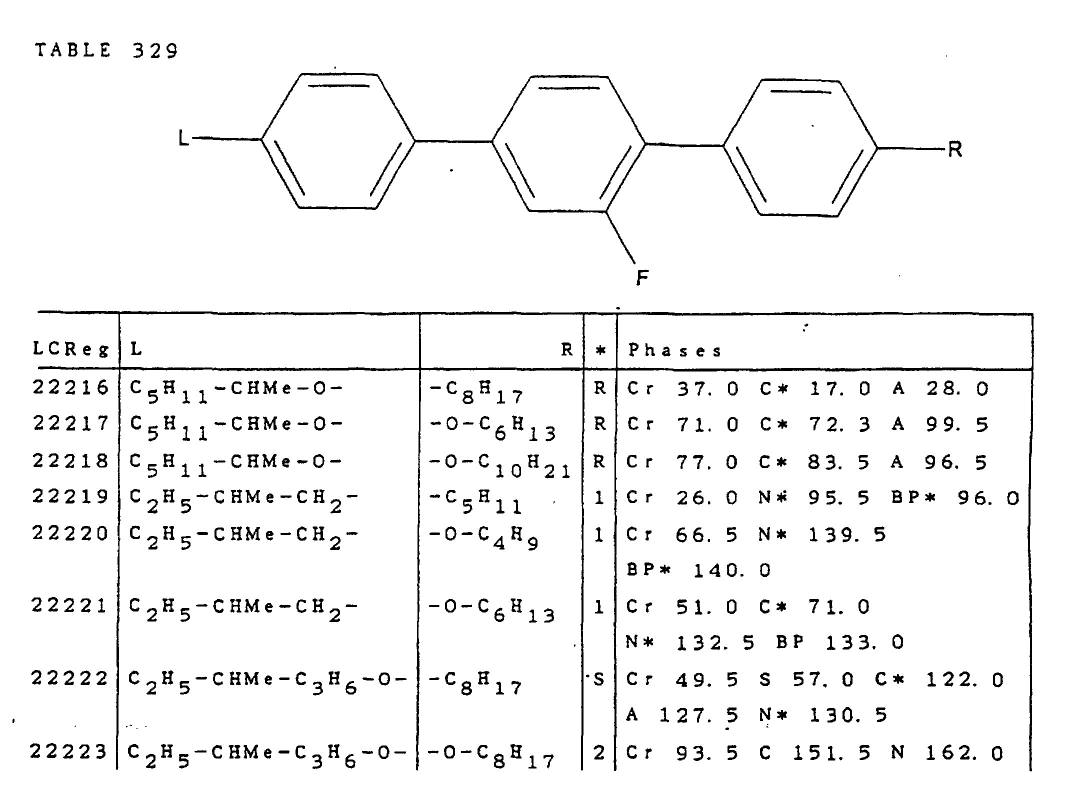

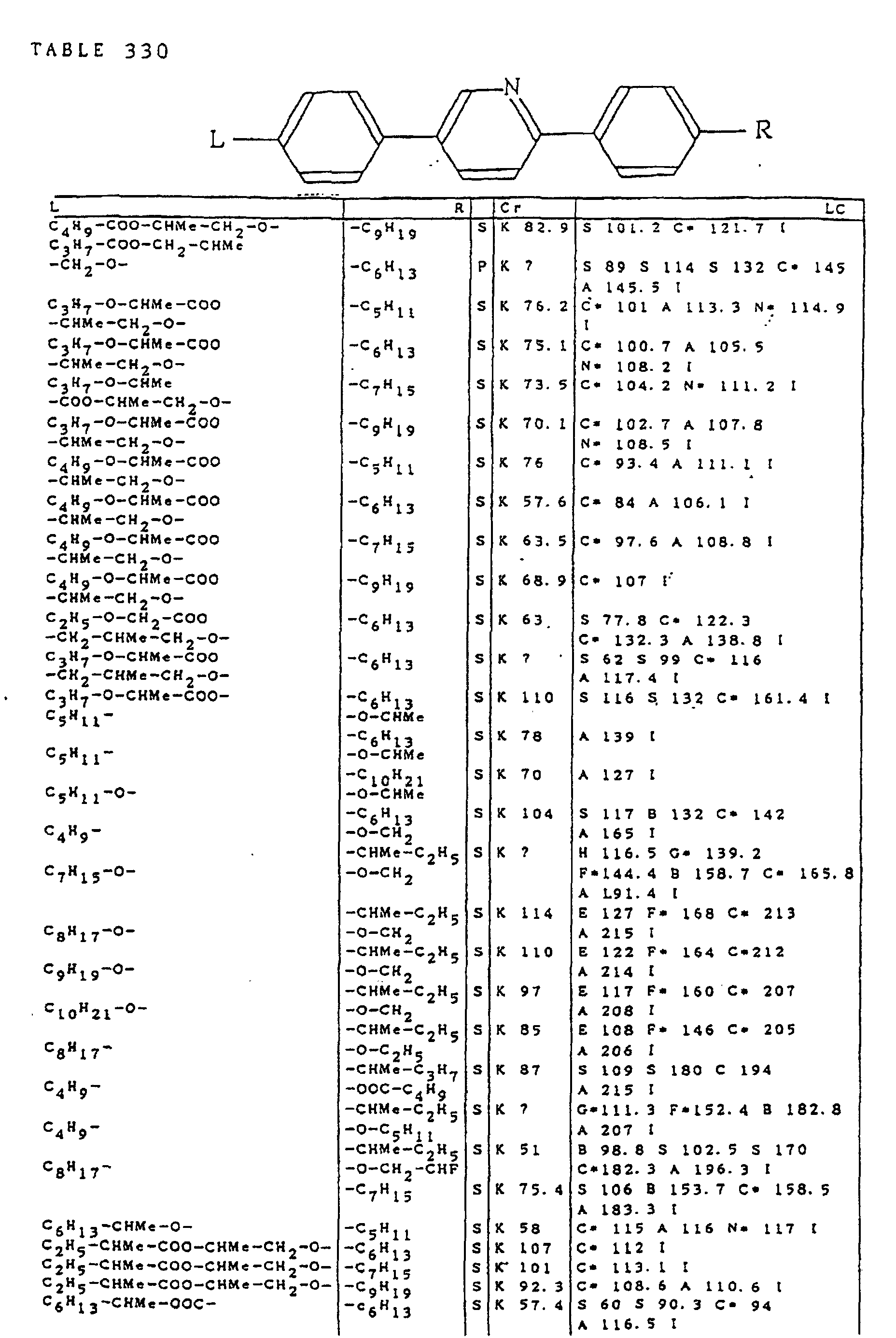

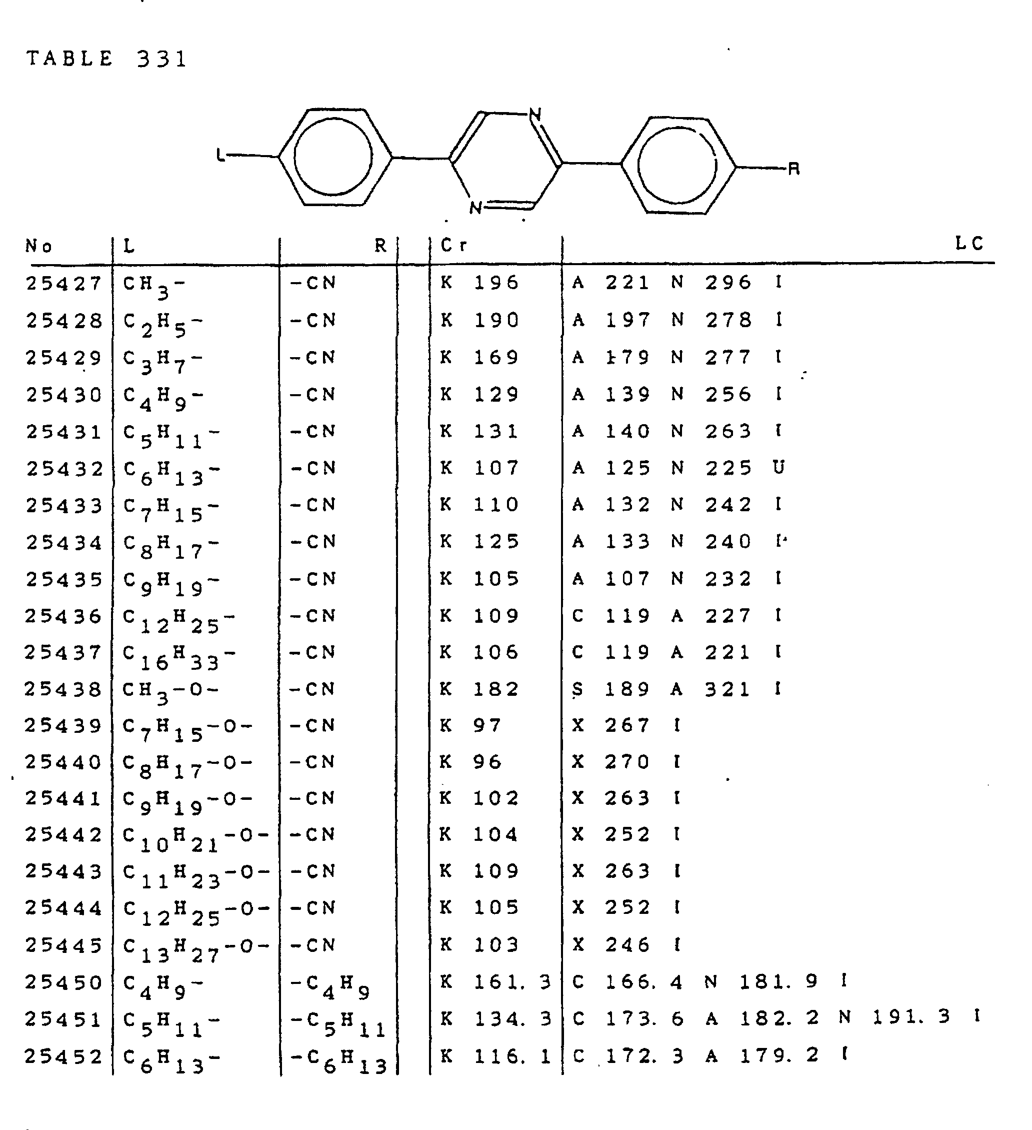

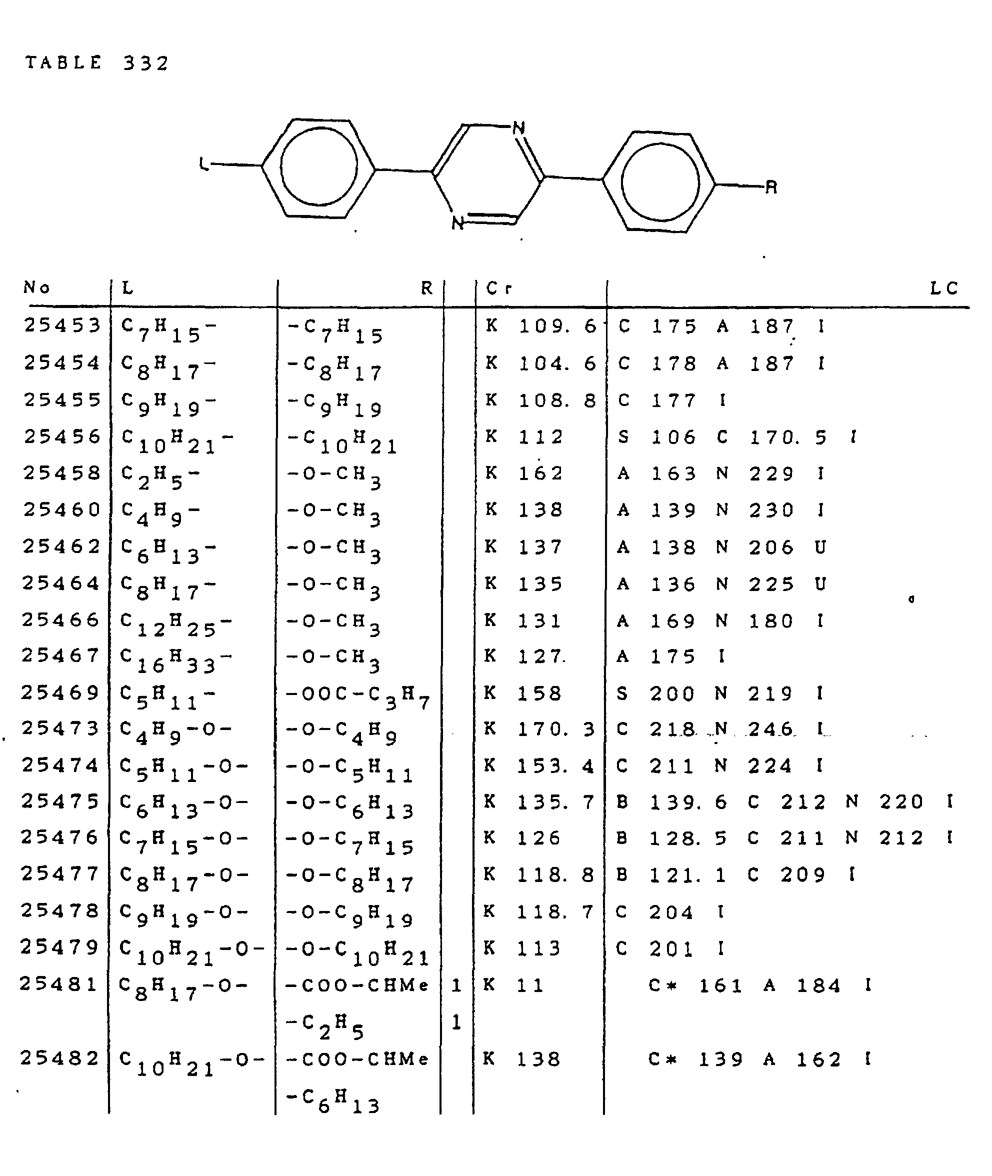

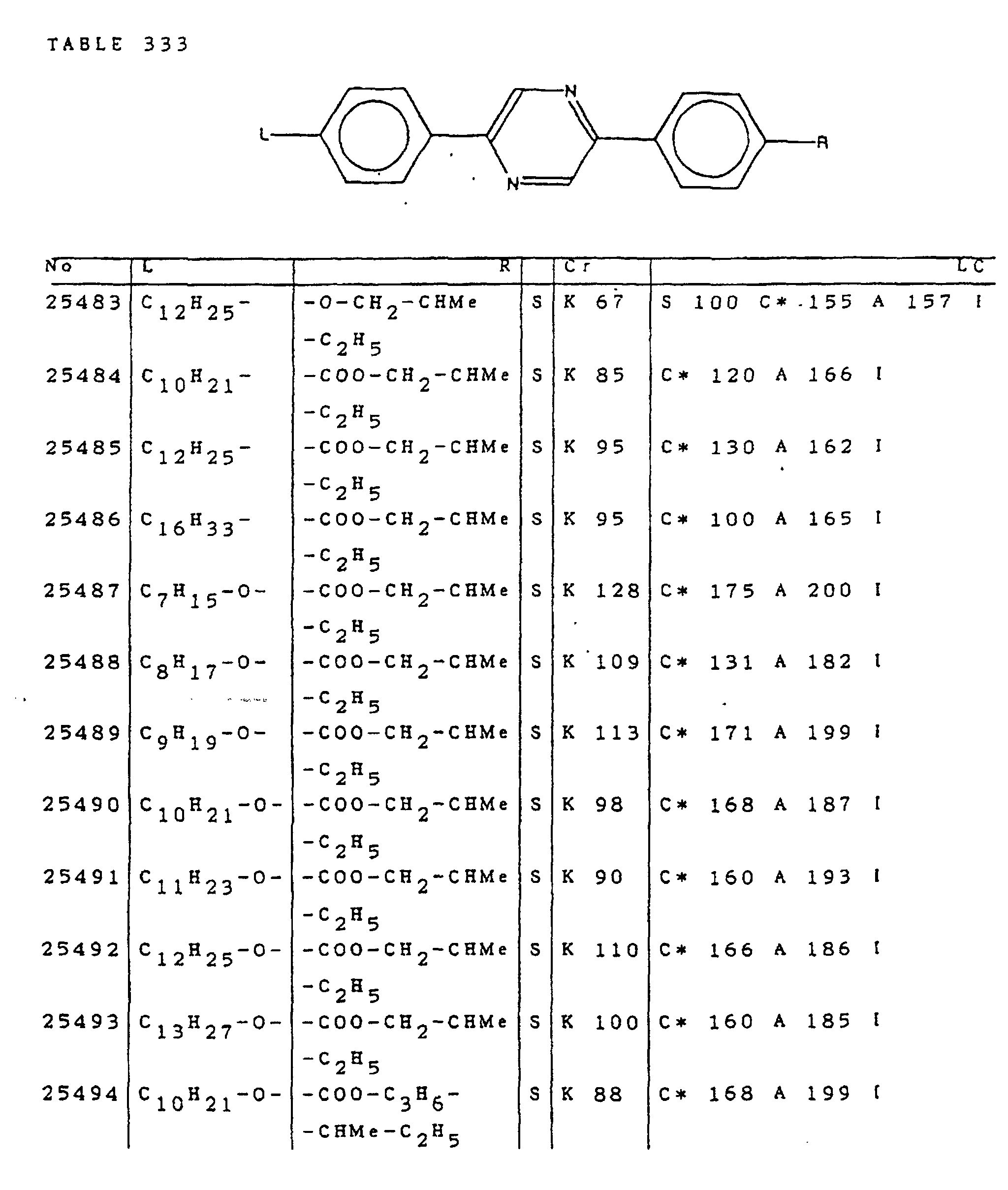

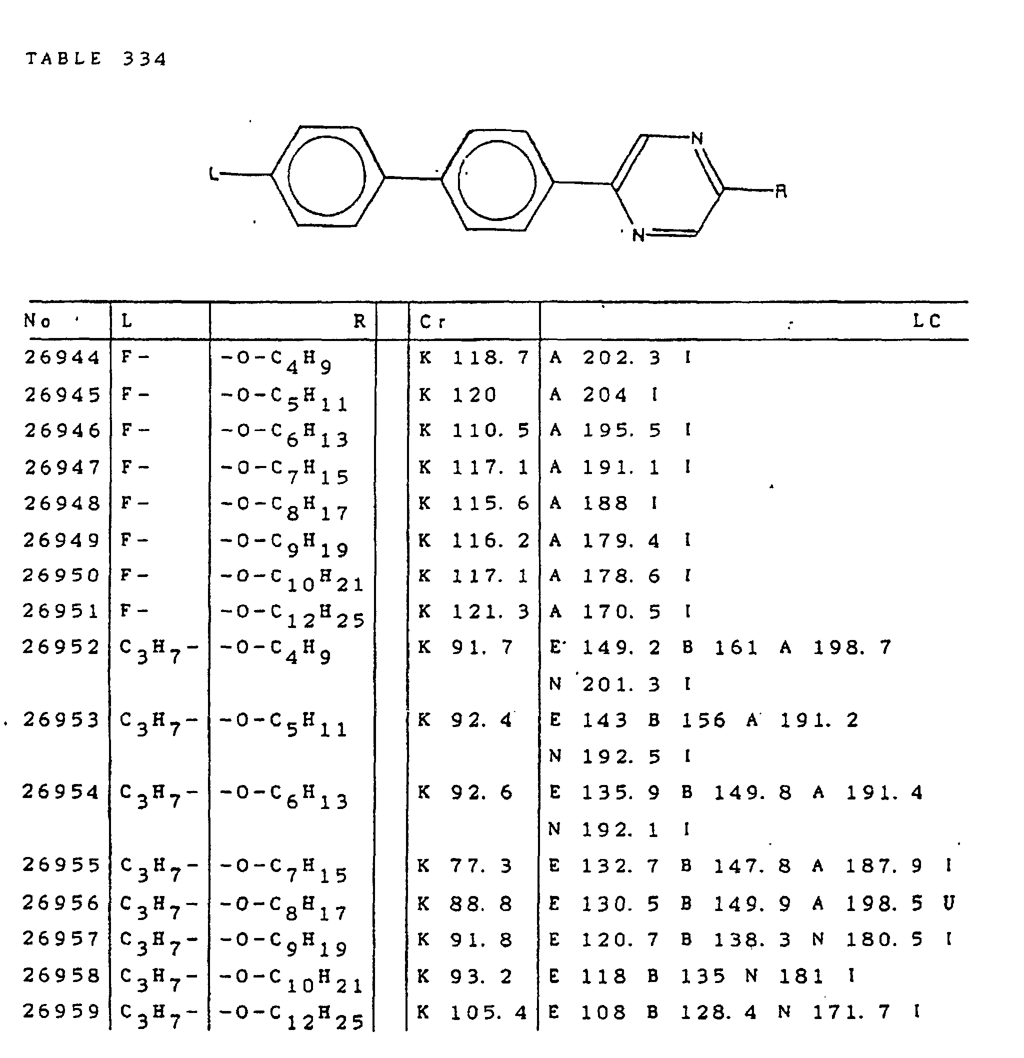

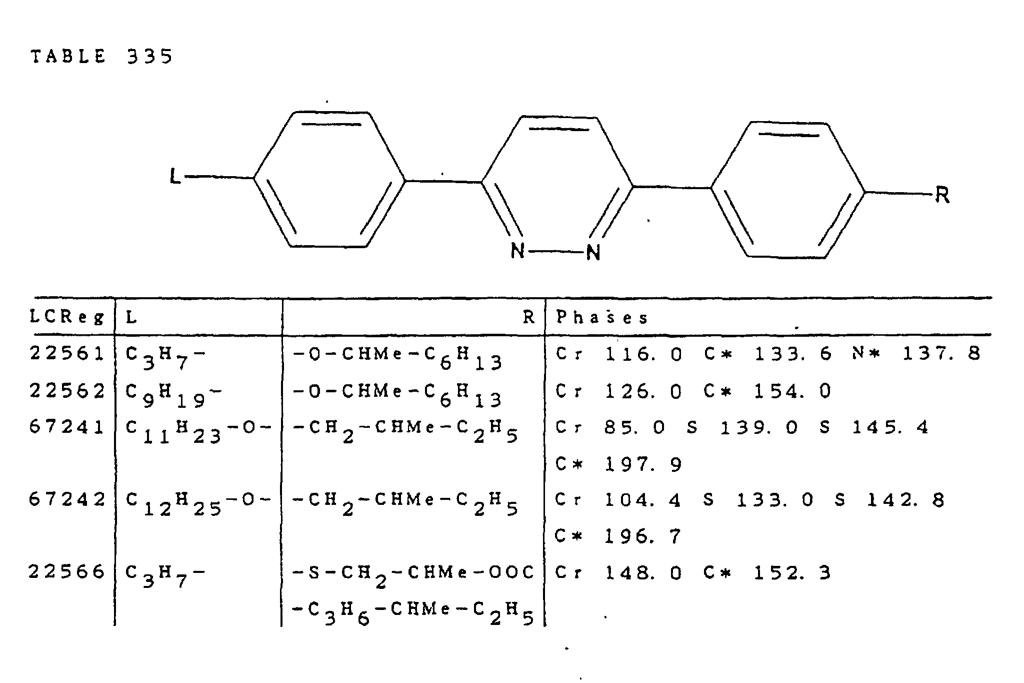

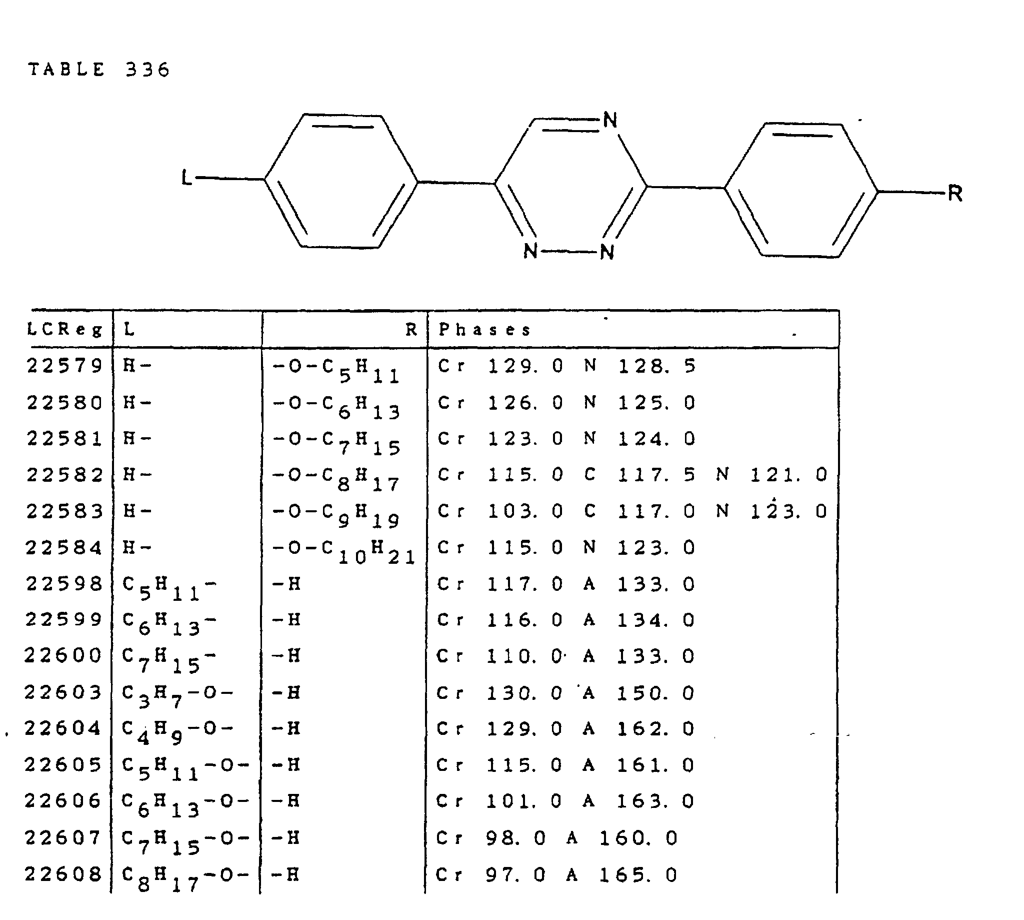

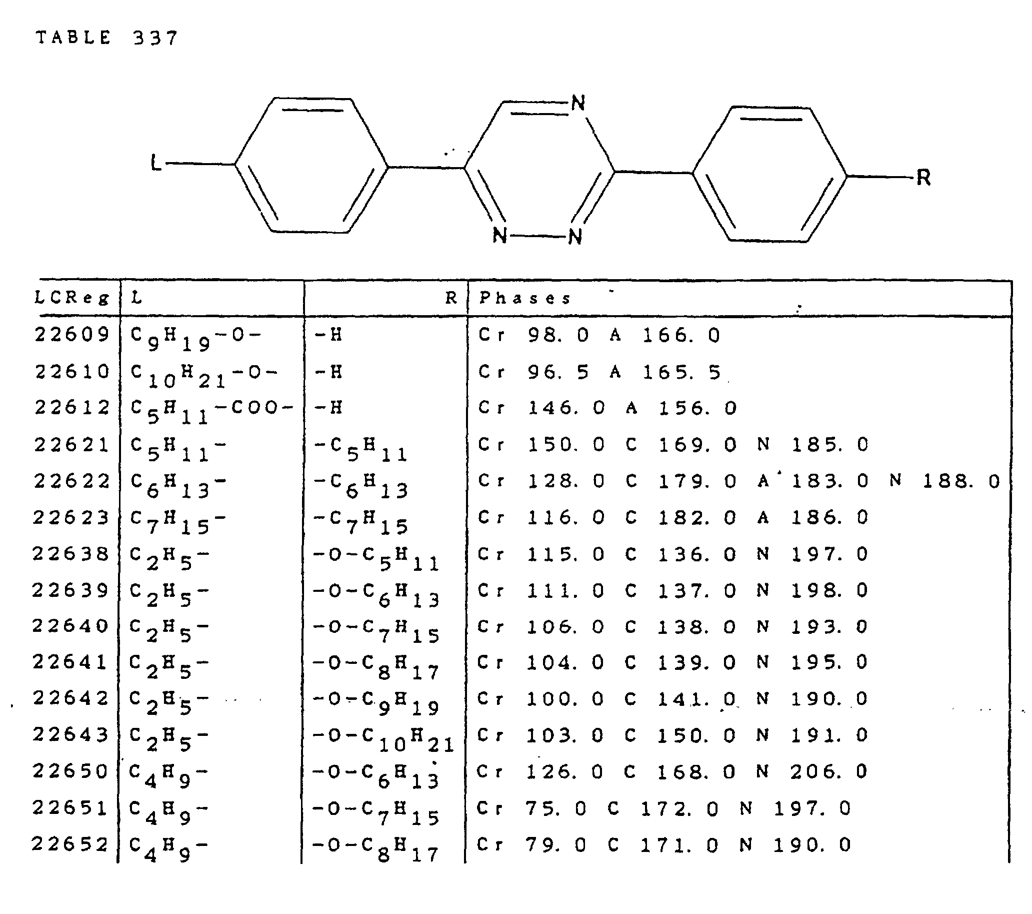

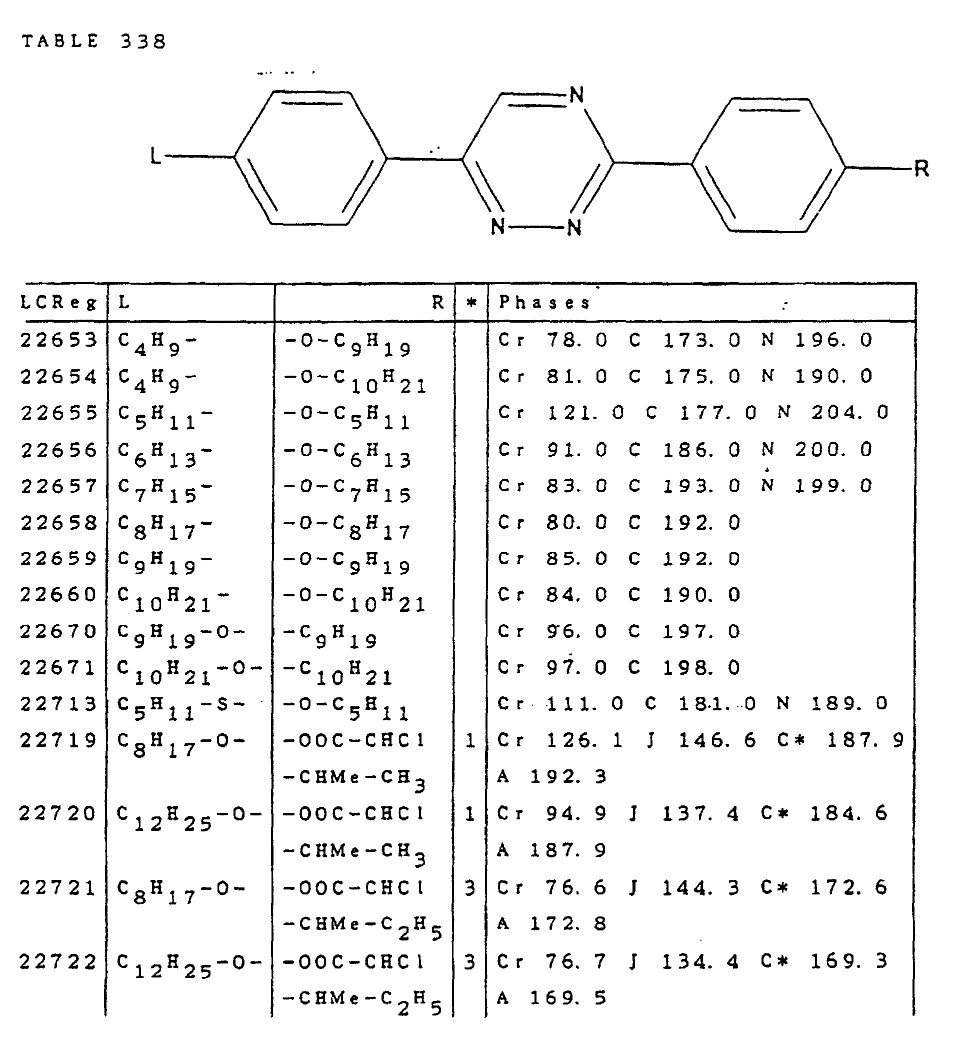

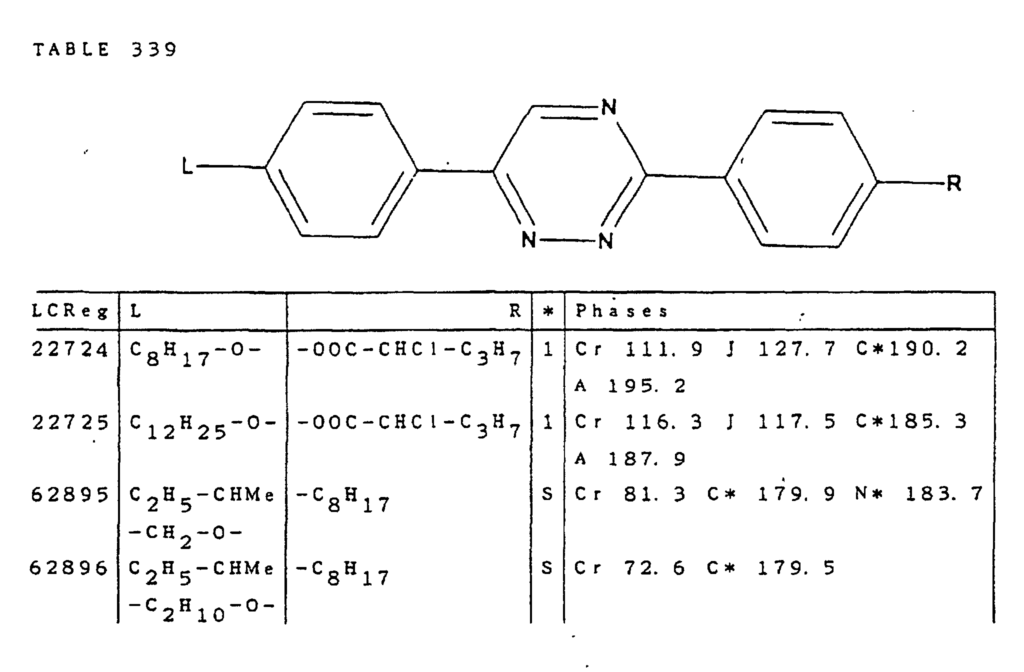

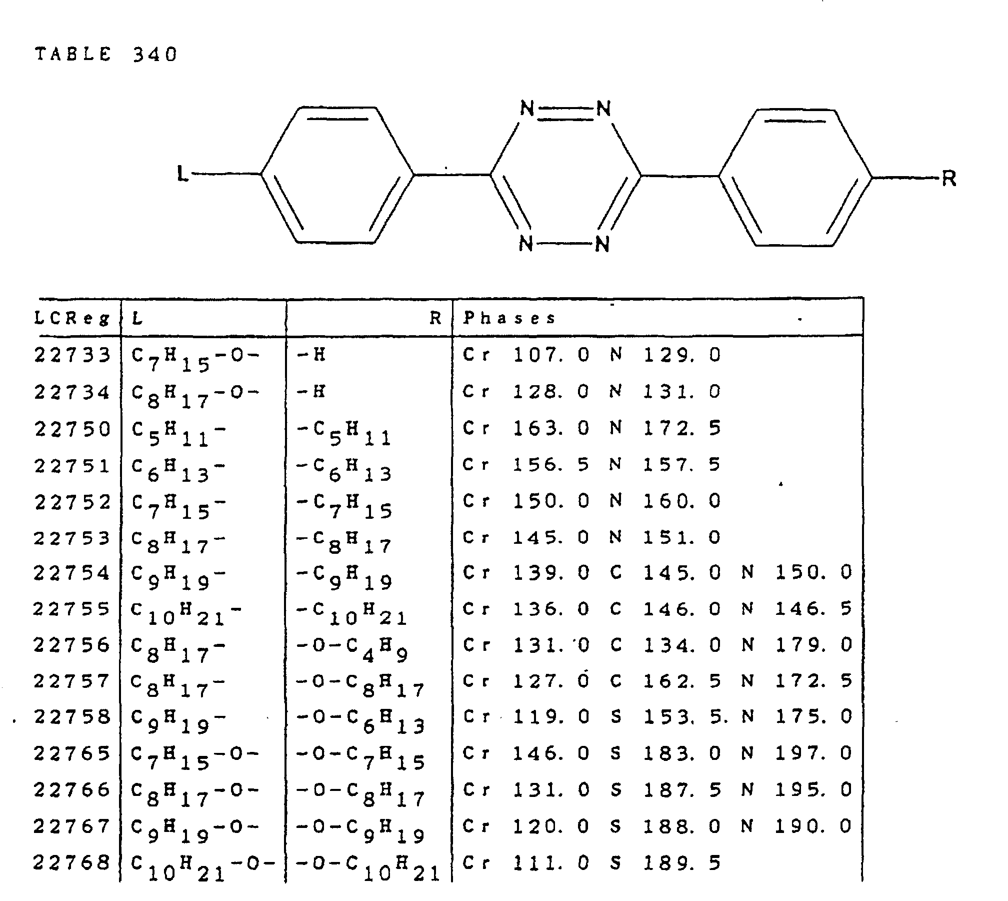

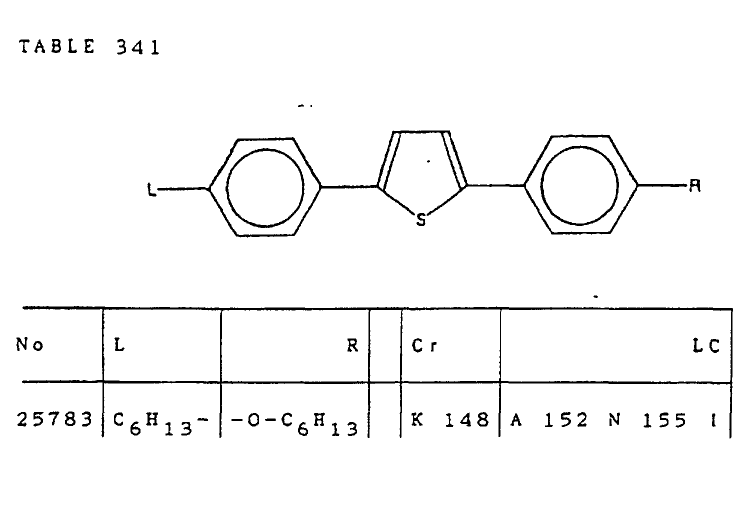

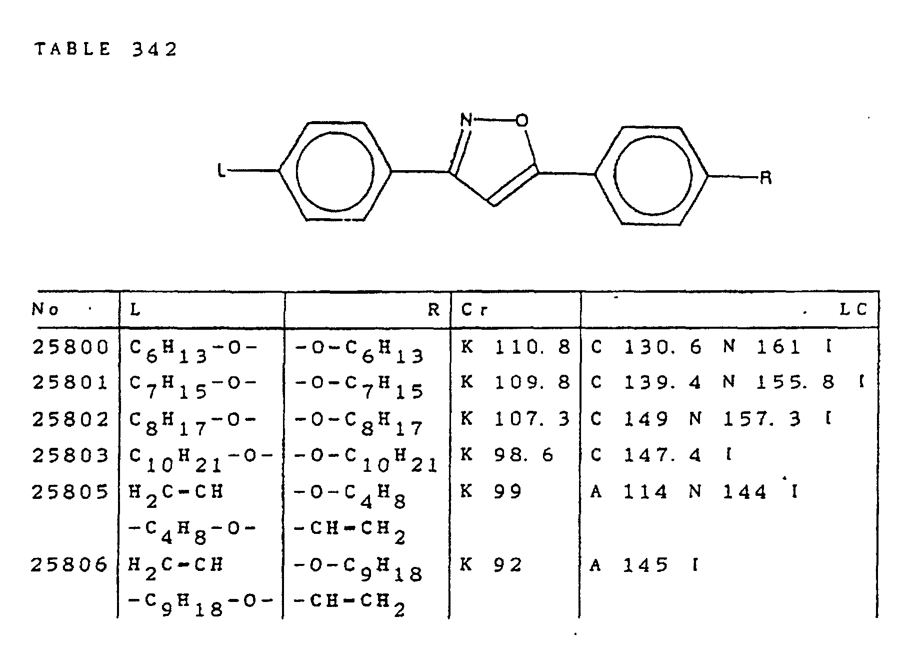

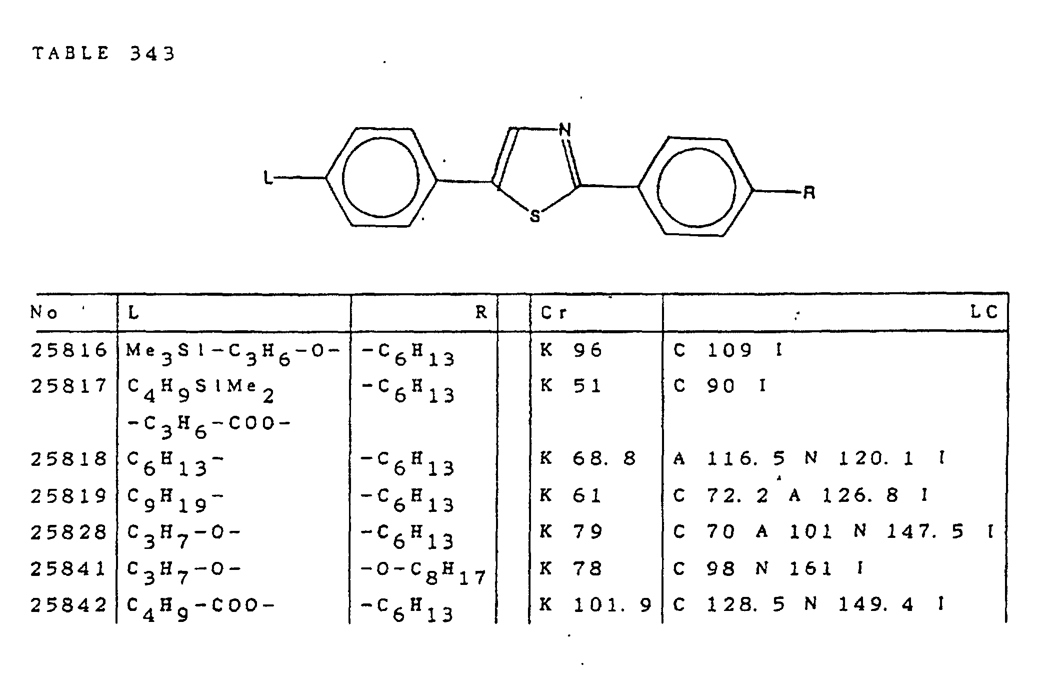

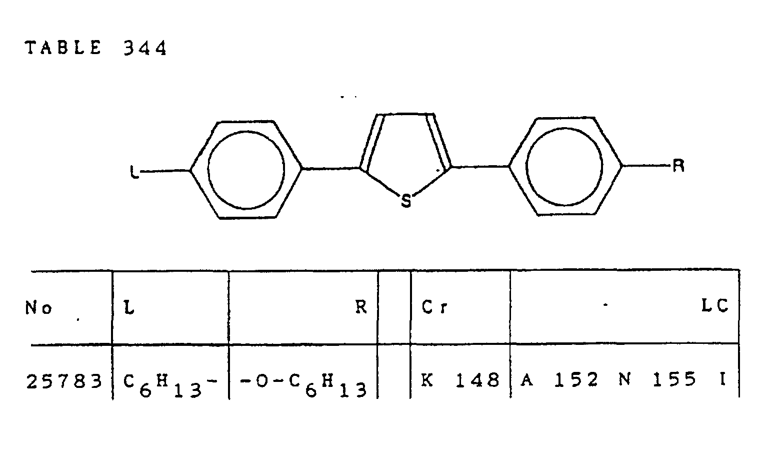

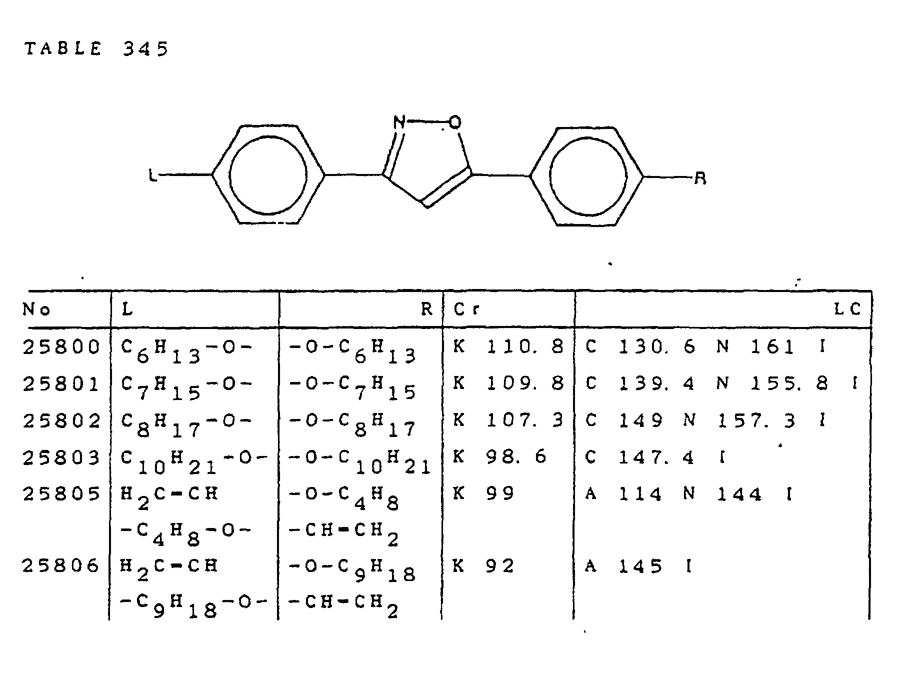

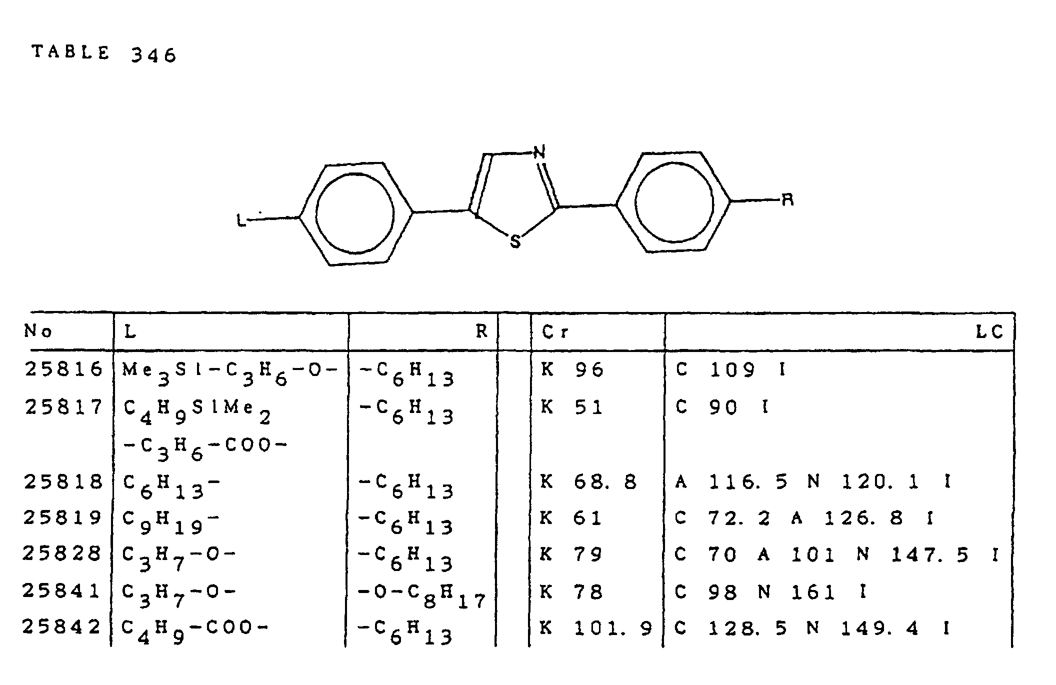

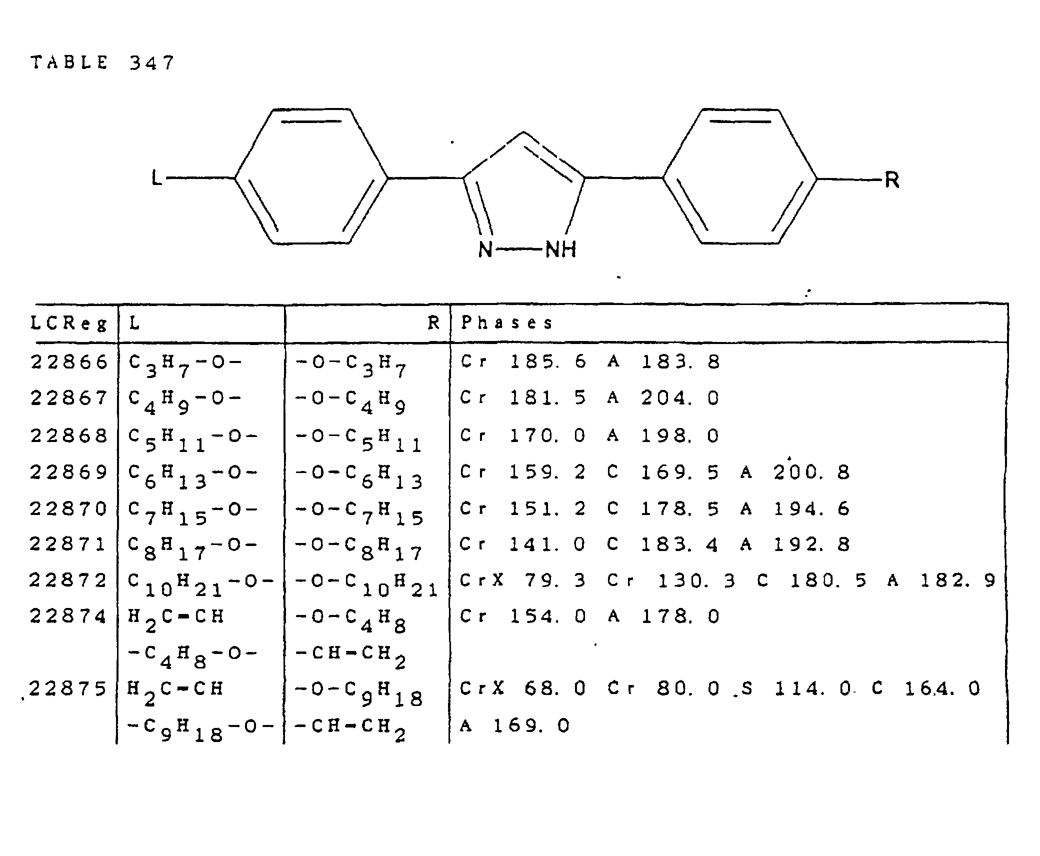

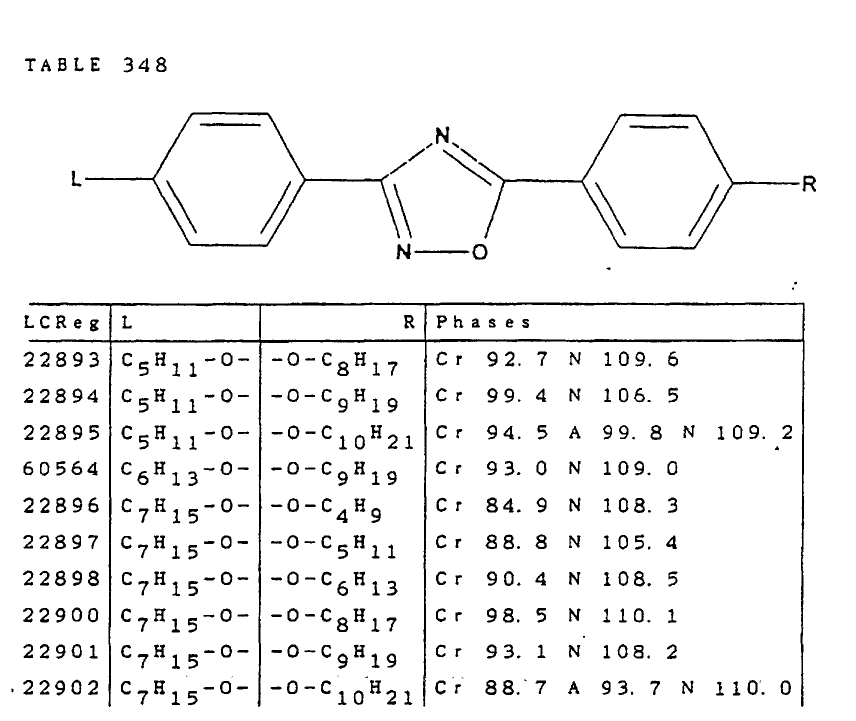

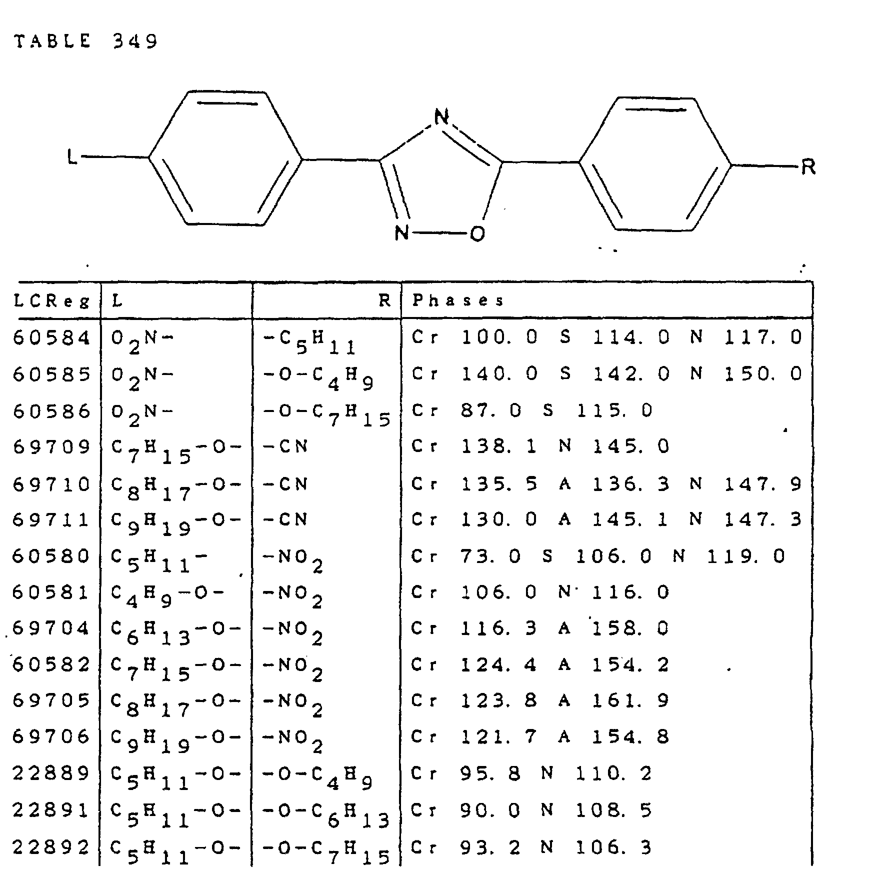

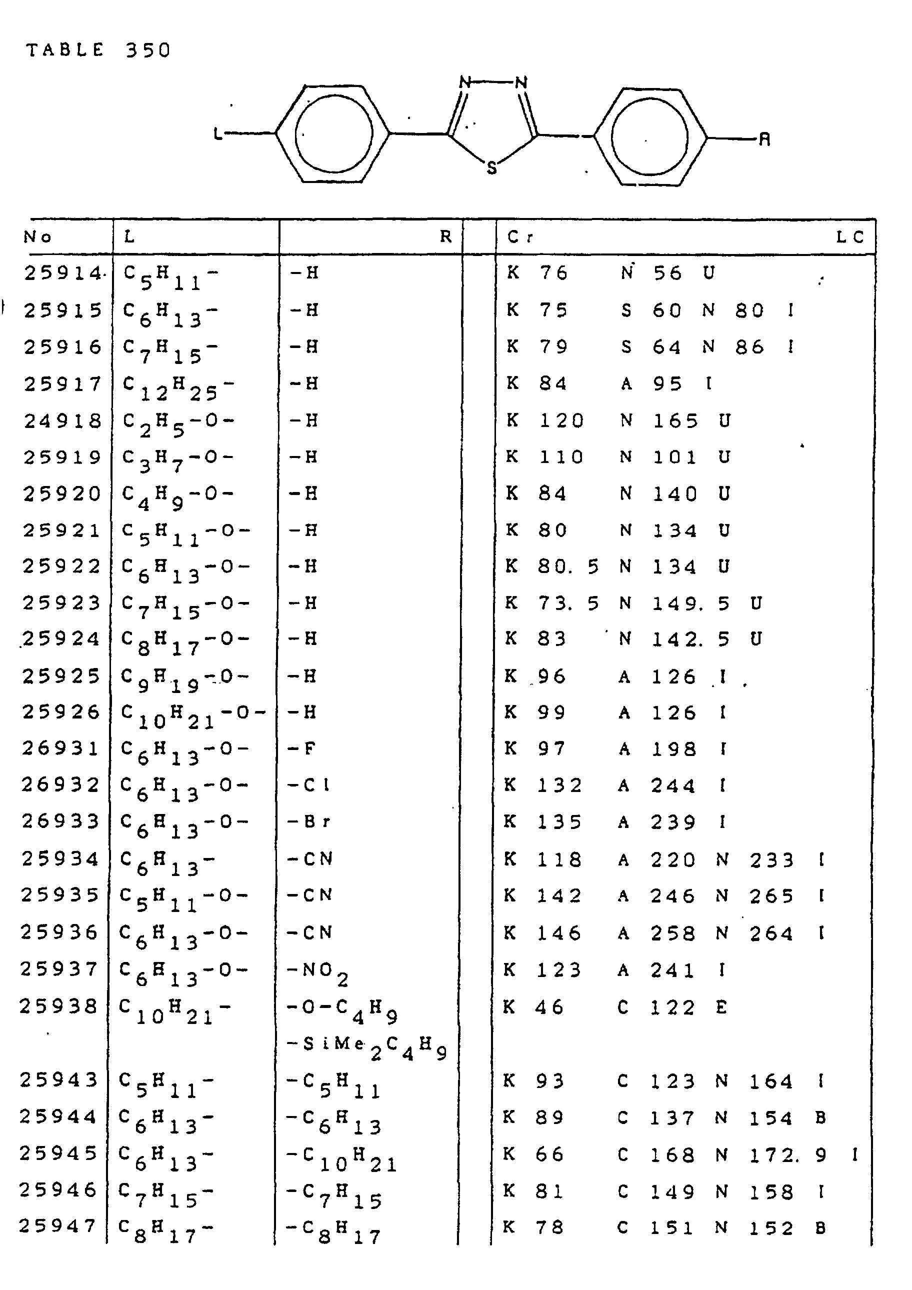

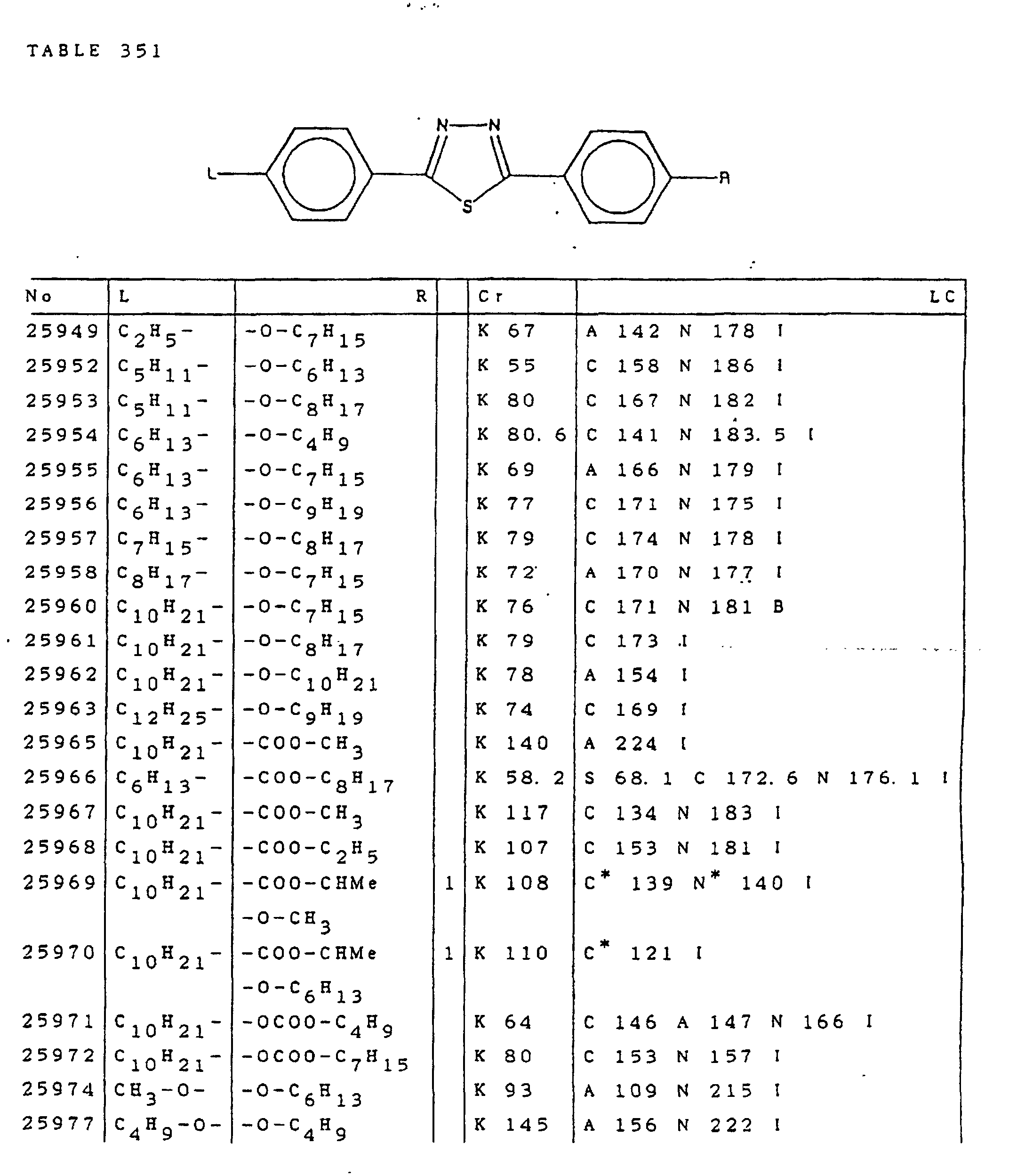

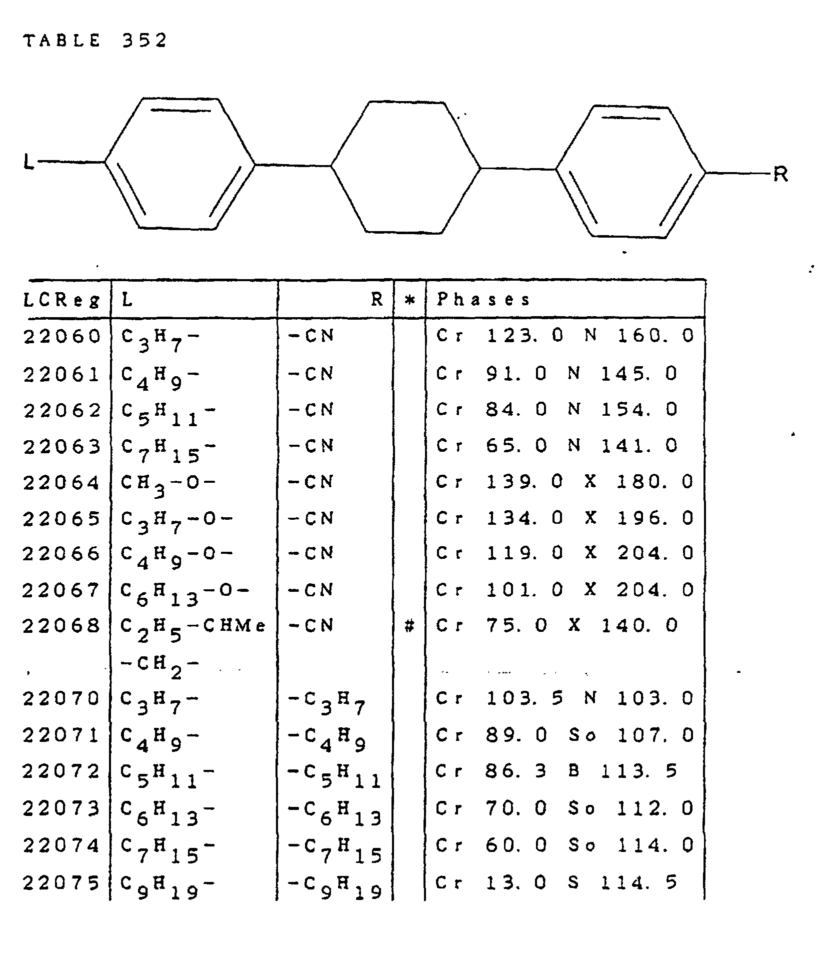

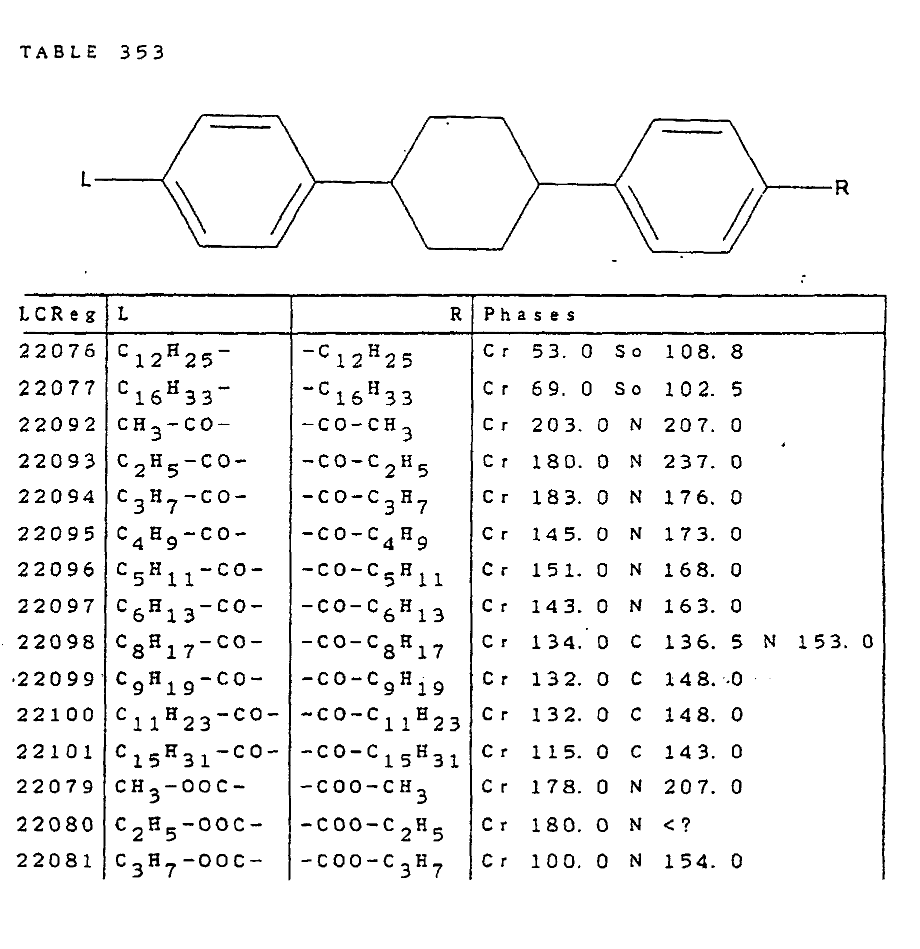

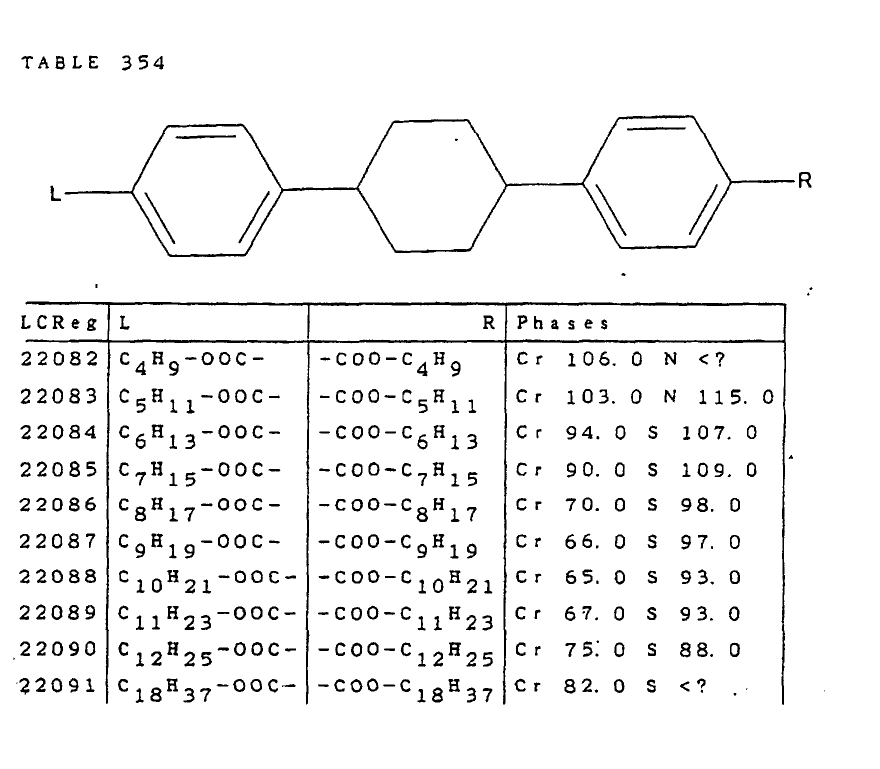

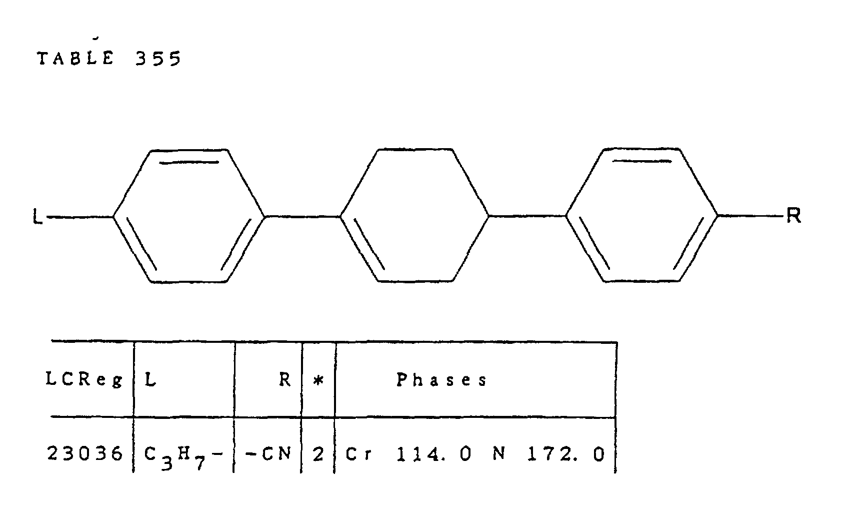

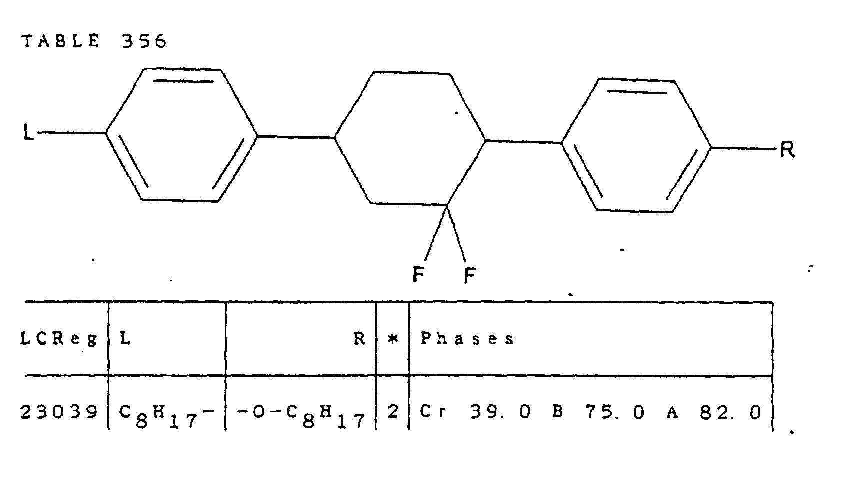

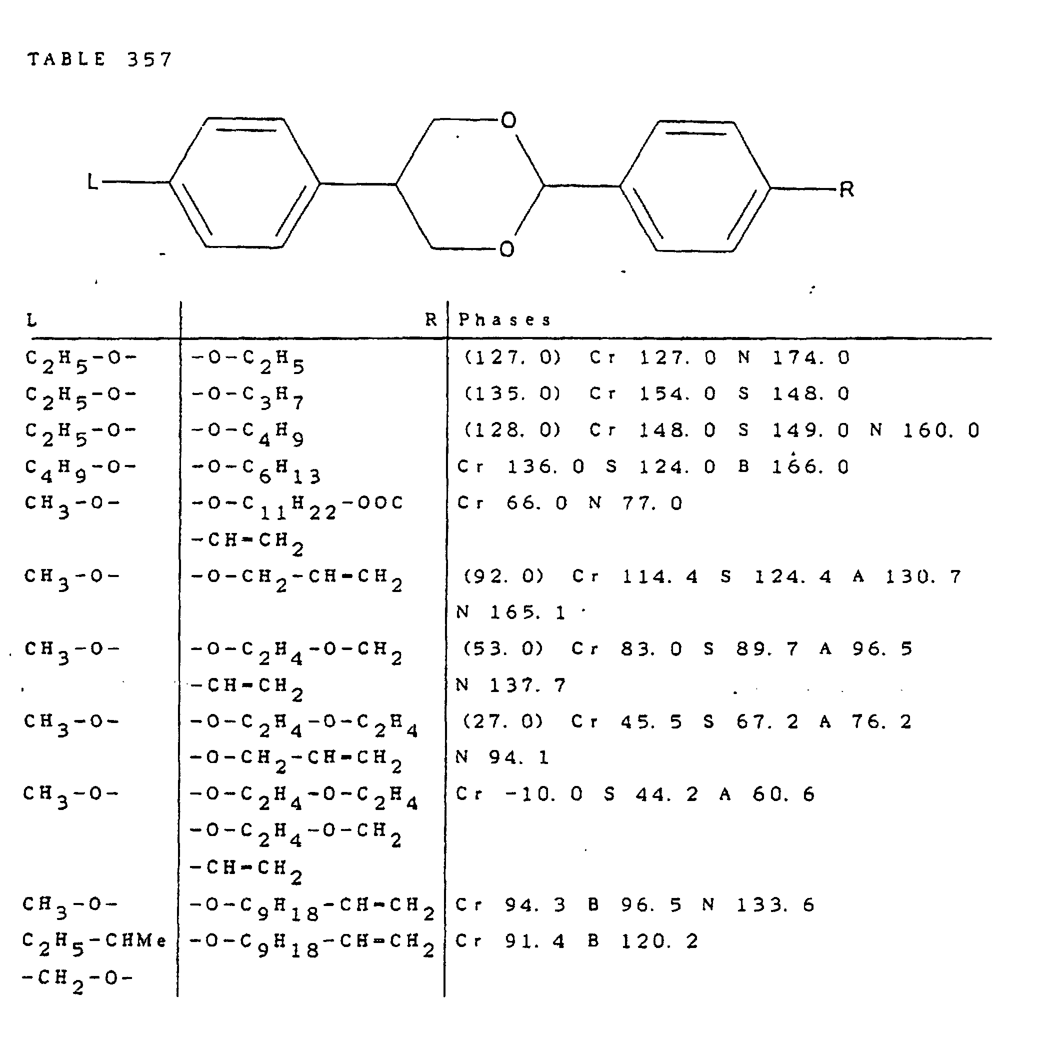

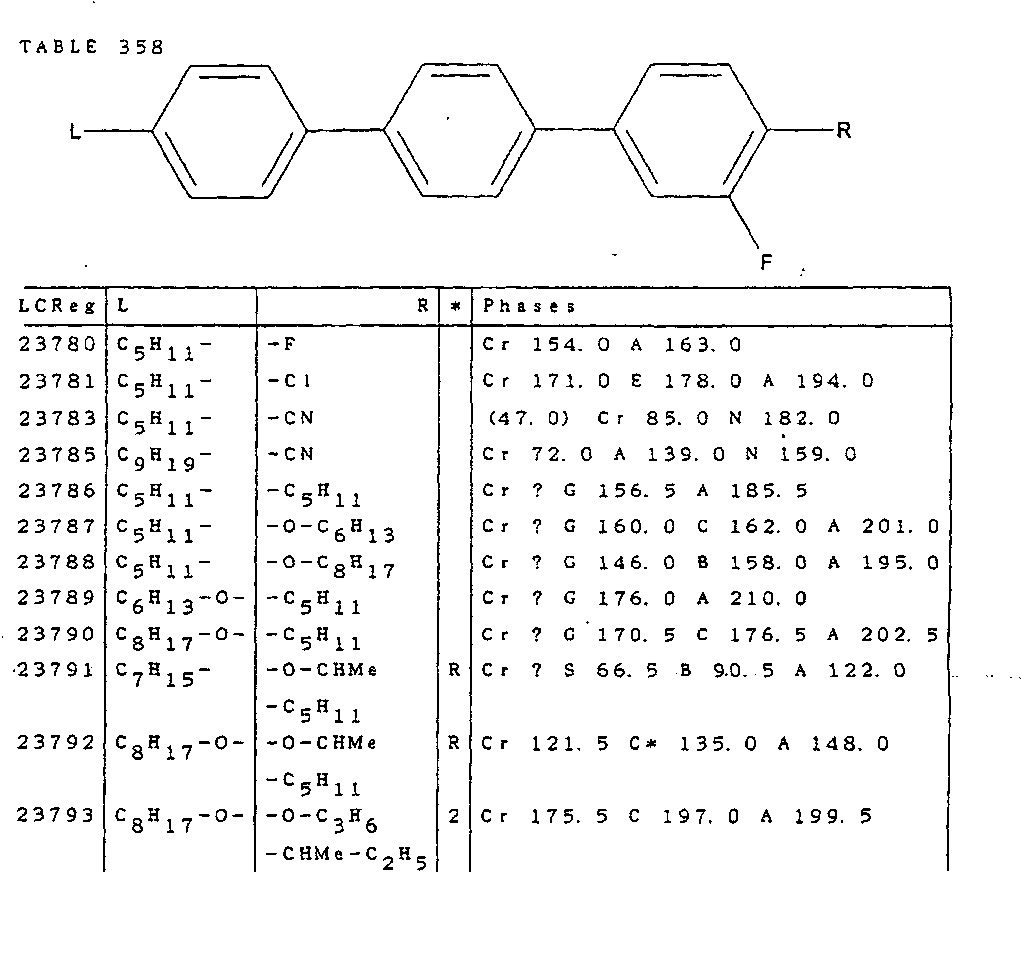

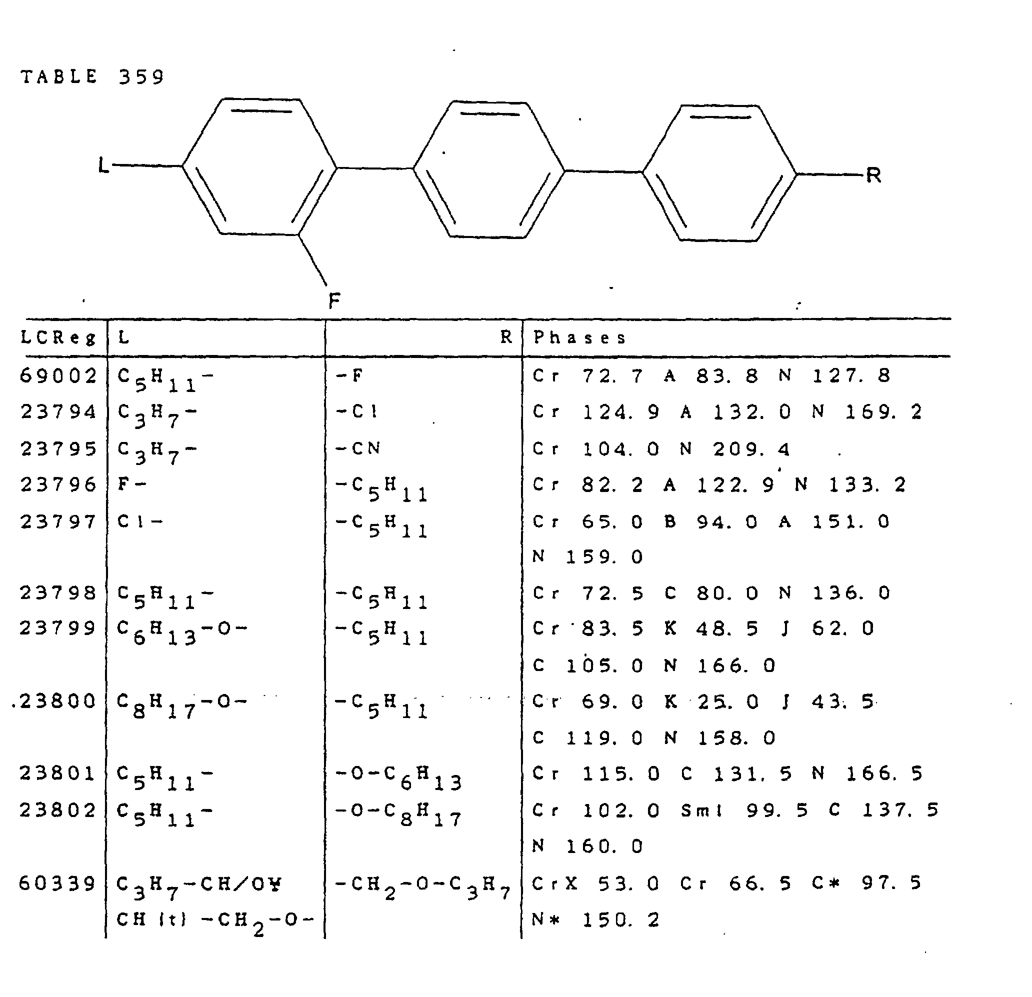

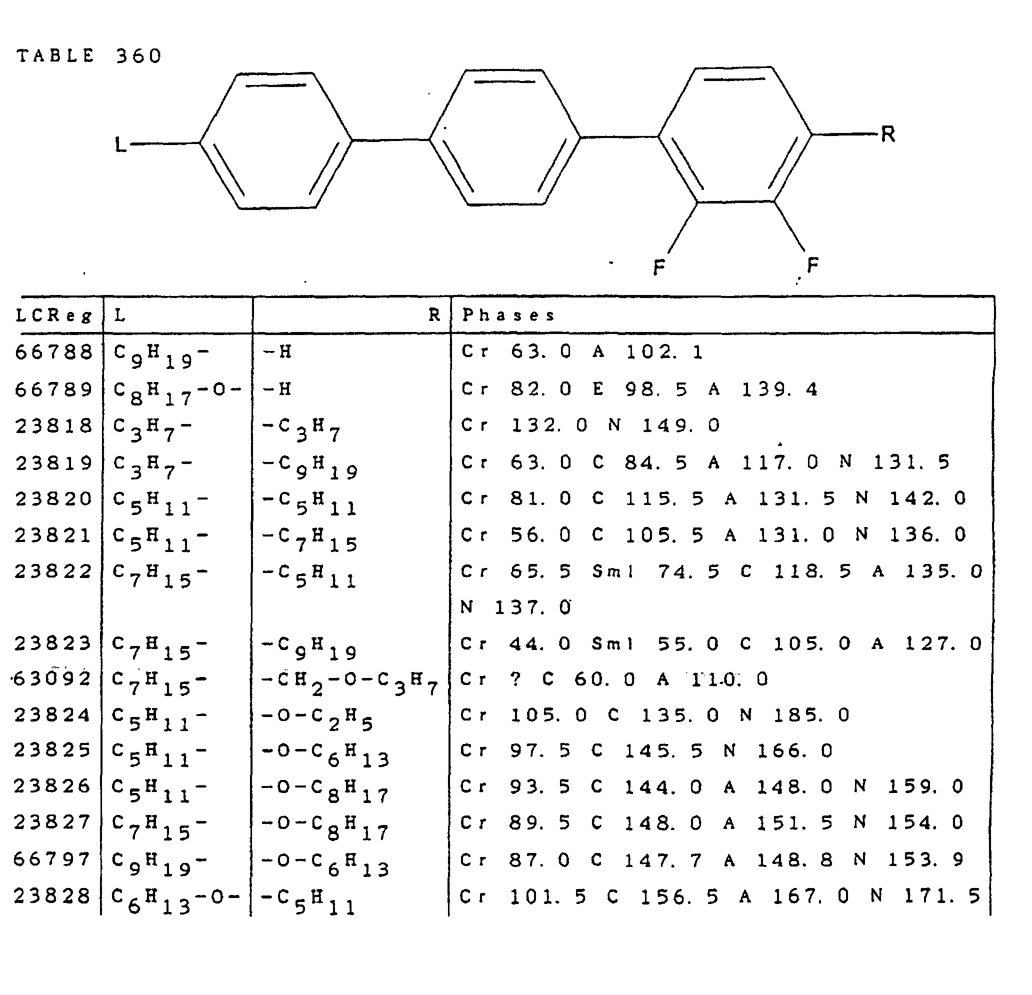

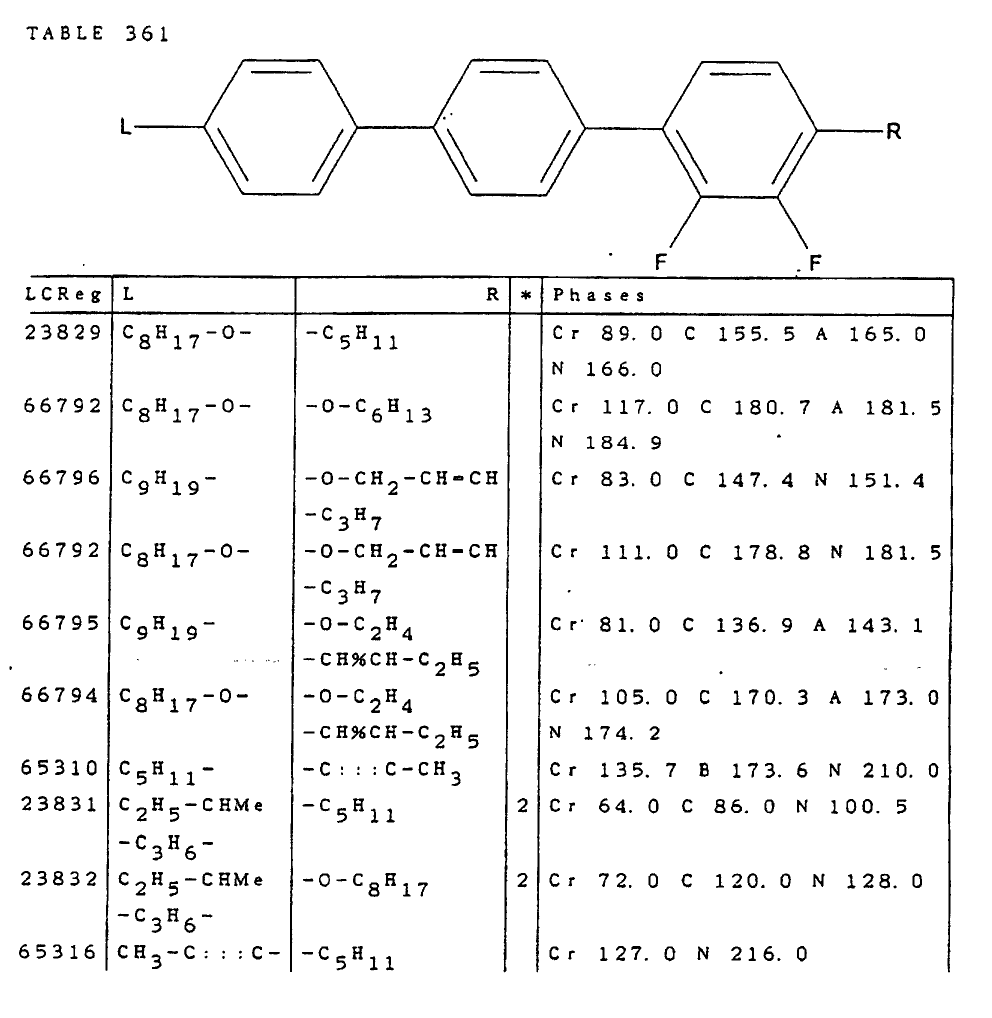

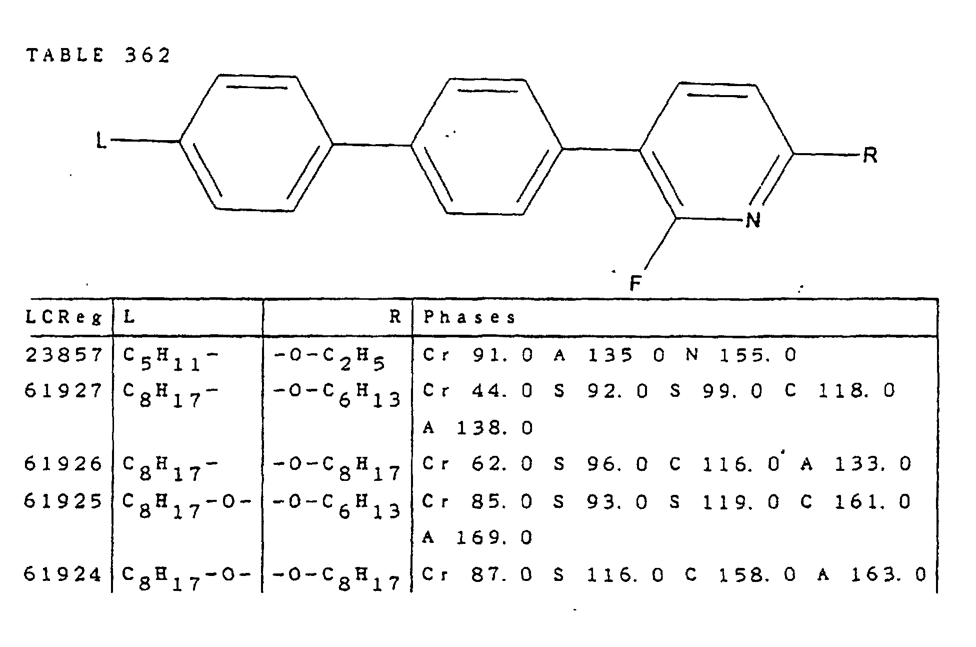

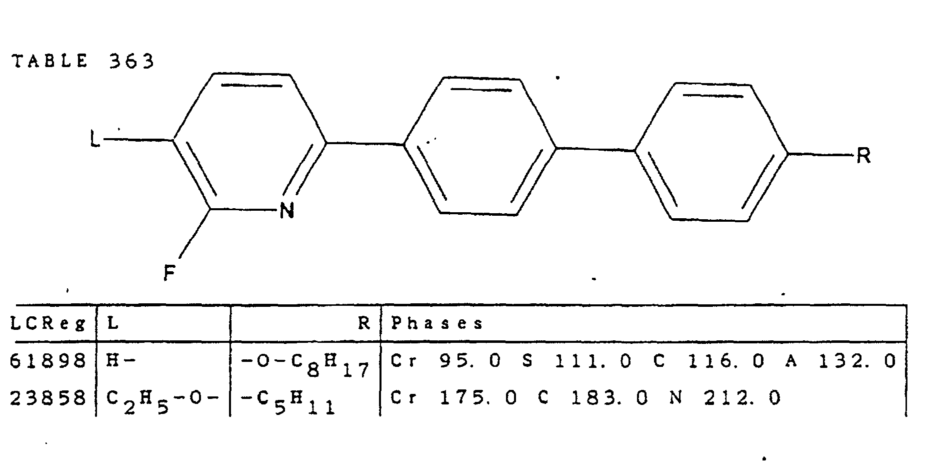

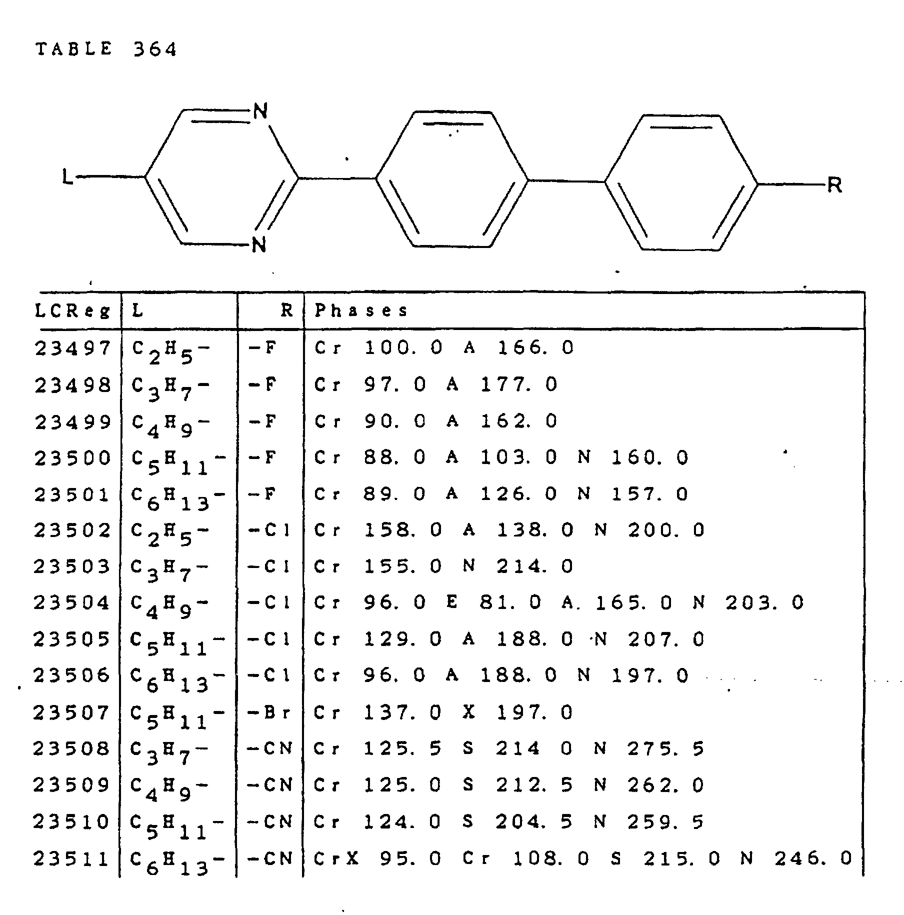

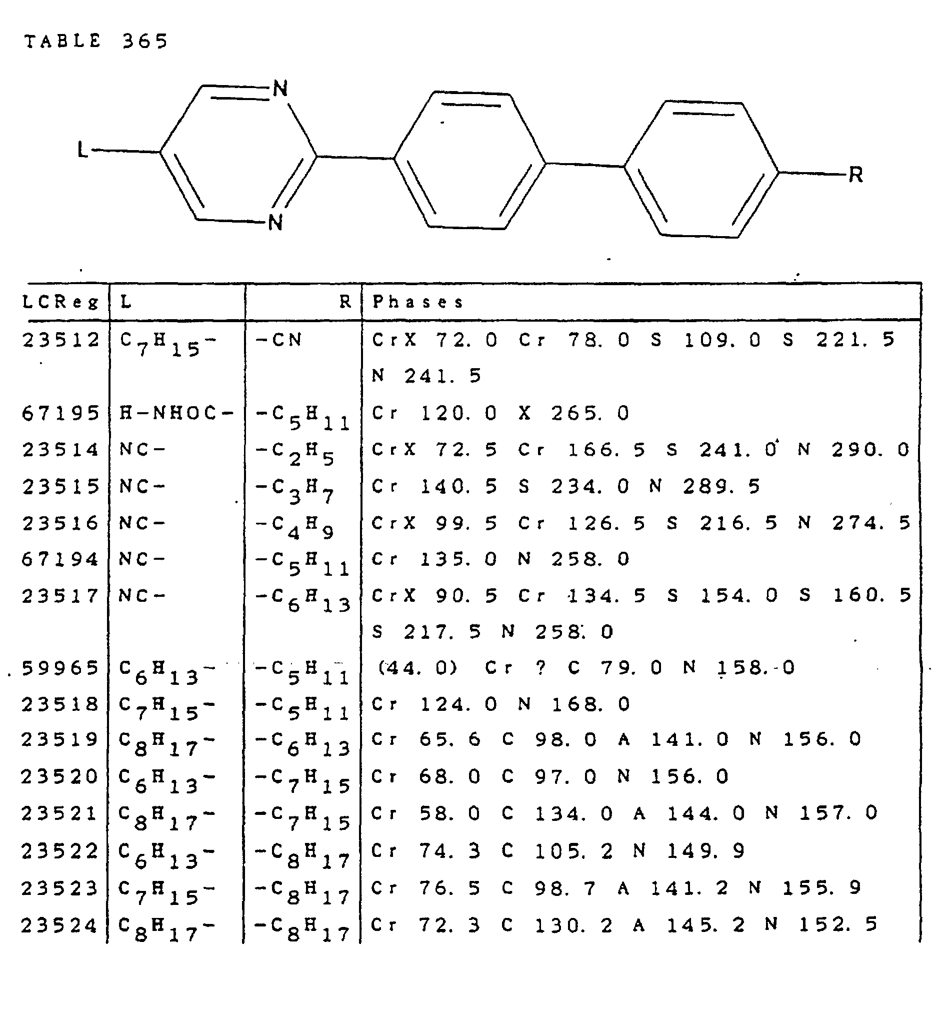

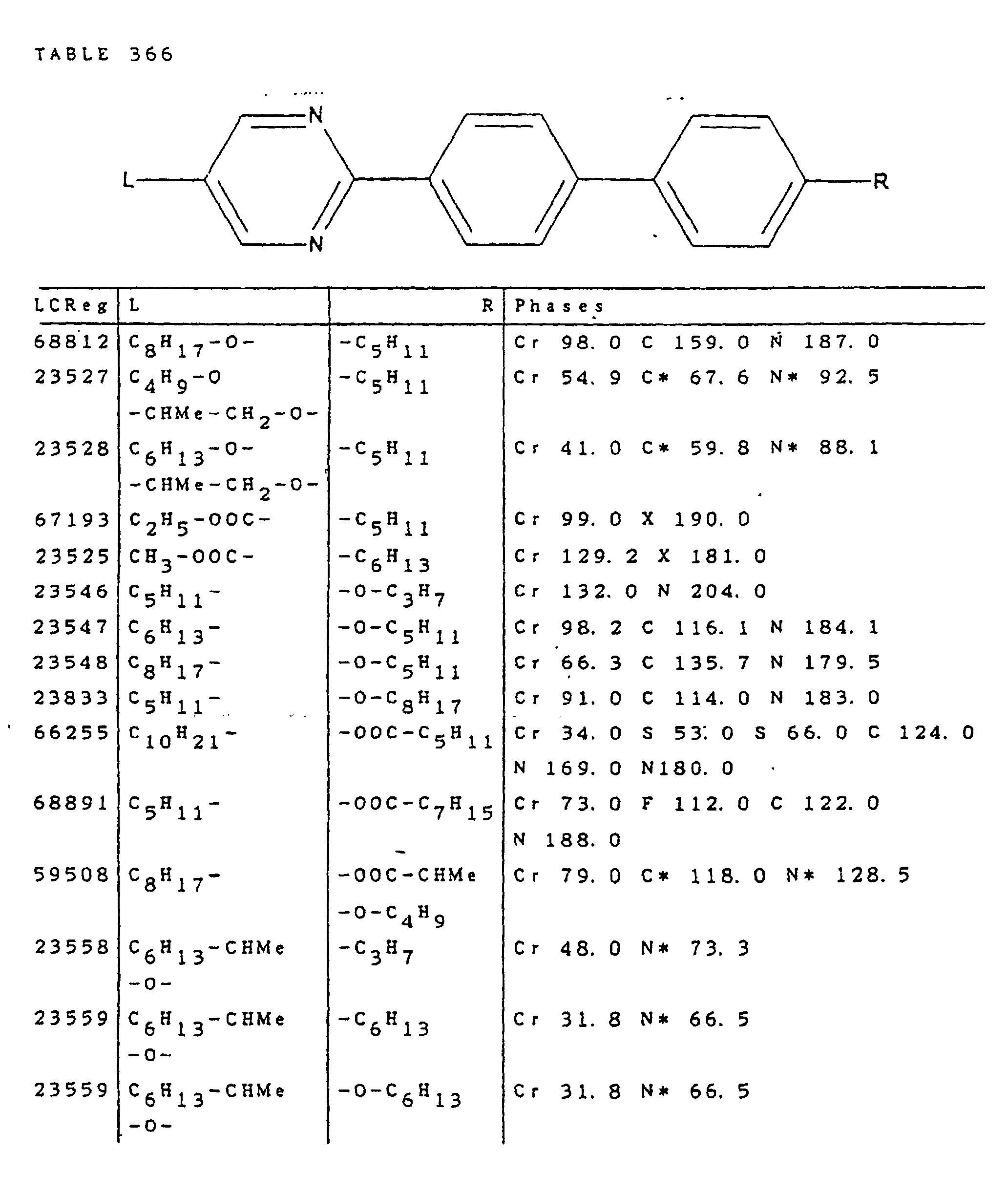

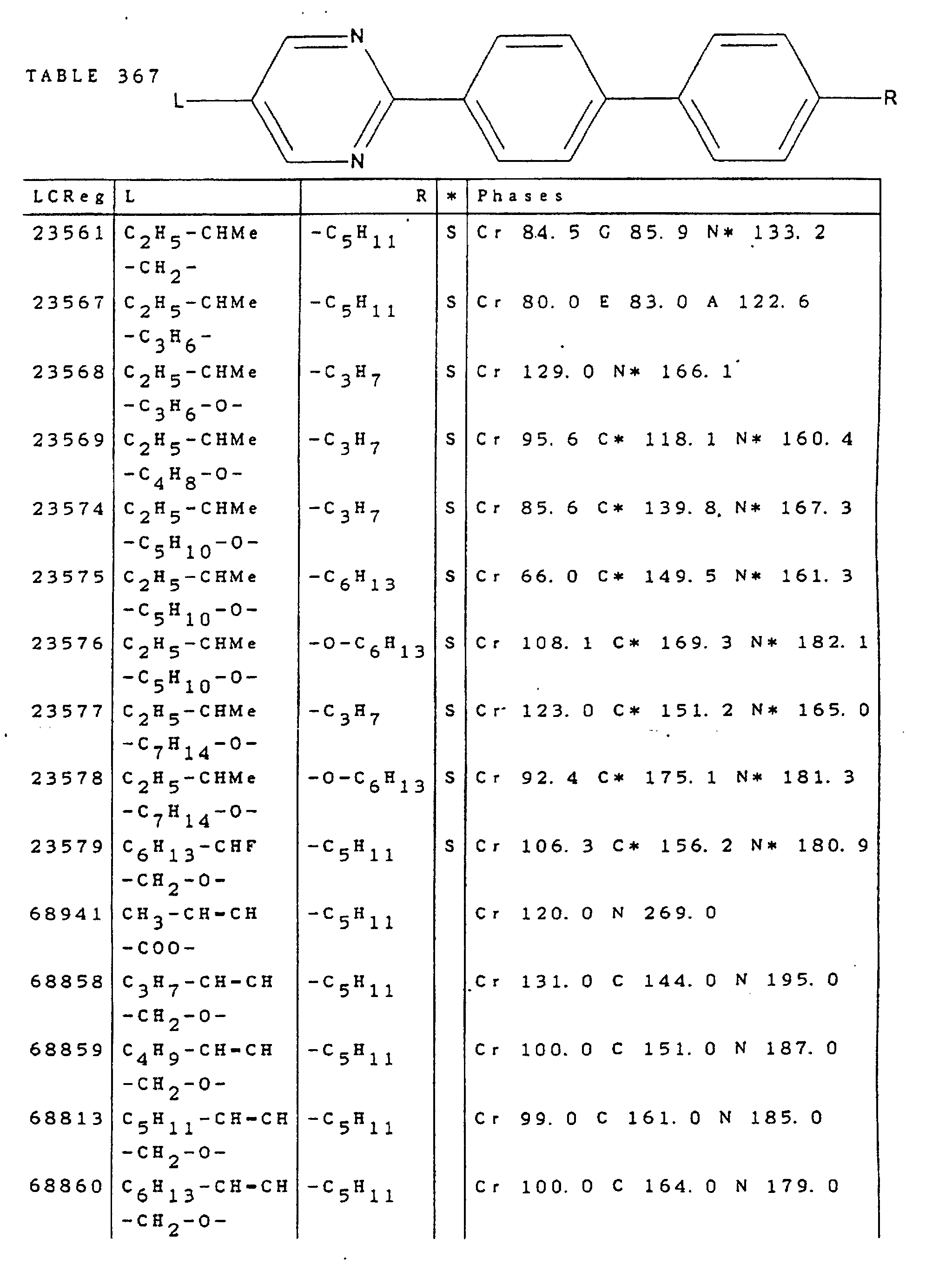

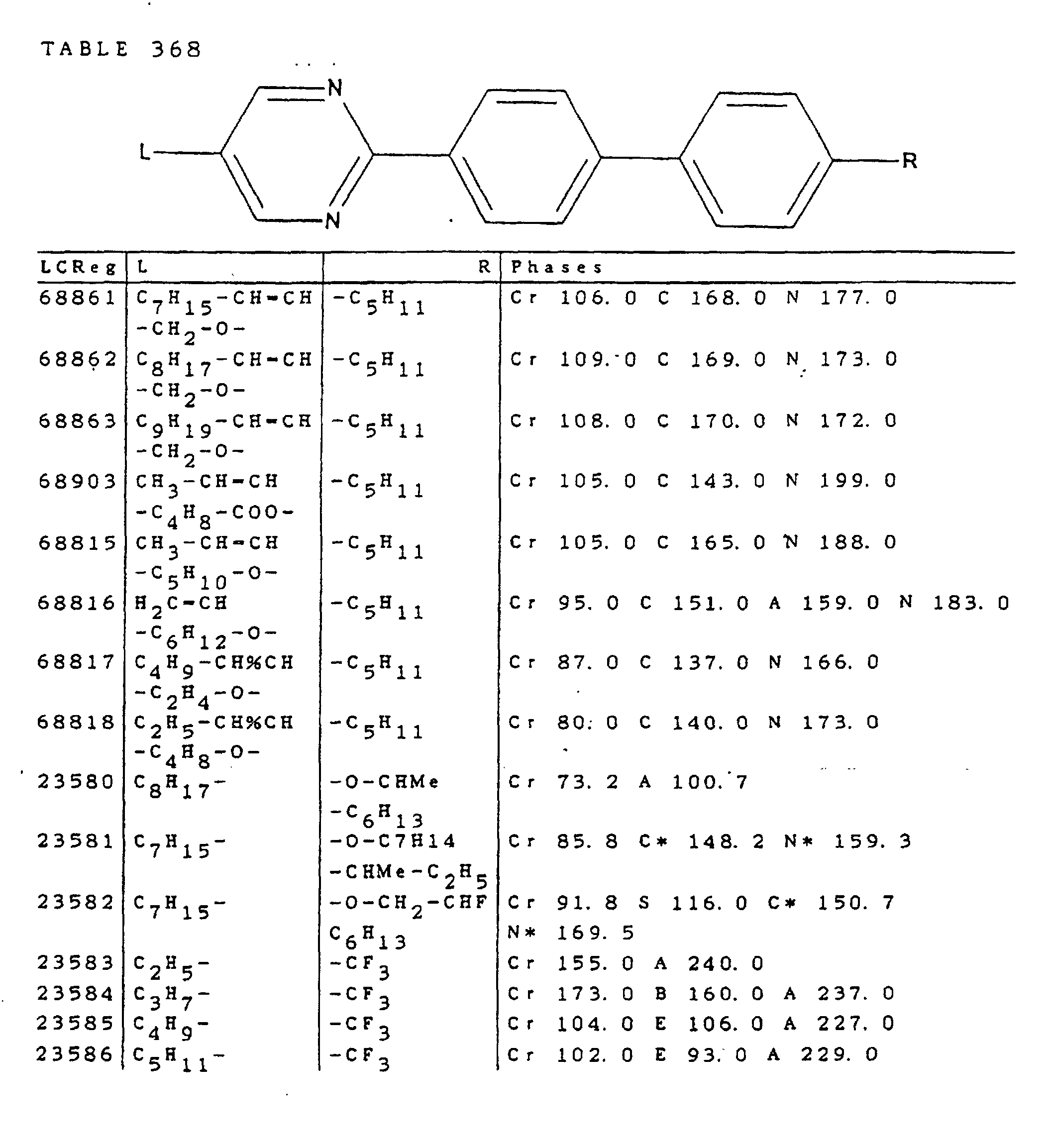

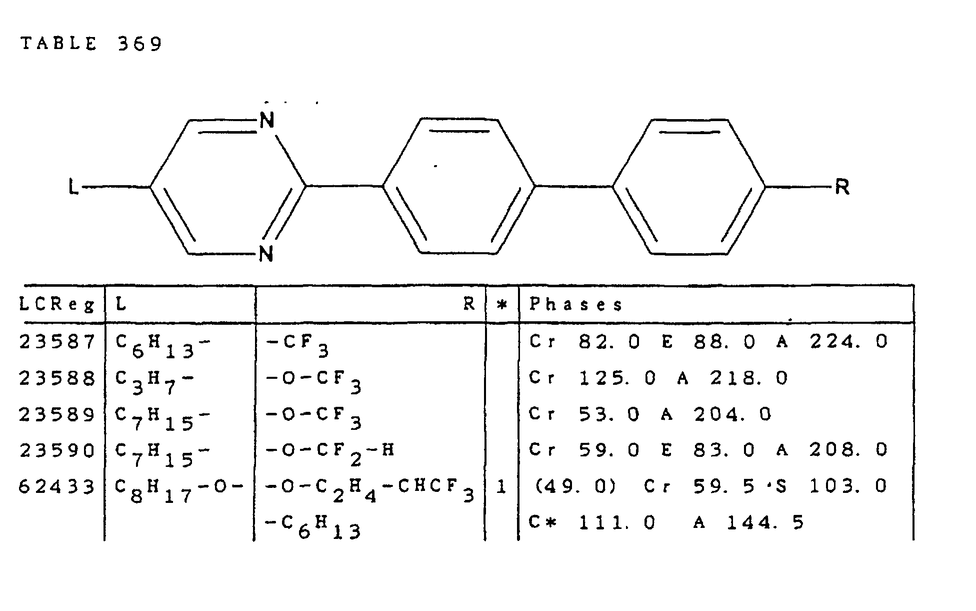

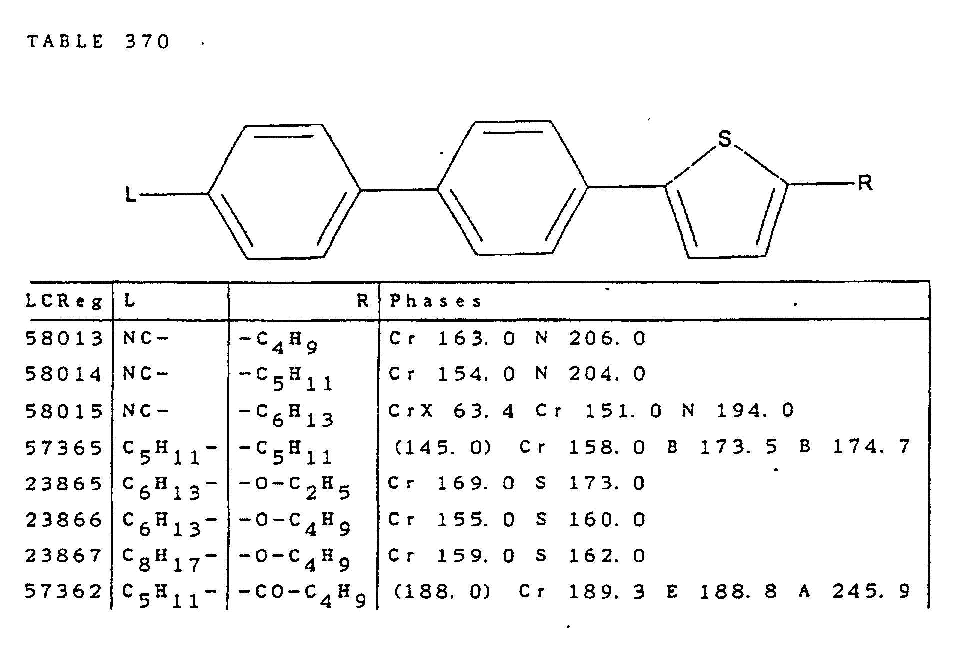

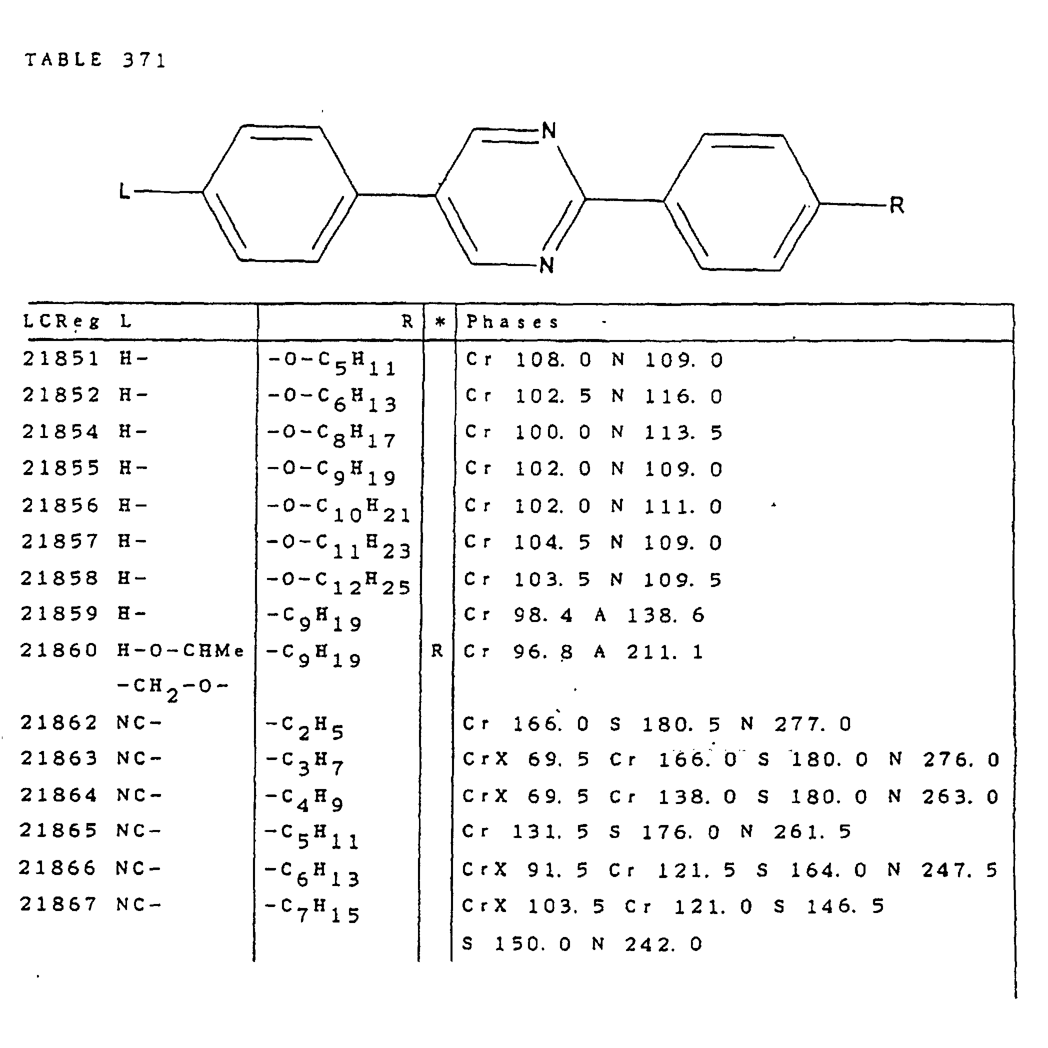

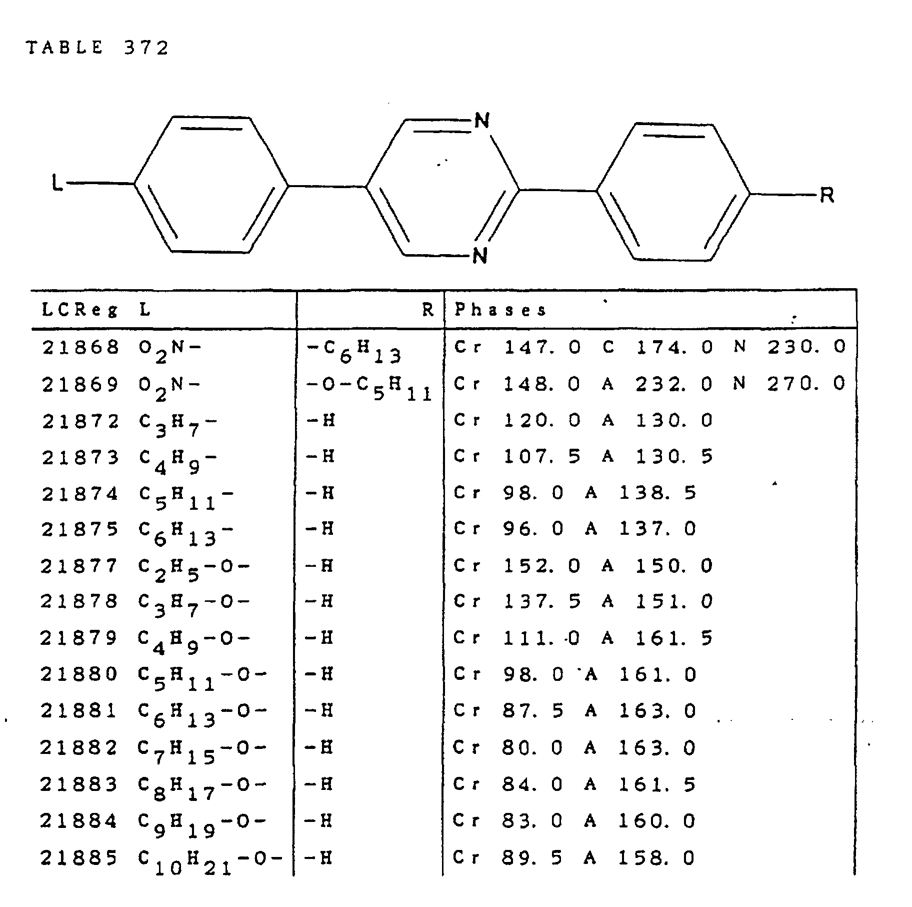

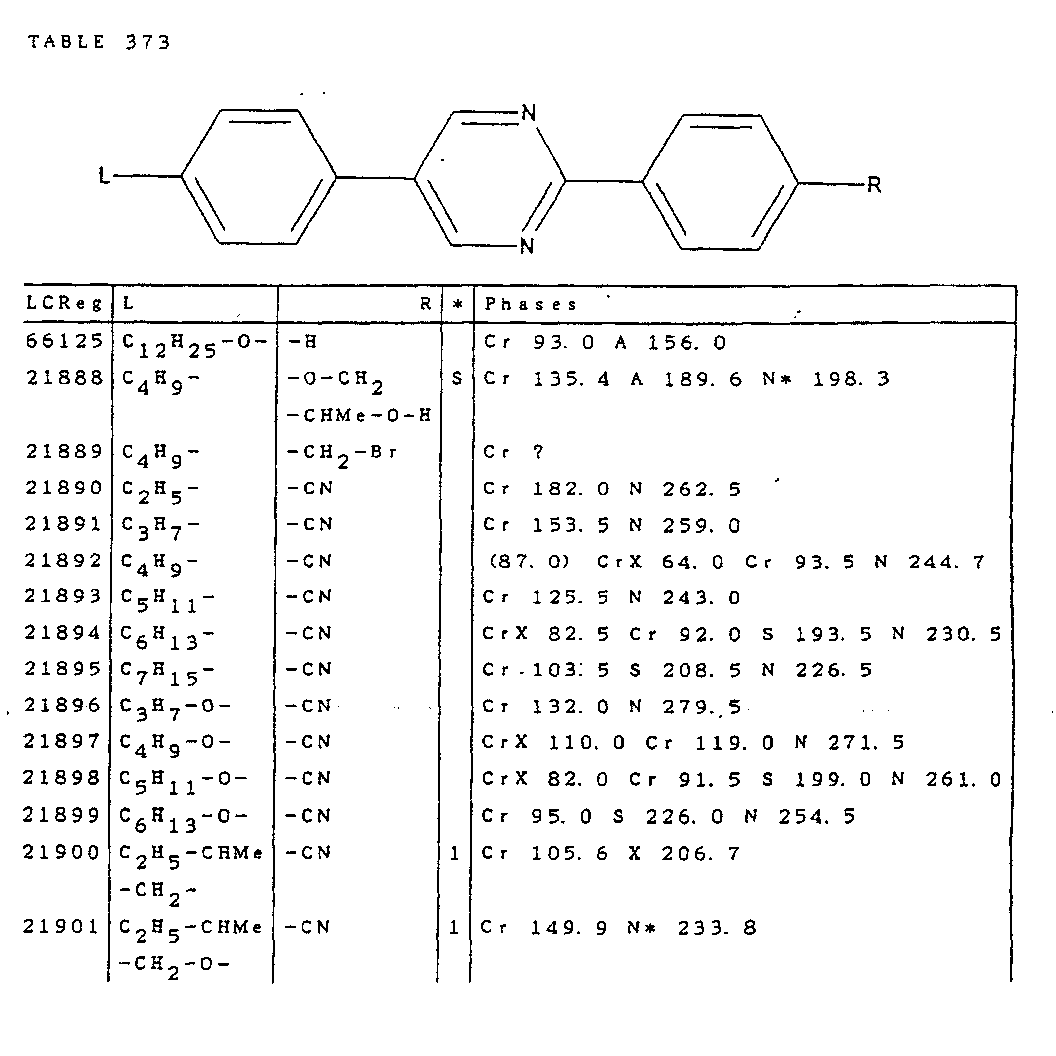

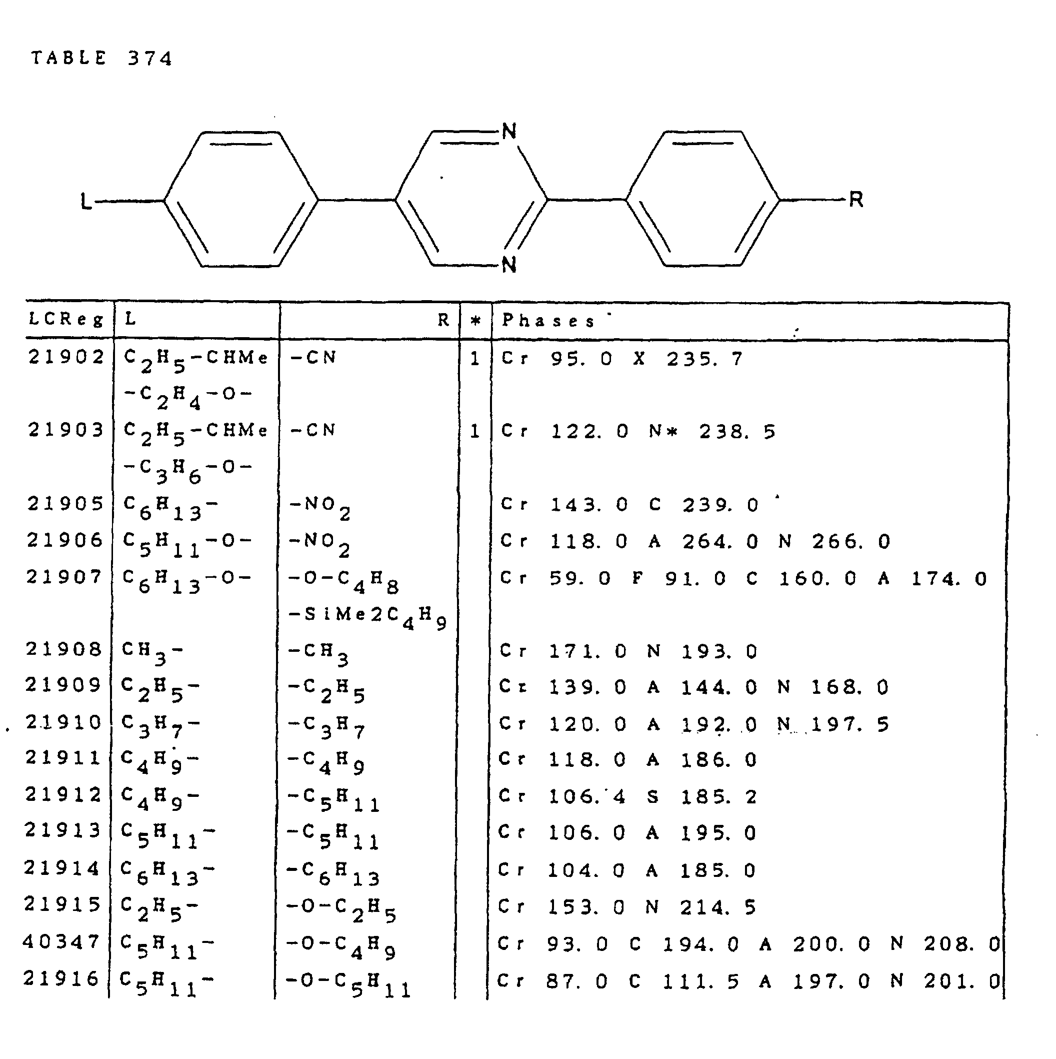

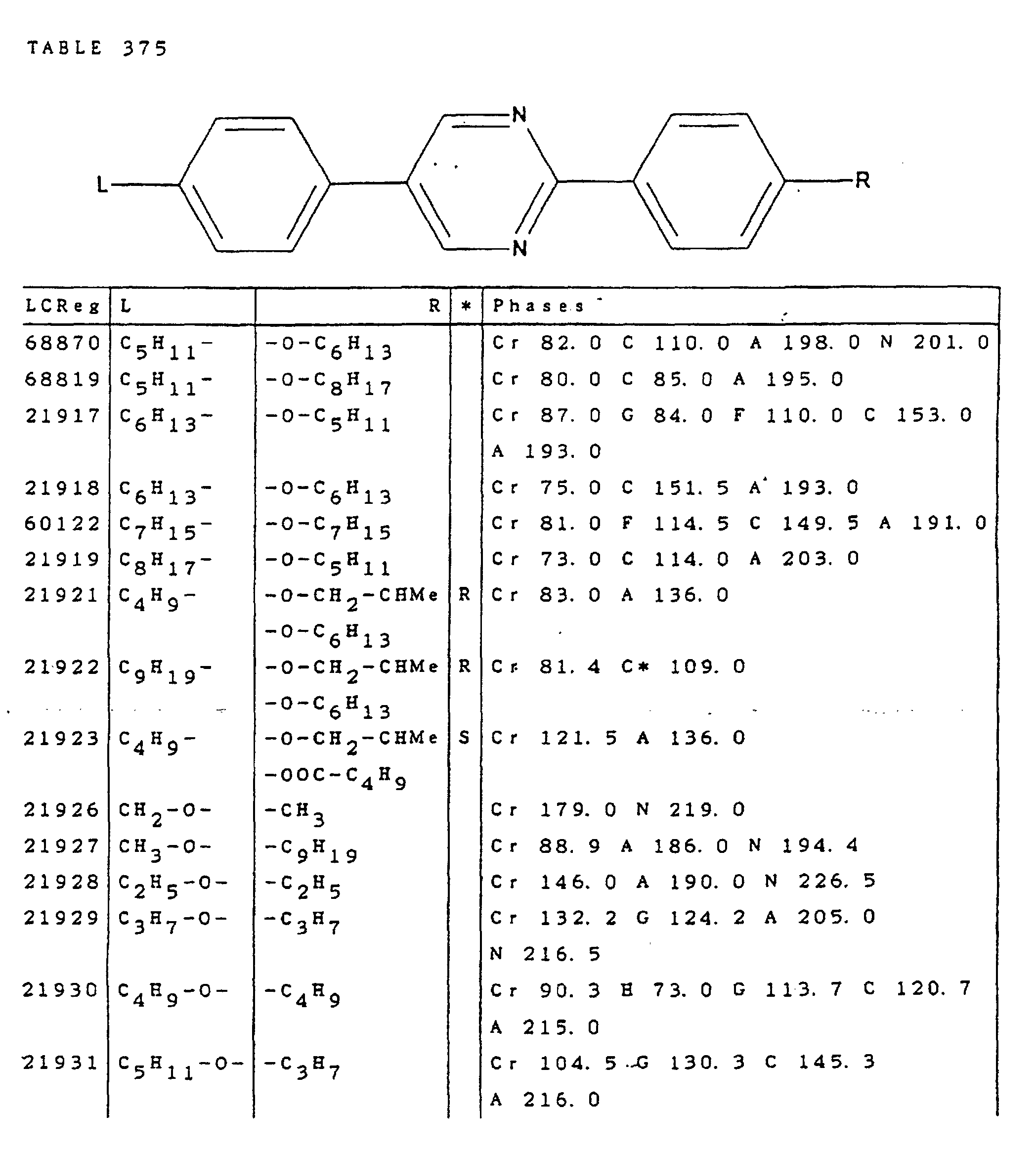

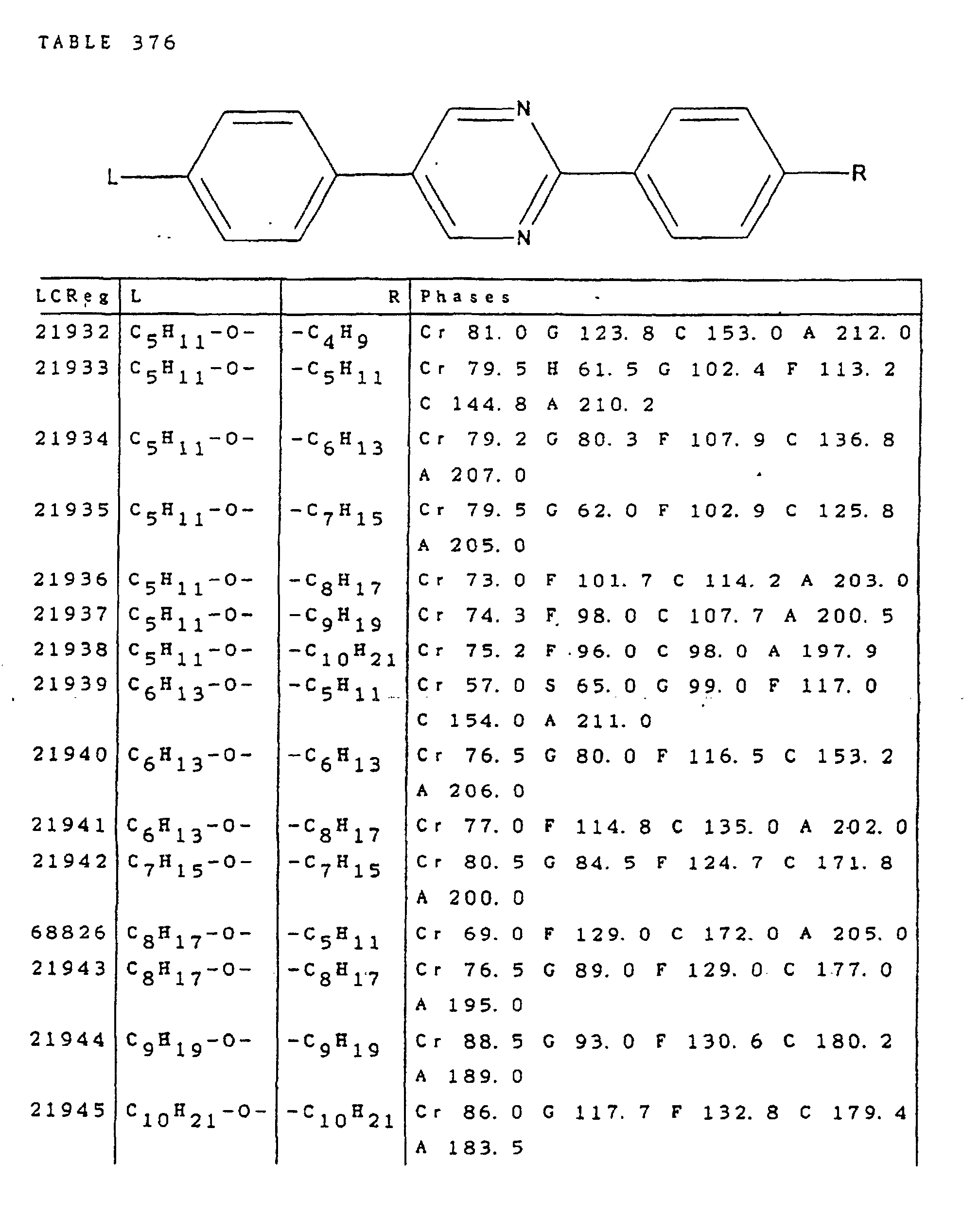

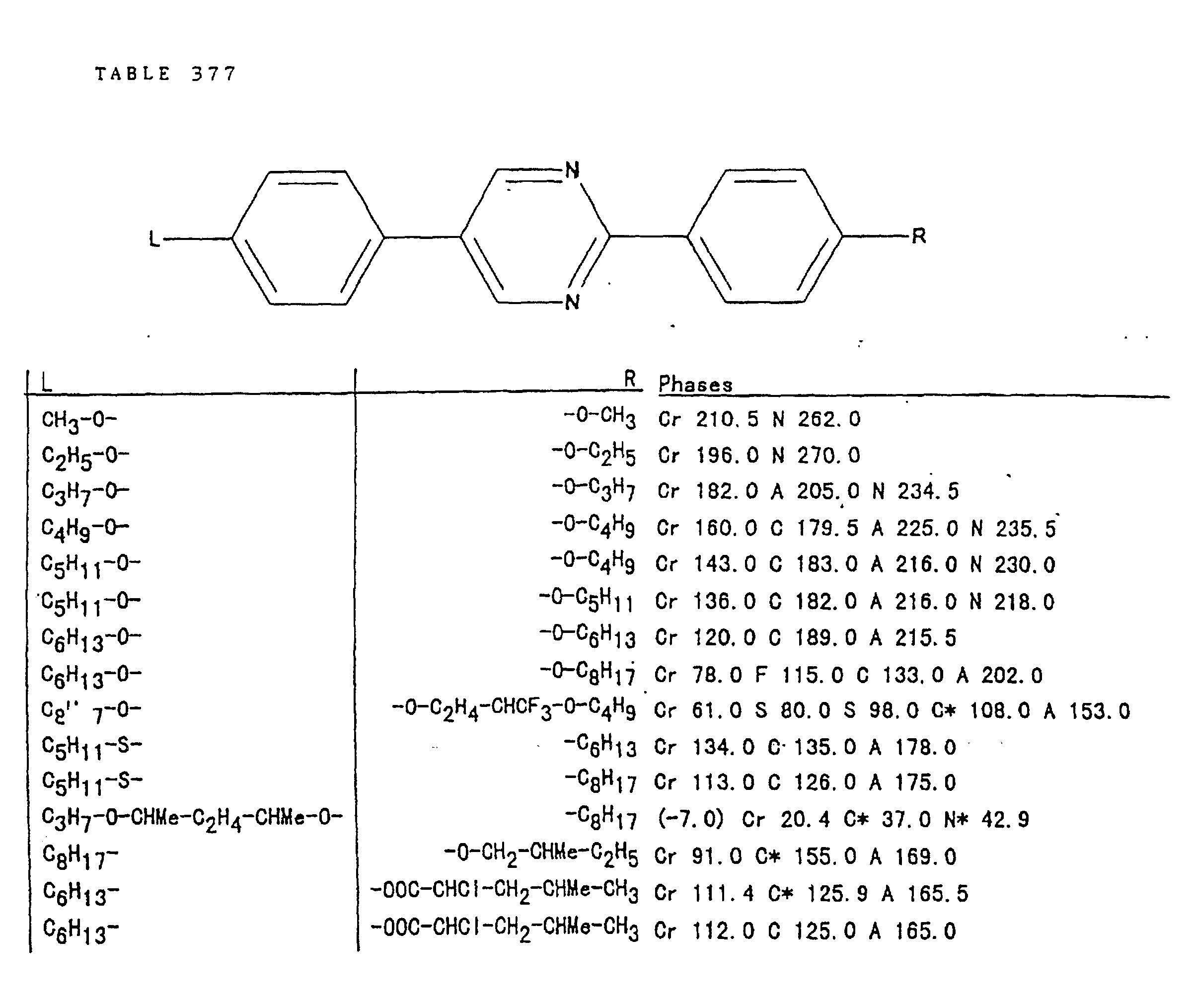

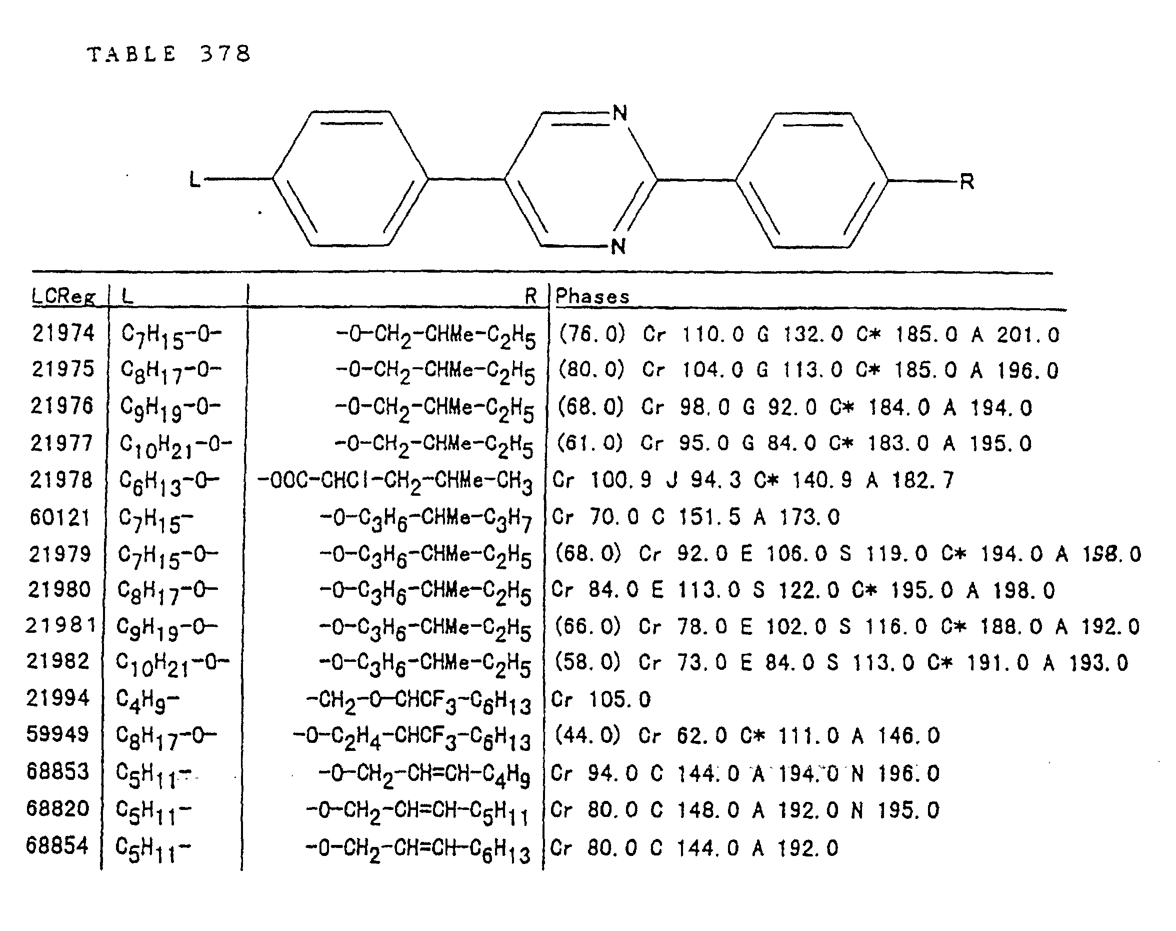

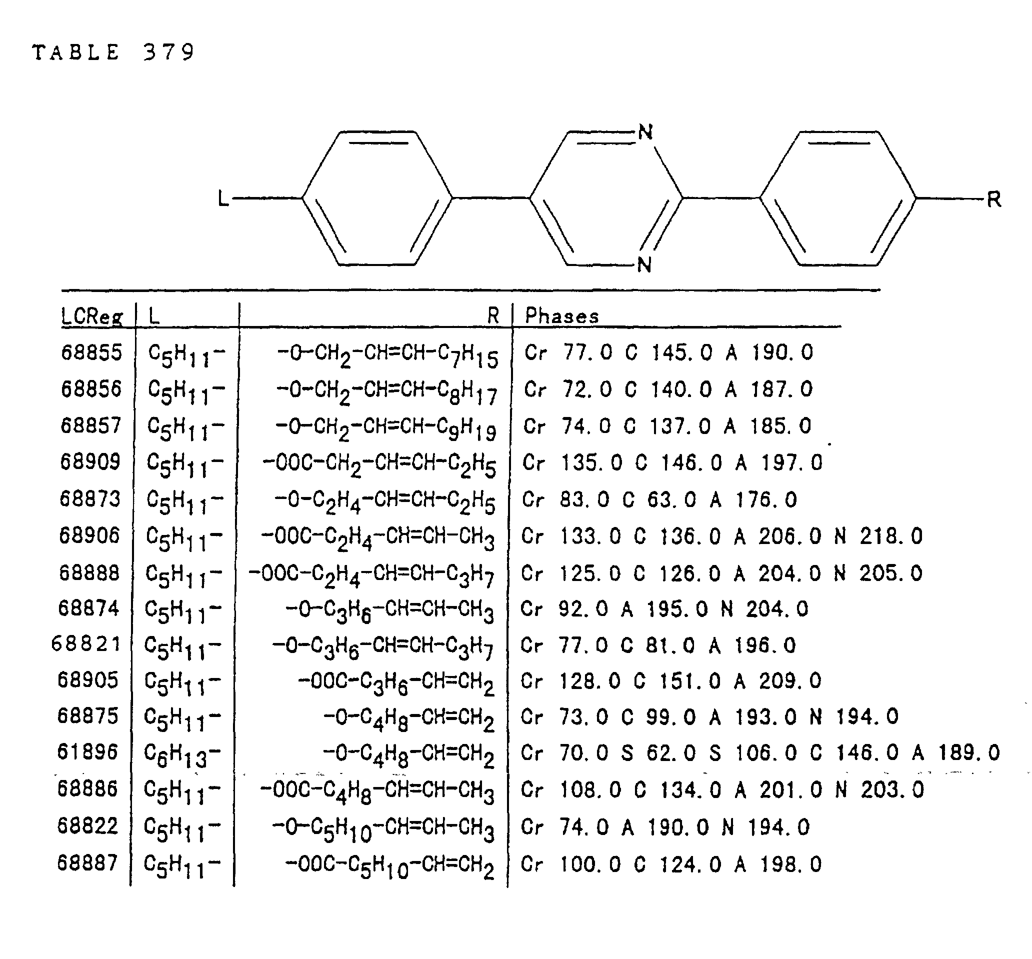

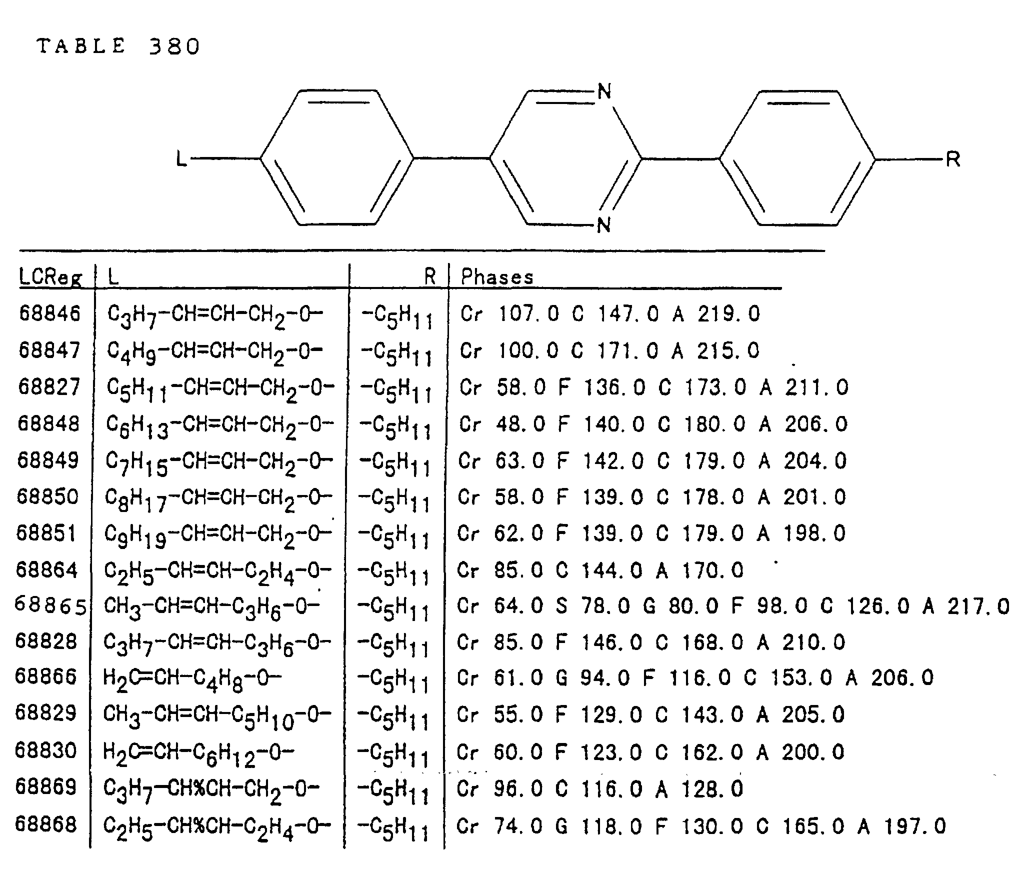

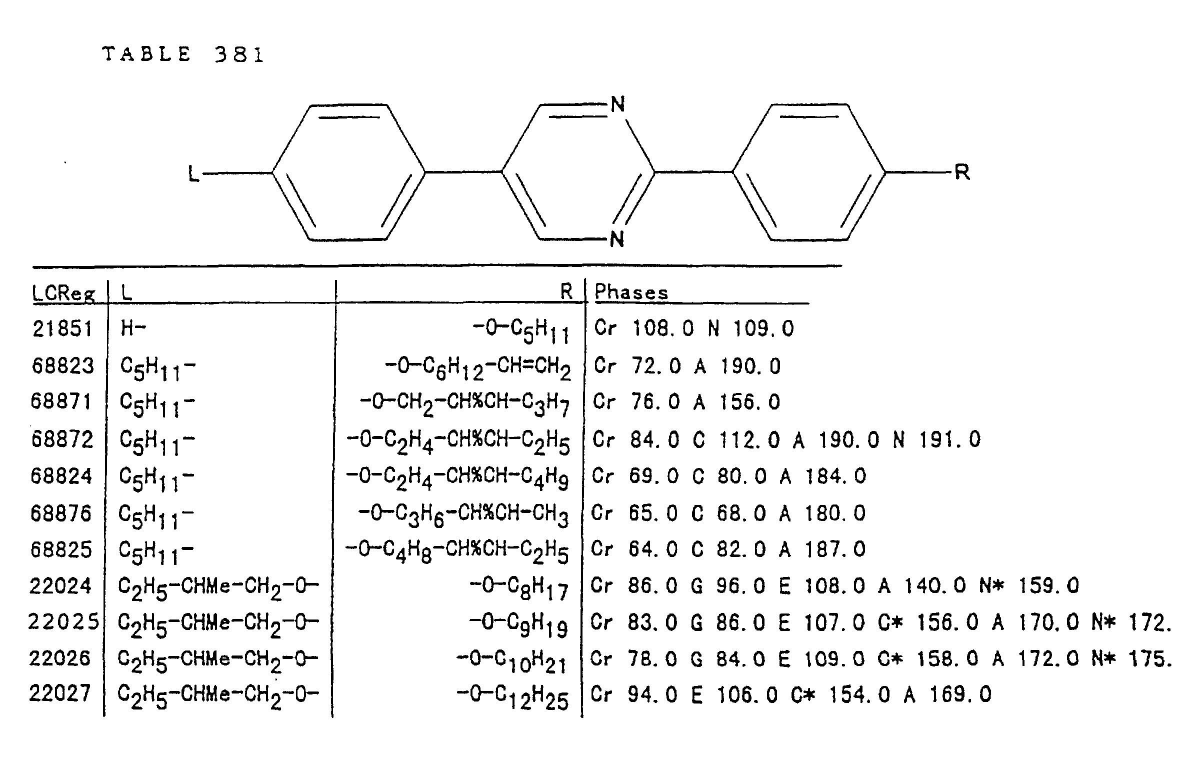

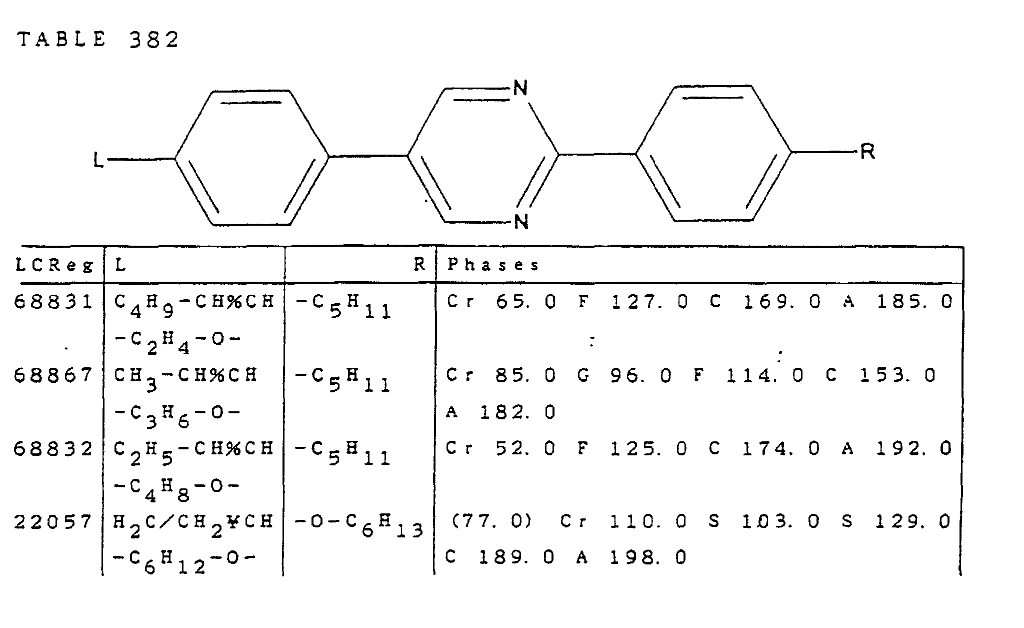

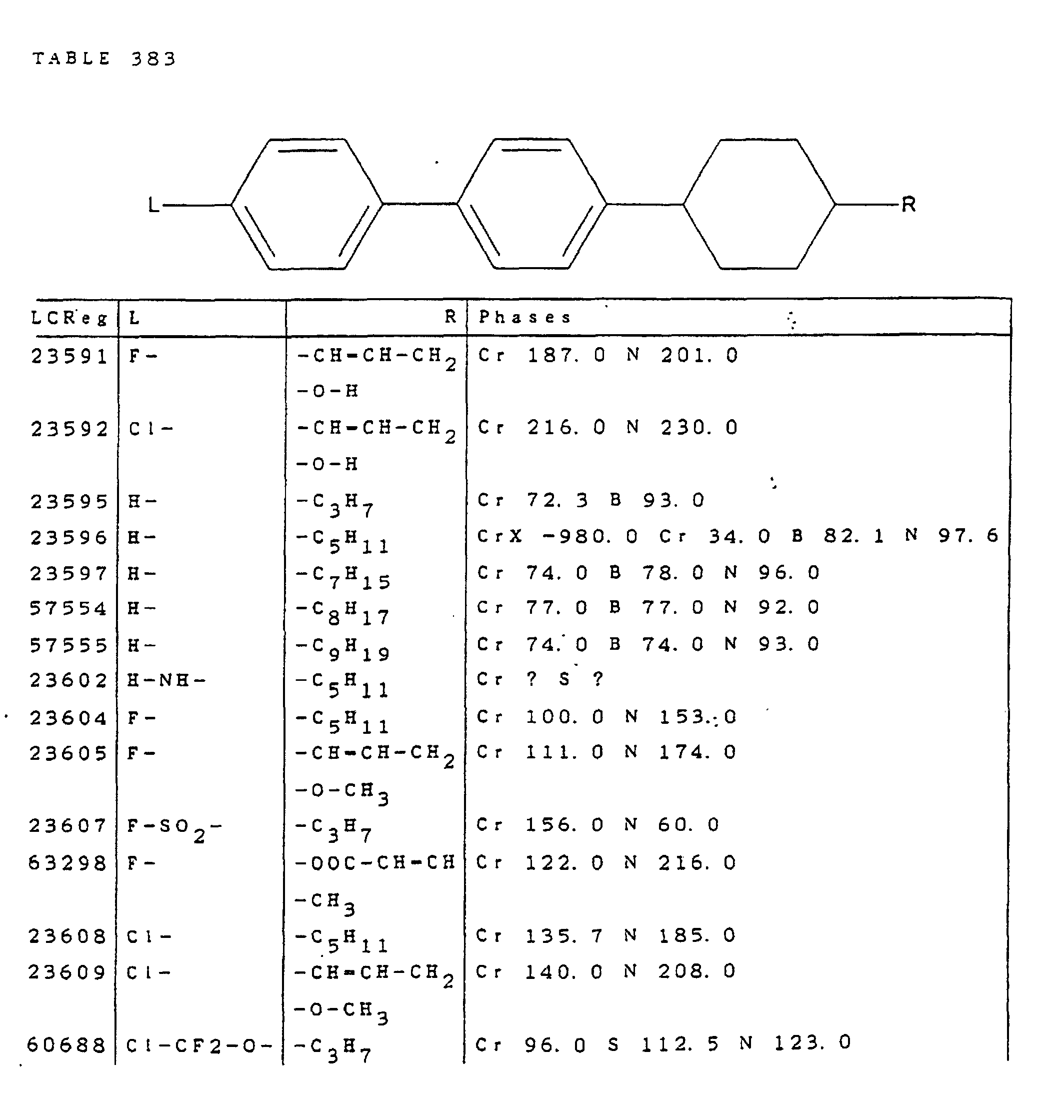

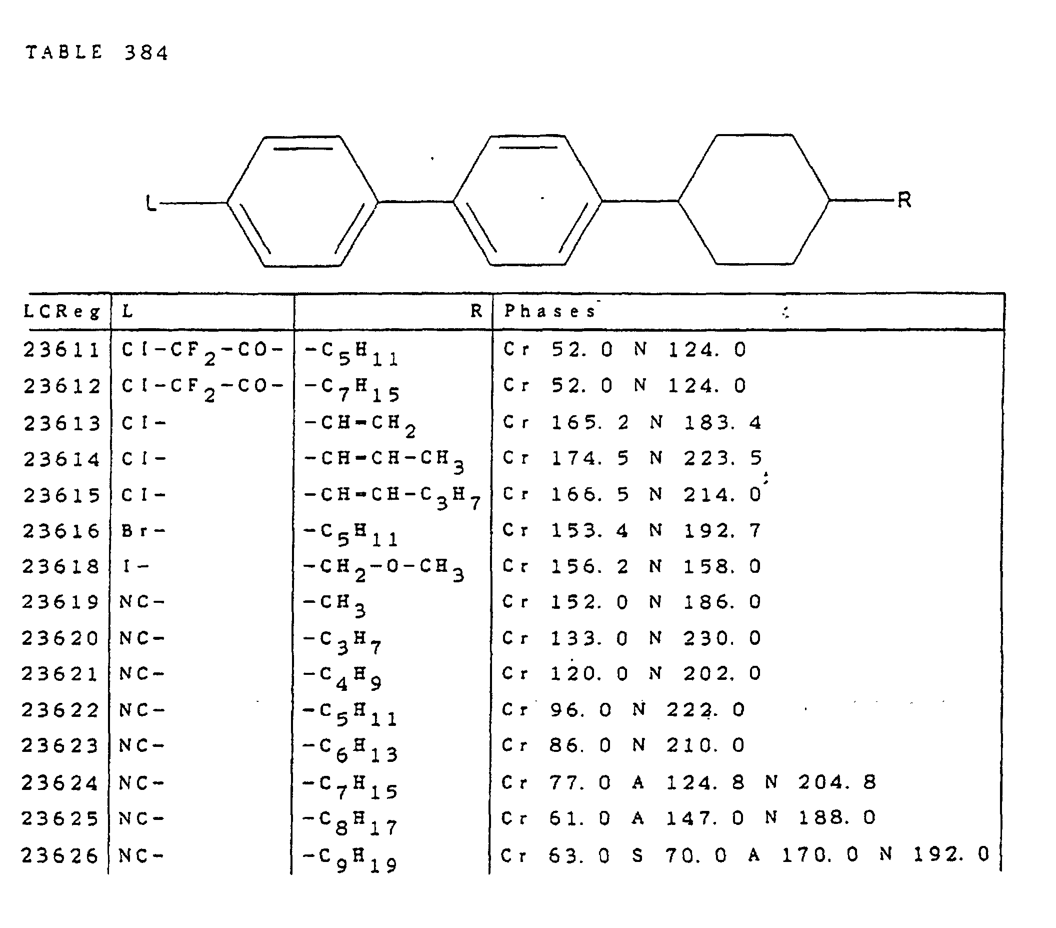

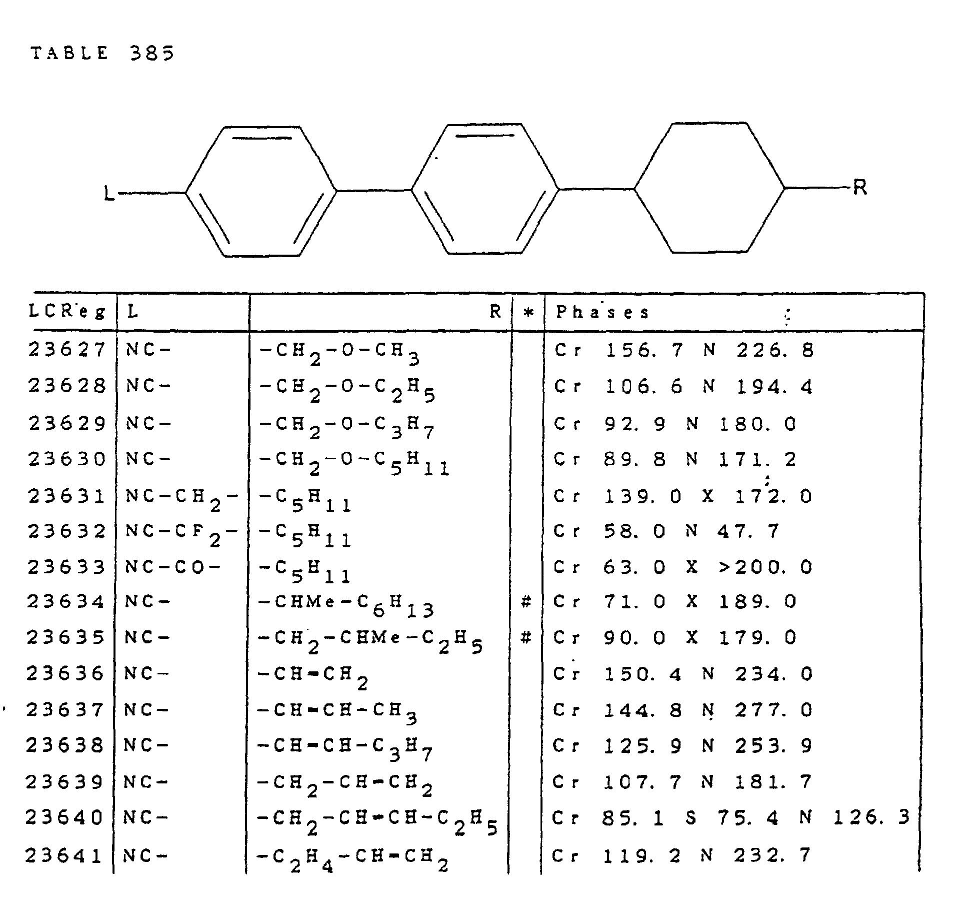

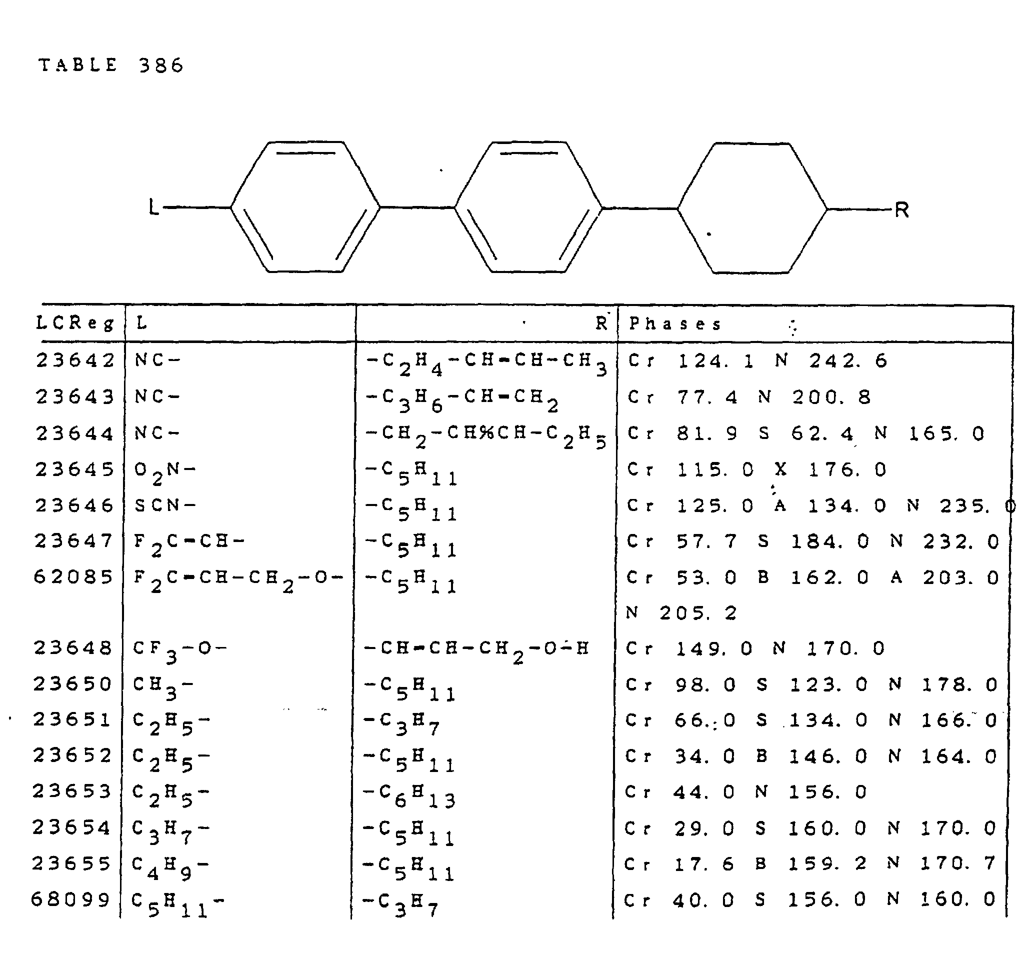

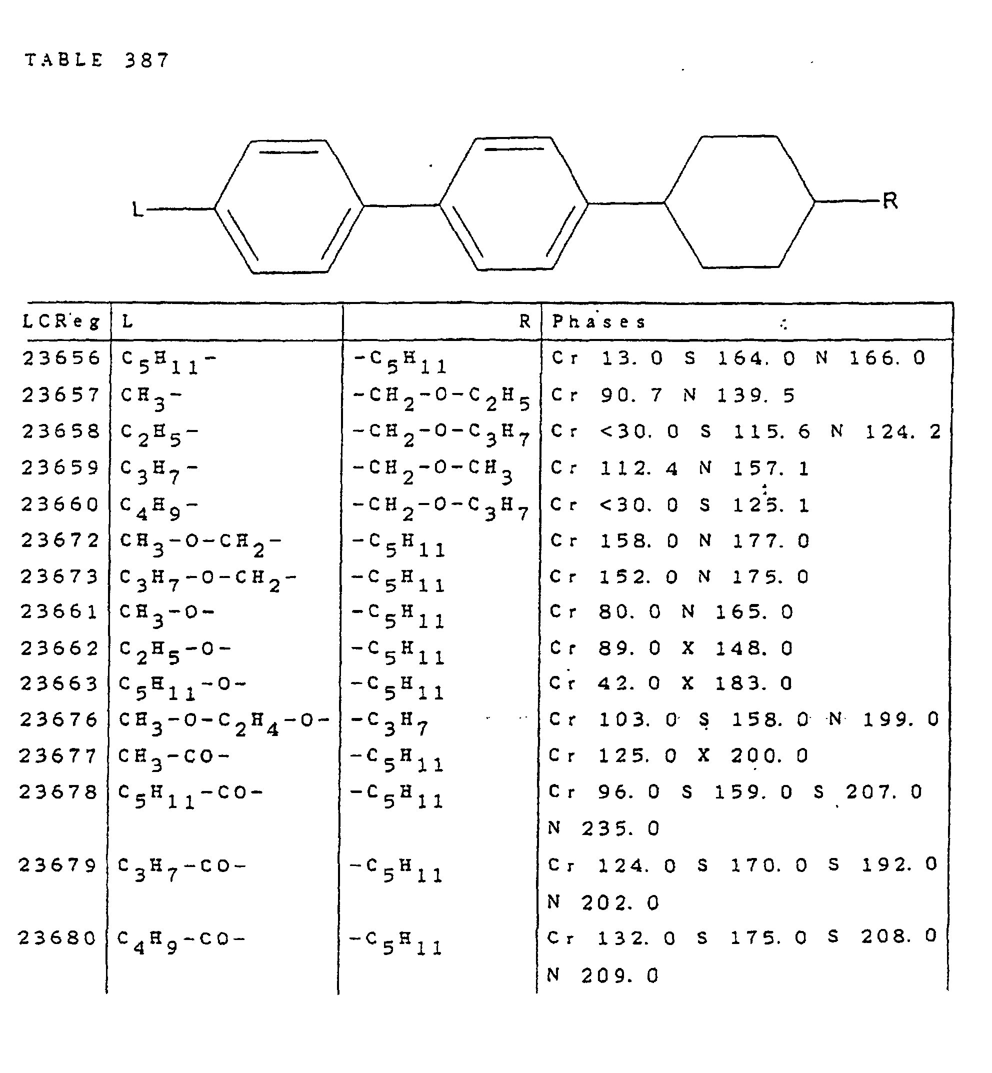

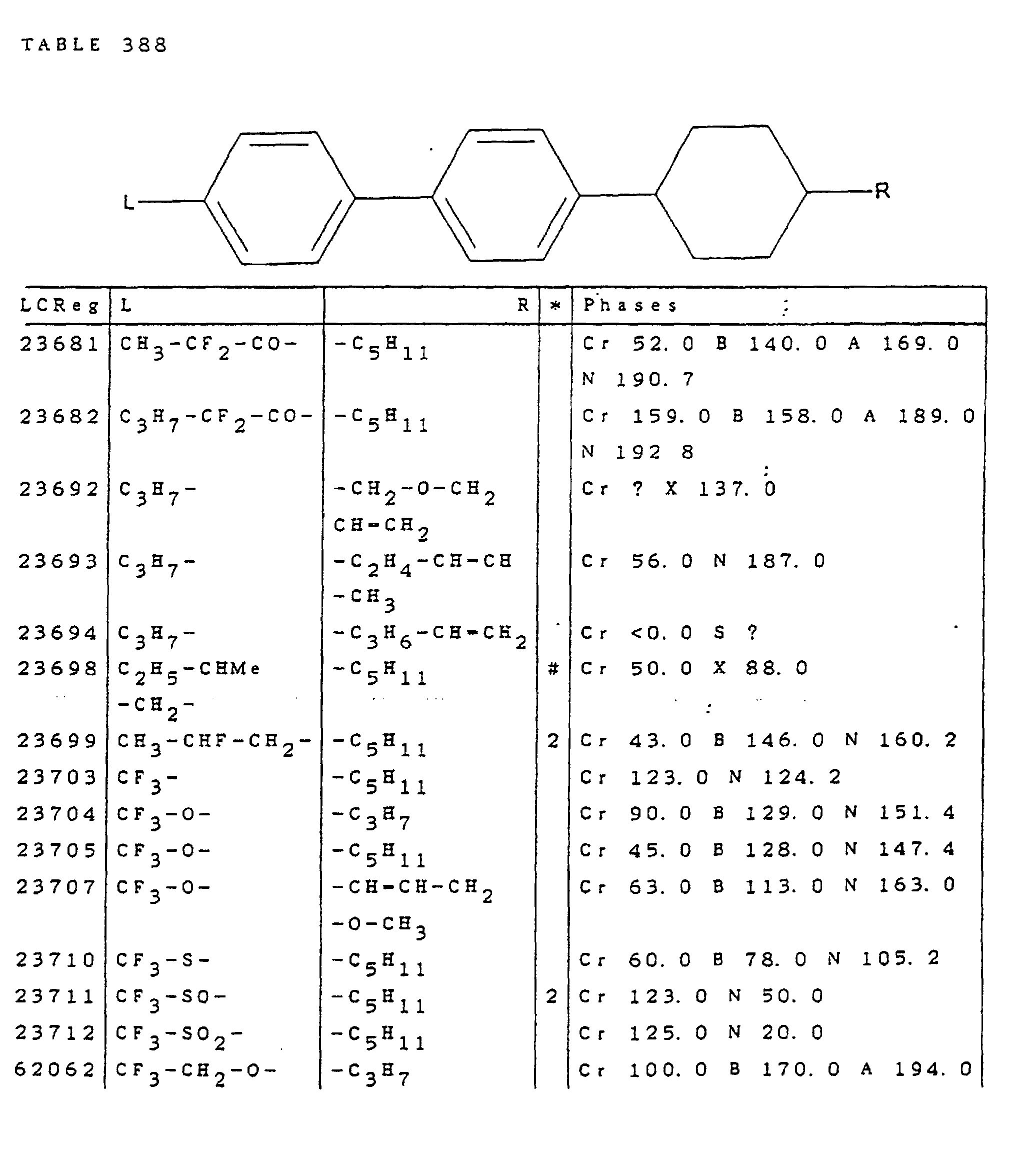

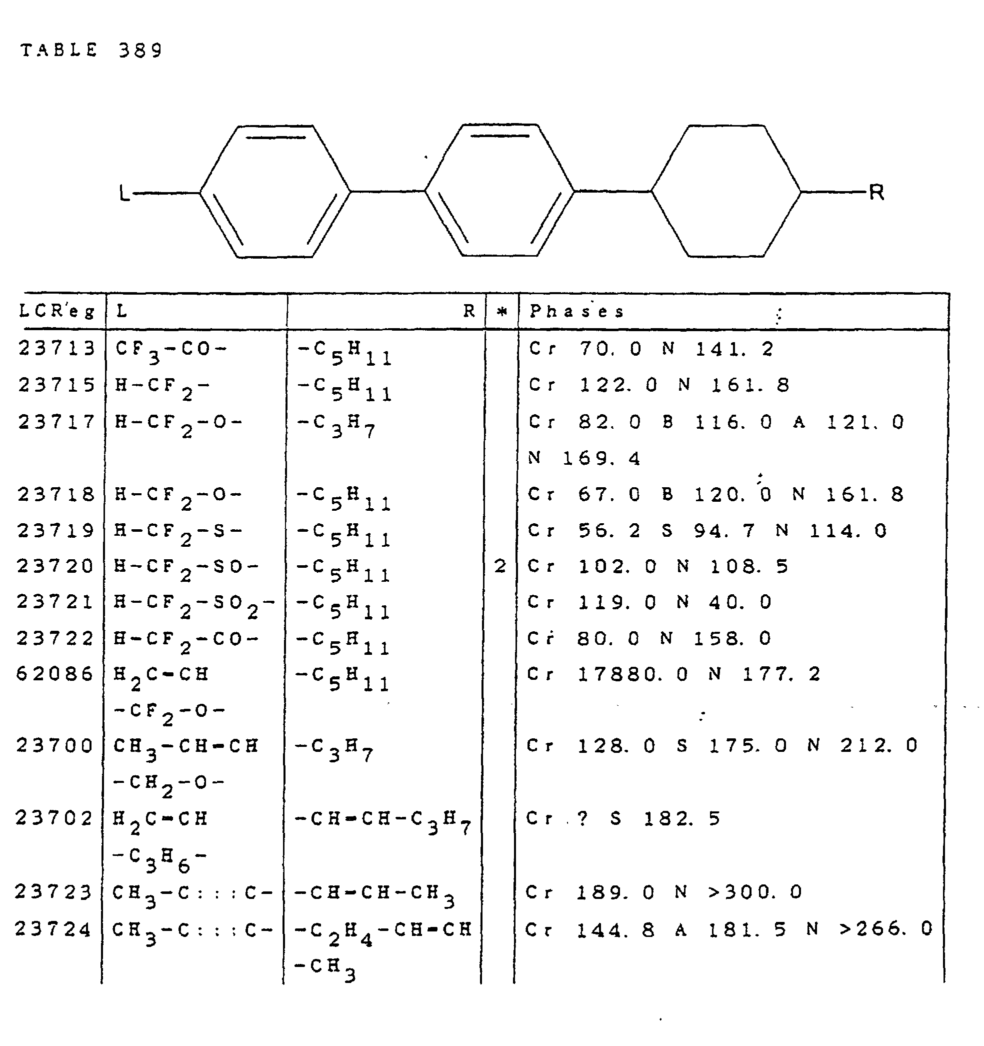

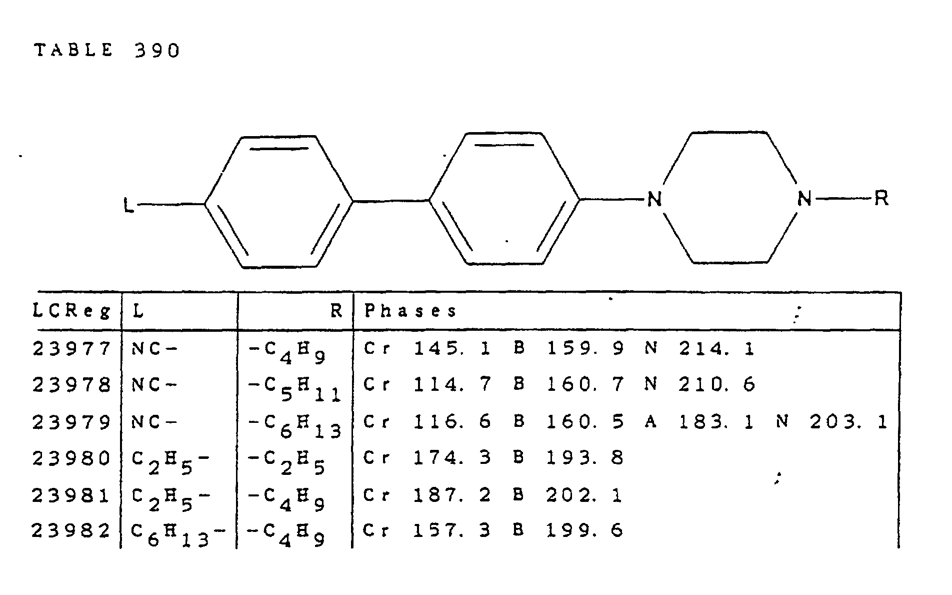

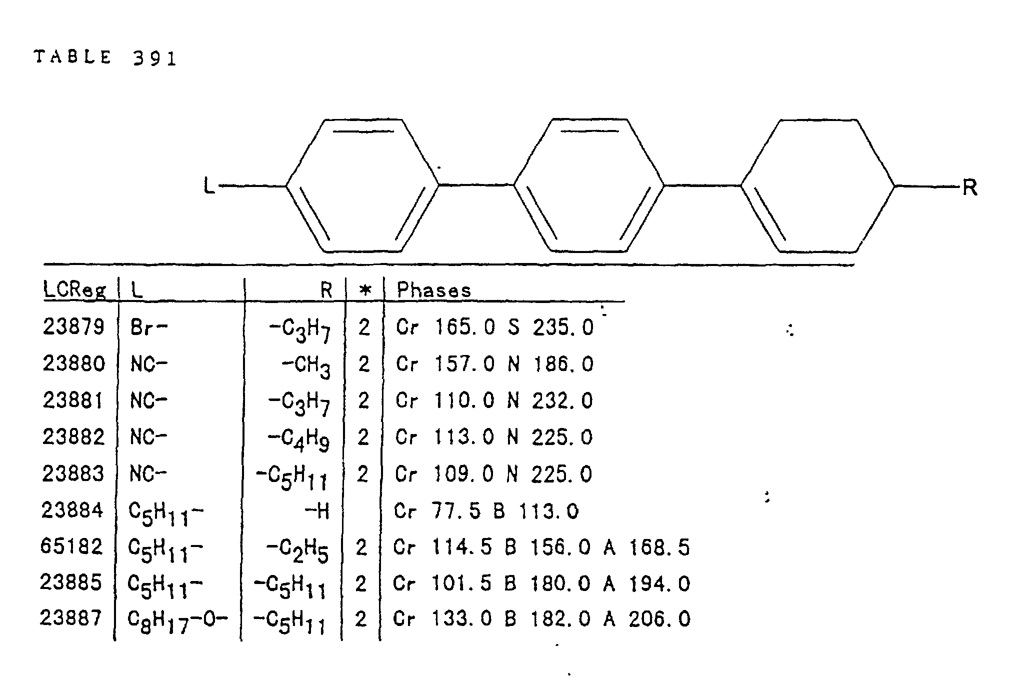

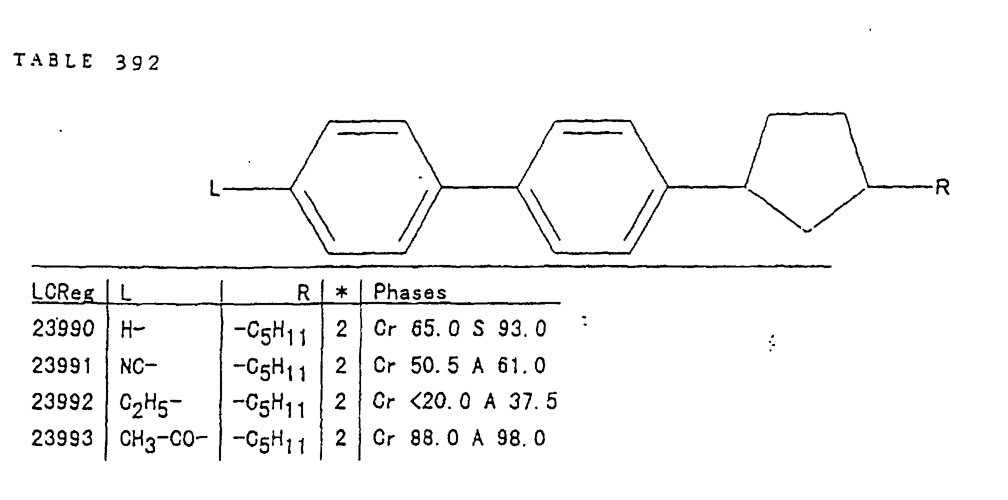

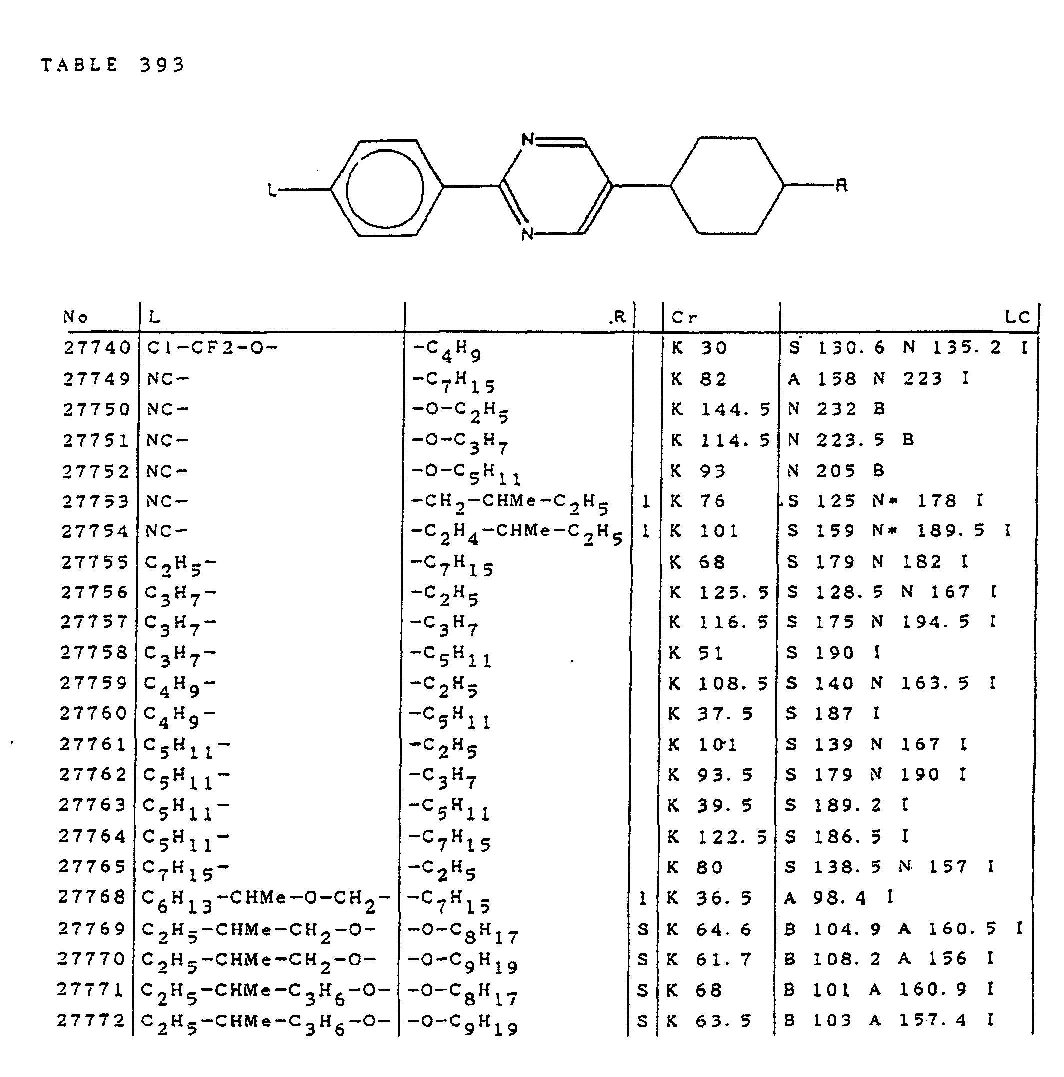

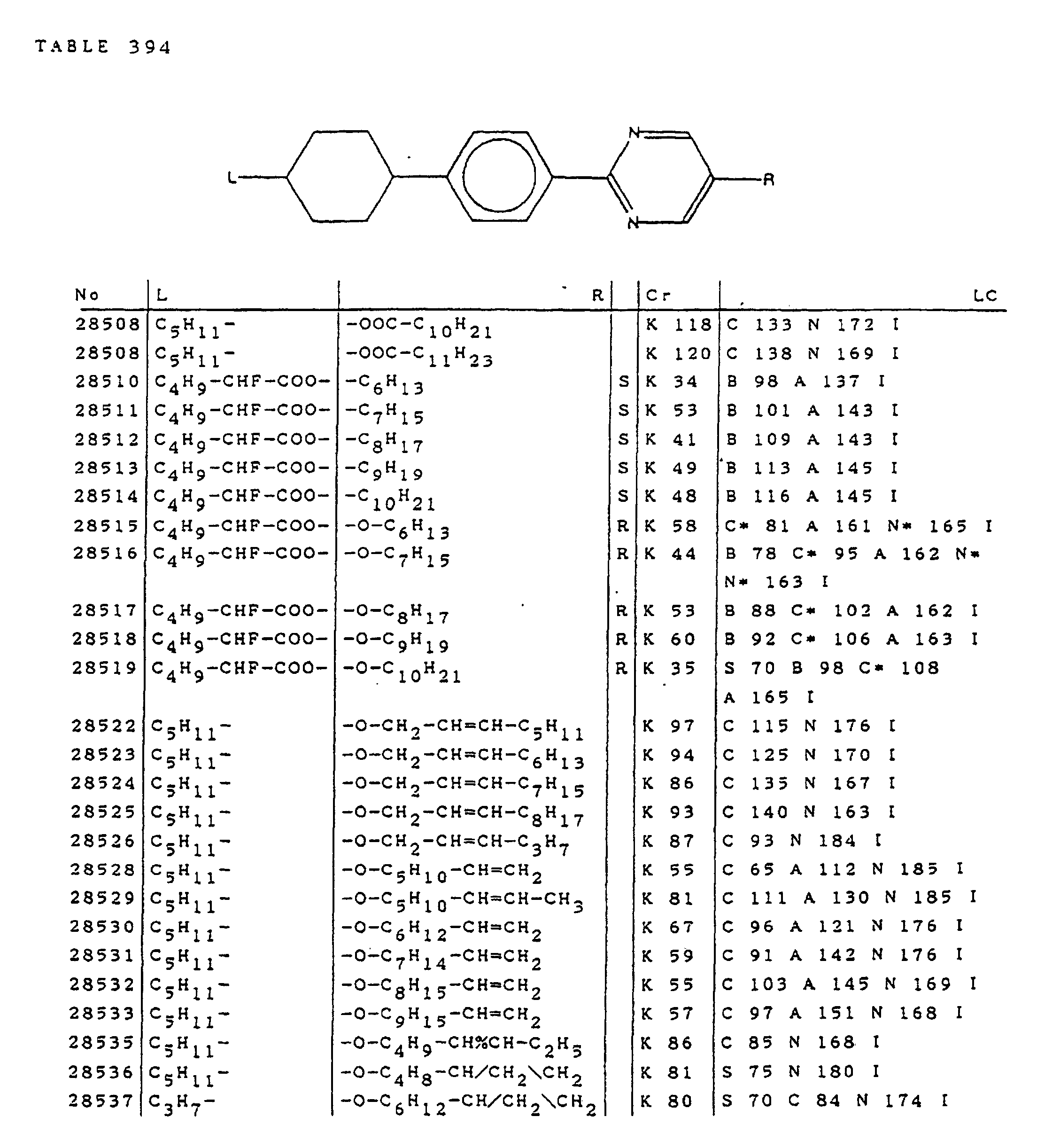

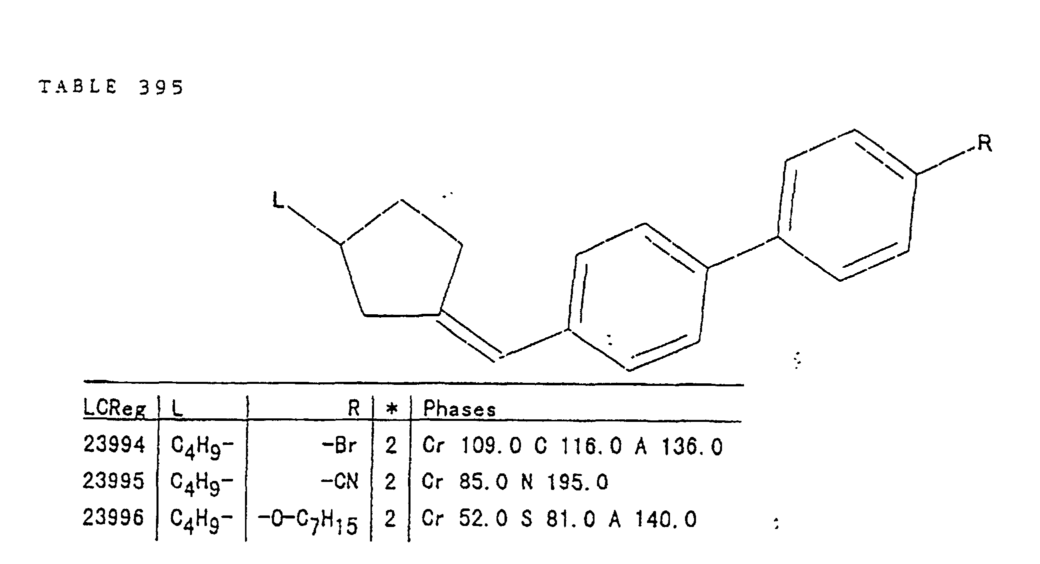

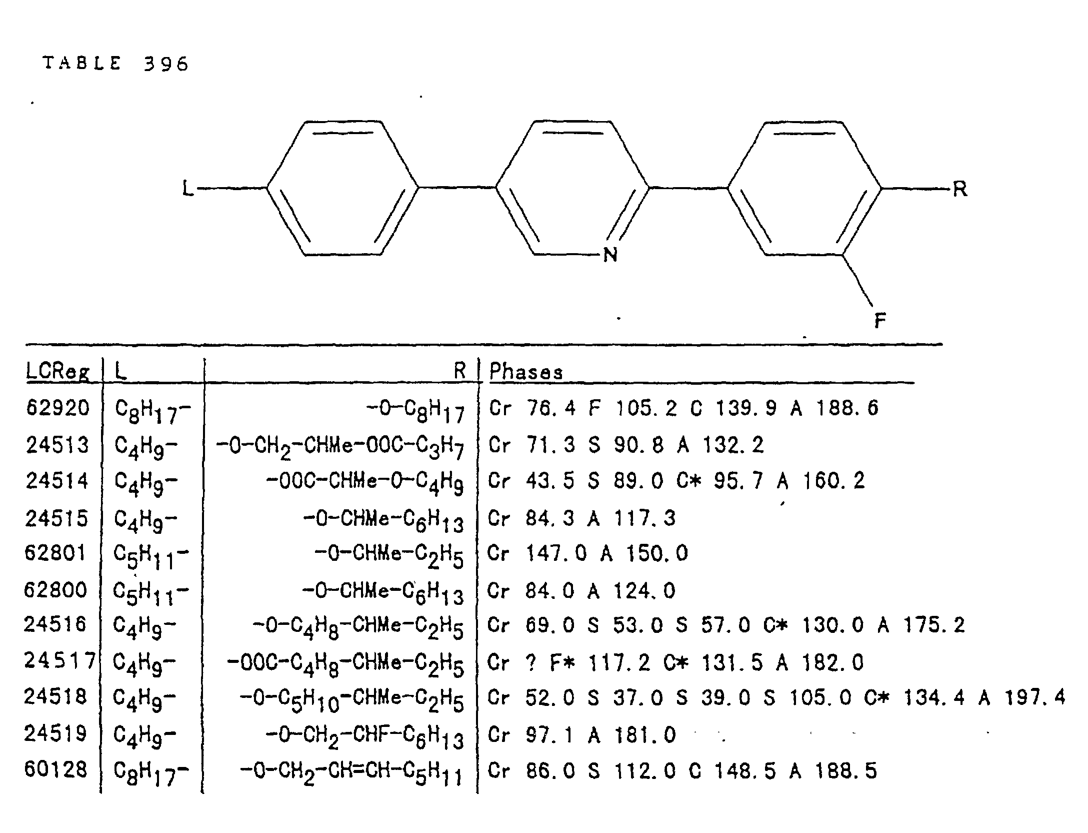

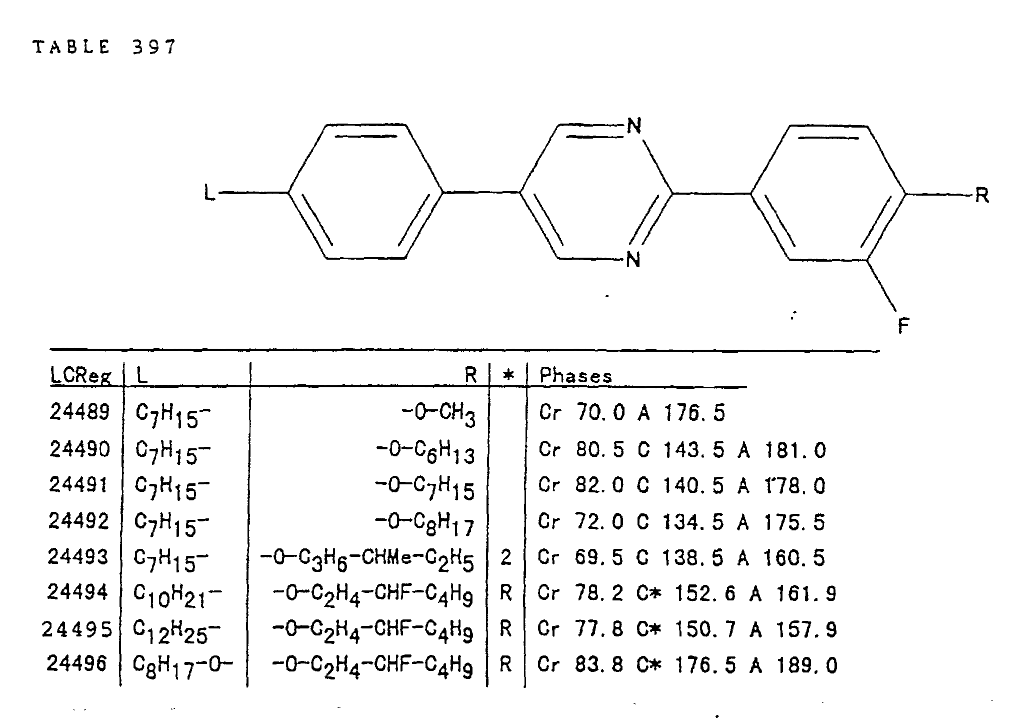

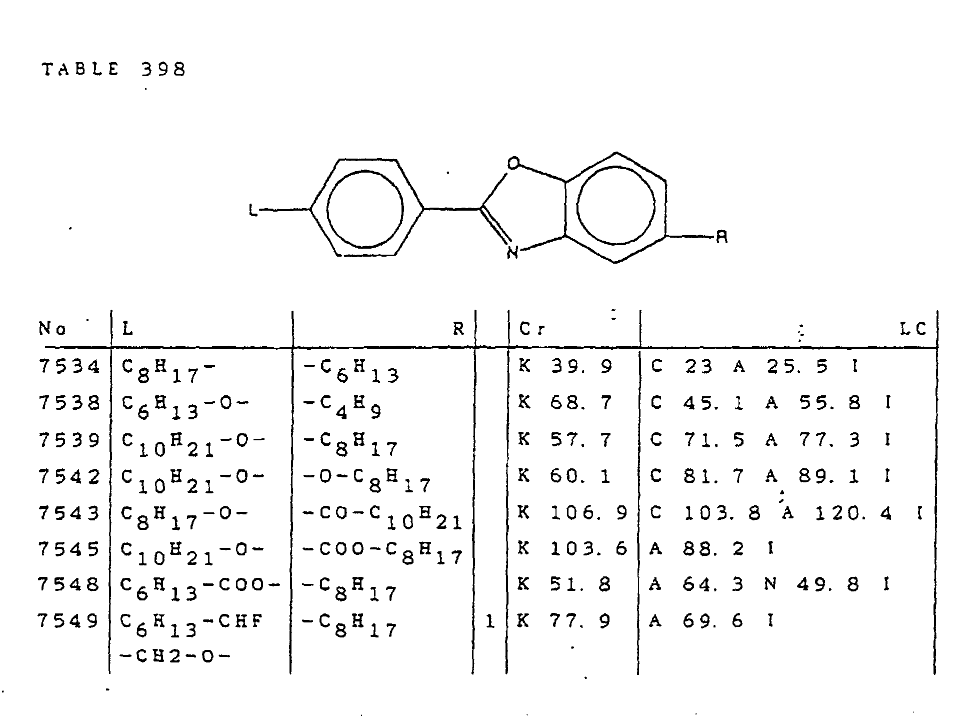

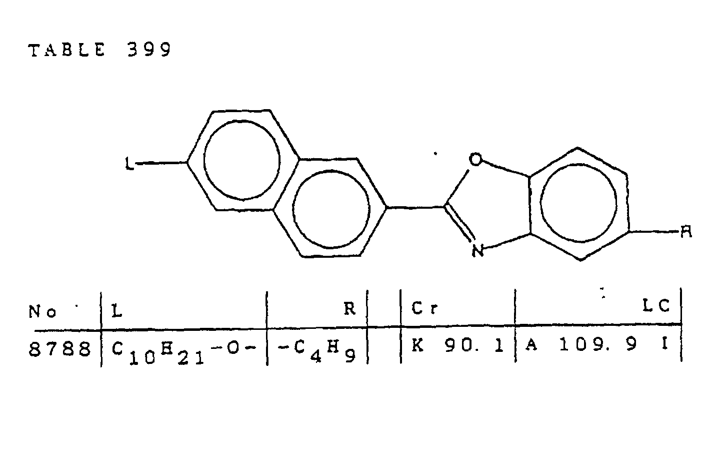

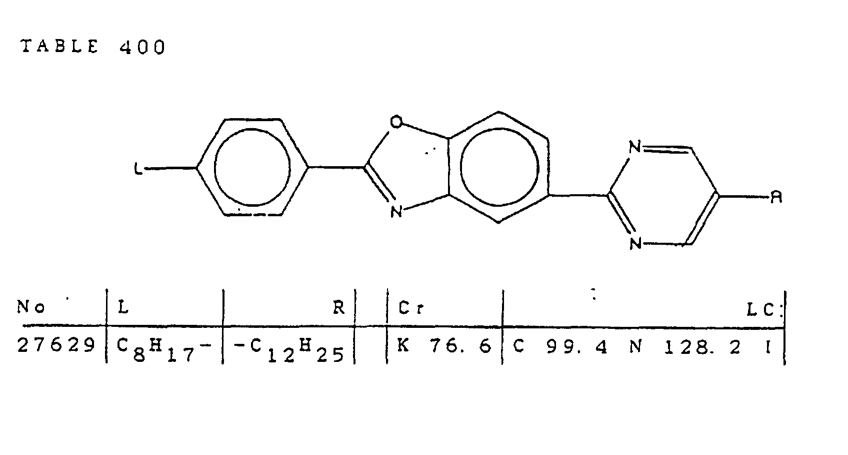

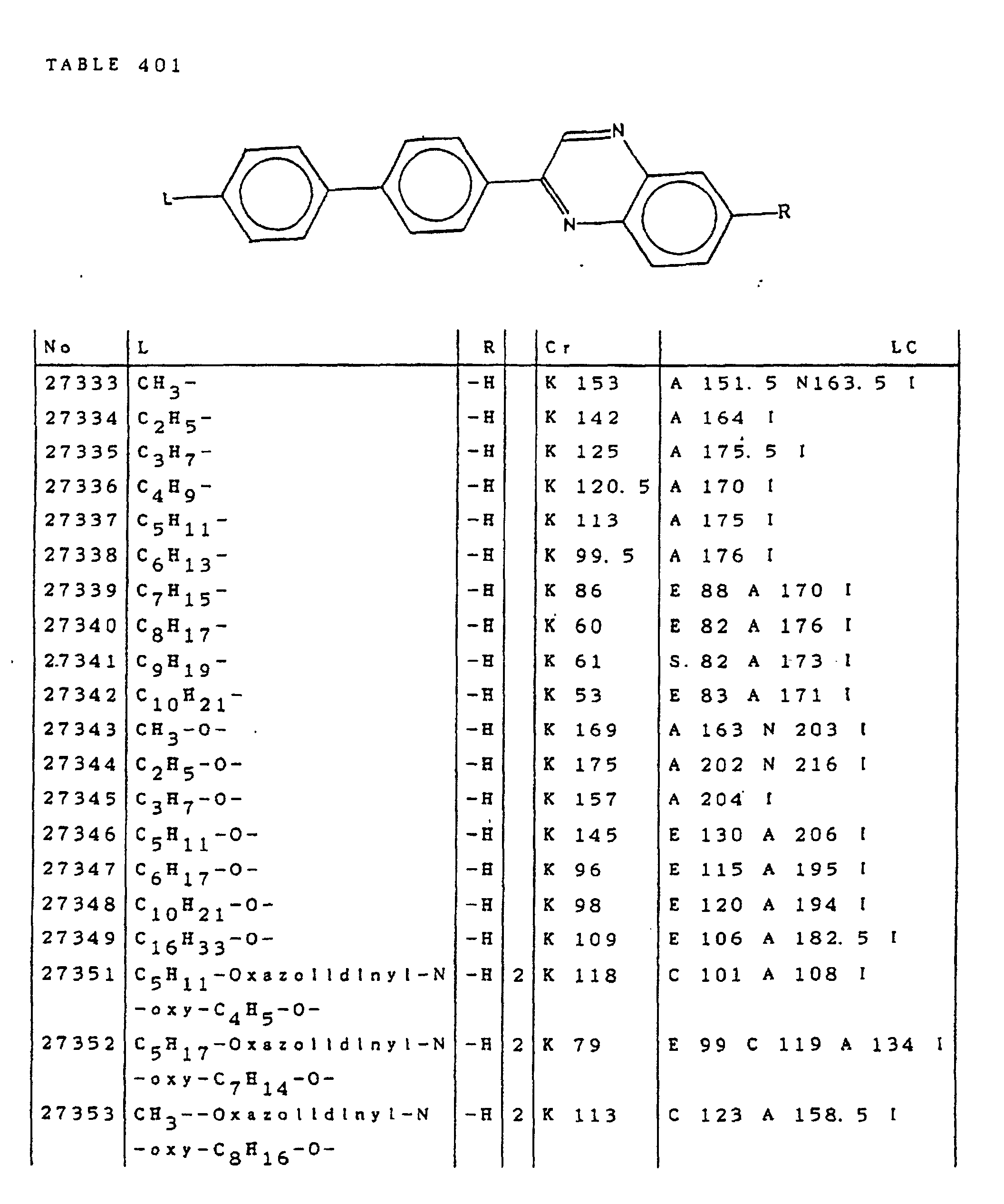

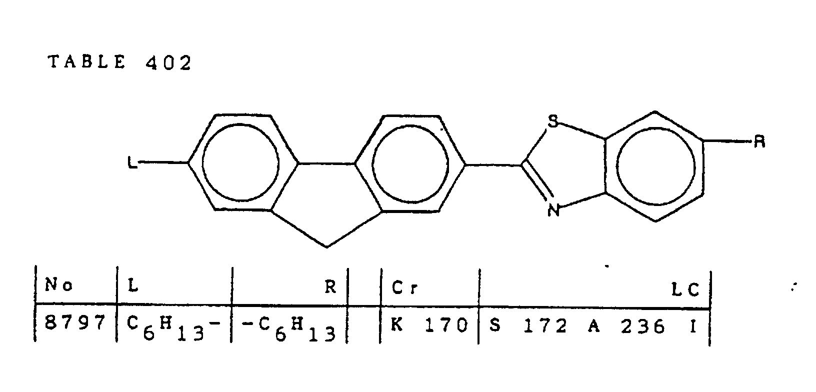

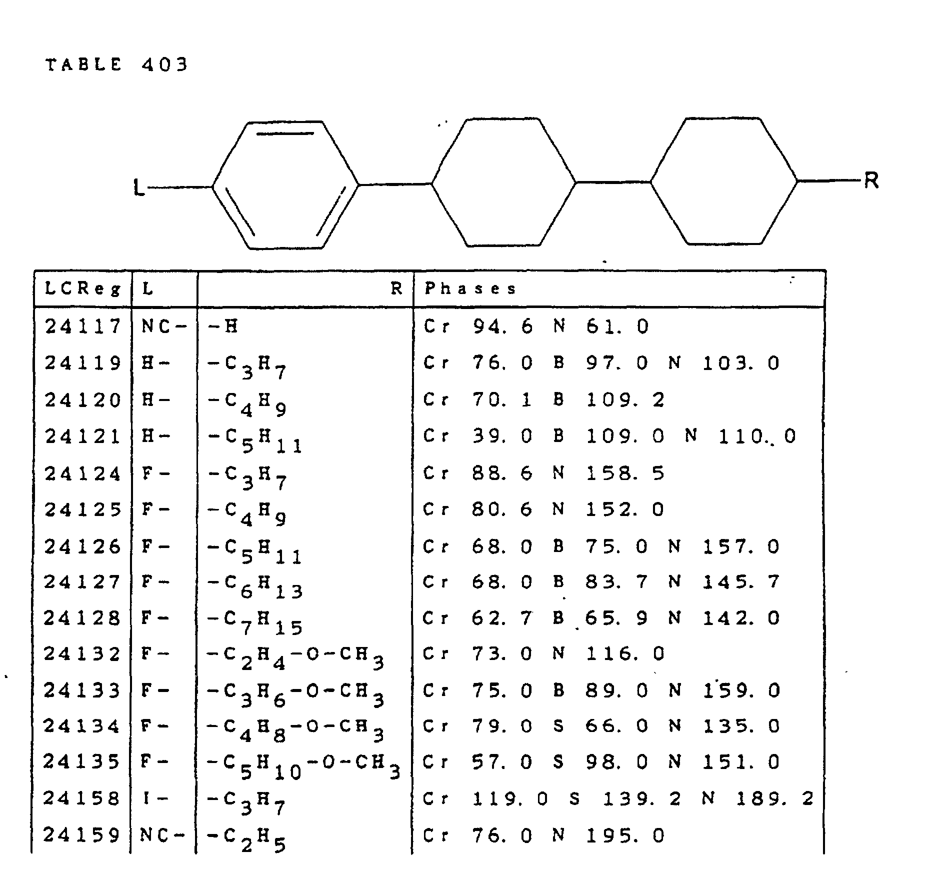

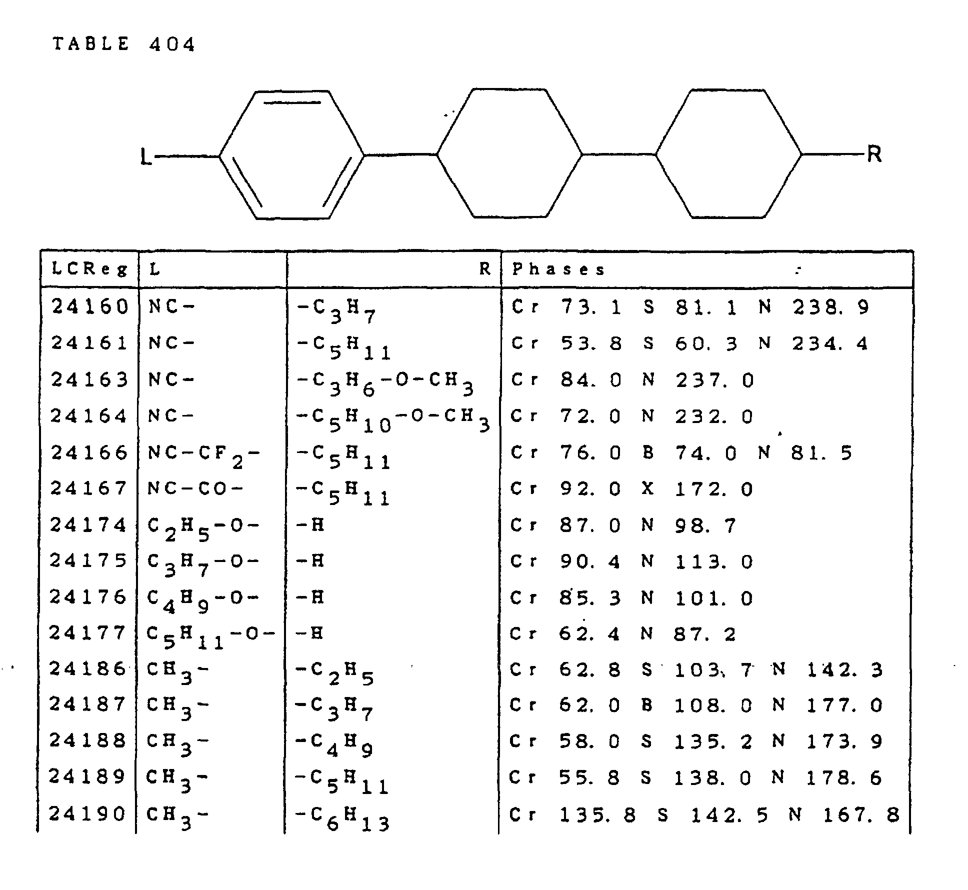

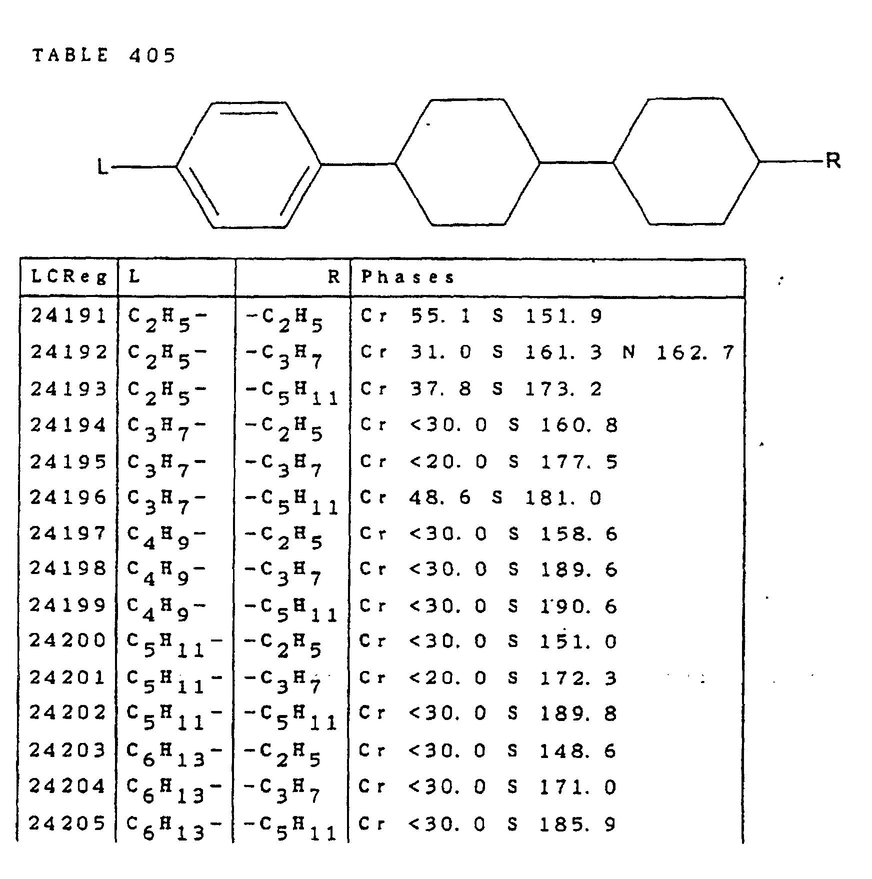

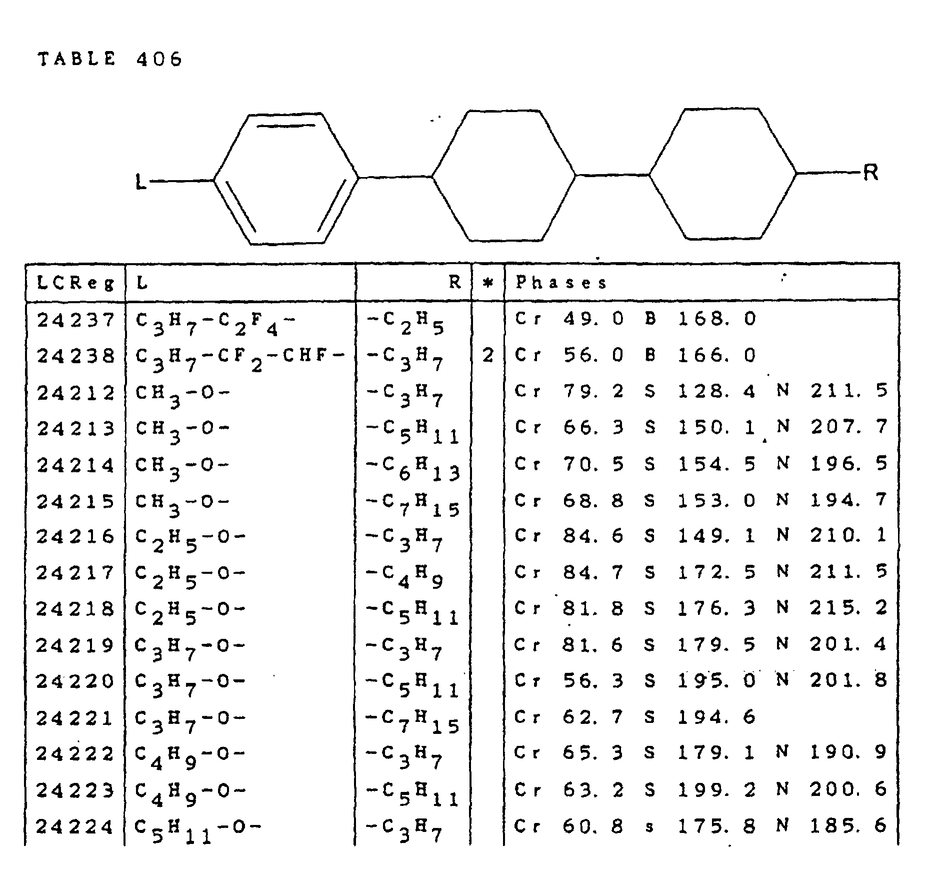

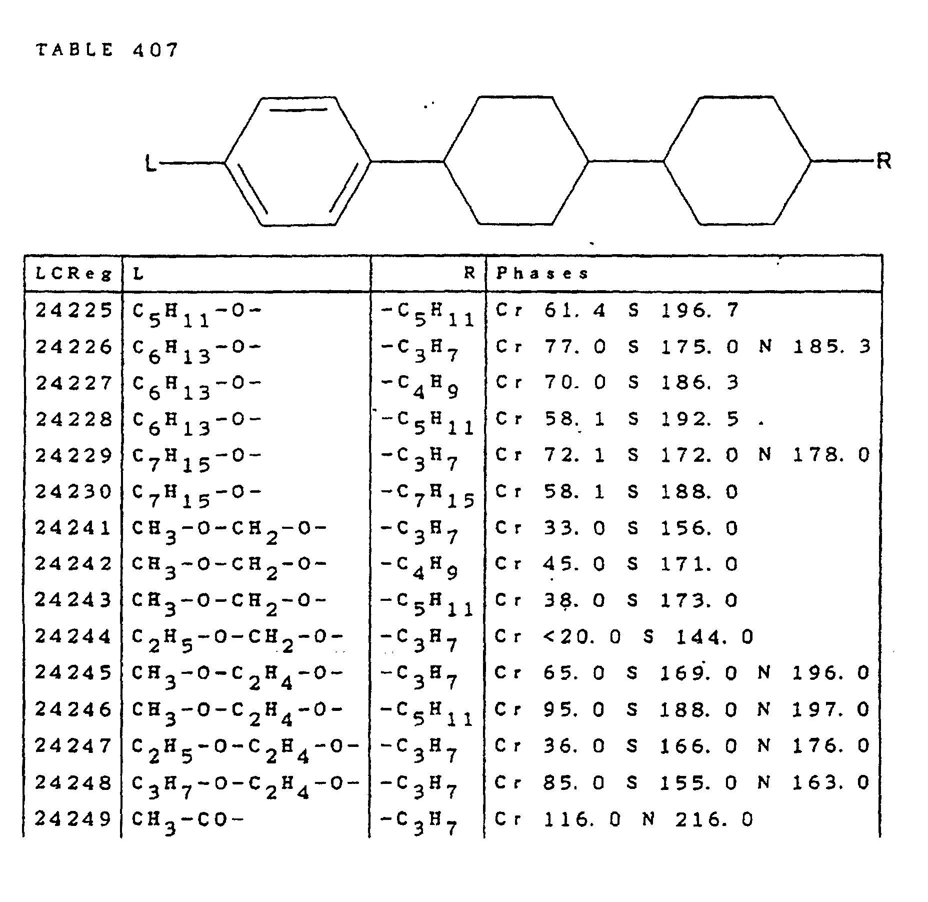

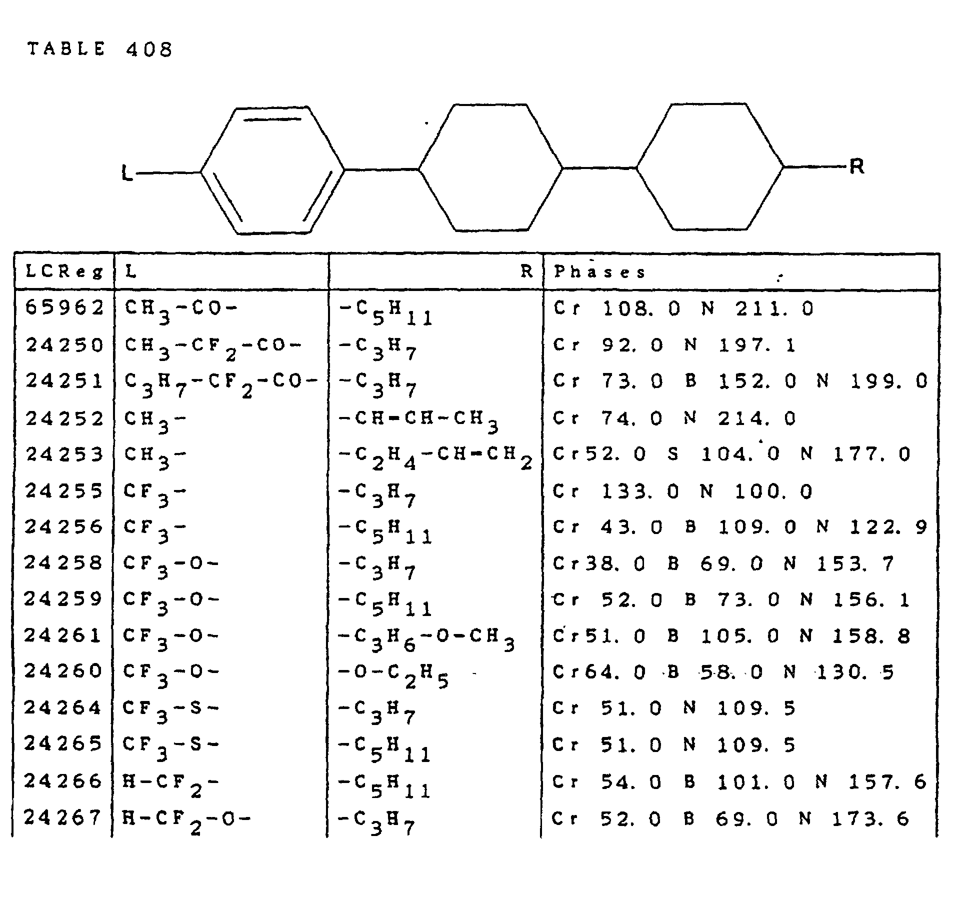

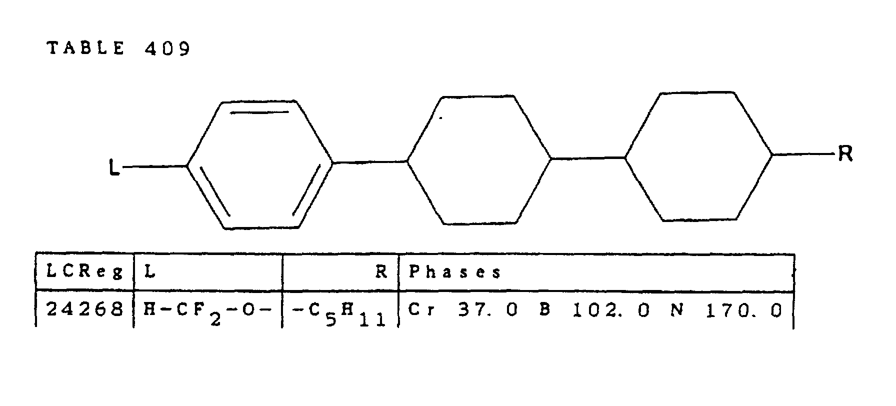

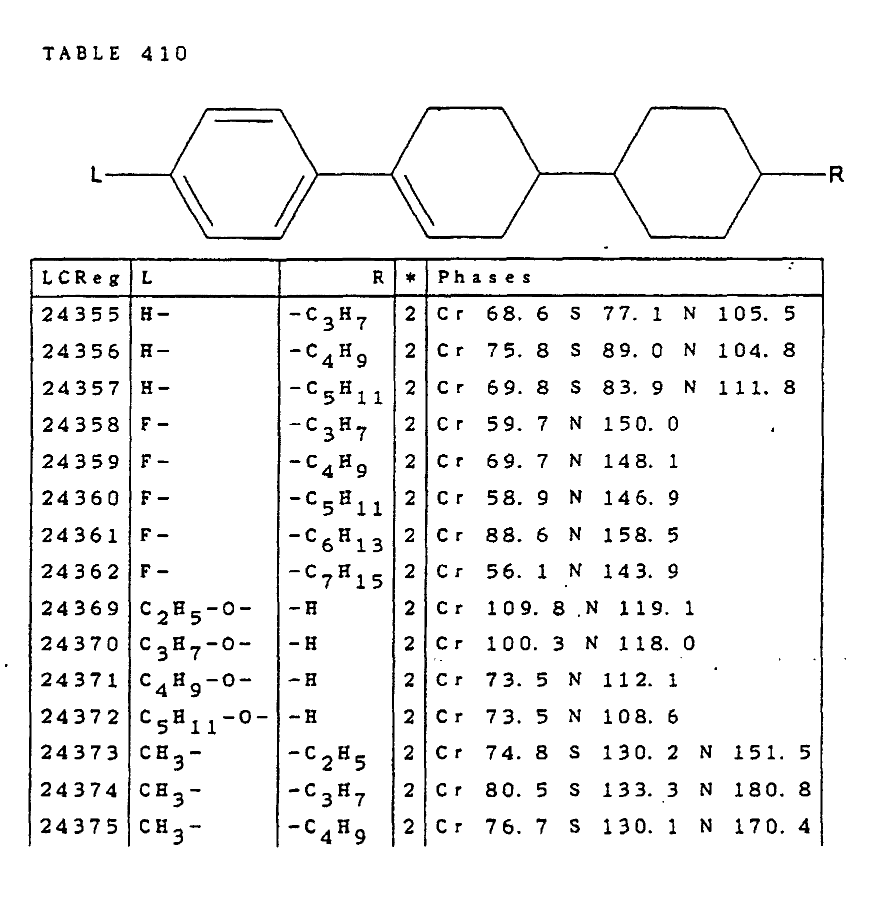

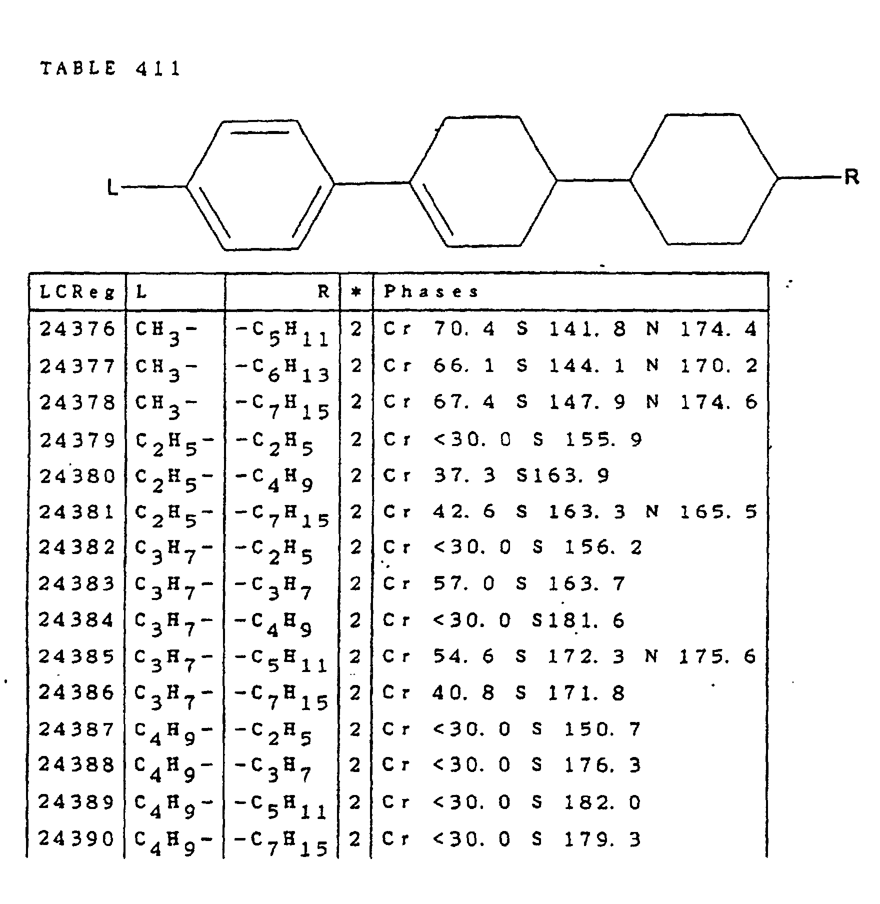

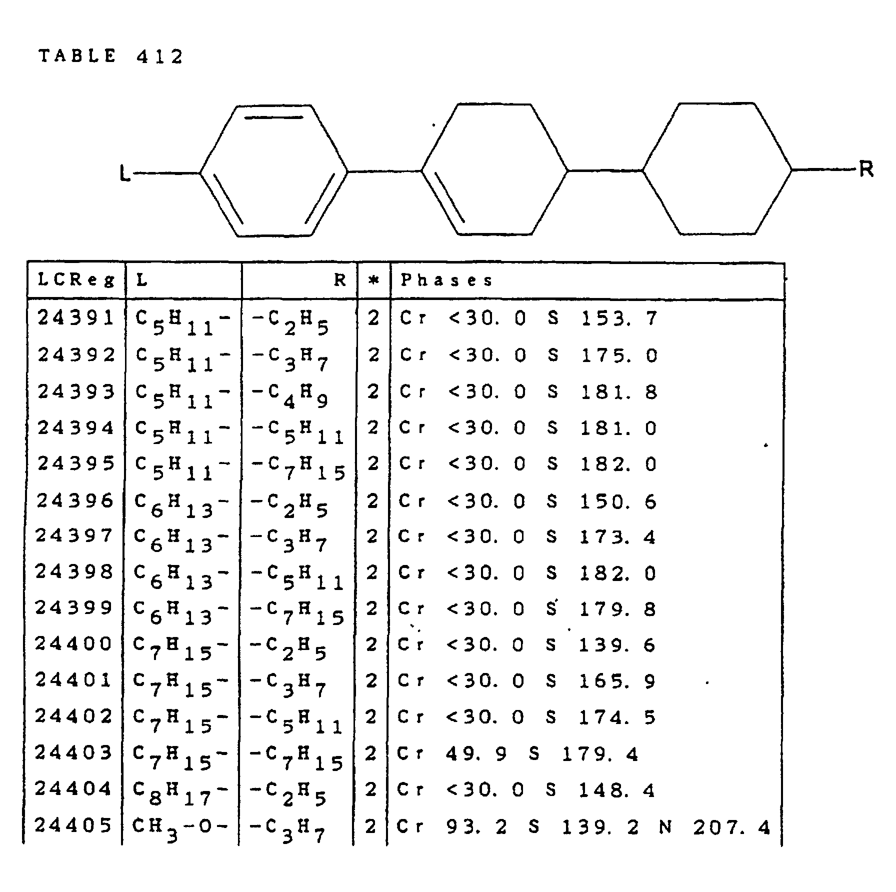

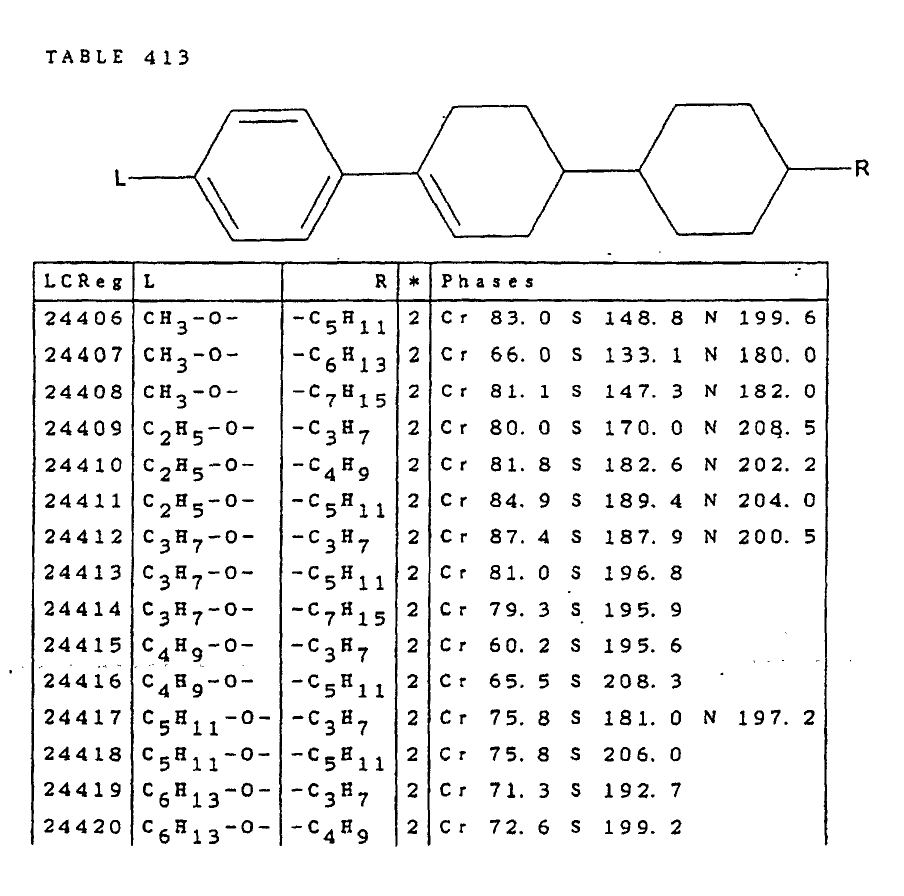

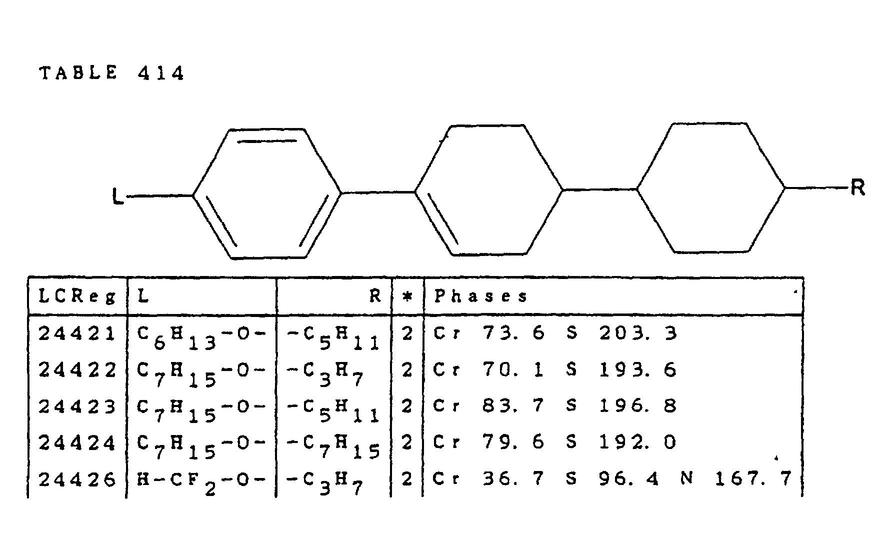

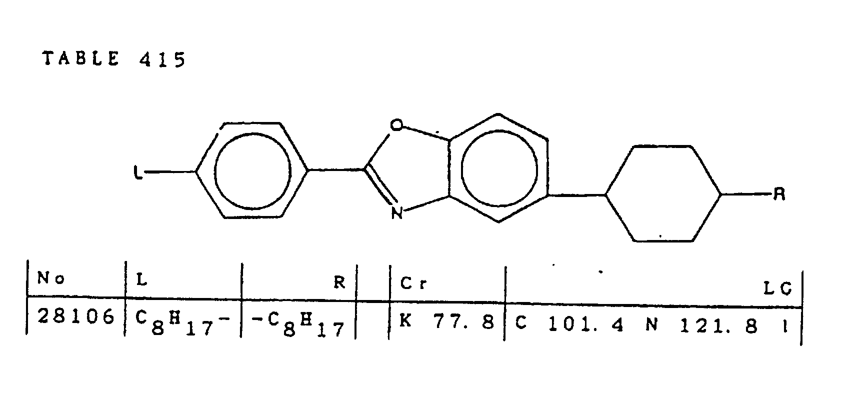

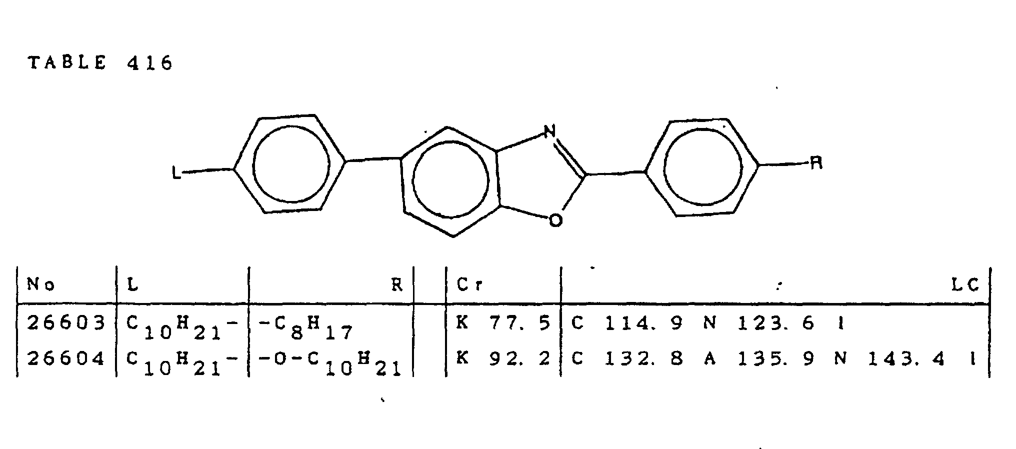

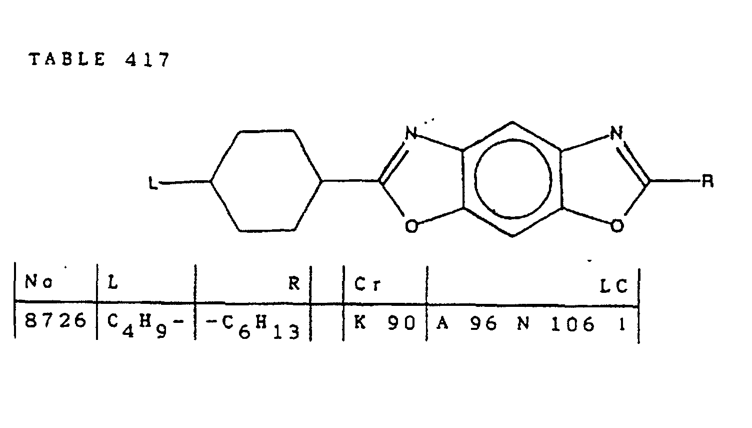

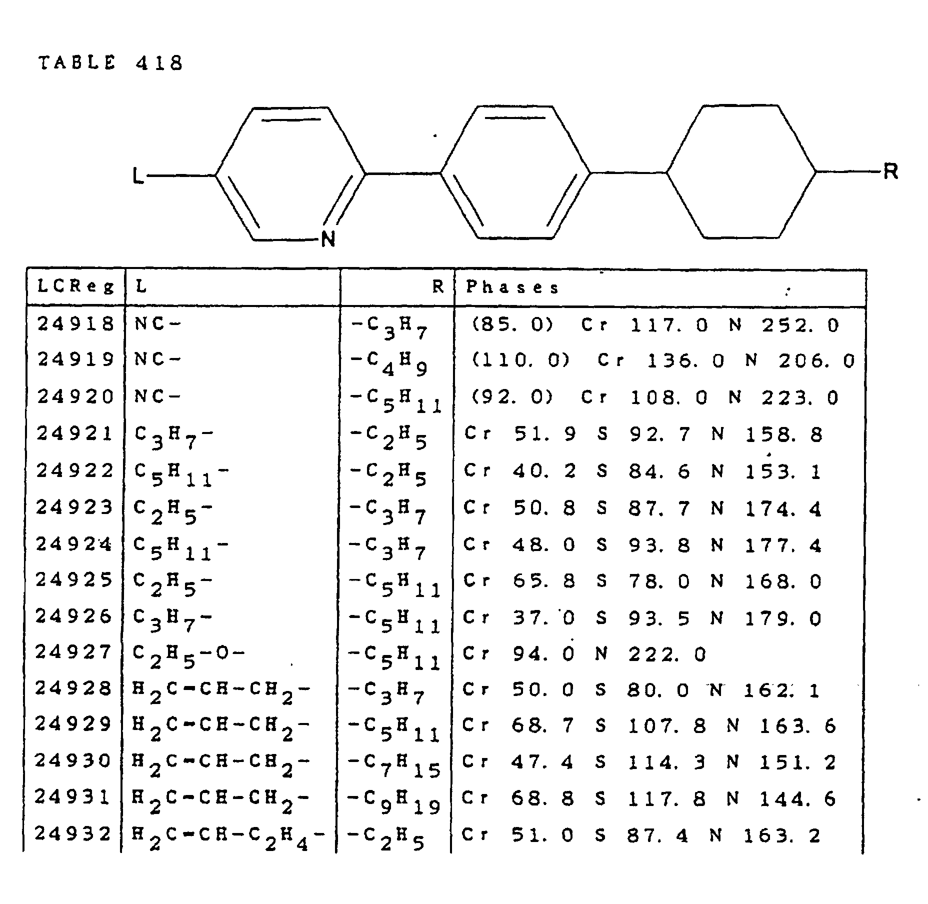

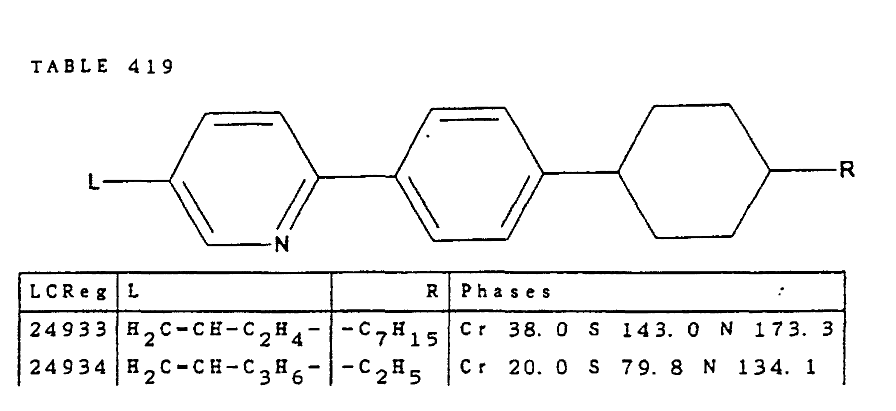

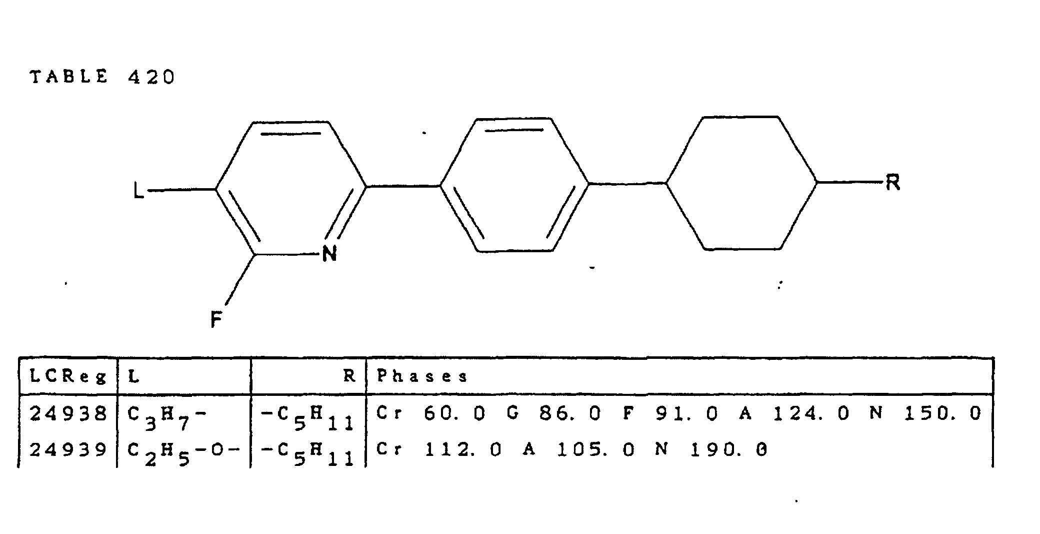

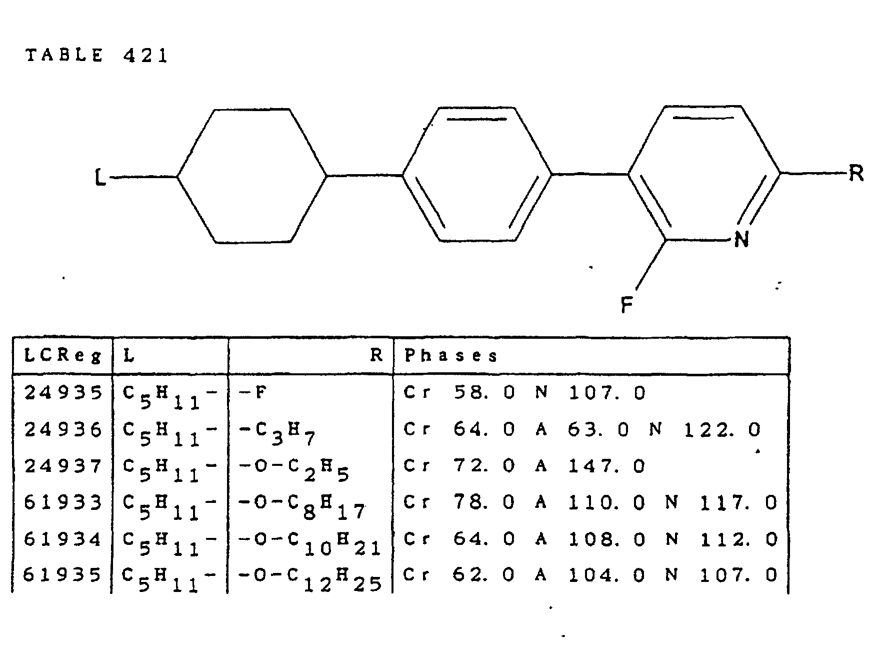

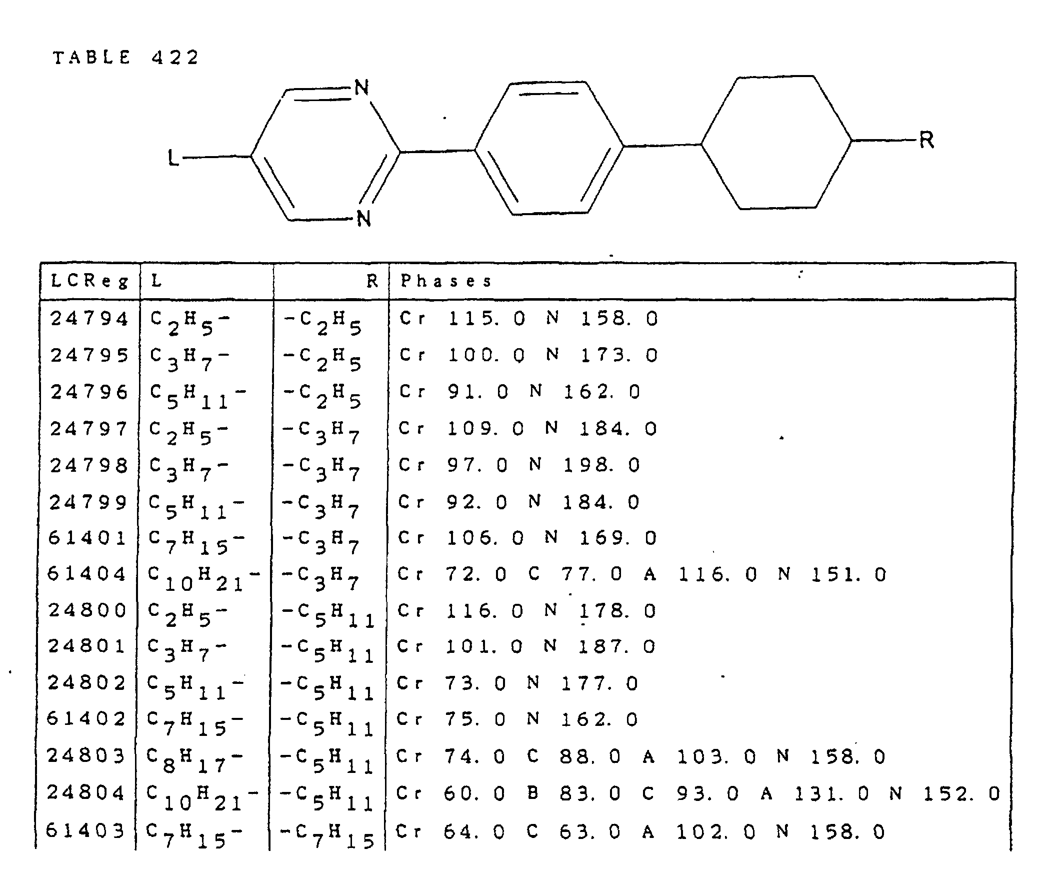

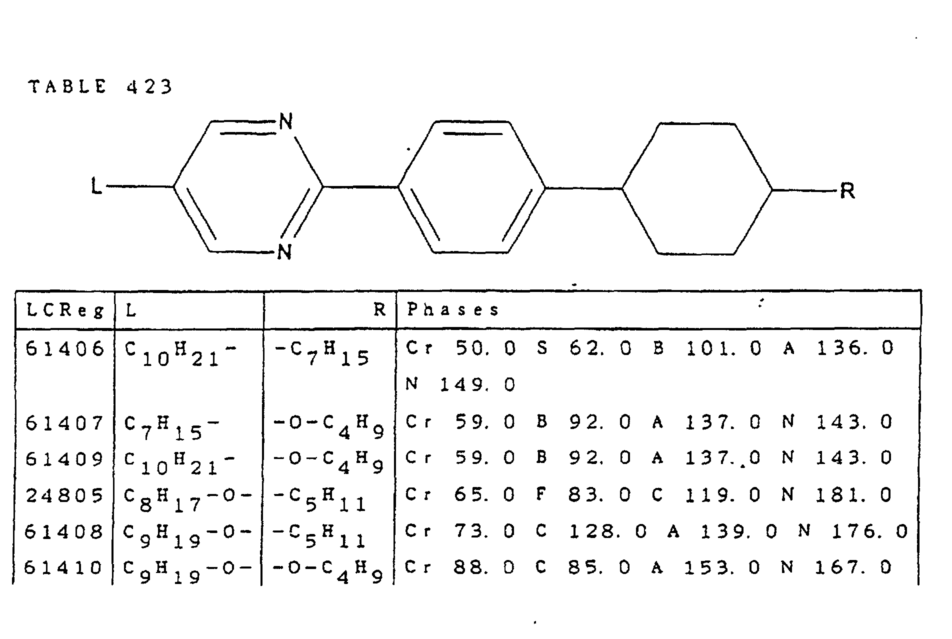

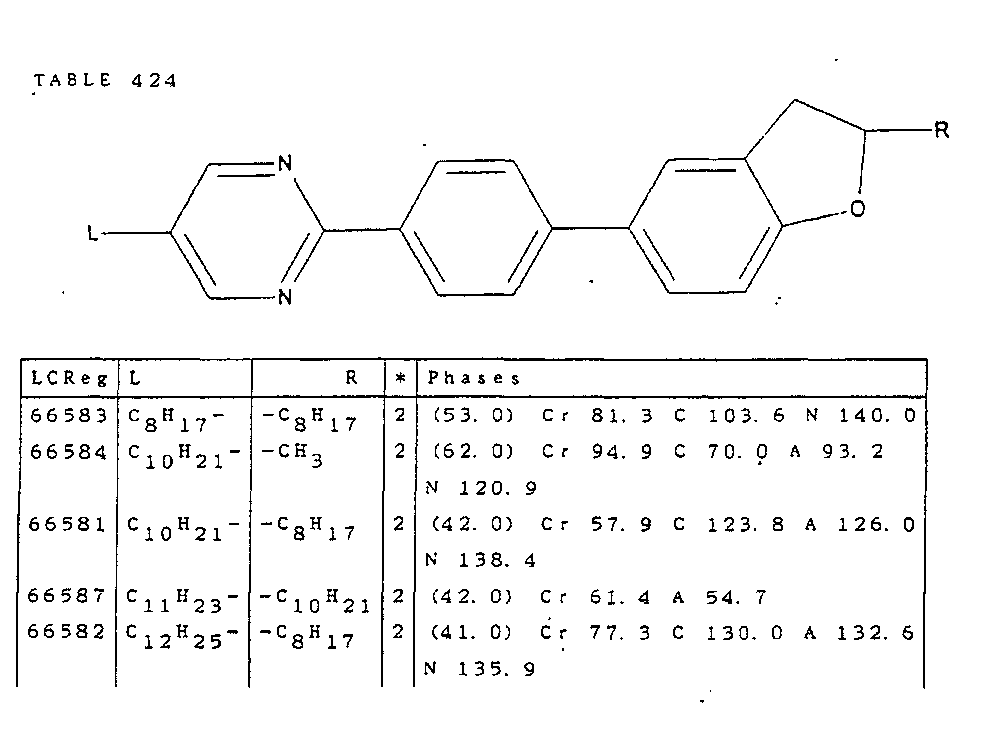

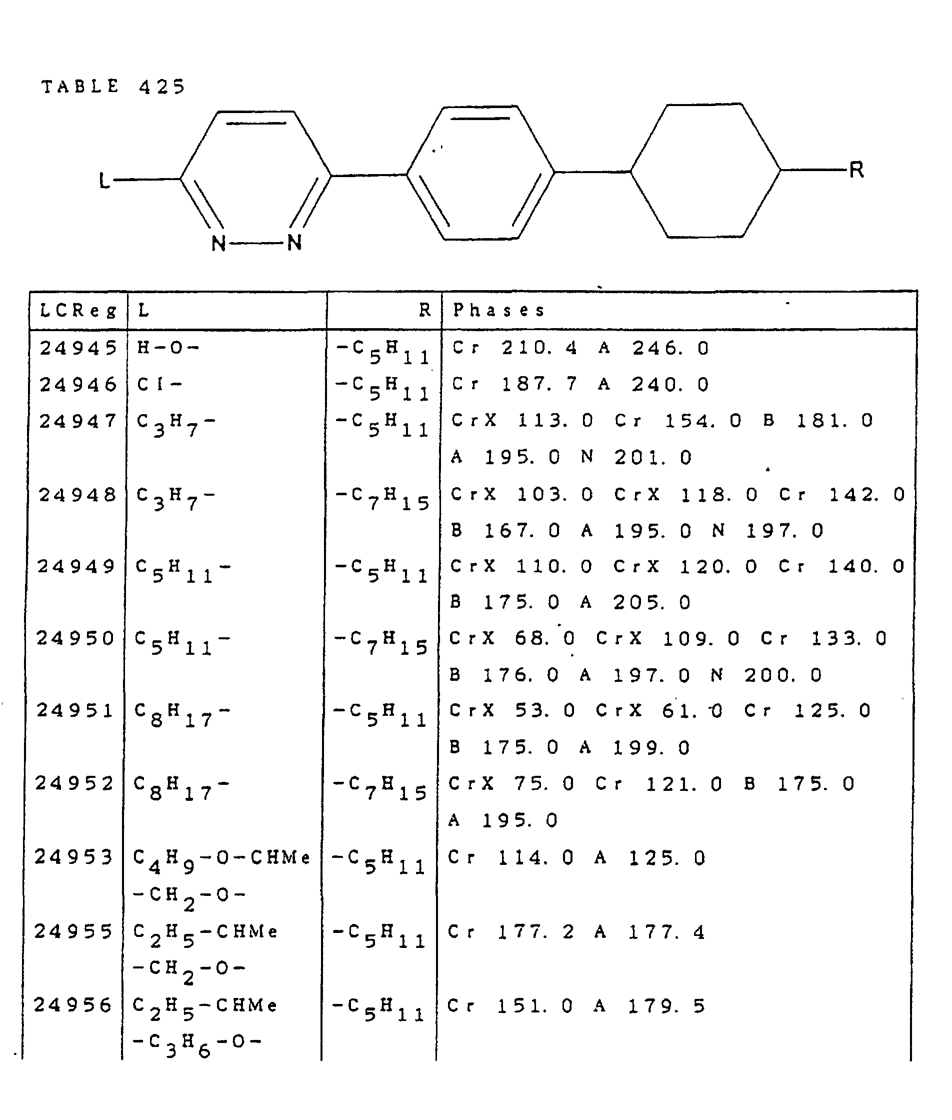

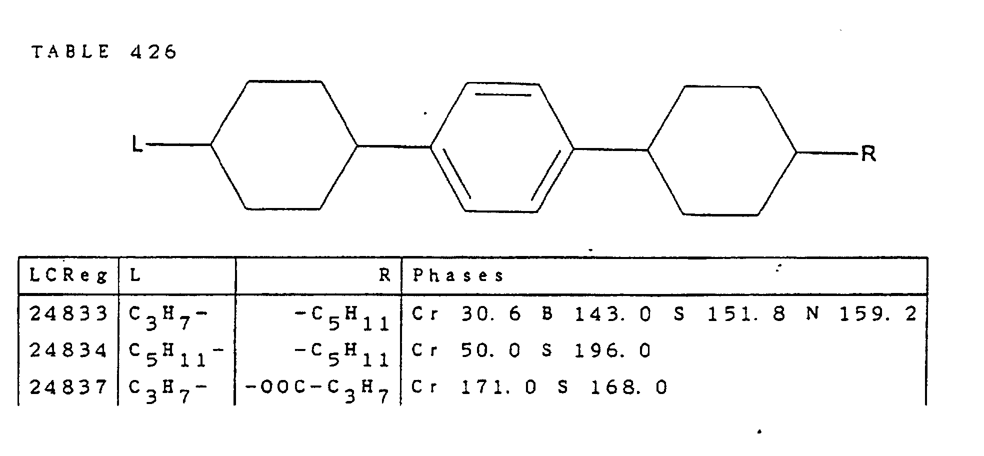

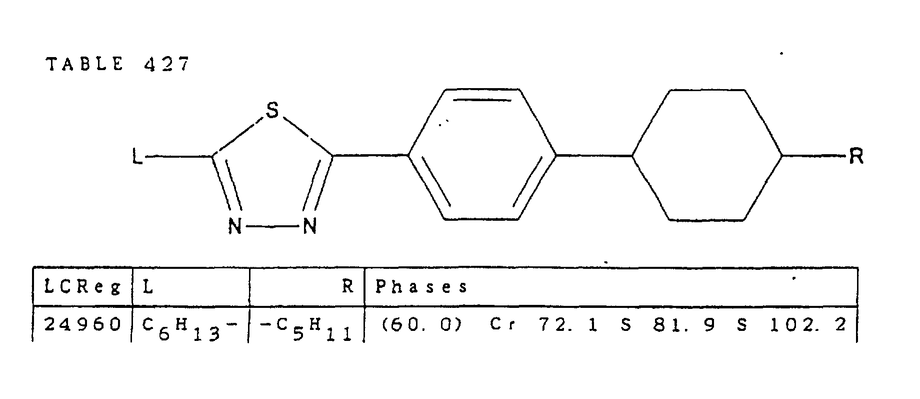

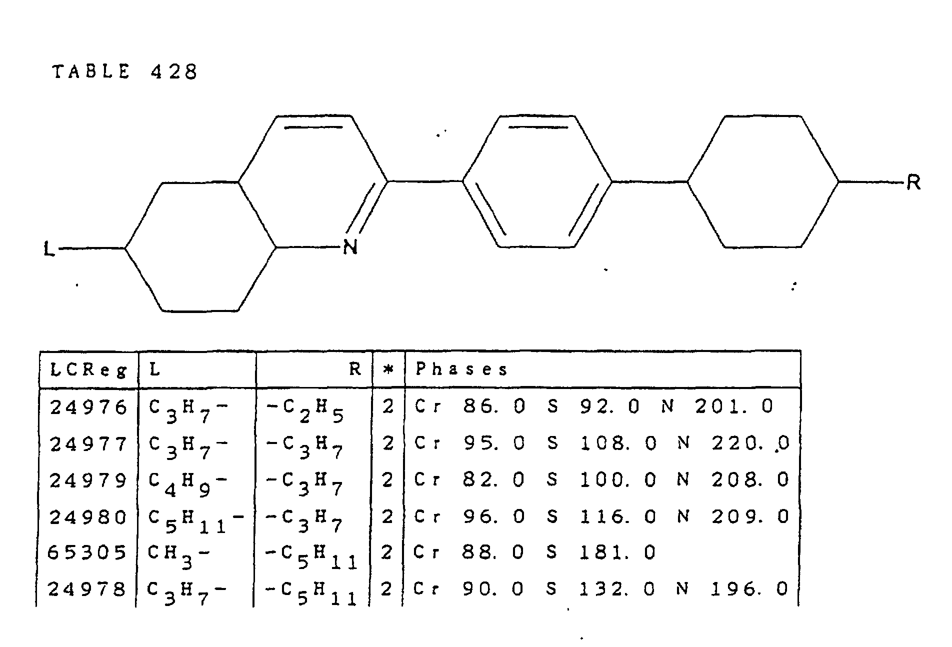

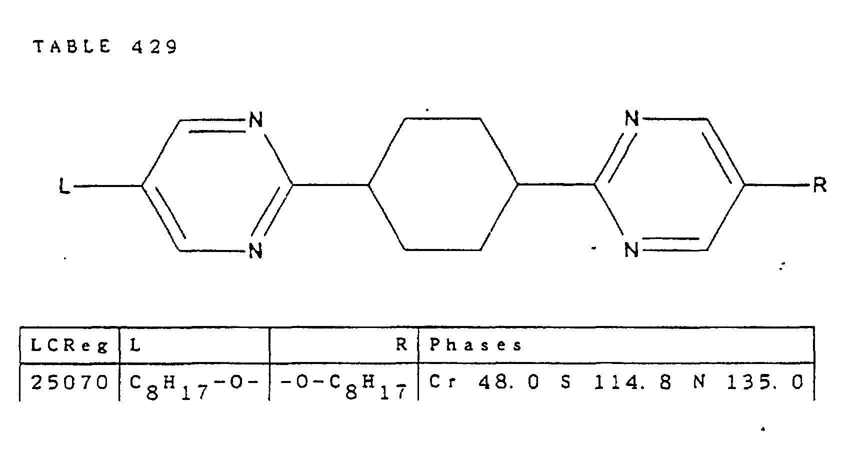

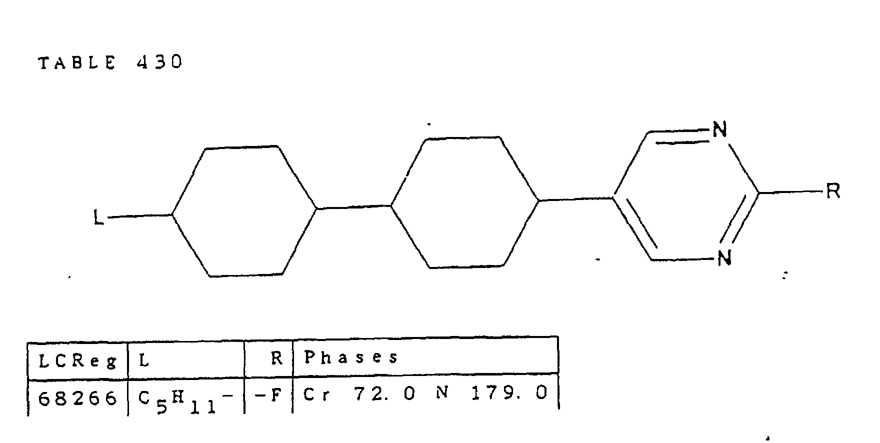

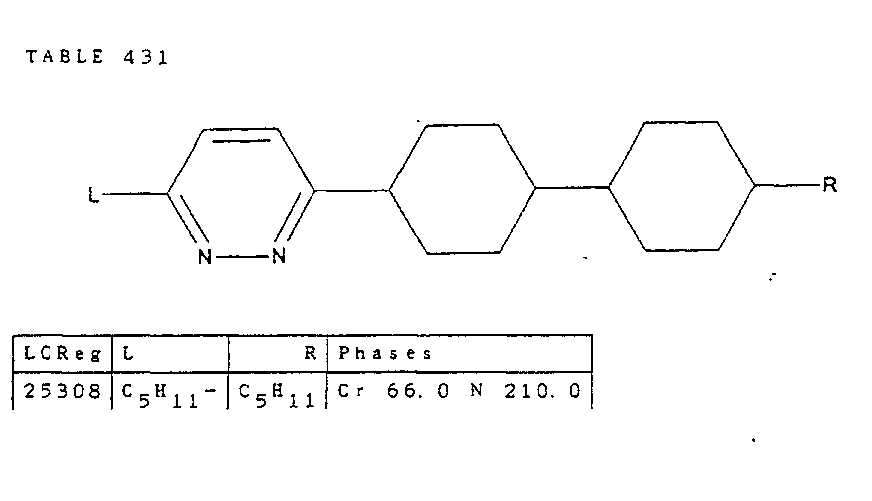

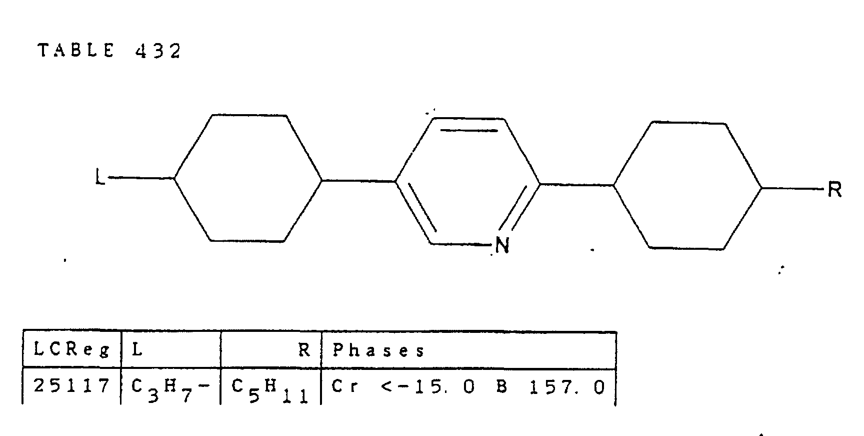

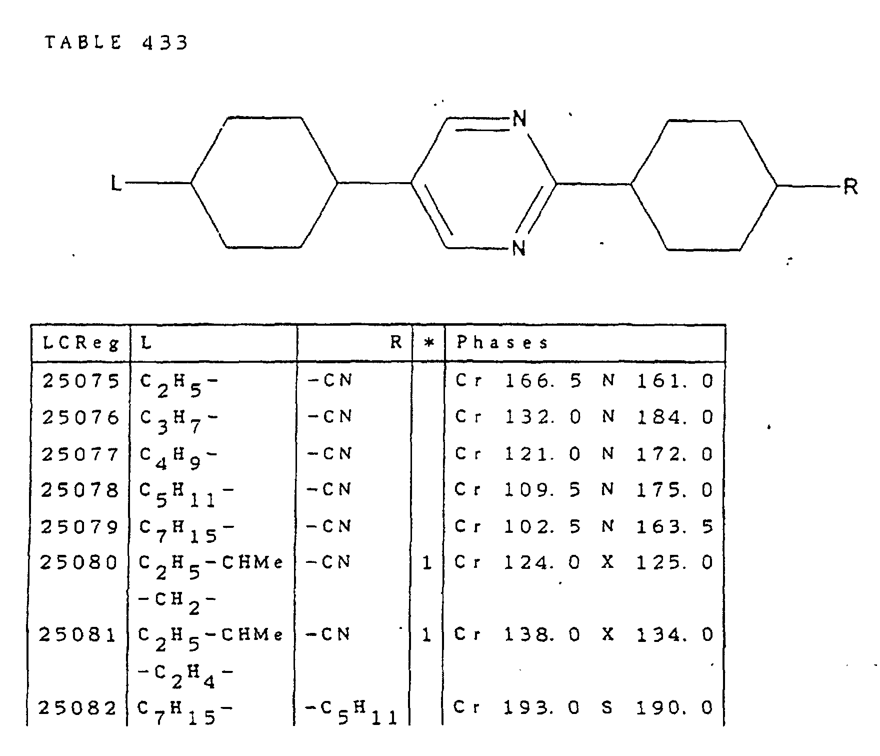

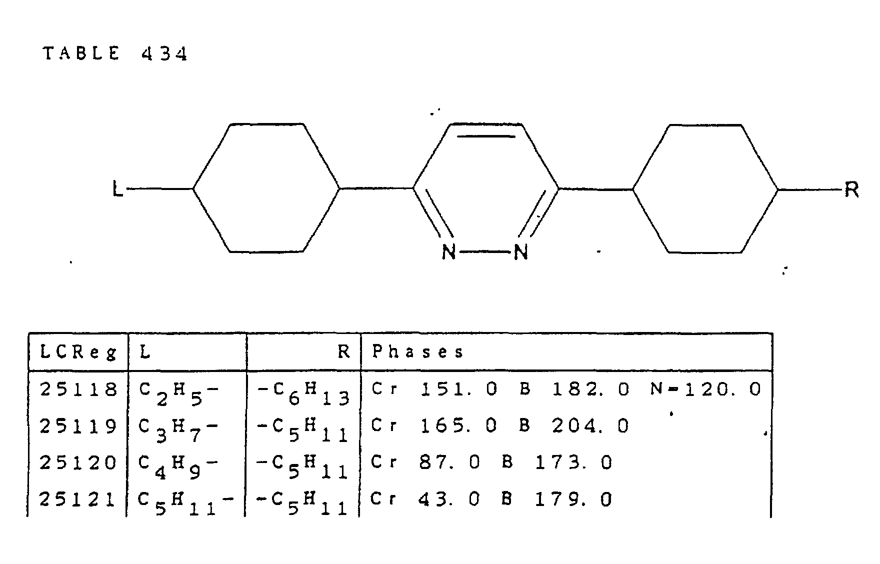

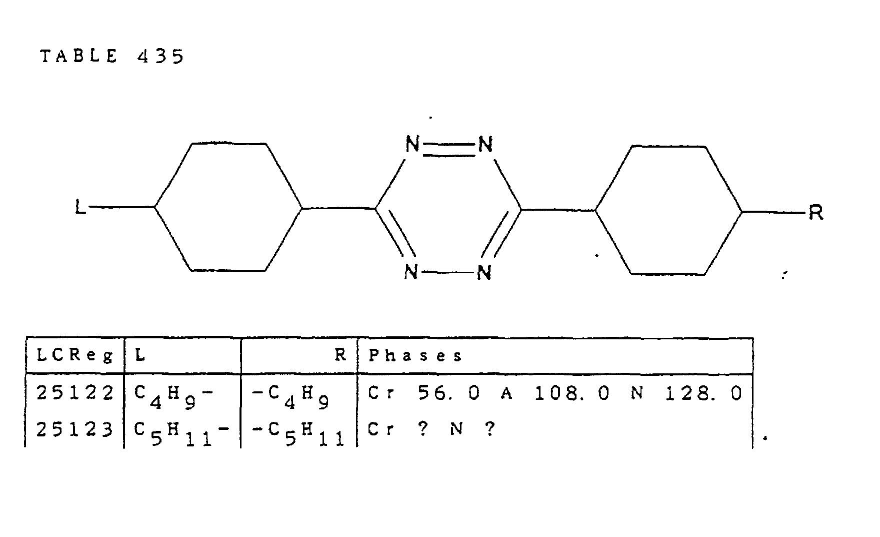

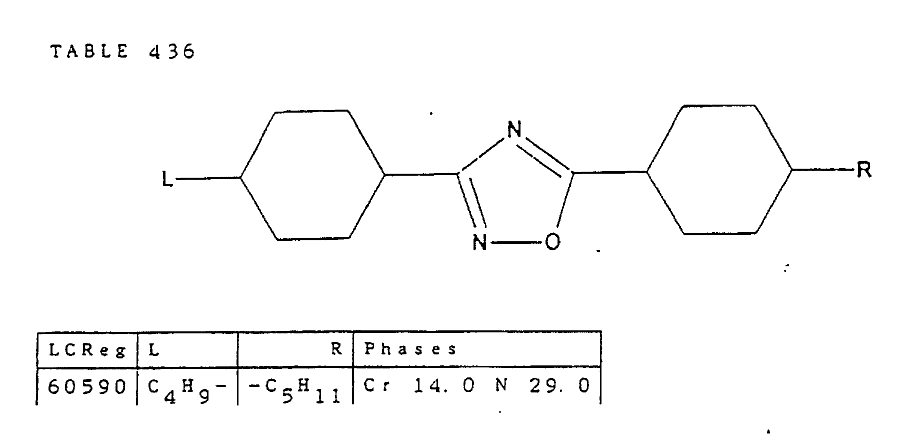

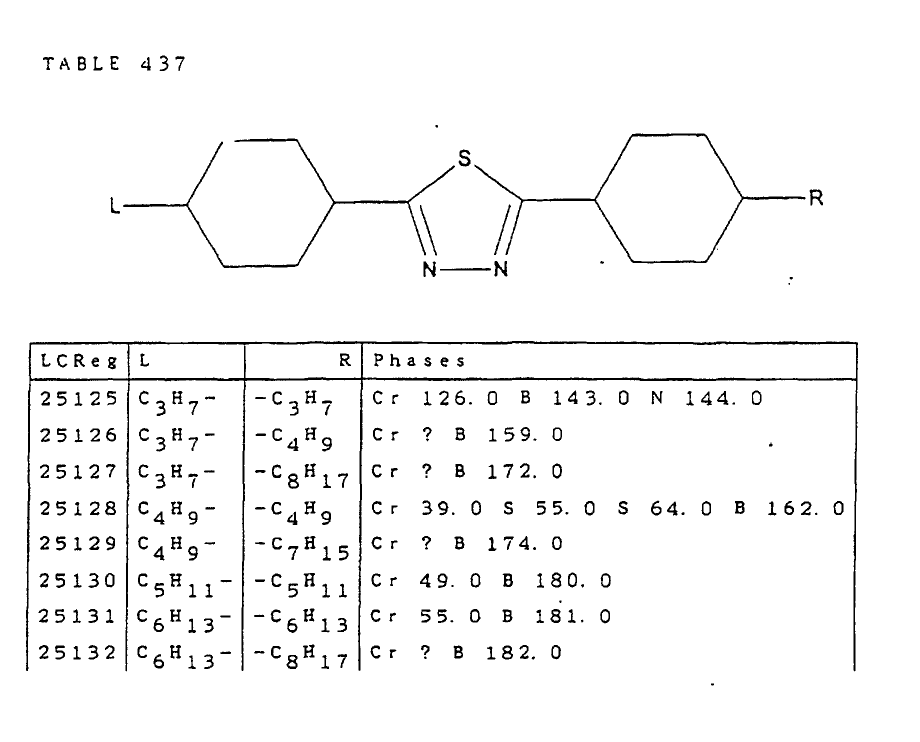

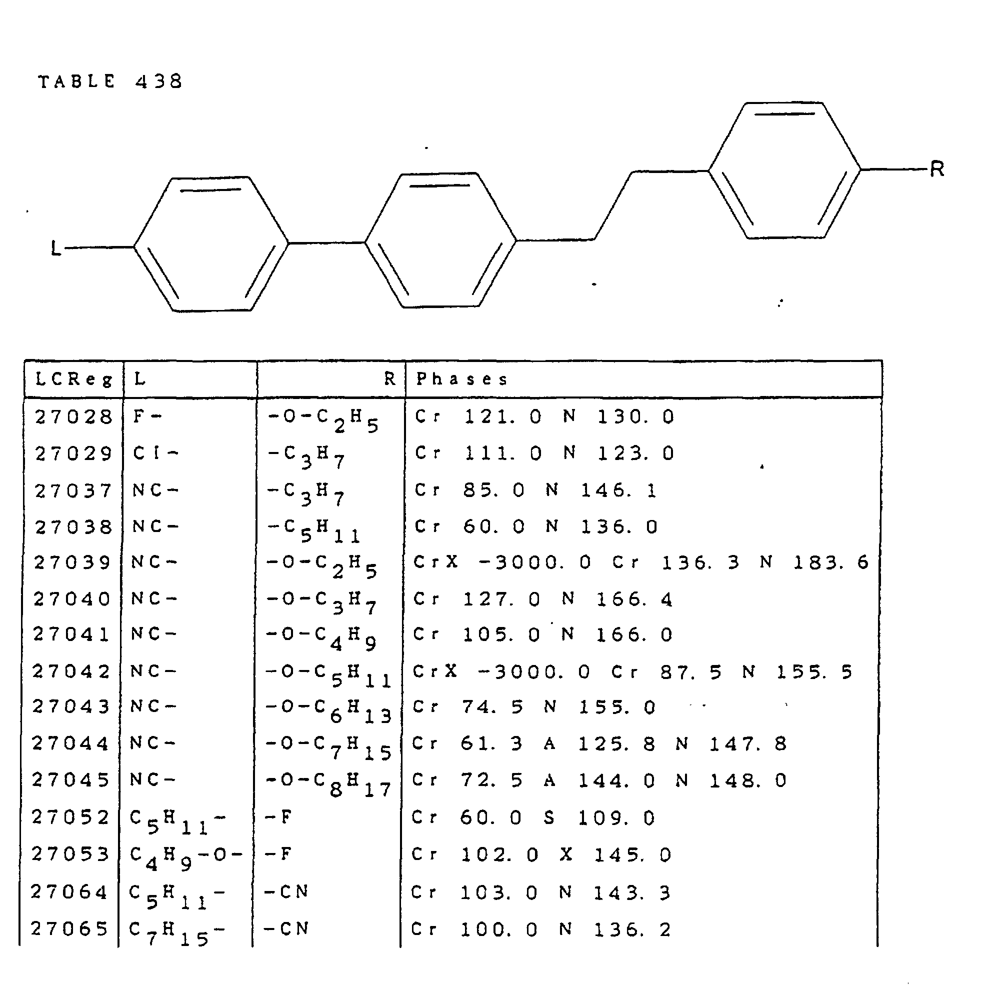

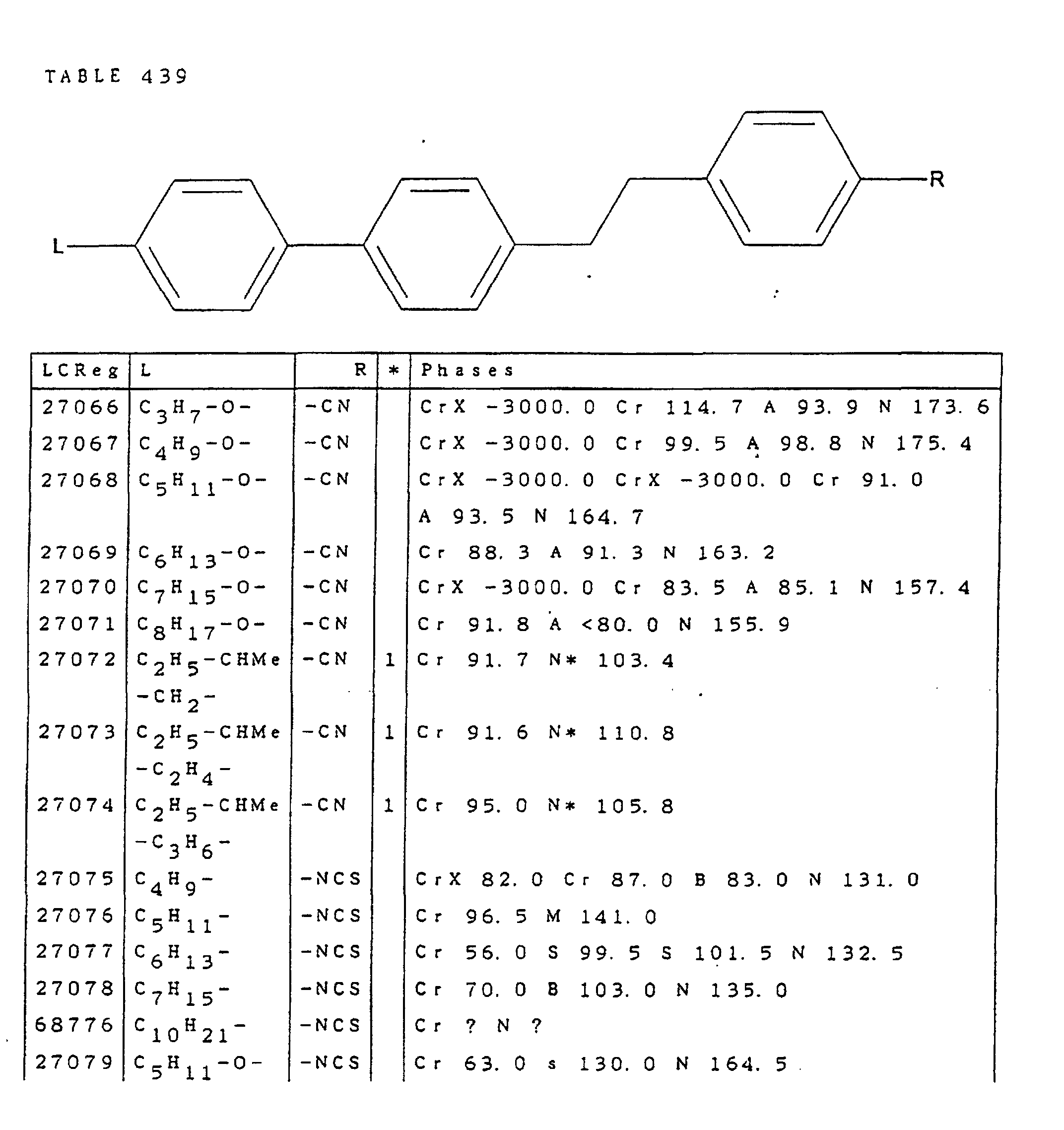

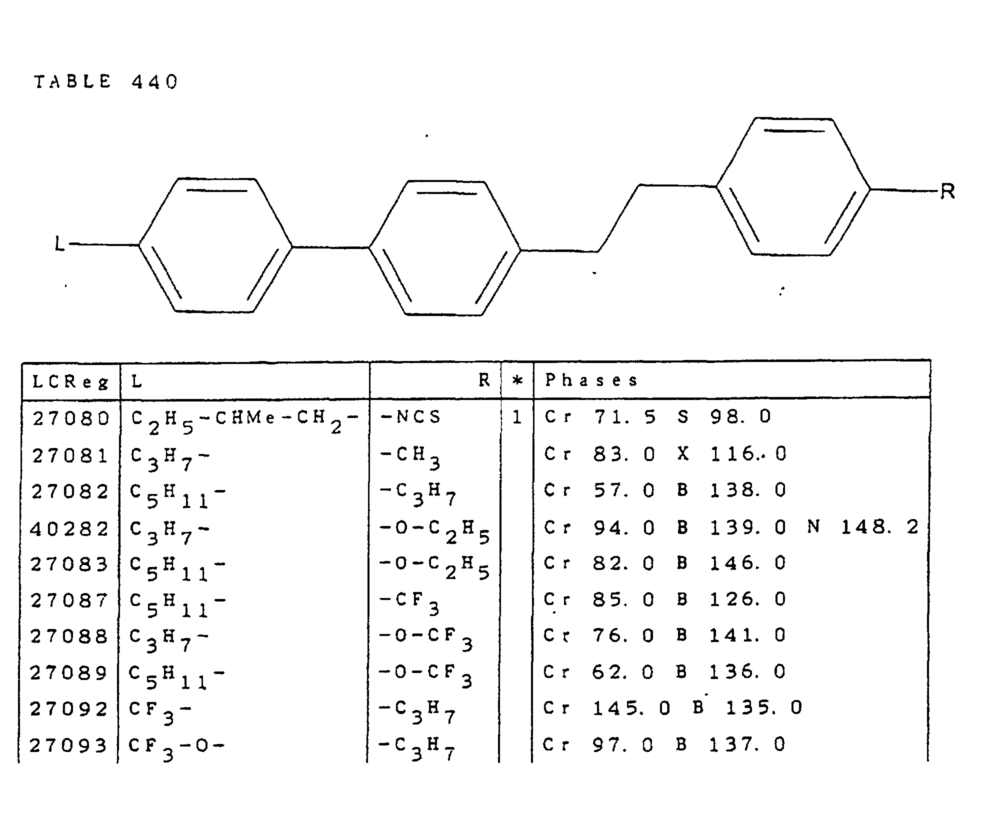

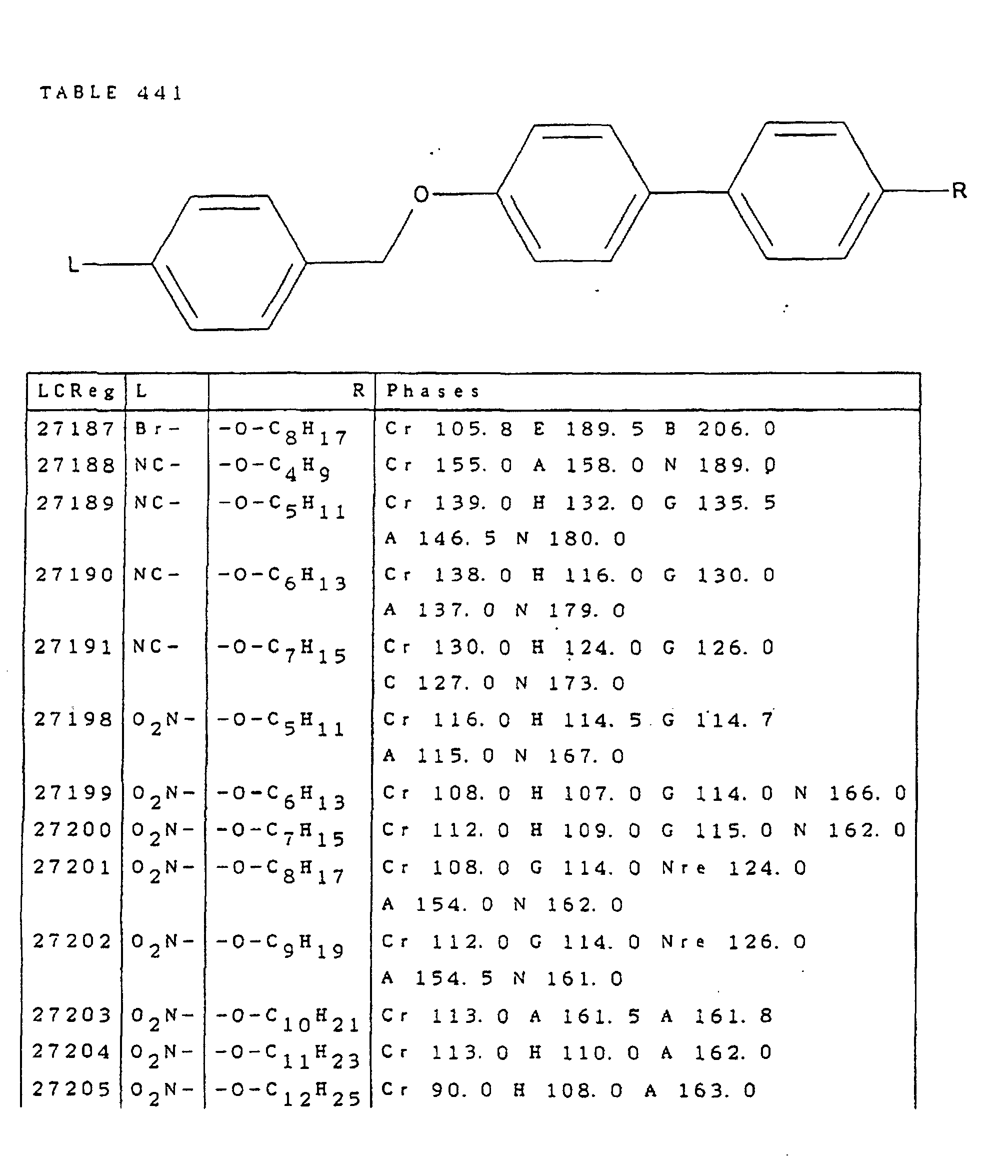

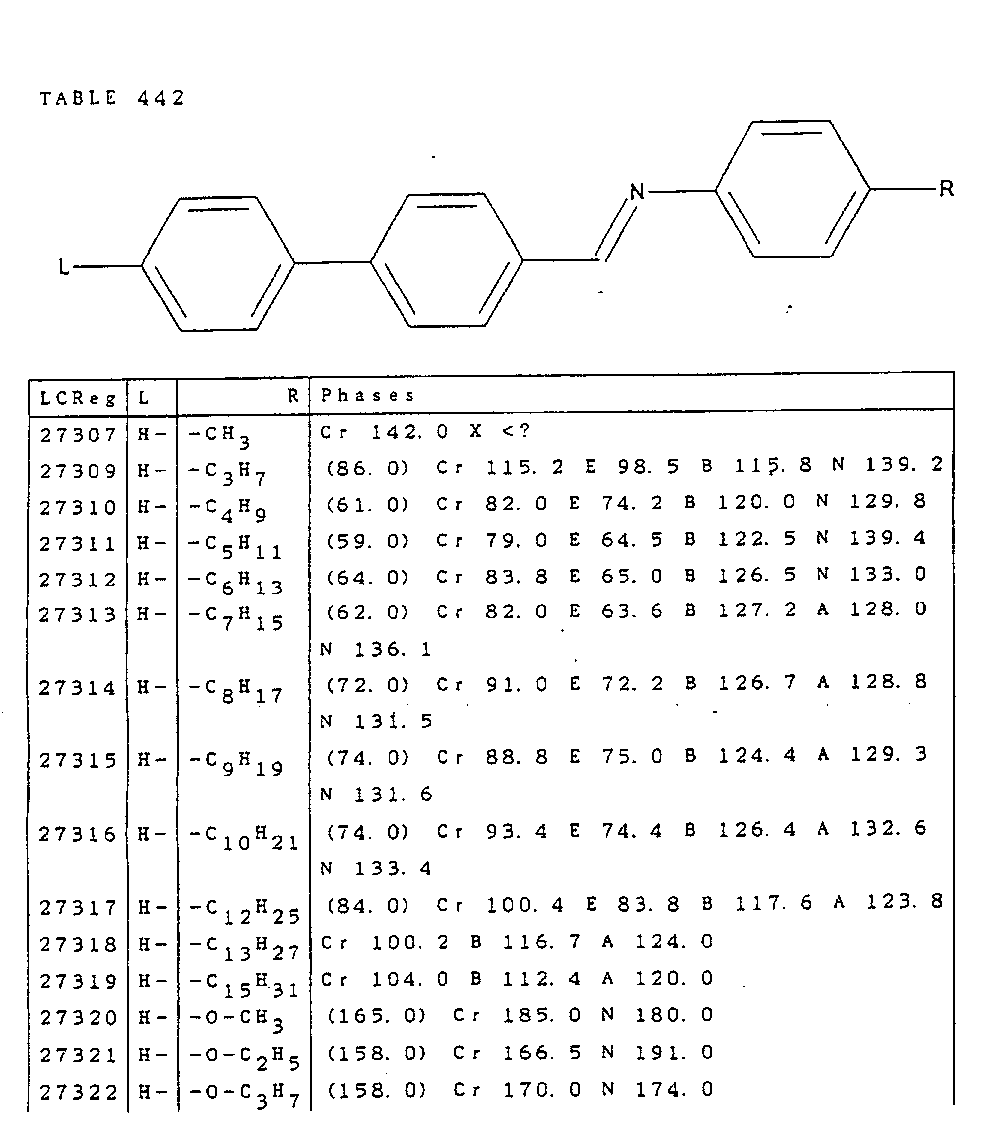

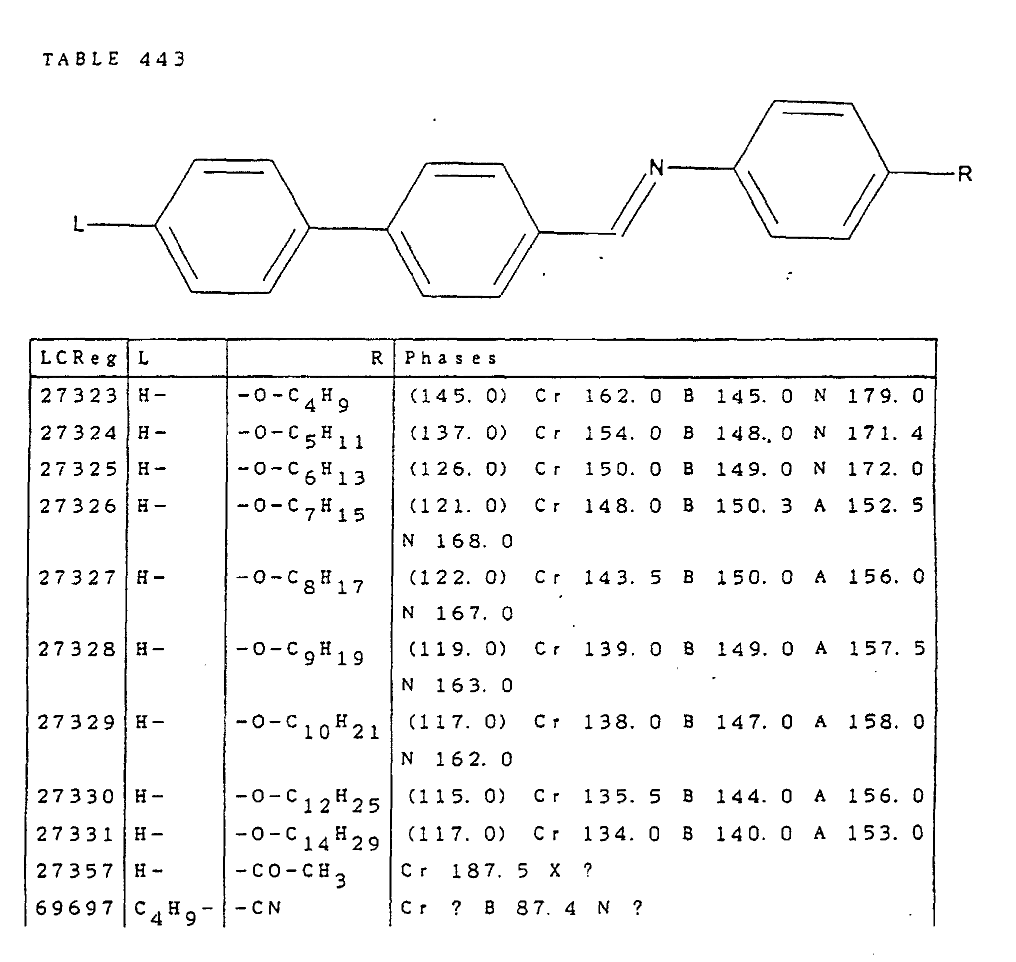

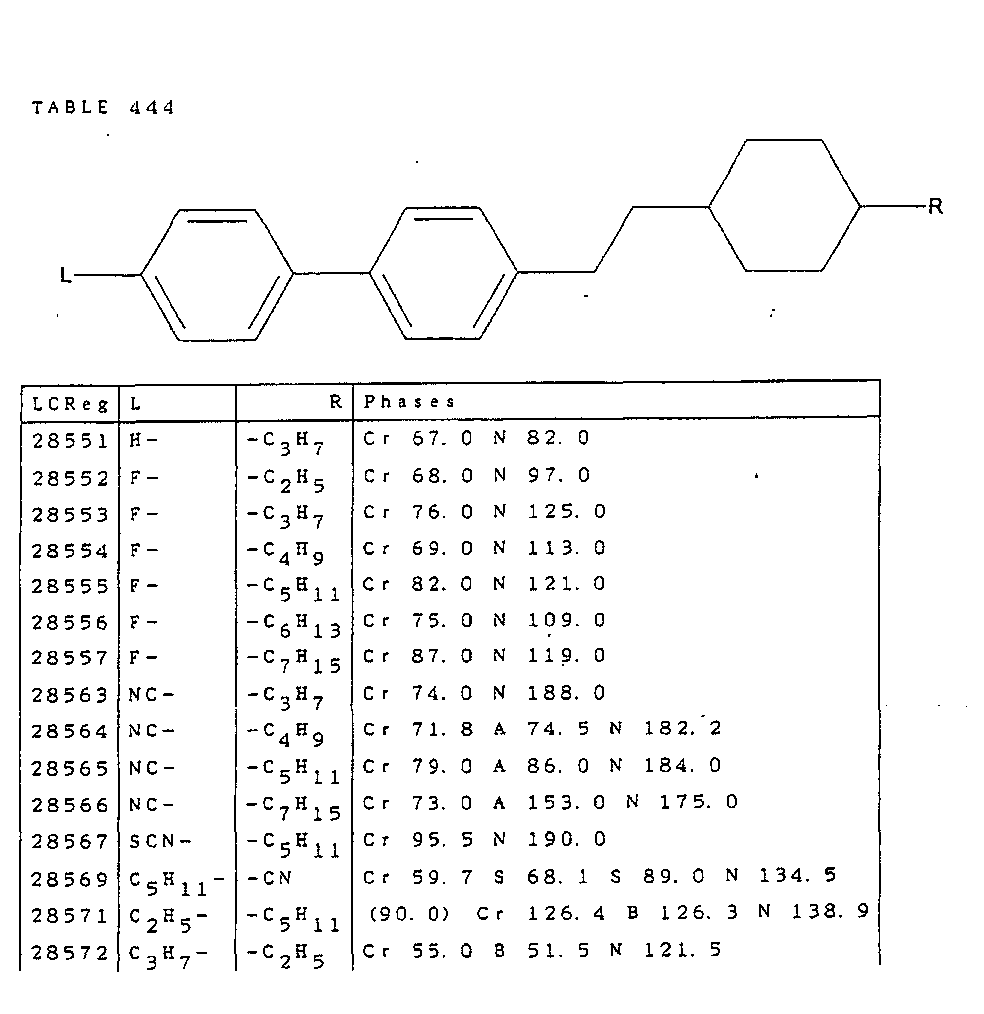

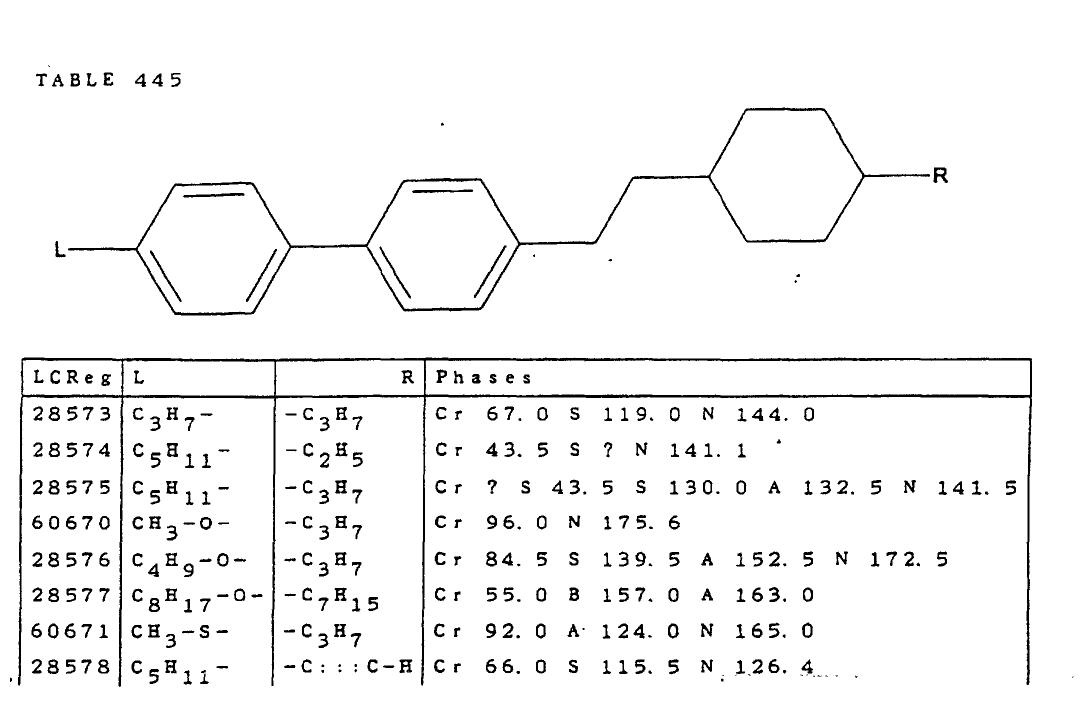

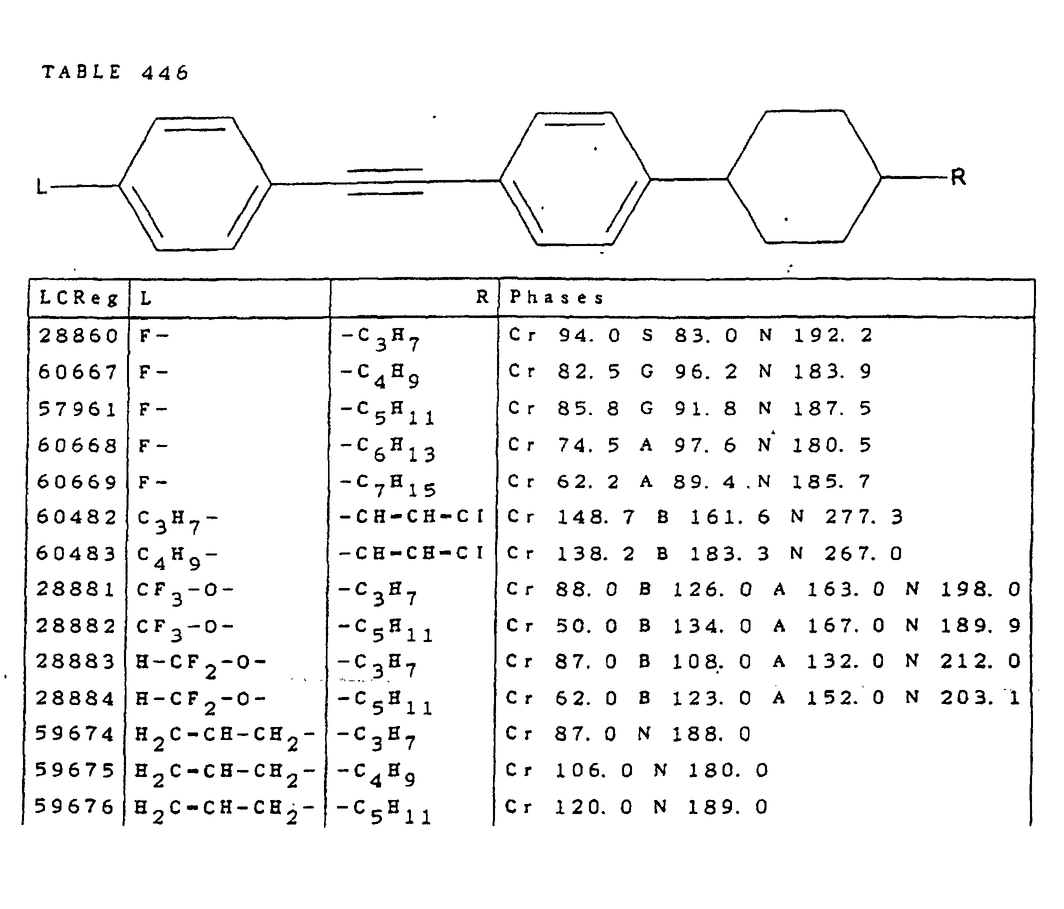

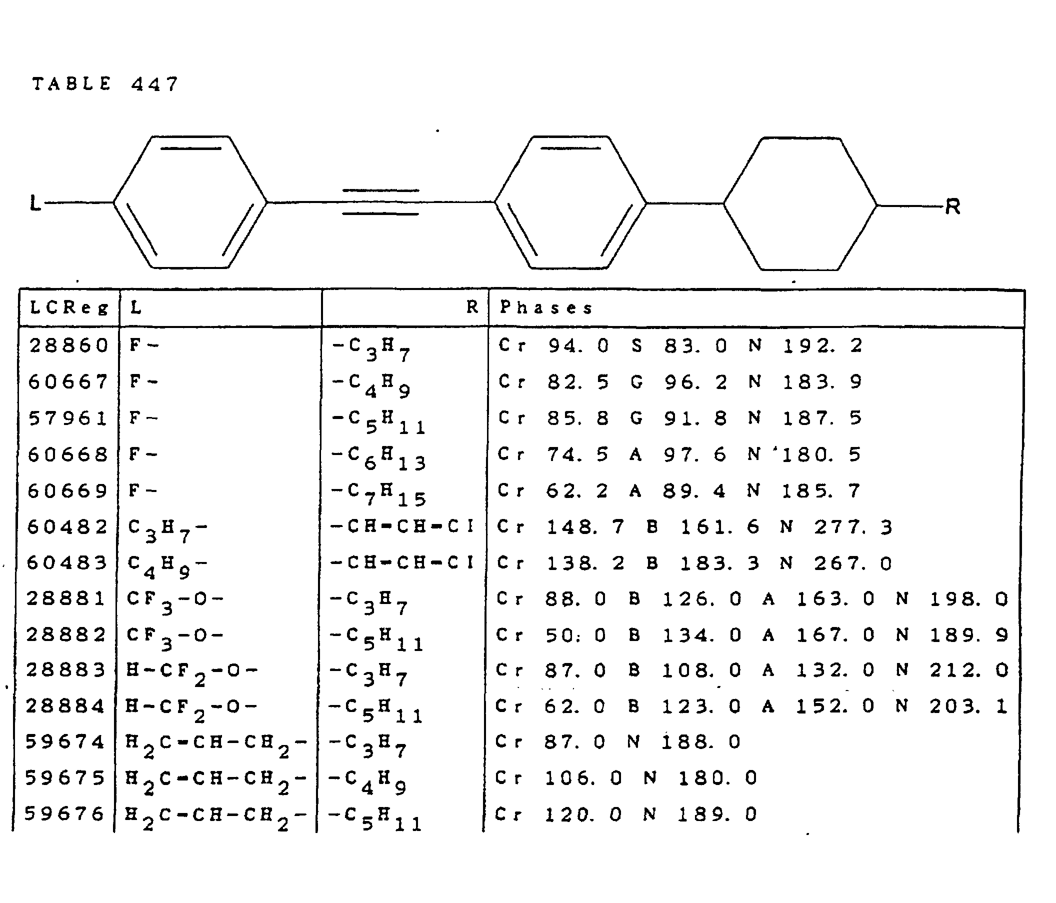

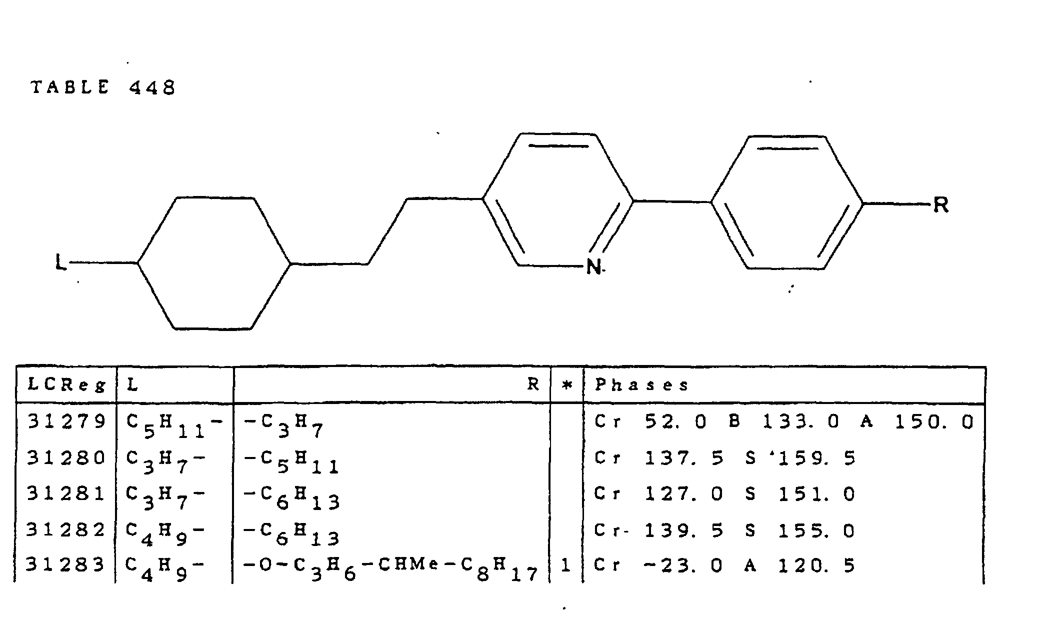

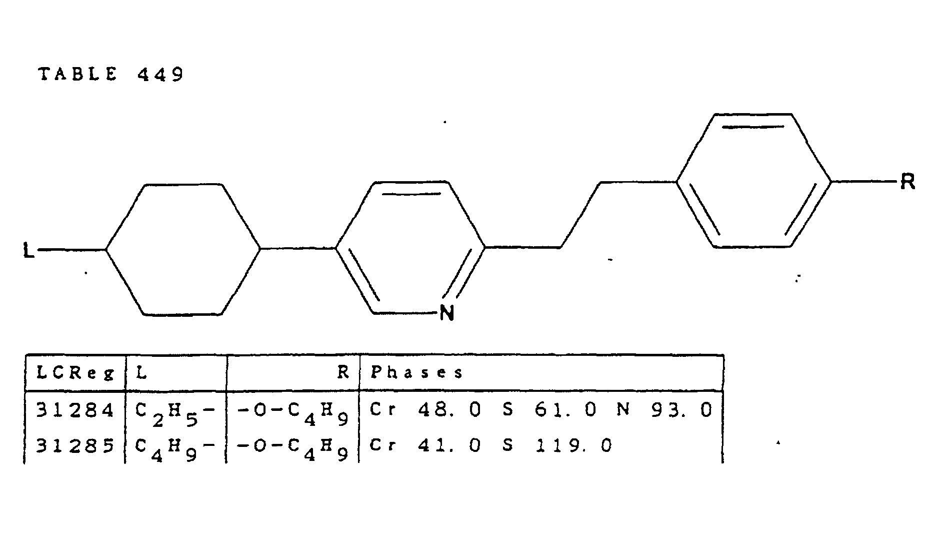

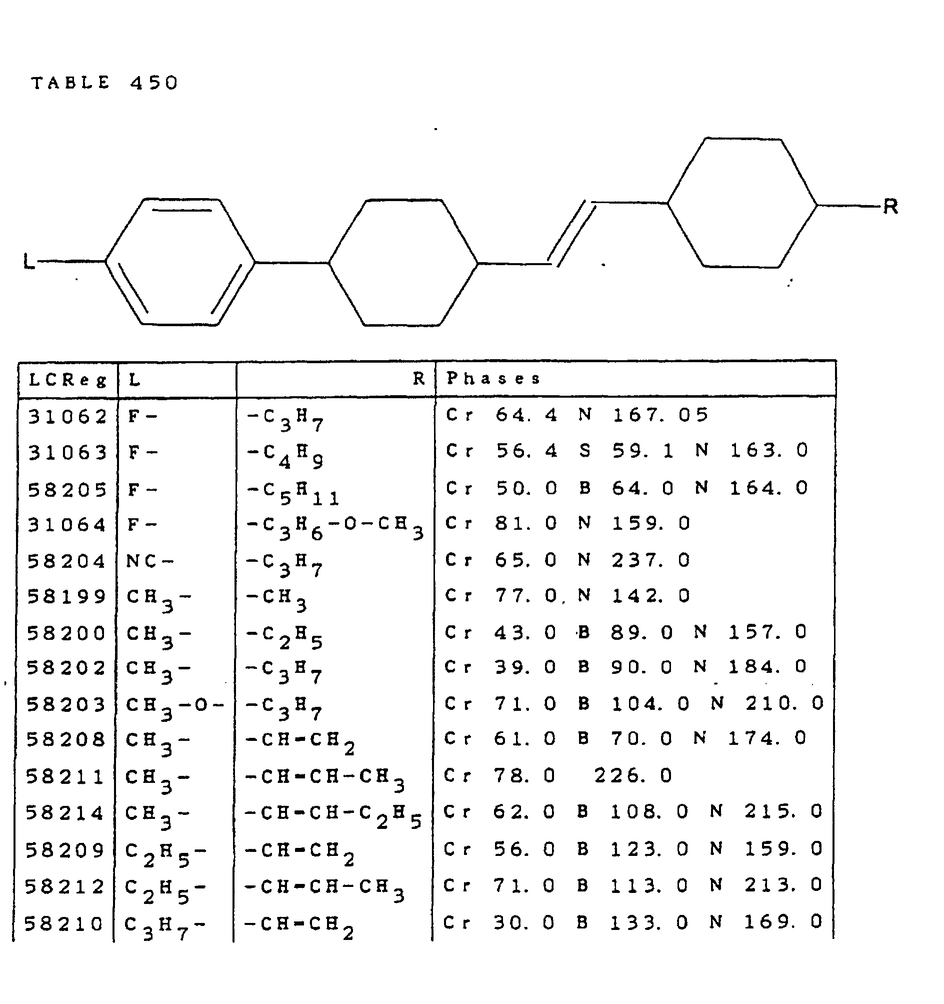

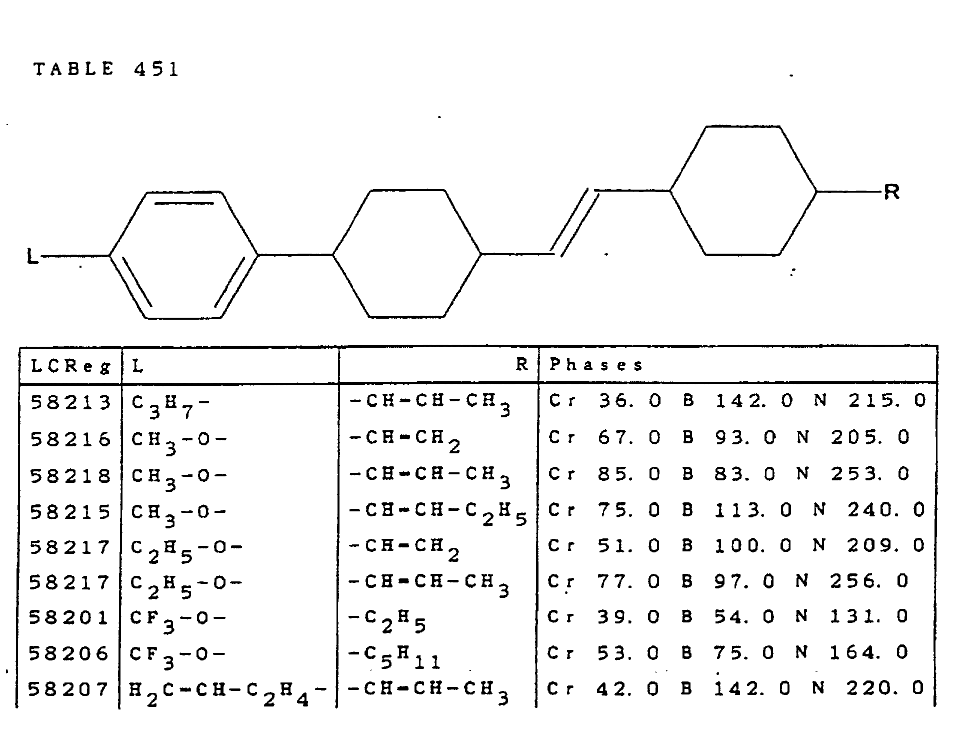

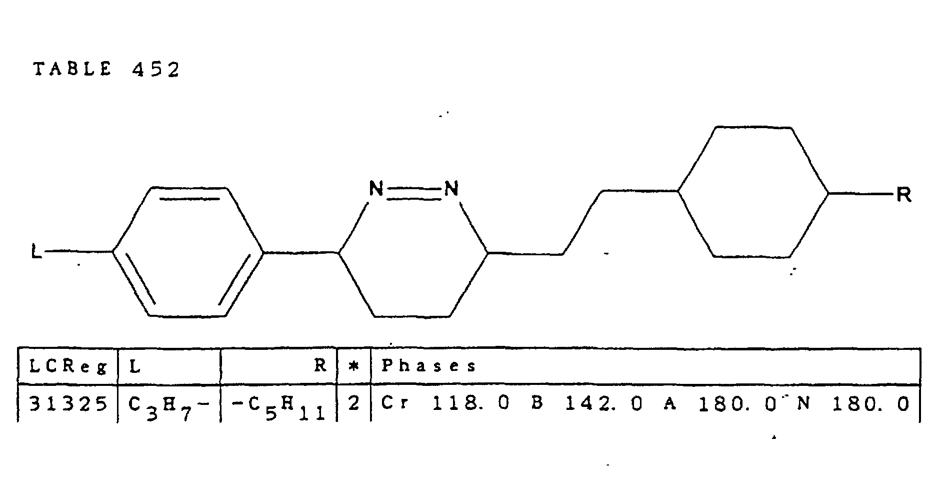

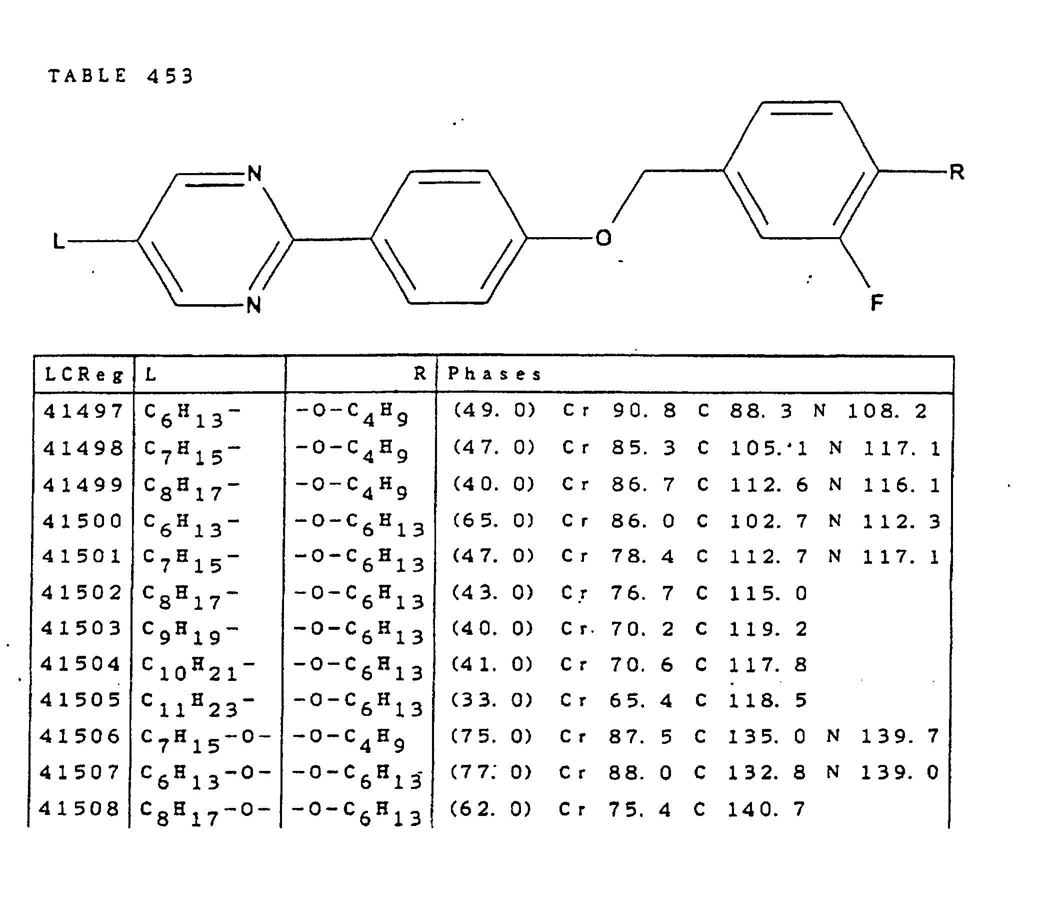

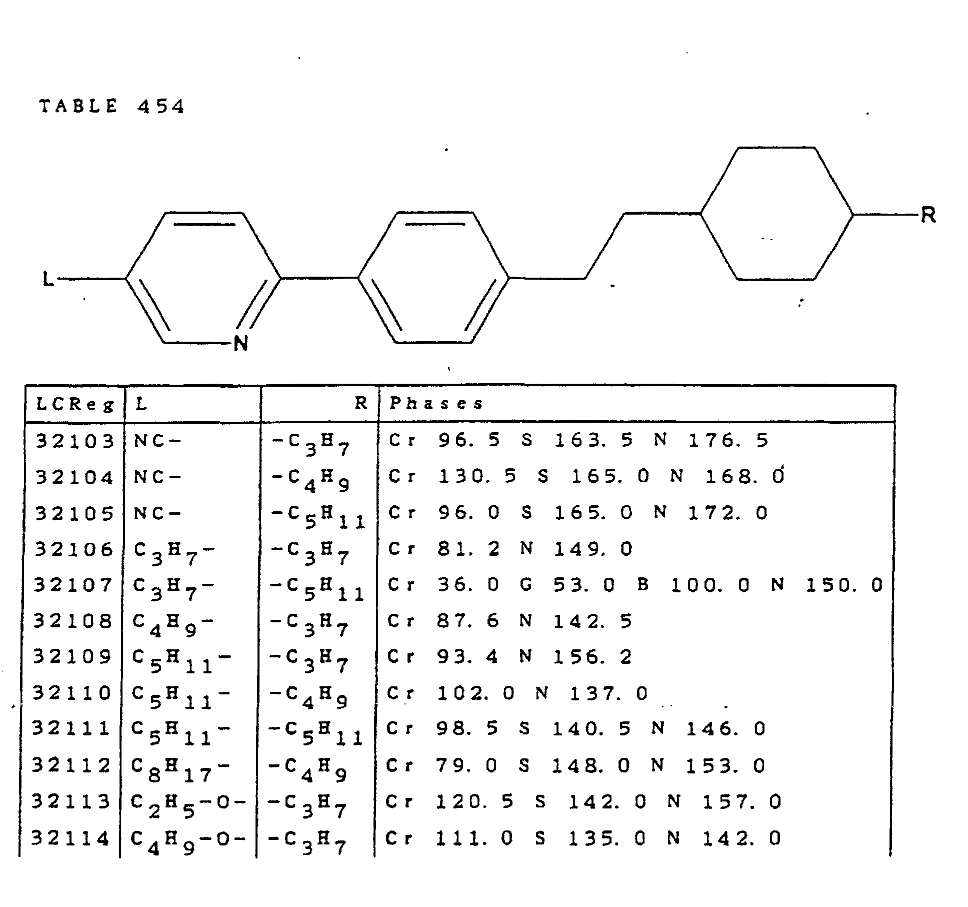

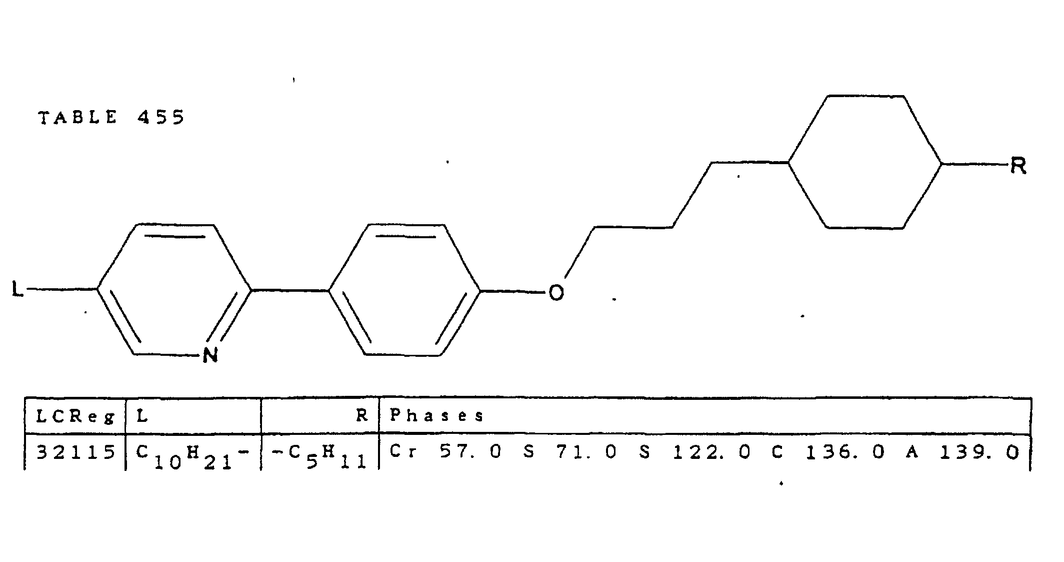

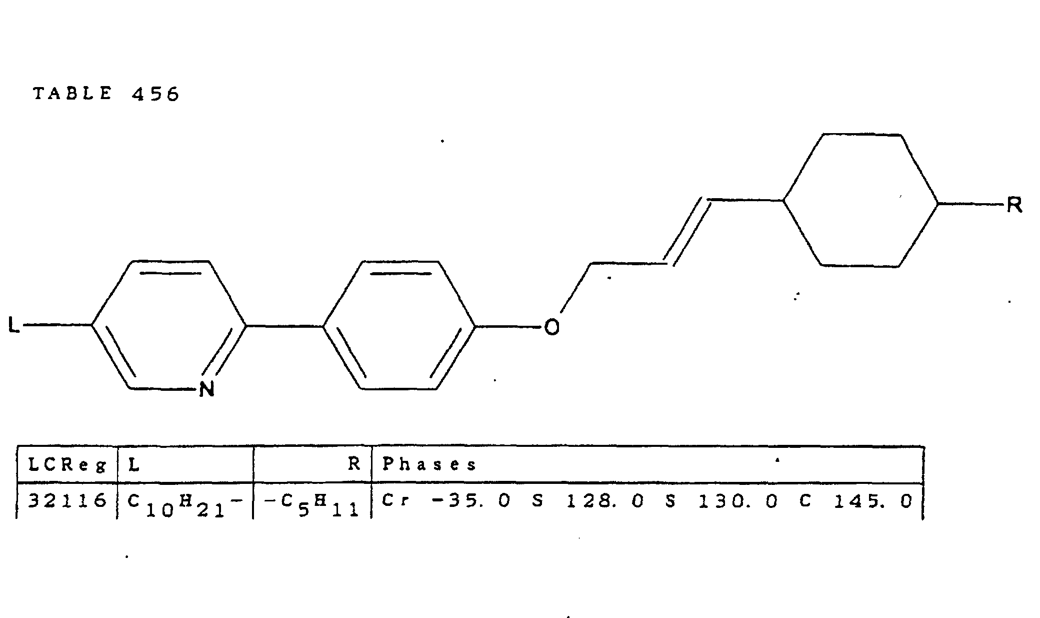

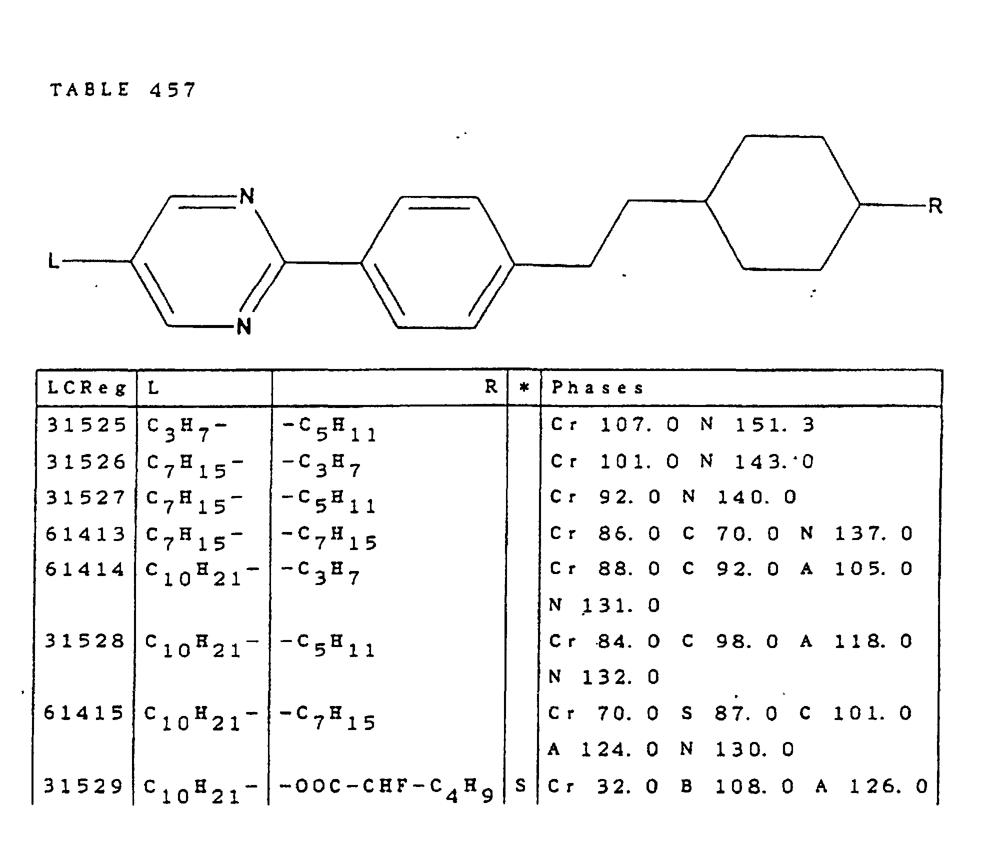

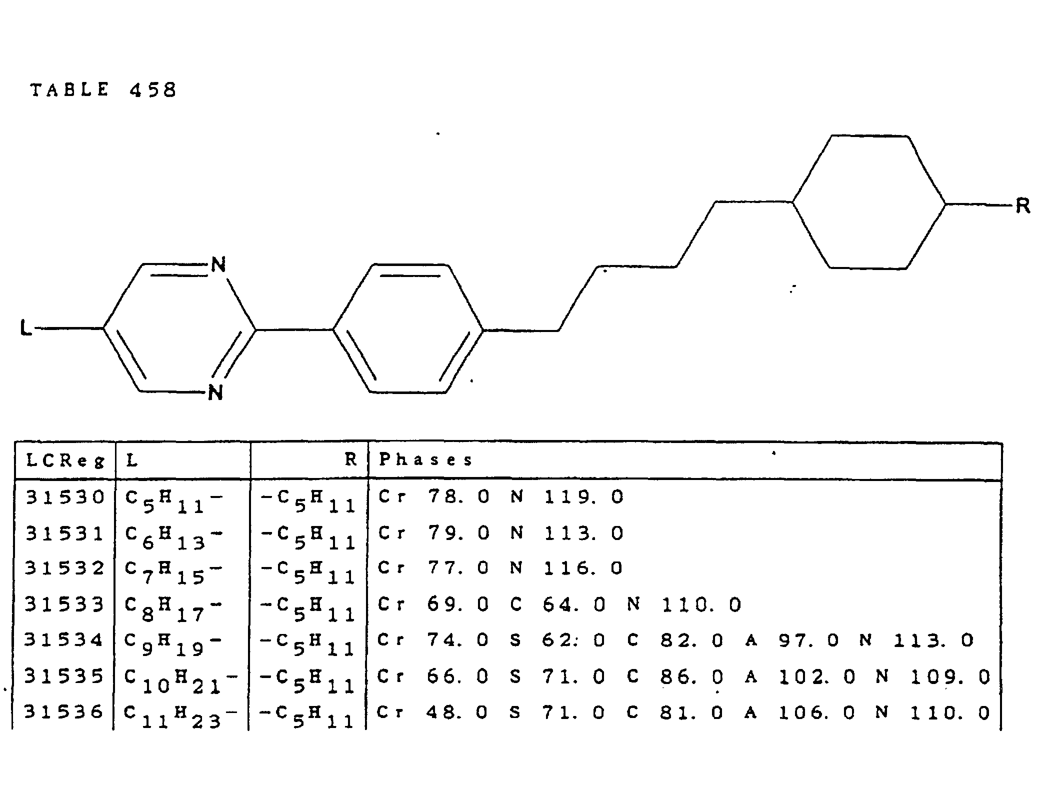

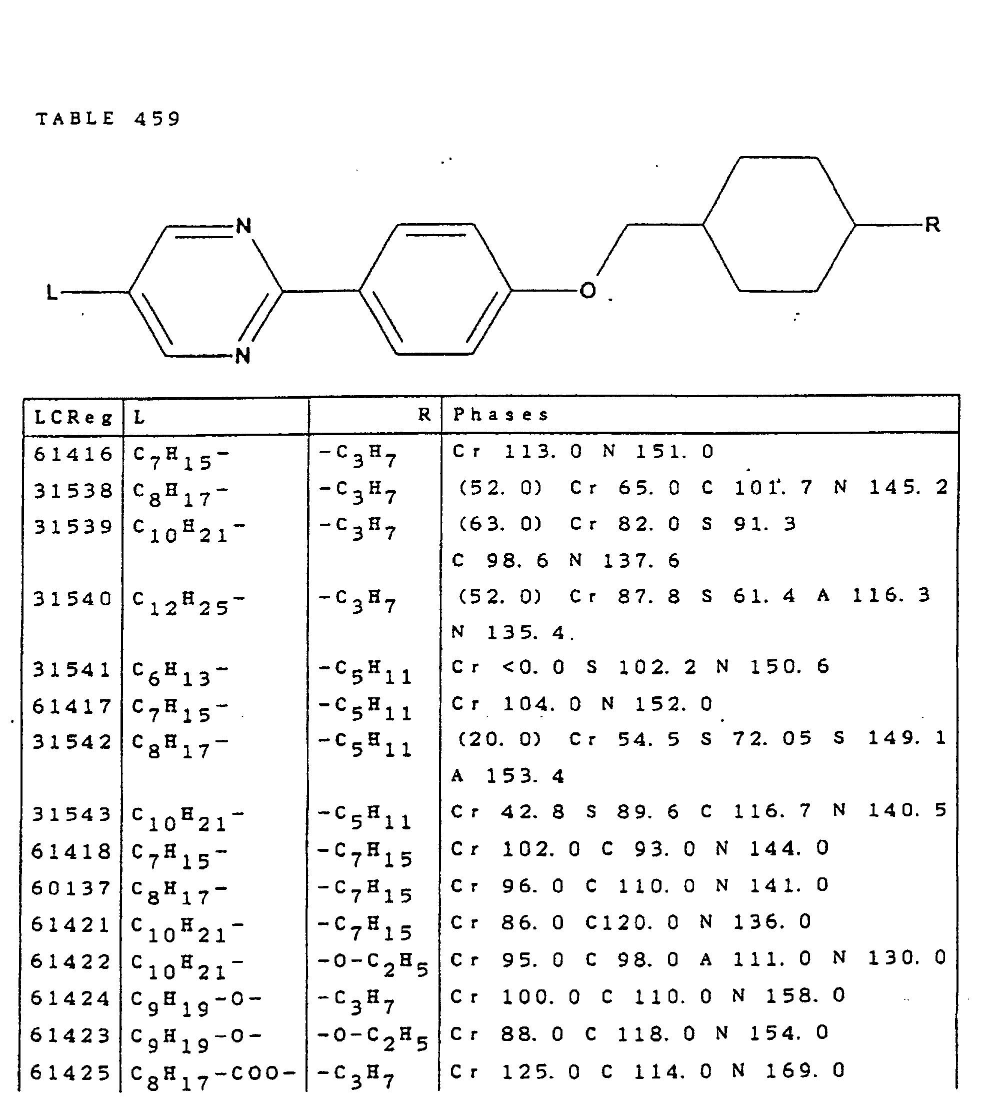

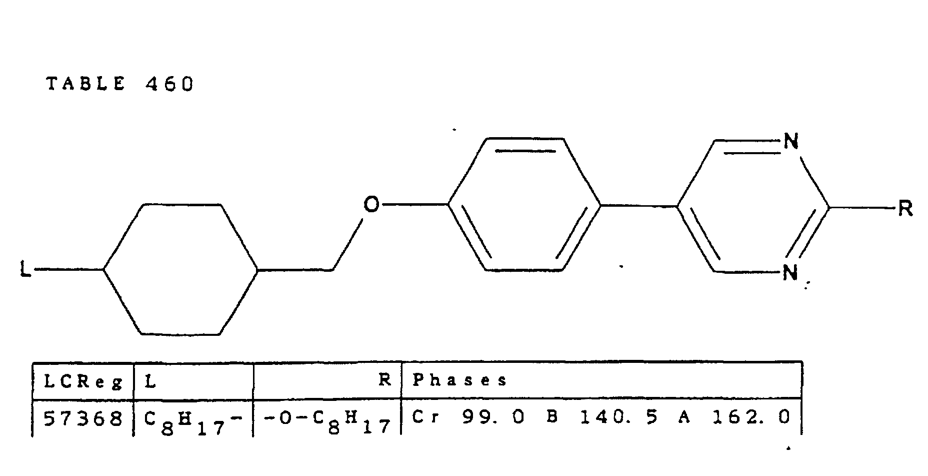

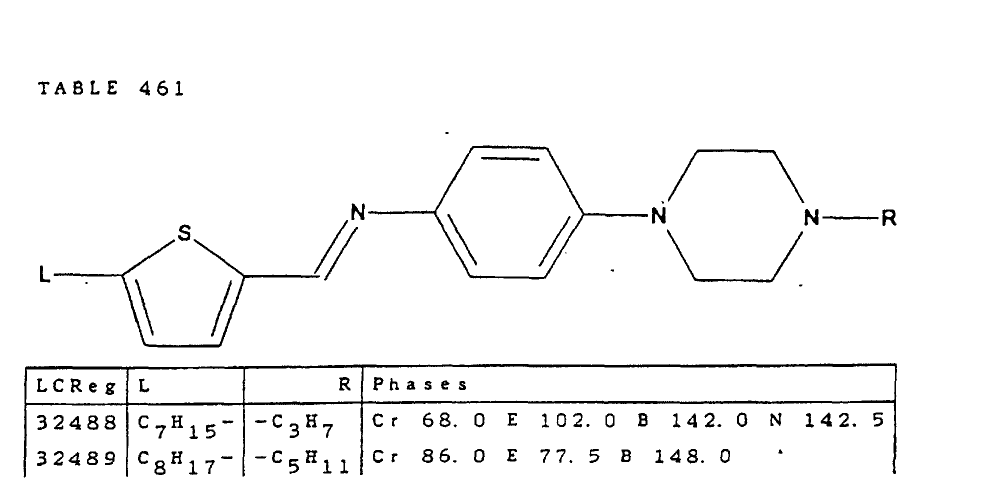

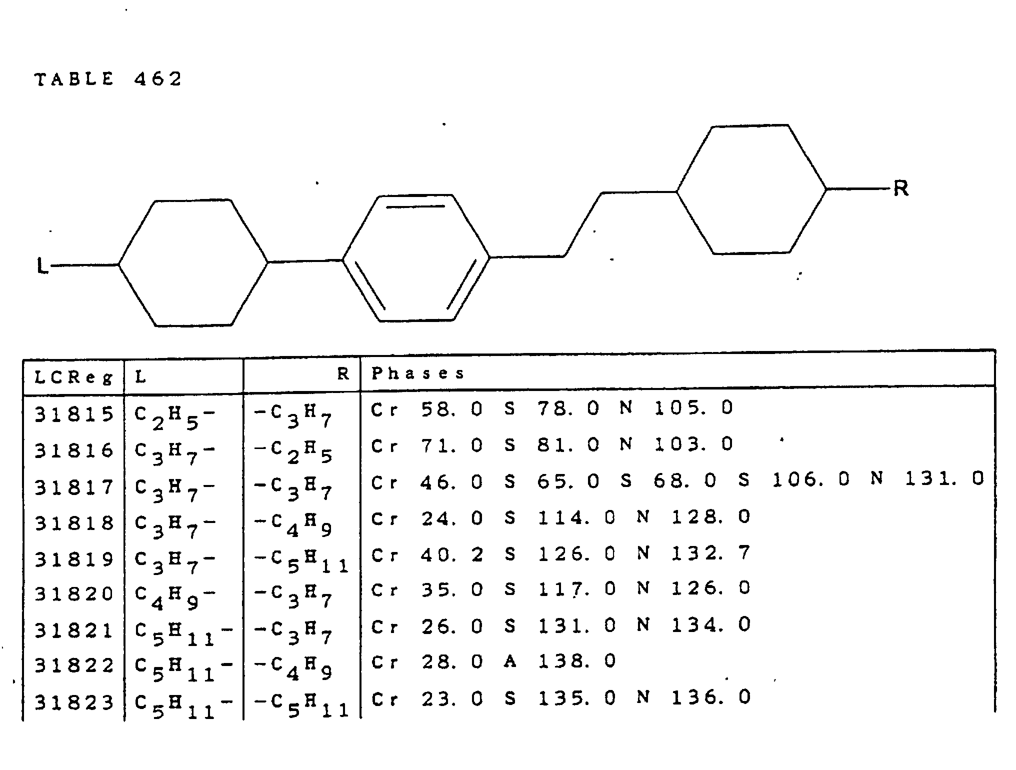

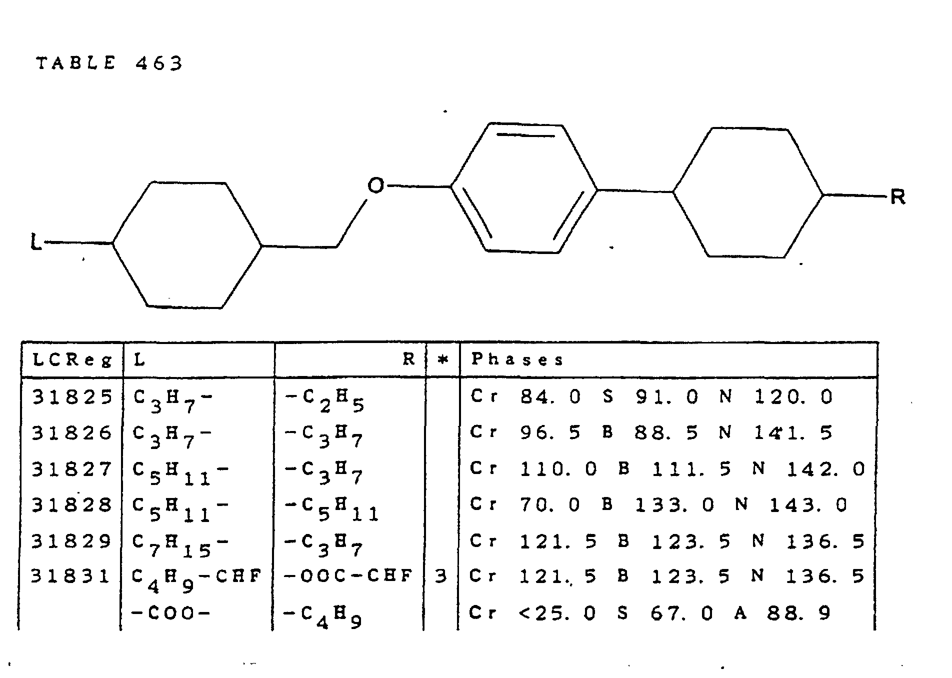

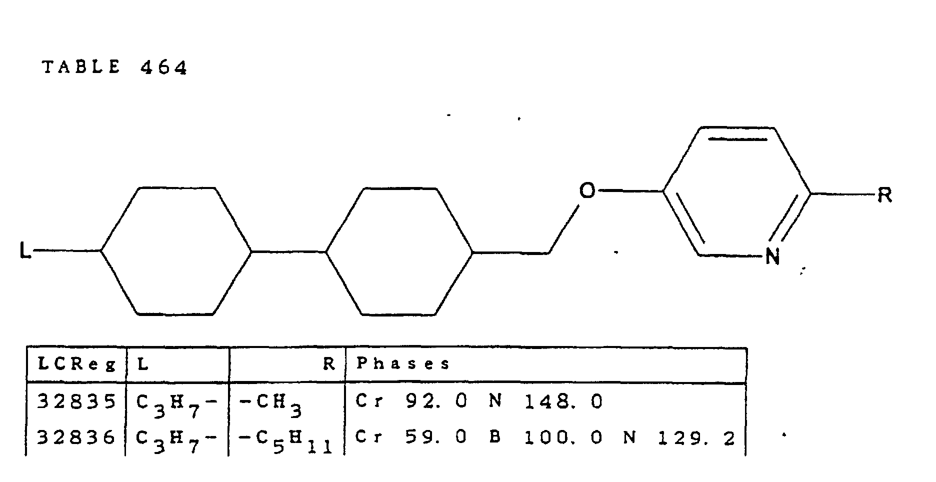

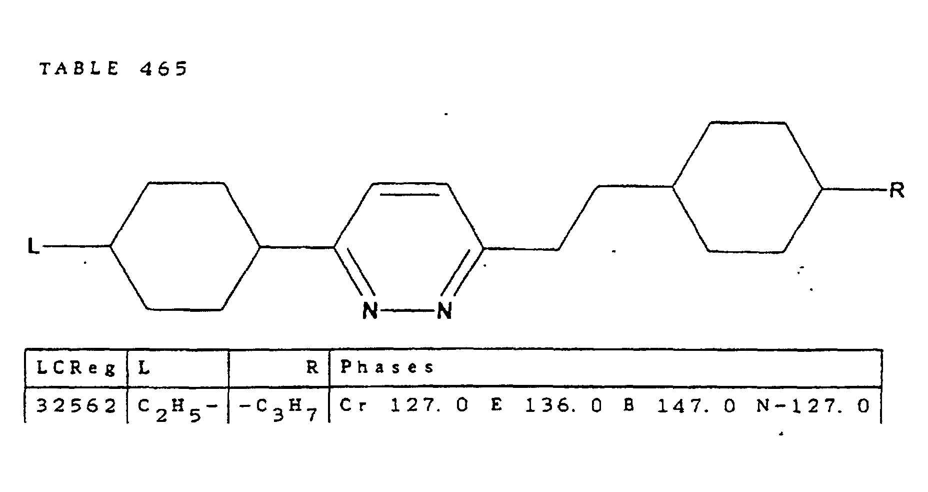

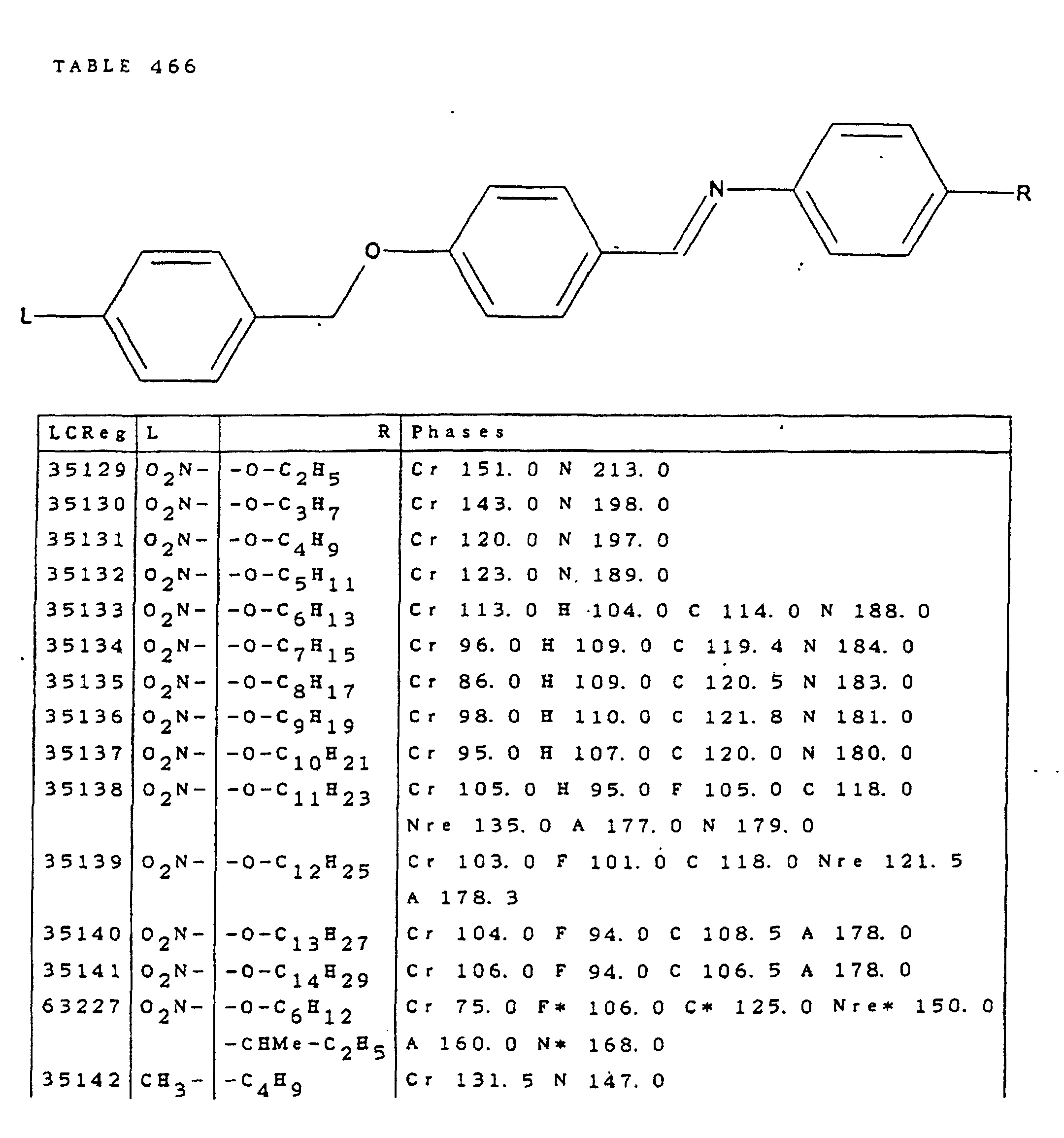

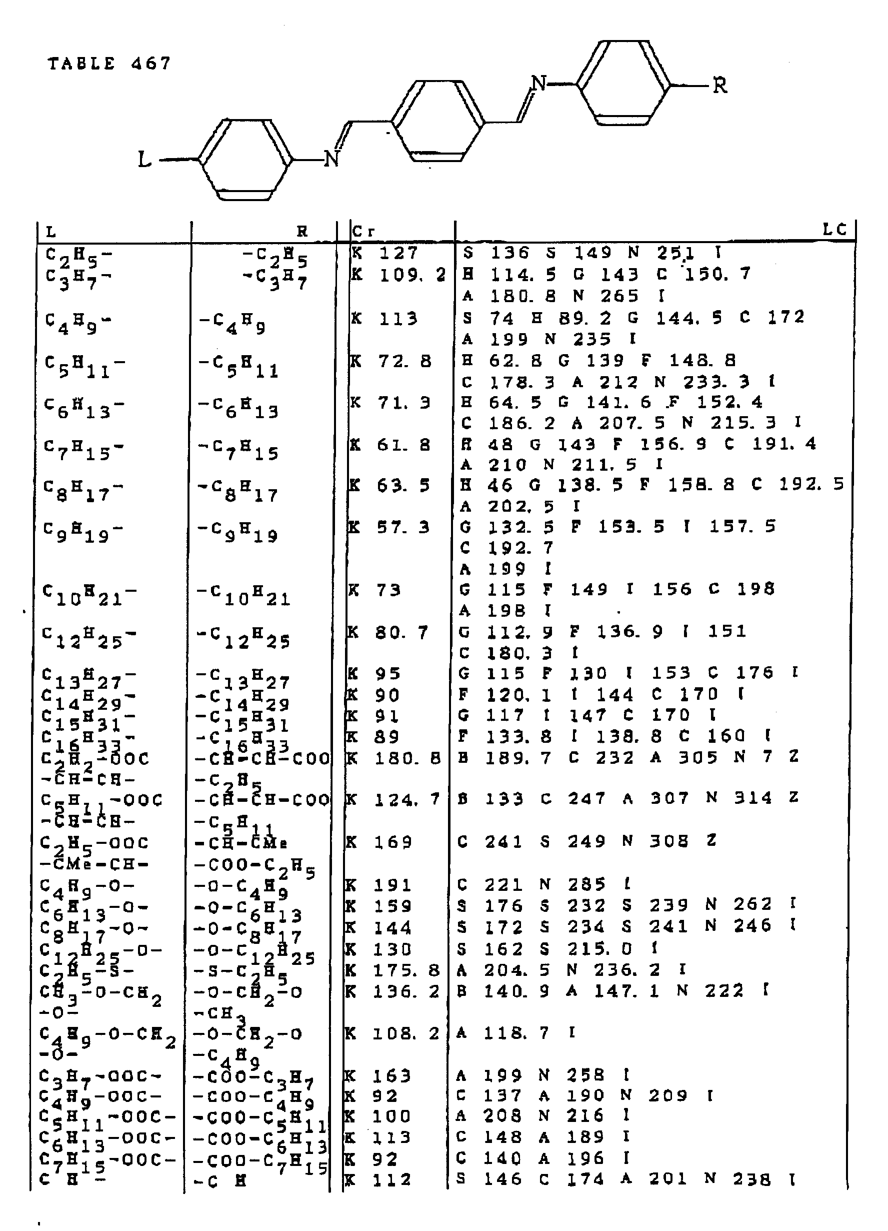

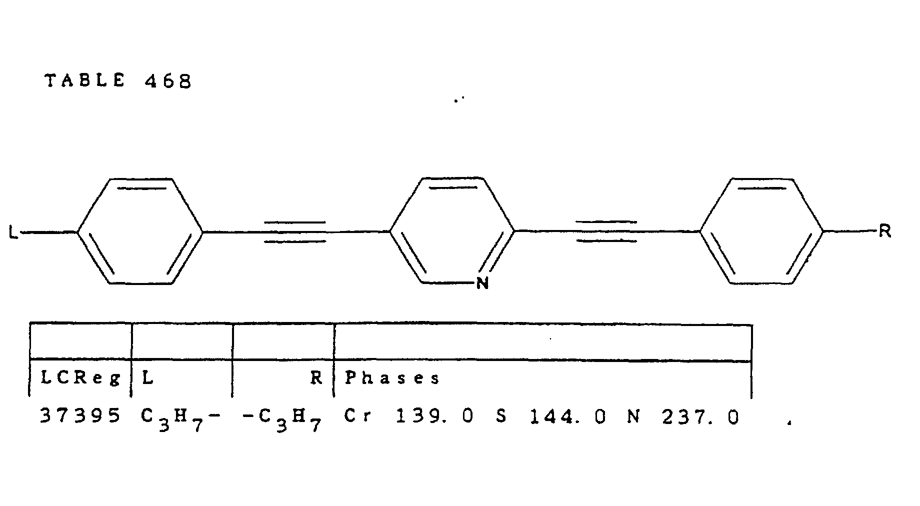

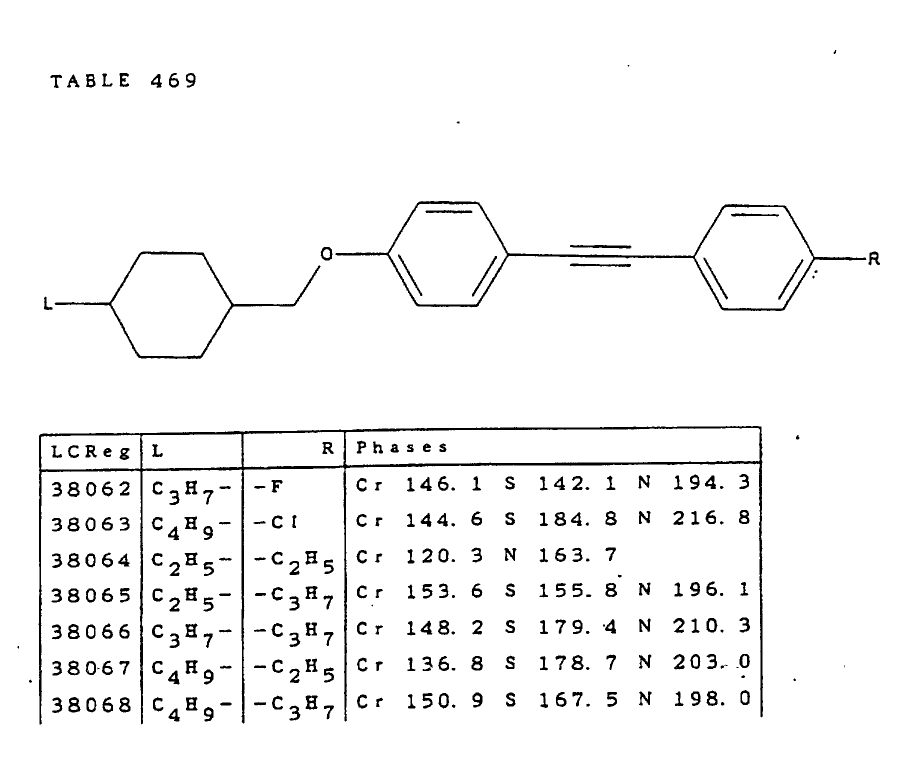

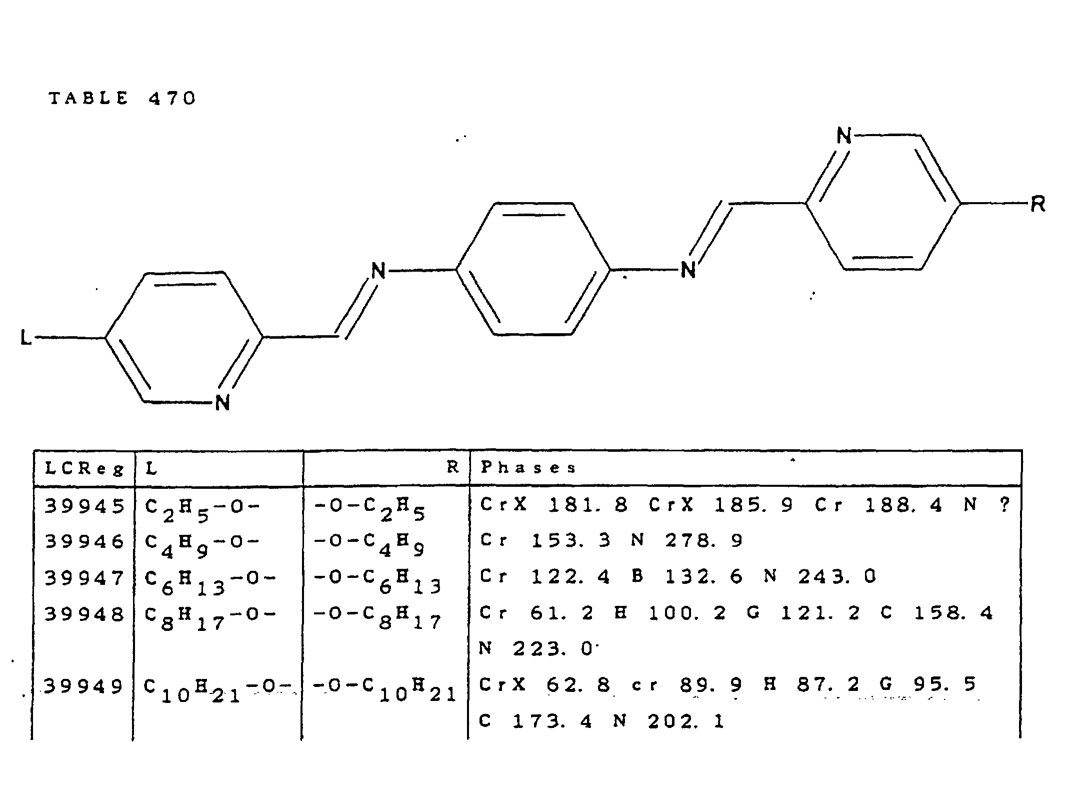

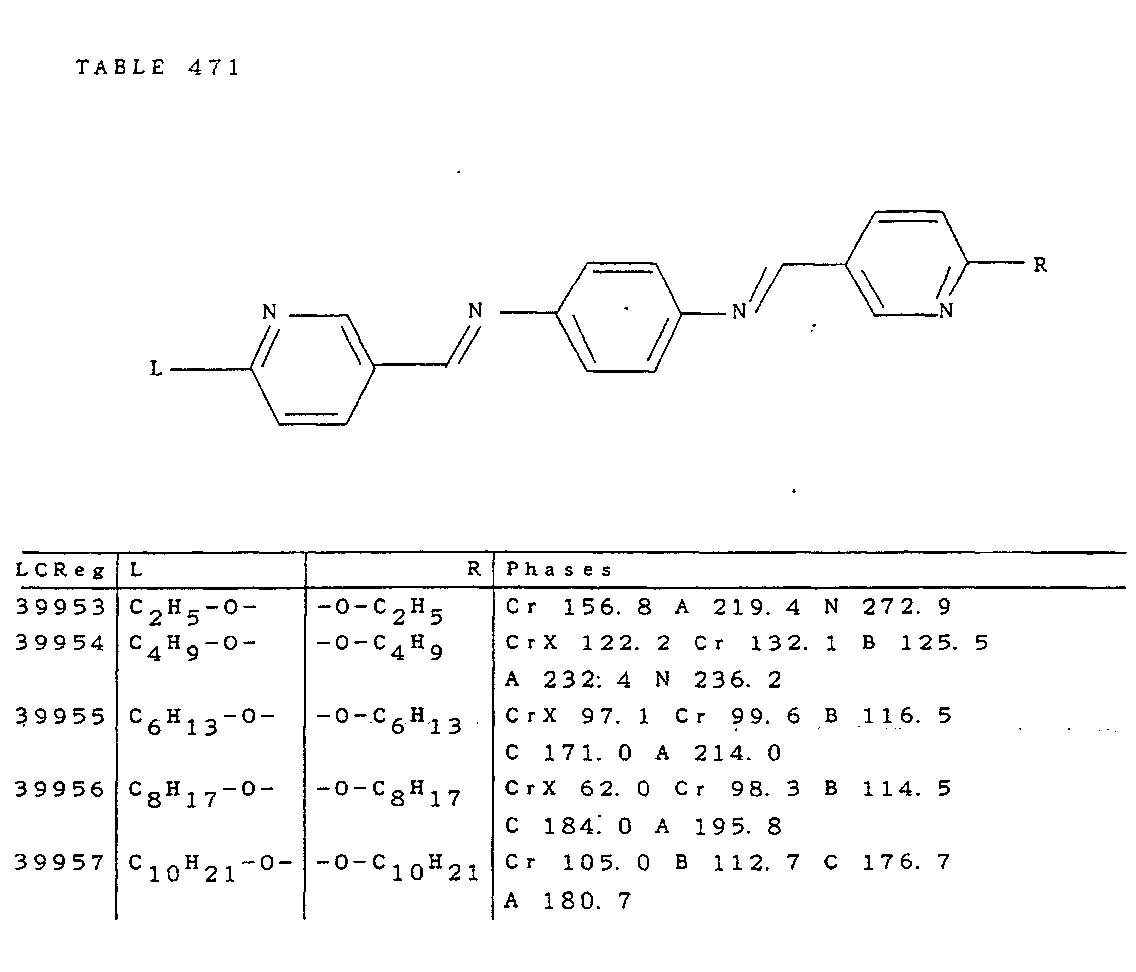

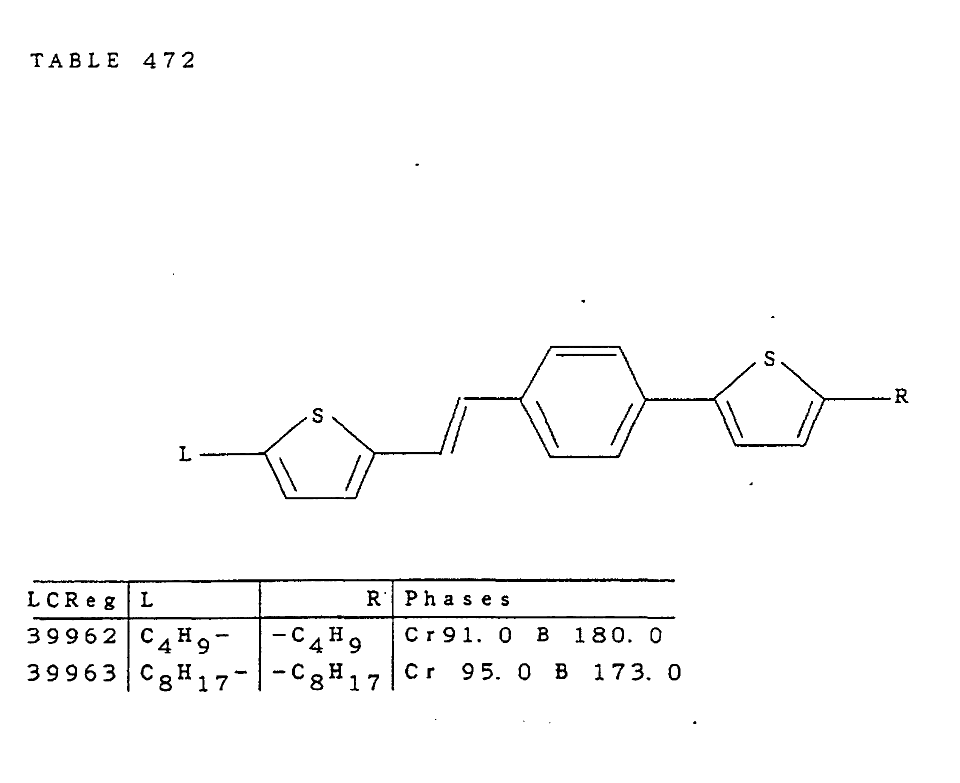

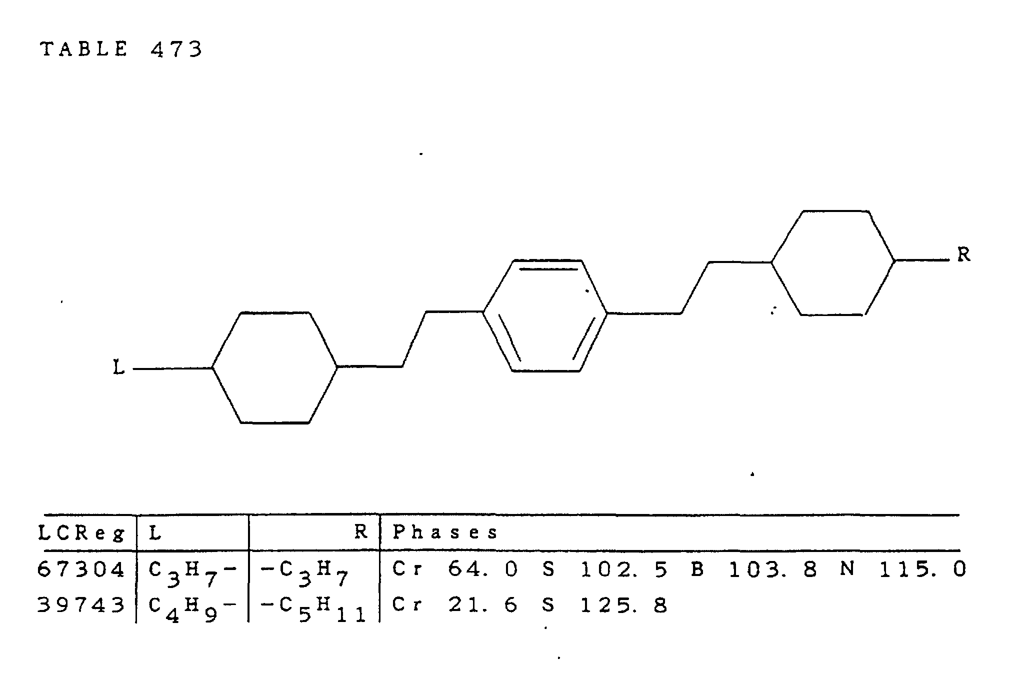

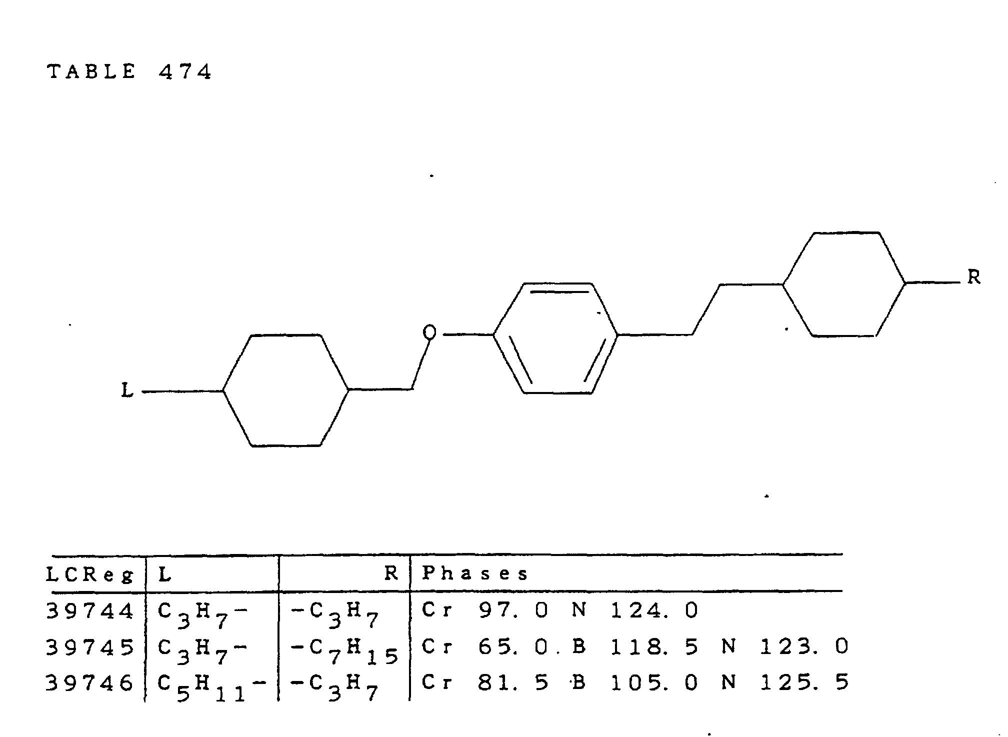

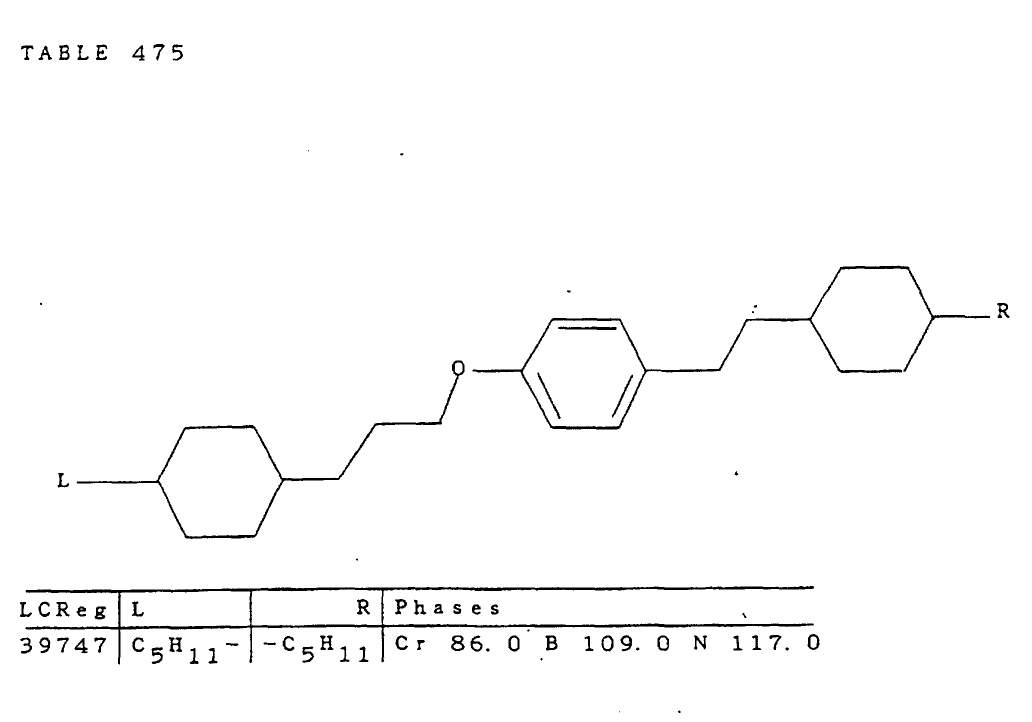

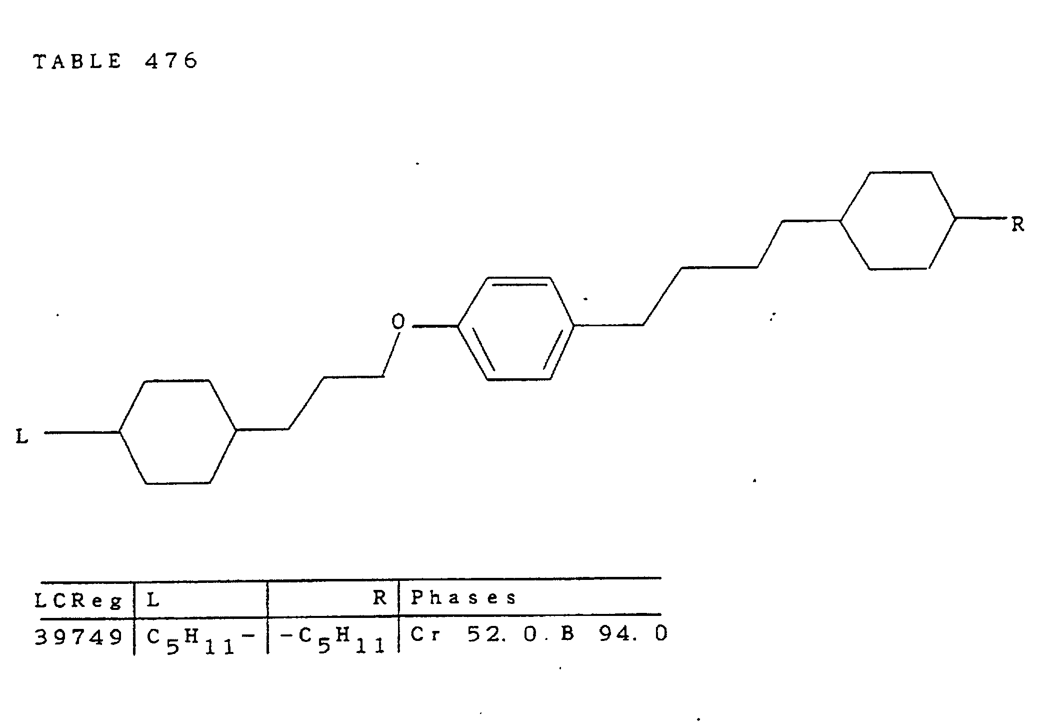

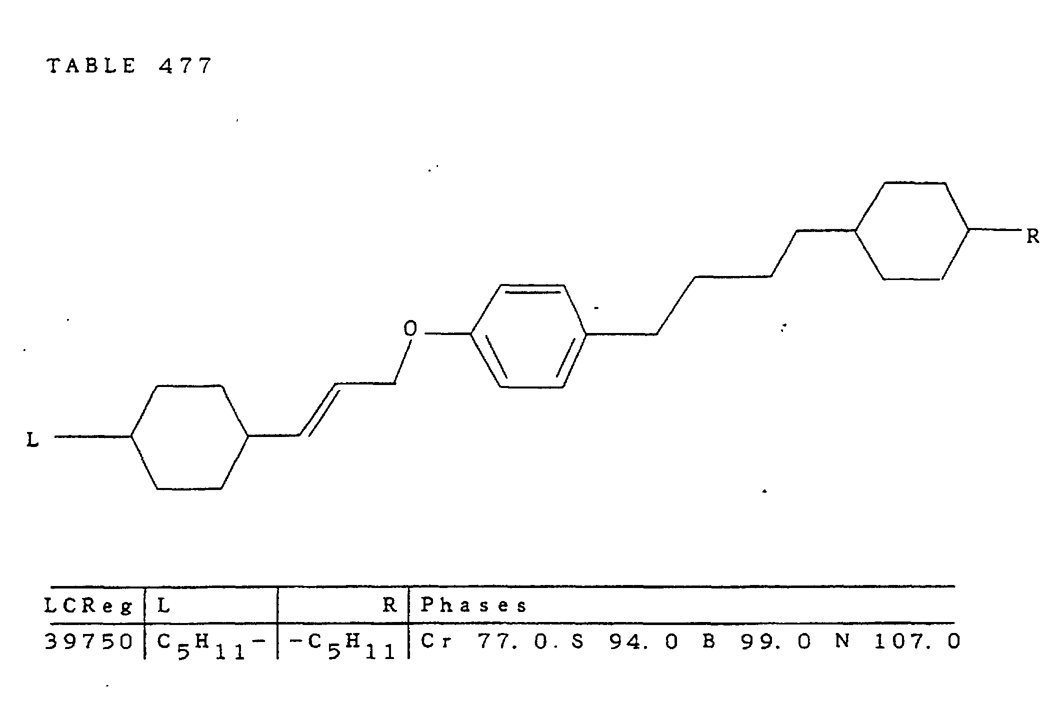

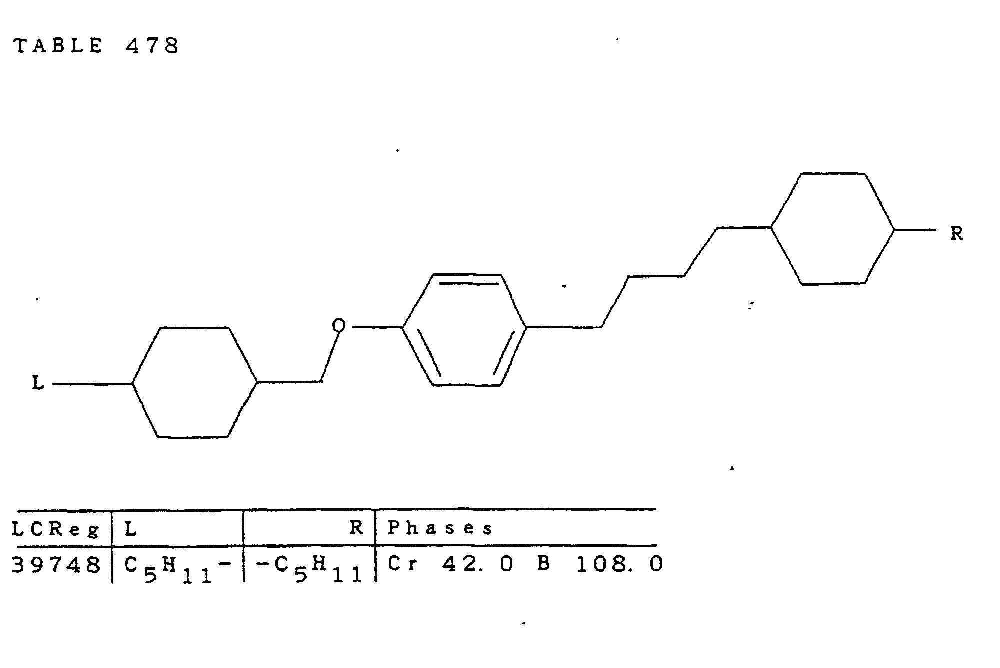

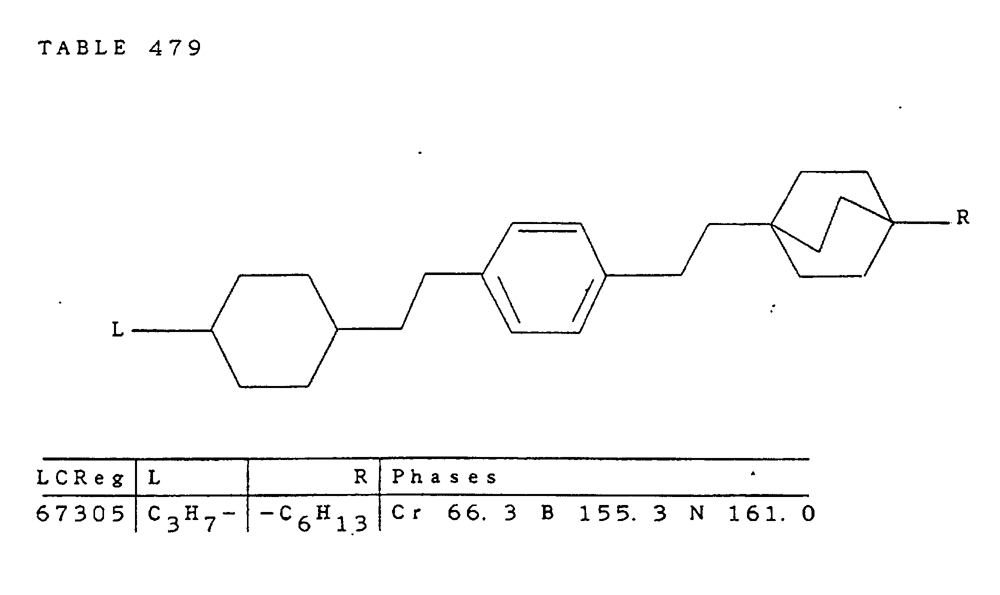

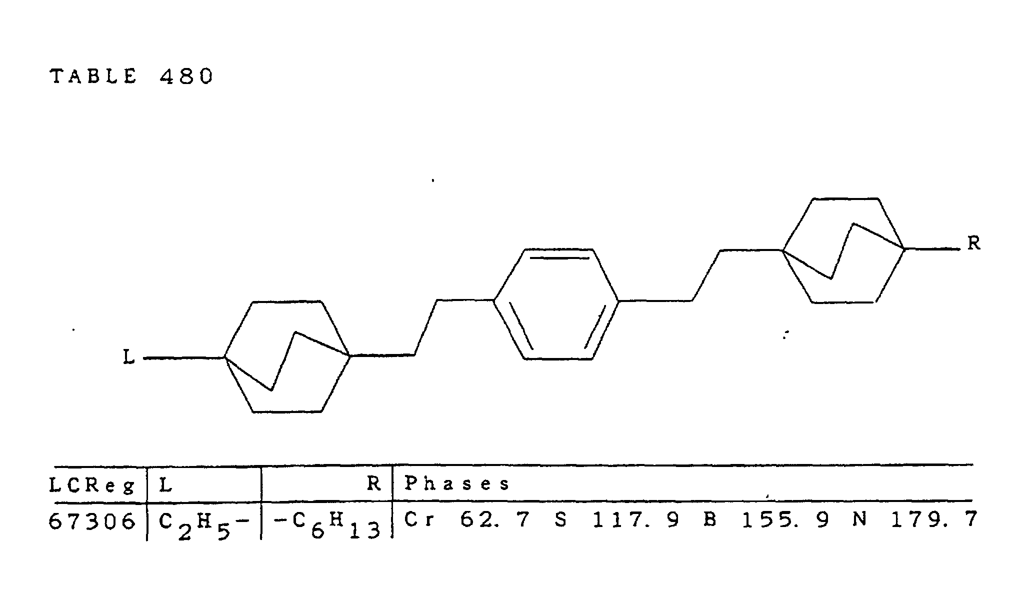

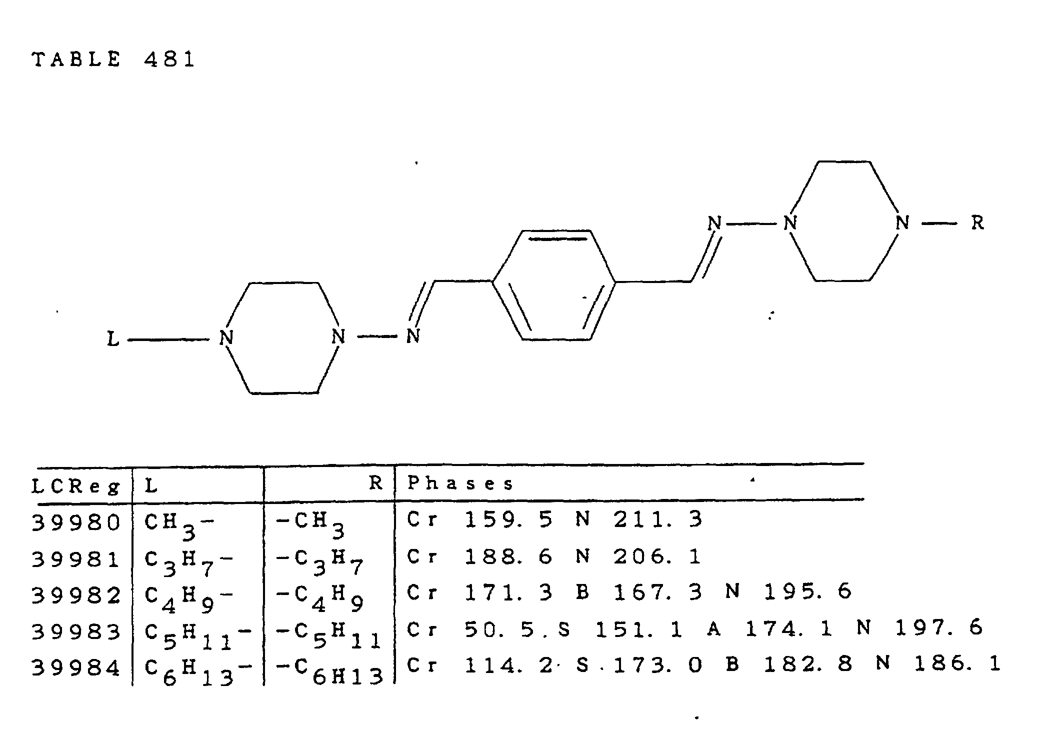

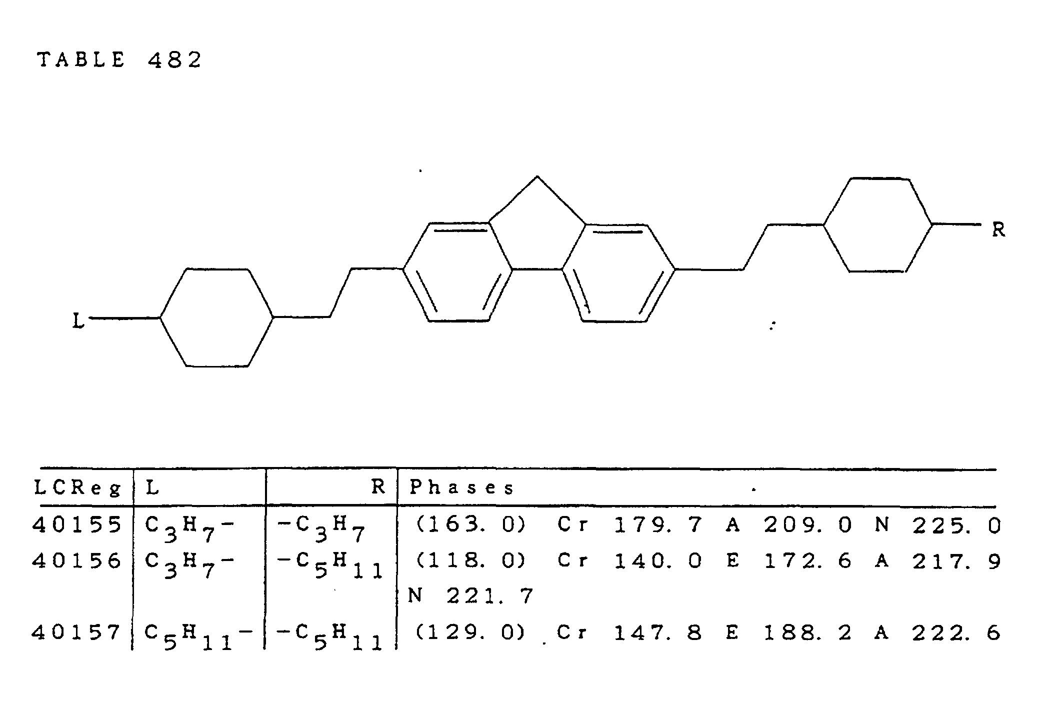

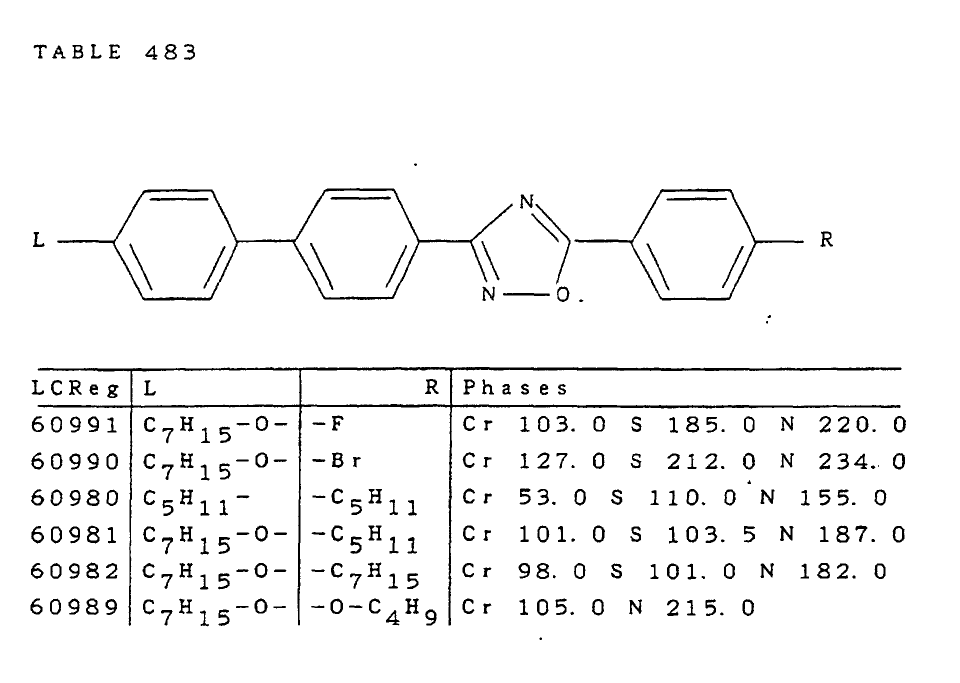

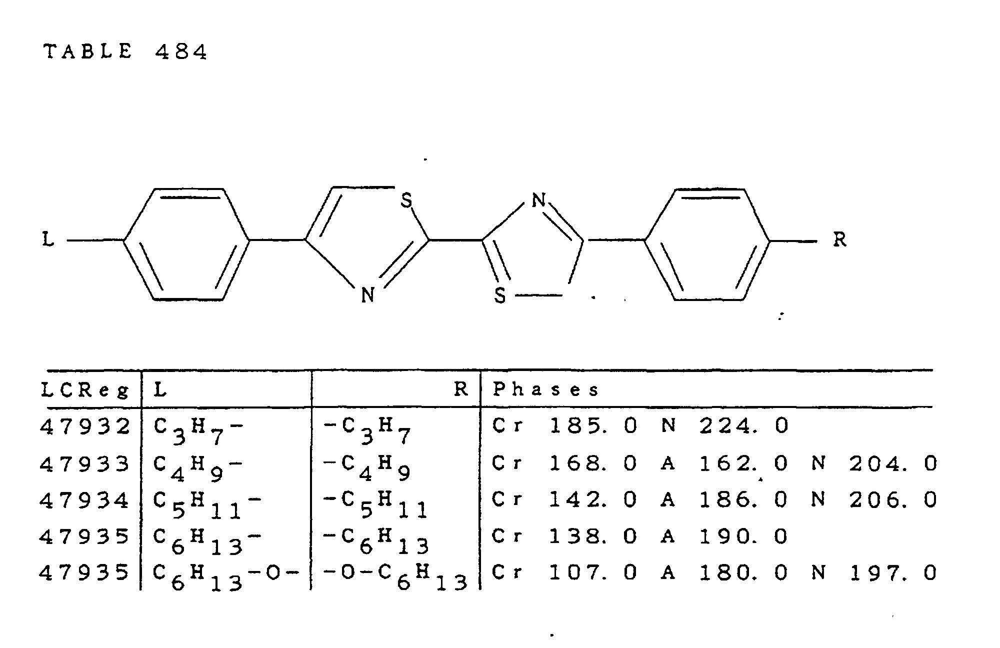

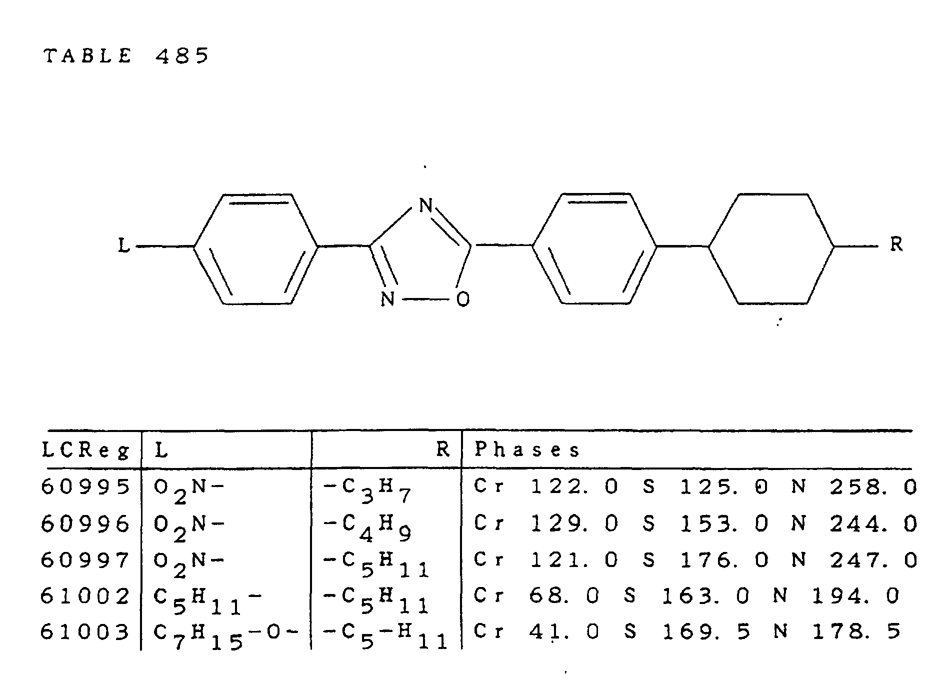

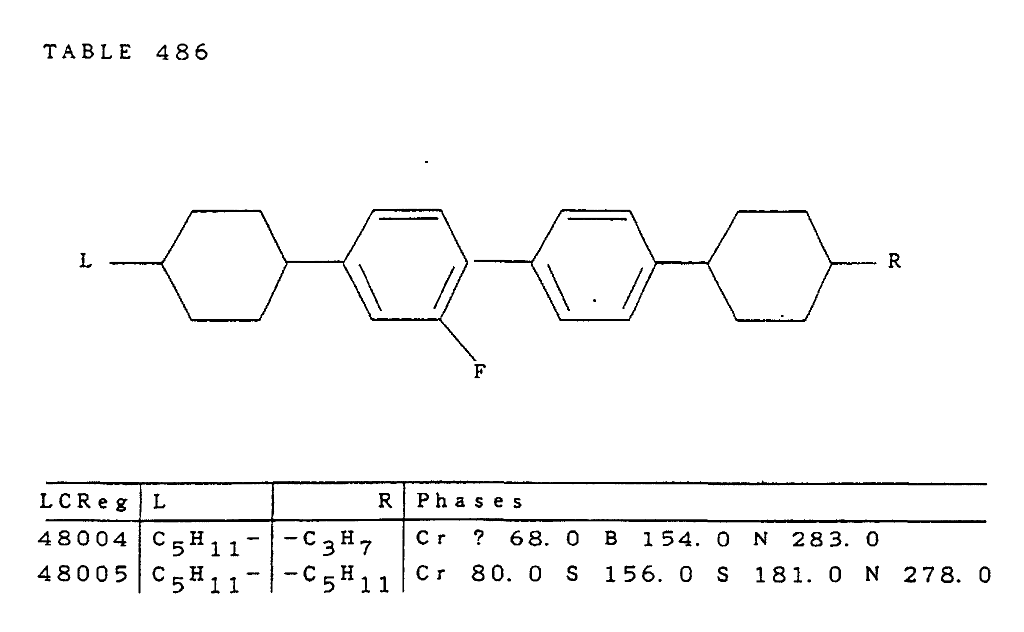

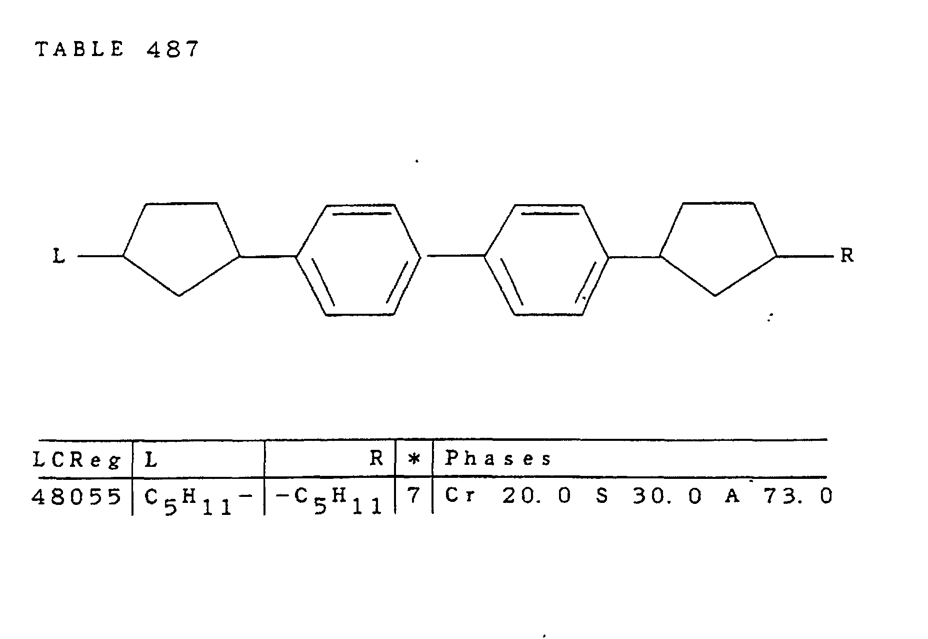

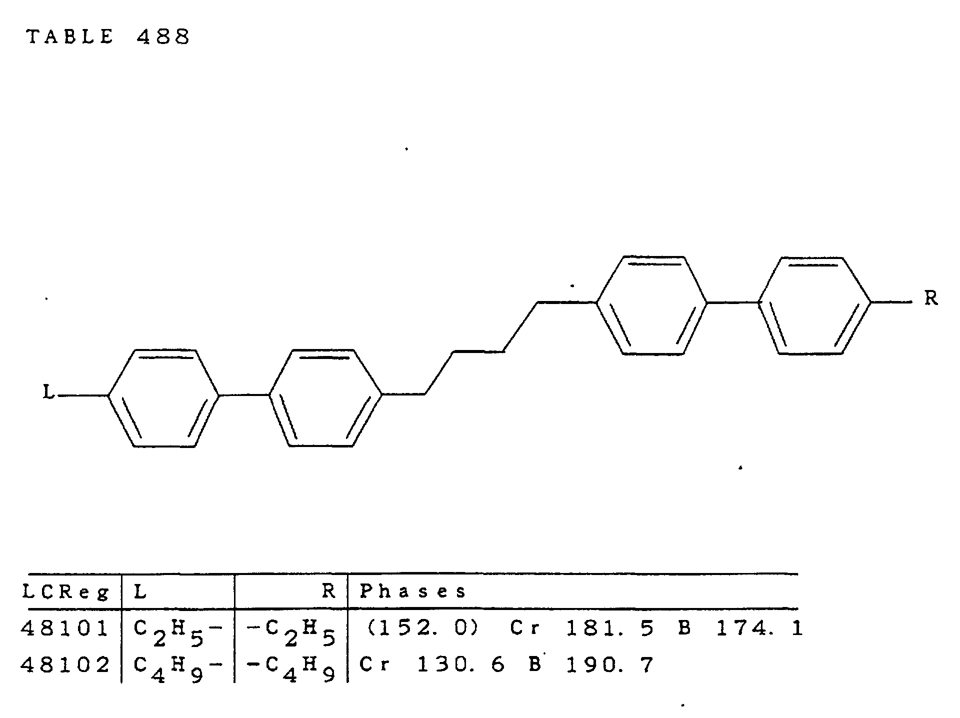

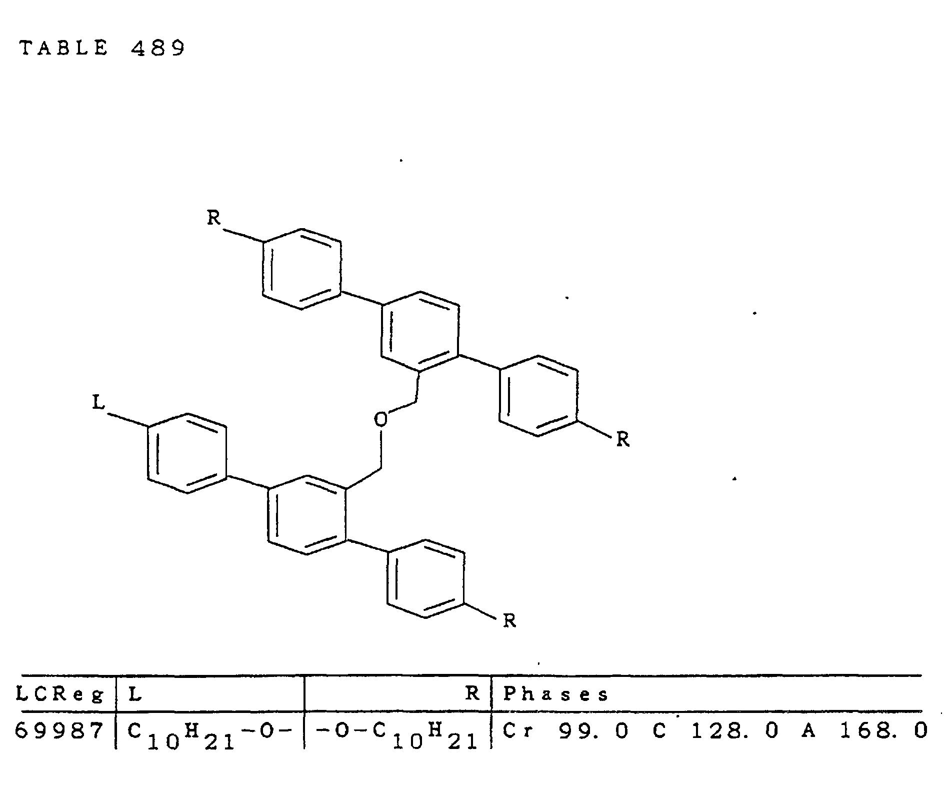

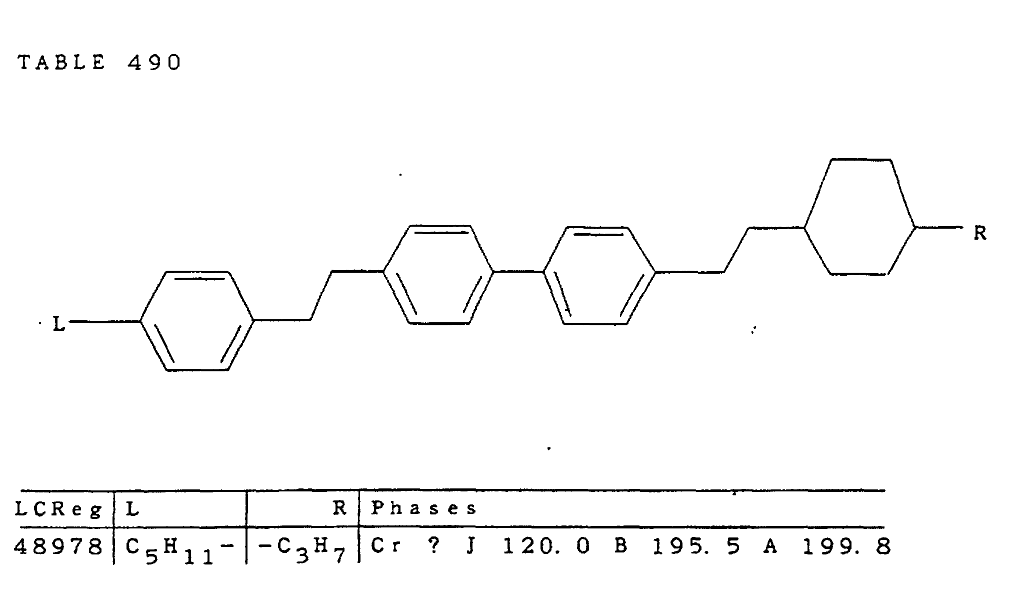

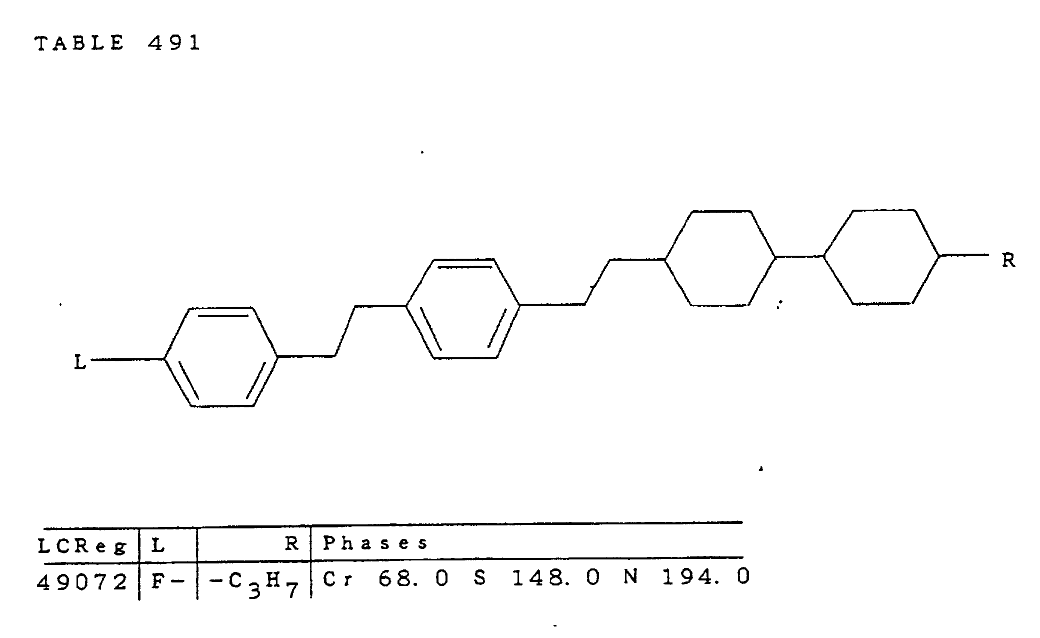

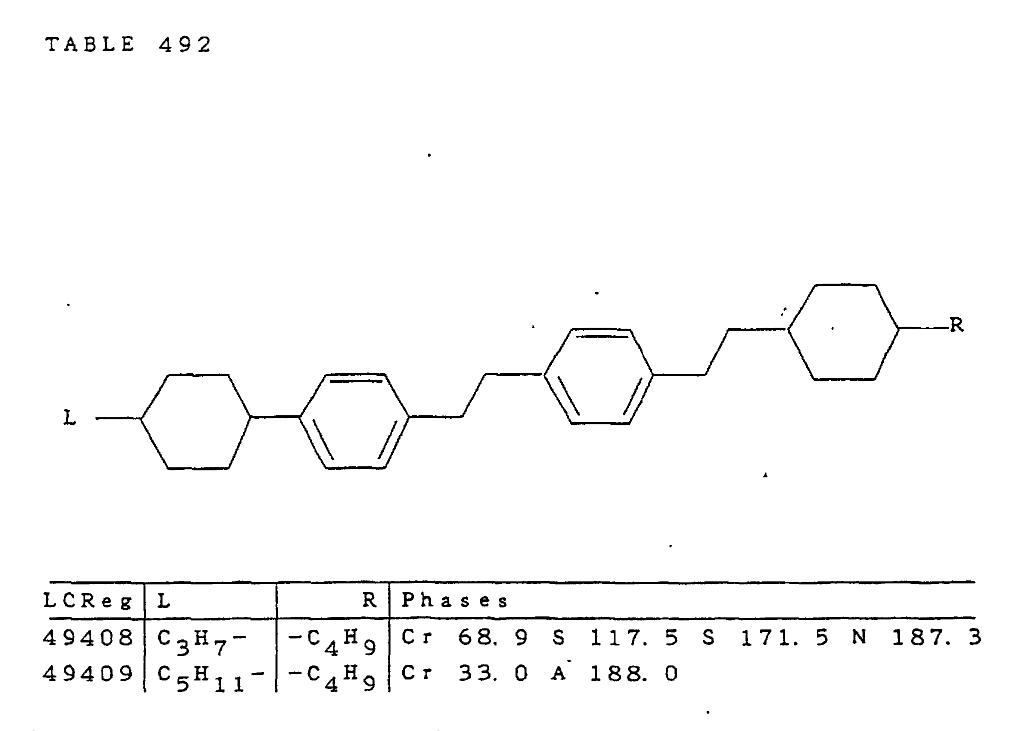

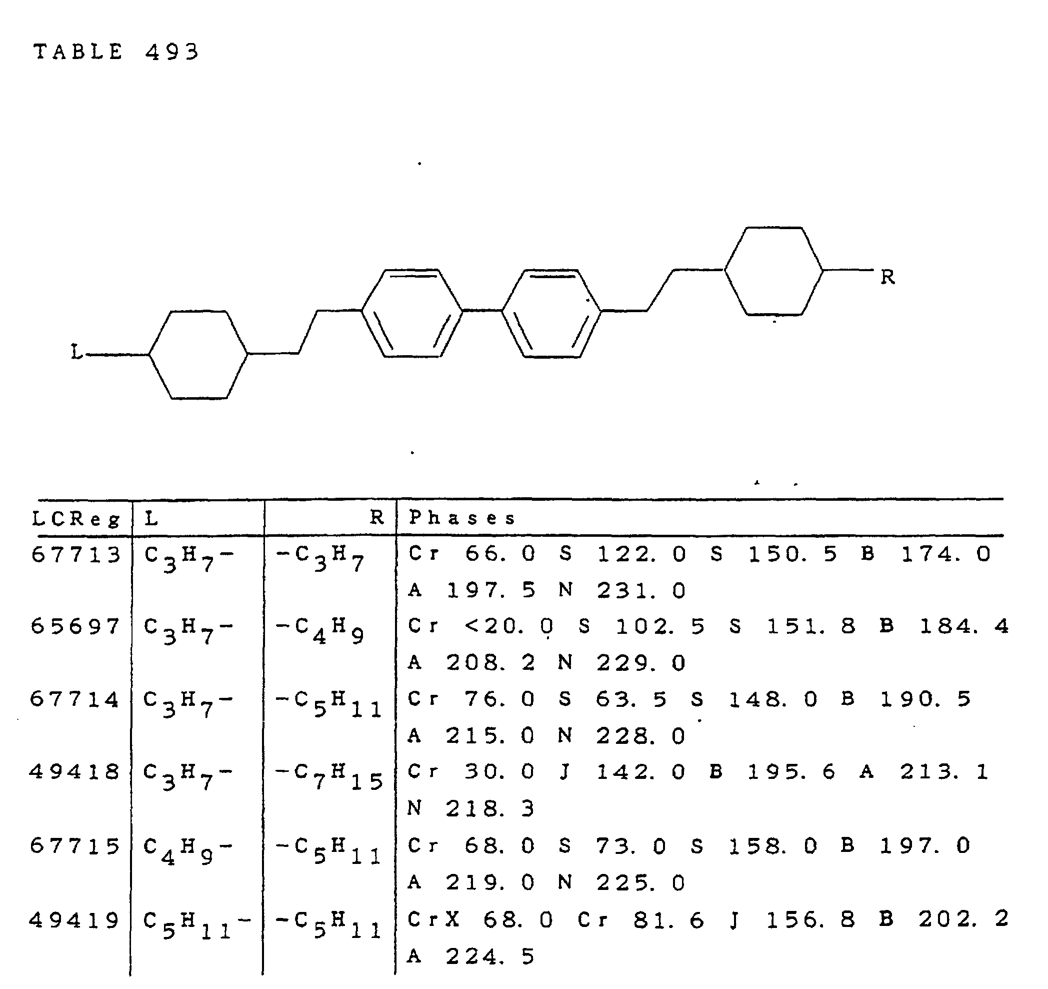

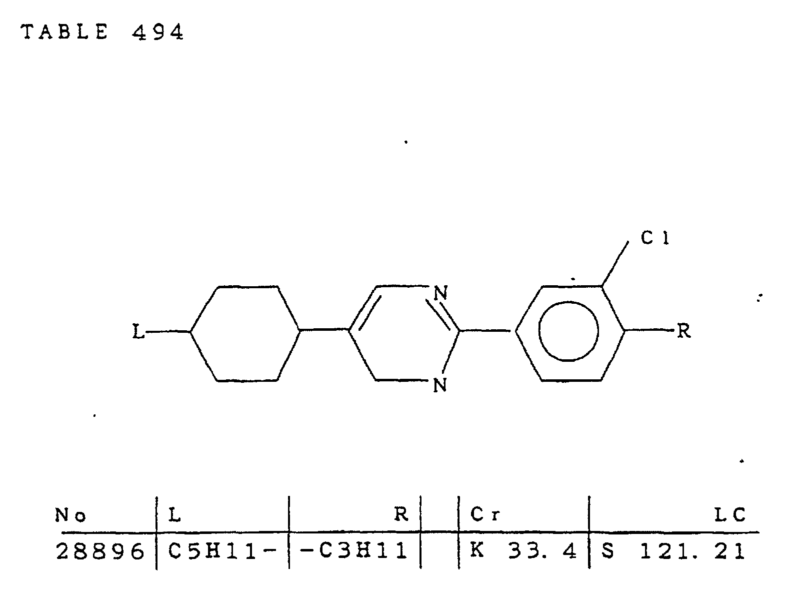

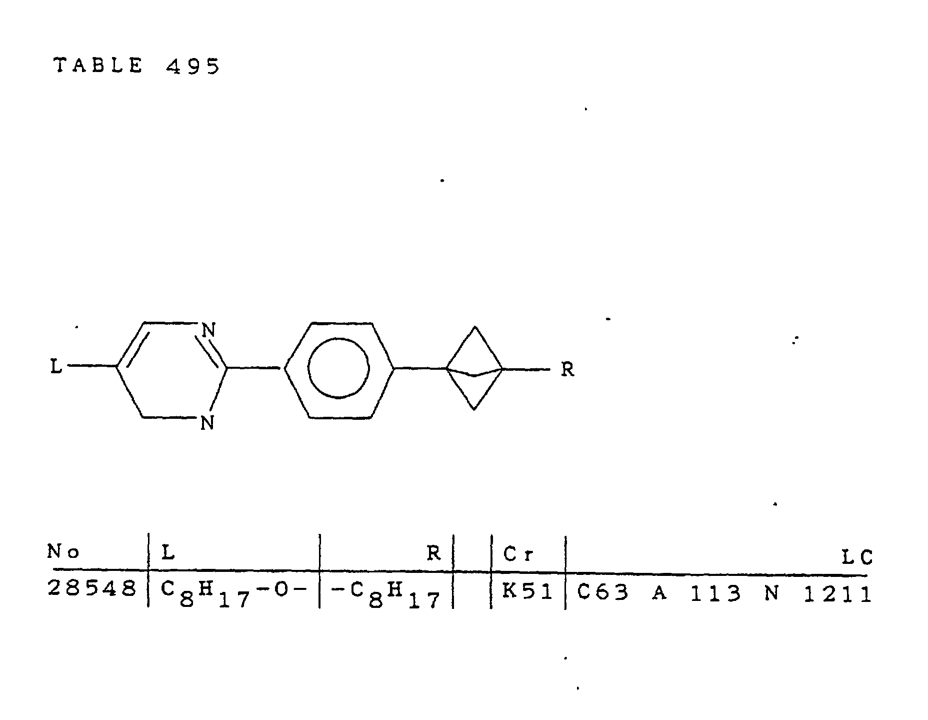

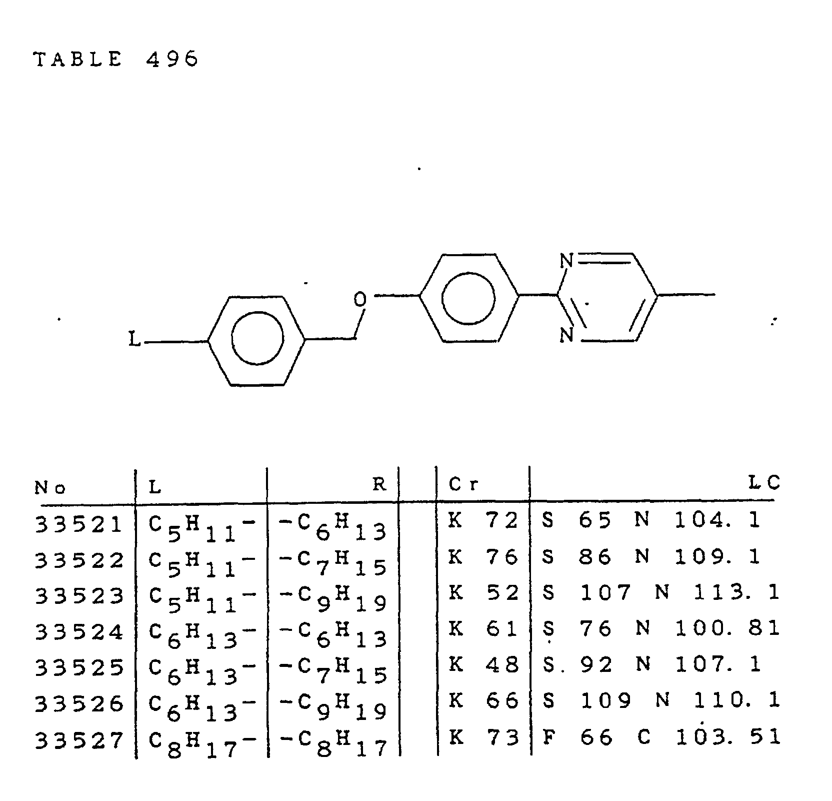

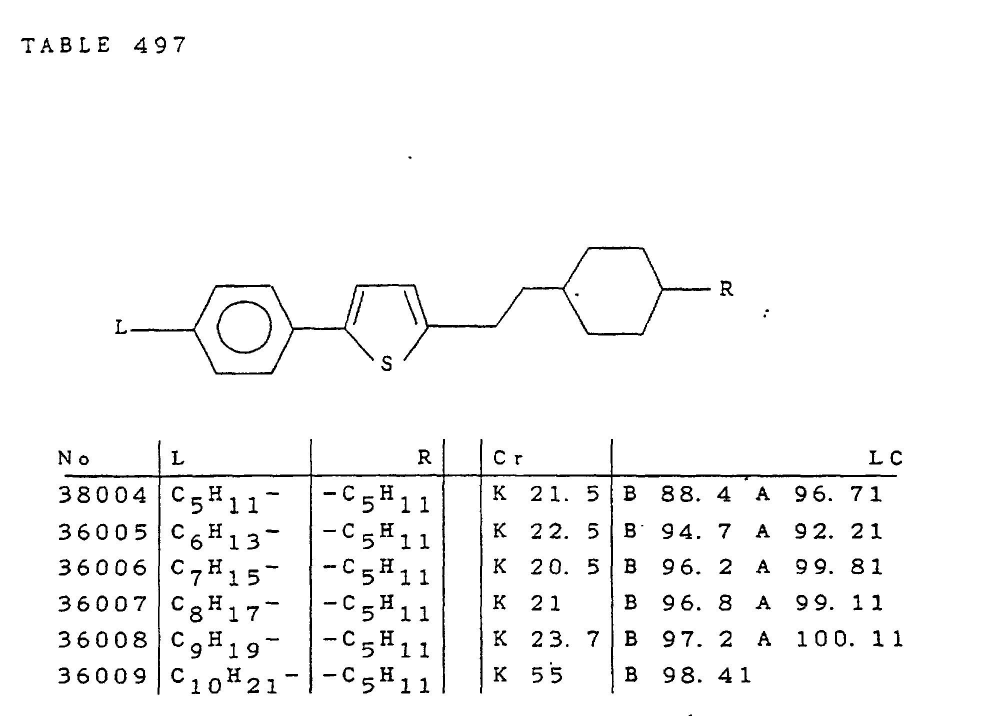

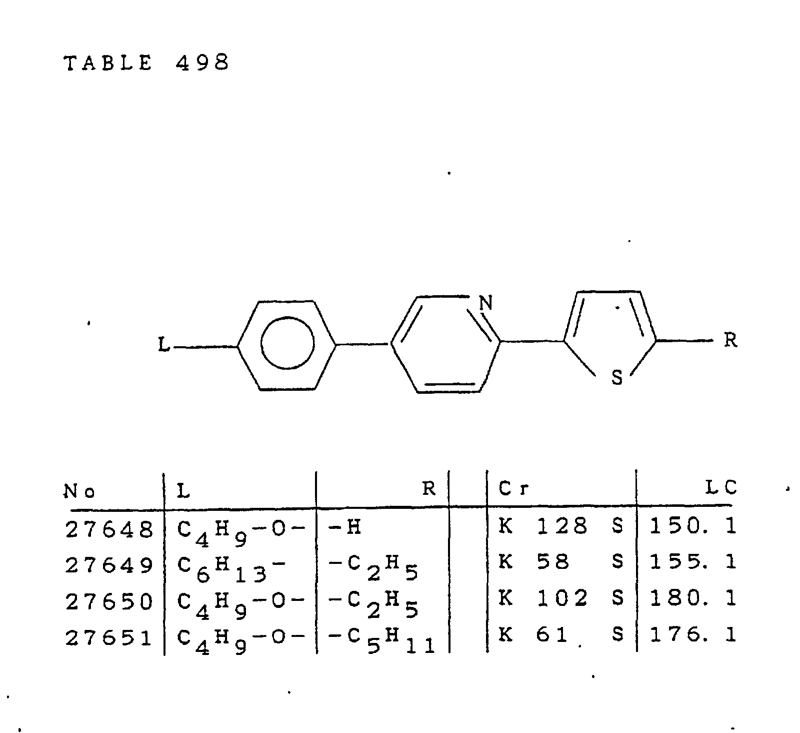

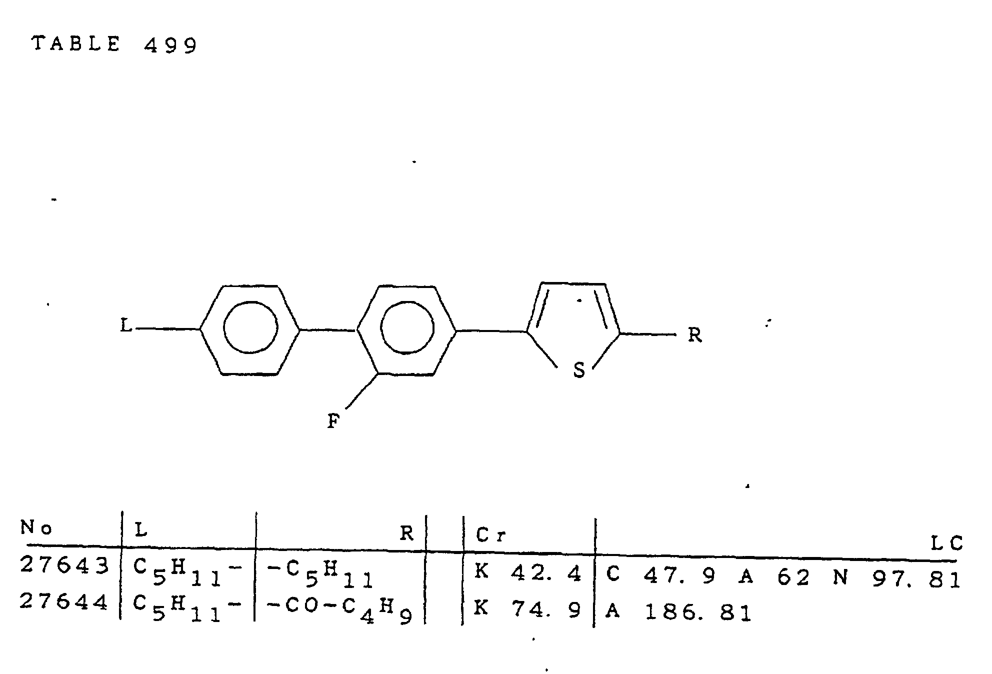

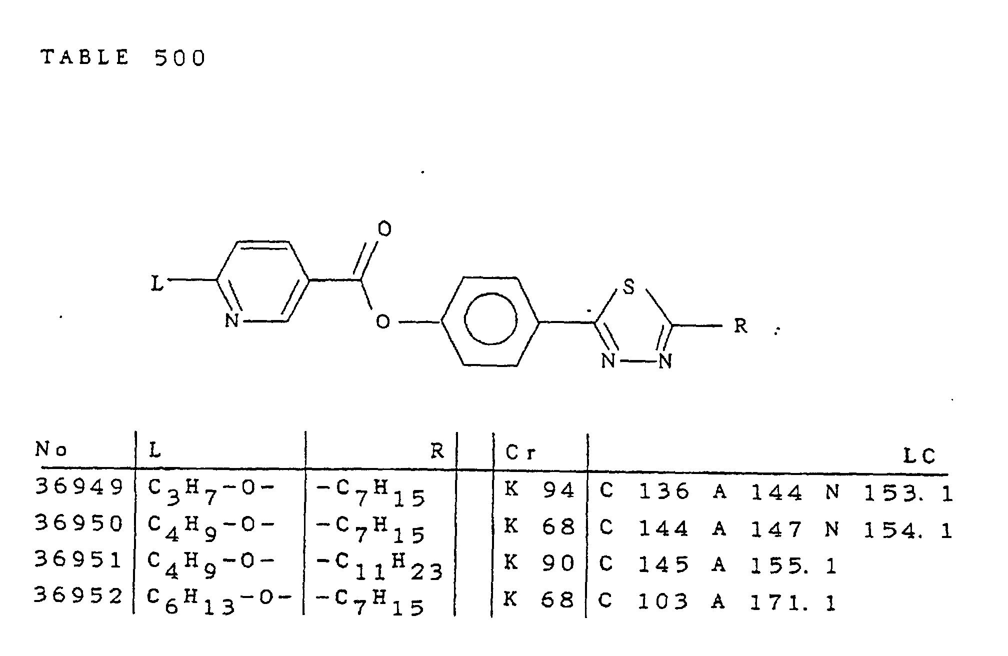

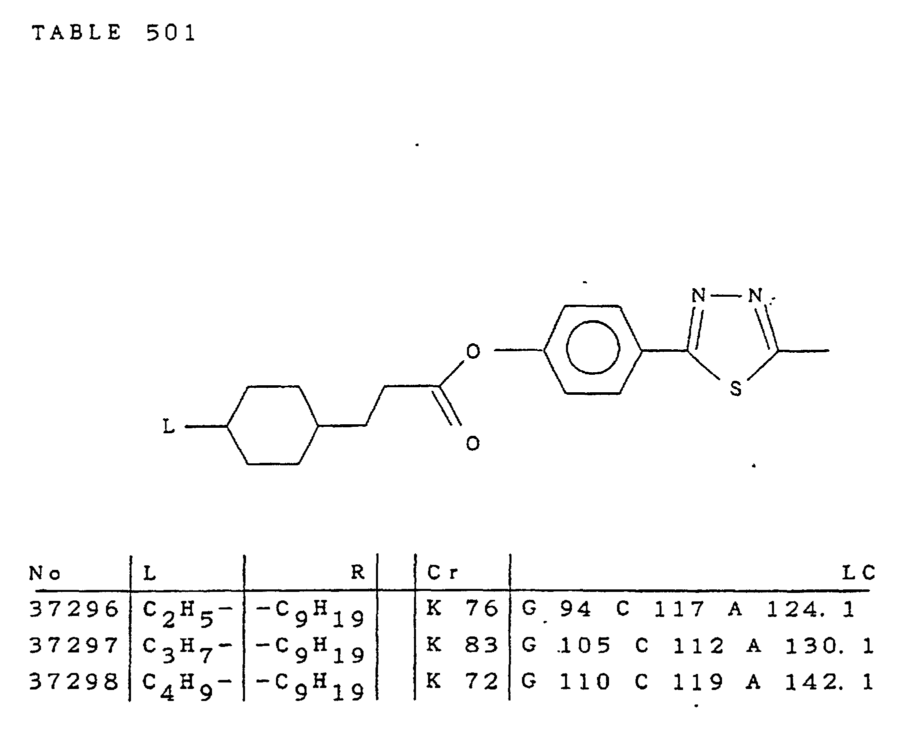

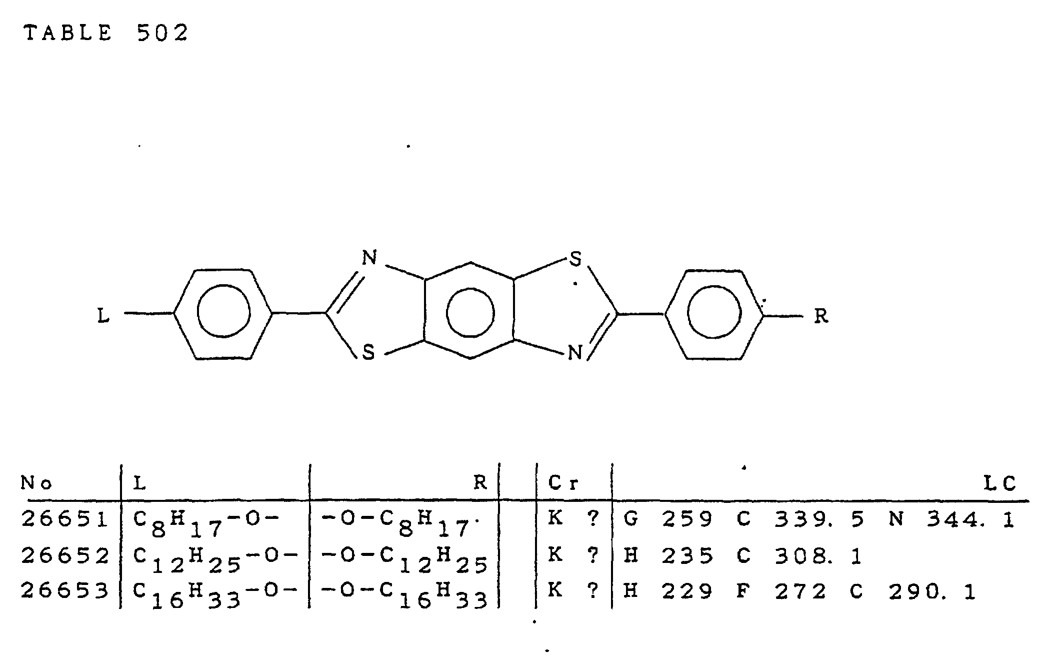

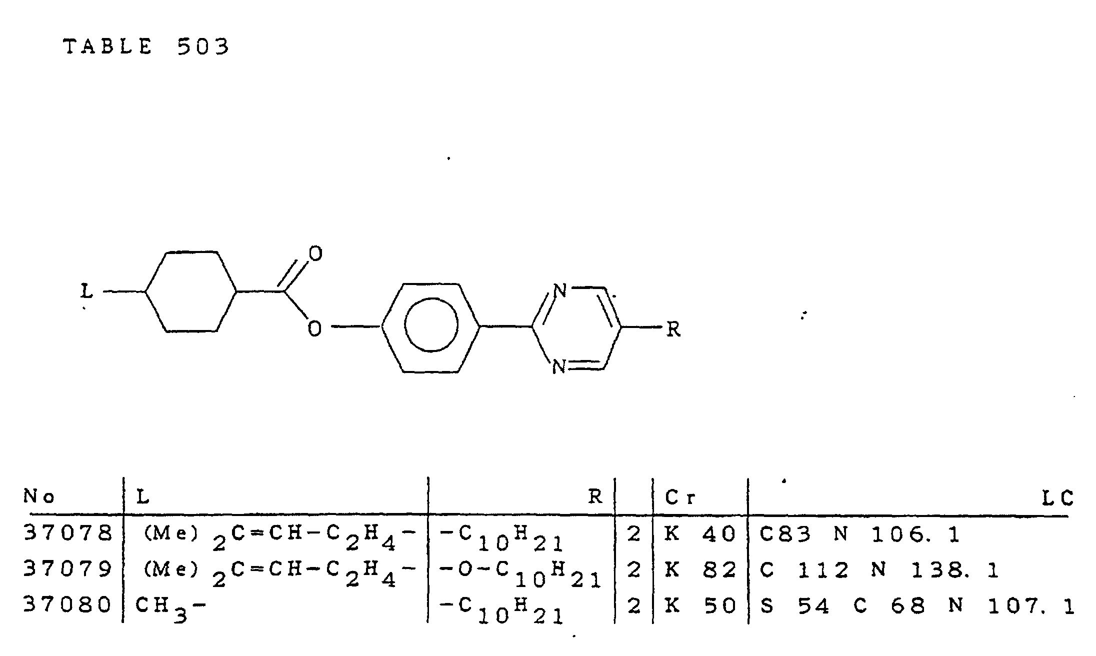

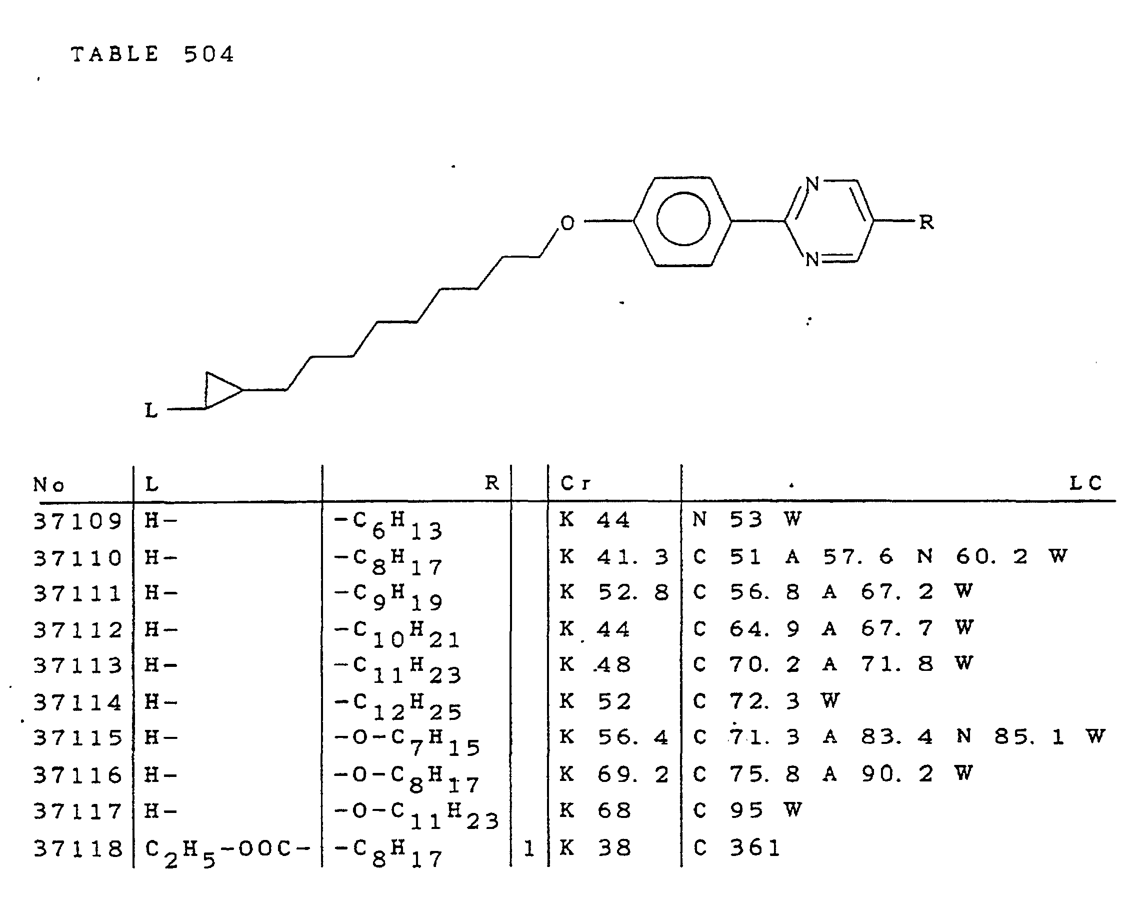

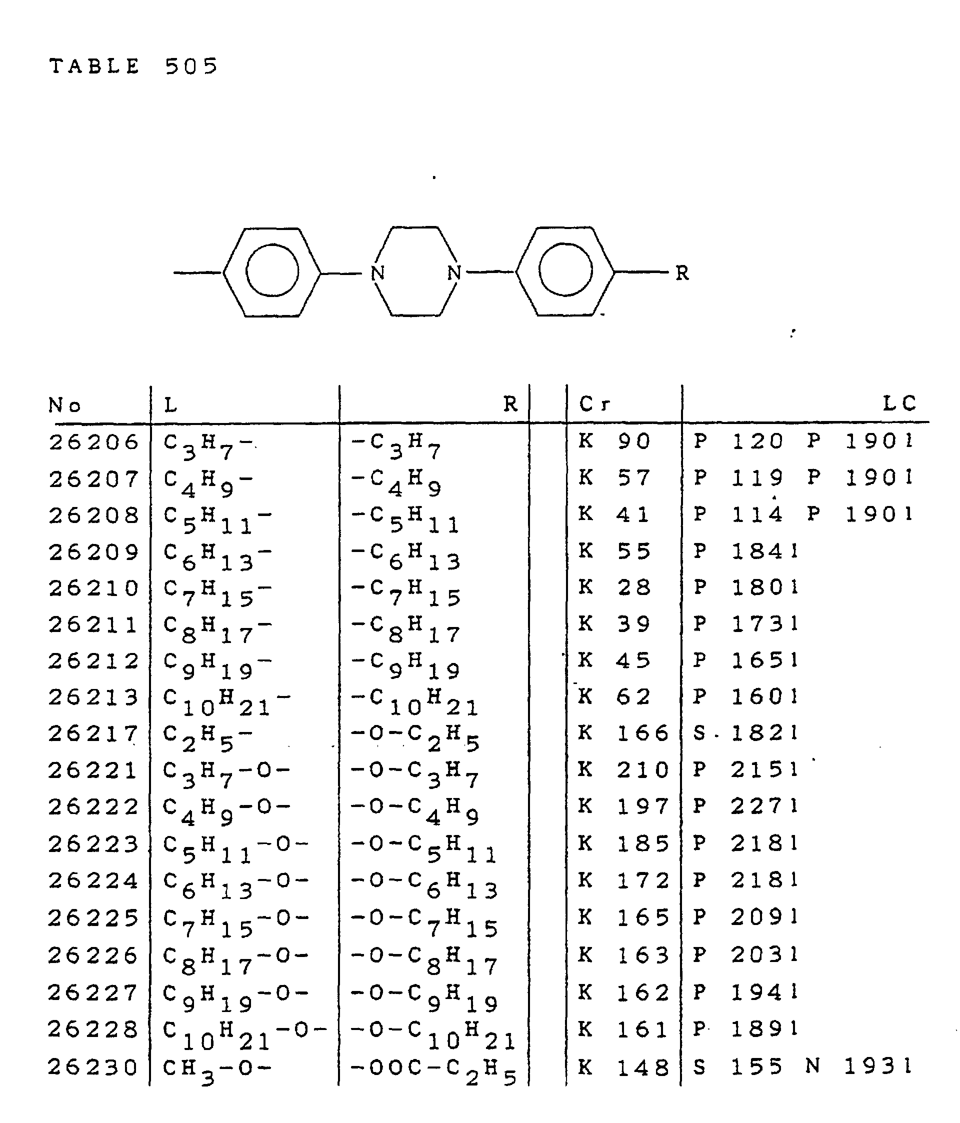

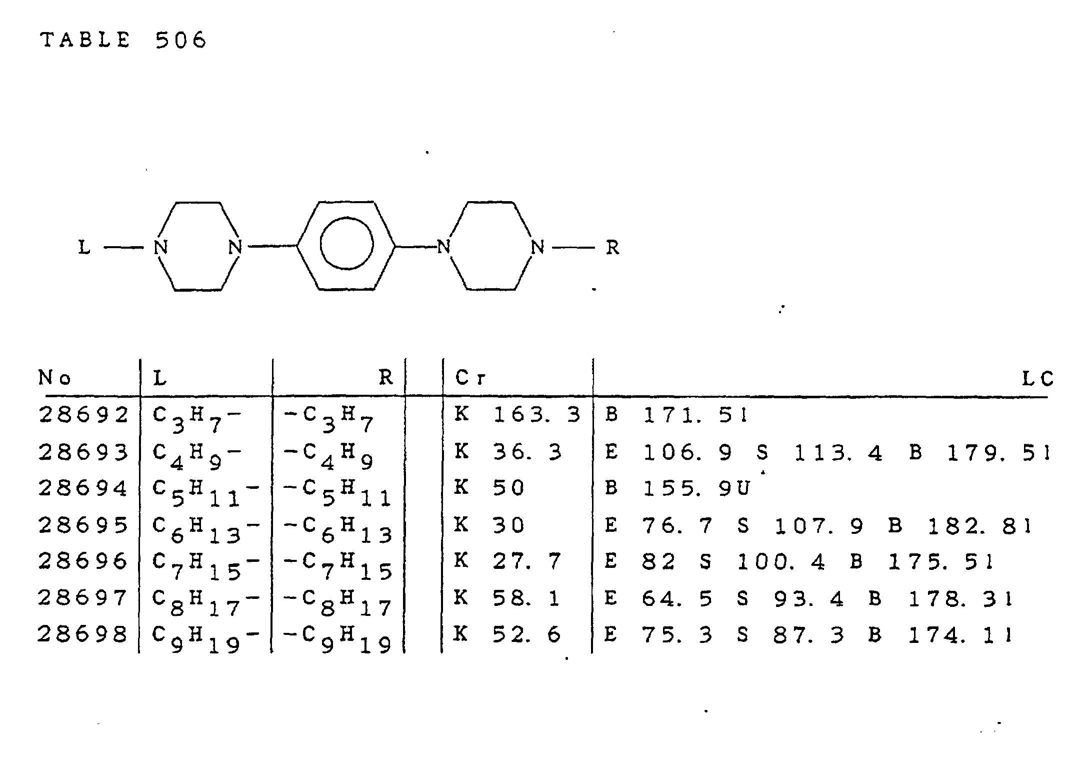

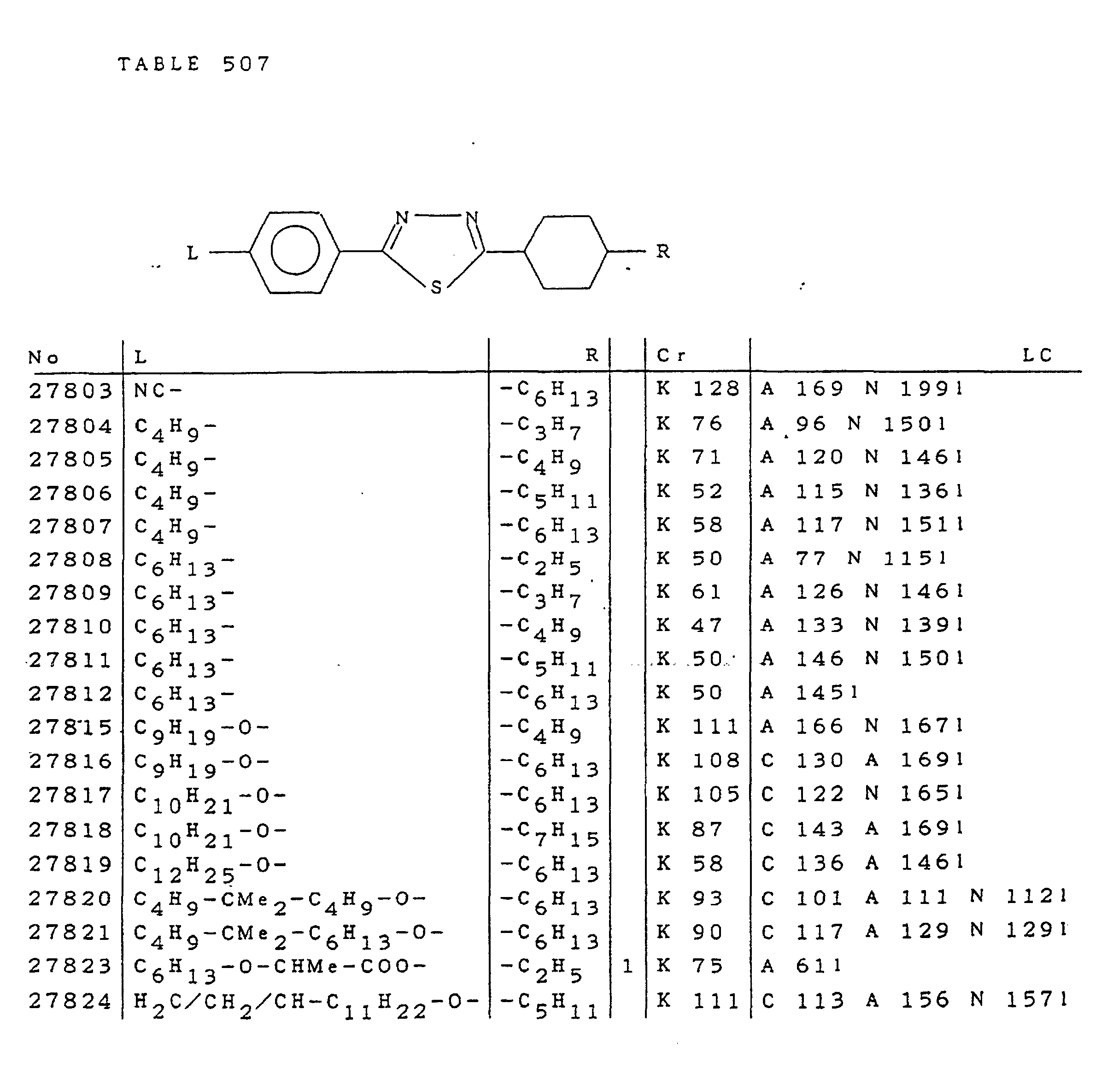

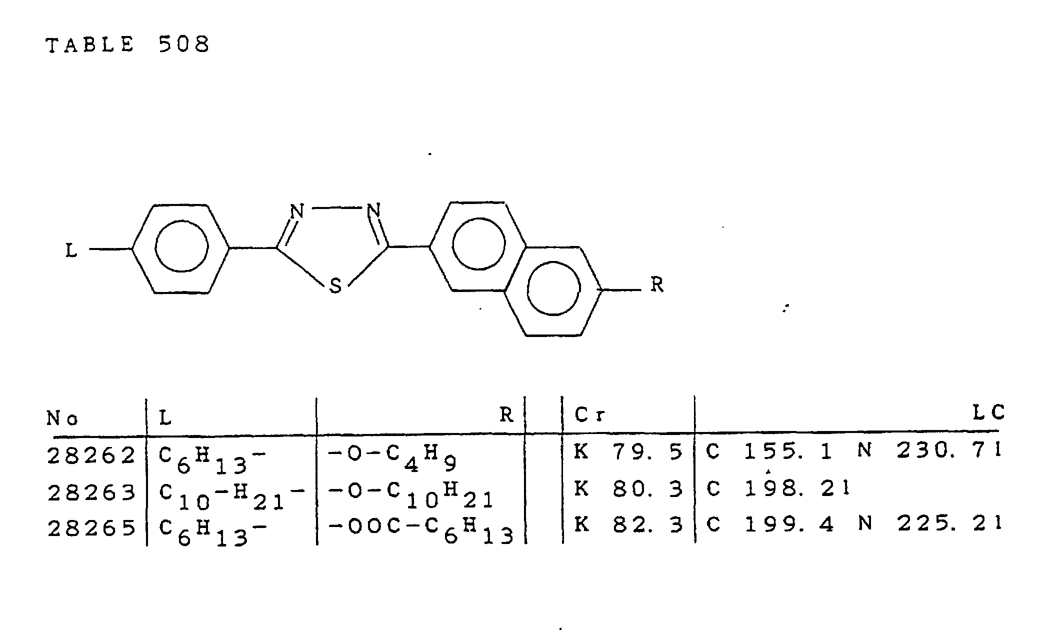

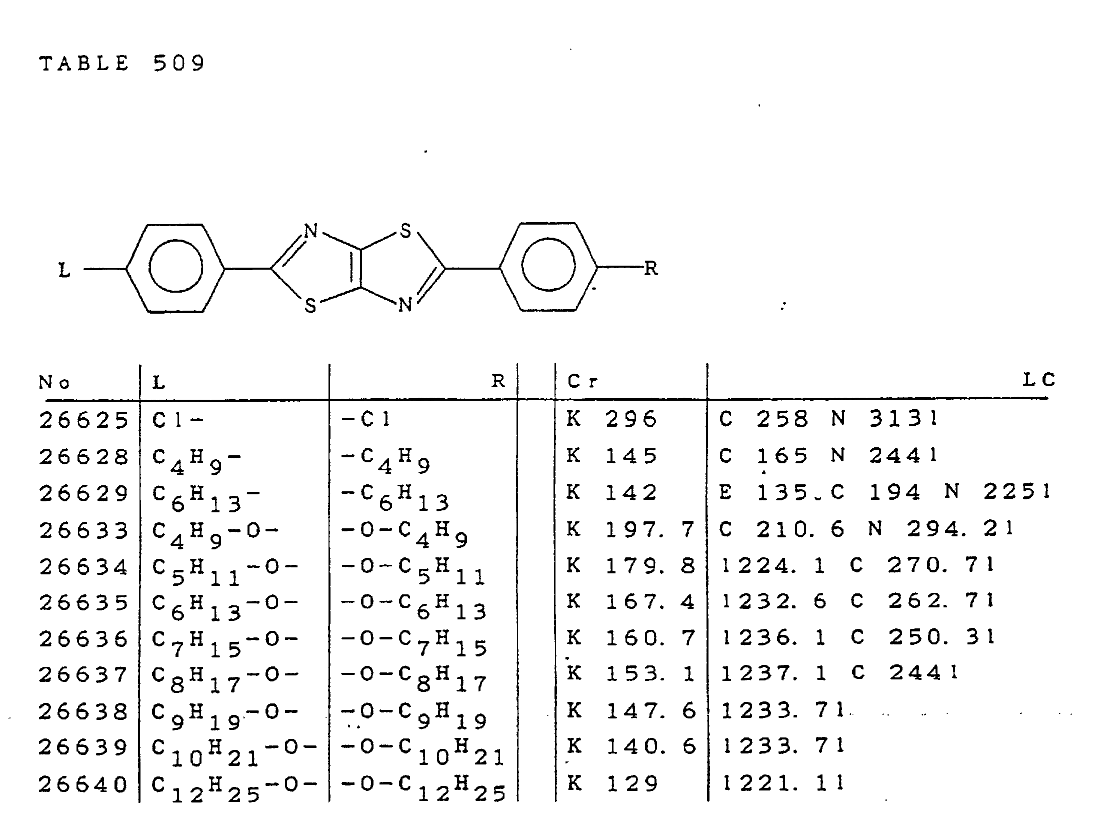

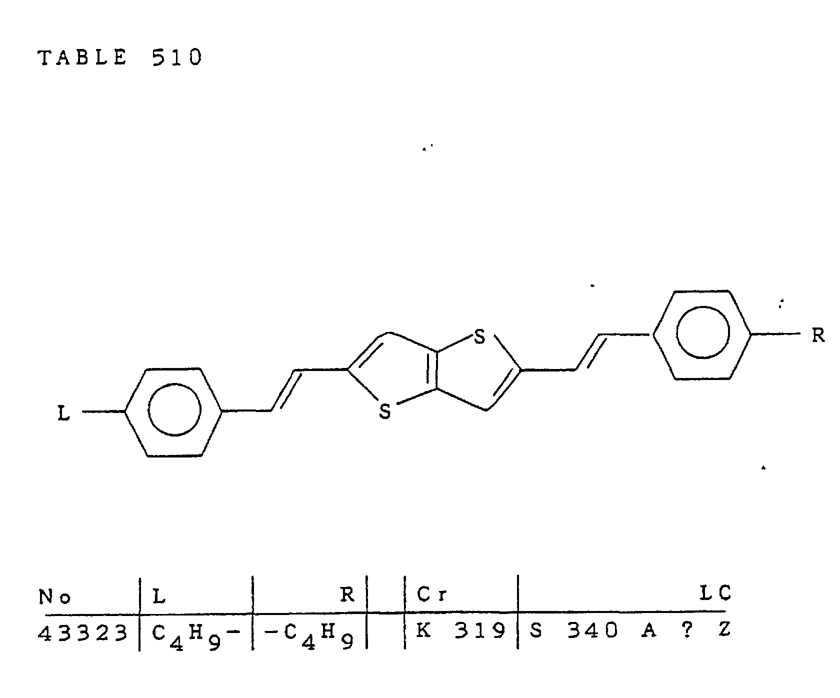

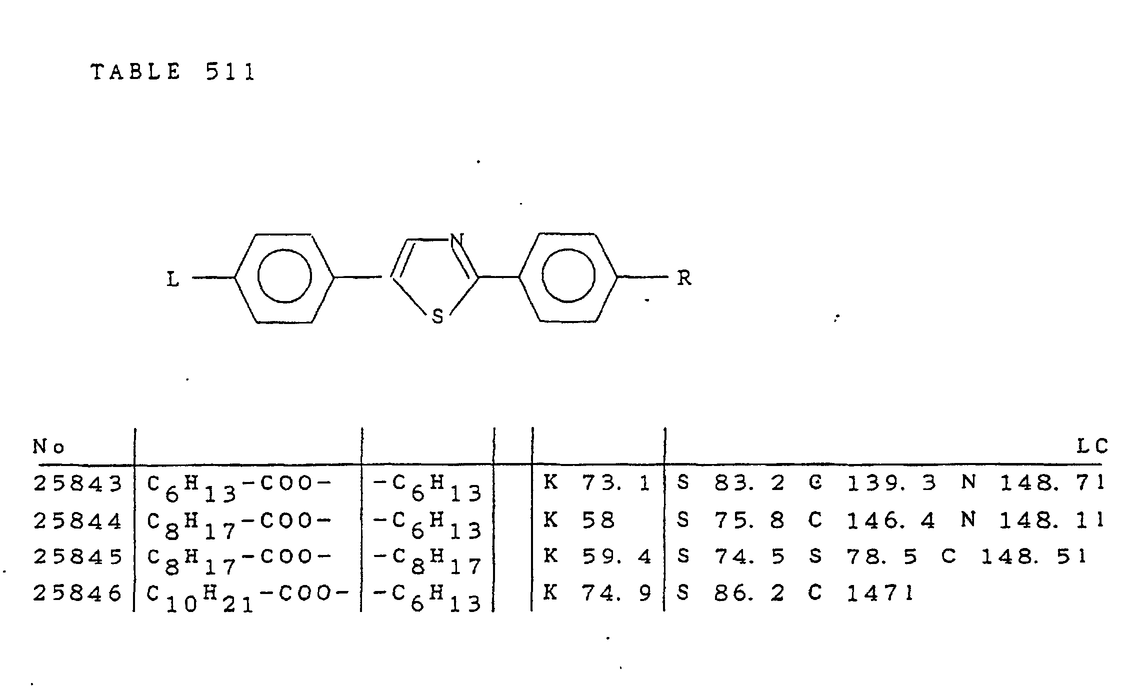

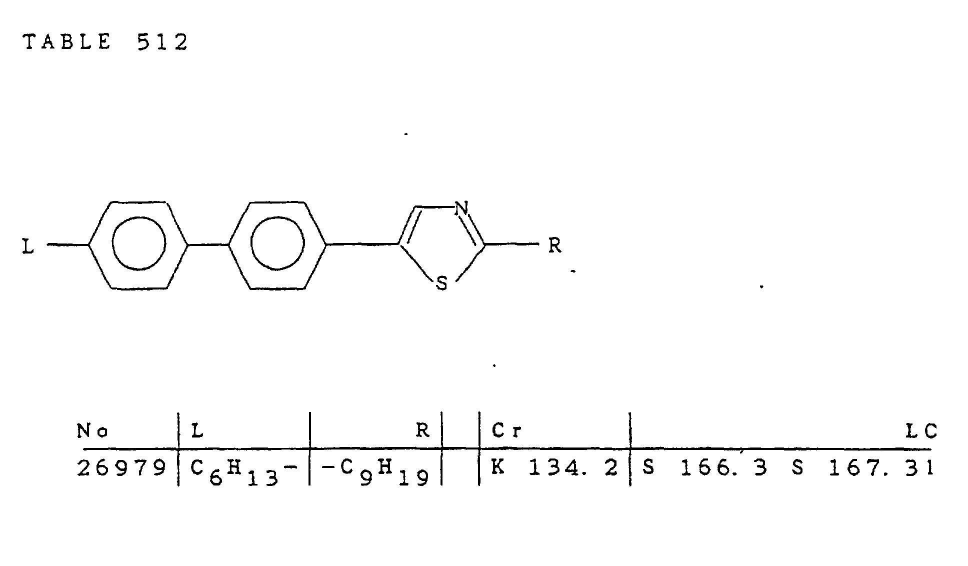

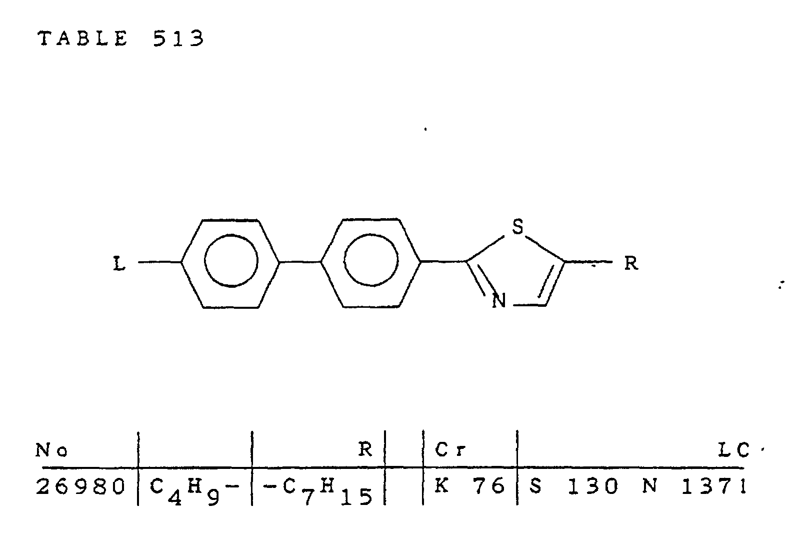

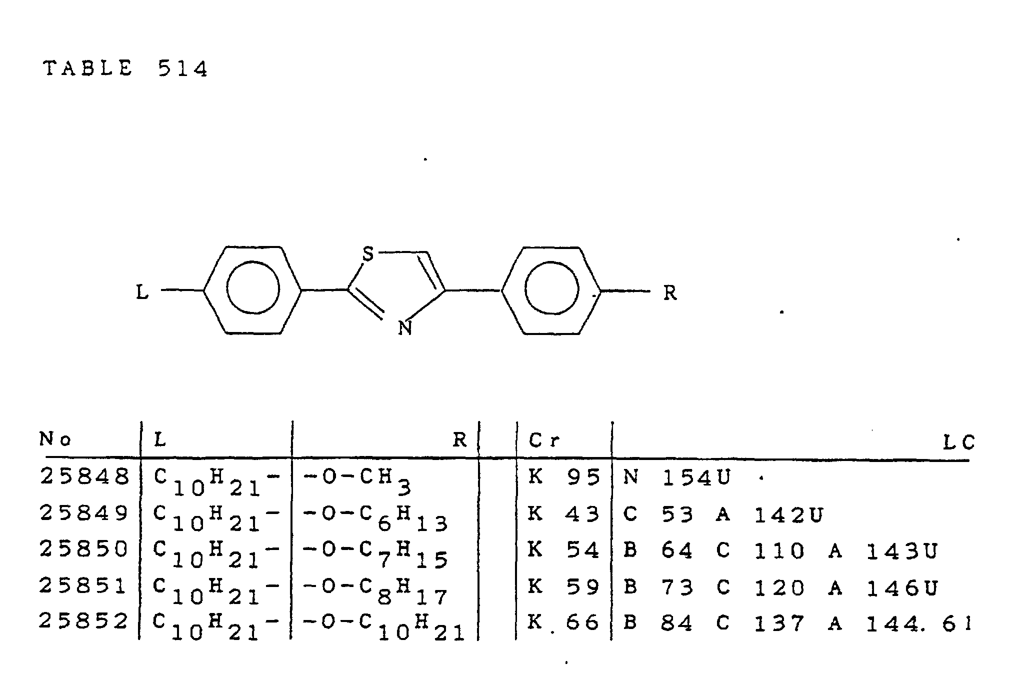

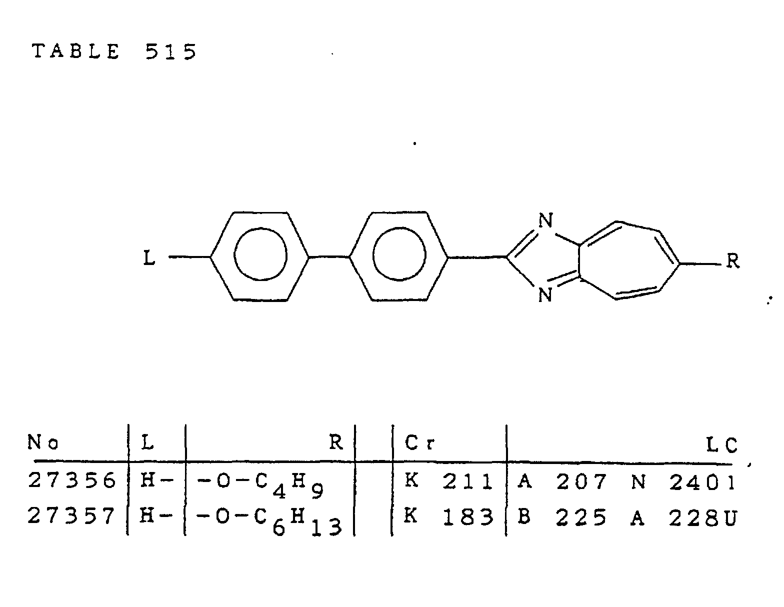

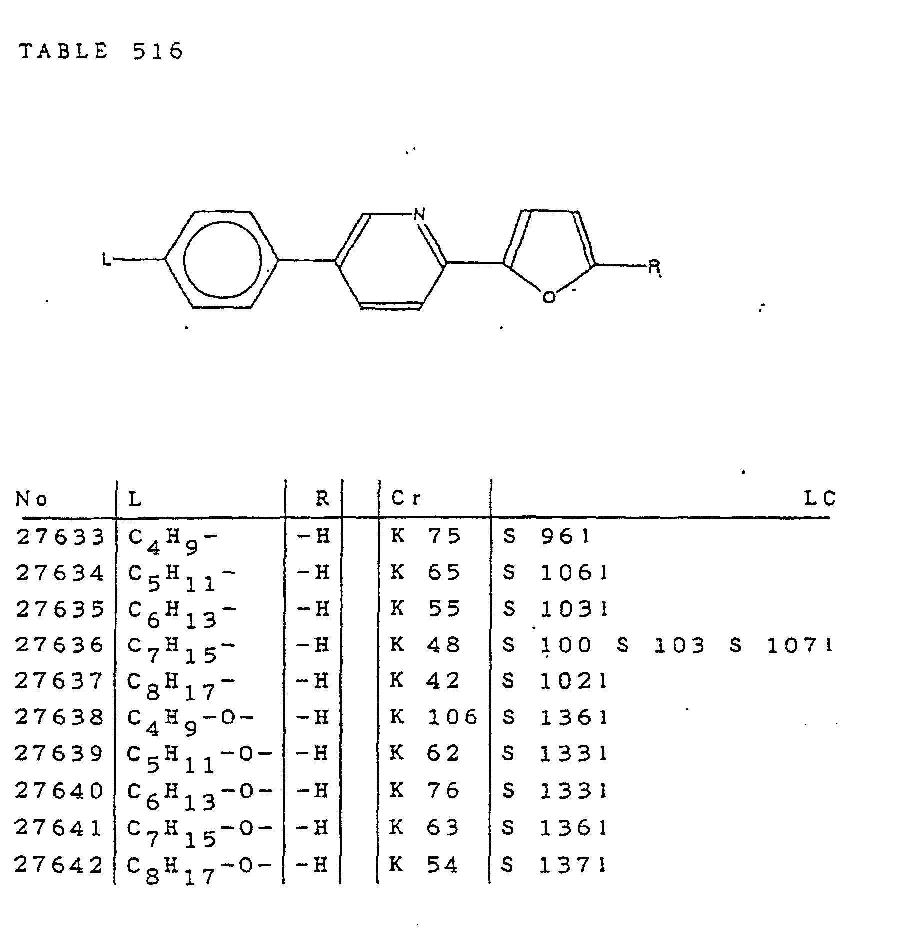

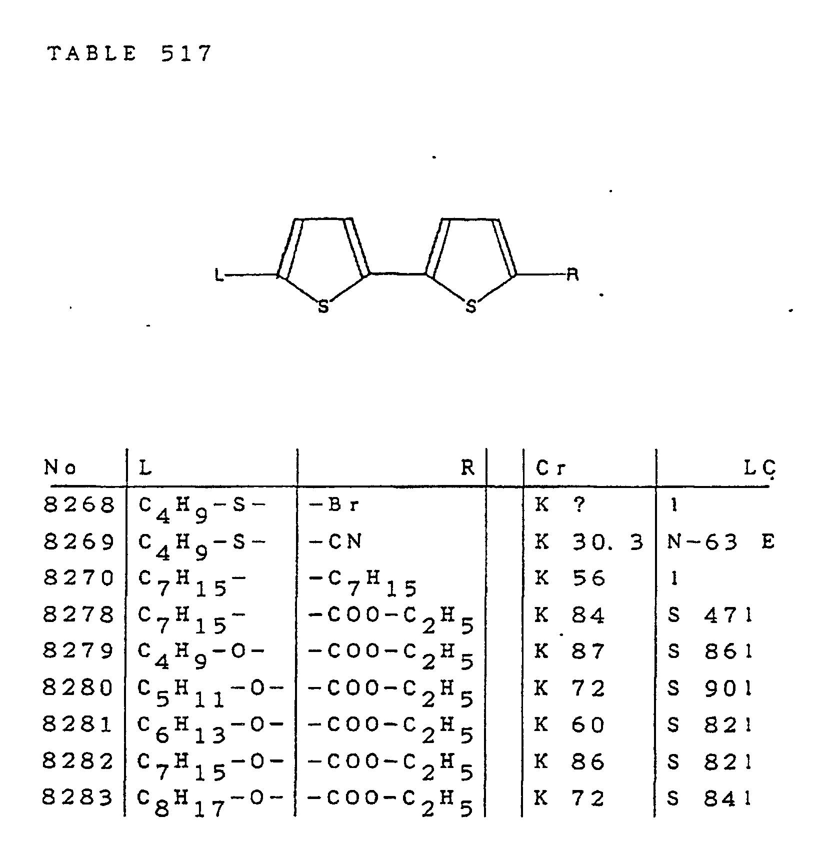

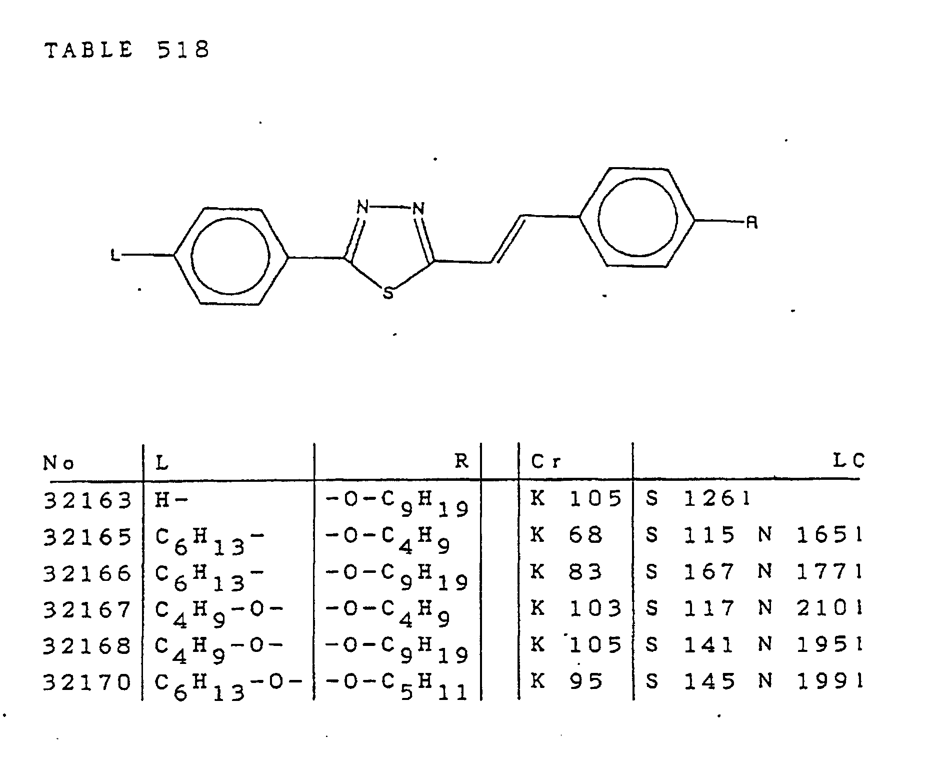

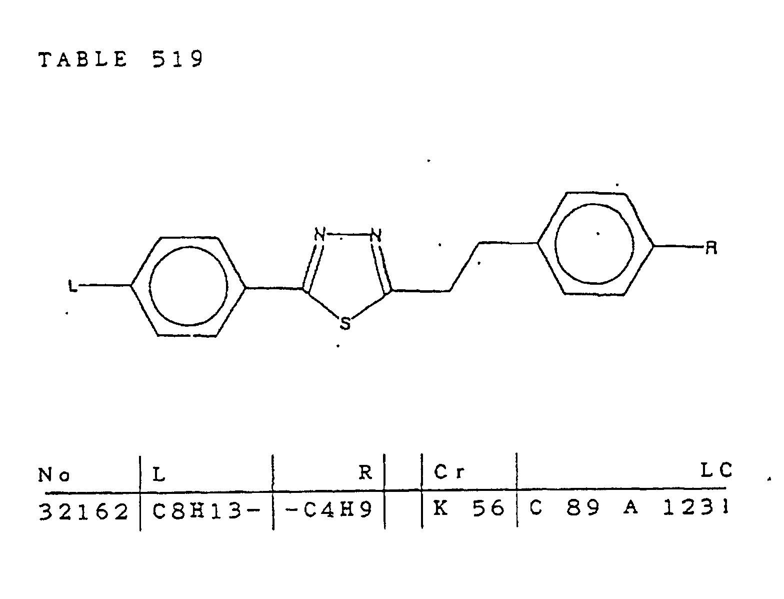

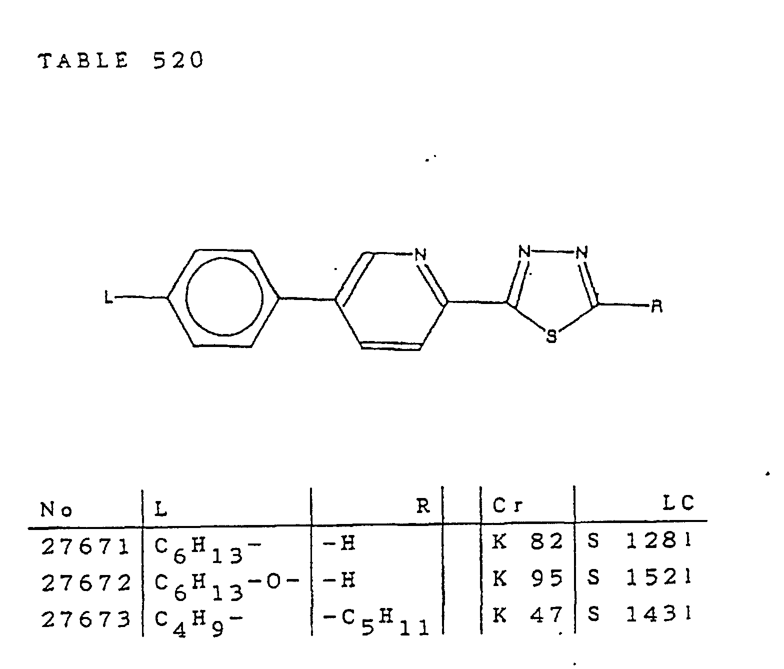

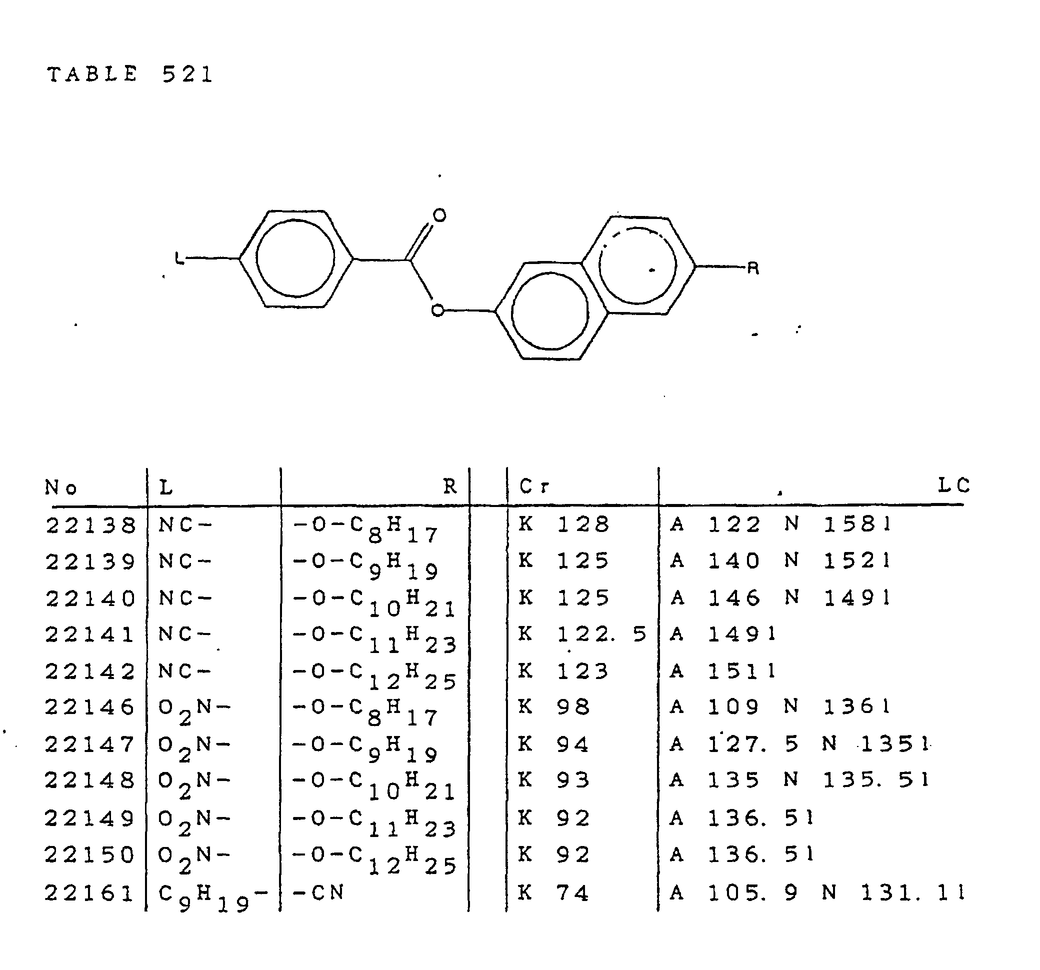

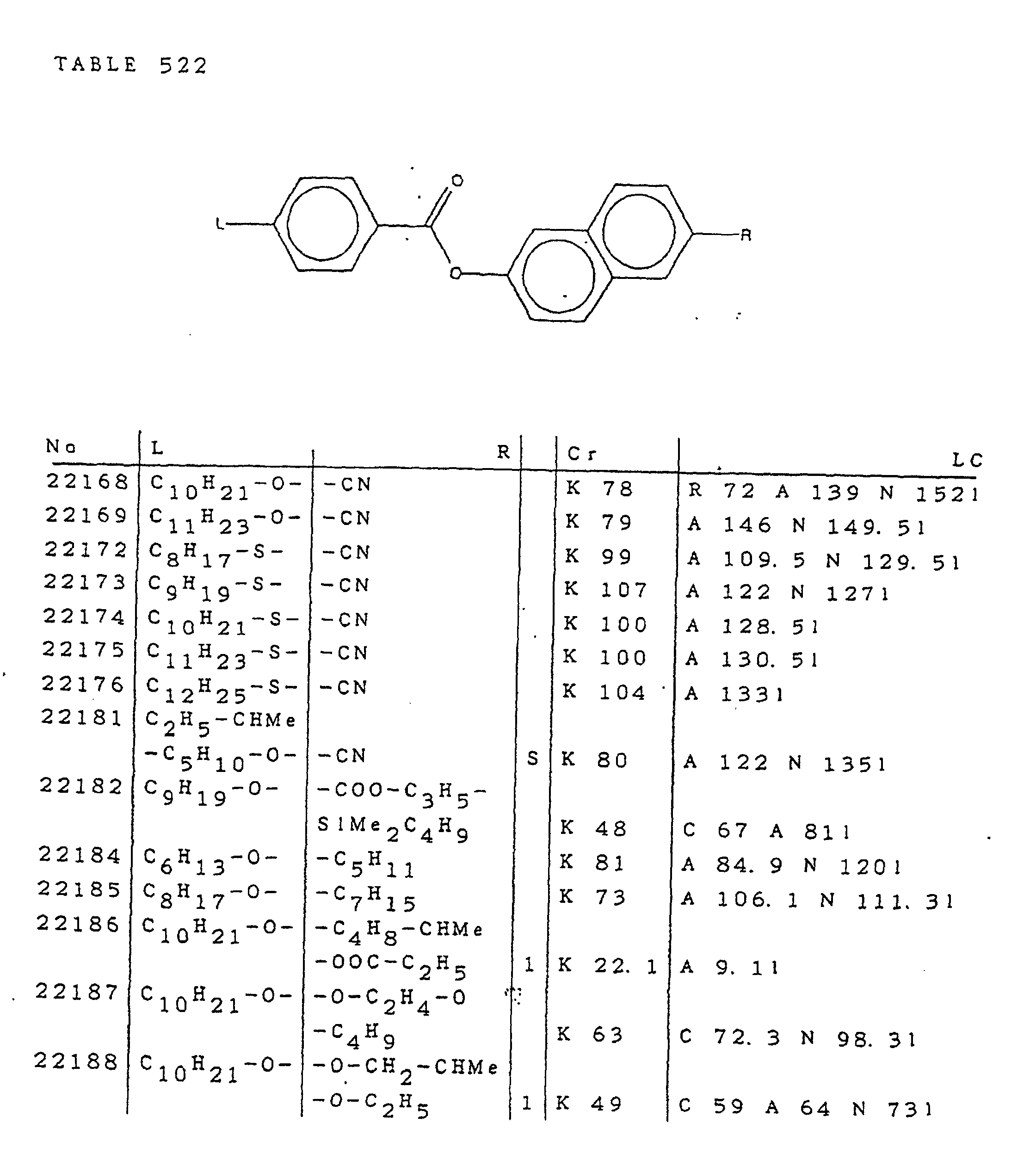

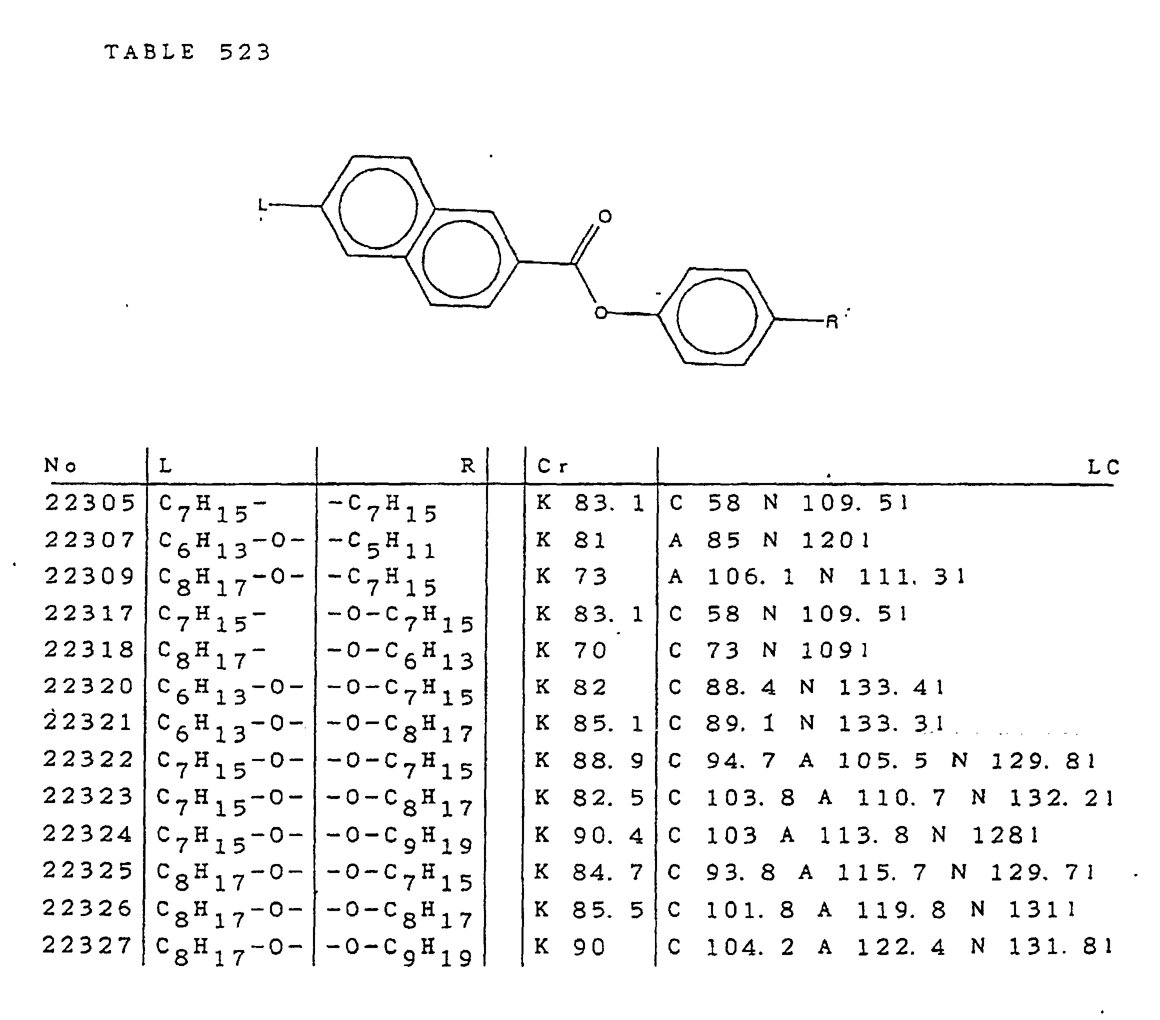

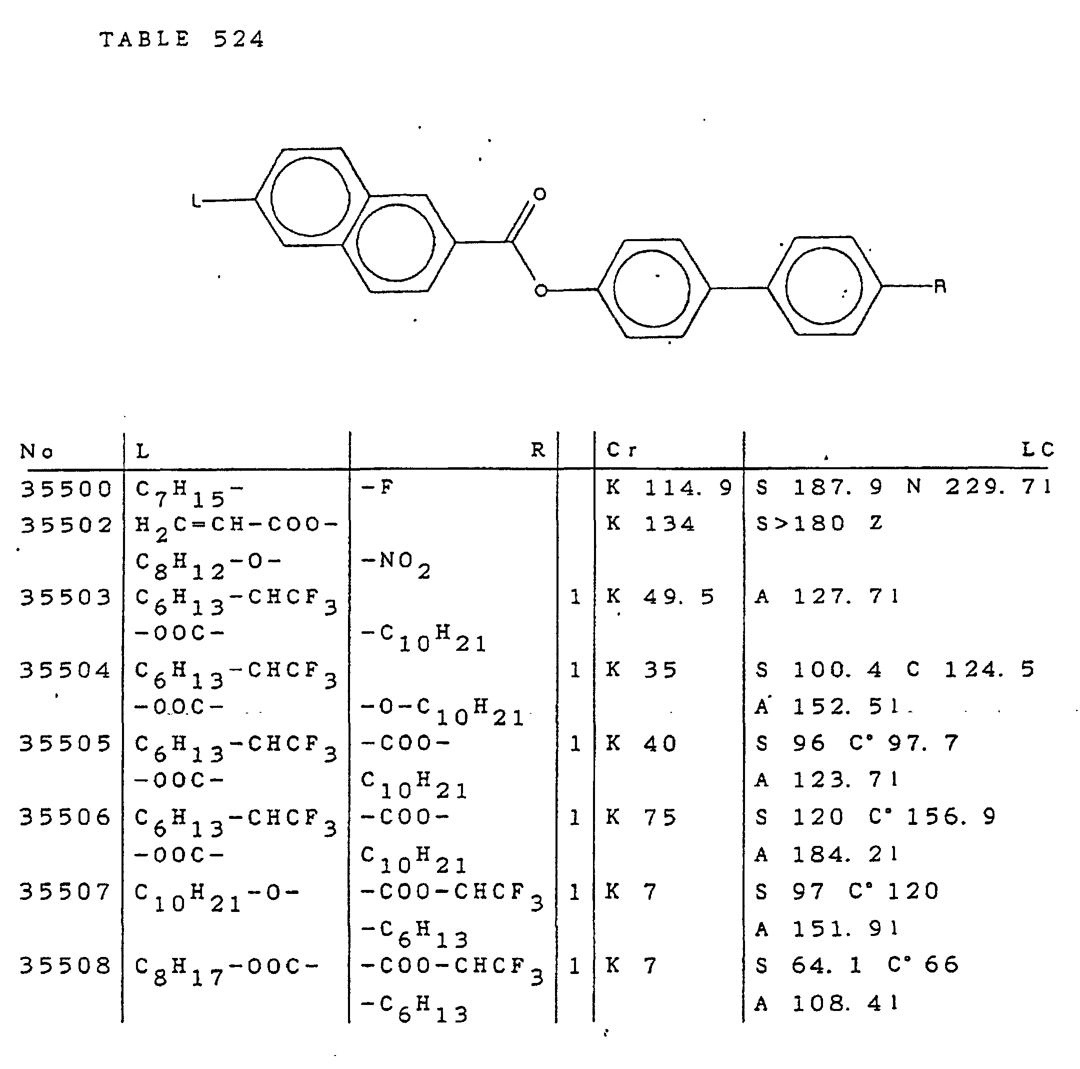

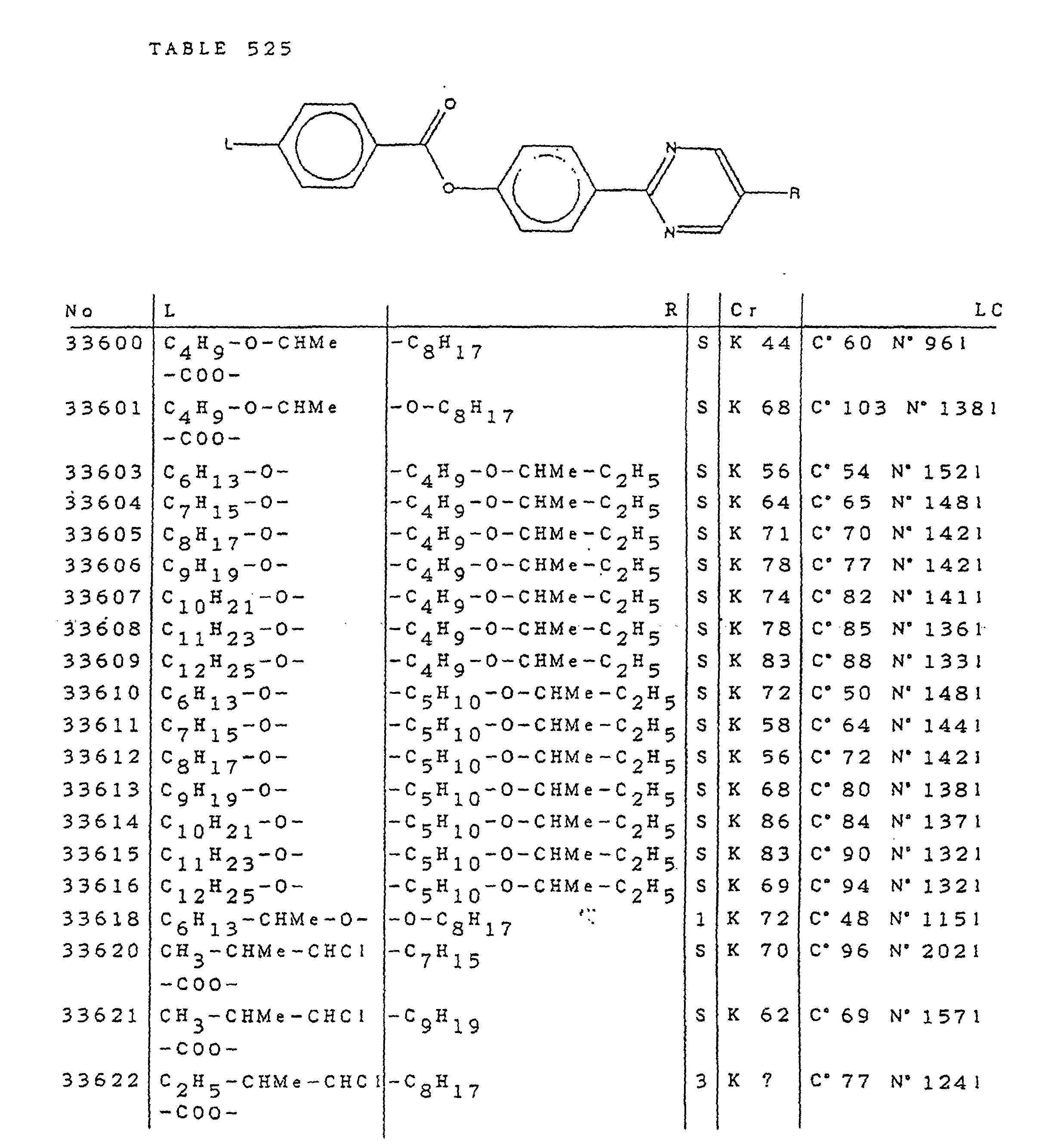

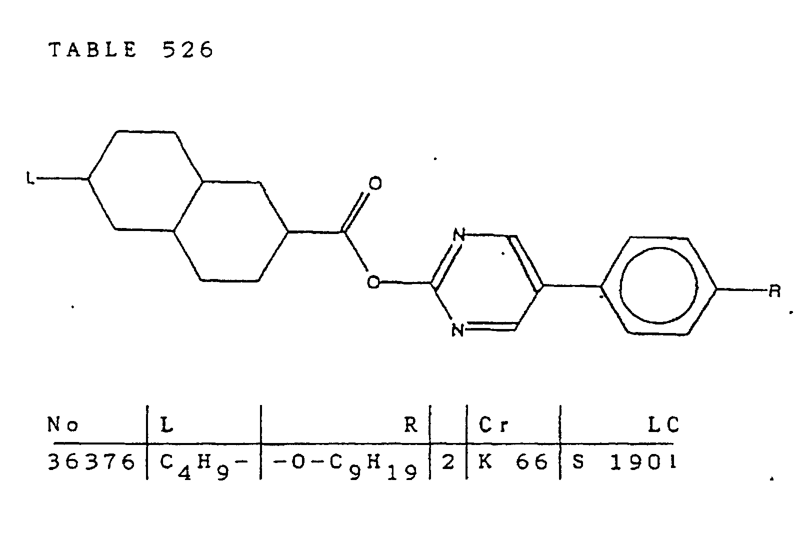

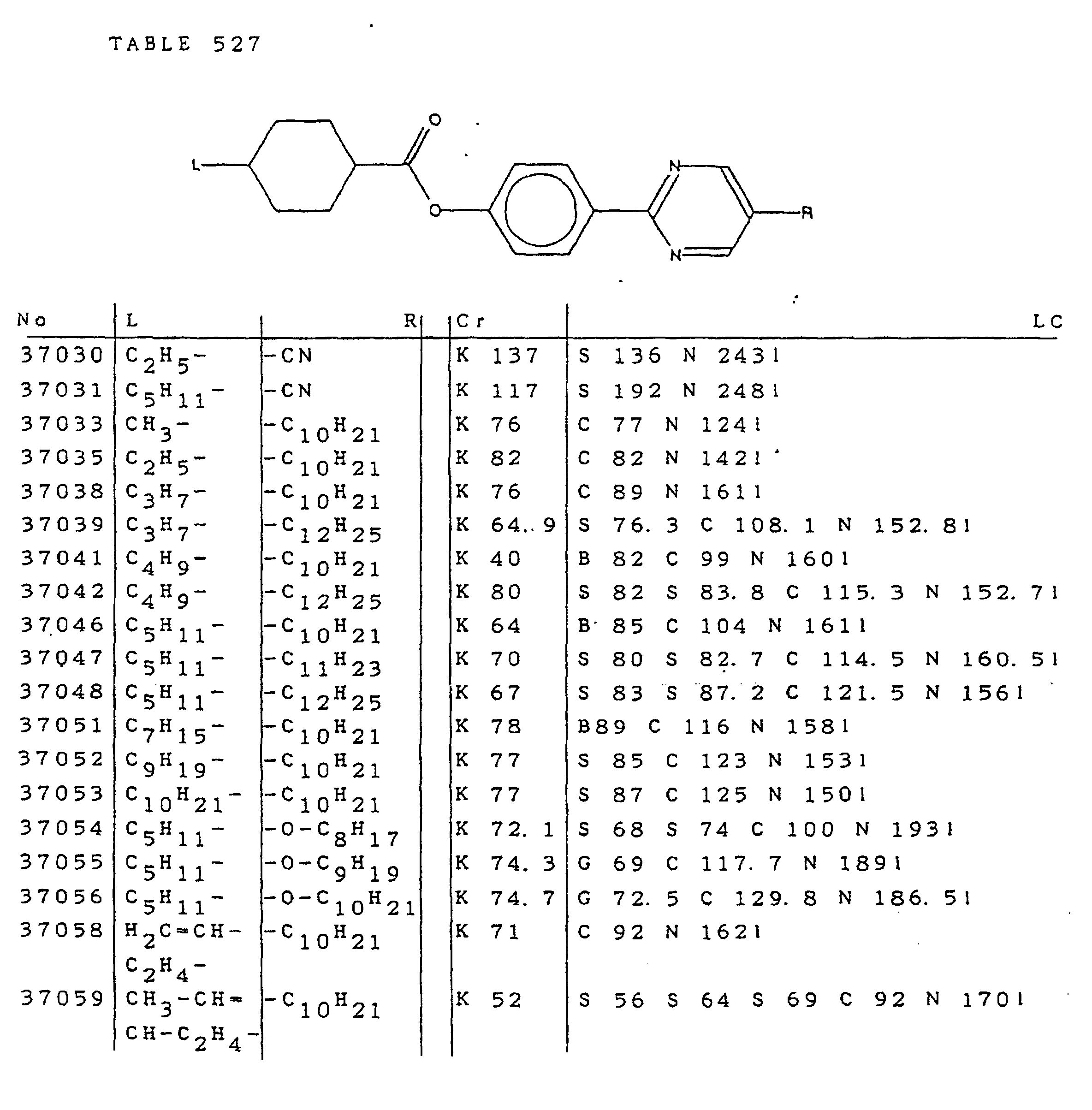

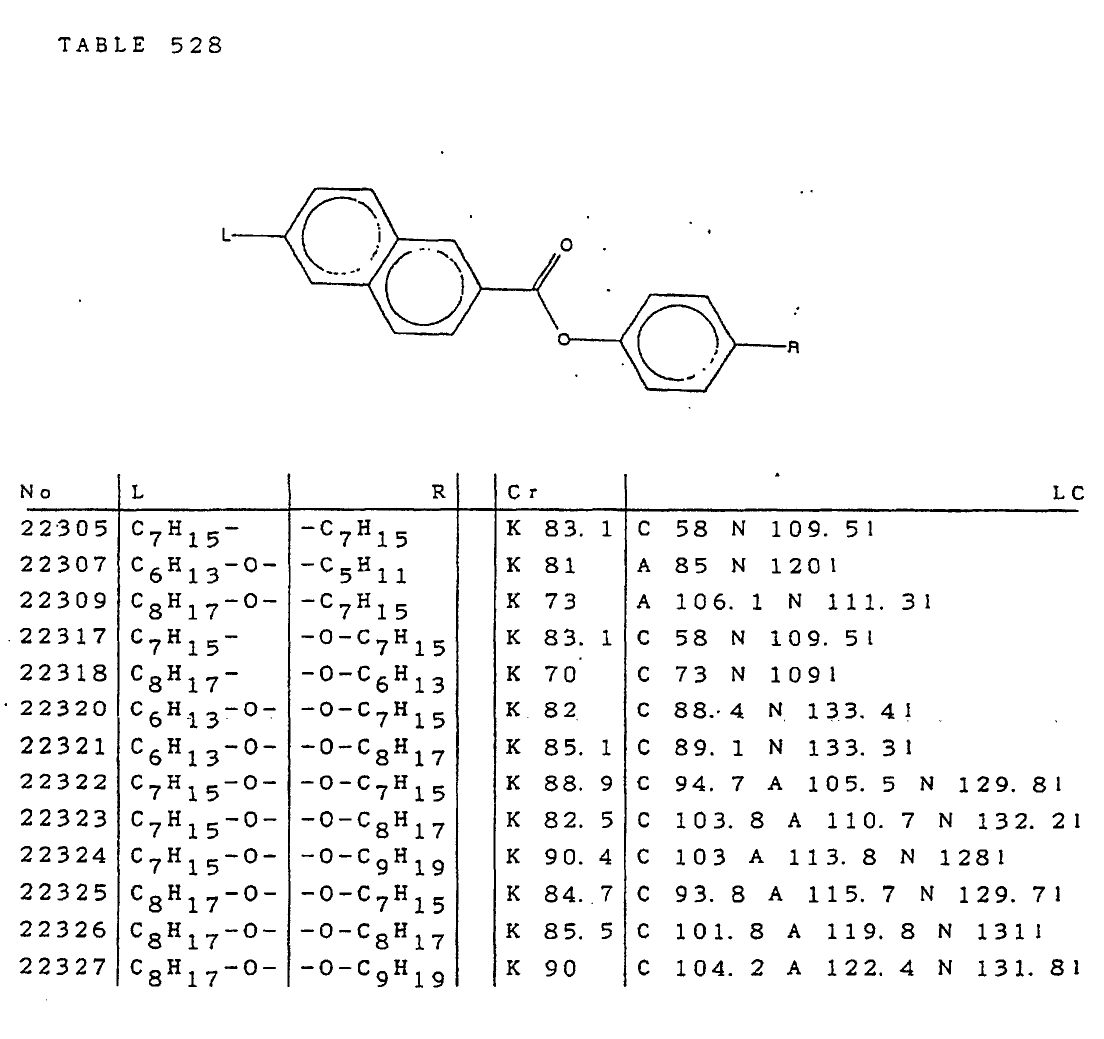

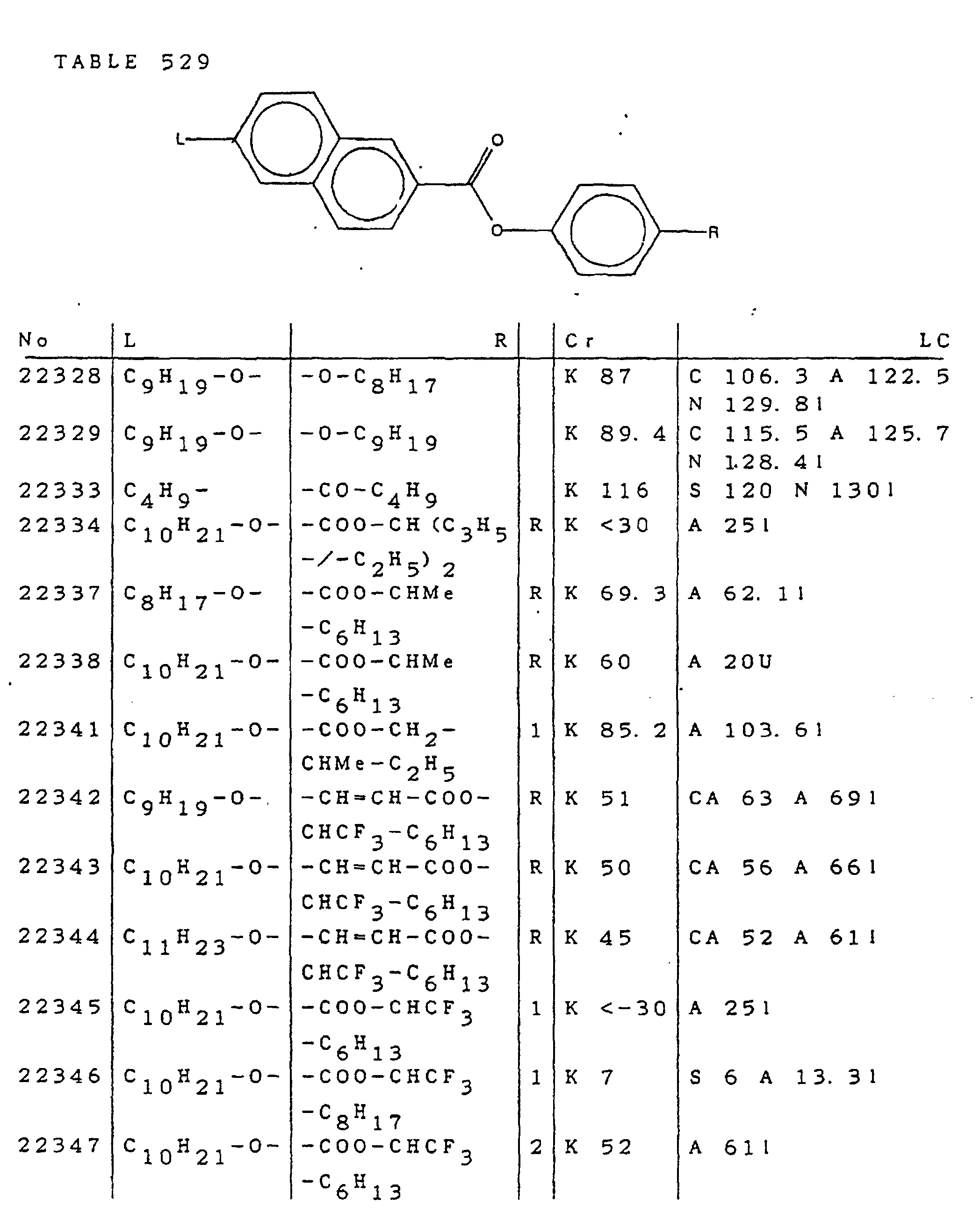

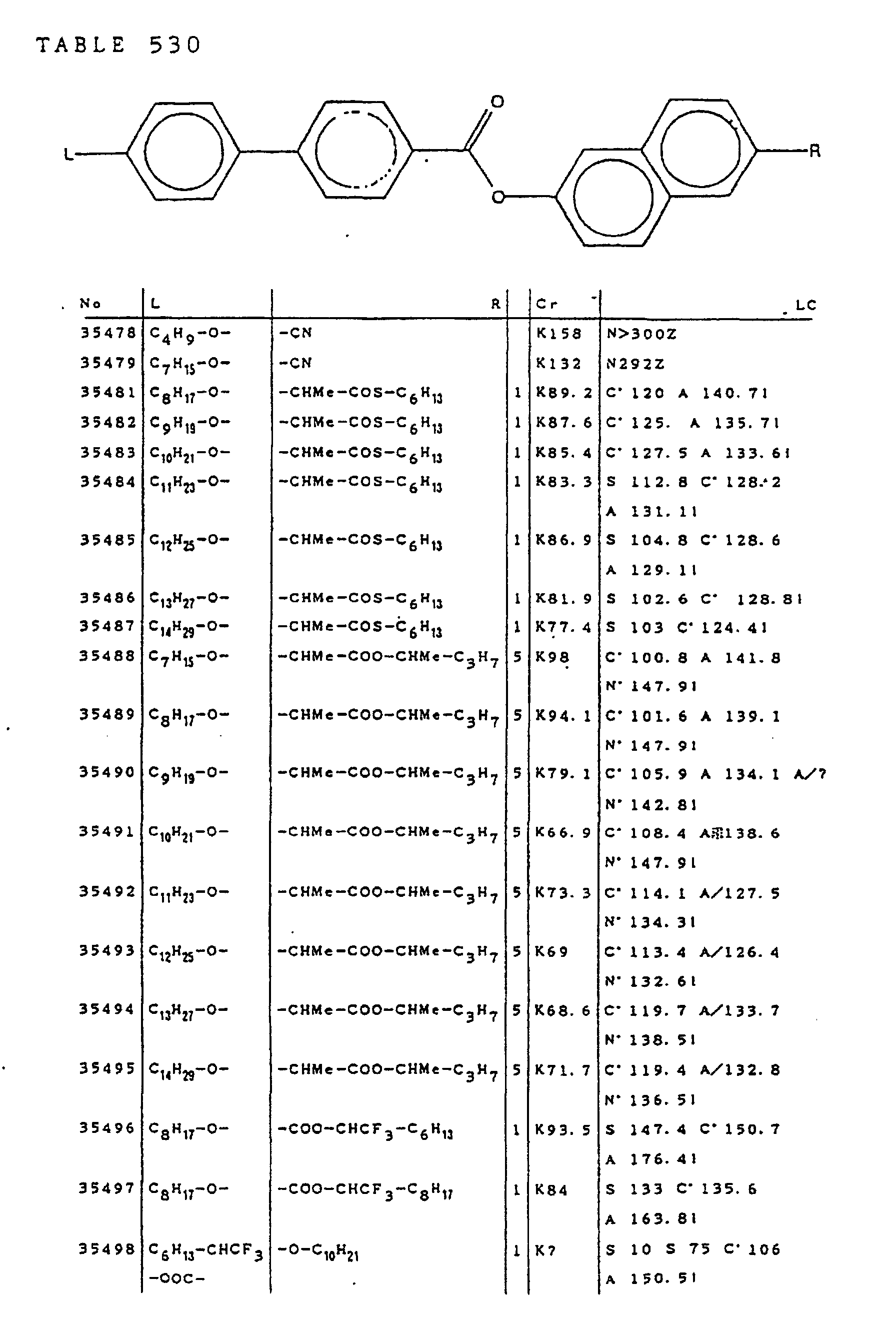

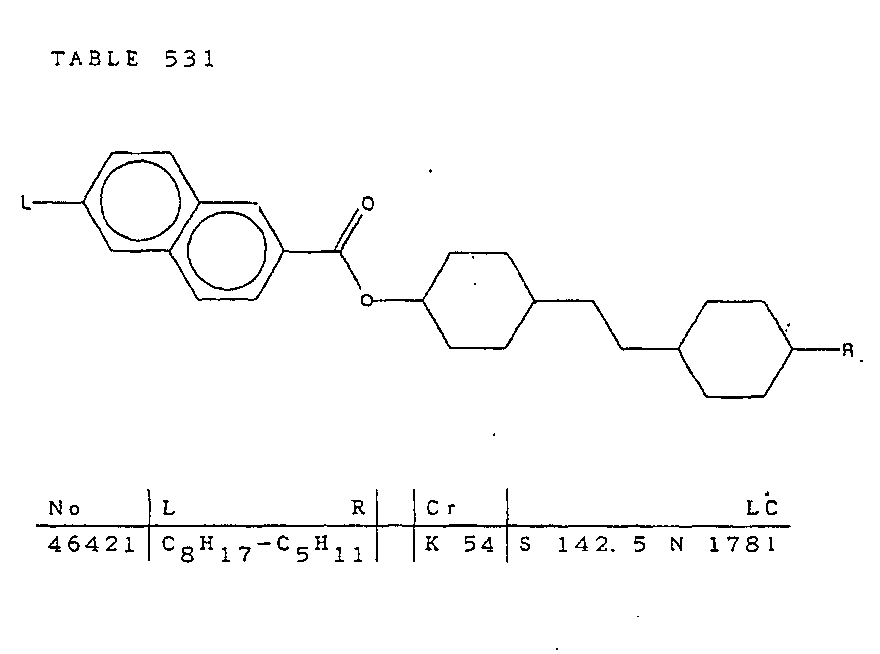

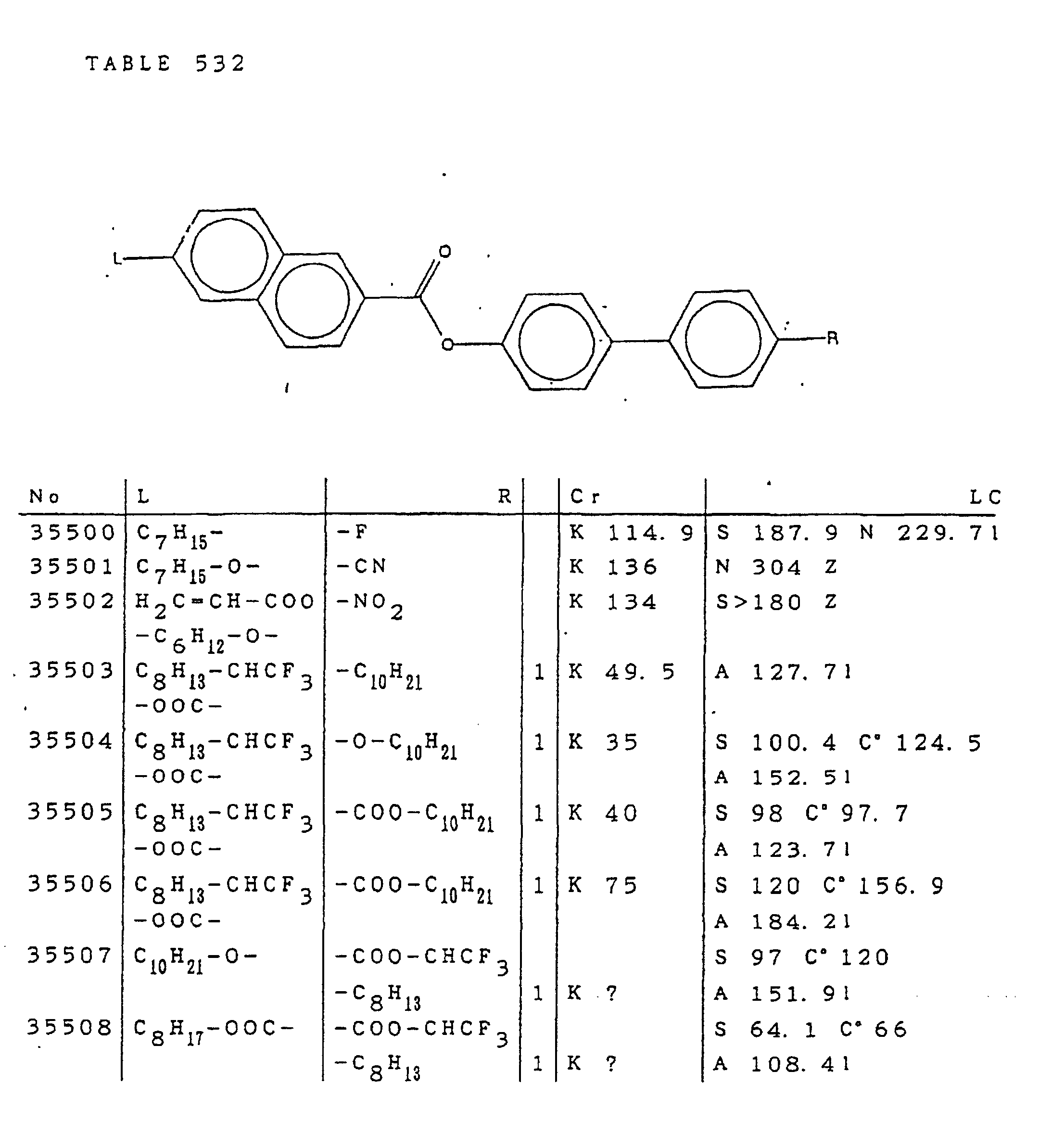

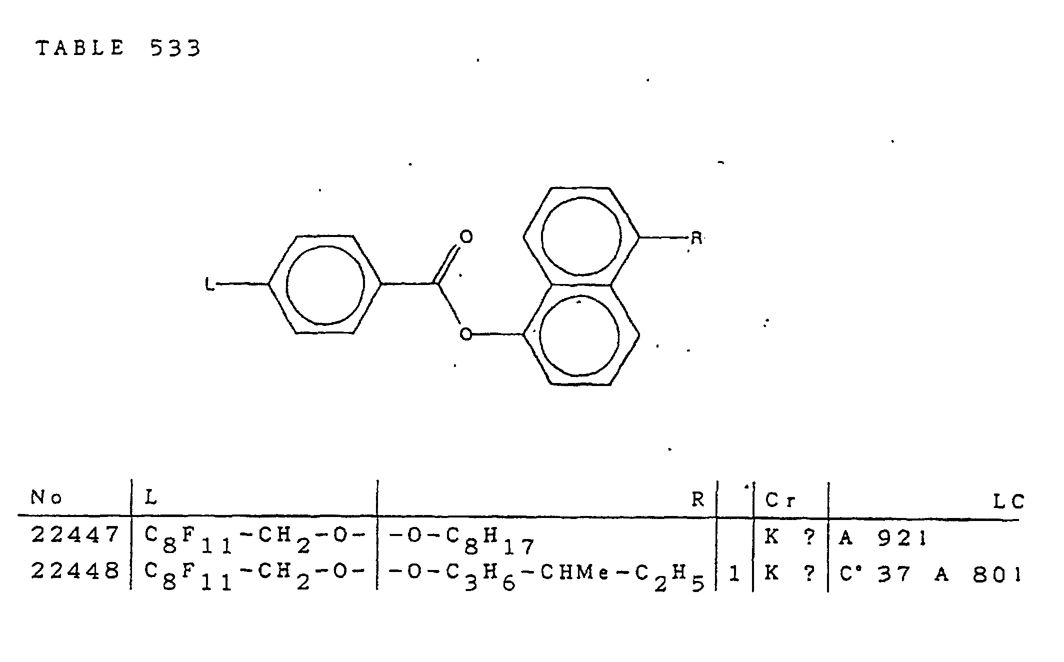

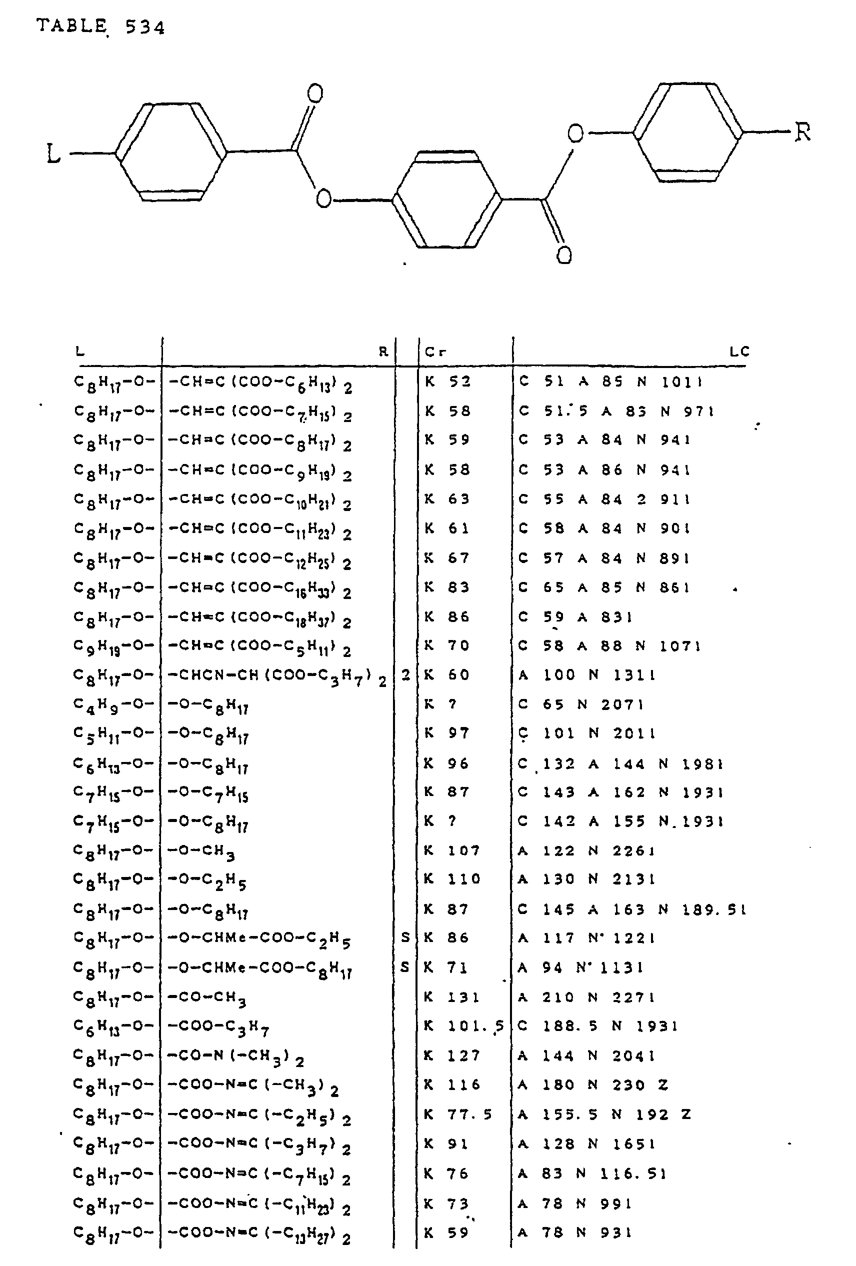

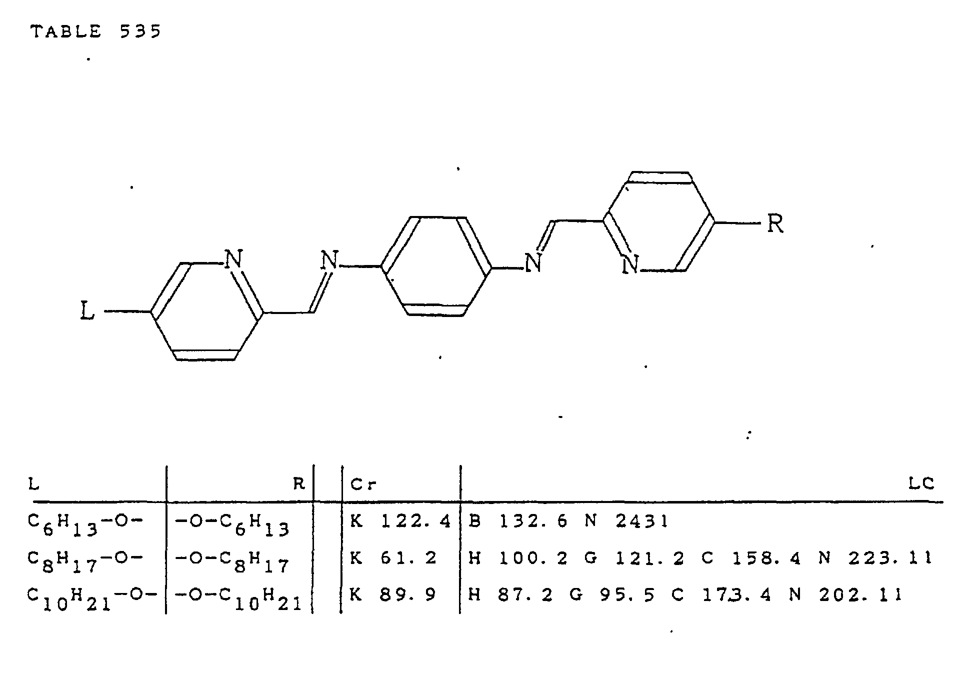

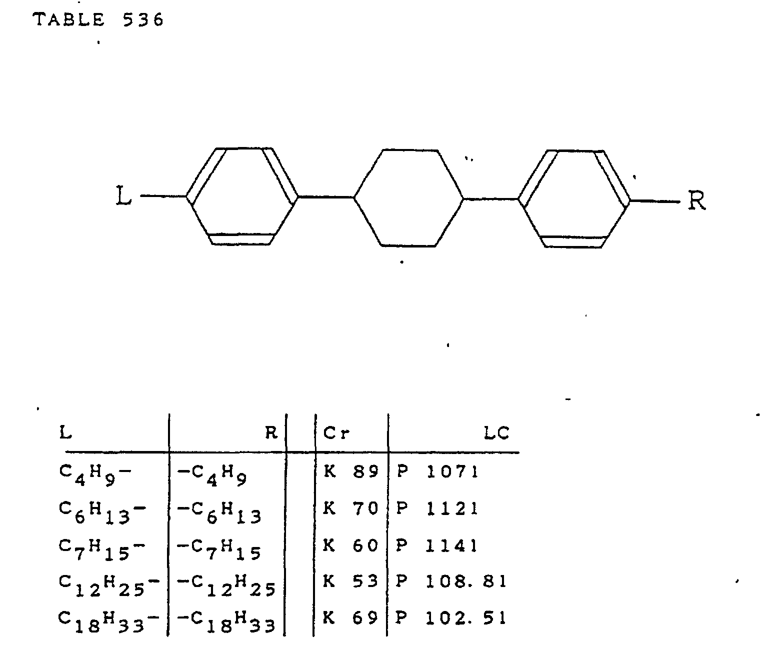

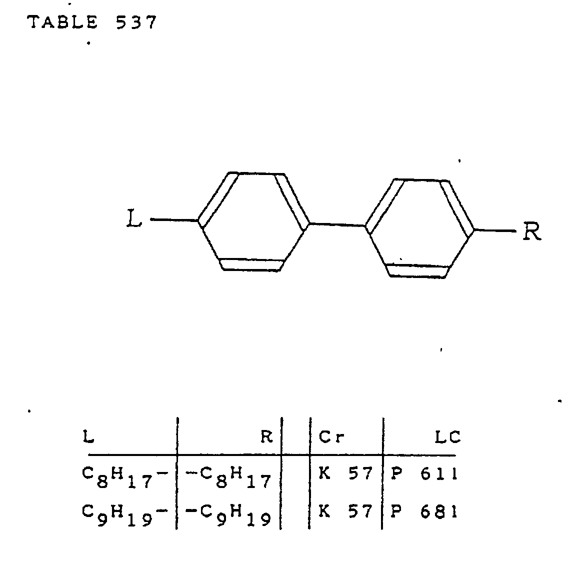

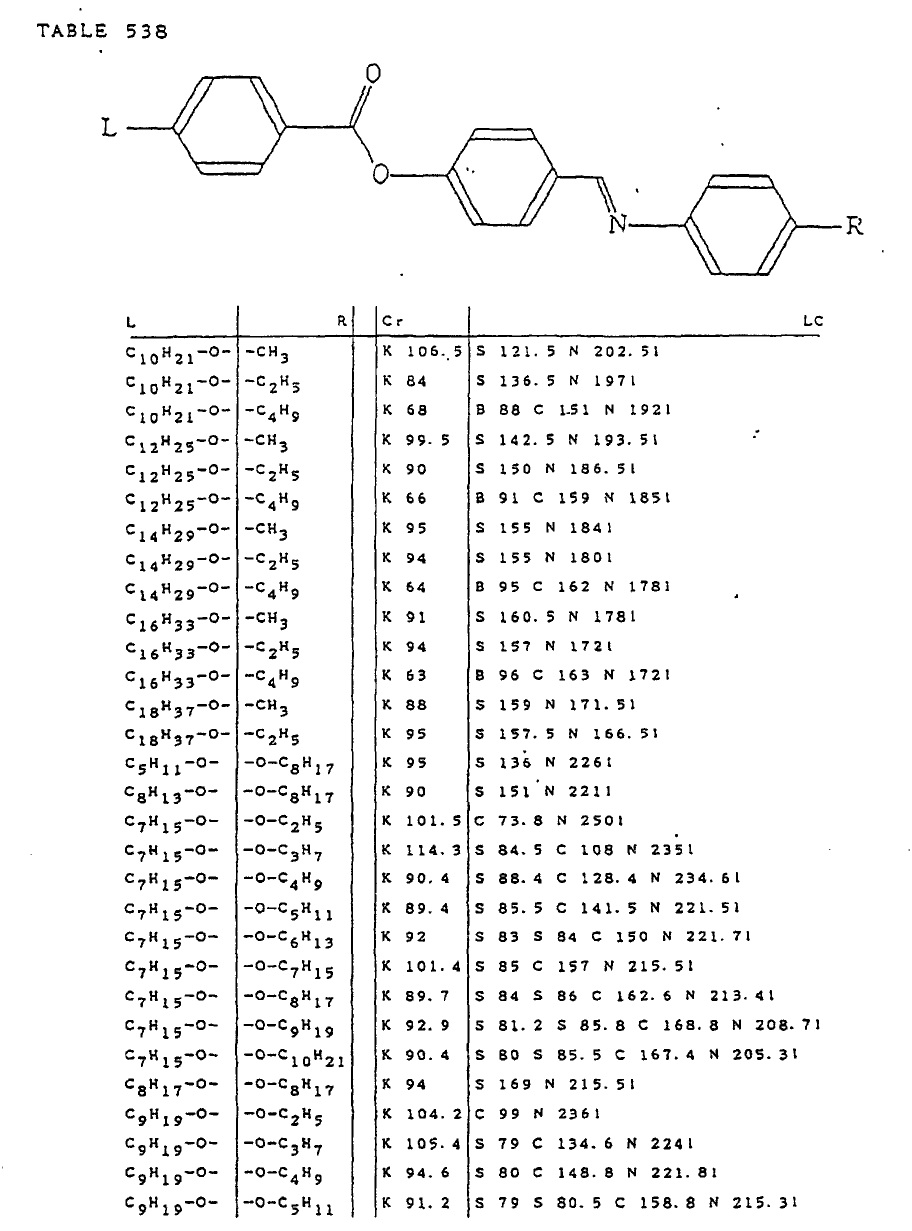

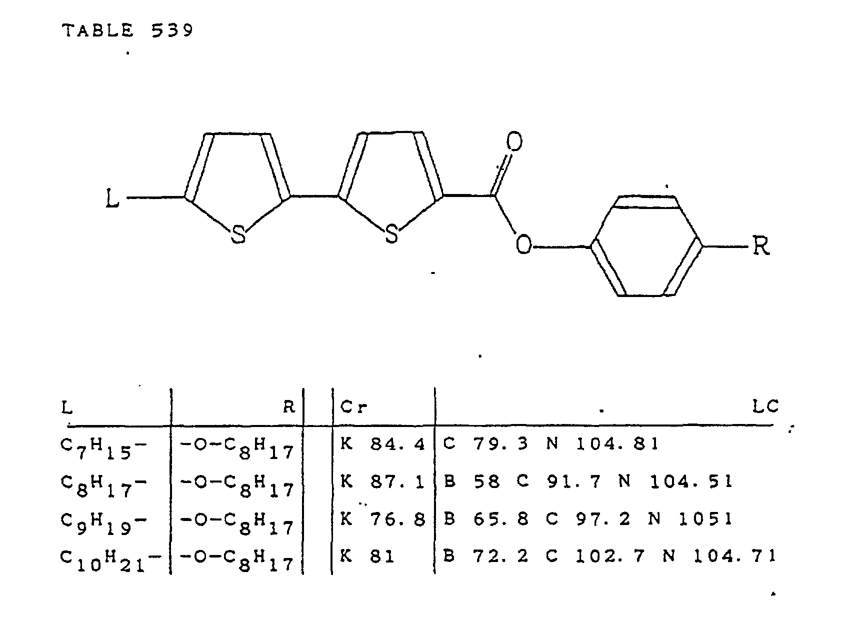

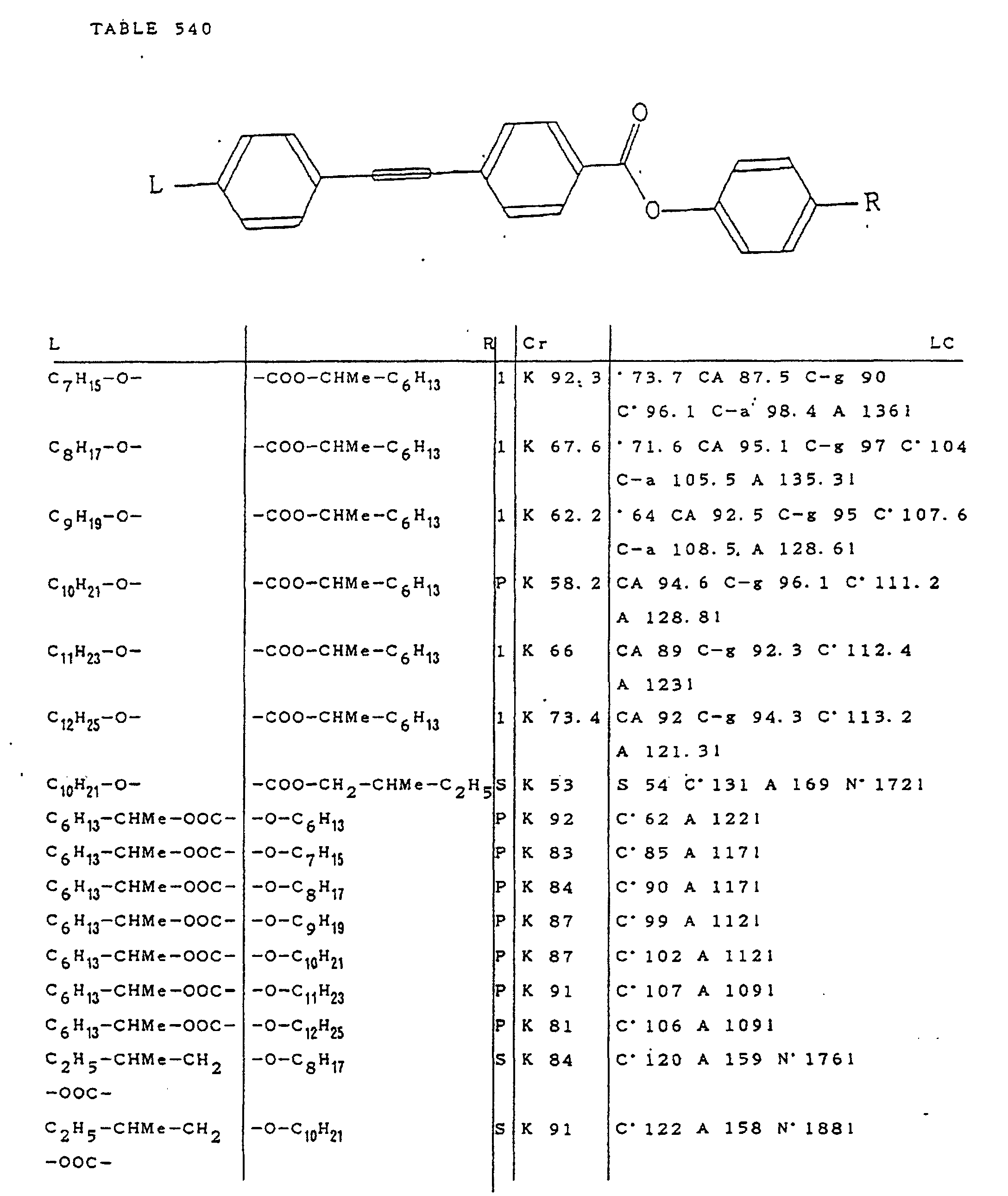

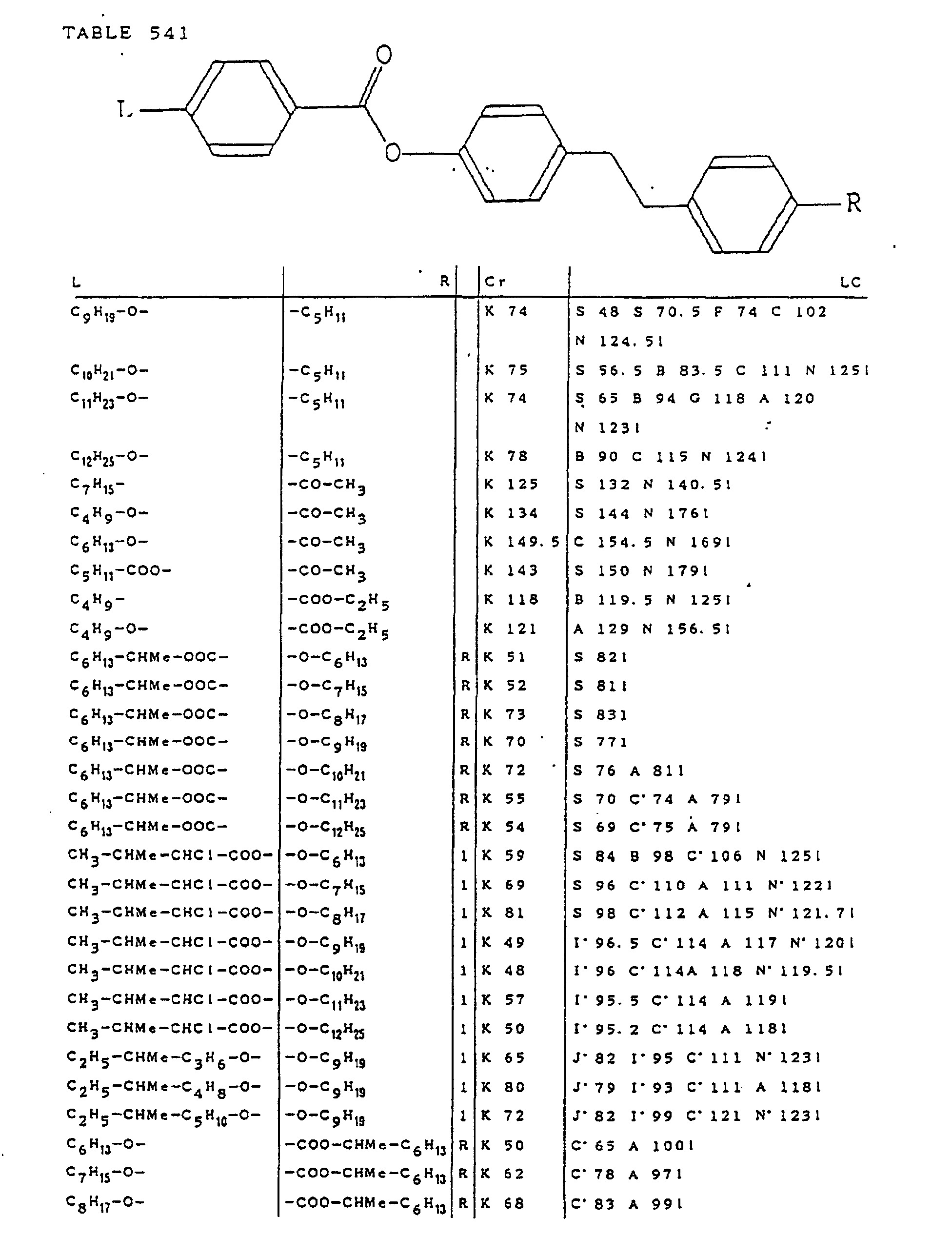

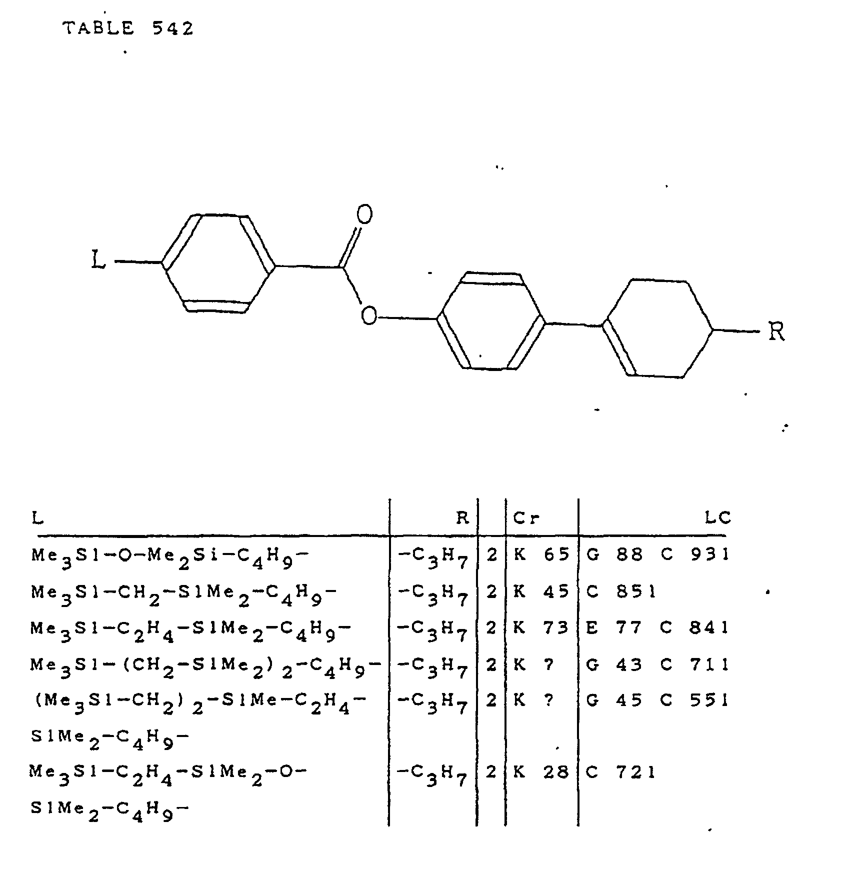

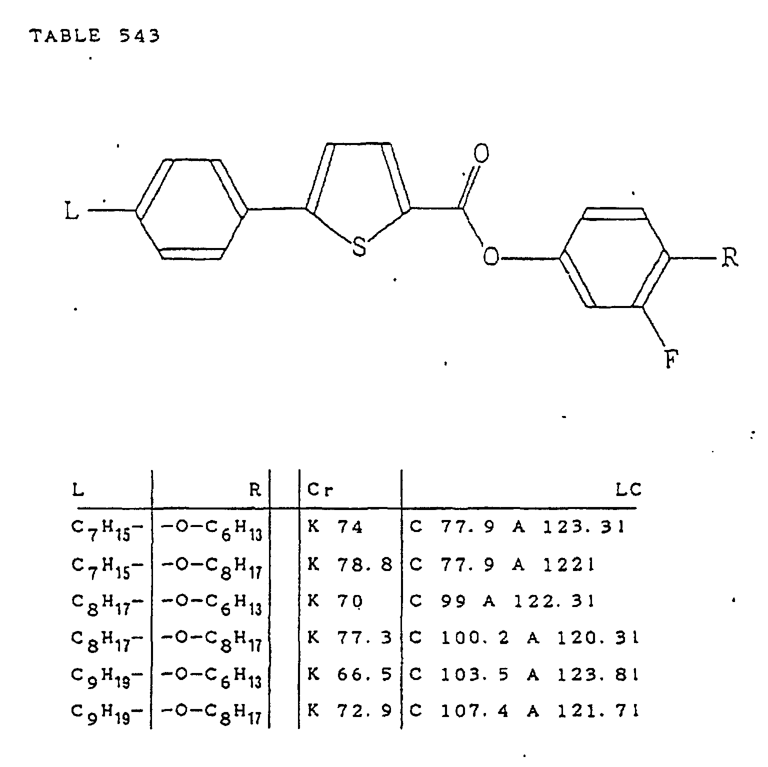

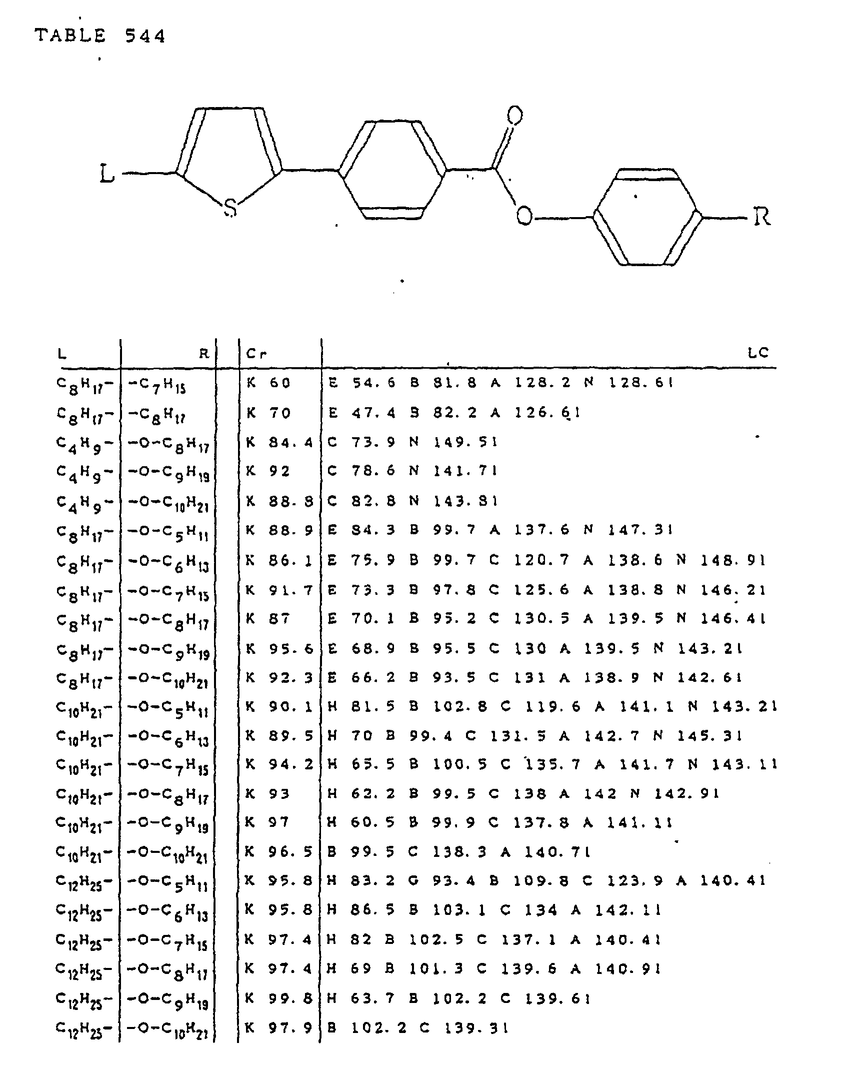

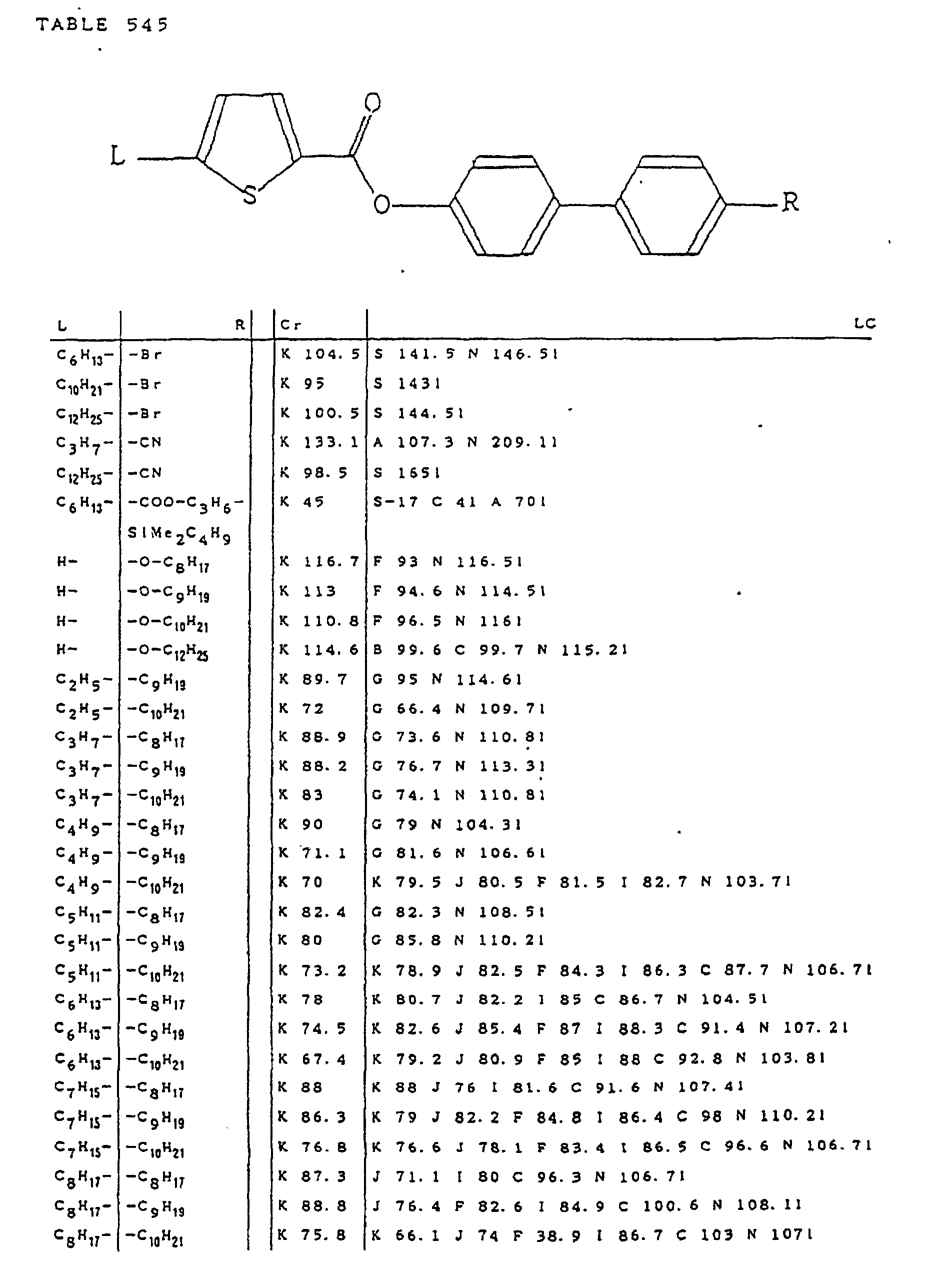

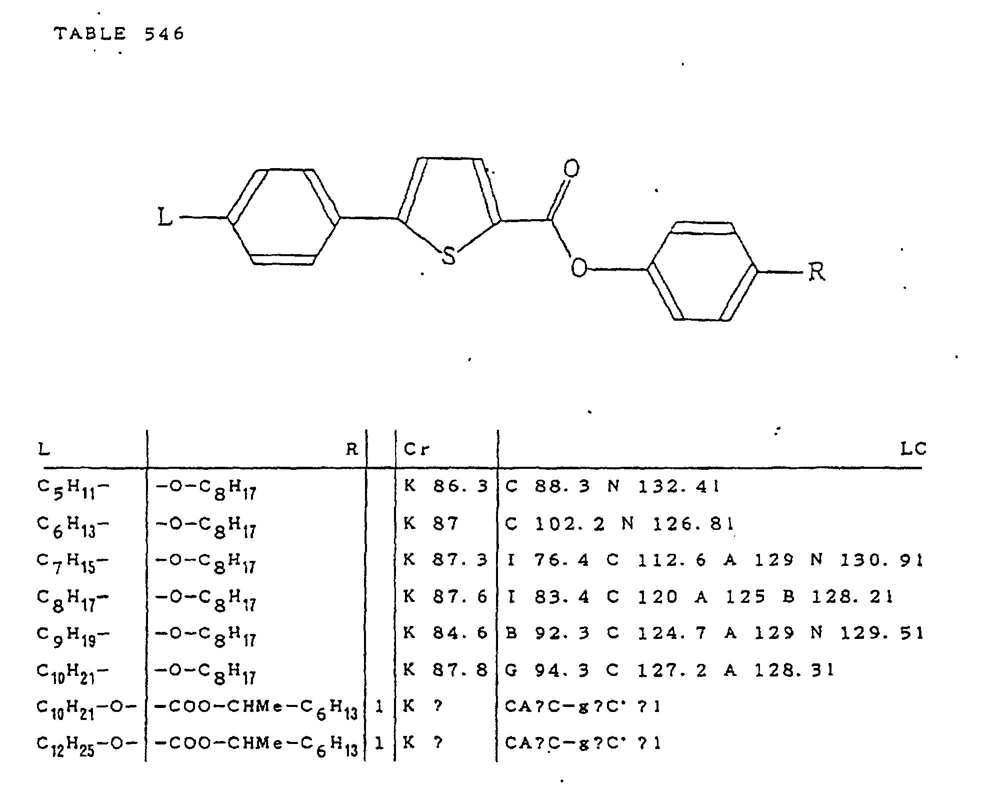

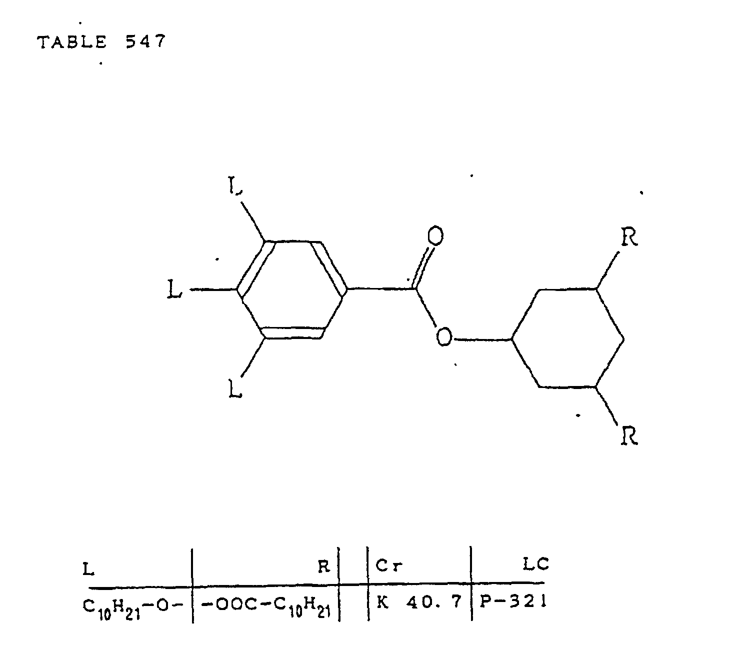

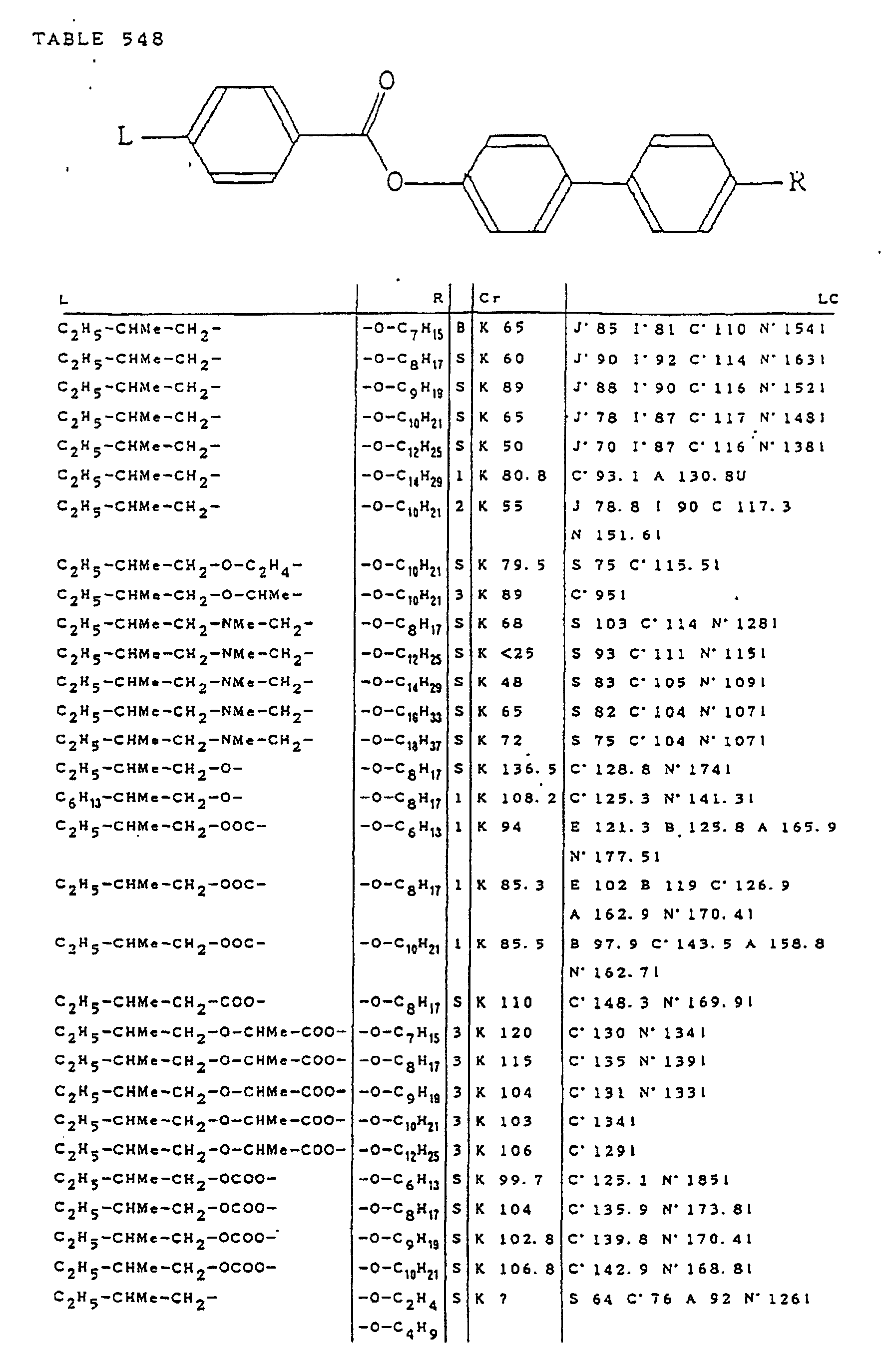

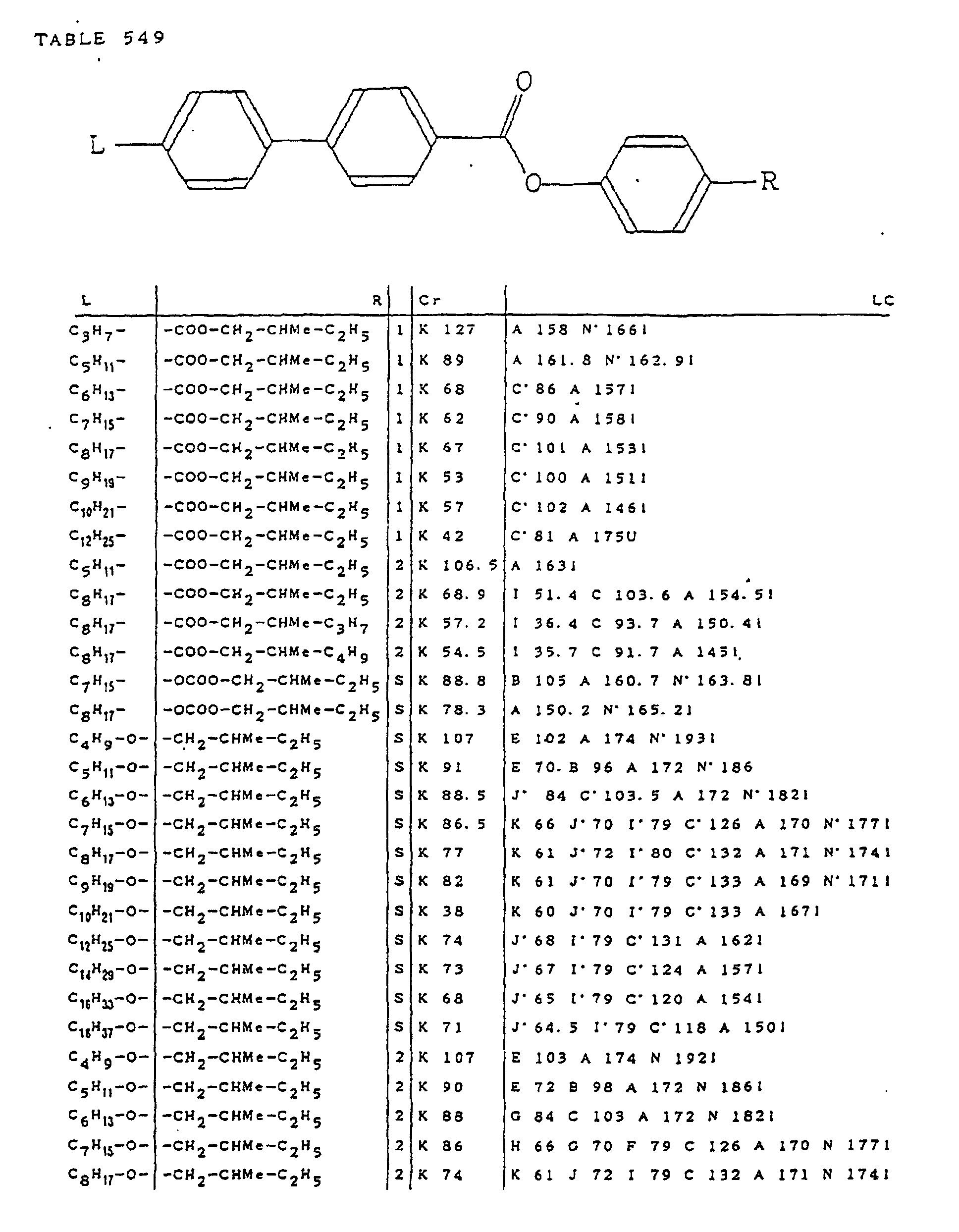

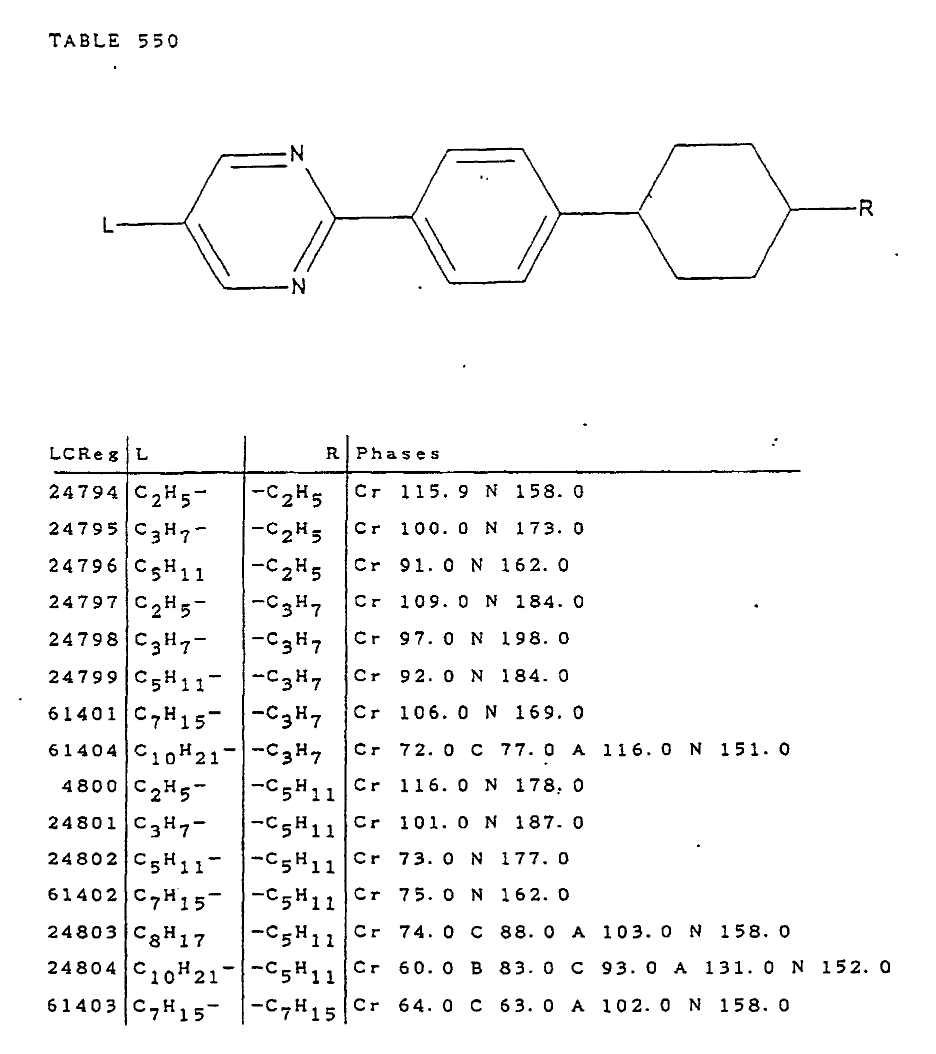

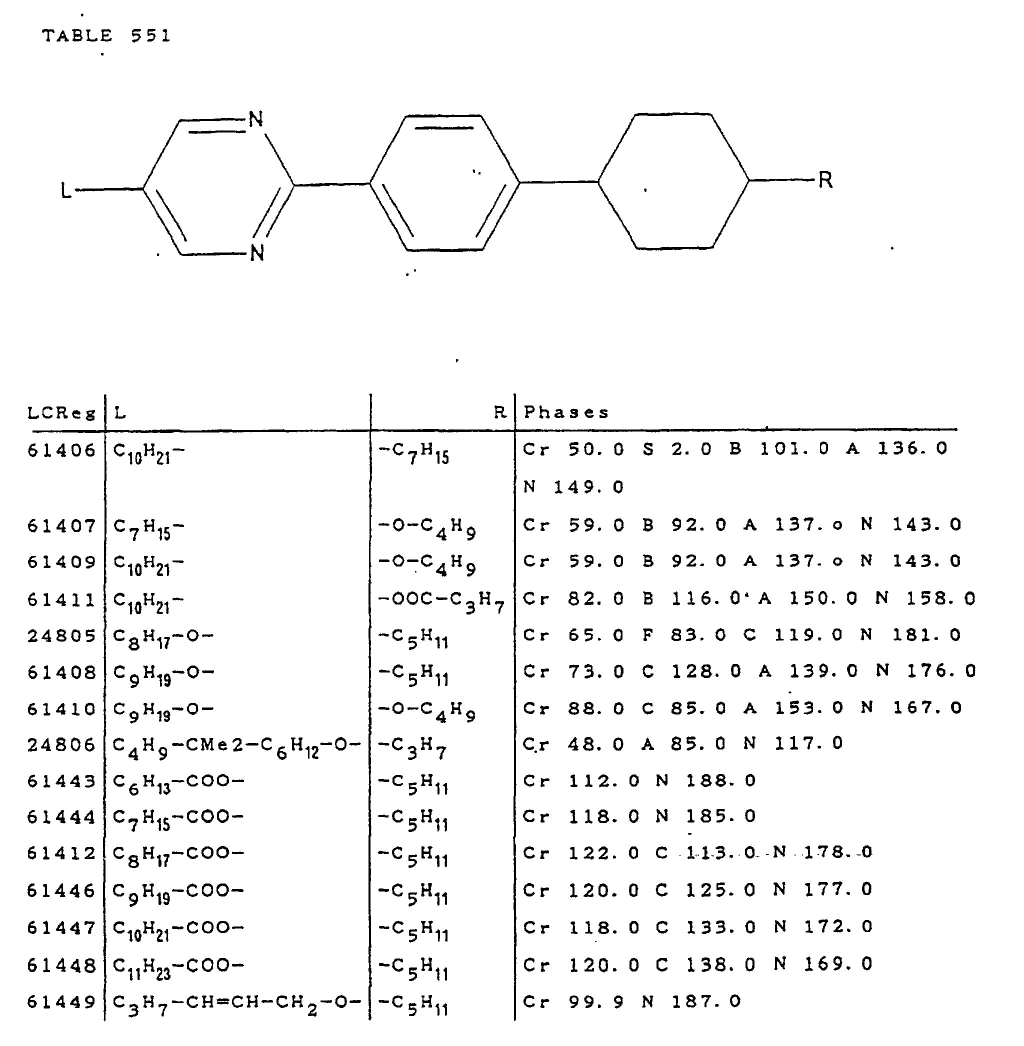

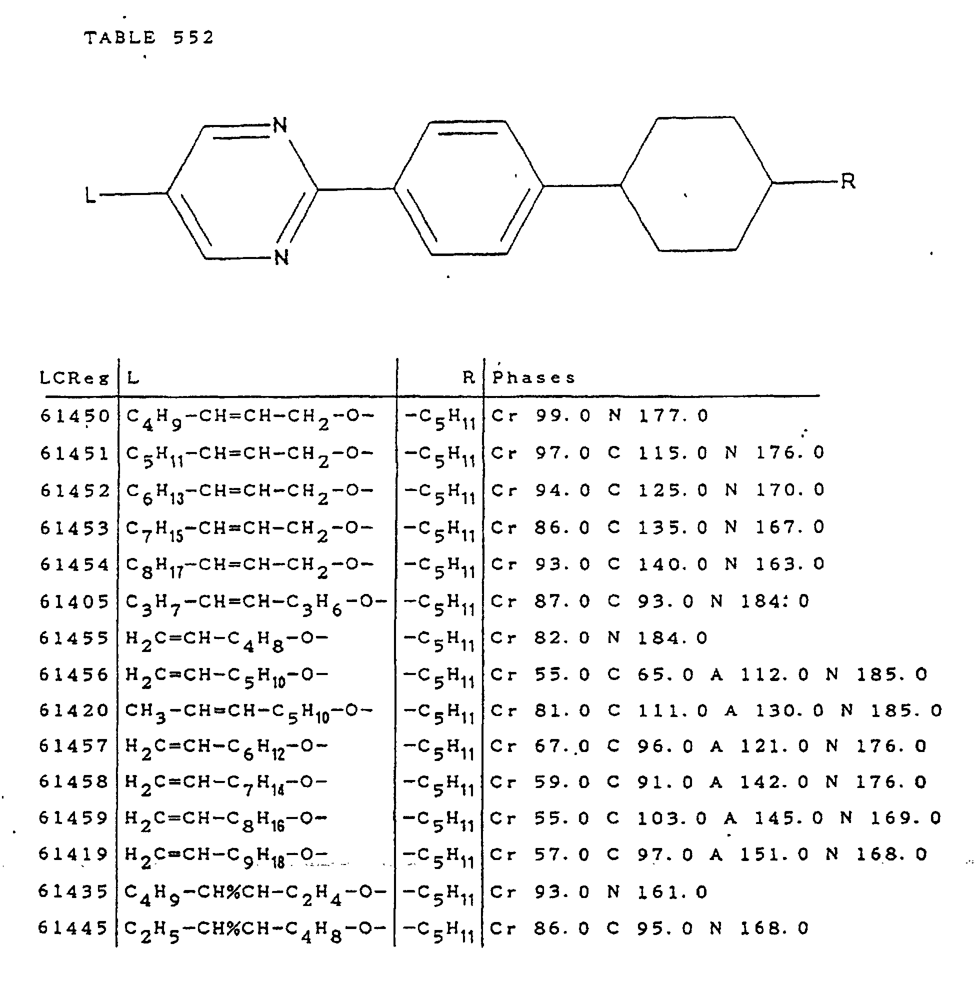

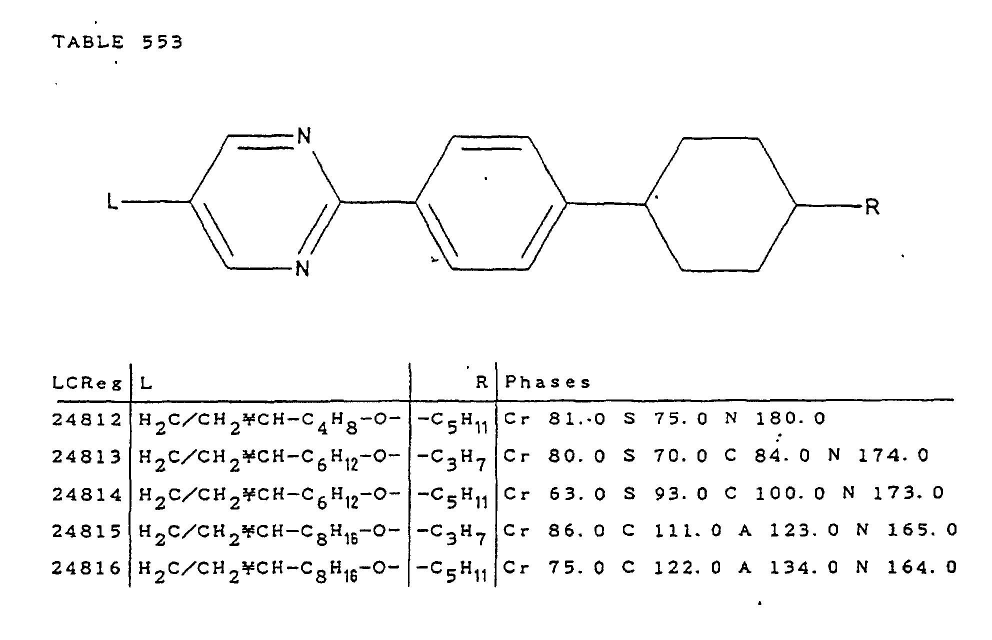

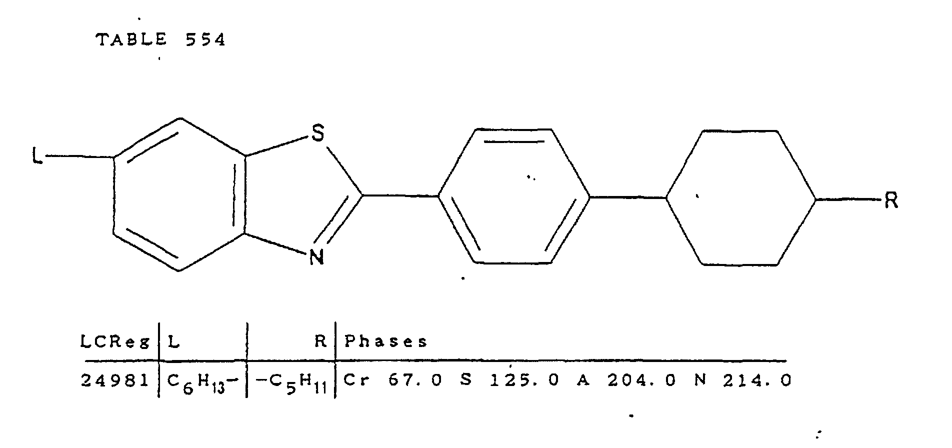

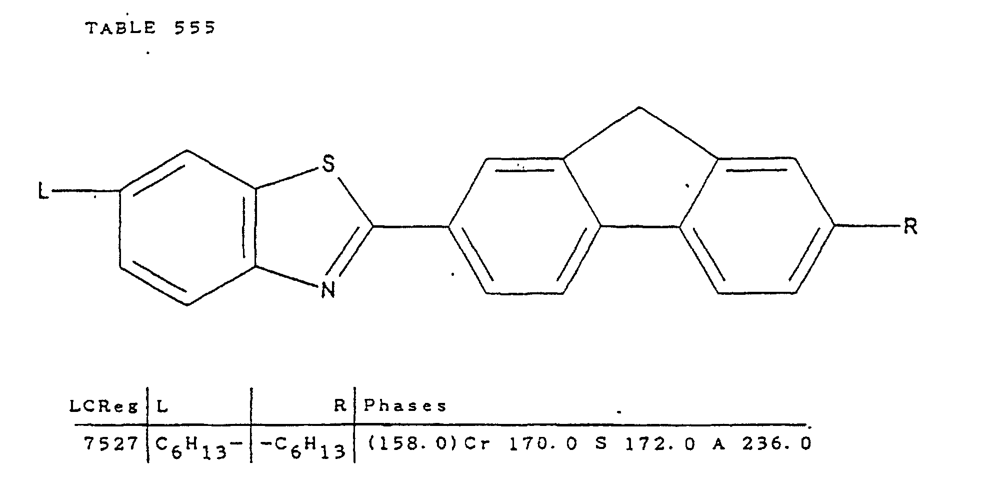

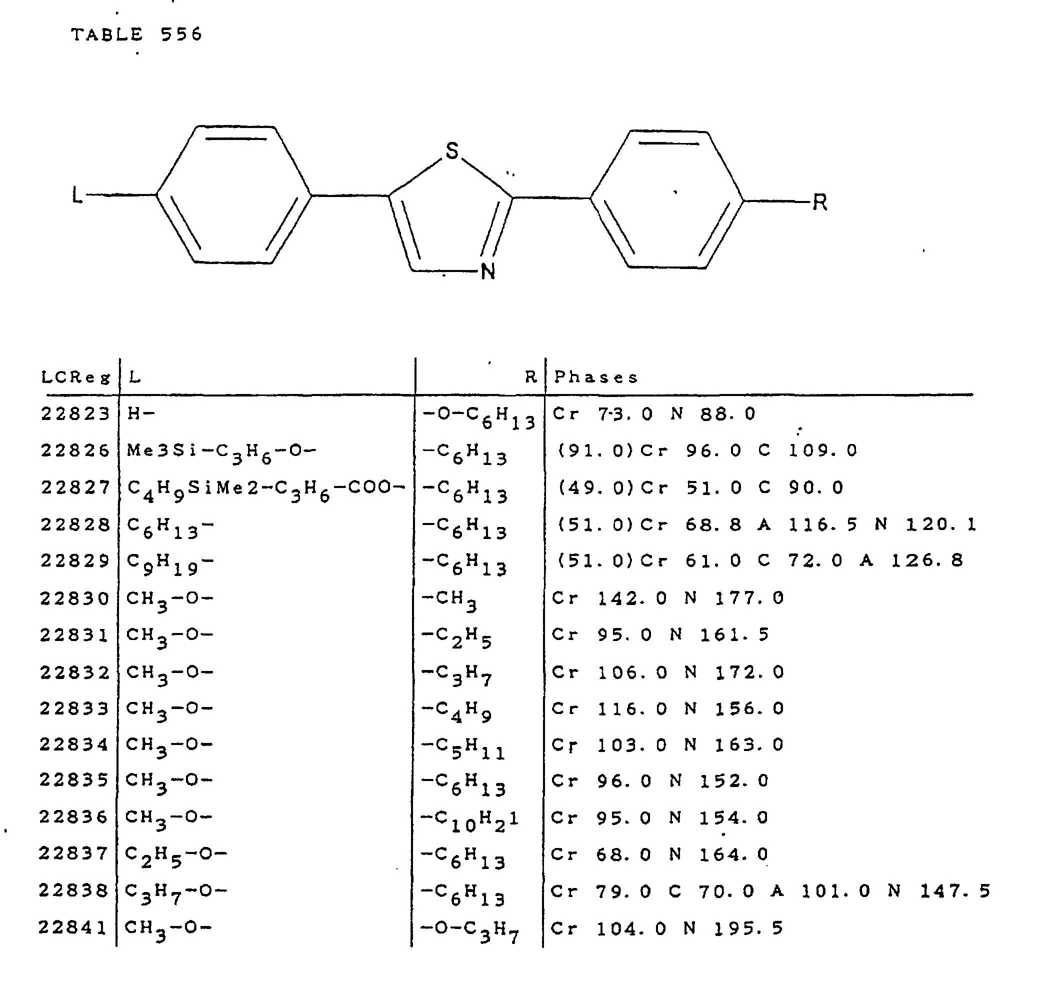

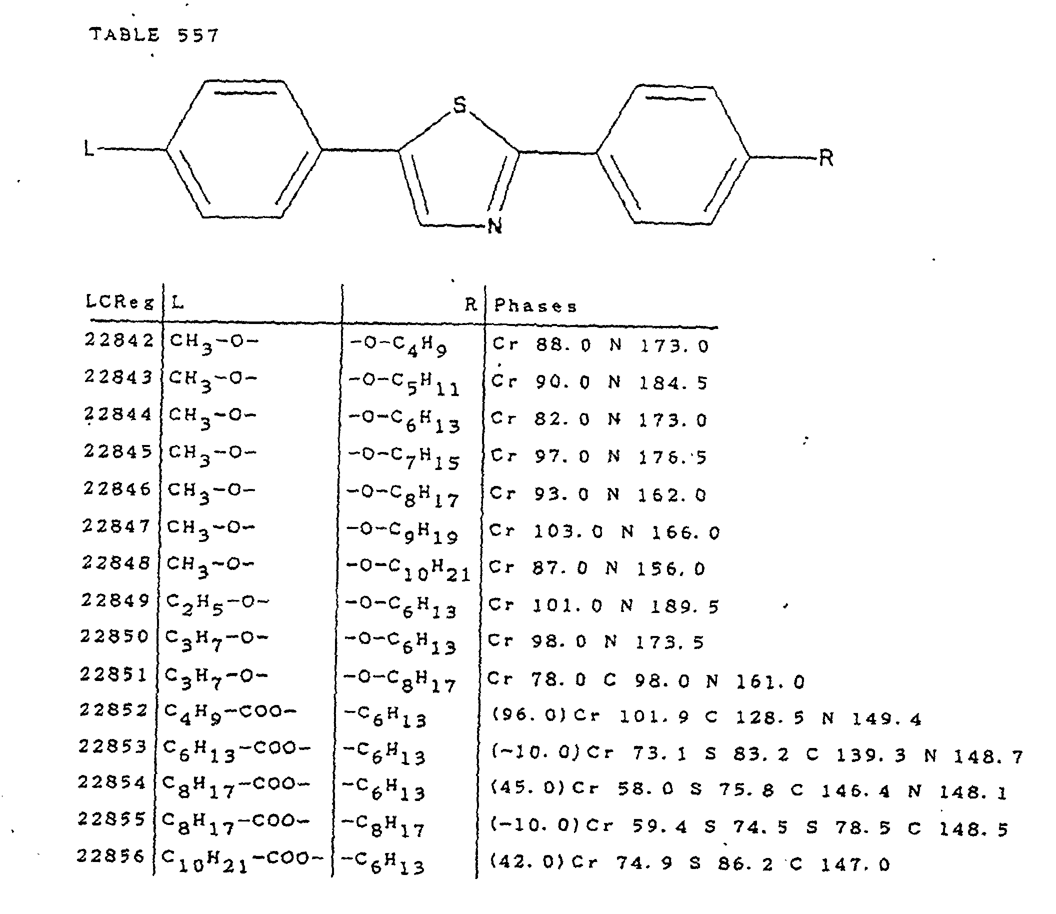

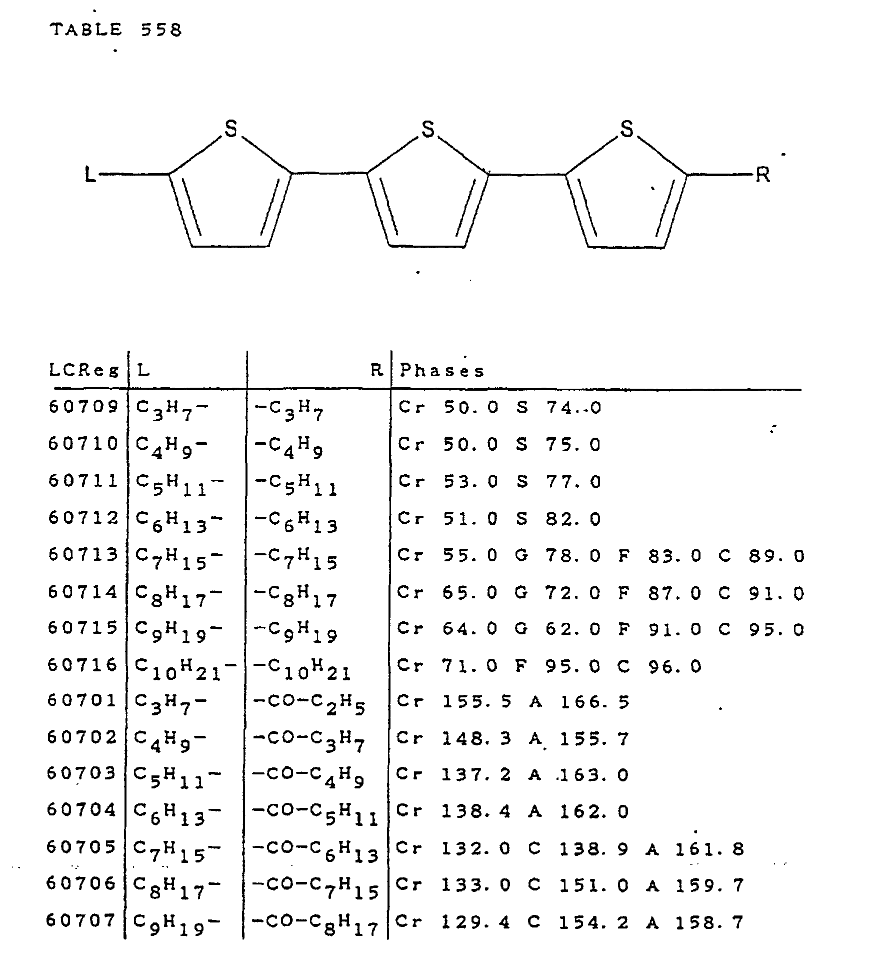

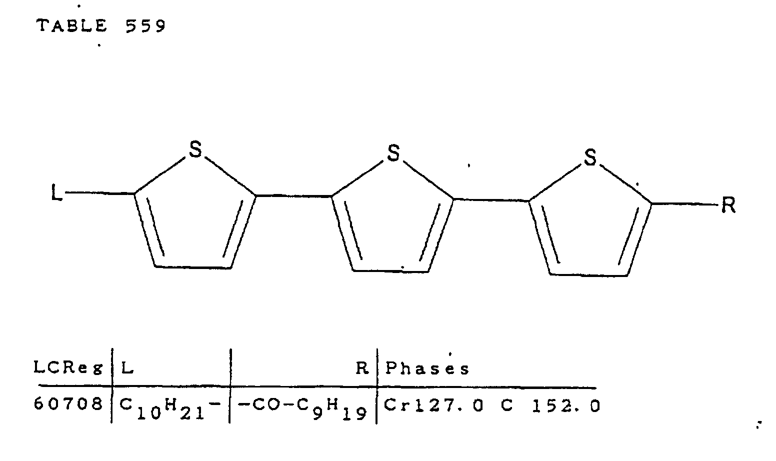

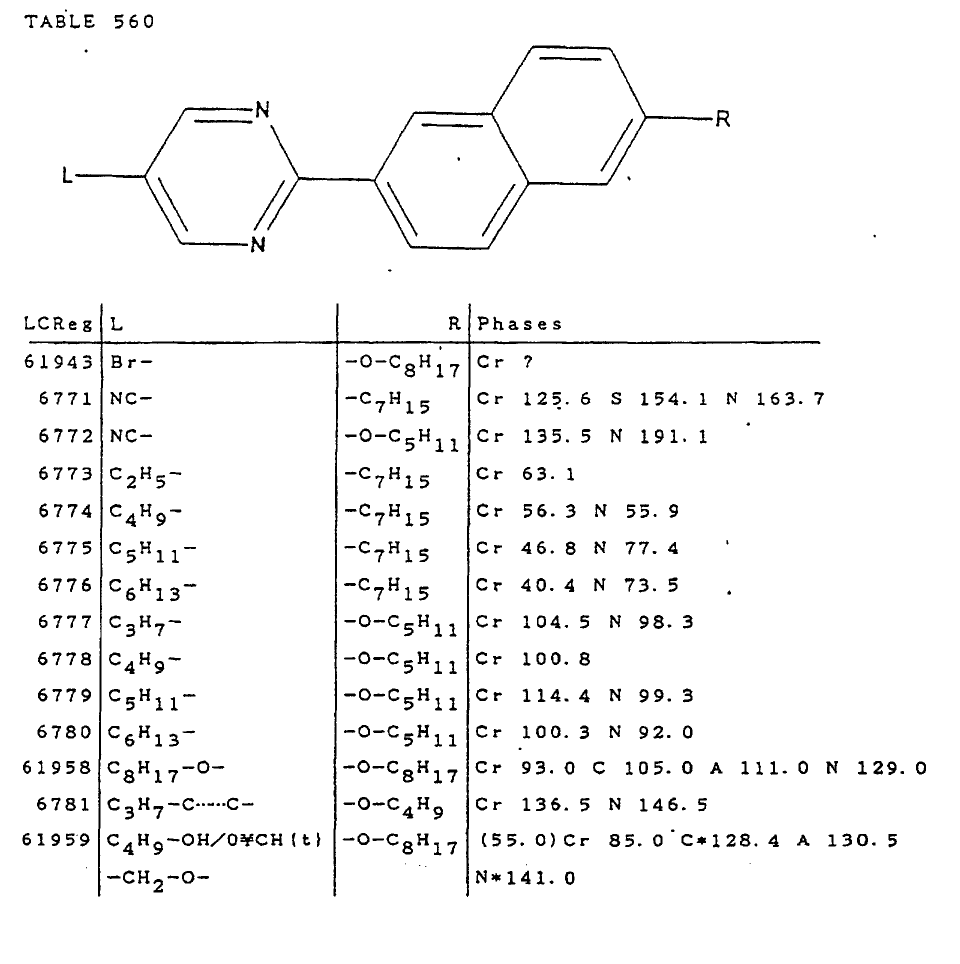

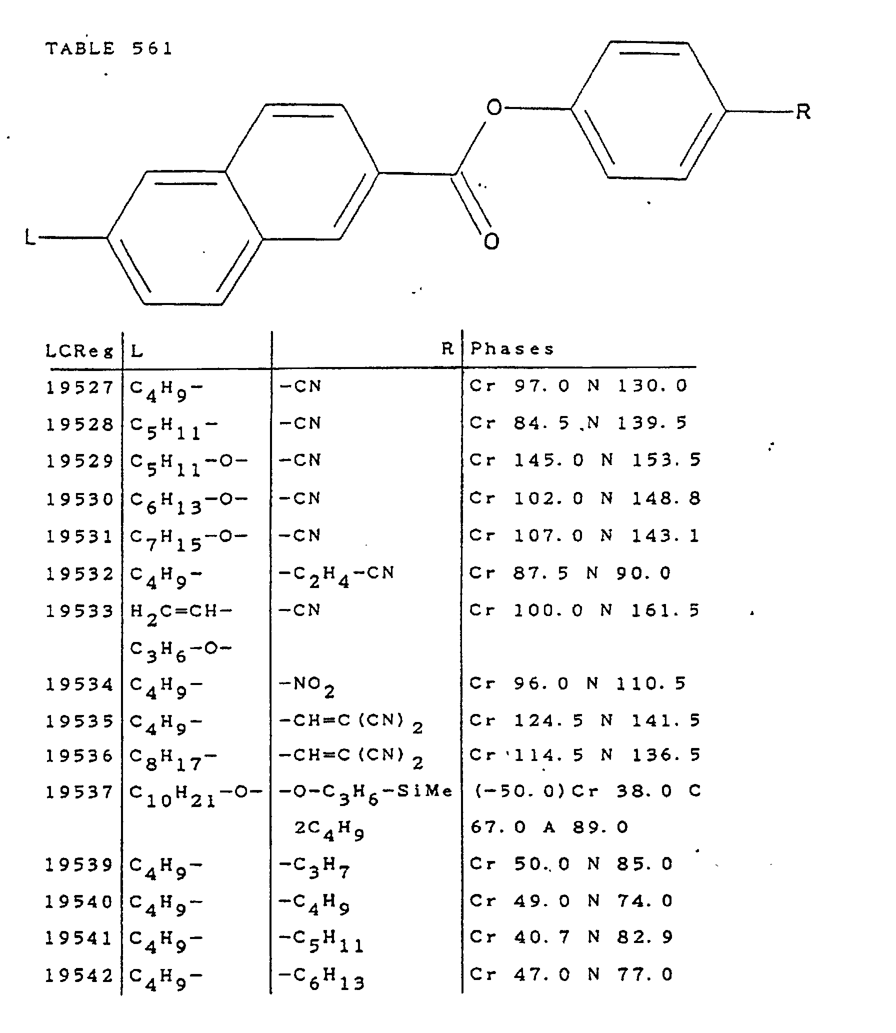

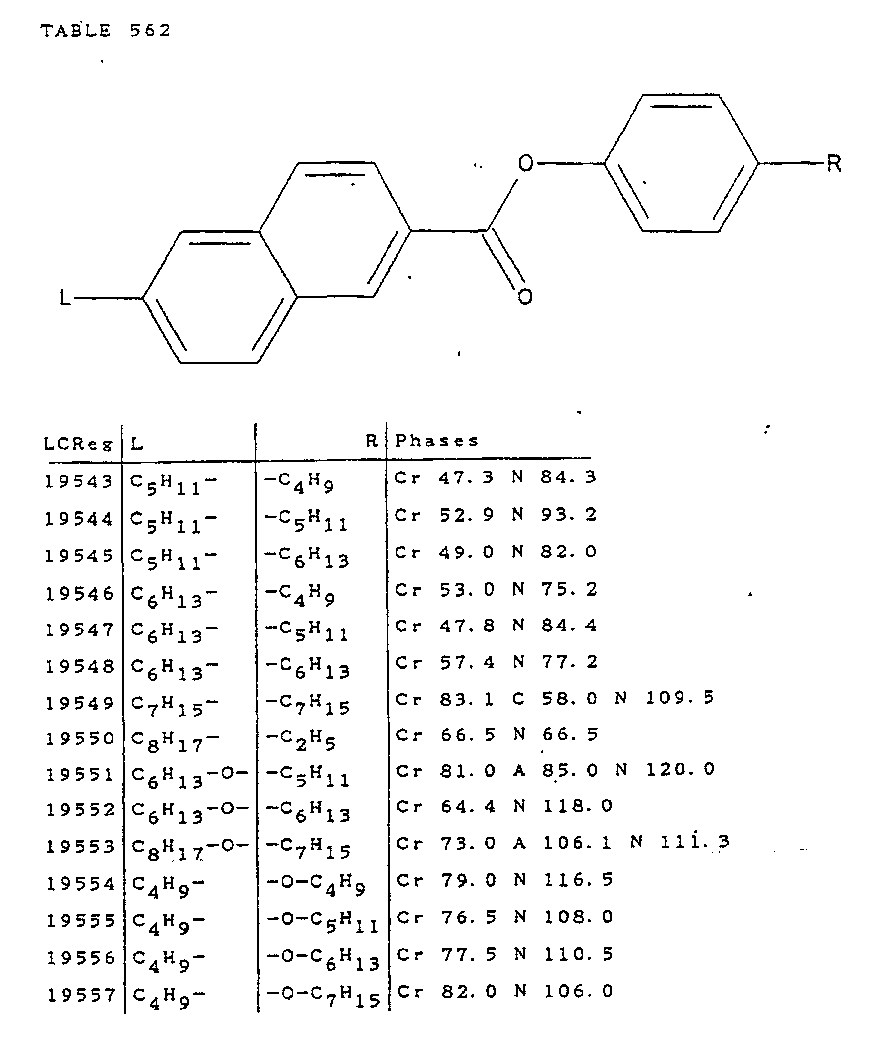

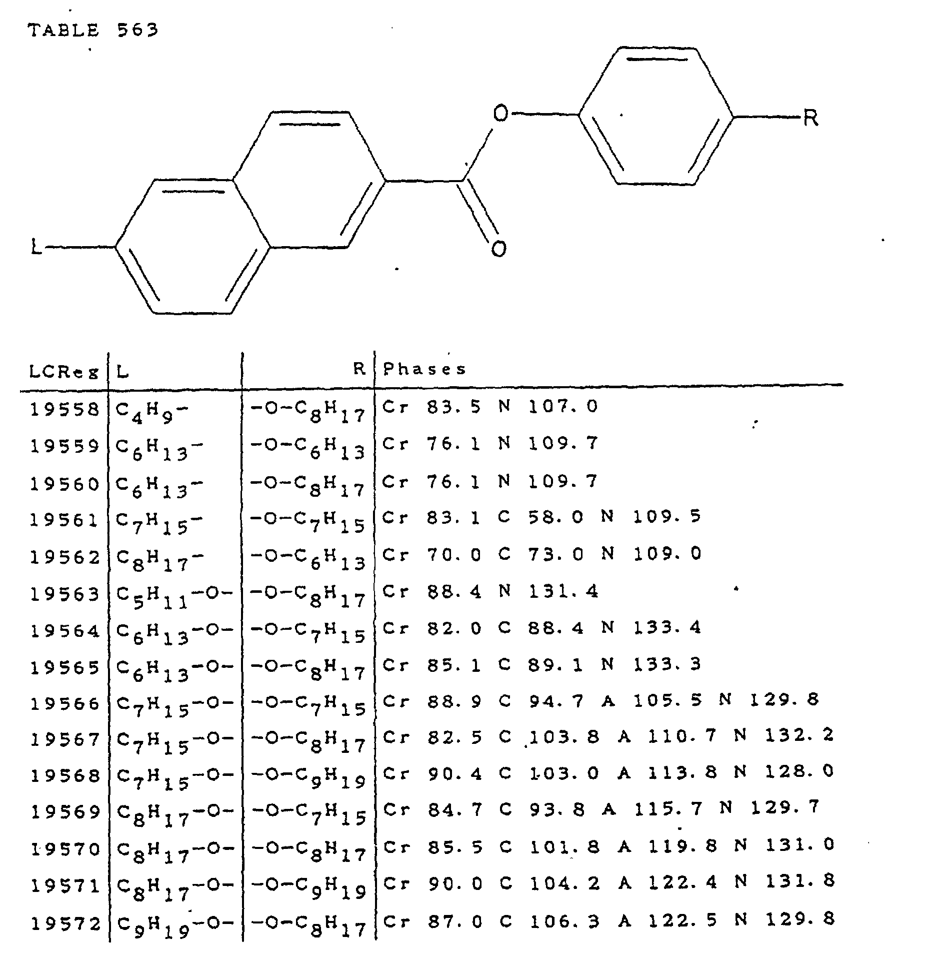

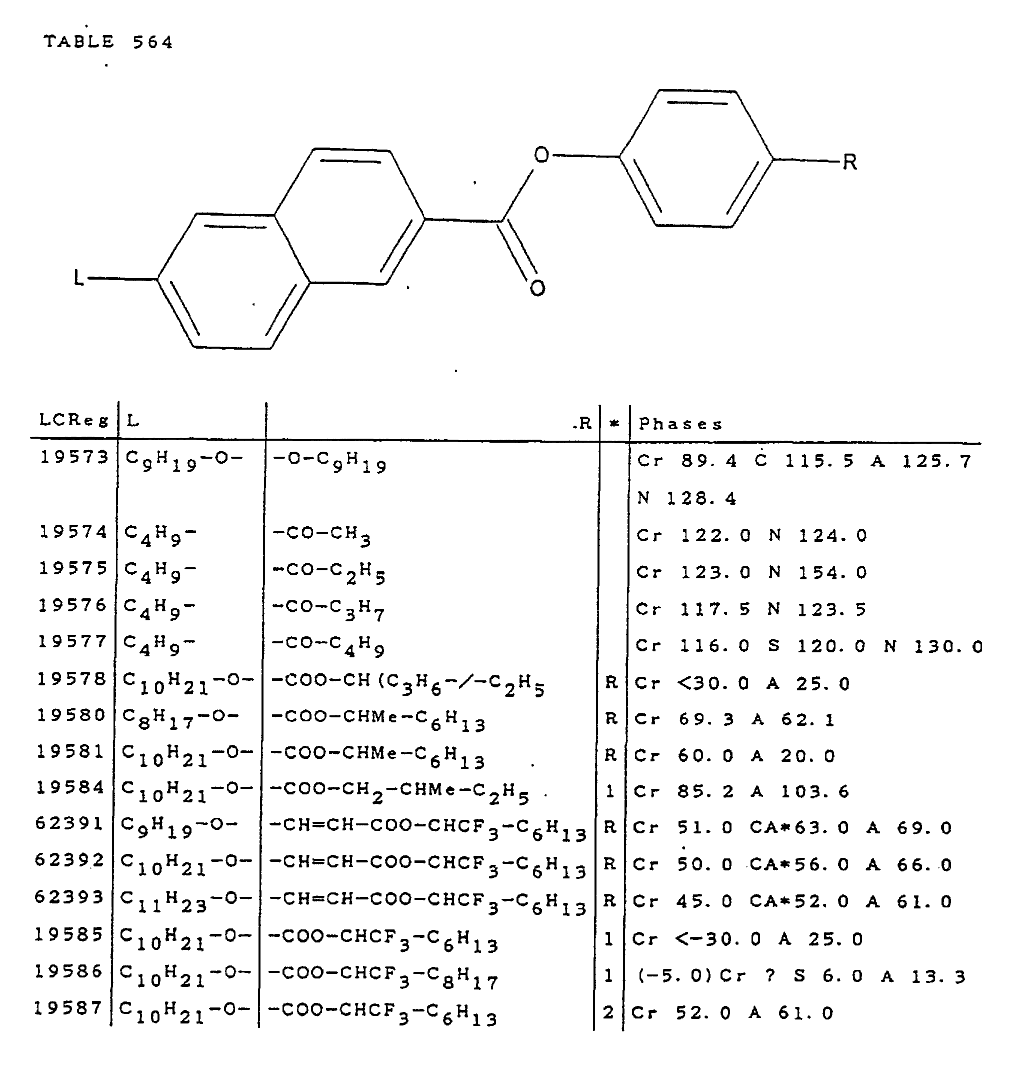

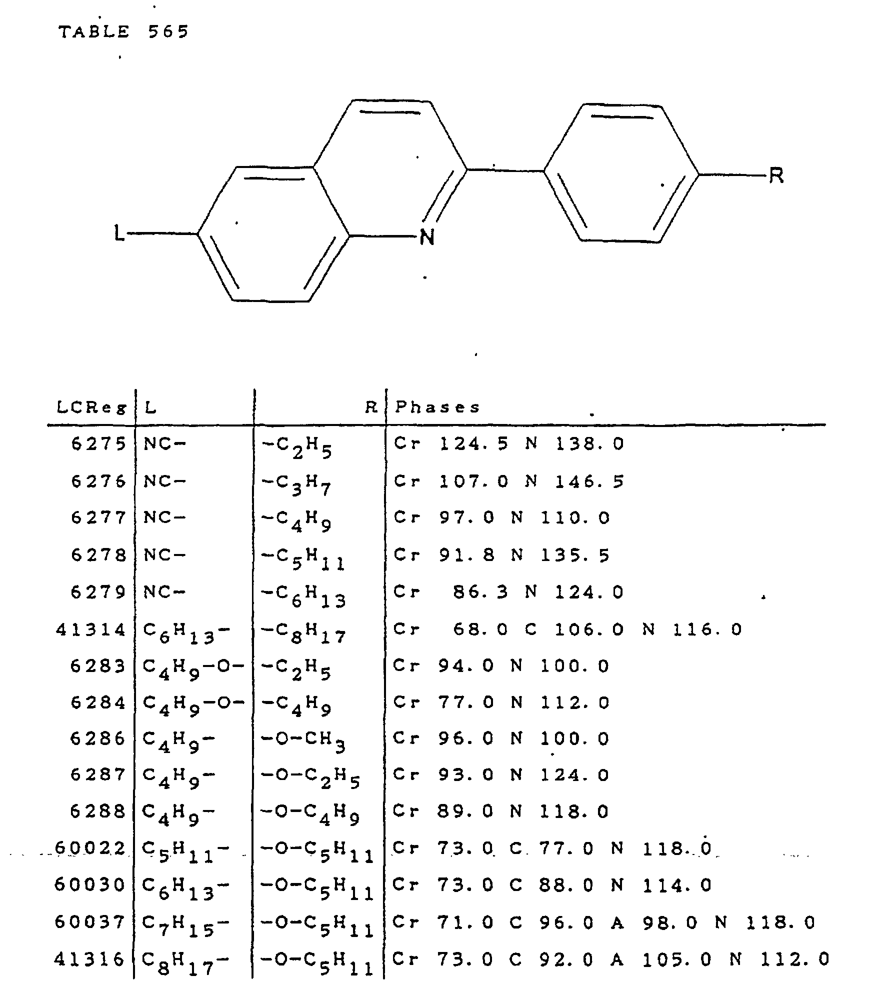

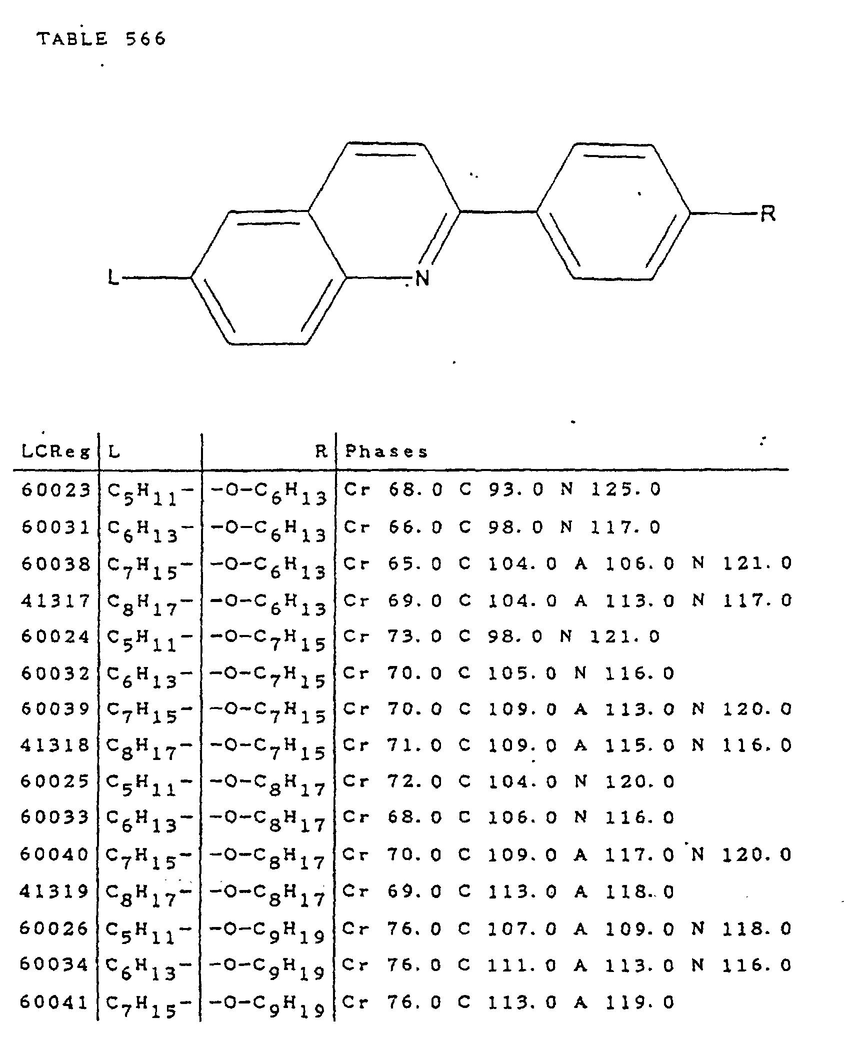

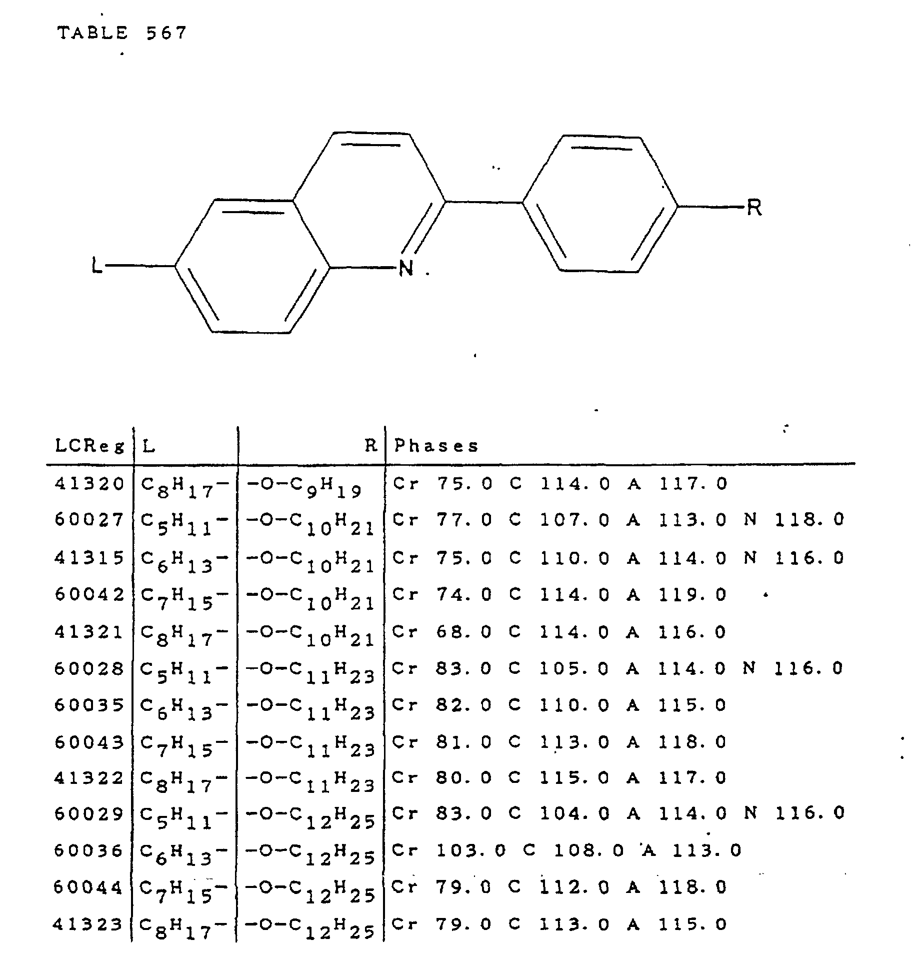

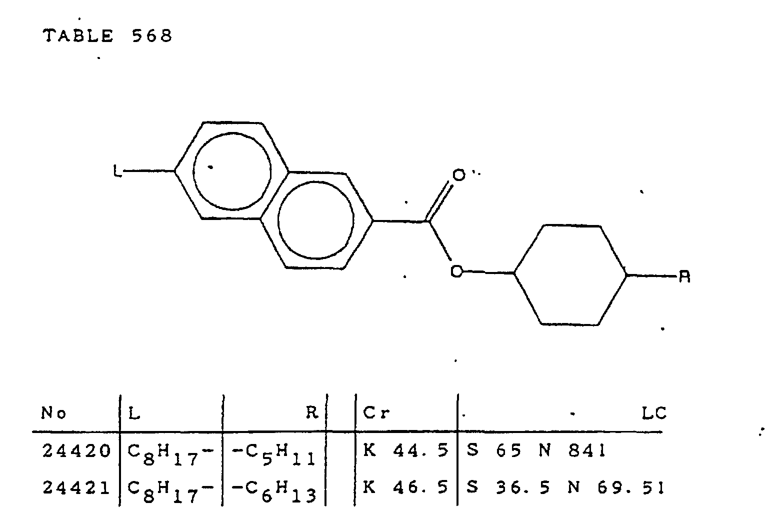

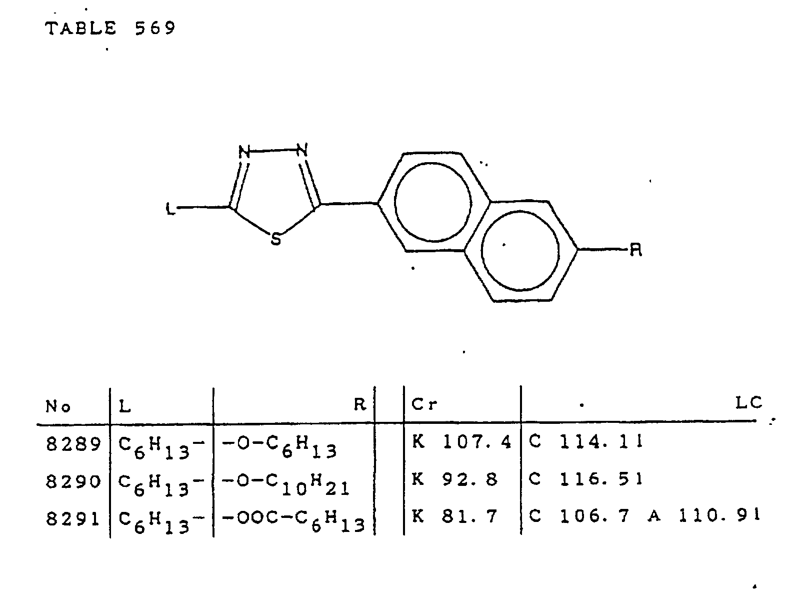

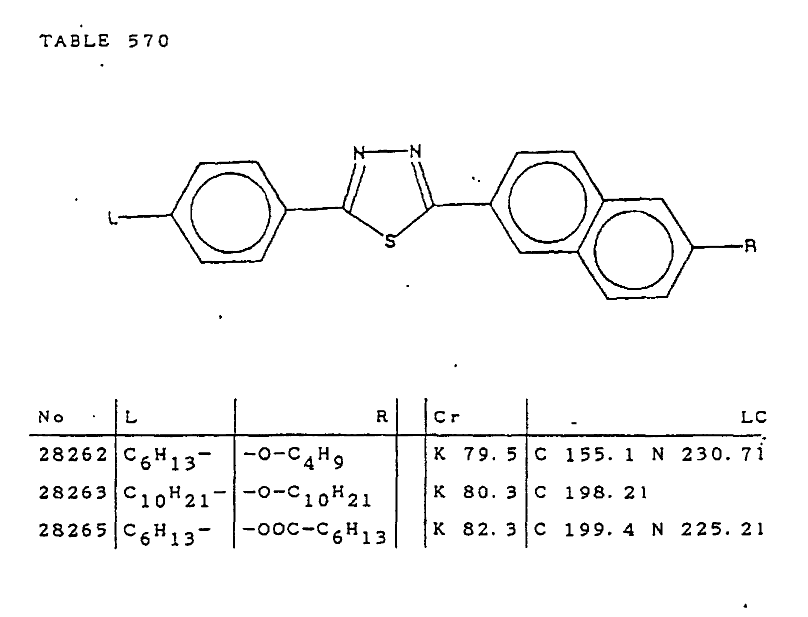

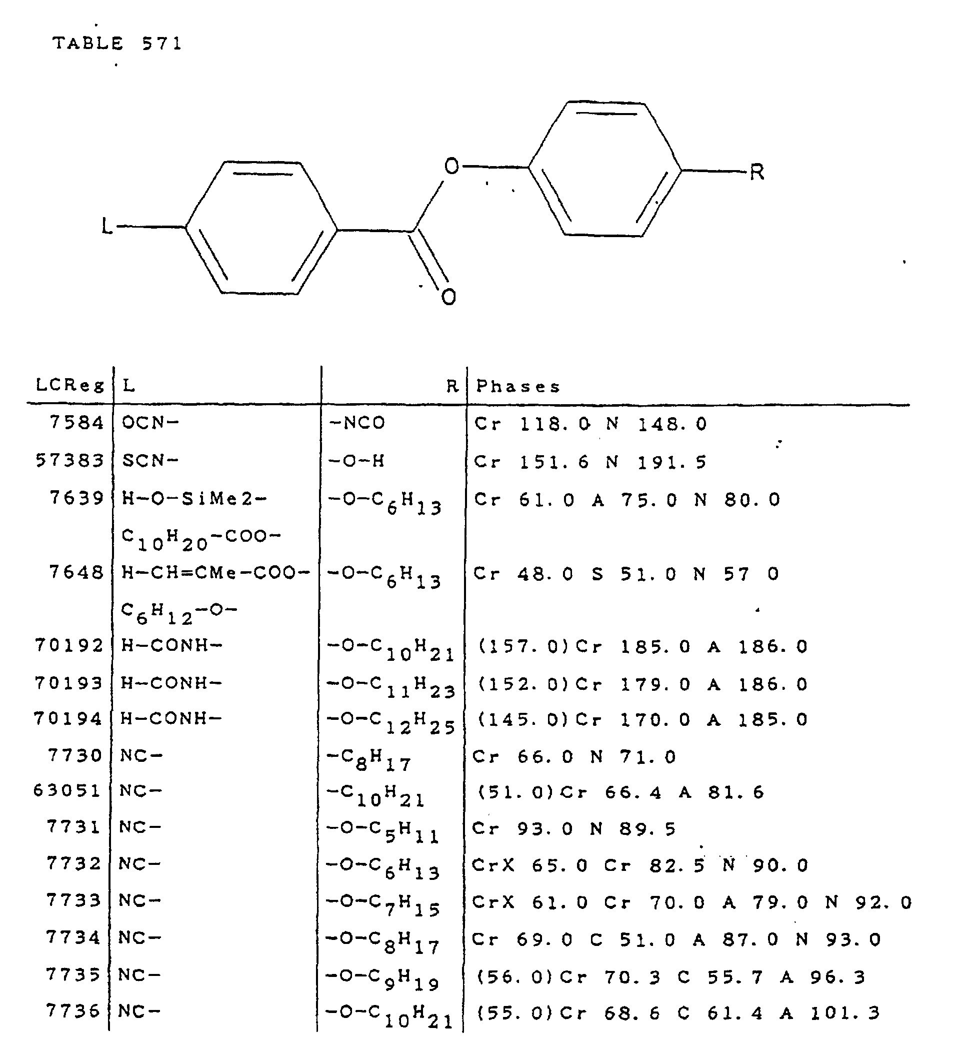

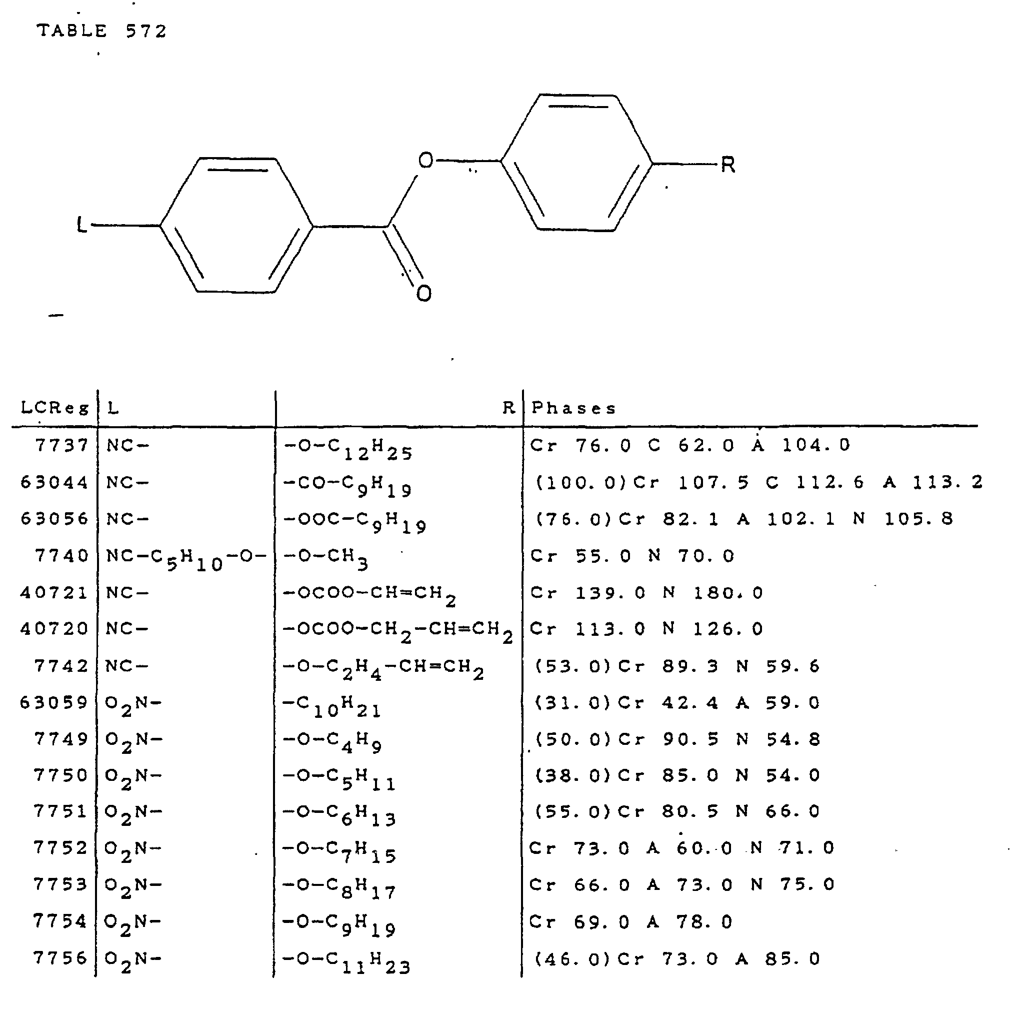

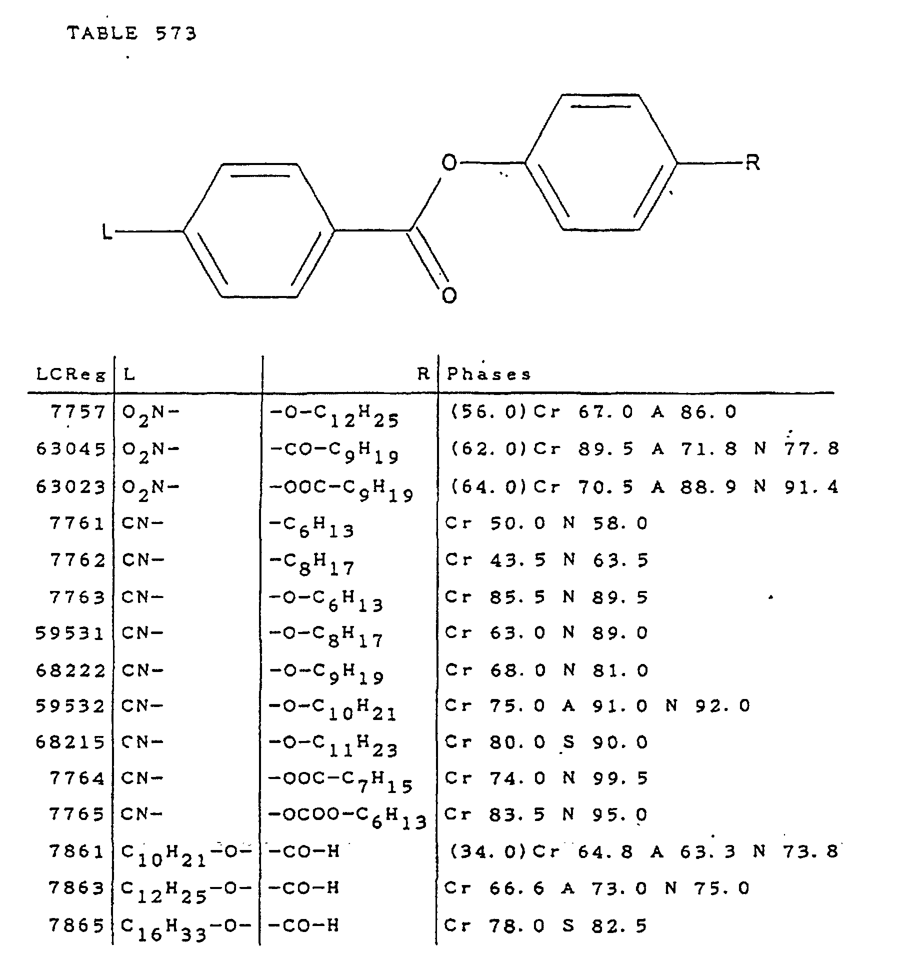

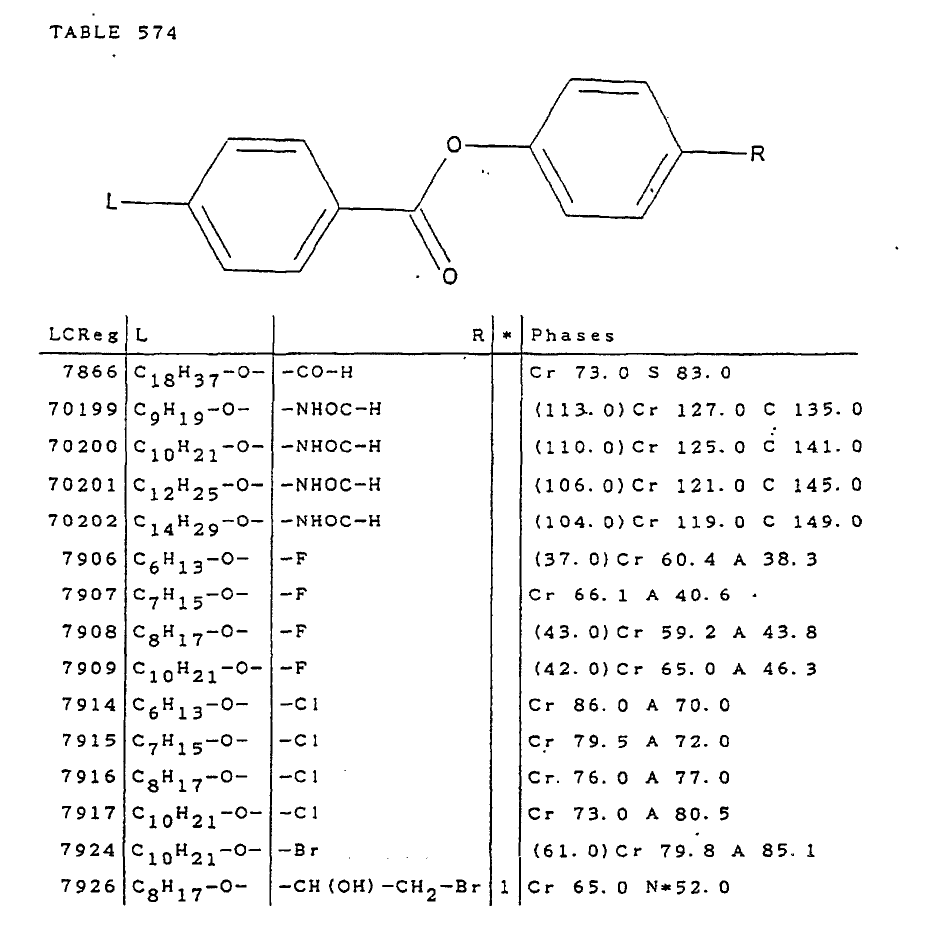

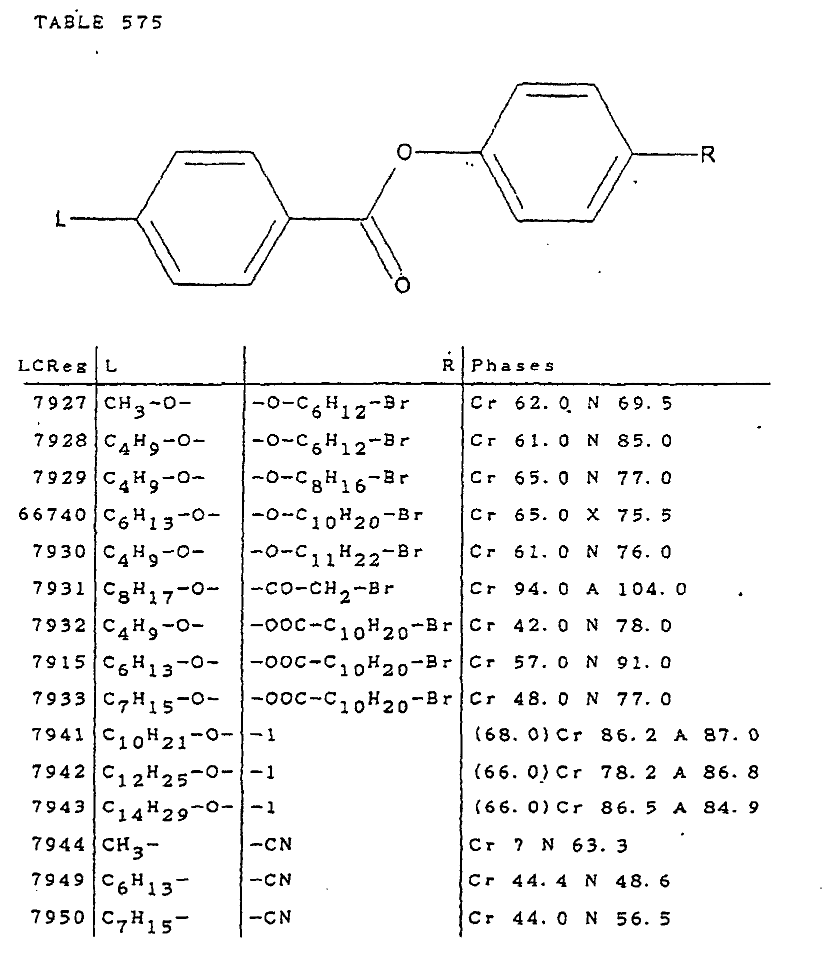

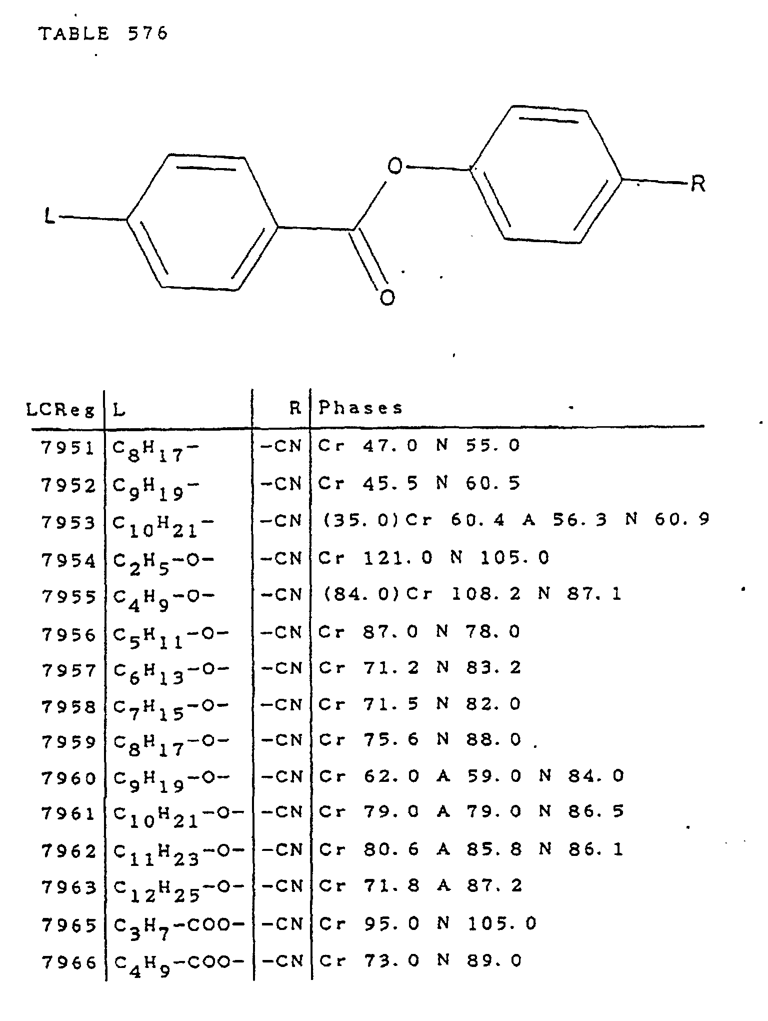

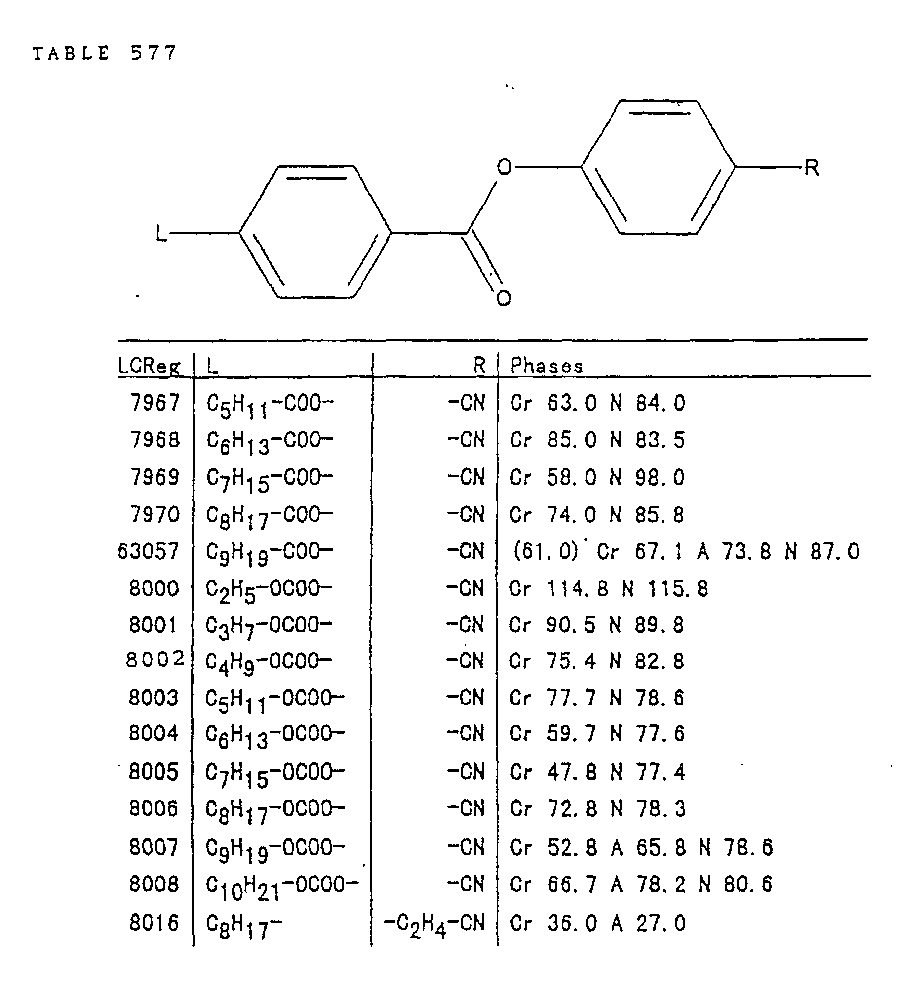

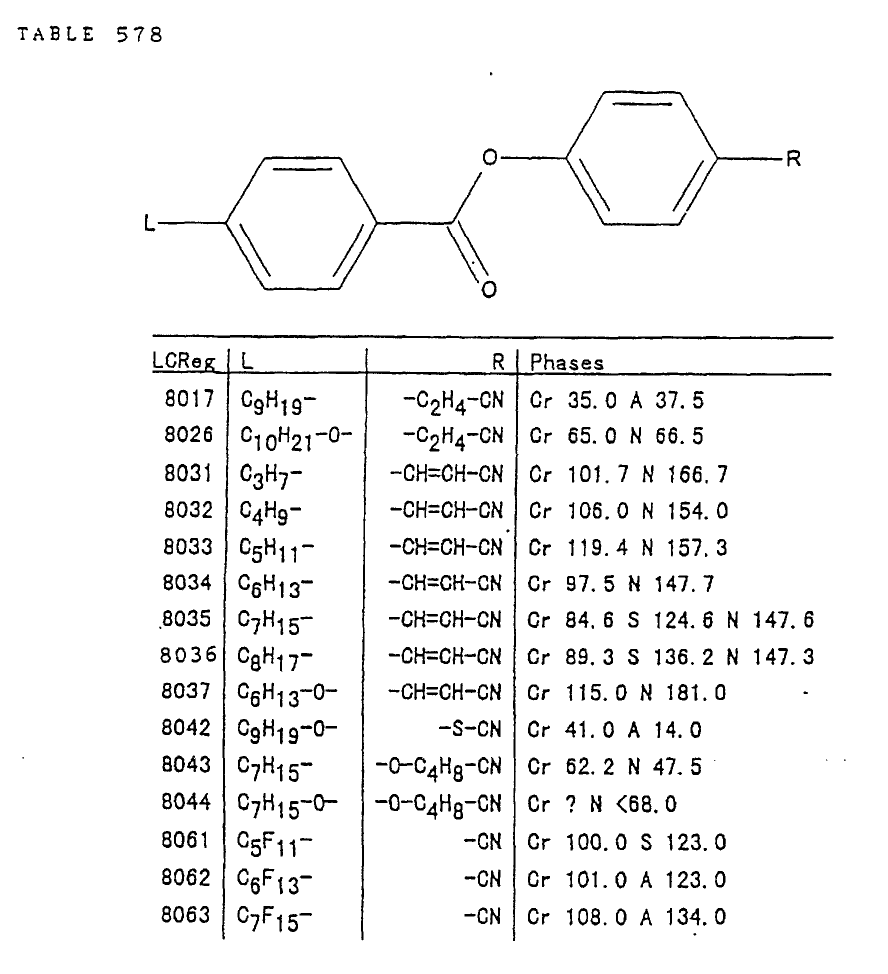

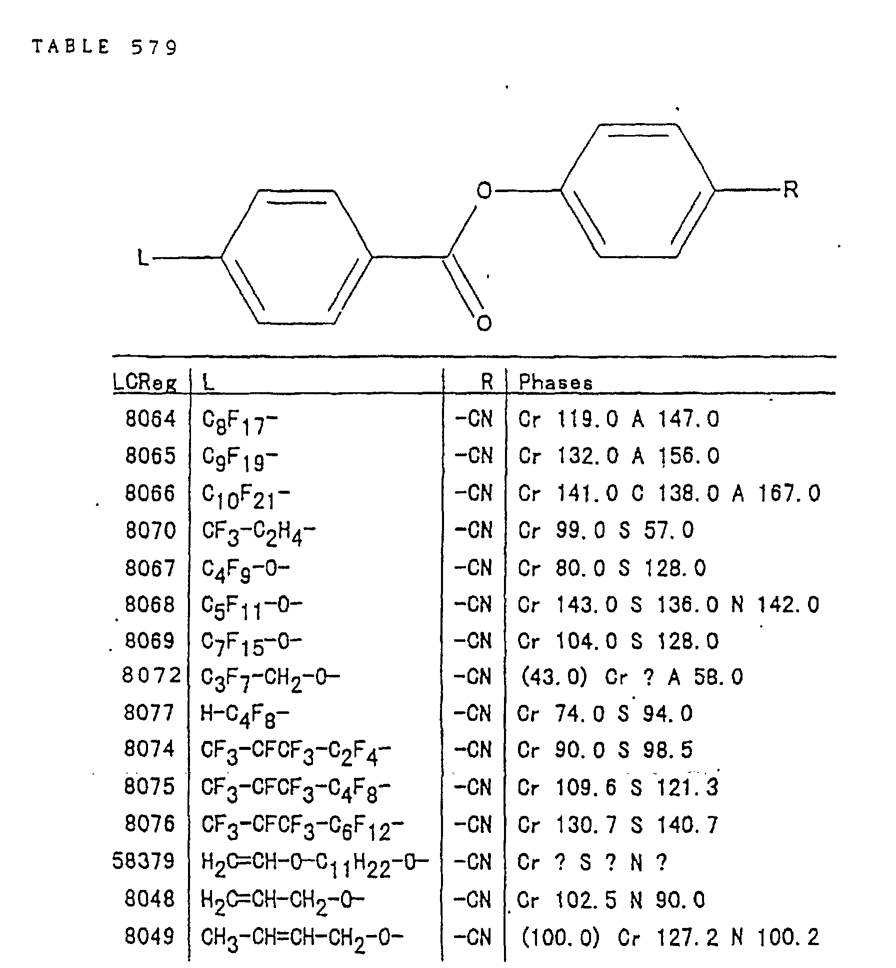

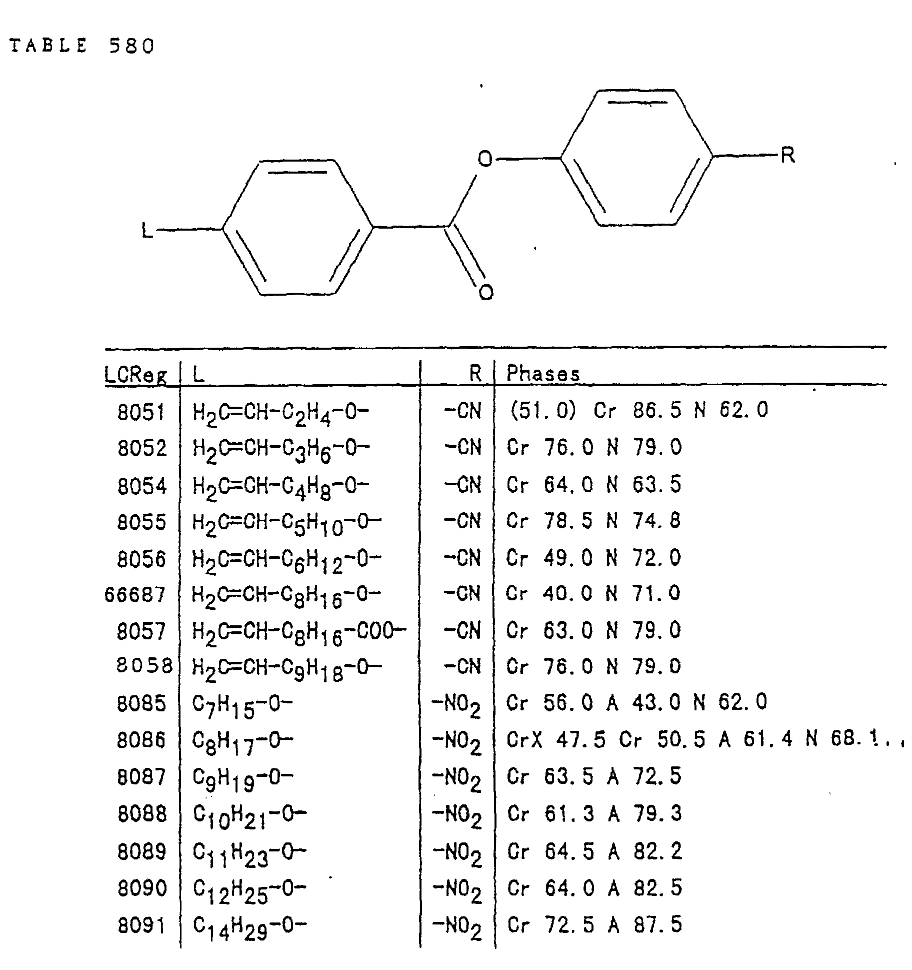

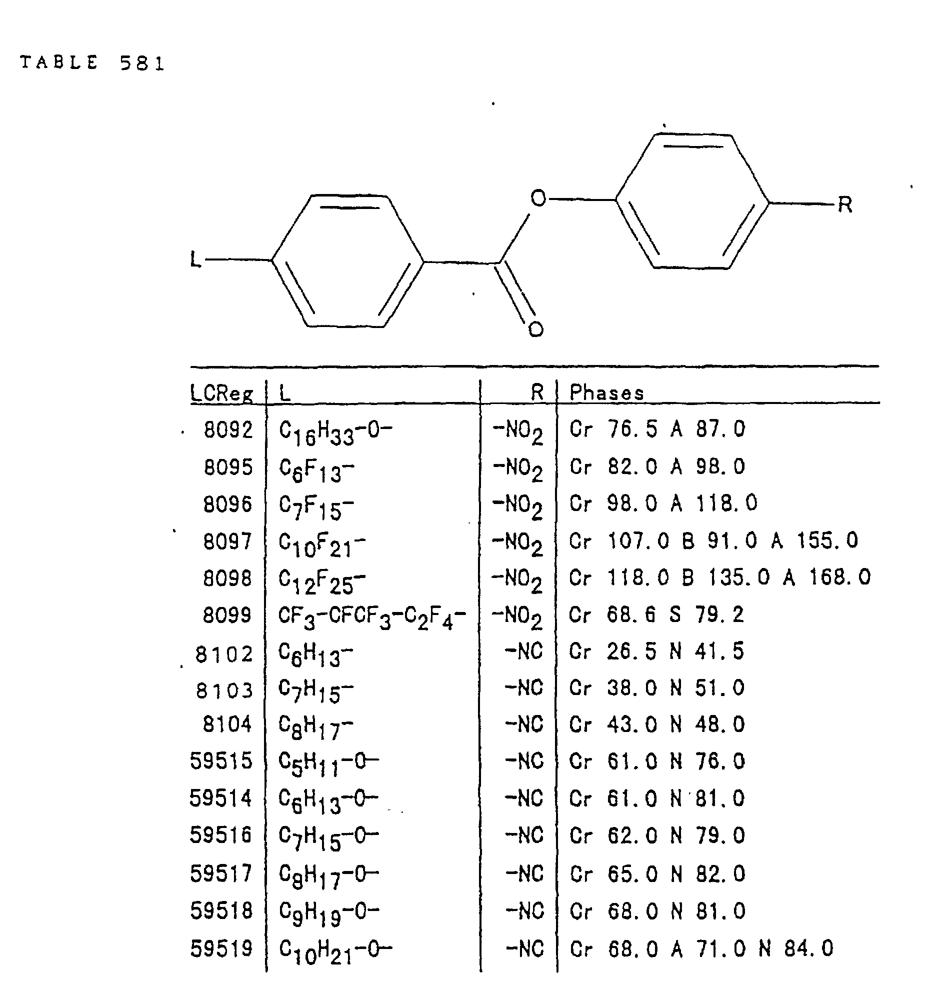

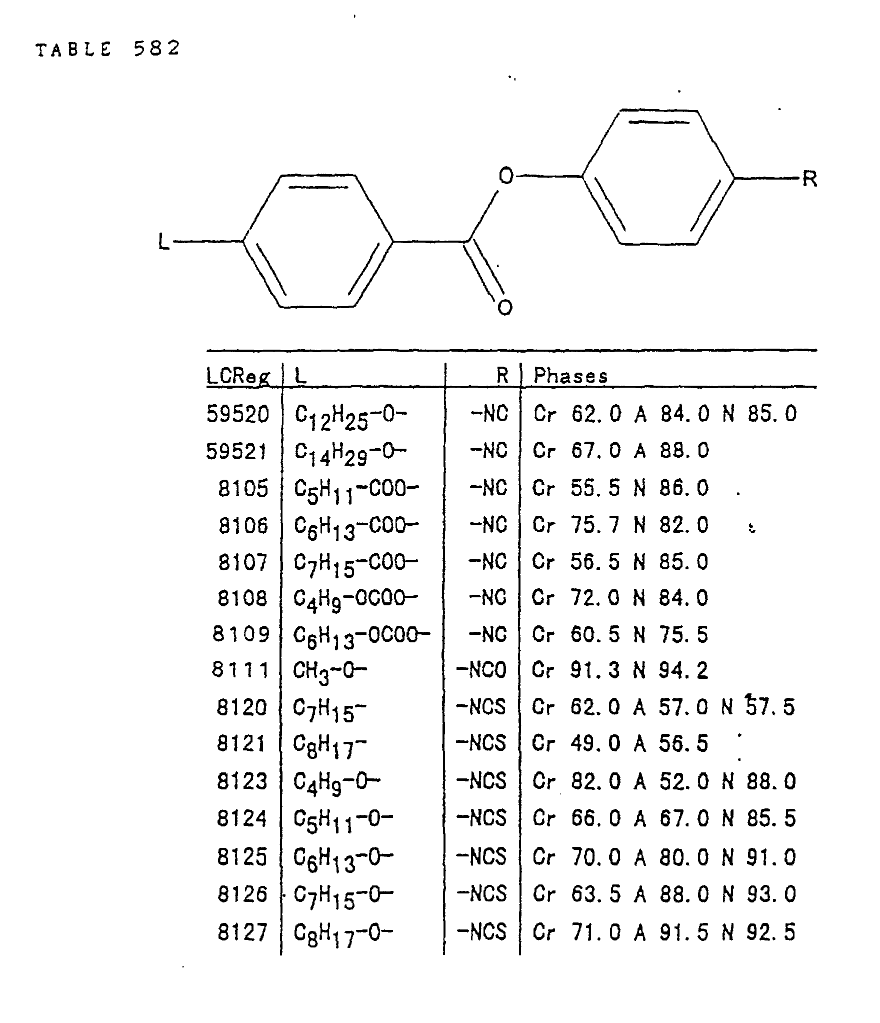

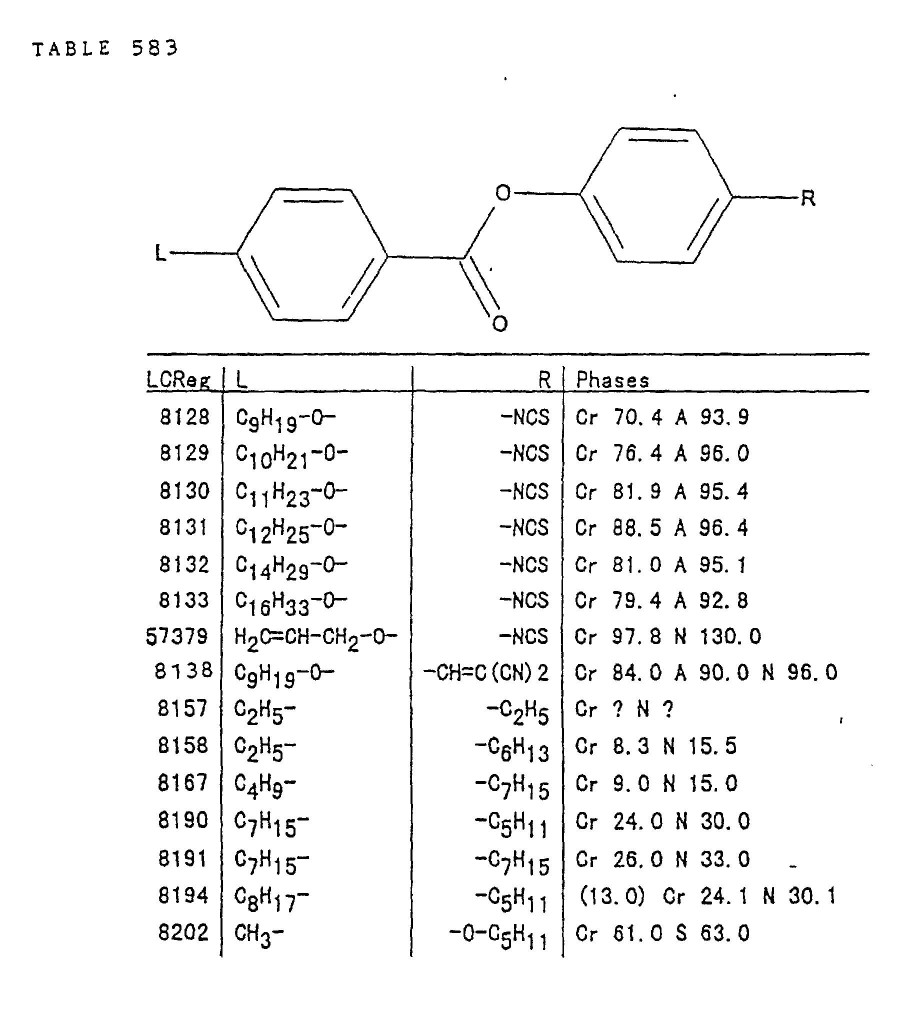

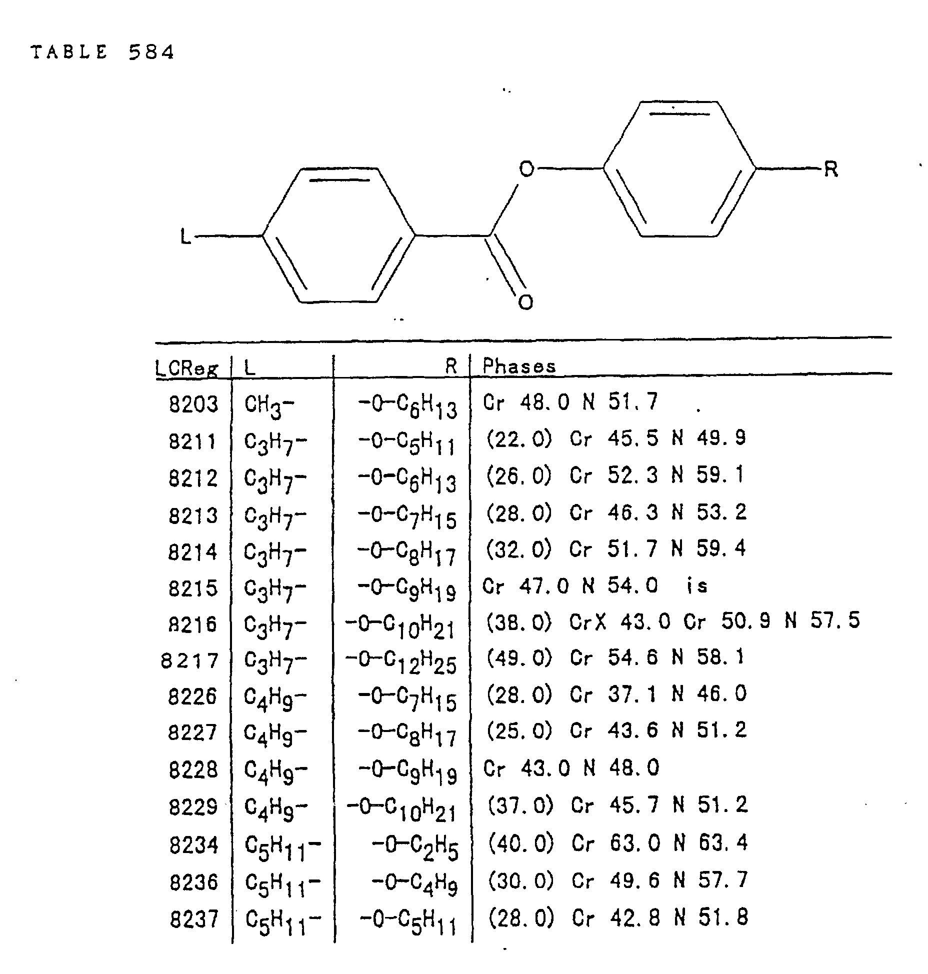

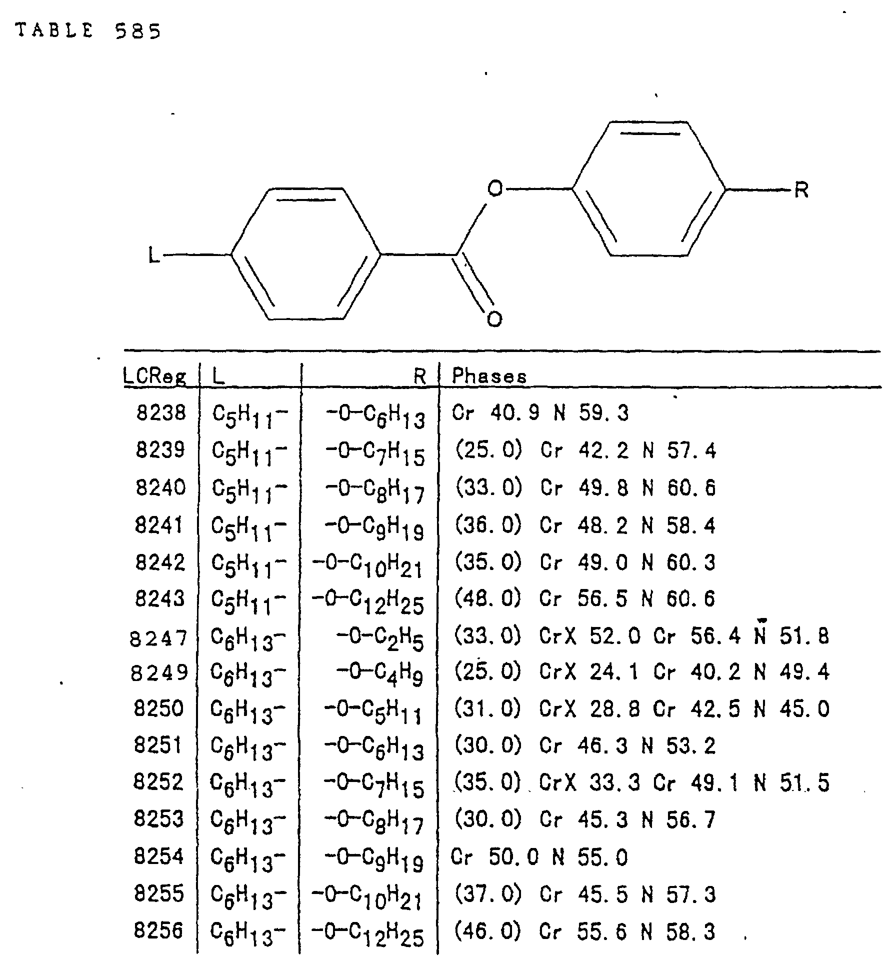

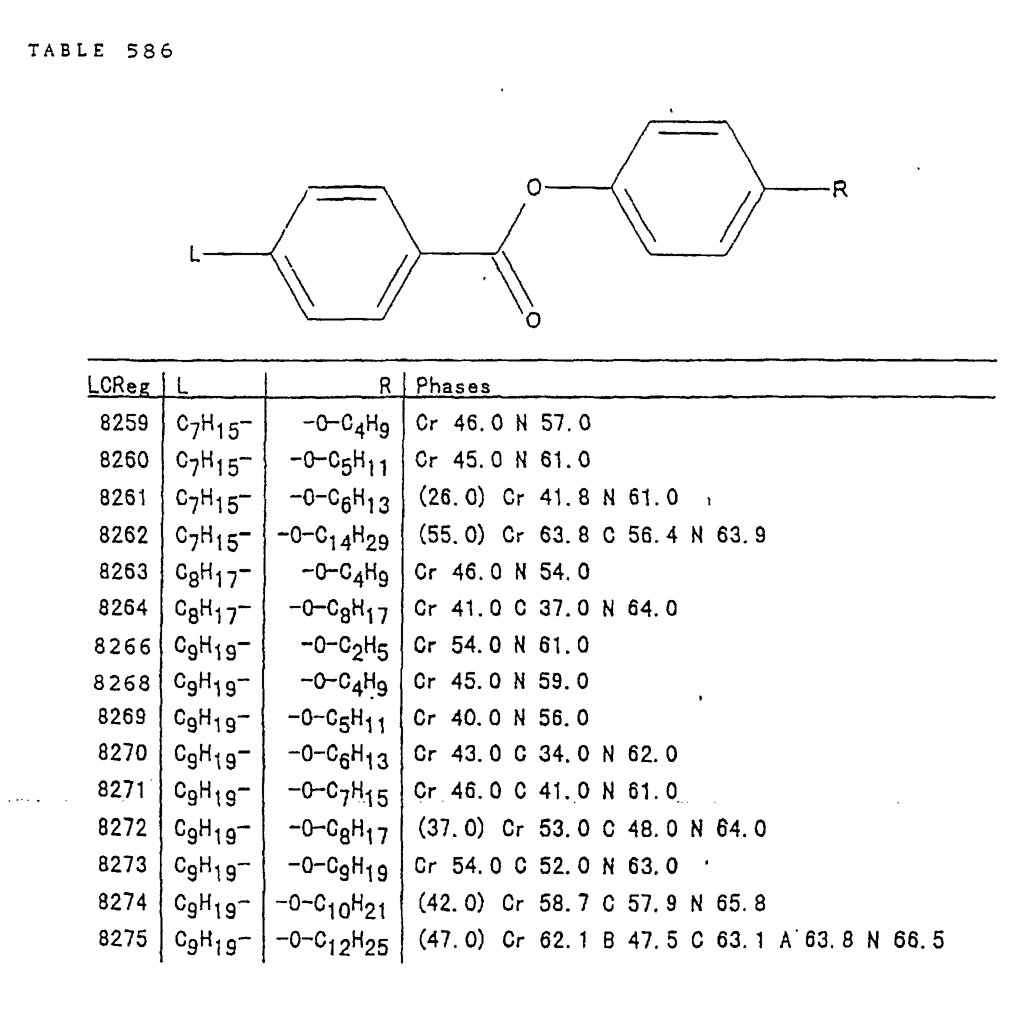

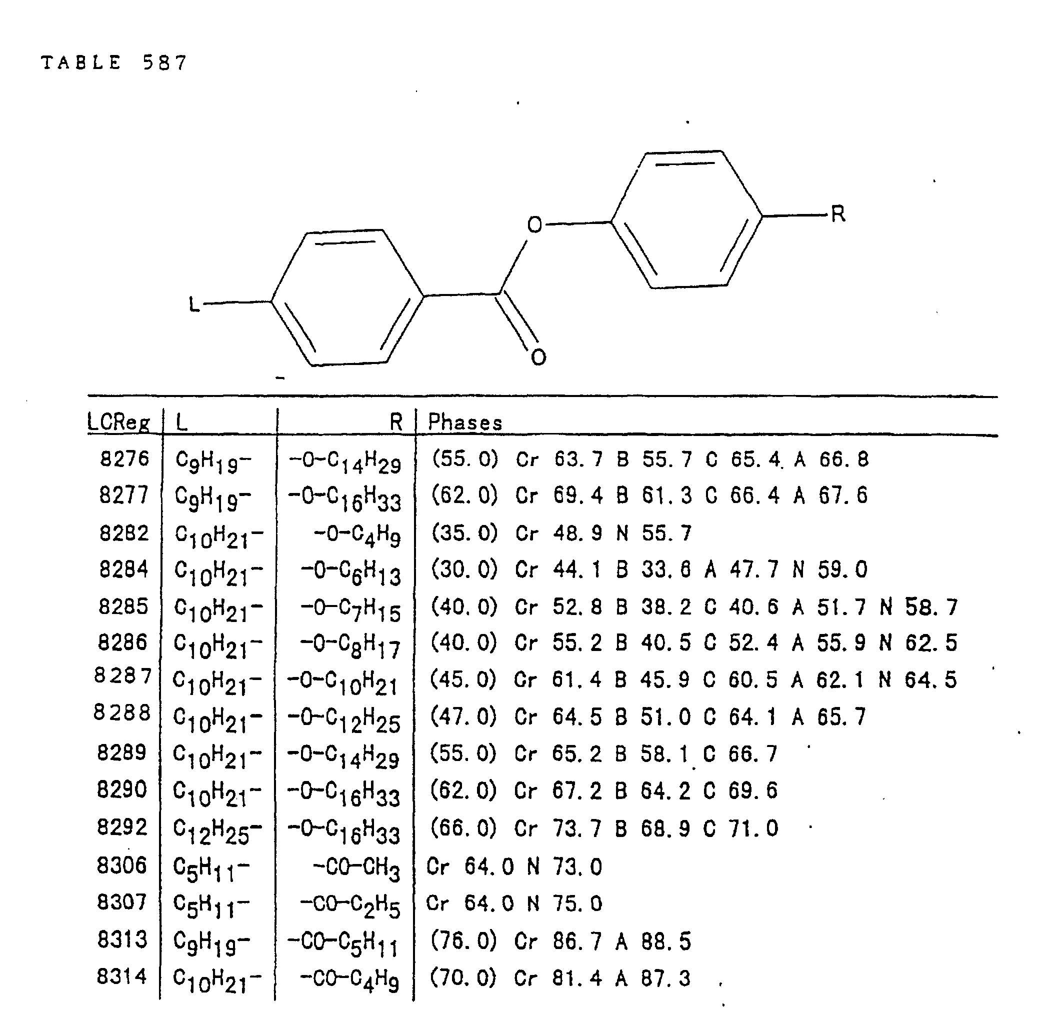

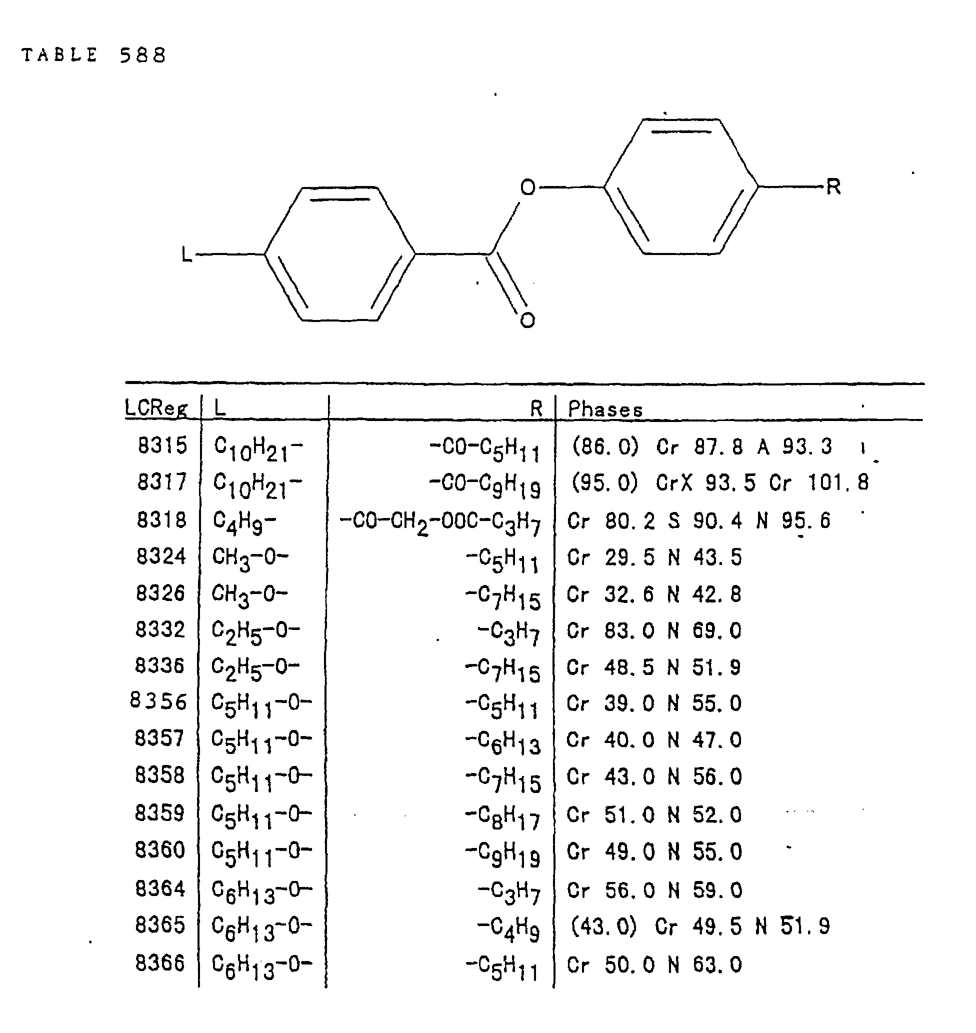

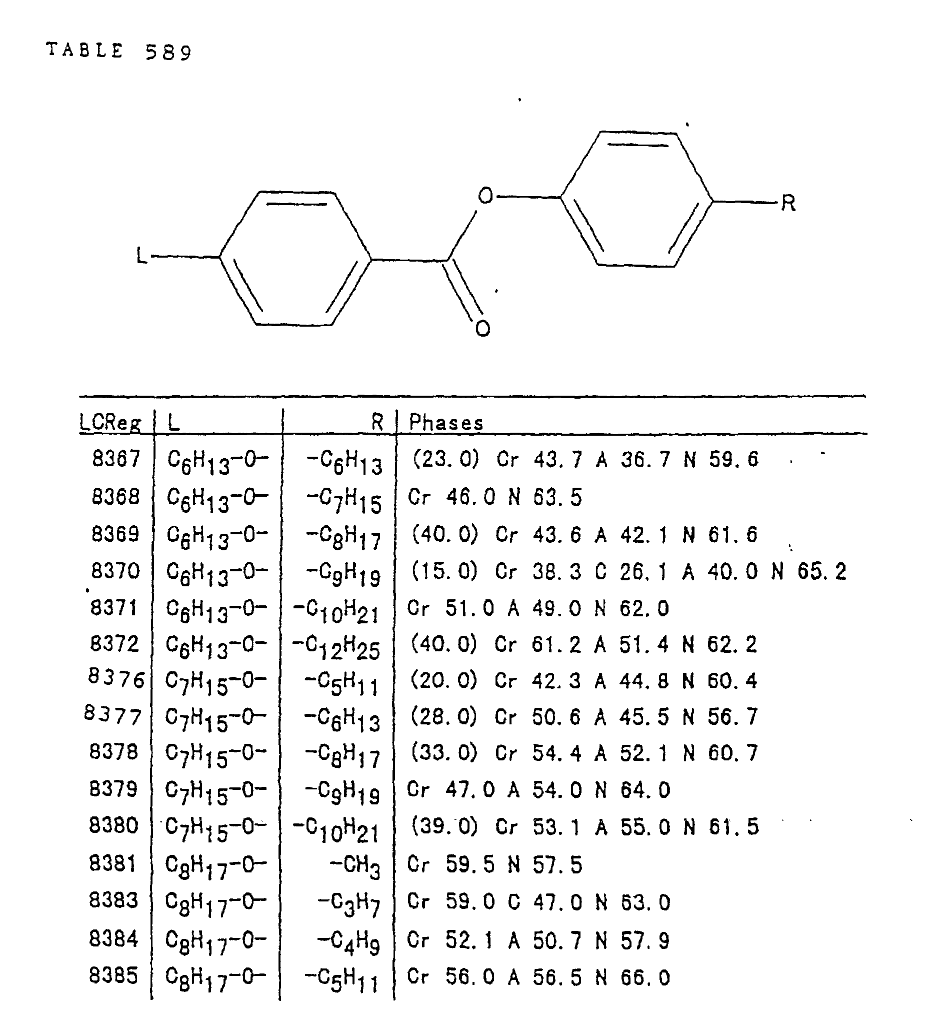

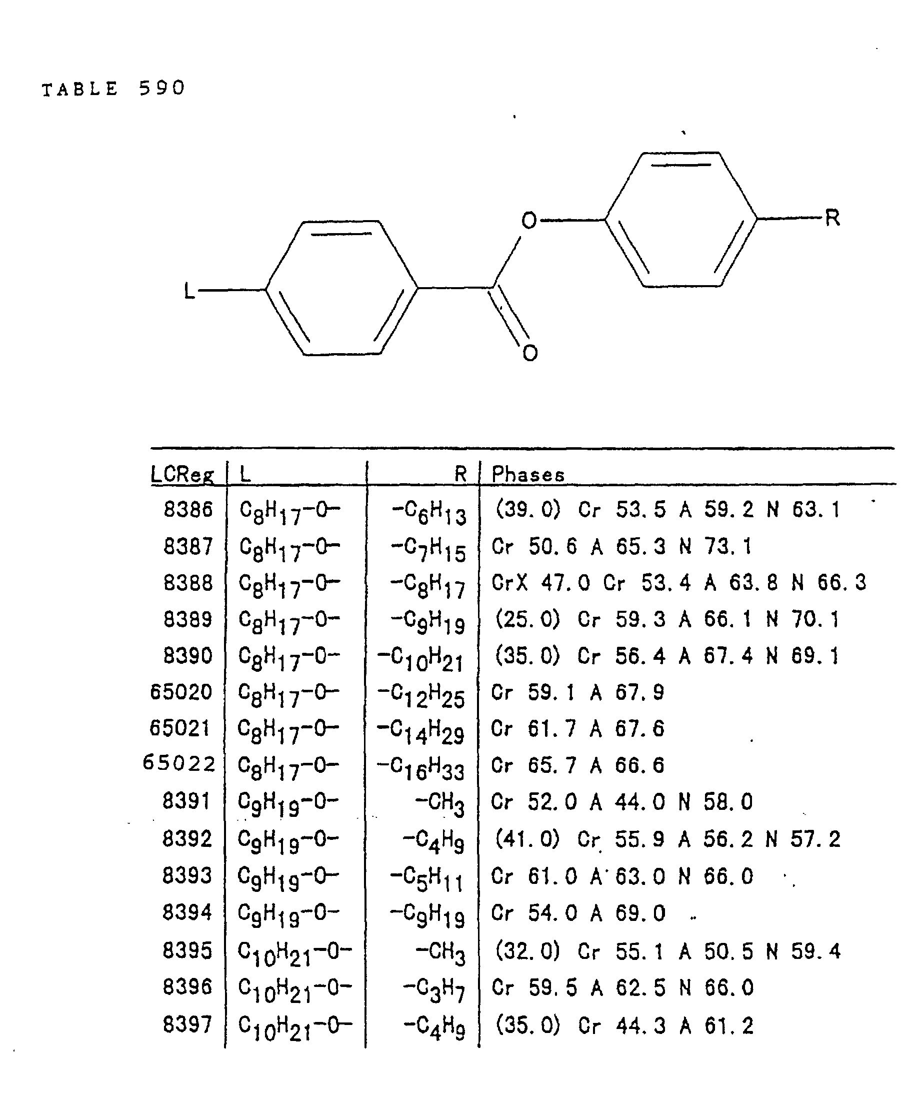

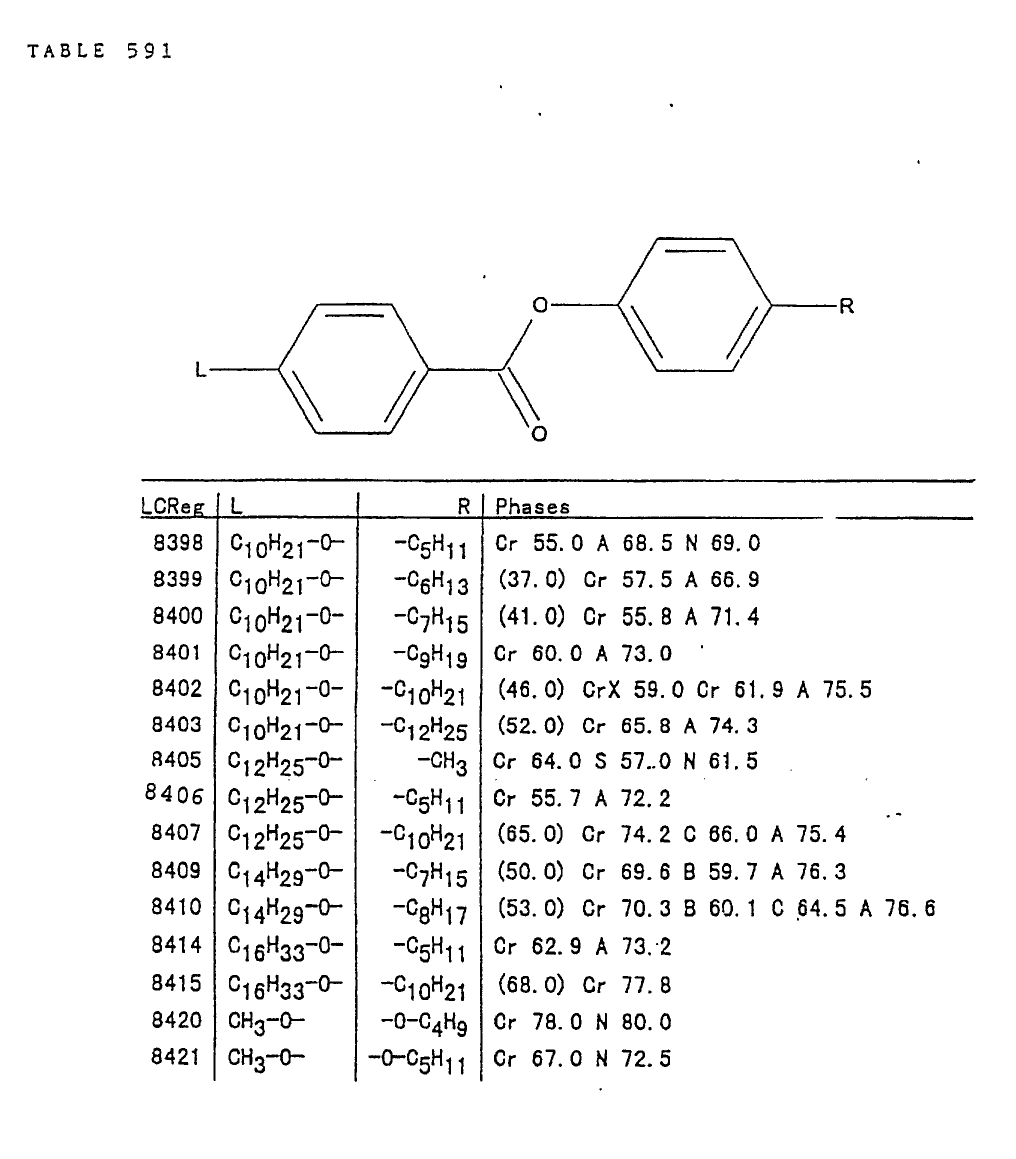

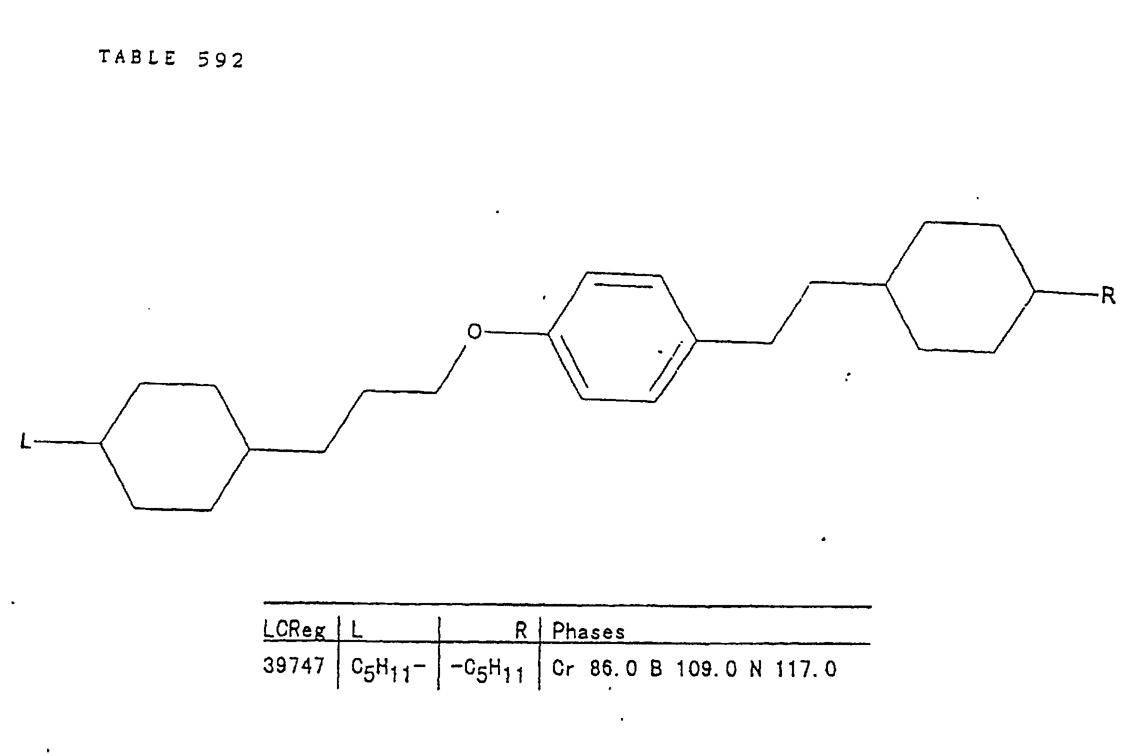

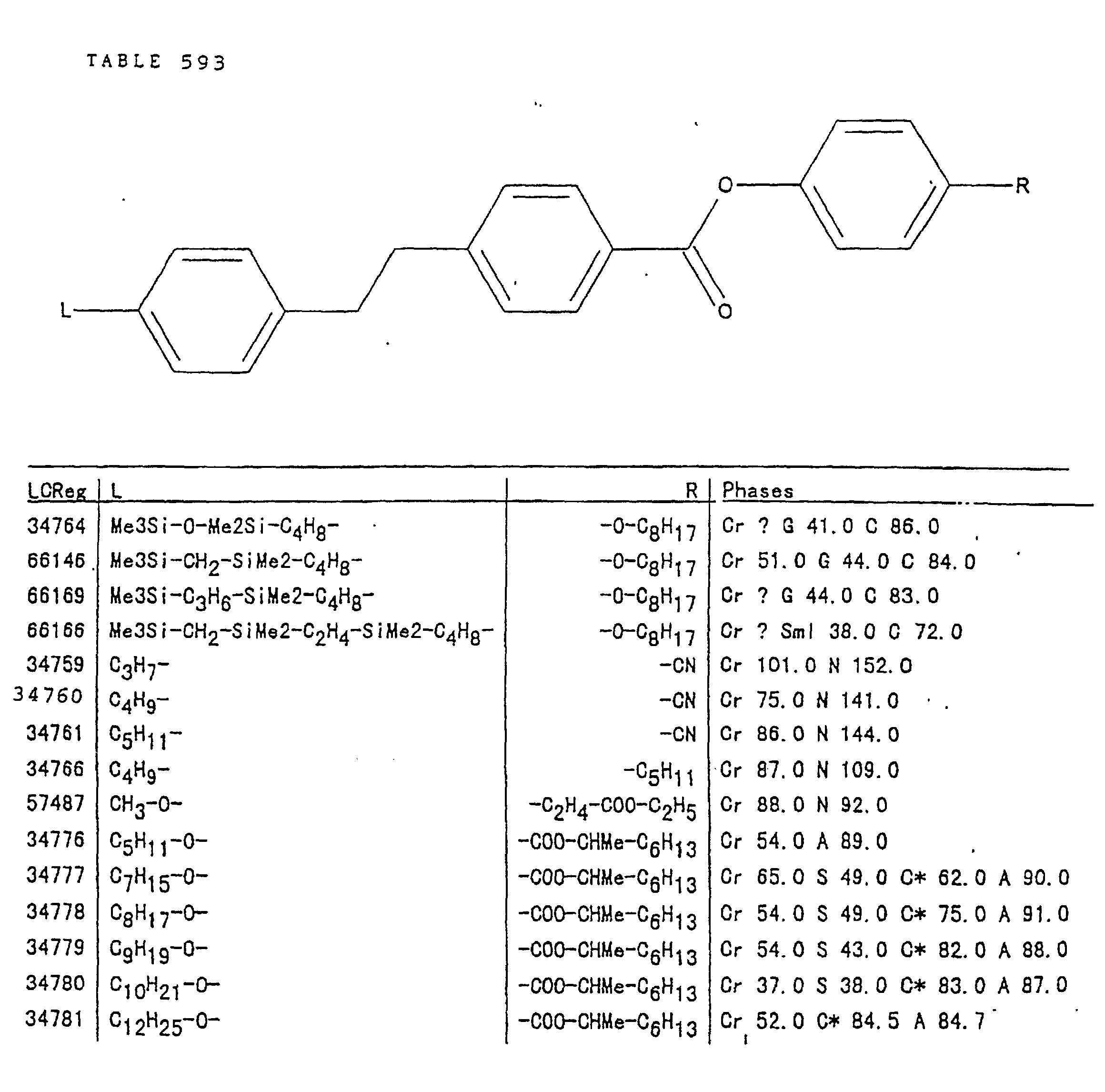

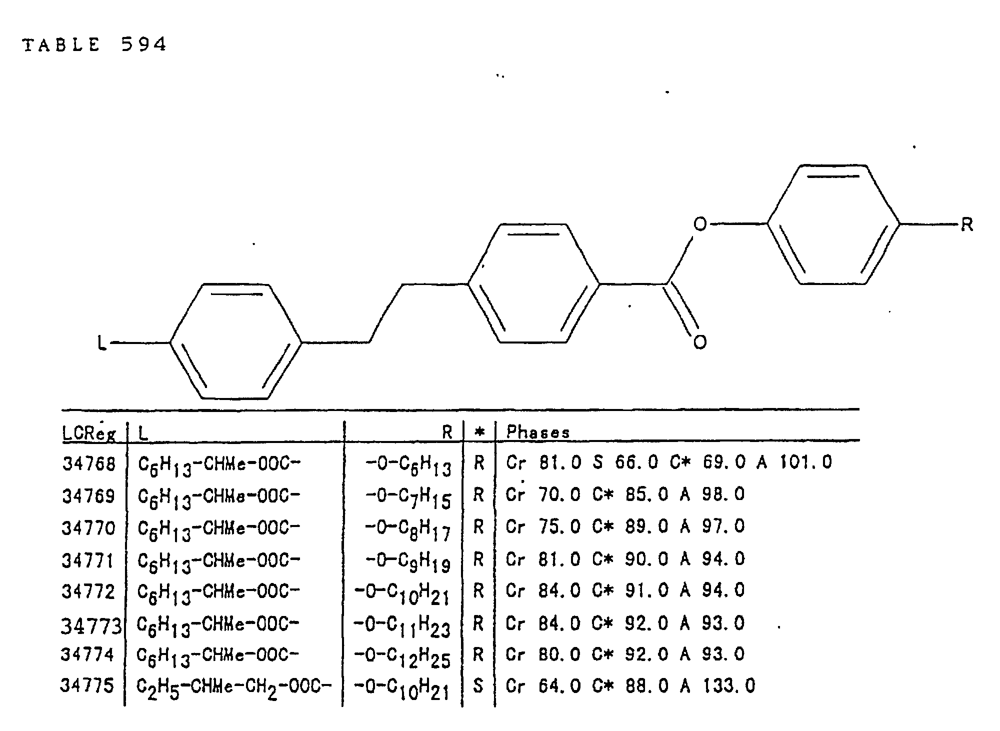

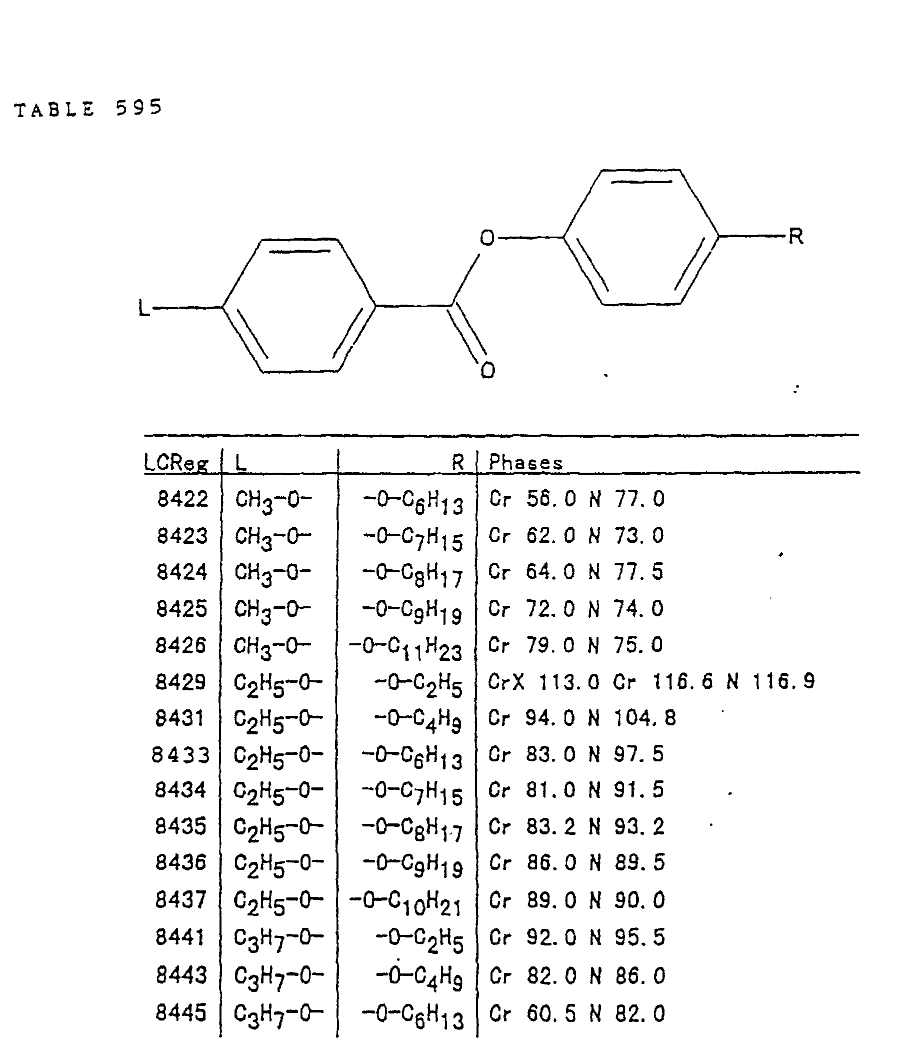

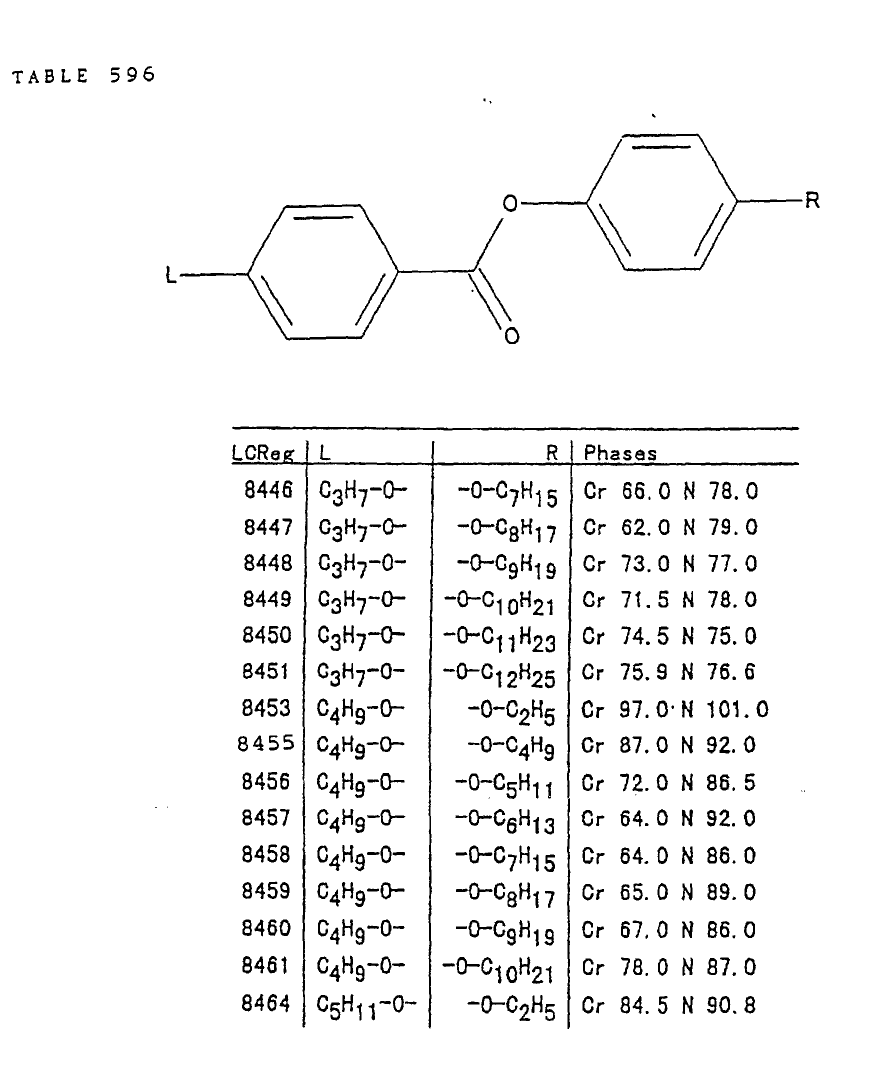

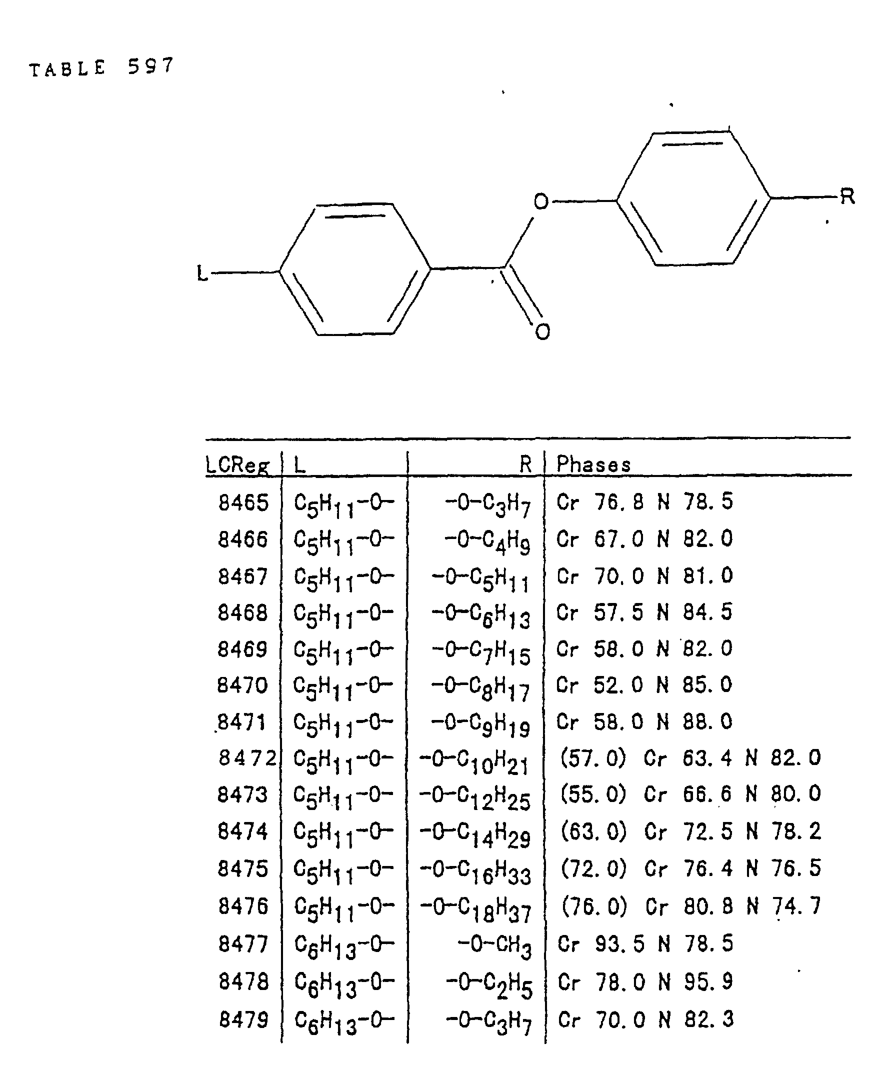

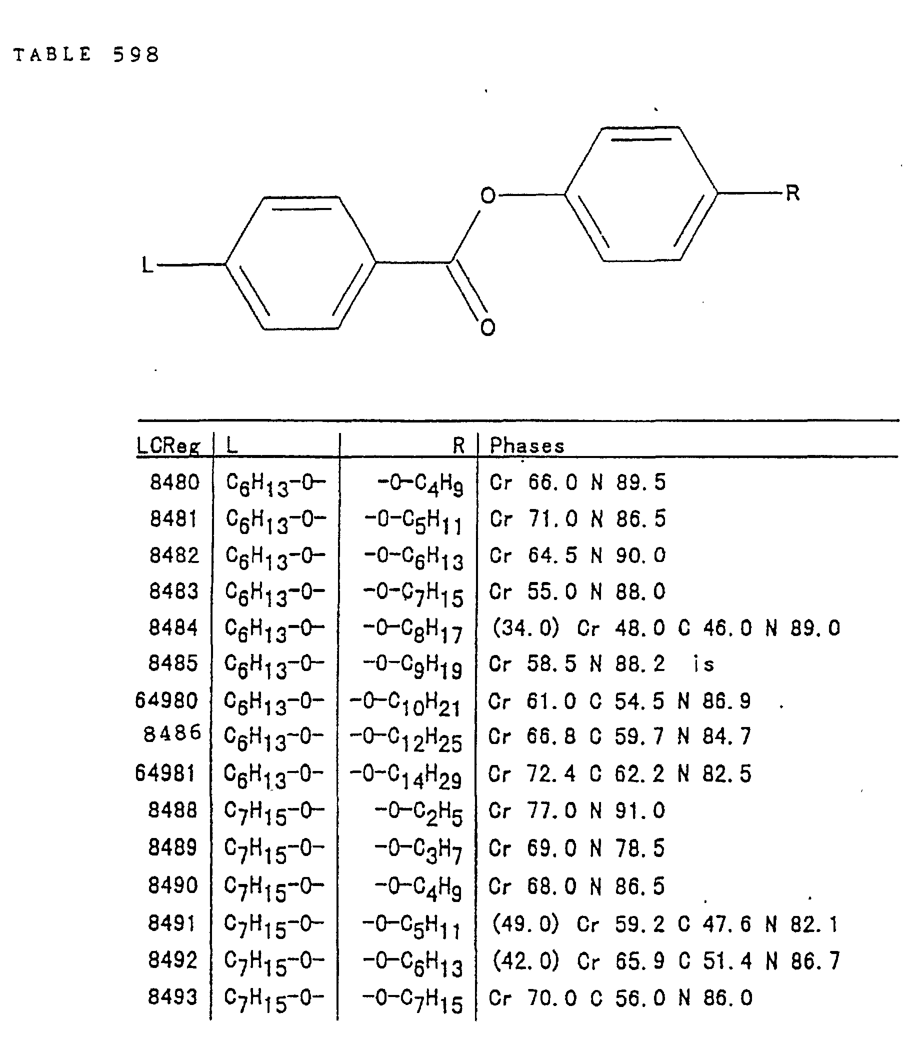

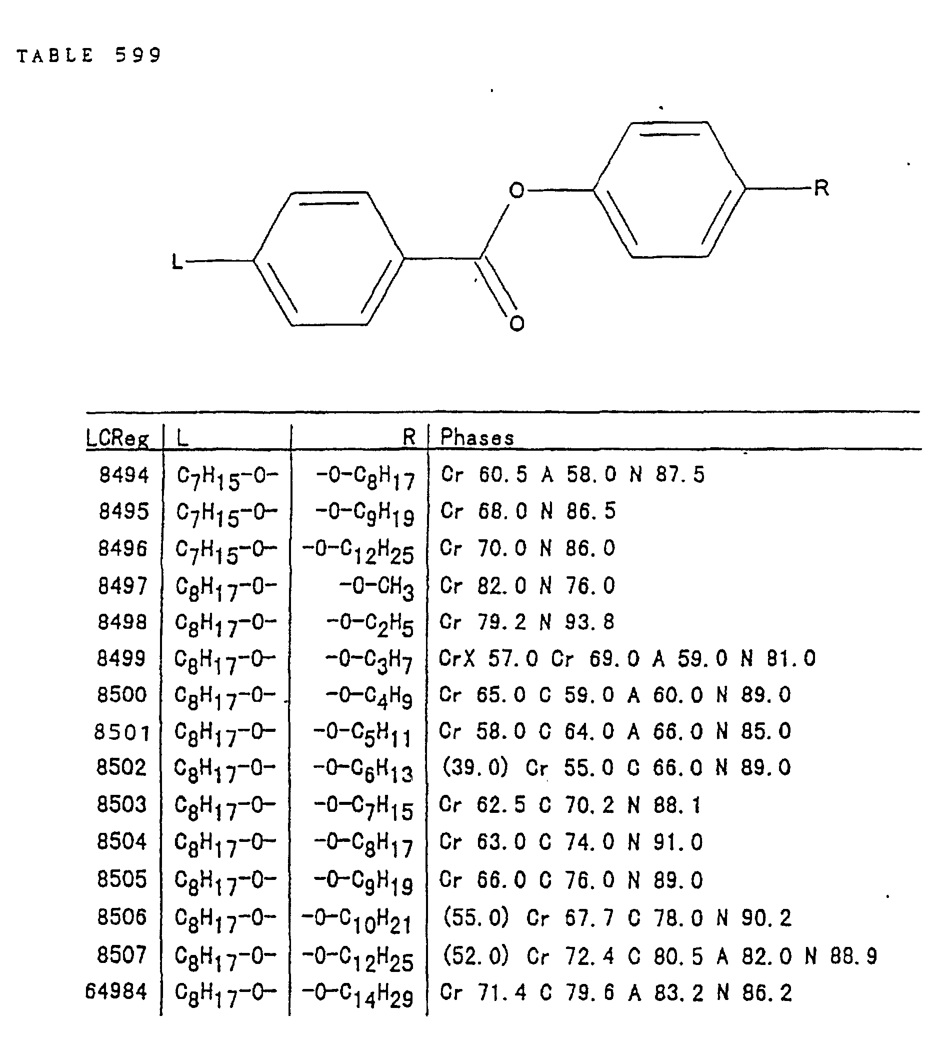

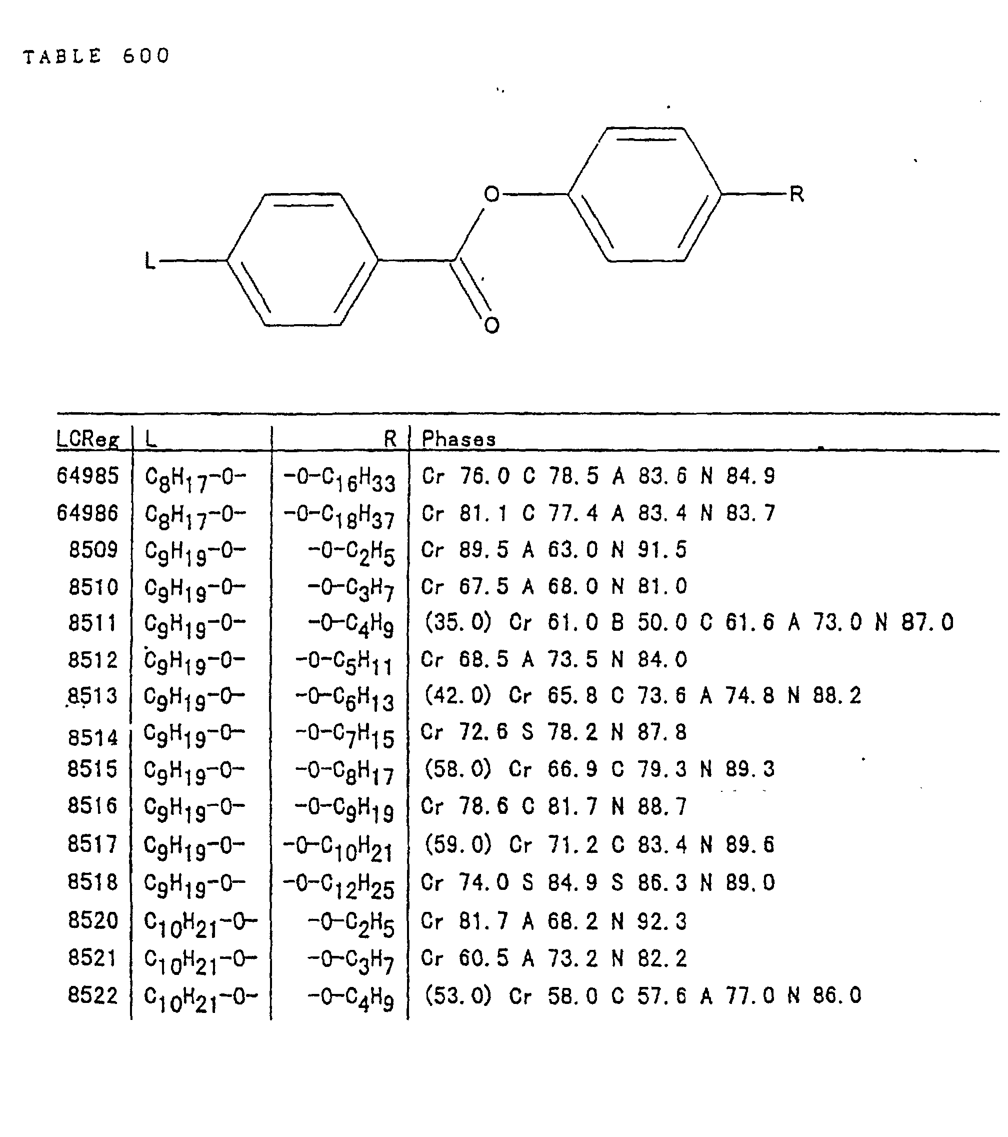

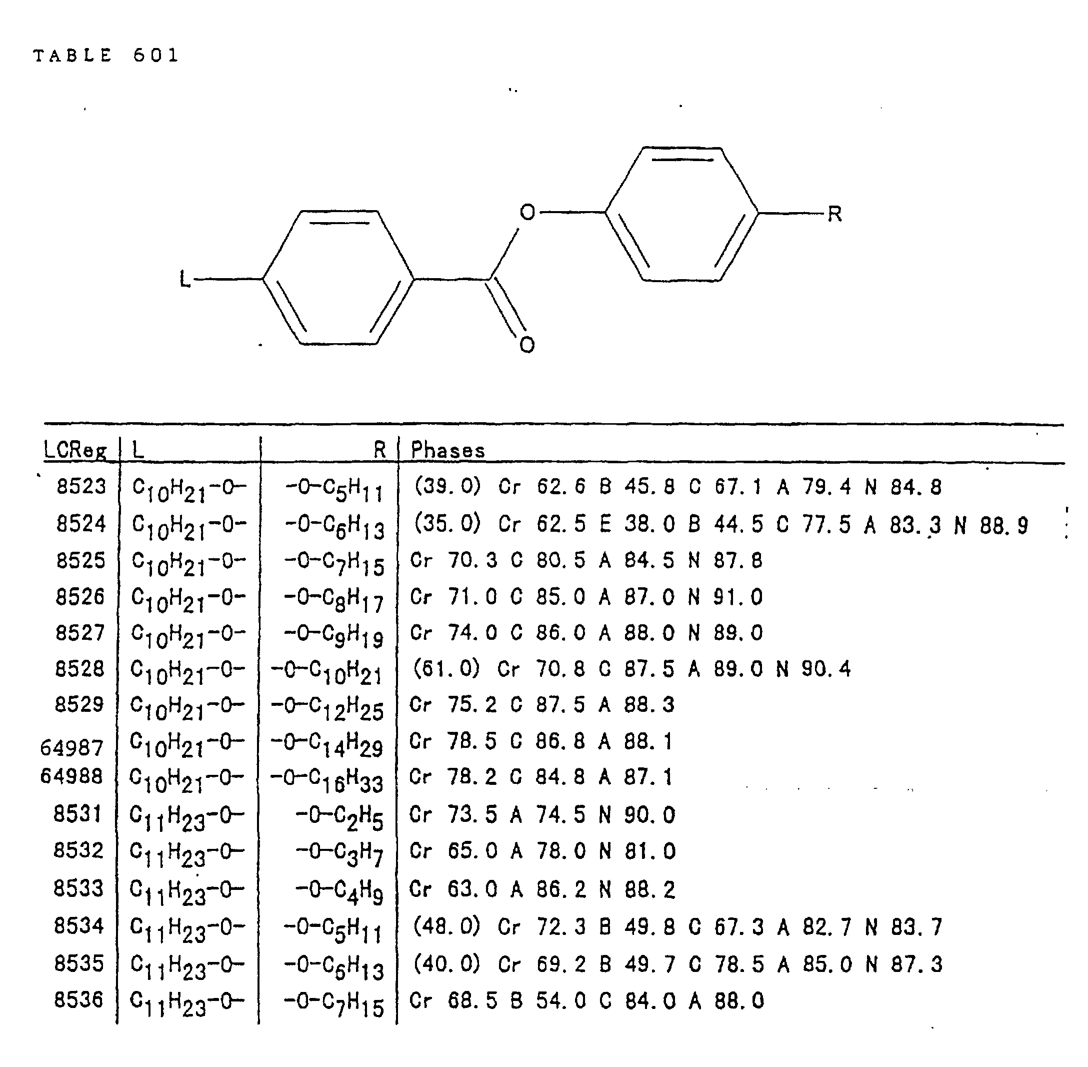

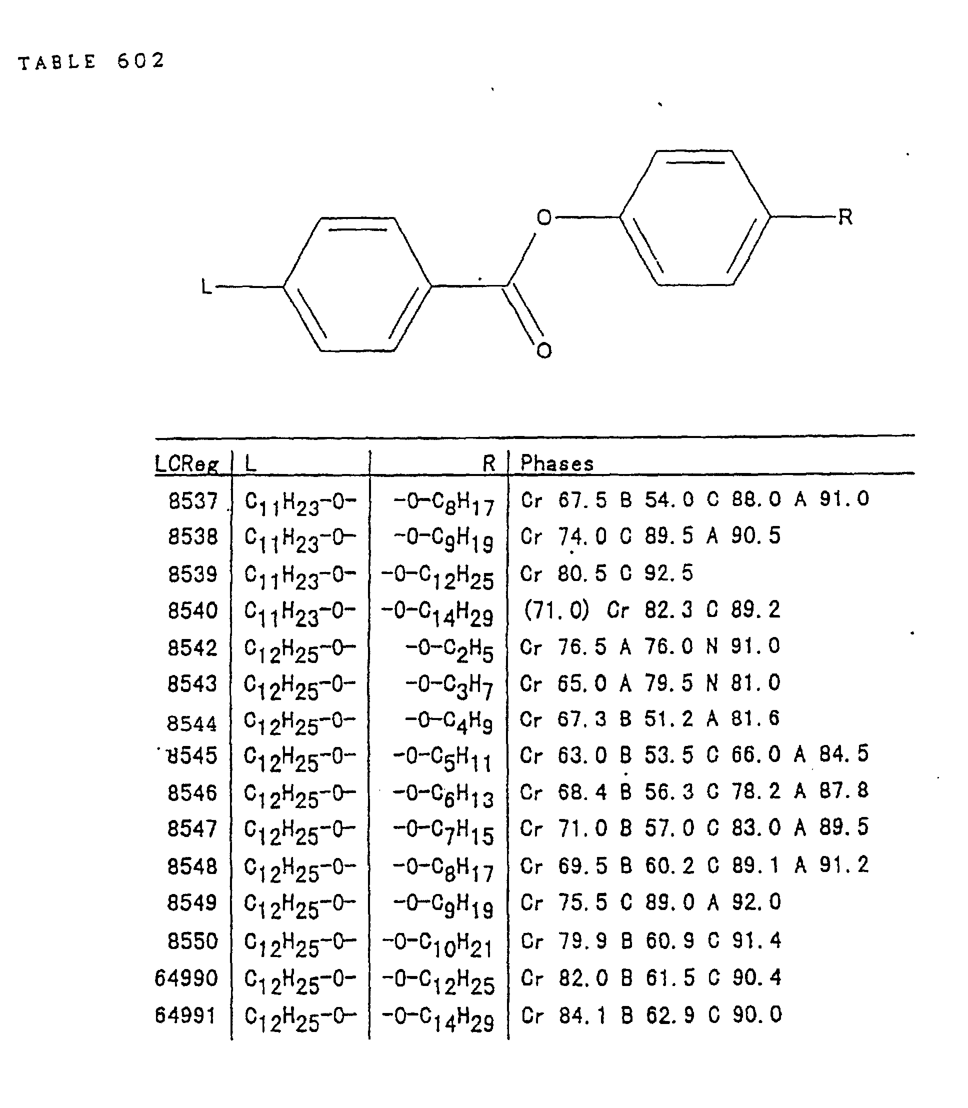

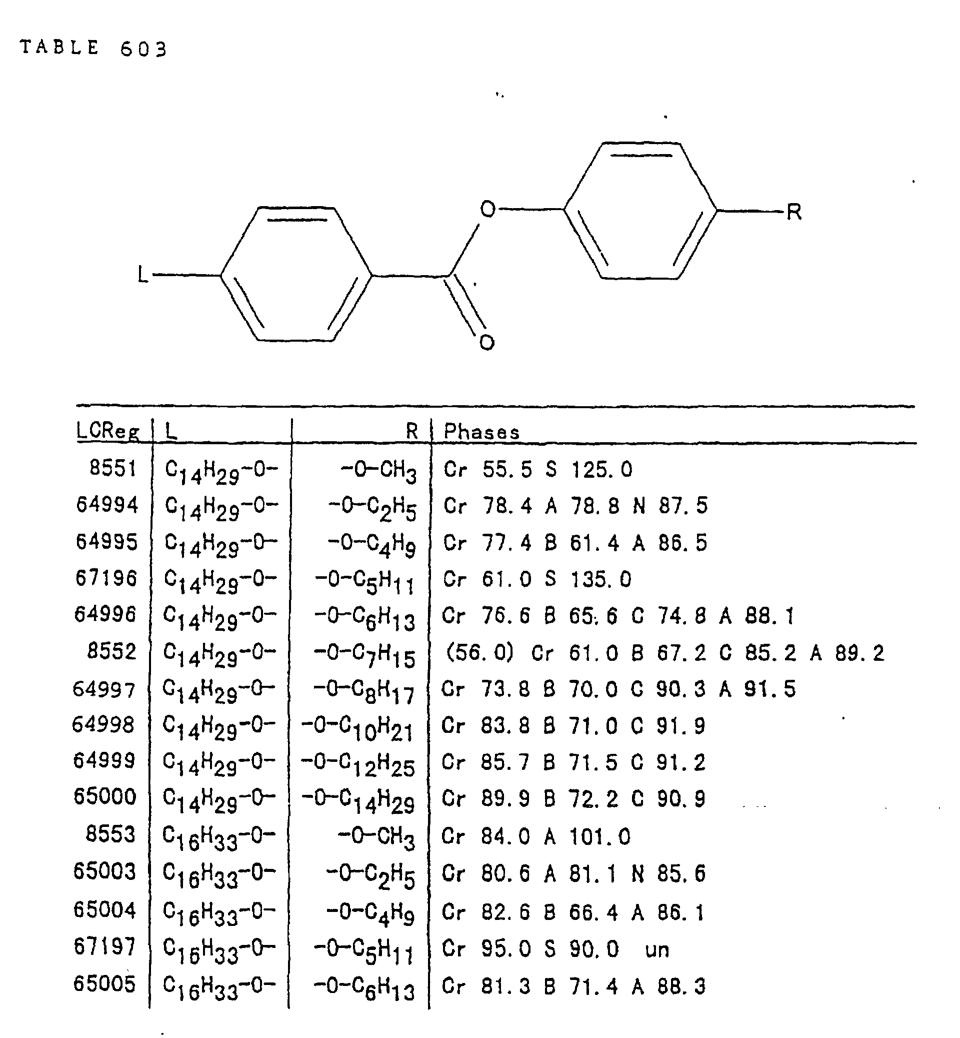

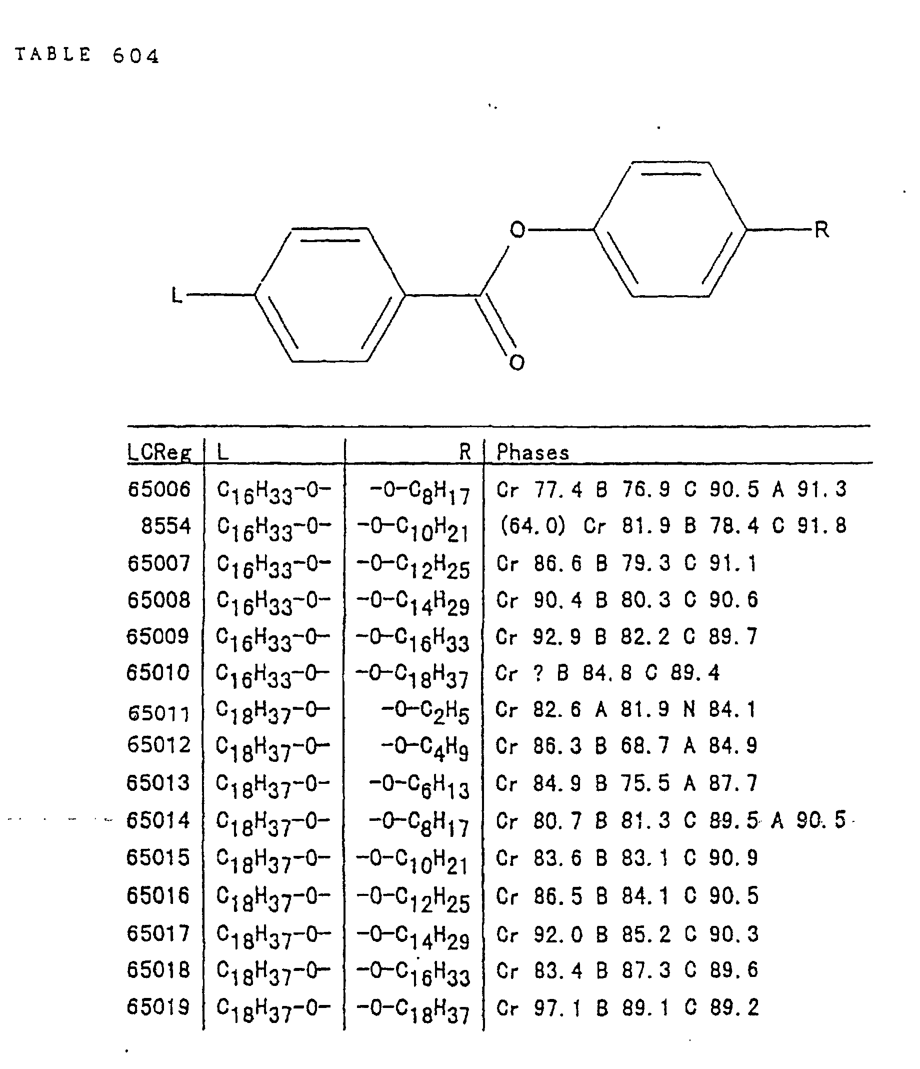

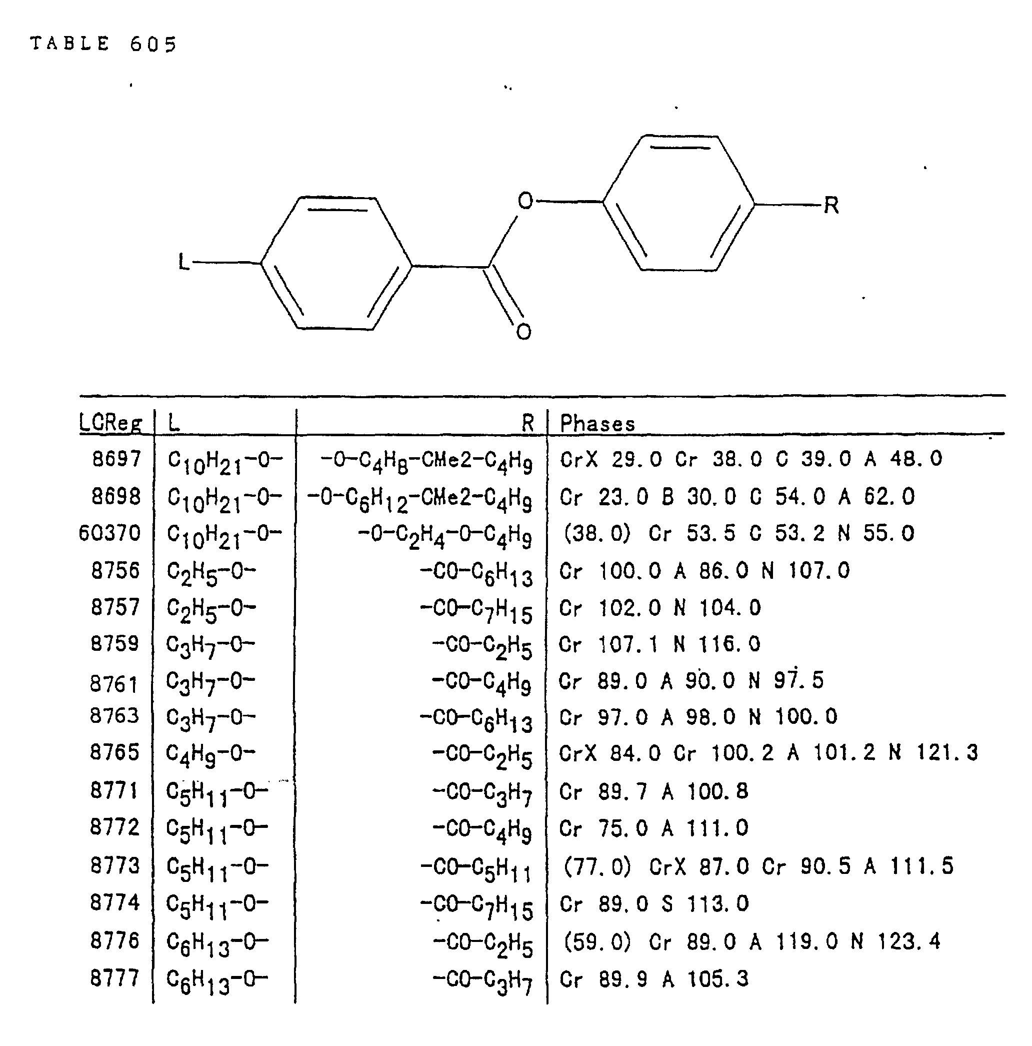

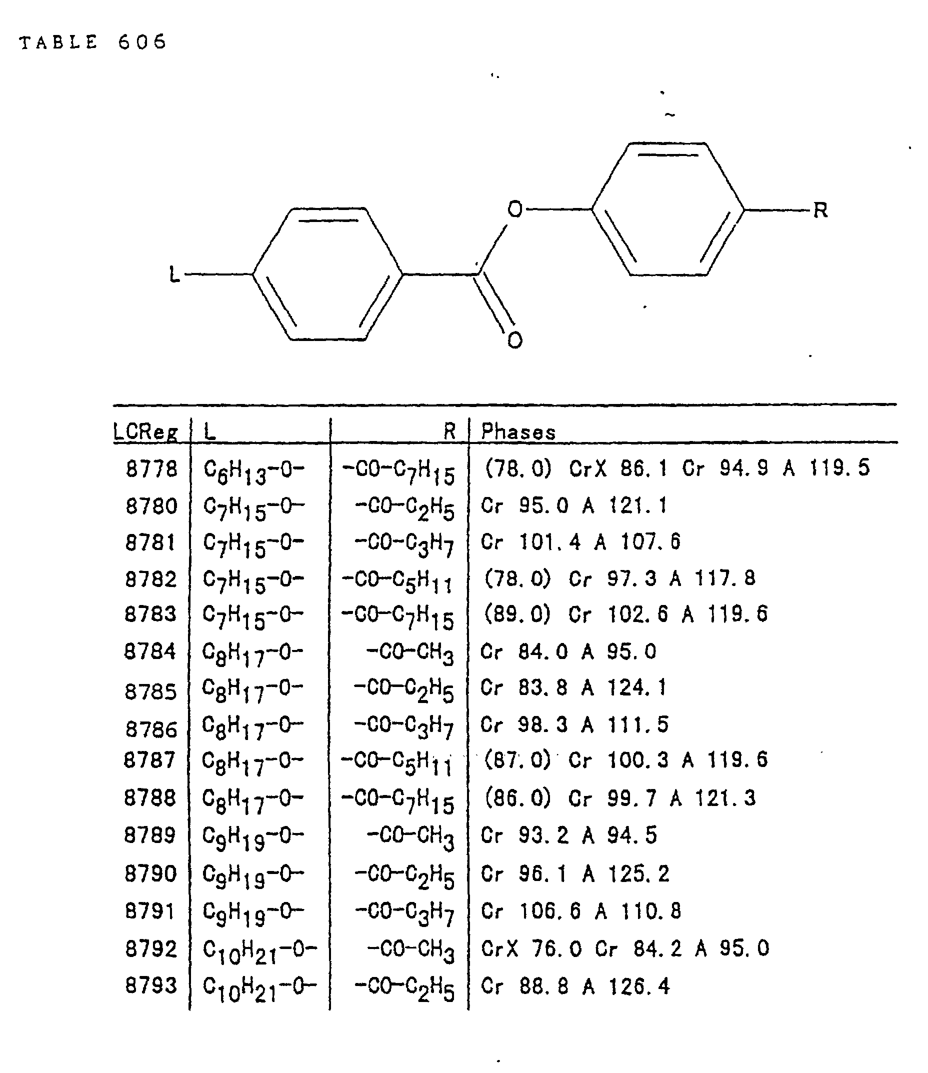

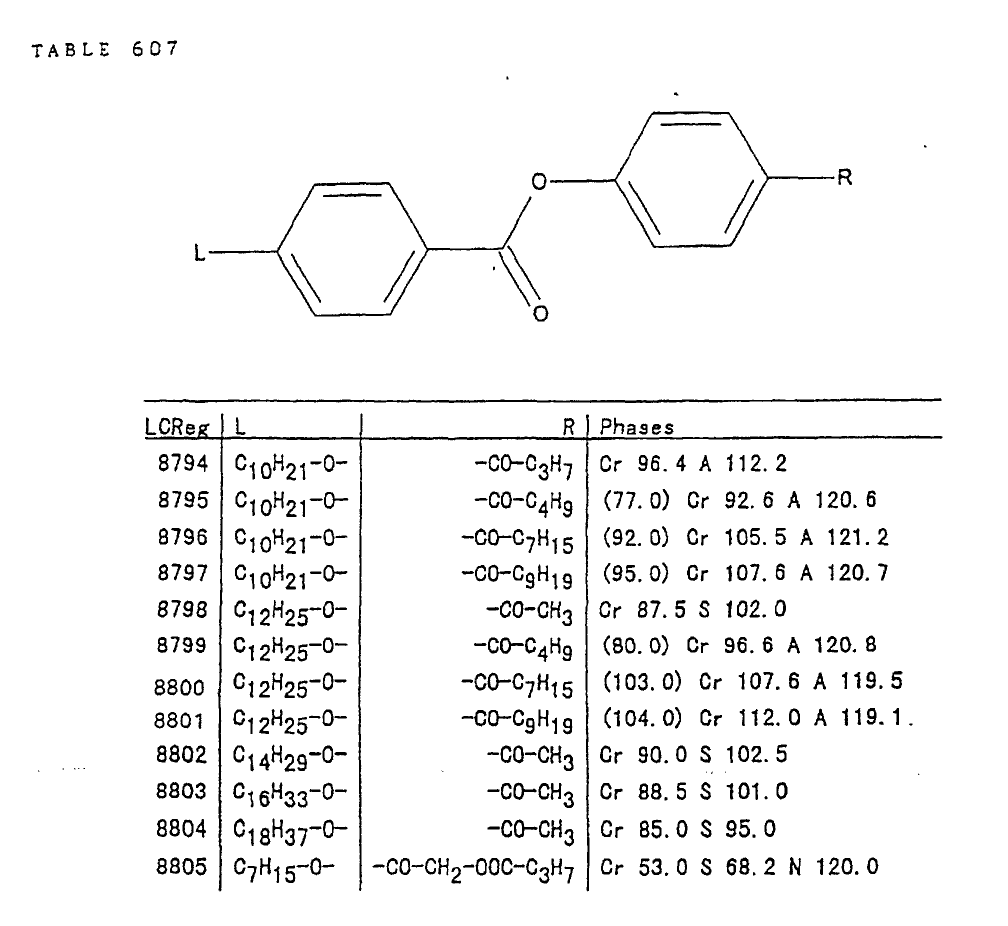

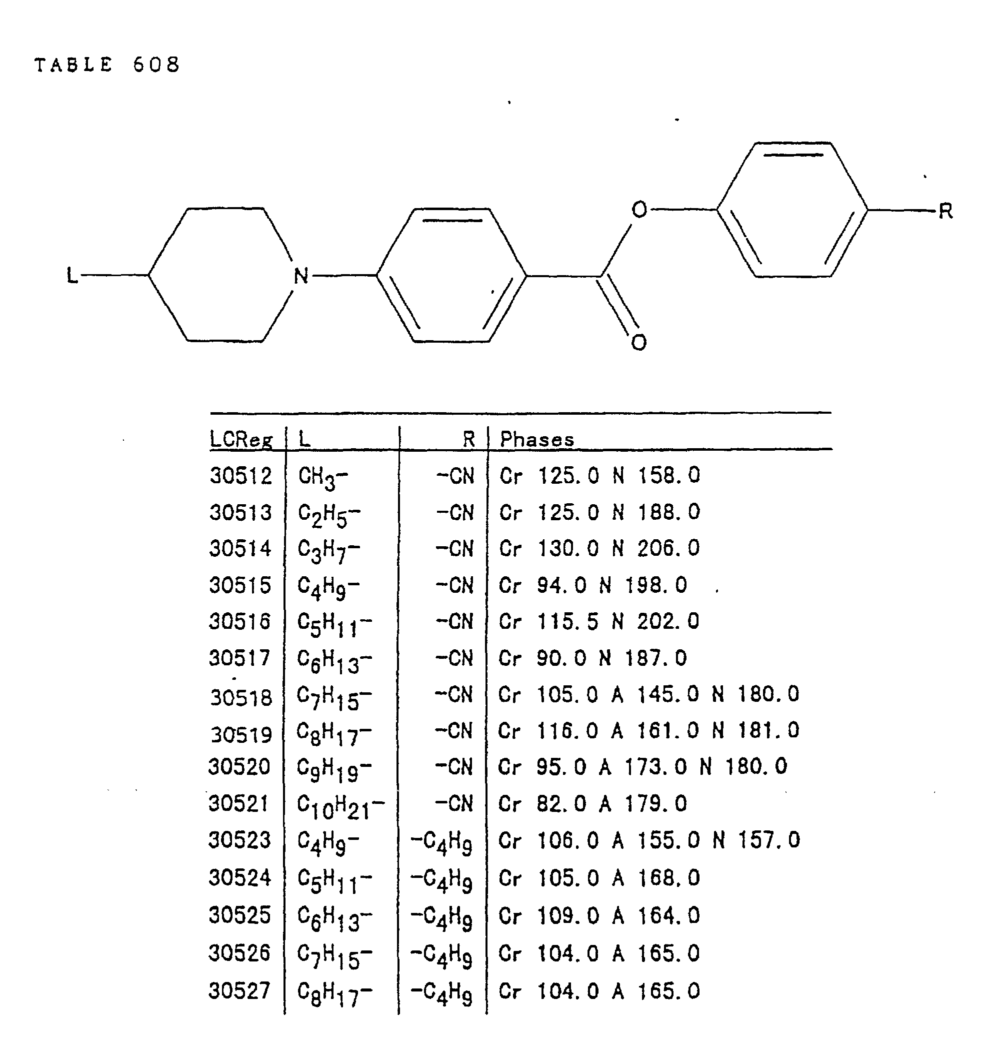

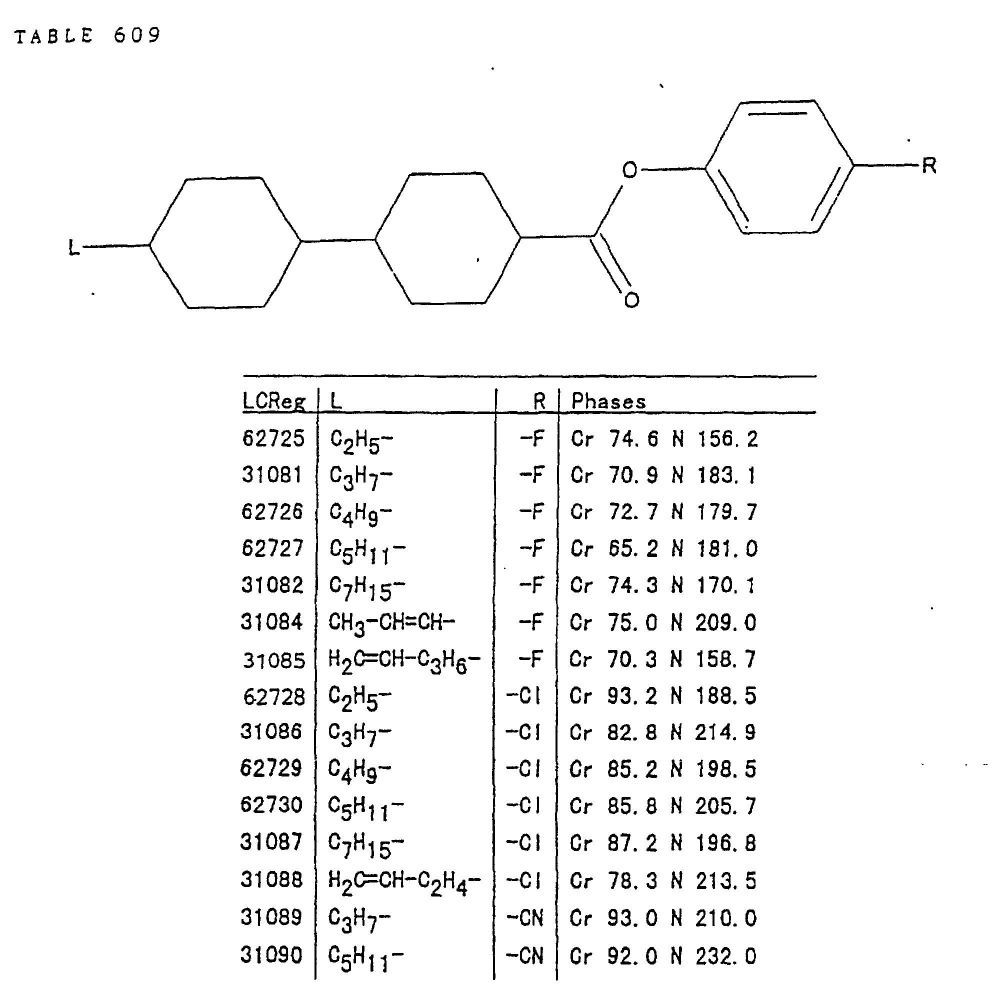

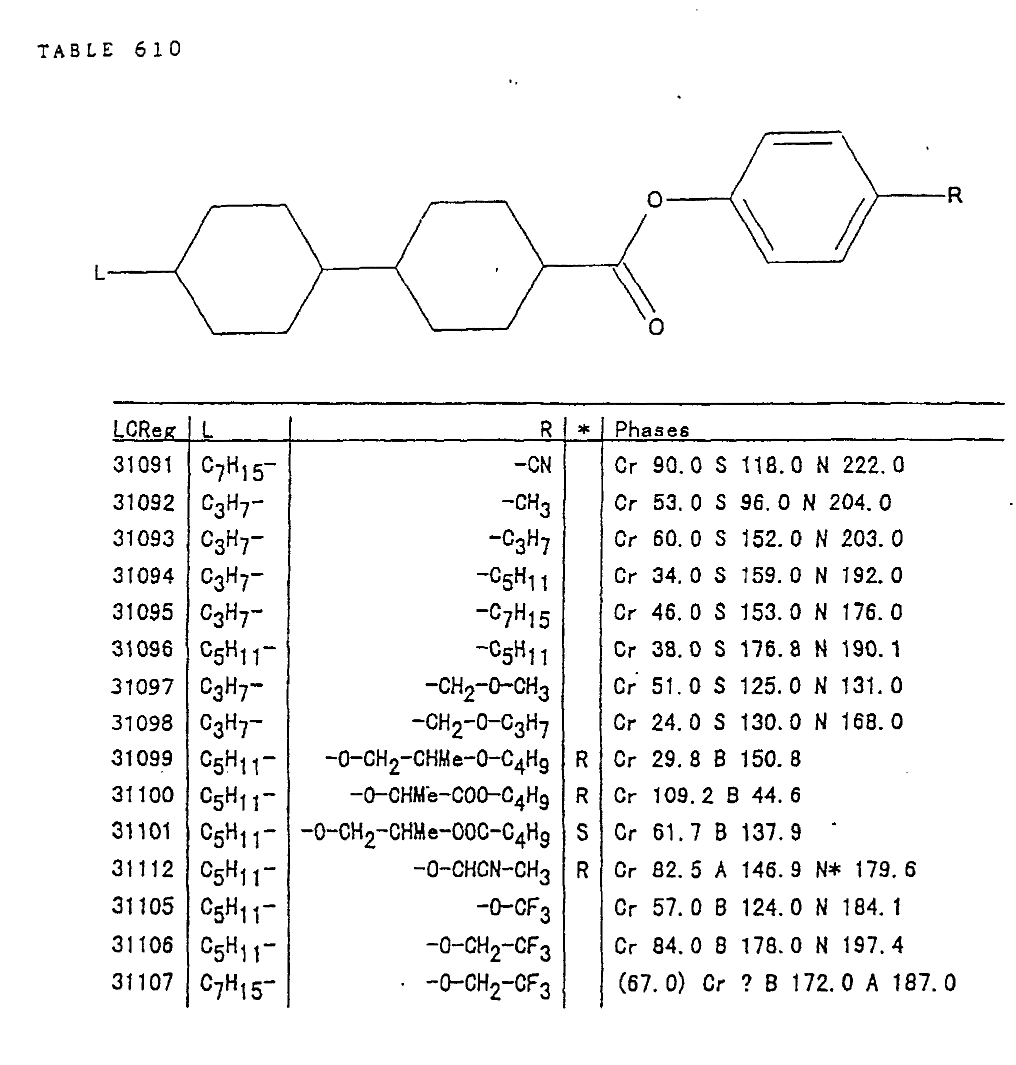

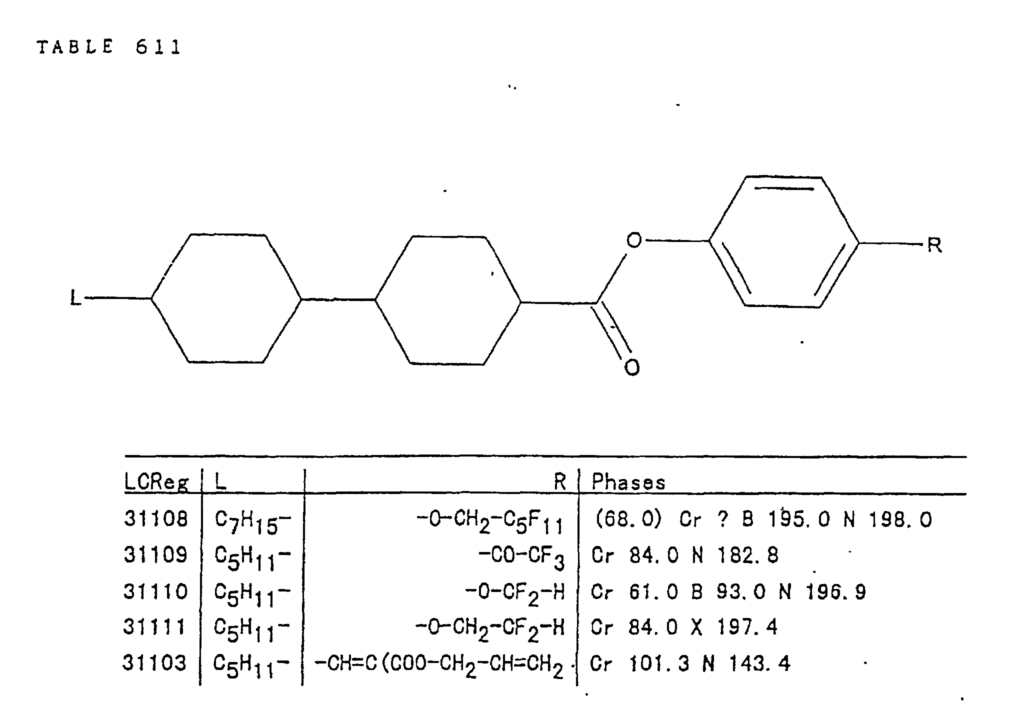

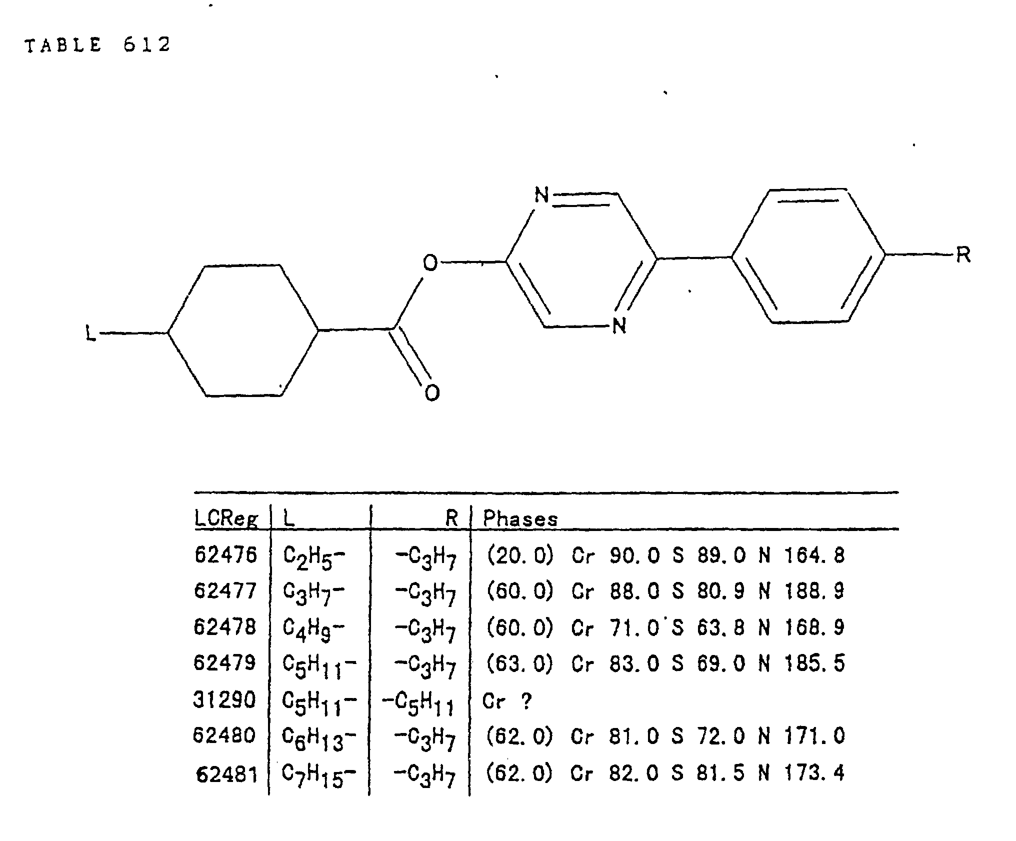

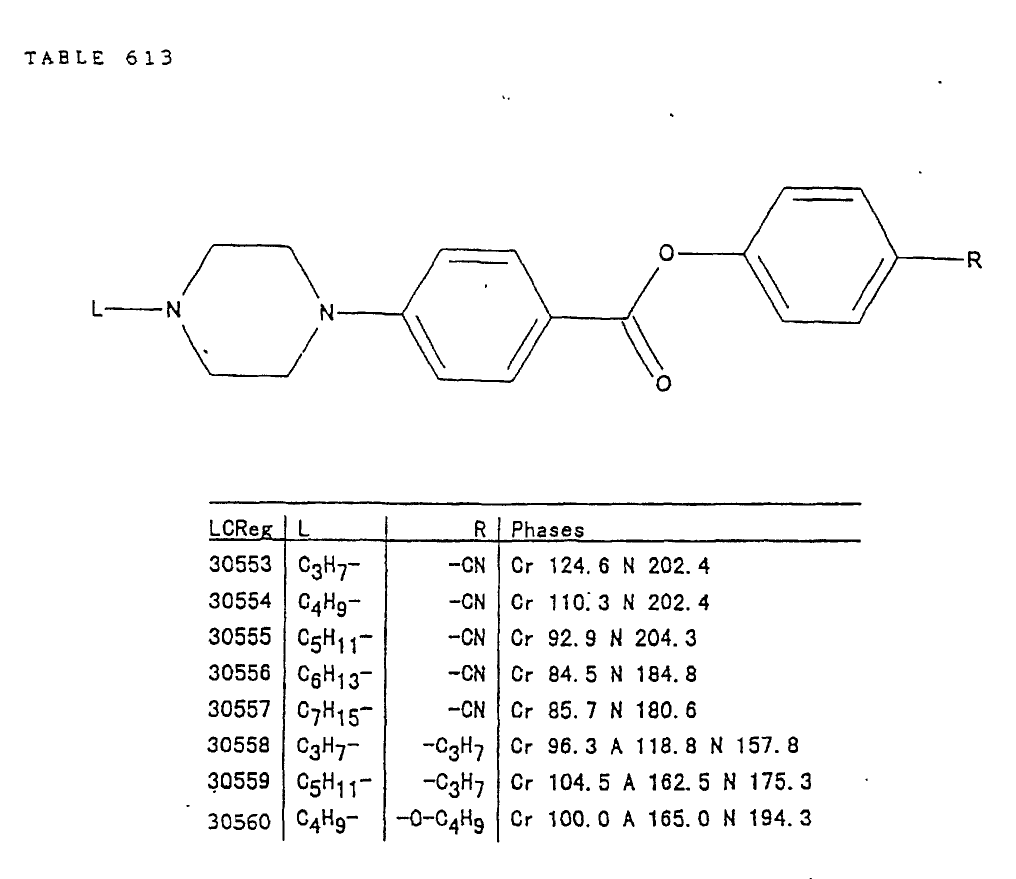

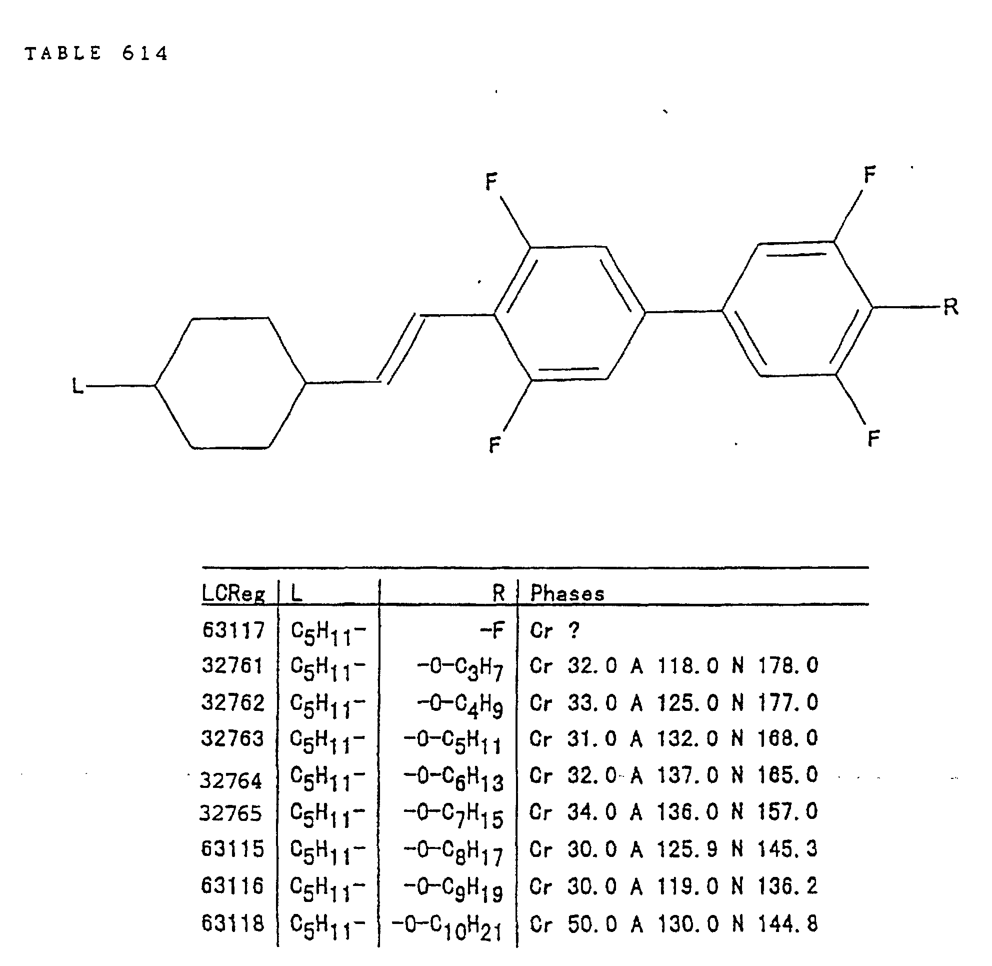

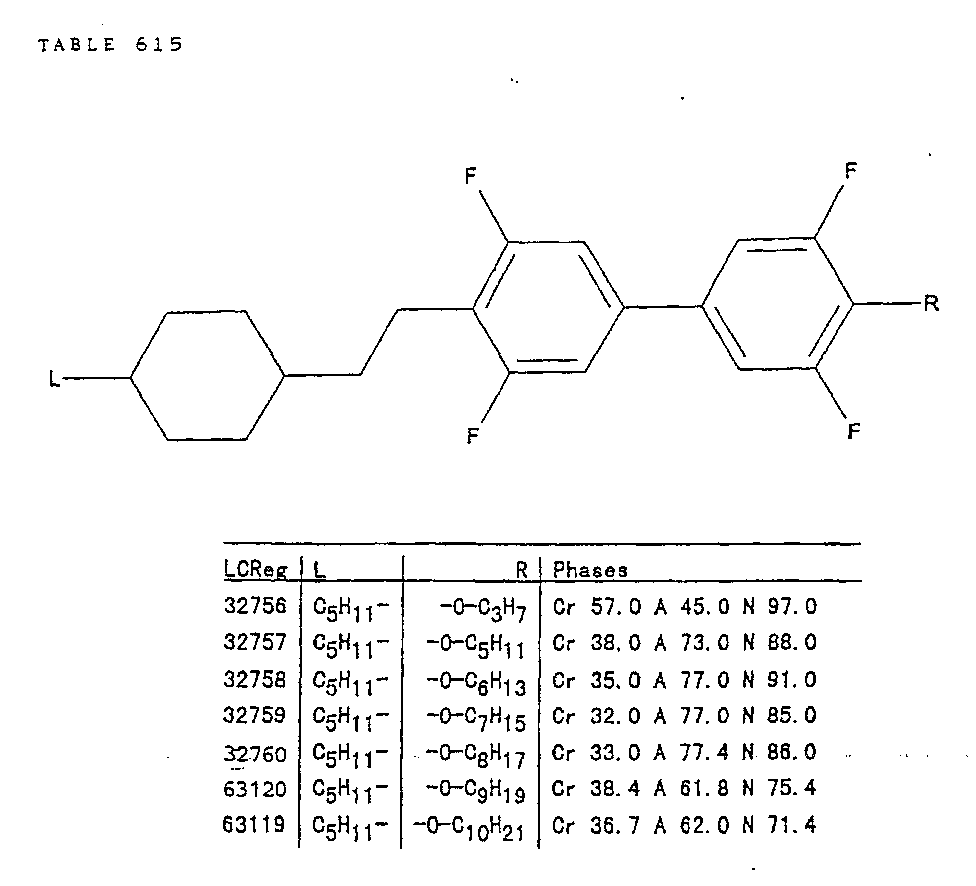

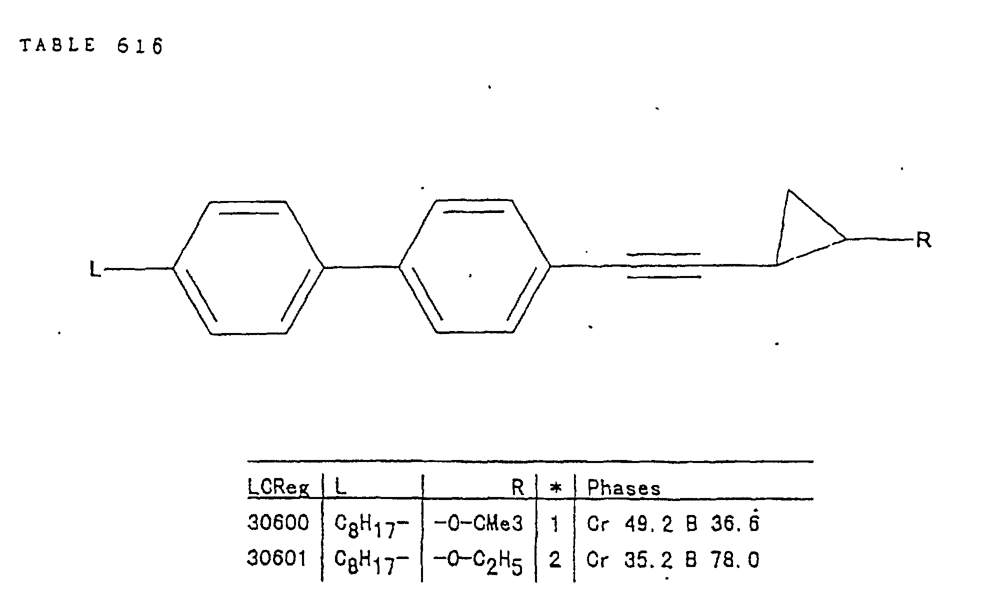

The liquid crystalline charge transport materials according to the present invention are useful for various applications such as photosensors, electroluminescence devices, photoconductors, space modulating devices, and thin film transistors, and temperature sensors.

The liquid crystalline charge transport materials according to the present invention can realize high-speed mobility and inhibition of the creation of structural traps. Therefore, high-speed response photosensors may be mentioned as the first application thereof. Next, by virtue of excellent charge transport properties, the liquid crystalline charge transport materials according to the present invention can be used as a charge transport layer in electroluminescence devices. Further, since electric field alignment and photoconductivity can be simultaneously switched, they can be used in image display devices. Furthermore, the materials according to the present invention have liquid crystallinity, and the charge mobility of each phase varies depending upon the temperature. Further, the photoconductivity is also different. Therefore, these materials can be used as a temperature sensor which, unlike the conventional temperature sensor, can realize simultaneous switching by temperature and light.

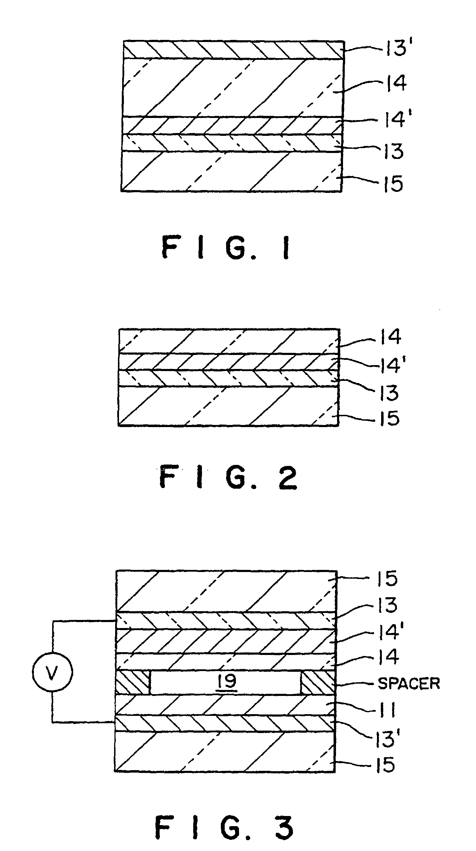

Fig. 1 is a diagram showing the application of the liquid crystalline charge transport material of the present invention to an image display device as a representative embodiment. The image display device shown in Fig. 1 comprises: a transparent substrate 15, such as glass; and, laminated on the substrate 15 in the following order, a transparent electrode 13, such as ITO (indium titanium oxide), a charge generating layer 14' capable of generating carriers in response to exposure, the liquid crystalline charge transport material 14 of the present invention, and a counter electrode 13' (such as a gold electrode). When this image display device is subjected to imagewise exposure (input of an image) through the bottom of the device as shown in the schematic diagram, the liquid crystalline charge transport material 14 is aligned in response to the exposure, resulting in flow of carriers in the counter electrode 13' (gold electrode). The input image can be reproduced by optical reading of the alignment of the liquid crystal. The larger the smectic properties of the liquid crystal, the longer the storage time of the alignment of the liquid crystal and the longer the storage time of the input information.

Figs. 2 and 3 are explanatory diagrams of embodiments where the liquid crystalline charge transport material according to the present invention has been applied to a charge transport layer in an image recording device. Fig. 2 is a typical diagram of a photosensor, an embodiment where the liquid crystalline charge transport material according to the present invention has been applied to a charge transport layer. Use of the photosensor will be described in more detail. As shown in Fig. 3, the device is subjected to pattern exposure from the direction of the above in the drawing while applying a voltage across the upper and lower electrodes 13, 13'. Carriers are generated in a pattern form in 14', and charges transported by a charge transport layer 14 are discharged in a space 19 and reach the surface of an information recording layer 11.

The information recording layer 11 is, for example, a liquid crystal/polymer composite layer formed of a composite of a smectic liquid crystal and a polymer. The liquid crystal is aligned in a pattern form in an electric field of accumulated charges and accumulated, enabling optical reading.

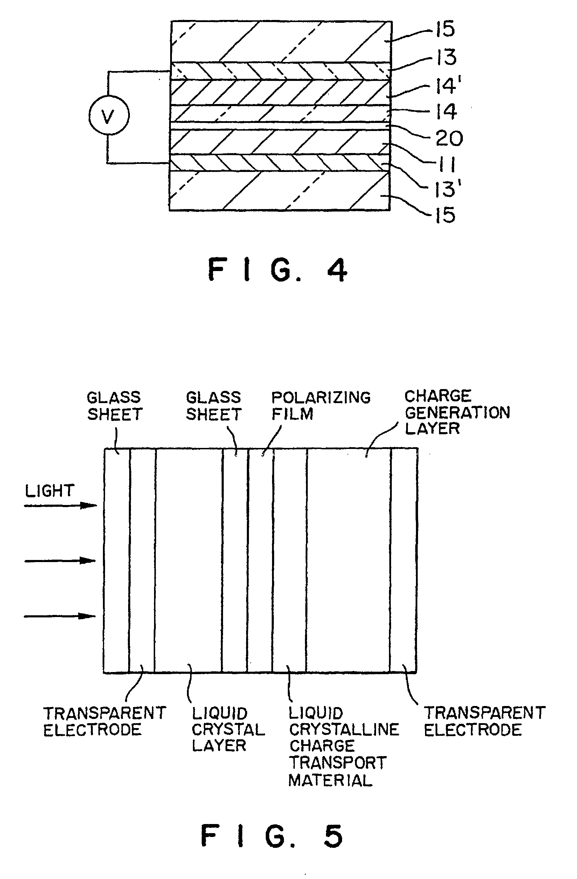

In the embodiment shown in Fig. 4, exposure with a voltage being applied may be carried out in the same manner as described above in connection with the embodiment shown in Fig. 3. The generated charges (image) are accumulated on the top surface of a dielectric layer 20, and the liquid crystal is aligned in a pattern form in an electric field of charges accumulated in the same manner as described above in connection with the embodiment shown in Fig. 3 and accumulated, enabling optical reading.

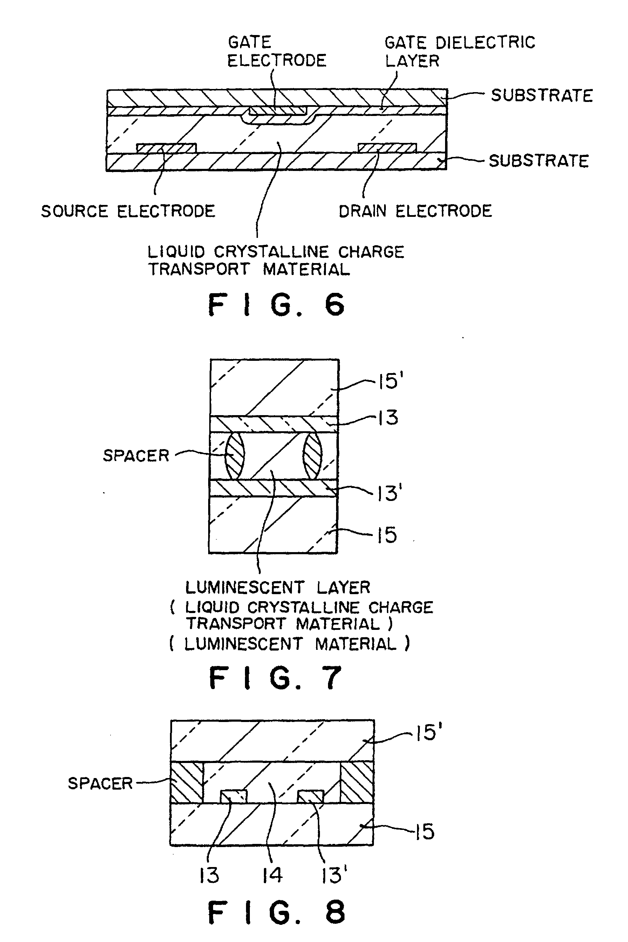

Further, the liquid crystalline charge transport material according to the present invention can be used also in a space optical modulating device schematically shown in Fig. 5. Furthermore, the liquid crystalline charge transport material of the present invention can also be used as an active layer of a thin film transistor. For example, as shown in Fig. 6, the liquid crystalline material may be disposed on a substrate having thereon source, drain, and gate electrodes.

Figs. 7 to 10 are explanatory diagrams of representative embodiments where the liquid crystalline charge transport material according to the present invention has been applied to an electroluminescence device. The simplest structure of the electroluminescence device is as shown in Fig. 7, that is, such that a fluorescent layer is sandwiched between a transparent electrode 13 and an electrode 13' (a cathode and an anode) and this assembly is further sandwiched between a substrate 15 and a transparent substrate 15'. In order to provide intense light emission, preferably, the cathode material, which functions to inject electrons, has a small work function, while the anode material has a work function equal to or larger than the cathode material.

Anode materials usable herein include, for example, transparent or semitransparent electrode materials, such as ITO, indium oxide, tin oxide (doped with antimony, arsenic, or fluorine), Cd₂SnO₄, zinc oxide, copper iodide, and gold. Cathode materials usable herein include, for example, alkali metals and alkaline earth metals, for example, sodium, potassium, magnesium, and lithium, sodium-potassium alloy, magnesium-indium alloy, magnesium-silver alloy, aluminum, gold, silver, gallium, indium, and copper, and, in addition, the materials described above in connection with the anode material.

The material used in the luminescent layer comprises the liquid crystalline charge transport material of the present invention and a luminescent material. Preferably, the liquid crystalline charge transport material is a material capable of transporting both an electron and a hole, a mixture of materials capable of transporting both an electron and a hole, or a mixture of an electron transport material with a hole transport material. However, use of a material capable of transporting any one of the electron and the hole suffices for utilization of light emission at the electrode interface. When the liquid crystal per se is fluorescent, the luminescent material is not particularly necessary. Many cases where the core of the liquid crystal comprises an organic dye compound having intense fluorescence in a solid state satisfy the above requirements.

Dye materials having high fluorescent quantum efficiency can be used as the fluorescent material, and examples thereof include laser oscillation dyes, such as diphenylethylene derivatives, triphenylamine derivatives, diaminocarbazole derivatives, bisstyryl derivatives, benzothiazole derivatives, benzoxazole derivatives, aromatic diamine derivatives, quinacridone compounds, perylene compounds, oxadiazole derivatives, coumarin compounds, anthraquinone derivatives, and DCM-1. The luminescent material is added in such an amount as will not break the liquid crystallinity of the liquid crystalline charge transport material according to the present invention, preferably in an amount of about 0.01 to 30% based on the liquid crystalline charge transport material.

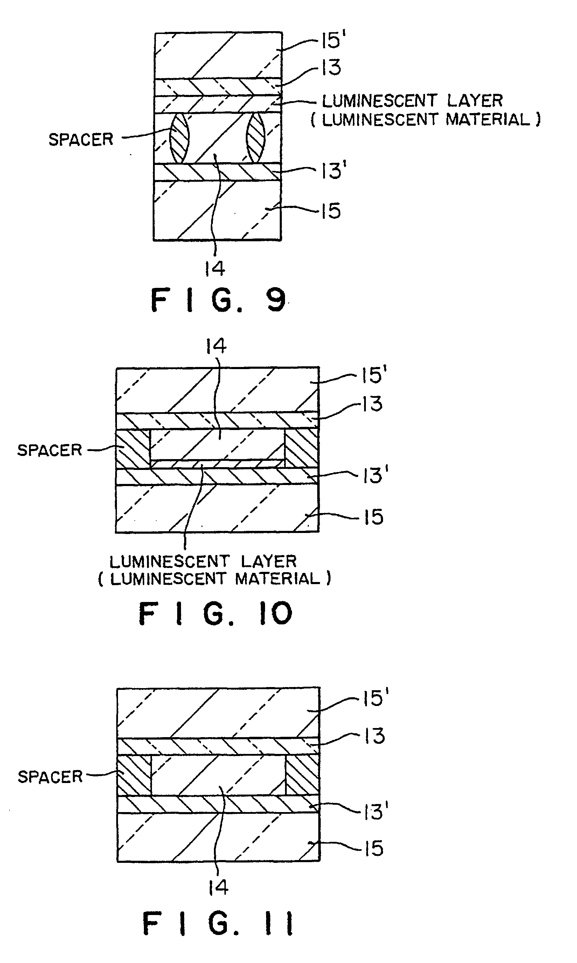

In the case of the layer construction as shown in Figs. 9 and 10, the thickness of the luminescent layer (luminescent material) is such that the electron or hole transfer is not inhibited. The thickness of the luminescent layer is preferably 0.2 to 15 µm. The layer thickness may be regulated by incorporation of spacer particles in the material or by a sealing agent provided around the cell.

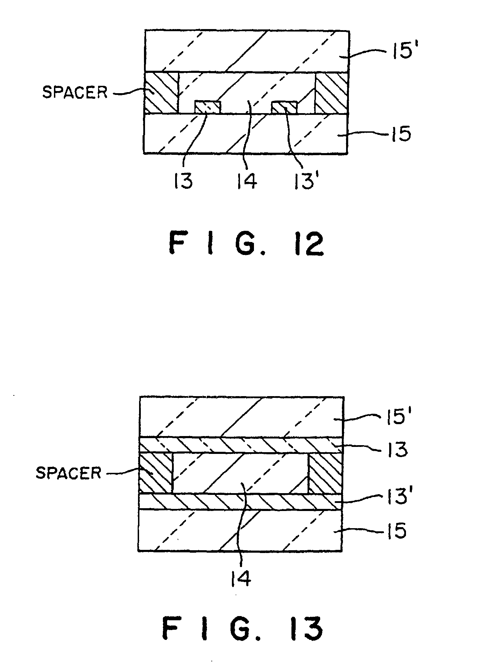

Fig. 11 is an explanatory diagram showing a representative embodiment wherein the liquid crystalline charge transport material of the present invention has been applied to a temperature sensor. The temperature sensor comprises electrodes 13,13' and the liquid crystalline charge transport material 14 of the present invention. A change in charge mobility with a temperature change, a change in conductivity with a temperature change, a change in conductivity at the time of light irradiation with a temperature change, a change in light transmission with a temperature change and the like may be utilized in the temperature sensor.

When the light irradiation is also used in the temperature sensor, the electrode material and the substrate should be transparent.

Figs. 12 and 13 are diagrams showing representative embodiments where the liquid crystalline charge transport material of the present invention has been applied to a photosensor. The photosensor comprises electrodes 13,13' and the liquid crystalline charge transport material 14 of the present invention. A change in current value upon light irradiation may be utilized in the photosensor.

The following examples further illustrate the present invention but are not intended to limit it.

### Example 1

The hole carrier mobility of a benzothiazole compound liquid crystal (2-(4'-heptyloxyphenyl)-6-dodecylbenzothiazole, Crystal-90.3°C-SmA-100.4°C-Iso.) was measured by the time-of-flight method and found to be 5 x 10⁻³ cm²/v.s in smectic A phase.

### Example 2

The hole and electron carrier mobility of a naphthalene compound liquid crystal (2-( 4'-octylphenyl)-6-dodecyloxynaphthalene, Crystal-79.3°C-SmX₁-100.4°C-SmX₂-121.3°C-Iso.) was measured and found to be 1.5 x 10⁻³ cm²/v.s in smectic X₁ phase and 2.5 x 10⁻⁴ cm²/v.s in smectic X₂ phase.

### Example 3

Two glass substrates each having an ITO electrode (surface electric resistance: 100-200 Ω/□) provided by vacuum film formation were laminated onto each other so that the ITO electrodes faced each other while providing a gap therebetween using spacer particles, thereby preparing a cell. A naphthalene compound liquid crystal (2-(4'-octylphenyl)-6-dodecyloxynaphthalene) was mixed with 1% by mole of a luminescent material (3-(2-benzothiazolyl)-7-(diethylamino)-2H-1-benzopyran-2-one (manufactured by Nihon Kanko Shikiso Kenkyusho (Japan Photosensitive Dye Laboratory), oscillating wavelength: 607-585 nm), and the mixture was poured at 125°C into the cell. A d.c. electric field of 250 V was applied to the cell in a dark place. As a result, light emission derived from the fluorescent wavelength of the luminescent dye was observed.

### Example 4

A glass substrate having an ITO electrode (surface electric resistance: 100-200 Ω/□) provided by vacuum film formation and a glass substrate having a silver electrode (specific resistance: not more than 1 Ω/cm, layer thickness: 3000 Å) were laminated onto each other so that the electrodes faced each other while providing a gap therebetween using spacer particles, thereby preparing a cell. A naphthalene compound liquid crystal (2-(4'-octylphenyl)-6-dodecyloxynaphthalene) was mixed with 1% by mole of a luminescent material (3-(2-benzothiazolyl)-7-(diethylamino)-2H-1-benzopyran-2-one (manufactured by Nihon Kanko Shikiso Kenkyusho (Japan Photosensitive Dye Laboratory), oscillating wavelength: 607-685 nm), and the mixture was poured at 125°C into the cell. A d.c. electric field of 250 V was applied to the cell in a dark place. As a result, light emission derived from the fluorescent wavelength of the luminescent dye was observed.

### Example 5

A cell was prepared in the same manner as in Example 4, except that a benzothiazole compound liquid crystal (2-(4'-heptyloxyphenyl)-6-dodecylbenzothiazole) was used as the liquid crystalline material and no luminescent material was used. A d.c. electric field of 250 V was applied to the cell. As a result, light emission derived from the liquid crystal was observed.

### Example 6

A cell having an electrode pattern shown in Fig. 8 was prepared using the same liquid crystalline material and luminescent material as used in Example 4. In this case, the liquid crystalline material was mixed with 1% by mole of the luminescent material, and the mixture was poured at 125°C into the cell. A d.c. electric field of 250 V was applied to the cell in a dark place. As a result, light emission derived from the fluorescent wavelength of the luminescent dye was observed.

### Example 7

A cell having a layer construction shown in Fig. 9 was prepared using the same liquid crystalline material and luminescent material as used in Example 4. In this case, the liquid crystalline material was mixed with 1% by mole of the luminescent material, and the mixture was poured at 125°C into the cell. A d.c. electric field of 250 V was applied to the cell in a dark place. As a result, light emission derived from the fluorescent wavelength of the luminescent dye was observed.

### Example 8

A cell having a layer construction shown in Fig. 10 was prepared using the same liquid crystalline material and luminescent material as used in Example 4. In this case, the liquid crystalline material was mixed with 1% by mole of the luminescent material, and the mixture was poured at 125°C into the cell. A d.c. electric field of 250 V was applied to the cell in a dark place. As a result, light emission derived from the fluorescent wavelength of the luminescent dye was observed.

As described above, the liquid crystalline charge transport materials according to the present invention are useful for various applications such as photosensors, electroluminescence devices, photoconductors, space modulating devices, thin film transistors, and temperature sensors.

## Claims

1. A liquid crystalline charge transport material which exhibits smectic liquid crystallinity and has an electron mobility of not less than 1 x 10⁻⁵ cm²/v.s and a hole mobility of not less than 1 x 10⁻⁵ cm²/v.s, said material having liquid crystalline molecules that have a self-aligning property and are used as a hopping site thereby to inhibit spatial and energetic dispersion and to exhibit a band-like transport property.

2. The liquid crystalline charge transport material according to claim 1 which has a core of (aromatic ring of 6π electron system) l, (aromatic ring of 10π electron system) m, and (aromatic ring of 14π electron system) n (wherein l + m + n = 1 to 4 and l, m, and n are an integer of 0 to 4).

3. The liquid crystalline charge transport material according to claim 2, wherein the aromatic ring of 6π electron system, 10π electron system or 14π electron system is linked through a group having a carbon-carbon double bond or a carbon-carbon triple bond.

4. An image display device comprising the material according to one of claims 1-3 in a drive path.

5. An electroluminescence device comprising the material according to one of claims 1-3 in a drive path.

6. A photoconductor 3 comprising the material according to one of claims 1-3 in a drive path.

7. A space light modulating device comprising the material according to one of claims 1-3 in a drive path.

8. A thin film transistor comprising the material according to one of claims 1-3 in a drive path.

9. A temperature sensor comprising the material according to one of claims 1-3 in a drive path.

10. An optical sensor comprising the material according to one of claims 1-3 in a drive path.

## Patentansprüche

1. Flüssigkristallines Ladungstransportmaterial, welches eine smektische Flüssigkristallinität zeigt und eine Elektronenbeweglichkeit von nicht weniger als 1 x 10⁻⁵ cm²/v.s und eine Lochbeweglichkeit von nicht weniger als 1 x 10⁻⁵ cm²/v.s aufweist, wobei dieses Material flüssigkristalline Moleküle aufweist, die eine Selbstausrichtungseigenschaft aufweisen und als Hopping-Stelle verwendet werden, um dadurch die räumliche und energetische Verteilung zu hemmen und um eine bandartige Transporteigenschaft zu zeigen.

2. Flüssigkristallines Ladungstransportmaterial nach Anspruch 1, welches einen Kern von (einem aromatischen Ringsystem mit 6 π-Elektronen) l, (einem aromatischen Ringsystem mit 10 π-Elektronen) m, und (einem aromatischen Ringsystem mit 14 π-Elektronen) n aufweist (wobei l + m + n = 1 bis 4 und wobei l, m und n ganze Zahlen von 0 bis 4 sind).

3. Flüssigkristallines Ladungstransportmaterial nach Anspruch 2, wobei das aromatische Ringsystem mit 6 π-Elektronen, das aromatische Ringsystem mit 10 π-Elektronen öder das aromatische Ringsystem mit 14 π-Elektronen durch eine Gruppe mit einer Kohlenstoff-Kohlenstoff-Doppelbindung oder durch eine Gruppe mit einer Kohlenstoff-Kohlenstoff-Dreifachbindung verknüpft ist.

4. Bildanzeigevorrichtung, umfassend das Material nach einem der Ansprüche 1 bis 3 in einer Steuerstrecke.

5. Elektrolumineszenzvorrichtung, umfassend das Material nach einem der Ansprüche 1 bis 3 in einer Steuerstrecke.

6. Photoleiter, umfassend das Material nach einem der Ansprüche 1 bis 3 in einer Steuerstrecke.

7. Raumlichtmodulationsvorrichtung, umfassend das Material nach einem der Ansprüche 1 bis 3 in einer Steuerstrecke.

8. Dünnfilmtransistor, umfassend das Material nach einem der Ansprüche 1 bis 3 in einer Steuerstrecke.

9. Temperatursensor, umfassend das Material nach einem der Ansprüche 1 bis 3 in einer Steuerstrecke.

10. Optischer Sensor, umfassend das Material nach einem der Ansprüche 1 bis 3 in einer Steuerstrecke.

## Revendications

1. Matériau de transport de charge, cristallin, liquide, qui présente un caractère cristallin liquide smectique et possède une mobilité électronique supérieure à 1 x 10⁻⁵ cm²/v.s, et une mobilité des trous supérieure à 1 x 10⁻⁵ cm²/v.s, ledit matériau possédant des molécules liquides cristallines ayant une propriété d'auto-alignement et qui sont utilisées en tant que site de sautillement, de sorte à inhiber une dispersion spatiale et énergétique et à présenter une propriété de transport de type bande.

2. Matériau de transport de charge, cristallin, liquide selon la revendication 1, qui a un noyau de l (cycle aromatique à système électronique à 6 π), m (cycle aromatique à système électronique à 10 π) et n (cycle aromatique à système électronique à 14 π), (dans lequel l + m + n = 1 à 4 et l, m et n sont des nombres entiers de 0 à 4).

3. Matériau de transport de charge, cristallin, liquide selon la revendication 2, dans lequel le cycle aromatique à système électronique à 6 π, à système électronique à 10 π ou à système électronique à 14 π, est lié via un groupement ayant une double liaison carbone-carbone ou une triple liaison carbone-carbone.

4. Dispositif d'affichage d'image comprenant le matériau selon l'une quelconque des revendications 1 à 3, dans une voie de conduction.

5. Dispositif d'électroluminescence comprenant le matériau selon l'une quelconque des revendications 1 à 3, dans une voie de conduction.

6. Photoconducteur comprenant le matériau selon l'une quelconque des revendications 1 à 3, dans une voie de conduction.

7. Dispositif de modulation de la lumière spatiale comprenant le matériau selon l'une quelconque des revendications 1 à 3, dans une voie de conduction.

8. Transistor de film, fin, comprenant le matériau selon l'une quelconque des revendications 1 à 3, dans une voie de conduction.

9. Capteur de température comprenant le matériau selon l'une quelconque des revendications 1 à 3, dans une voie de conduction.

10. Capteur optique comprenant le matériau selon l'une quelconque des revendications 1 à 3, dans une voie de conduction.
